(19) Europäisches Patentamt / European Patent Office / Office européen des brevets

(11) EP 2 838 040 A1

(12) # EUROPEAN PATENT APPLICATION
published in accordance with Art. 153(4) EPC

(43) Date of publication:
**18.02.2015 Bulletin 2015/08**

(21) Application number: **12846477.3**

(22) Date of filing: **31.10.2012**

(51) Int Cl.:
***G06F 17/50*** $^{(2006.01)}$

(86) International application number:
**PCT/JP2012/078262**

(87) International publication number:
**WO 2013/065764 (10.05.2013 Gazette 2013/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2011 JP 2011239812**
**04.04.2012 JP 2012085968**

(71) Applicant: **Osaka University**
**Suita-shi, Osaka 565-0871 (JP)**

(72) Inventor: **HAYASHI Shigehiro**
**Suita-shi**
**Osaka 565-0871 (JP)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(54) **ANALYSIS DEVICE, ANALYSIS METHOD AND ANALYSIS PROGRAM**

(57) The present invention enables calculation of a solution of a non-self-adjoint problem represented by simultaneous differential equations. An analysis device 10 includes: a setting unit 11 that sets an original differential operator of an analysis object and a boundary condition of variables; an adjoint boundary condition calculation unit 12 that calculates an adjoint boundary condition from the boundary condition; and a non-self-adjoint calculation unit 13 that calculates a primal differential operator and a dual differential operator from the original differential operator, and determines a primal eigenfunction and a dual eigenfunction by using primal simultaneous differential equations and dual simultaneous differential equations, as well as the boundary condition and the adjoint boundary condition, thereby calculating a solution of simultaneous differential equations.

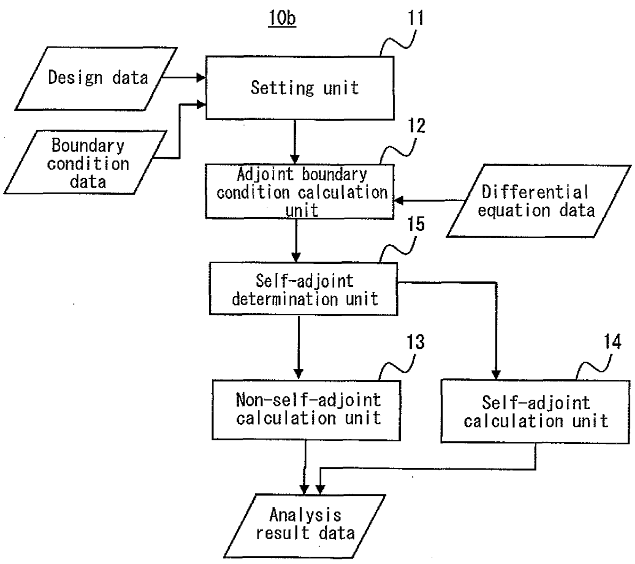


FIG. 5



Printed by Jouve, 75001 PARIS (FR)

## Description

### Technical Field

The present invention relates to a technique of representing a static or kinetic equilibrium of an analysis object such as a continuum by a differential equation and calculating a solution corresponding to a boundary condition, thereby analyzing a static or kinetic equilibrium or a state of the continuum.

### Background Art

Usually a static or kinetic equilibrium of a continuum is described by simultaneous partial differential equations, and the purpose thereof is to obtain a solution corresponding to various types of boundary conditions. In the field of engineering, a self-adjoint problem is dealt with often, and a variety of methods suitable for the same has been studied. Among these, the eigenfunction method based on Hilbert's expansion theorem is useful, and there are many examples of application of the same. In contrast, there are few studies on a non-self-adjoint problem, one of which is the eigenfunction method based on Schmidt's expansion theorem (see, for example, Non-Patent Documents 1 and 2). Further, Mikhlin (see, for example, Non-Patent Documents 3 and 4) indicates that using this eigenfunction allows the least squares method to give a correct solution. However, since these theorems are in the category of the integral equation theory and boundary conditions are embedded in the kernel function, they are difficult to use as a general-purpose method, in an aspect. Further, they do not take a form of simultaneous equations for solving a plurality of unknown functions. For this reason and others, necessarily there have been a limited number of application examples.

Prior Art Document

Non-Patent Document

Non-Patent Document 1: Richard Courant, David Hilbert; joint translation by Toshiya SAITO and Shigeya MARUYAMA: Methods of Mathematical Physics, Vol. 1, TokyoTosho Co., Ltd. the first edition: 1959.

Non-Patent Document 2: Erhard Schmidt: Zur Theorie der linearen und nichtlinearen Integralgleichungen. I., Math. Ann. Bd. 63, 1907, pp.433-476.

Non-Patent Document 3: Bruce A. Finlayson; joint translation by Kyuichiro WASHIZU, Yoshiyuki YAMAMOTO, and Tadahiko KAWAI: The Method of Weighted Residuals and Variational Principles, BAIFUKAN Co., Ltd., 1974.

Non-Patent Document 4: S. G. Mikhlin; translated by T. Boddington: Variational Methods in Mathematical Physics, Pergamon Press, 1964.


### Summary of the Invention

### Problem to be Solved by the Invention

In the fields of theory of elasticity, vibration science, mechanics of materials, structural mechanics, and the like, as the principle of virtual work is laid at the basis of the theoretical system, contents thereof are biased to a self-adjoint problem, and it seems that even the existence of a non-self-adjoint problem is not recognized. However, there are many non-self-adjoint problems actually. Therefore, it is necessary to recognize ambiguity involved in the principle of virtual work and reconstruct the system of dynamics from a higher viewpoint, to extend the possibility widely and deeply to induce further development.

It is an object of the present invention to provide an analyzer, an analysis method, and an analysis program, characterized in that a solution of a non-self-adjoint problem represented by simultaneous differential equations can be calculated.

### Means for Solving the Problem

An analyzer of the present invention is an analyzer for determining a solution of a differential equation of an analysis object by using data representing original differential operators $L_{ij}$ with respect to the analysis object, wherein, when forces acting on the analysis object are assumed to be $f_i$, and variations of dual displacements $u_{i^*}$ are assumed to be dual variations $\delta u_i^*$, solutions $u_j$ are calculated by the following equation:

[Formula 1]

$$\sum_i \int_S \left( \sum_j L_{ij} u_j - f_i \right) \cdot \delta u_i^* ds = 0$$

**Brief Description of Drawings**

[FIG. 1] FIG. 1 illustrates relationship of an eigenfunction with differential operators or a boundary condition.
[FIG. 2] FIG. 2 is a functional block diagram illustrating an exemplary configuration of an analyzer of Embodiment 1.
[FIG. 3] FIG. 3 is a functional block diagram illustrating an exemplary configuration of an analyzer of Embodiment 2.
[FIG. 4] FIG. 4 is a flowchart showing an exemplary operation of the analyzer shown in FIG. 3.
[FIG. 5] FIG. 5 is a functional block diagram illustrating an exemplary configuration of an analyzer according to Embodiment 3.
[FIG. 6] FIG. 6 is a flowchart showing an exemplary operation of the analyzer 10b shown in FIG. 5.
[FIG. 7] FIG. 7 is a flowchart showing an exemplary operation of an analyzer according to Embodiment 4.
[FIG. 8] FIG. 8 illustrates exemplary elements of a 16-nodes quadrilateral.
[FIG. 9] FIG. 9 illustrates a result of an analysis of a ring under uniform gravity in which "zero displacement and zero surface force" is set as a boundary condition.
[FIG. 10] FIG. 10 illustrates a result of an analysis of a square under uniform gravity in which "zero displacement and zero surface force" is set as a boundary condition of an upper side of the square.
[FIG. 11] FIG. 11 illustrates a result of an analysis of in-plane deformation of a square plate having fixed peripheries.
[FIG. 12] FIG. 12 illustrates a result of an analysis of self-weight deformation of square plate elements in the case where peripheries thereof are fixed, the element being an element for out-of-plane deformation.
[FIG. 13A] FIG. 13A illustrates a model of a beam having a left end under a free boundary condition and fixed boundary condition.
[FIG. 13B] FIG. 13B illustrates a result of calculation of primal eigenfunctions $\phi_1$, $\phi_2$, and $\phi_3$, and dual eigenfunctions $\phi_{1*}$, $\phi_{2*}$, and $\phi_{3*}$ of the beam shown in FIG. 13A.
[FIG. 13C] FIG. 13C illustrates an analytical solution and solutions determined by the eigenfunction method.
[FIG. 14] FIG. 14 illustrates an analysis result in the case where a virtual boundary of a square is defined in a boundless region of the infinite, and a source is arranged at the center of the square.
[FIG. 15] FIG. 15 illustrates an analysis result in the case where a virtual boundary of a square is defined in a boundless region of the infinite, and a vortex is arranged at the center of the square.
[FIG. 16] FIG. 16 illustrates an exemplary spring damper system.
[FIG. 17] FIG. 17 illustrates an exemplary eigenfunction.
[FIG. 18] FIG. 18 illustrates comparison between analytical solutions of eq. (525) and results obtained by an eigenfunction method of eq. (494).
[FIG. 19] FIG. 19 illustrates comparison between analytical solutions of eq. (528) and results obtained by the eigenfunction method of eq. (494).
[FIG. 20] FIG. 20 illustrates comparison between analytical solutions of eq. (531) and results obtained by the eigenfunction method of eq. (494).
[FIG. 21] FIG. 21 illustrates an exemplary mass-point spring system.
[FIG. 22] FIG. 22 illustrates respective eigenfunctions in the case of eq. (610).
[FIG. 23] FIG. 23 illustrates respective eigenfunctions in the case of eq. (611).
[FIG. 24] FIG. 24 illustrates comparison between analytical solutions of eq. (625) and results obtained by an eigenfunction method of eq. (578).
[FIG. 25] FIG. 25 illustrates comparison between analytical solutions of eq. (632) and results obtained by an eigenfunction method of eq. (584).
[FIG. 26] FIG. 26 illustrates an exemplary static deflection of a string.
[FIG. 27] FIG. 27 illustrates exemplary eigenfunctions.
[FIG. 28] FIG. 28 illustrates comparison between analytical solutions of eq. (706) and results obtained by an eigenfunction method of eq. (702).
[FIG. 29] FIG. 29 illustrates comparison between analytical solutions of eq. (709) and results obtained by the eigenfunction method of eq. (702).

[FIG. 30] FIG. 30 illustrates comparison between analytical solutions of eq. (713) and results obtained by an eigenfunction method of eq. (704).
[FIG. 31] FIG. 31 illustrates comparison between analytical solutions of eq. (715) and results obtained by the eigenfunction method of eq. (704).
[FIG. 32] FIG. 32 illustrates an exemplary static deflection of a beam.
[FIG. 33] FIG. 33 illustrates exemplary eigenfunctions.
[FIG. 34] FIG. 34 illustrates exemplary eigenfunctions.
[FIG. 35] FIG. 35 illustrates comparison between analytical solutions of eq. (784) and results obtained by an eigenfunction method of eq. (780).
[FIG. 36] FIG. 36 illustrates comparison between analytical solutions of eq. (787) and results obtained by the eigenfunction method of eq. (780).
[FIG. 37] FIG. 37 illustrates comparison between analytical solutions of eq. (790) and results obtained by an eigenfunction method of eq. (782).
[FIG. 38] FIG. 38 illustrates comparison between analytical solutions of eq. (793) and results obtained by the eigenfunction method of eq. (782).
[FIG. 39] FIG. 39 illustrates one solution other than an exemplary solution, among a plurality of solutions.
[FIG. 40A] FIG. 40A illustrates a plurality of exemplary solutions calculated in the case of analysis with respect to a finite element method.
[FIG. 40B] FIG. 40B illustrates a plurality of exemplary solutions calculated in the case of analysis with respect to a finite element method.
[FIG. 41] FIG. 41 illustrates the node number for a 4-nodes shape function.
[FIG. 42] FIG. 42 illustrates an analytical solution of deformation and stress of a ring.
[FIG. 43] FIG. 43 illustrates deformation of a mode SA.
[FIG. 44] FIG. 44 illustrates deformation of a mode AS.
[FIG. 45] FIG. 45 illustrates deformation of a mode SS.
[FIG. 46] FIG. 46 illustrates deformation of a mode AA.
[FIG. 47] FIG. 47 illustrates No. 1 mode of a ring.
[FIG. 48] FIG. 48 illustrates No. 2 mode of a ring.
[FIG. 49] FIG. 49 illustrates No. 3 mode of a ring.
[FIG. 50] FIG. 50 illustrates No. 4 mode of a ring.
[FIG. 51] FIG. 51 illustrates deformation and stress distribution in the case where 2 modes are used.
[FIG. 52] FIG. 52 illustrates deformation and stress distribution in the case where 3 modes are used.
[FIG. 53] FIG. 53 illustrates deformation and stress distribution in the case where 10 modes are used.
[FIG. 54] FIG. 54 illustrates deformation and stress distribution in the case where 30 modes are used.
[FIG. 55] FIG. 55 illustrates a state of a dimensionless velocity of a source.
[FIG. 56] FIG. 56 illustrates a state of a dimensionless velocity of a vortex.
[FIG. 57] FIG. 57 illustrates No. 1 mode ($m=1,N=1$) of a function (1).
[FIG. 58] FIG. 58 illustrates No. 1 mode ($m=1,N=1$) of a function (2).
[FIG. 59] FIG. 59 illustrates No. 1 mode ($m=1,N=1$) of a function (3).
[FIG. 60] FIG. 60 illustrates No. 1 mode ($m=1,N=1$) of a function (4).
[FIG. 61] FIG. 61 illustrates No. 1 mode ($m=1,N=1$) of a function (5).
[FIG. 62] FIG. 62 illustrates No. 1 mode ($m=1,N=1$) of a function (6).
[FIG. 63] FIG. 63 illustrates No. 1 mode ($m=1,N=1$) of a function (7).
[FIG. 64] FIG. 64 illustrates No. 1 mode ($m=1,N=1$) of a function (8).
[FIG. 65] FIG. 65 illustrates a velocity distribution of a source using the eigenfunction method.
[FIG. 66] FIG. 66 illustrates difference of velocity distribution between analytical solution and eigenfunction method for source.
[FIG. 67] FIG. 67 illustrates an exemplary configuration of an information processing device.
[FIG. 68] FIG. 68 illustrates an exemplary configuration of an information processing device.
[FIG. 69] FIG. 69 is a flowchart illustrating an exemplary boundary condition setting.
[FIG. 70] FIG. 70 is a flowchart illustrating an exemplary boundary condition setting.
[FIG. 71] FIG. 71 is a flowchart illustrating an exemplary boundary condition setting.
[FIG. 72] FIG. 72 is a flowchart illustrating an exemplary analysis processing.

**Mode for Carrying out the Invention**

1. Introduction

Here, a novel eigenfunction method for solving a non-self-adjoint problem represented by simultaneous partial differential equations is shown. Next, the relationship of the present method with the least squares method, the direct variational method, and the energy principle of the theory of elasticity is discussed. Thereafter, the principle of virtual work and the finite element formulation are discussed deeply. Further, formulation of a finite element of a two-dimensional elastic body is discussed.

2. Simultaneous partial differential equations

2.1 Technical terms and coinages

Essential terms and coined words relating to the relationship of eigenfunctions with differential operators and boundary conditions are shown in FIG. 1.

A problem to be solved is referred to as a "primal problem". From an inhomogeneous boundary condition given to the primal problem, a homogeneous boundary condition is settled. There are many problems having the same homogeneous boundary condition, and these problems form an additive group (module) having calculus with a sum of boundary conditions. This is referred to as a "heads group". In other words, an inhomogeneous boundary condition of the primal problem is included in the heads group as one of the elements. A solution function of the primal problem is referred to as "Primal Solution", and a variation of the same is referred to as a "primal variation".

By partial integration of an inner product, adjoint differential operators are settled from original differential operators, and from a condition in which a boundary term is zero, a homogeneous adjoint boundary condition is settled. There are many problems having the same homogeneous adjoint boundary condition, and these form an additive group (module) likewise. This is referred to as a "tails group". One of the elements is referred to as an "inhomogeneous adjoint boundary condition", and a problem that gives this is referred to as a "dual problem". A solution function of a dual problem is referred to as a "dual solution", and a variation thereof is referred to as a "dual variation". Via the inner product, the two groups are united like two sides of the same coin.

2.2 Exemplary self-adjoint operator (static equilibrium of elastic body)

Static equilibrium of a two-dimensional elastic body are, in the orthogonal coordinate system, given as:
[Formula 5]

$$\left\{(1+\mu)\frac{\partial^2}{\partial x^2}+\frac{\partial^2}{\partial y^2}\right\}u_x+\mu\frac{\partial^2}{\partial x\partial y}u_y=-\frac{1}{G}b_x \qquad (1)$$

$$\mu\frac{\partial^2}{\partial x\partial y}u_x+\left\{\frac{\partial^2}{\partial x^2}+(1+\mu)\frac{\partial^2}{\partial y^2}\right\}u_y=-\frac{1}{G}b_y \qquad (2)$$

where $u_x$, $u_y$ represent displacements in the x and y directions, respectively, which are determined as primal solutions by solving the equations. $b_x$ and $b_y$ are body forces in the x and y directions per unit volume, and G represents a modulus of rigidity. Let a Poisson's ratio be $v$. Then, a constant $\mu$ is given as:
[Formula 6]

$$\mu\equiv\frac{1+v}{1-v}(Plane\ Stress),\qquad \mu\equiv\frac{1}{1-2v}(Plane\ Strain) \qquad (3)$$

Regarding a plane stress and a plane strain state, the displacement-strain relationship is given as:
[Formula 7]

$$\varepsilon_x \equiv \frac{\partial}{\partial x} u_x \quad (4)$$

$$\varepsilon_y \equiv \frac{\partial}{\partial y} u_y \quad (5)$$

$$\gamma_{xy} \equiv \frac{\partial}{\partial y} u_x + \frac{\partial}{\partial x} u_y \quad (6)$$

and the stress-strain relationship is given as:
[Formula 8]

$$\sigma_x = G \left\{ (\mu + 1)\varepsilon_x + (\mu - 1)\varepsilon_y \right\} \quad (7)$$

$$\sigma_y = G \left\{ (\mu - 1)\varepsilon_x + (\mu + 1)\varepsilon_y \right\} \quad (8)$$

$$\tau_{xy} = G\, \gamma_{xy} \quad (9)$$

Therefore, stress components are given as:
[Formula 9]

$$\sigma_x \equiv G \left\{ (\mu + 1)\frac{\partial u_x}{\partial x} + (\mu - 1)\frac{\partial u_y}{\partial y} \right\} \quad (10)$$

$$\sigma_y \equiv G \left\{ (\mu - 1)\frac{\partial u_x}{\partial x} + (\mu + 1)\frac{\partial u_y}{\partial y} \right\} \quad (11)$$

$$\tau_{xy} = \tau_{yx} \equiv G \left( \frac{\partial u_y}{\partial x} + \frac{\partial u_x}{\partial y} \right) \quad (12)$$

Let components of an outward unit normal vector of a boundary surface be $n_x$ and $n_y$, and then, surface forces $p_x$ and $p_y$ are, according to the Cauchy's formula, given as:
[Formula 10]

$$p_x \equiv n_x \sigma_x + n_y \tau_{yx} \quad (13)$$

$$p_y \equiv n_x \tau_{xy} + n_y \sigma_y \qquad (14)$$

This results in that by the equations in which the constant μ is used as is the case with eqs. (1) to (14), the plane strain state and the plane strain state can be dealt with uniformly. A differential operator of eqs. (1) and (2) is referred to as an "original differential operator $L_{ij}$", and is defined as:
[Formula 11]

$$\begin{bmatrix} L_{11} & L_{12} \\ L_{21} & L_{22} \end{bmatrix} \equiv \begin{bmatrix} (1+\mu)\frac{\partial^2}{\partial x^2} + \frac{\partial^2}{\partial y^2} & \mu\frac{\partial^2}{\partial x \partial y} \\ \mu\frac{\partial^2}{\partial x \partial y} & \frac{\partial^2}{\partial x^2} + (1+\mu)\frac{\partial^2}{\partial y^2} \end{bmatrix} \qquad (15)$$

Then, by partial integration to be described in the next chapter, an adjoint differential operator $L_{ij}$* is given as:
[Formula 12]

$$\begin{bmatrix} L_{11}^* & L_{21}^* \\ L_{12}^* & L_{22}^* \end{bmatrix} \equiv \begin{bmatrix} (1+\mu)\frac{\partial^2}{\partial x^2} + \frac{\partial^2}{\partial y^2} & \mu\frac{\partial^2}{\partial x \partial y} \\ \mu\frac{\partial^2}{\partial x \partial y} & \frac{\partial^2}{\partial x^2} + (1+\mu)\frac{\partial^2}{\partial y^2} \end{bmatrix} \qquad (16)$$

An set operator that satisfies

$$L_{ij}^* = L_{ij} \quad , \qquad (17)$$

as is the case with the foregoing example, is referred to as a "self-adjoint differential operator".

2.3 Exemplary non-self-adjoint operator (potential flow)

If trying to solve a problem of two-dimensional potential flow only with speed, without using velocity potential, we obtain, in the orthogonal coordinate system, simultaneous partial differential equations that are composed of an equation of continuity (18) and a vortex-free condition (19):
[Formula 13]

$$\frac{\partial u_x}{\partial x} + \frac{\partial u_y}{\partial y} = 0 \qquad (18)$$

$$\frac{\partial u_y}{\partial x} - \frac{\partial u_x}{\partial y} = 0 \qquad (19)$$

where $u_x$, $u_y$ represent velocities in the x and y directions, respectively, which are determined as primal solutions by solving the equation. Differential operators of eqs. (18) and (19) are referred to as "original differential operators $L_{ij}$", and are defined as:
[Formula 14]

$$\begin{bmatrix} L_{11} & L_{12} \\ L_{21} & L_{22} \end{bmatrix} \equiv \begin{bmatrix} \frac{\partial}{\partial x} & \frac{\partial}{\partial y} \\ -\frac{\partial}{\partial y} & \frac{\partial}{\partial x} \end{bmatrix} \qquad (20)$$

Then, by partial integration that is to be described in the next chapter, adjoint differential operators $L_{ij}^*$ are given as:
[Formula 15]

$$\begin{bmatrix} L_{11}^* & L_{21}^* \\ L_{12}^* & L_{22}^* \end{bmatrix} \equiv \begin{bmatrix} -\frac{\partial}{\partial x} & \frac{\partial}{\partial y} \\ -\frac{\partial}{\partial y} & -\frac{\partial}{\partial x} \end{bmatrix} \qquad (21)$$

A set of operators that satisfies

$$L_{ij}^{*} \neq L_{ij} \quad , \qquad (22)$$

as is the case with the foregoing example, is referred to as "non-self-adjoint differential operators".

3. Primal problem and dual problem

3.1 Homogenization of boundary condition

Hereinafter, the exemplary elastic body mentioned in the previous chapter is focused. Displacements $u_x$ and $u_y$ determined as primal solutions are referred to as "primal displacements" , and are written as "$u_1$" and "$u_2$". Let the right sides of the equations be written as "$f_1$" and "$f_2$", and then, simultaneous partial differential equations (1) and (2) are given as:
[Formula 16]

$$\sum_j L_{ij} u_j = f_i \qquad (23)$$

An index B is added to a term that satisfies an inhomogeneous boundary condition so as to let the term be $u_{Bj}$, and an index H is added to a term that satisfies a homogeneous boundary condition so as to let the term be $u_{Hj}$. A primal solution $u_j$ is expressed by a sum of these, which is given as:
[Formula 17]

$$u_j \equiv u_{Bj} + u_{Hj} \qquad (24)$$

According to eqs. (10) to (14) and this equation, the stress and the surface force are divided into terms formed with $u_{Bj}$ or $u_{Hj}$, and are given as:
[Formula 18]

$$\sigma_x \equiv \sigma_{Bx} + \sigma_{Hx} \qquad (25)$$

$$\sigma_{Bx} \equiv G\left\{(\mu+1)\frac{\partial u_{B1}}{\partial x} + (\mu-1)\frac{\partial u_{B2}}{\partial y}\right\} \qquad (26)$$

$$\sigma_{Hx} \equiv G\left\{(\mu+1)\frac{\partial u_{H1}}{\partial x} + (\mu-1)\frac{\partial u_{H2}}{\partial y}\right\} \qquad (27)$$

$$\sigma_y \equiv \sigma_{By} + \sigma_{Hy} \qquad (28)$$

$$\sigma_{By} \equiv G\left\{(\mu-1)\frac{\partial u_{B1}}{\partial x} + (\mu+1)\frac{\partial u_{B2}}{\partial y}\right\} \qquad (29)$$

$$\sigma_{Hy} \equiv G\left\{(\mu-1)\frac{\partial u_{H1}}{\partial x} + (\mu+1)\frac{\partial u_{H2}}{\partial y}\right\} \qquad (30)$$

$$\tau_{xy} \equiv \tau_{Bxy} + \tau_{Hxy} \qquad (31)$$

$$\tau_{Bxy} = \tau_{Byx} \equiv G\left(\frac{\partial u_{B2}}{\partial x} + \frac{\partial u_{B1}}{\partial y}\right) \qquad (32)$$

$$\tau_{Hxy} = \tau_{Hyx} \equiv G\left(\frac{\partial u_{H2}}{\partial x} + \frac{\partial u_{H1}}{\partial y}\right) \qquad (33)$$

$$p_x \equiv p_1 \equiv p_{Bx} + p_{Hx} \qquad (34)$$

$$p_{Bx} \equiv p_{B1} \equiv n_x \sigma_{Bx} + n_y \tau_{Byx} \qquad (35)$$

$$p_{Hx} \equiv p_{H1} \equiv n_x \sigma_{Hx} + n_y \tau_{Hyx} \qquad (36)$$

$$p_y \equiv p_2 \equiv p_{By} + p_{Hy} \qquad (37)$$

$$p_{By} \equiv p_{B2} \equiv n_x \tau_{Bxy} + n_y \sigma_{By} \qquad (38)$$

$$p_{Hy} \equiv p_{H2} \equiv n_x \tau_{Hxy} + n_y \sigma_{Hy} \qquad (39)$$

$u_{Hj}$ and $p_{Hj}$ are unknown functions that satisfy a homogeneous boundary condition, but since $p_{Hj}$ is expressed with $u_{Hj}$, a function that is finally unknown is only $u_{Hj}$. Similarly, $u_{Bj}$ and $p_{Bj}$ are known functions that satisfy an inhomogeneous boundary condition, but since $p_{Bj}$ is expressed with $u_{Bj}$, a function that is finally known is only $u_{Bj}$. $u_{Bj}$ does not necessarily satisfy eq. (23), and when it is in the form of eq. (24), it satisfies eq. (23). Substituting eq. (24) into eq. (23), we obtain a simultaneous partial differential equation represented by a homogeneous boundary condition, which is given as:

[Formula 19]

$$\sum_j L_{ij} u_{Hj} = f_{Hi} \qquad (40)$$

where the external force term $f_{Hi}$ is given as:

$$f_{Hi} \equiv f_i - \sum_j L_{ij} u_{Bj} \quad (41)$$

The foregoing procedure is a conventional practice for solving differential equations, and the problem is changed to a problem of finding an unknown function $u_{Hj}$ depending on a known function $u_{Bj}$.

3.2 Dual displacement

A displacement that is to be a dual solution is referred to as a "dual displacement $u_j^*$". Similarly to the case described in the previous section, the dual displacement $u_j^*$ is given by the sum of the term $u_{Bj}^*$ satisfying the inhomogeneous adjoint boundary condition and the term $u_{Hj}^*$ satisfying the homogeneous adjoint boundary condition, which is as follows:
[Formula 20]

$$u_j^* \equiv u_{Bj}^* + u_{Hj}^* \quad (42)$$

According to eqs. (10) to (14) and this equation, the stress and the surface force are also divided into the terms formed with $u_{Bj}^*$ or $u_{Hj}^*$, and are given as:
[Formula 21]

$$\sigma_x^* \equiv \sigma_{Bx}^* + \sigma_{Hx}^* \quad (43)$$

$$\sigma_{Bx}^* \equiv G\left\{(\mu+1)\frac{\partial u_{B1}^*}{\partial x} + (\mu-1)\frac{\partial u_{B2}^*}{\partial y}\right\} \quad (44)$$

$$\sigma_{Hx}^* \equiv G\left\{(\mu+1)\frac{\partial u_{H1}^*}{\partial x} + (\mu-1)\frac{\partial u_{H2}^*}{\partial y}\right\} \quad (45)$$

$$\sigma_y^* \equiv \sigma_{By}^* + \sigma_{Hy}^* \quad (46)$$

$$\sigma_{By}^* \equiv G\left\{(\mu-1)\frac{\partial u_{B1}^*}{\partial x} + (\mu+1)\frac{\partial u_{B2}^*}{\partial y}\right\} \quad (47)$$

$$\sigma_{Hy}^* \equiv G\left\{(\mu-1)\frac{\partial u_{H1}^*}{\partial x} + (\mu+1)\frac{\partial u_{H2}^*}{\partial y}\right\} \quad (48)$$

$$\tau_{xy}^* \equiv \tau_{Bxy}^* + \tau_{Hxy}^* \quad (49)$$

$$\tau_{Bxy}^* = \tau_{Byx}^* \equiv G\left(\frac{\partial u_{B2}^*}{\partial x} + \frac{\partial u_{B1}^*}{\partial y}\right) \quad (50)$$

$$\tau^*_{Hxy} = \tau^*_{Hyx} \equiv G\left(\frac{\partial u^*_{H2}}{\partial x} + \frac{\partial u^*_{H1}}{\partial y}\right) \quad (51)$$

$$p^*_x \equiv p^*_1 \equiv p^*_{Bx} + p^*_{Hx} \quad (52)$$

$$p^*_{Bx} \equiv p^*_{B1} \equiv n_x \sigma^*_{Bx} + n_y \tau^*_{Byx} \quad (53)$$

$$p^*_{Hx} \equiv p^*_{H1} \equiv n_x \sigma^*_{Hx} + n_y \tau^*_{Hyx} \quad (54)$$

$$p^*_y \equiv p^*_2 \equiv p^*_{By} + p^*_{Hy} \quad (55)$$

$$p^*_{By} \equiv p^*_{B2} \equiv n_x \tau^*_{Bxy} + n_y \sigma^*_{By} \quad (56)$$

$$p^*_{Hy} \equiv p^*_{H2} \equiv n_x \tau^*_{Hxy} + n_y \sigma^*_{Hy} \quad (57)$$

$u_{Hj}{}^*$ and $p_{Hj}{}^*$ are unknown functions that satisfy a homogeneous adjoint boundary condition, but since $p_{Hj}{}^*$ is expressed with $u_{Hj}{}^*$, a function that is finally unknown is only $u_{Hj}{}^*$. Similarly, $u_{Bj}{}^*$ and $p_{Bj}{}^*$ are known functions that satisfy an inhomogeneous adjoint boundary condition, but since $p_{Bj}{}^*$ is expressed with $u_{Bj}{}^*$, a function that is finally known is only $u_{Bj}{}^*$.

3.3 Partial integration

Let the boundary surface be c, and let the inside of the body be s. A sum of integration obtained by multiplying eq. (23) by the dual displacement $u_i{}^*$, that is, an inner product is given as:
[Formula 22]

$$\sum_i \sum_j \int_S L_{ij} u_j \cdot u^*_i ds = \sum_i \int_S f_i \cdot u^*_i ds \quad (58)$$

Partial integration of the left side of the equation gives:
[Formula 23]

$$\sum_i \sum_j \int_S L_{ij} u_j \cdot u^*_i ds = R + \sum_i \sum_j \int_S u_j \cdot L^*_{ij} u^*_i ds \quad (59)$$

where R represents a boundary term, which, in the case of the elastic body described in the previous chapter, is given as:
[Formula 24]

$$R \equiv \frac{1}{G} \sum_i \int_C \left(p_i u^*_i - p^*_i u_i\right) dc \quad (60)$$

An inner product of the homogenized simultaneous partial differential equation (40) and the function $u_{Hj}{}^*$ is given as:
[Formula 25]

$$\sum_i \sum_j \int_S L_{ij} u_{Hj} \cdot u_{Hi}^* ds = \sum_i \int_S f_{Hi} \cdot u_{Hi}^* ds \qquad (61)$$

Partial integration of the left side of the equation gives:
[Formula 26]

$$\sum_i \sum_j \int_S L_{ij} u_{Hj} \cdot u_{Hi}^* ds = R_H + \sum_i \sum_j \int_S u_{Hj} \cdot L_{ij}^* u_{Hi}^* ds \qquad (62)$$

where $R_H$ represents a boundary term, which is given as:
[Formula 27]

$$R_H \equiv \frac{1}{G} \sum_i \int_C \left( p_{Hi} u_{Hi}^* - p_{Hi}^* u_{Hi} \right) dc \qquad (63)$$

In the case where both of the inhomogeneous boundary condition and the inhomogeneous adjoint boundary condition are zero, eq. (60) and eq. (63) coincide with each other. In the state where homogeneous boundary condition is imposed on $u_{Hi}$ and $p_{Hi}$, the condition that the boundary term $R_H$ is zero, that is, the homogeneous adjoint boundary condition is imposed on $u_{Hi}^*$ and $p_{Hi}^*$. As a result, eq. (62) is transformed to:
[Formula 28]

$$\sum_i \sum_j \int_S L_{ij} u_{Hj} \cdot u_{Hi}^* ds = \sum_i \sum_j \int_S u_{Hi} \cdot L_{ji}^* u_{Hj}^* ds \qquad (64)$$

3.4 Relationship between primal problem and dual problem

Focusing on operators of the right sides of eqs. (59) and (64), we define a simultaneous partial differential equation of the dual problem as follows:
[Formula 29]

$$\sum_j L_{ji}^* u_j^* = f_i^* \qquad (65)$$

where $f_i^*$ in the right side is an external force of the dual problem. Substituting eq. (42) into this equation gives the following homogenized simultaneous partial differential equation of the dual problem:
[Formula 30]

$$\sum_j L_{ji}^* u_{Hj}^* = f_{Hi}^* \qquad (66)$$

where the external force term $f^*_{Hi}$ is given as:

$$f_{Hi}^* \equiv f_i^* - \sum_i L_{ji}^* u_{Bj}^* \qquad (67)$$

Substituting eqs. (40) and (66) into eq. (64) gives the following equation:
[Formula 31]

$$\sum_i \int_S f_{Hi} \cdot u_{Hi}^* ds = \sum_i \int_S u_{Hi} \cdot f_{Hi}^* ds \qquad (68)$$

This represents relationship established between solution functions $u_{Hi}$ and $u_{Hi}$* of the primal and dual problems and the external force terms $f_{Hi}$ and $f_{Hi}$*.

4. Simultaneous eigenvalue problem

4.1 Function group

Let a function group that satisfies the homogeneous boundary condition be $\phi_j$, and let the k-th function of this group be written as $\phi j_k$. Then, the solution function $u_{Hj}$ is given by the sum of the same, which is given as:
[Formula 32]

$$u_{Hj} \equiv \sum_k c_k \phi_{jk} \quad (69)$$

Similarly, let a function group that satisfies the homogeneous adjoint boundary condition be $\phi_j$*, and let the k-th function be written as $\phi_i$*. Then, the solution function $u_{Hj}$* is given by the sum of the same, which is given as:
[Formula 33]

$$u_{Hj}^* \equiv \sum_k c_k^* \phi_{jk}^* \quad (70)$$

where $c_k$ and $c_k$* represent k-th coefficients. To obtain a solution function equal "almost everywhere" in a sense of Lebesgue, the function groups $\phi_j$ and $\phi_j$* should be eigenfunctions. Further, focusing on eq. (68), we find that by composing the external force term $f_{Hj}$ with the function group $\phi_j$*, and composing the external force term $f_{Hj}$* with the function group $\phi_j$, relationship is provided between the coefficients $c_k$ and $c_k$* via the inner product.

4.2 Stress and surface force according to function groups

Substituting eq. (69) into eqs. (27), (30), and (33) representing stress gives:
[Formula 34]

$$\sigma_{Hx} \equiv G\sum_k c_k \left\{ (\mu+1)\frac{\partial \phi_{1k}}{\partial x} + (\mu-1)\frac{\partial \phi_{2k}}{\partial y} \right\} \quad (71)$$

$$\sigma_{Hy} \equiv G\sum_k c_k \left\{ (\mu-1)\frac{\partial \phi_{1k}}{\partial x} + (\mu+1)\frac{\partial \phi_{2k}}{\partial y} \right\} \quad (72)$$

$$\tau_{Hxy} = \tau_{Hyx} \equiv G\sum_k c_k \left( \frac{\partial \phi_{2k}}{\partial x} + \frac{\partial \phi_{1k}}{\partial y} \right) \quad (73)$$

Then, an index E is added to stress generated from the function group $\phi_j$, whereby respective stresses are represented as $\sigma_{Ex}$, $\sigma_{Ey}$, and $\tau_{Exy}$, which are given as:
[Formula 35]

$$\sigma_{Ex} \equiv G\left\{ (\mu+1)\frac{\partial \phi_1}{\partial x} + (\mu-1)\frac{\partial \phi_2}{\partial y} \right\} \quad (74)$$

$$\sigma_{Ey} \equiv G\left\{(\mu-1)\frac{\partial \phi_1}{\partial x} + (\mu+1)\frac{\partial \phi_2}{\partial y}\right\} \qquad (75)$$

$$\tau_{Exy} = \tau_{Eyx} \equiv G\left(\frac{\partial \phi_2}{\partial x} + \frac{\partial \phi_1}{\partial y}\right) \qquad (76)$$

Surface forces $p_{Ex}$ and $p_{Ey}$ generated from the function group $\phi$are given as:
[Formula 36]

$$p_{Ex} \equiv p_{E1} \equiv n_x \sigma_{Ex} + n_y \tau_{Eyx} \qquad (77)$$

$$p_{Ey} \equiv p_{E2} \equiv n_x \tau_{Exy} + n_y \sigma_{Ey} \qquad (78)$$

This is preparation for causing the surface force $p_{Ex}$ according to the function group $\phi_j$ to satisfy the boundary condition.

Similarly, substituting eq. (70) into eqs. (45), (48), and (51) representing stresses gives:
[Formula 37]

$$\sigma_{Hx}^* \equiv G\sum_k c_k^*\left\{(\mu+1)\frac{\partial \phi_{1k}^*}{\partial x} + (\mu-1)\frac{\partial \phi_{2k}^*}{\partial y}\right\} \qquad (79)$$

$$\sigma_{Hy}^* \equiv G\sum_k c_k^*\left\{(\mu-1)\frac{\partial \phi_{1k}^*}{\partial x} + (\mu+1)\frac{\partial \phi_{2k}^*}{\partial y}\right\} \qquad (80)$$

$$\tau_{Hxy}^* = \tau_{Hyx}^* \equiv G\sum_k c_k^*\left(\frac{\partial \phi_{2k}^*}{\partial x} + \frac{\partial \phi_{1k}^*}{\partial y}\right) \qquad (81)$$

Then, respective stresses generated from the function group $\phi_j$* are represented as $\sigma_{Ex}$*, $\phi_{Ey}$*, and $T_{Exy}$*, which are given as:
[Formula 38]

$$\sigma_{Ex}^* \equiv G\left\{(\mu+1)\frac{\partial \phi_1^*}{\partial x} + (\mu-1)\frac{\partial \phi_2^*}{\partial y}\right\} \qquad (82)$$

$$\sigma_{Ey}^* \equiv G\left\{(\mu-1)\frac{\partial \phi_1^*}{\partial x} + (\mu+1)\frac{\partial \phi_2^*}{\partial y}\right\} \qquad (83)$$

$$\tau_{Exy}^* = \tau_{Eyx}^* \equiv G\left(\frac{\partial \phi_2^*}{\partial x} + \frac{\partial \phi_1^*}{\partial y}\right) \qquad (84)$$

Surface forces $p_{Ex}$* and $p_{Ey}$* generated from the function group $\phi_j$* are given as:
[Formula 39]

$$p_{Ex}^{*} \equiv p_{E1}^{*} \equiv n_x \sigma_{Ex}^{*} + n_y \tau_{Eyx}^{*} \qquad (85)$$

$$p_{Ey}^{*} \equiv p_{E2}^{*} \equiv n_x \tau_{Exy}^{*} + n_y \sigma_{Ey}^{*} \qquad (86)$$

This is preparation for causing the surface force $p_{Ei}$* according to the function group $\phi_j$* to satisfy the boundary condition.

4.3 Primal and dual simultaneous differential equations, and primal and dual simultaneous eigenvalue problems

Based on the knowledge described in Section 4.1, focusing on the homogenized differential equation (40), we define primal simultaneous differential equations as follows:
[Formula 40]

$$\sum_{j} L_{ij}\phi_j = \lambda^* w_i^* \phi_i^* \qquad (87)$$

Further, focusing on the differential equation (66), we define dual simultaneous differential equations as follows:
[Formula 41]

$$\sum_{j} L_{ji}^{*}\phi_j^{*} = \lambda w_i \phi_i \qquad (88)$$

where $w_i$, $w_i$* are constants representing weights, and λ, λ* are constants that will become eigenvalues.
An inner product of the primal simultaneous differential equation (87) and $\phi_i$* is given as:
[Formula 42]

$$\sum_{i}\sum_{j}\int_{S} L_{ij}\phi_j \cdot \phi_i^* ds = \lambda^* \sum_{i}\int_{S} w_i^* \phi_i^* \cdot \phi_i^* ds \qquad (89)$$

Partial integration of the left side of the equation gives:
[Formula 43]

$$\sum_{i}\sum_{j}\int_{S} L_{ij}\phi_j \cdot \phi_i^* ds = R_E + \sum_{i}\sum_{j}\int_{S} \phi_j \cdot L_{ij}^{*}\phi_i^* ds \qquad (90)$$

where $R_E$ represents a boundary term, which is given as:
[Formula 44]

$$R_E \equiv \frac{1}{G}\sum_{i}\int_{C}\left(p_{Ei}\phi_i^* - p_{Ei}^{*}\phi_i\right)dc \qquad (91)$$

Since the homogeneous boundary condition is imposed on $\phi_i$ and $p_{Ei}$, and the homogeneous adjoint boundary condition is imposed on $\phi_i$* and $p_{Ei}$* as described in Section 4.1, the boundary term $R_E$ becomes zero. Therefore, according to eq. (88), eq. (90) is transformed to:
[Formula 45]

$$\sum_i \sum_j \int_S L_{ij}\phi_j \cdot \phi_i^* ds = \lambda \sum_i \int_S \phi_i \cdot w_i \phi_i ds \quad (92)$$

The left sides of eqs. (89) and (92) coincide with each other. Therefore, focusing on the right side of the equation, and setting $\lambda$ and $\lambda^*$ so that they satisfy:

$$\lambda^* = \lambda \quad (93)$$

we obtain:
[Formula 46]

$$\sum_i \int_S w_i^* \phi_i^* \cdot \phi_i^* ds = \sum_i \int_S \phi_i \cdot w_i \phi_i ds \quad (94)$$

In other words, under eq. (93), weighted inner products of the functions $\phi_i$ and $\phi_i^*$ are equal.

On the other hand, mutually substituting the primal simultaneous differential equation (87) and the dual simultaneous differential equation (88) into each other gives two simultaneous eigenvalue problems as follows:
[Formula 47]

$$\sum_j \sum_k L_{ji}^* \frac{1}{w_j^*} L_{jk}\phi_k = \lambda\lambda^* w_i \phi_i \quad (95)$$

$$\sum_j \sum_k L_{ij} \frac{1}{w_j} L_{kj}^* \phi_k^* = \lambda\lambda^* w_i^* \phi_i^* \quad (96)$$

Here, $w_i$ and $w_i^*$ are set so as to satisfy:

$$w_i = w_i^* \quad (97)$$

Then, applying eqs. (93) and (97) to eqs. (95) and (96), we obtain:

$$\sum_j \sum_k L_{ji}^* \frac{1}{w_j} L_{jk}\phi_k = \lambda^2 w_i \phi_i \quad (98)$$

$$\sum_j \sum_k L_{ij} \frac{1}{w_j} L_{kj}^* \phi_k^* = \lambda^2 w_i \phi_i^* \quad (99)$$

These both are simultaneous eigenvalue problems having an eigenvalue of $\lambda^2$. The eq. (98) is referred to as a "primal simultaneous eigenvalue problem", and eq. (99) is referred to as a "dual simultaneous eigenvalue problem". The function $\phi_i$ is referred to as a "primal eigenfunction", and $\phi_i^*$ is referred to as a "dual eigenfunction". The operators on the left sides thereof are referred to as a "primal differential operator", and a "dual differential operator", respectively. Both of the primal and dual differential operators are self-adjoint differential operators.

By the way, the homogeneous boundary condition is imposed on the function $\phi_i$, and the homogeneous adjoint boundary condition is imposed on the function $\phi_i^*$. Since the function $\phi_i^*$ is present on the right side of the primal simultaneous differential equation (87), the function $\phi_i$ has to satisfy the homogeneous boundary condition, and at the same time, the sum of the derivatives, $\sum_j L_{ij}\phi_j$, has to satisfy the homogeneous adjoint boundary condition. These in combination are referred to as a "primal boundary condition". Since the function $\phi_i$ is present on the right side of the dual simultaneous differential equation (88), the function $\phi_i^*$ has to satisfy the homogeneous adjoint boundary condition, and

at the same time, the sum of derivatives, $\sum_j L_{ij}^* \phi_j^*$, has to satisfy the homogeneous boundary condition. These in combination are referred to as a "dual boundary condition". Both of the primal and dual boundary conditions are self-adjoint boundary conditions.

$\phi_i$ of eq. (98) and $\phi_i^*$ of eq. (99), on which these boundary conditions are imposed have own orthogonality and become the basis function in the Hibert space. For example, let the m-th eigenvalue and primal eigenfunction be $\lambda_m$ and $\phi_{im}$, respectively, and let the n-th eigenvalue and primal eigenfunction be $\lambda_n$ and $\phi_{in}$, respectively. Then, by determining the inner product, we obtain:

[Formula 48]

$$\lambda_n^2 \sum_i \int_S \phi_{im} \cdot w_i \phi_{in} ds = \sum_i \sum_j \sum_k \int_S \phi_{im} \cdot L_{ji}^* \frac{1}{w_j} L_{jk} \phi_{kn} ds$$
$$= \sum_i \sum_j \sum_k \int_S L_{jk}^* \frac{1}{w_j} L_{ji} \phi_{im} \cdot \phi_{kn} ds = \lambda_m^2 \sum_k \int_S w_k \phi_{km} \cdot \phi_{kn} ds \qquad (100)$$

According to the first part and the last part of the foregoing equation, we obtain:

$$\left(\lambda_m^2 - \lambda_n^2\right) \sum_i \int_S \phi_{im} \cdot w_i \phi_{in} ds = 0 \qquad (101)$$

Thus, we find that the primal eigenfunction $\phi_i$ has orthogonality. Likewise, let the m-th eigenvalue and dual eigenfunction be $\lambda_m$ and $\phi_{im}^*$, respectively, and let the n-th eigenvalue and dual eigenfunction be $\lambda_n$ and $\phi_{in}^*$, respectively. Then, by determining the inner product, we obtain:

[Formula 49]

$$\lambda_n^2 \sum_i \int_S \phi_{im}^* \cdot w_i \phi_{in}^* ds = \sum_i \sum_j \sum_k \int_S \phi_{im}^* \cdot L_{ij} \frac{1}{w_j} L_{kj}^* \phi_{kn}^* ds$$
$$= \sum_i \sum_j \sum_k \int_S L_{kj} \frac{1}{w_j} L_{ij}^* \phi_{im}^* \cdot \phi_{kn}^* ds = \lambda_m^2 \sum_k \int_S w_k \phi_{km}^* \cdot \phi_{kn}^* ds \qquad (102)$$

According to the first part and the last part of the foregoing equation, we obtain:

$$\left(\lambda_m^2 - \lambda_n^2\right) \sum_i \int_S w_i \phi_{im}^* \cdot \phi_{in}^* ds = 0 \qquad (103)$$

Thus, we find that the dual eigenfunction $\phi_i^*$ also has orthogonality.

Therefore, by taking eqs. (94) and (97) into consideration, we can normalize the functions $\phi_i$, $\phi_i^*$ so that the functions satisfy:

[Formula 50]

$$\sum_i \int_S w_i \phi_{im}^* \cdot \phi_{in}^* ds = \sum_i \int_S \phi_{im} \cdot w_i \phi_{in} ds = \delta_{mn} \qquad (104)$$

where $\delta_{mn}$ represents the Kronecker's delta.

4.4 Preparation for the eigenfunction method

According to eqs. (93) and (97), the primal simultaneous differential equation (87) is transformed to:

[Formula 51]

$$\sum_j L_{ij}\phi_j = \lambda w_i \phi_i^* \qquad (105)$$

The dual simultaneous differential equation (88) remains to be as follows, without transformation:
[Formula 52]

$$\sum_j L_{ji}^* \phi_j^* = \lambda w_i \phi_i \qquad (106)$$

The functions $\phi_i$ and $\phi_i$*, which will be used in the eigenfunction method described in the next chapter, are those of a combination that satisfies the primal and dual simultaneous differential equations (105) and (106). It should be noted that a combination in which $\phi_i$ remains without change and the signs of $\lambda$ and $\phi_i$* are inverted also satisfies the requirements, but this combination is excluded.

In the case where both of the original differential operator $L_{ij}$ and the homogeneous boundary condition are self-adjoint, eqs. (105) and (106) coincide with each other, which form a self-adjoint simultaneous eigenvalue problem given as:
[Formula 53]

$$\sum_j L_{ij}\phi_j = \lambda w_i \phi_i \qquad (107)$$

This equation is a format that represents natural vibration of a Timoshenko beam or a Mindlin plate, and is a key to derive eq. (123) directly from the eigenfunction method.

5. Eigenfunction method and least squares method

5.1 Eigenfunction method

5.1.1 Primal problem

Substituting eq. (69) into the homogenized differential equation (40) gives:

[Formula 54]

$$\sum_k c_k \sum_j L_{ij}\phi_{jk} = f_{Hi} \quad (108)$$

According to the primal simultaneous differential equation (105), this equation is transformed to:
[Formula 55]

$$\sum_k c_k \lambda_k w_i \phi_{ik}^* = f_{Hi} \qquad (109)$$

where $\lambda_k$ represents the k-th eigenvalue. By determining an inner product with the function $\phi_{i*}$ and utilizing the orthogonality, we obtain:
[Formula 56]

$$c_k \lambda_k \sum_i \int_S w_i \phi_{ik}^* \cdot \phi_{ik}^* ds = \sum_i \int_S f_{Hi} \cdot \phi_{ik}^* ds \qquad (110)$$

This allows the coefficient $c_k$ to be settled. By normalization of eq. (104), we obtain:
[Formula 57]

$$c_k = \frac{1}{\lambda_k}\sum_i \int_S f_{Hi} \cdot \phi_{ik}^* ds \qquad (111)$$

According to this, we find that the coefficient $c_k$ is settled by an inner product of the external force term $f_{Hi}$ and the dual eigenfunction $f_{Hi^*}$. By returning this to eq. (69) whereby the displacement $u_{Hj}$ is determined, and returning the $u_{Hj}$ to eq. (24), we obtain the displacement $u_j$. On the other hand, in the case where it is returned to eq. (109), the external force term $f_{Hi}$ is reconstructed, which is useful for verification. In other words, the solution method of eq. (111) is an eigenfunction method in the Hilbert space in which the displacement $u_{Hj}$ is expressed by the primal eigenfunction $\phi_i$, and the external force term $f_{Hi}$ is expressed by the dual eigenfunction $\phi_i^*$.

5.1.2 Dual problem

Substituting eq. (70) into the homogenized differential equation (66) gives:
[Formula 58]

$$\sum_k c_k^* \sum_j L_{ji}^* \phi_{jk}^* = f_{Hi}^* \qquad (112)$$

According to the dual simultaneous differential equation (106), this equation is transformed to:
[Formula 59]

$$\sum_k c_k^* \lambda_k w_i \phi_{ik} = f_{Hi}^* \qquad (113)$$

By determining an inner product with the function $\phi_i$ and utilizing the orthogonality, we obtain:
[Formula 60]

$$c_k^* \lambda_k \sum_i \int_S w_i \phi_{ik} \cdot \phi_{ik} ds = \sum_i \int_S f_{Hi}^* \cdot \phi_{ik} ds \quad (114)$$

This allows the coefficient $c_k^*$ to be settled. By normalization of eq. (104), we obtain:
[Formula 61]

$$c_k^* = \frac{1}{\lambda_k}\sum_i \int_S f_{Hi}^* \cdot \phi_{ik} ds \qquad (115)$$

According to this, we find that the coefficient $c_k^*$ is settled by an inner product of the external force term $f_{Hi}^*$ and the primal eigenfunction $\phi_i$. By returning this to eq. (70) whereby the displacement $u_{Hj}^*$ is determined, and returning the $u_{Hj}^*$ to eq. (42), the displacement $u_j^*$ is determined. On the other hand, in the case where it is returned to eq. (113), the external force term $f_{Hi}^*$ is reconstructed, which is useful for verification. In other words, the solution method of eq. (115) is an eigenfunction method in the Hilbert space in which the displacement $u_{Hj}^*$ is expressed by the dual eigenfunction $\phi_i^*$, and the external force term $f_{Hi}^*$ is expressed by the primal eigenfunction $\phi_i$.

5.1.3 Dual principle

Here, watching FIG. 1 closely again, we find that in the structure like the two sides of the same coin, the original differential operator corresponds to the material of the coin, the homogeneous boundary condition corresponds to the base for patterns on the heads and tails sides of the coin, and eigenvalues and the primal and dual eigenfunctions existing inside play the leading roles in the solution method.

Further, if starting from the dual problem, the relationship that is similar but in a reverse direction is obtained. Therefore, this shows that the primal and dual eigenfunctions can be used in the reverse state for obtaining the solution. In other words, FIG. 1 demonstrates the dual principle of the simultaneous partial differential equations. The reason why

the word "dual" is put in the name lies in the above-described characteristic, i.e., "the structure like the two sides of the same coin, and usability in the reverse state".

5.2 Direct variation method and least squares method

A primal variation $\delta u_i$ and a dual variation $\delta u_i^*$ are given as follows, according to eqs. (24) and (42), respectively:
[Formula 62]

$$\delta u_i \equiv \delta u_{Bi} + \delta u_{Hi} = \delta u_{Hi} \quad (116)$$

$$\delta u_i^* \equiv \delta u_{Bi}^* + \delta u_{Hi}^* = \delta u_{Hi}^* \quad (117)$$

Since the term satisfying the inhomogeneous boundary condition is a known function, we use the following in the eqs.(116) and (117):
[Formula 63]

$$\delta u_{Bi} = 0 \quad (118)$$

$$\delta u_{Bi}^* = 0 \quad (119)$$

Consequently, according to eqs. (69), (116), and (70), (117), we obtain:
[Formula 64]

$$\delta u_i = \delta u_{Hi} \equiv \sum_k \delta c_k \phi_{ik} \quad (120)$$

$$\delta u_i^* = \delta u_{Hi}^* \equiv \sum_k \delta c_k^* \phi_{ik}^* \quad (121)$$

This is nothing but equations in which the primal variation $\delta u_i$ is expressed with the primal eigenfunction$\phi_i^*$, and the dual variation $\delta u_i^*$ is expressed with the dual eigenfunction $\phi_i^*$. Therefore, combining a plurality of procedures for obtaining an inner product with the function $\phi_i^*$, which is used in the process of obtaining eq. (110), is equivalent to obtaining an inner product with the dual variation $\delta u_i^*$ of eq. (121). In other words, the following is established:
[Formula 65]

$$\sum_i \int_S \left( \sum_j L_{ij} u_j - f_i \right) \cdot \delta u_i^* ds = 0 \quad (122)$$

Conversely, by creating this equation with respect to a variety of $\delta u_i^*$, and solving simultaneous equations algebraically, the coefficient $c_k$ can be determined.

Further, in the case of the self-adjoint problem, in the primal eigenfunction $\phi_i$ and dual eigenfunction $\phi_i^*$ coincide with each other via eq. (107). Therefore, eqs. (120) and (121) become equivalent to each other, and eq. (122) is transformed to:
[Formula 66]

$$\sum_i \int_S \left( \sum_j L_{ij} u_j - f_i \right) \cdot \delta u_i ds = 0 \quad (123)$$

On the other hand, according to eqs. (105) and (120), we obtain a sum of differential coefficients of the primal variation $\delta u_i$, which is given as:

[Formula 67]

$$\sum_j L_{ij}\delta u_j = \sum_k \delta c_k \sum_j L_{ij}\phi_{jk} = \sum_k \delta c_k \lambda_k w_i \phi_{ik}^* \qquad (124)$$

With the primal and dual eigenfunctions in which the same weight w is used for the every component, we obtain the following definition:

[Formula 68]

$$\delta c_k^* \equiv \delta c_k \lambda_k w_i, \quad w_i = w \qquad (125)$$

Therefore, according to eqs. (121), (124), and (125), we recognize the dual variation $\delta u_i^*$ as:

[Formula 69]

$$\delta u_i^* = \sum_j L_{ij}\delta u_j = \delta \sum_j L_{ij} u_j \qquad (126)$$

By substituting this equation into eq. (122), we obtain:

[Formula 70]

$$\sum_i \int_S \left( \sum_j L_{ij} u_j - f_i \right) \cdot \delta \sum_j L_{ij} u_j ds = 0 \qquad (127)$$

In the case where $f_i$ are dealt with as known external forces, what expressed by the equation (127) is equivalent to a case where a functional $\Pi$ is given as the following and variation thereof is zero:

[Formula 71]

$$\Pi \equiv \sum_i \int_S \left( \sum_j L_{ij} u_j - f_i \right)^2 ds \qquad (128)$$

In other words, this shows that the least squares method is the variational principle. It should be noted that eqs. (122), (123), and (127) show the direct variational methods, and eq. (127) is equivalent to eq. (122) in the case of the non-self-adjoint problem, and is equivalent to eq. (123) in the case of the self-adjoint problem.

6. Energy principle in theory of elasticity

A problem for which a body force is specified as known quantity is discussed. According to eq. (128), basically, the least squares method is the variation principle, with respect to all of problems.

Focusing on the boundary term $R_E$ of eq. (91), we find that such a condition that

$$p_{Ei} = 0 \quad or \quad \phi_i = 0 \qquad (129)$$

is satisfied on a boundary surface is a self-adjoint boundary condition. In other words, a problem such that either one of the surface force and the displacement is given for each of x and y direction component is a self-adjoint problem. Therefore, in this case, eq. (123) may be used. A total strain energy U per unit thickness is given as:

[Formula 72]

$$U \equiv \frac{1}{2}\int_S \left(\sigma_x \varepsilon_x + \sigma_y \varepsilon_y + \tau_{xy}\gamma_{xy}\right) ds \qquad (130)$$

and its variation δU is given as:
[Formula 73]

$$\delta U \equiv \int_S \left(\sigma_x \delta\varepsilon_x + \sigma_y \delta\varepsilon_y + \tau_{xy}\delta\gamma_{xy}\right) ds \qquad (131)$$

By transforming eq. (123) and using this equation, we obtain:
[Formula 74]

$$\delta U = \int_C \left(p_x \delta u_x + p_y \delta u_y\right) dc + \int_S \left(b_x \delta u_x + b_y \delta u_y\right) ds \qquad (132)$$

Though this is in the same format as that of the principle of virtual work, it is eq. (123) itself, and hence, it should be recognized as the direct variational method. Let an area obtained by removing the field having a known displacement from the boundary surface be $c_p$. Then, on $c_p$, the surface force is a known value. Therefore, what expressed by eq.(132) is equivalent to a case where a functional Π is given as the following and variation thereof is zero:
[Formula 75]

$$\Pi \equiv U - \int_{Cp} \left(p_x u_x + p_y u_y\right) dc - \int_S \left(b_x u_x + b_y u_y\right) ds \qquad (133)$$

This is the principle of minimum potential energy.
The Clapeyron's theorem, which represents the energy conservation law, is given as:
[Formula 76]

$$U = \frac{1}{2}\int_C \left(p_x u_x + p_y u_y\right) dc + \frac{1}{2}\int_S \left(b_x u_x + b_y u_y\right) ds \qquad (134)$$

When variations are set herein, we obtain:
[Formula 77]

$$\delta U = \frac{1}{2}\int_C \delta\left(p_x u_x + p_y u_y\right) dc + \frac{1}{2}\int_S \delta\left(b_x u_x + b_y u_y\right) ds \qquad (135)$$

According to this equation and eq. (132), we obtain:
[Formula 78]

$$\delta U = \int_C \left(u_x \delta p_x + u_y \delta p_y\right) dc + \int_S \left(u_x \delta b_x + u_y \delta b_y\right) ds \qquad (136)$$

Though this is in the same format as that of the principle of complementary virtual work, it is a result obtained by applying the energy conservation law to eq. (123), and hence, it should be recognized as another format of the direct variational method. Let an area obtained by removing the field having a known surface force from the boundary surface be Cu. Then, on Cu, the displacement is a known value.
Therefore, what expressed by eq.(136) is equivalent to a case where a functional Π is given as the following and variation thereof is zero:
[Formula 79]

$$\Pi \equiv U - \int_{Cu} \left(p_x u_x + p_y u_y\right) dc \quad (137)$$

This is the principle of minimum work.

7. Conclusion

(1) The simultaneous partial differential equation (23) can be solved by the eigenfunction method of eq. (111). According to eq. (128), the least squares method is the variation principle. In the case of the non-self-adjoint problem, eqs. (122) and (127) function as the direct variational method, and in the case of the self-adjoint problem, eqs. (123) and (127) function as the direct variational method.

(2) Since the variation $\delta u_i$ in eq. (123) is formed with self-adjoint eigenfunctions, it is a variation with respect to a displacement that satisfies both of the geometric boundary condition and the mechanical boundary condition. On the other hand, in the principle of virtual work, which is in the same format as that of eq. (123) coincidentally, $\delta u_i$ is referred to as a virtual displacement in "all of functions satisfying the geometric boundary condition". Since it is not appropriate to use the variation sign $\delta$ in a function that does not necessarily satisfy the mechanical boundary condition, if the virtual displacement is written as $\delta\tilde{\ } u_i$, then, the principle of virtual work is given as:

[Formula 80]

$$\sum_i \int_S \left( \sum_j L_{ij} u_j - f_i \right) \cdot \tilde{\delta} u_i \, ds = 0 \quad (138)$$

This is nothing but the method of weighted residual. Generally, a variation operation using this equation in which $\delta\tilde{\ } u_i$ and $\delta u_i$ are regarded as identical is performed, and a mechanical boundary condition and a differential equation are obtained. However, this is benefit by eq. (123).

(3) Once the benefit of eq. (123) is considered effects by the principle of virtual work and is placed at the basis of the system of dynamics, nothing but a self-adjoint problem can be dealt with. Even if a problem is a non-self-adjoint problem, the problem can be solved by a function of the method of weighted residual in some cases. Therefore, this issue is hardly noticeable. Ambiguous parts of the principle of virtual work should be reconsidered on the basis of the present chapter (1), particularly eq. (122). With this, various types of dynamics such as the theory of elasticity can be expected to be reconstructed into a better system and achieve new development.

(4) Generally, a linear elastic finite element is formulated by eq. (132), but with respect to an h-element, an operation of a variation is not performed. When the variation sign $\delta$ is removed from eq. (132) and the equation is multiplied by1/2, the obtained equation becomes in accordance with the energy conservation law of eq. (134), and the h-element is dealt with according to this. If an operation of a variation by eq. (123) is performed, an element equivalent to that of the p-method is obtained, and a new finite element can be configured by eqs. (122) and (127).

8. New finite element

8.1 Shape function

For example, let node numbers of a 16-nodes quadrilateral element be expressed as shown in FIG. 8. Then, we obtain the following shape functions $N_i$ (i=1 to 16) thereof:

[Formula 81]

$$N_1 \equiv -\frac{1}{12}(\xi - 1)(\eta - 1)(4\xi^3 - \xi + 4\eta^3 - \eta + 3) \quad (139)$$

$$N_2 \equiv -\frac{1}{12}(\xi + 1)(\eta - 1)(4\xi^3 - \xi - 4\eta^3 + \eta - 3) \quad (140)$$

$$N_3 \equiv +\frac{1}{12}(\xi+1)(\eta+1)(4\xi^3-\xi+4\eta^3-\eta-3) \quad (141)$$

$$N_4 \equiv +\frac{1}{12}(\xi-1)(\eta+1)(4\xi^3-\xi-4\eta^3+\eta+3) \quad (142)$$

$$N_5 \equiv +\frac{2}{3}(\xi^2-1)\xi(2\xi-1)(\eta-1) \quad (143)$$

$$N_6 \equiv -\frac{1}{2}(\xi^2-1)(4\xi^2-1)(\eta-1) \quad (144)$$

$$N_7 \equiv +\frac{2}{3}(\xi^2-1)\xi(2\xi+1)(\eta-1) \quad (145)$$

$$N_8 \equiv -\frac{2}{3}(\xi+1)(\eta^2-1)\eta(2\eta-1) \quad (146)$$

$$N_9 \equiv +\frac{1}{2}(\xi+1)(\eta^2-1)(4\eta^2-1) \quad (147)$$

$$N_{10} \equiv -\frac{2}{3}(\xi+1)(\eta^2-1)\eta(2\eta+1) \quad (148)$$

$$N_{11} \equiv -\frac{2}{3}(\xi^2-1)\xi(2\xi+1)(\eta+1) \quad (149)$$

$$N_{12} \equiv +\frac{1}{2}(\xi^2-1)(4\xi^2-1)(\eta+1) \quad (150)$$

$$N_{13} \equiv -\frac{2}{3}(\xi^2-1)\xi(2\xi-1)(\eta+1) \quad (151)$$

$$N_{14} \equiv +\frac{2}{3}(\xi-1)(\eta^2-1)\eta(2\eta+1) \quad (152)$$

$$N_{15} \equiv -\frac{1}{2}(\xi-1)(\eta^2-1)(4\eta^2-1) \quad (153)$$

$$N_{16} \equiv +\frac{2}{3}(\xi-1)(\eta^2-1)\eta(2\eta-1) \quad (154)$$

These equations represent insides of boundaries when $\xi$ and $\eta$ are in the ranges indicated by the signs of inequality of the following expressions, and represent boundaries when $\xi$ and $\eta$ are in the ranges indicated by the equal

signs of the following expressions:

$$\begin{aligned} -1 \le \xi \le 1 \\ -1 \le \eta \le 1 \end{aligned} \qquad (155)$$

8.2 Coordinates inside element

With use of a shape function $N_i$ (i=1 to n~), a coordinate $x_j$ in the inside of an element is given as:
[Formula 82]

$$x_j \equiv \sum_{i=1}^{\tilde{n}} N_i X_{ij} \qquad (156)$$

$$\begin{Bmatrix} x \\ y \end{Bmatrix} \equiv \begin{Bmatrix} x_1 \\ x_2 \end{Bmatrix} \equiv \begin{bmatrix} N_1 & 0 & \cdots & N_{\tilde{n}} & 0 \\ 0 & N_1 & \cdots & 0 & N_{\tilde{n}} \end{bmatrix} \begin{Bmatrix} X_{11} \\ X_{12} \\ \vdots \\ X_{\tilde{n}1} \\ X_{\tilde{n}2} \end{Bmatrix} \qquad (157)$$

Given

$$n \equiv 2\tilde{n}, \qquad (158)$$

the foregoing equation is expressed with matrices as:

$$\underset{2\times 1}{\{x\}} \equiv \underset{2\times n}{[N]} \underset{n\times 1}{\{X\}} \qquad (159)$$

8. 3 Internal displacement of element

The displacement, which is to be a primal solution, is divided into a term representing a boundary displacement and a term such that the displacement becomes zero at boundary, and the terms are expressed as
[Formula 83]

$$u_x \equiv u_1 \equiv u_{A1} + u_{o1} \qquad (160)$$

$$u_y \equiv u_2 \equiv u_{A2} + u_{o2} \qquad (161)$$

The index A indicates that the term represents a boundary displacement, and the index o indicates that the term is such that the displacement becomes zero at boundary. They are combined into:
[Formula 84]

$$u_j \equiv u_{Aj} + u_{oj} \qquad (162)$$

This is expressed with matrices as follows:

$$\underset{2\times 1}{\{u\}} \equiv \underset{2\times 1}{\{u_A\}} + \underset{2\times 1}{\{u_o\}} \qquad (163)$$

With use of an interpolation function $\chi_{Ai}$ (i=1 to n ~), an internal displacement $u_{Aj}$ of the element is written as:
[Formula 85]

$$u_{Aj} \equiv \sum_{i=1}^{\tilde{n}} \chi_{Ai} U_{ij} \qquad (164)$$

$U_{ij}$ represents a nodal displacement. Here, as is the case with an isoparametric element, the interpolation function $\chi_{Ai}$ is caused to coincide with a shape function $N_i$. The details of the displacement are as follows:
[Formula 86]

$$\begin{Bmatrix} u_{A1} \\ u_{A2} \end{Bmatrix} \equiv \begin{bmatrix} \chi_{A1} & 0 & \cdots & \chi_{A\tilde{n}} & 0 \\ 0 & \chi_{A1} & \cdots & 0 & \chi_{A\tilde{n}} \end{bmatrix} \begin{Bmatrix} U_{11} \\ U_{12} \\ \vdots \\ U_{\tilde{n}1} \\ U_{\tilde{n}2} \end{Bmatrix} \qquad (165)$$

This is expressed with matrices as follows:

$$\underset{2\times 1}{\{u_A\}} \equiv \underset{2\times n}{[\chi_A]} \underset{n\times 1}{\{U\}} \qquad (166)$$

$u_{Aj}$ represents not only a displacement on the element boundary but also an internal displacement of the element, but there is no guarantee that this satisfies the differential equation. Since the ability of $u_{Aj}$ for representing the internal displacement distribution of an element is limited, only the ability of representing a displacement at an element boundary is expected to be reliable. In this sense, $u_{Aj}$ is referred to as a "boundary function". It is expected that an internal displacement of an element that is beyond representation by $u_{Aj}$ is corrected by $u_{oj}$. In this sense, $u_{oj}$ is referred to as a "correction function".

The correction function $u_{oj}$ is expressed with a sum of a trial function $\psi_{ok}$ (k=1 to $\ell$ ~ ) such that displacement at boundary is zero, which is written as:
[Formula 87]

$$u_{o1} \equiv \sum_{k=1}^{\tilde{\ell}} c_{ok1} \psi_{ok} \qquad (167)$$

$$u_{o2} \equiv \sum_{k=1}^{\tilde{\ell}} c_{ok2} \psi_{ok} \qquad (168)$$

They are combined into:

$$u_{oj} \equiv \sum_{k=1}^{\tilde{\ell}} c_{okj} \psi_{ok} \qquad (169)$$

The details of the correction function are as follows:

$$\begin{Bmatrix} u_{o1} \\ u_{o2} \end{Bmatrix} \equiv \begin{bmatrix} \psi_{o1} & 0 & \cdots & \psi_{o\tilde{\ell}} & 0 \\ 0 & \psi_{o1} & \cdots & 0 & \psi_{o\tilde{\ell}} \end{bmatrix} \begin{Bmatrix} c_{o11} \\ c_{o12} \\ \vdots \\ c_{o\tilde{\ell}1} \\ c_{o\tilde{\ell}2} \end{Bmatrix} \quad (170)$$

When the following is given:
[Formula 88]

$$\lambda \equiv 2\tilde{\ell}, \quad (171)$$

then, eq.(170) is expressed with matrices as:

$$\underset{2\times 1}{\{u_o\}} \equiv \underset{2\times \lambda}{[\psi_o]} \underset{\lambda\times 1}{\{c_o\}} \quad (172)$$

Consequently, we obtain:

$$\underset{2\times 1}{\{\bar{u}\}} \equiv \underset{2\times 1}{\{u_A\}} + \underset{2\times 1}{\{u_o\}} \equiv \underset{2\times n}{[\chi_A]} \underset{n\times 1}{\{U\}} + \underset{2\times \lambda}{[\psi_o]} \underset{\lambda\times 1}{\{c_o\}} \quad (173)$$

On the other hand, in eq. (24), a sum of the term $u_{Bj}$ satisfying the inhomogeneous boundary condition and the term $u_{Hj}$ satisfying the homogeneous boundary condition, represents a displacement $u_j$, which is to be a primal solution. This is expressed with matrices as follows:
[Formula 89]

$$\underset{2\times 1}{\{u\}} \equiv \underset{2\times 1}{\{u_B\}} + \underset{2\times 1}{\{u_H\}} \quad (174)$$

At the stage where a boundary condition is given, details thereof are determined.

8.4 Trial function

As the trial function $\psi_{ok}$ (k=1 to $\tilde{\ell}$), a function system such that a displacement at boundary is zero is used. For example, it may be the associated Legendre function, or the trigonometric function. In the case of the trigonometric function, let the function system be:
[Formula 90]

$$f_{si}(\xi) \equiv \sin\left\{(2i)\frac{\pi}{2}\xi\right\} \quad (175)$$

$$f_{ci}(\xi) \equiv \cos\left\{(2i-1)\frac{\pi}{2}\xi\right\} \quad (176)$$

$$g_{si}(\eta) \equiv \sin\left\{(2i)\frac{\pi}{2}\eta\right\} \quad (177)$$

$$g_{ci}(\eta) \equiv \cos\left\{(2i-1)\frac{\pi}{2}\eta\right\} \quad (178)$$

Then, a product of the same as follows is used as the trial function $\psi_{ok}$:

$$\begin{pmatrix} f_{si}(\xi) \\ f_{ci}(\xi) \end{pmatrix} \times \begin{pmatrix} g_{sj}(\xi) \\ g_{cj}(\eta) \end{pmatrix} \quad (179)$$

8. 5 Dual displacement

The dual displacement $u_{j*}$, which is to be a dual solution, is divided into a term representing a boundary displacement, and a term such that the displacement is zero at boundary, and is written as:
[Formula 91]

$$u_j^* \equiv u_{Aj}^* + u_{oj}^* \quad (180)$$

This is expressed with matrices as follows:

$$\underset{2\times 1}{\{u^*\}} \equiv \underset{2\times 1}{\{u_A^*\}} + \underset{2\times 1}{\{u_o^*\}} \quad (181)$$

With use of an interpolation function $\chi_{Ai}$, an internal displacement $u^*_{Aj}$ in an element is written as:

$$u_{Aj}^* \equiv \sum_{i=1}^{ñ\%} \chi_{Ai} U_{ij}^* \quad (182)$$

$U_{ij*}$ represents a nodal displacement. Here, like the method currently used for isoparametric element, the shape function $N_i$ is adopted as the interpolation function $\chi_{Ai}$. The details of the displacement are as follows:

$$\begin{Bmatrix} u_{A1}^* \\ u_{A2}^* \end{Bmatrix} \equiv \begin{bmatrix} \chi_{A1} & 0 & \Lambda & \chi_{Añ\%} & 0 \\ 0 & \chi_{A1} & \Lambda & 0 & \chi_{Añ\%} \end{bmatrix} \begin{Bmatrix} U_{11}^* \\ U_{12}^* \\ M \\ U_{ñ1}^* \\ U_{ñ2}^* \end{Bmatrix} \quad (183)$$

This is expressed with matrices as follows:
[Formula 92]

$$\underset{2\times 1}{\{u_A^*\}} \equiv \underset{2\times n}{[\chi_A]} \underset{n\times 1}{\{U^*\}} \quad (184)$$

The correction function $u_{oj}^*$ is expressed with a sum of a trial function $\psi_{ok}$ (k=1 to $\ell \sim$), which is written as:
[Formula 93]

$$u_{o1}^{*} \equiv \sum_{k=1}^{\%} c_{ok1}^{*} \psi_{ok} \qquad (185)$$

$$u_{o2}^{*} \equiv \sum_{k=1}^{\%} c_{ok2}^{*} \psi_{ok} \qquad (186)$$

They are combined into:

$$u_{oj}^{*} \equiv \sum_{k=1}^{\%} c_{okj}^{*} \psi_{ok} \qquad (187)$$

The details of the correction function are as follows:

$$\begin{Bmatrix} u_{o1}^{*} \\ u_{o2}^{*} \end{Bmatrix} \equiv \begin{bmatrix} \psi_{o1} & 0 & \Lambda & \psi_{o\%} & 0 \\ 0 & \psi_{o1} & \Lambda & 0 & \psi_{o\%} \end{bmatrix} \begin{Bmatrix} c_{o11}^{*} \\ c_{o12}^{*} \\ M \\ c_{o\%1}^{*} \\ c_{o\%2}^{*} \end{Bmatrix} \qquad (188)$$

This equation is expressed with matrices as follows:

$$\underset{2\times 1}{\left\{u_{o}^{*}\right\}} \equiv \underset{2\times\lambda}{\left[\psi_{o}\right]} \underset{\lambda\times 1}{\left\{c_{o}^{*}\right\}} \qquad (189)$$

Consequently, we obtain:

$$\underset{2\times 1}{\left\{u^{*}\right\}} \equiv \underset{2\times 1}{\left\{u_{A}^{*}\right\}} + \underset{2\times 1}{\left\{u_{o}^{*}\right\}} \equiv \underset{2\times n}{\left[\chi_{A}\right]} \underset{n\times 1}{\left\{U^{*}\right\}} + \underset{2\times\lambda}{\left[\psi_{o}\right]} \underset{\lambda\times 1}{\left\{c_{o}^{*}\right\}} \qquad (190)$$

On the other hand, in eq. (42), a sum of the term $u_{Bj^*}$ satisfying the inhomogeneous adjoint boundary condition and the term $u_{Hj^*}$ satisfying the homogeneous adjoint boundary condition, represents a dual displacement $u_{j^*}$. This is expressed with matrices as follows:
[Formula 94]

$$\underset{2\times 1}{\left\{u^{*}\right\}} \equiv \underset{2\times 1}{\left\{u_{B}^{*}\right\}} + \underset{2\times 1}{\left\{u_{H}^{*}\right\}} \qquad (191)$$

At the stage where a boundary condition is given, details thereof are determined.

8. 6 Equivalent nodal force

From eqs. (4) to (6), a strain component is given as:

$$\begin{Bmatrix} \varepsilon_x \\ \varepsilon_y \\ \gamma_{xy} \end{Bmatrix} \equiv \begin{bmatrix} 1 & 0 & 0 & 0 \\ 0 & 0 & 0 & 1 \\ 0 & 1 & 1 & 0 \end{bmatrix} \begin{Bmatrix} \frac{\partial}{\partial x} u_x \\ \frac{\partial}{\partial x} u_y \\ \frac{\partial}{\partial y} u_x \\ \frac{\partial}{\partial y} u_y \end{Bmatrix} \qquad (192)$$

This is expressed with matrices as follows:

$$\underset{3\times 1}{\{\varepsilon\}} \equiv \underset{3\times 4}{[d]} \underset{4\times 1}{\{Du\}} \qquad (193)$$

From eqs. (7) to (9), a stress component is given as:
[Formula 95]

$$\begin{Bmatrix} \sigma_x \\ \sigma_y \\ \tau_{xy} \end{Bmatrix} = G \begin{bmatrix} \mu+1 & \mu-1 & 0 \\ \mu-1 & \mu+1 & 0 \\ 0 & 0 & 1 \end{bmatrix} \begin{Bmatrix} \varepsilon_x \\ \varepsilon_y \\ \gamma_{xy} \end{Bmatrix} \qquad (194)$$

This is expressed with matrices as follows:

$$\underset{3\times 1}{\{\sigma\}} = G \underset{3\times 3}{[\mu]} \underset{3\times 1}{\{\varepsilon\}} \qquad (195)$$

Consequently, we obtain:

$$\underset{3\times 1}{\{\sigma\}} = G \underset{3\times 3}{[\mu]} \underset{3\times 1}{\{\varepsilon\}} \equiv G \underset{3\times 3}{[\mu]} \underset{3\times 4}{[d]} \underset{4\times 1}{\{Du\}} \qquad (196)$$

This represents the stress component of eqs. (10) to (12). Calculating a coefficient matrix, we obtain:

$$\underset{3\times 3}{[\mu]} \underset{3\times 4}{[d]} = \begin{bmatrix} \mu+1 & \mu-1 & 0 \\ \mu-1 & \mu+1 & 0 \\ 0 & 0 & 1 \end{bmatrix} \begin{bmatrix} 1 & 0 & 0 & 0 \\ 0 & 0 & 0 & 1 \\ 0 & 1 & 1 & 0 \end{bmatrix} = \begin{bmatrix} \mu+1 & 0 & 0 & \mu-1 \\ \mu-1 & 0 & 0 & \mu+1 \\ 0 & 1 & 1 & 0 \end{bmatrix} \qquad (197)$$

A differential coefficient of the displacement is given as:
[Formula 96]

$$\underset{4\times 1}{\{Du\}} \equiv \begin{Bmatrix} \frac{\partial}{\partial x} u_x \\ \frac{\partial}{\partial x} u_y \\ \frac{\partial}{\partial y} u_x \\ \frac{\partial}{\partial y} u_y \end{Bmatrix} \equiv \begin{Bmatrix} \frac{\partial}{\partial x} \underset{2\times 1}{\{u_A\}} + \frac{\partial}{\partial x} \underset{2\times 1}{\{u_o\}} \\ \frac{\partial}{\partial y} \underset{2\times 1}{\{u_A\}} + \frac{\partial}{\partial y} \underset{2\times 1}{\{u_o\}} \end{Bmatrix} \equiv \begin{bmatrix} \frac{\partial}{\partial x} \underset{2\times n}{[\chi_A]} \\ \frac{\partial}{\partial y} \underset{2\times n}{[\chi_A]} \end{bmatrix} \underset{n\times 1}{\{U\}} + \begin{bmatrix} \frac{\partial}{\partial x} \underset{2\times \lambda}{[\psi_o]} \\ \frac{\partial}{\partial y} \underset{2\times \lambda}{[\psi_o]} \end{bmatrix} \underset{\lambda\times 1}{\{\varepsilon_o\}} \qquad (198)$$

Let the matrices on the right side of the equation be given as:
[Formula 97]

$$\underset{4\times n}{[D\chi_A]} \equiv \begin{bmatrix} \frac{\partial}{\partial x} \underset{2\times n}{[\chi_A]} \\ \frac{\partial}{\partial y} \underset{2\times n}{[\chi_A]} \end{bmatrix} \equiv \begin{bmatrix} \frac{\partial}{\partial x}\chi_{A1} & 0 & \Lambda & \frac{\partial}{\partial x}\chi_{An\%} & 0 \\ 0 & \frac{\partial}{\partial x}\chi_{A1} & \Lambda & 0 & \frac{\partial}{\partial x}\chi_{An\%} \\ \frac{\partial}{\partial y}\chi_{A1} & 0 & \Lambda & \frac{\partial}{\partial y}\chi_{An\%} & 0 \\ 0 & \frac{\partial}{\partial y}\chi_{A1} & \Lambda & 0 & \frac{\partial}{\partial y}\chi_{An\%} \end{bmatrix} \qquad (199)$$

and

$$\underset{4\times \lambda}{[D\psi_o]} \equiv \begin{bmatrix} \frac{\partial}{\partial x} \underset{2\times \lambda}{[\psi_o]} \\ \frac{\partial}{\partial y} \underset{2\times \lambda}{[\psi_o]} \end{bmatrix} \equiv \begin{bmatrix} \frac{\partial}{\partial x}\psi_{o1} & 0 & \Lambda & \frac{\partial}{\partial x}\psi_{o\%} & 0 \\ 0 & \frac{\partial}{\partial x}\psi_{o1} & \Lambda & 0 & \frac{\partial}{\partial x}\psi_{o\%} \\ \frac{\partial}{\partial y}\psi_{o1} & 0 & \Lambda & \frac{\partial}{\partial y}\psi_{o\%} & 0 \\ 0 & \frac{\partial}{\partial y}\psi_{o1} & \Lambda & 0 & \frac{\partial}{\partial y}\psi_{o\%} \end{bmatrix} \qquad (200)$$

Then, the differential coefficient of the displacement is expressed as:

$$\underset{4\times 1}{\{Du\}} \equiv \underset{4\times n}{[D\chi_A]} \underset{n\times 1}{\{U\}} + \underset{4\times \lambda}{[D\psi_o]} \underset{\lambda\times 1}{\{\varepsilon_o\}} \qquad (201)$$

The stress is given as:
[Formula 98]

$$\underset{3\times 1}{\{\sigma\}} \equiv G \underset{3\times 3}{[\mu]} \underset{3\times 4}{[d]} \underset{4\times 1}{\{Du\}} \equiv G \underset{3\times 3}{[\mu]} \underset{3\times 4}{[d]} \left( \underset{4\times n}{[D\chi_A]} \underset{n\times 1}{\{U\}} + \underset{4\times \lambda}{[D\psi_o]} \underset{\lambda\times 1}{\{\varepsilon_o\}} \right) (202)$$

The non-dimensional stress is given as:

$$\underset{3\times1}{\left\{\sigma/G\right\}} \equiv \underset{3\times3}{\left[\mu\right]}\underset{3\times4}{\left[d\right]}\underset{4\times1}{\left\{Du\right\}} \equiv \underset{3\times3}{\left[\mu\right]}\underset{3\times4}{\left[d\right]}\left(\underset{4\times n}{\left[D\chi_A\right]}\underset{n\times1}{\left\{U\right\}} + \underset{4\times\lambda}{\left[D\psi_o\right]}\underset{\lambda\times1}{\left\{c_o\right\}}\right) \quad (203)$$

The relationship between a surface force vector and a stress tensor is given as:

$$\begin{Bmatrix} p_x \\ p_y \end{Bmatrix} \equiv \begin{bmatrix} n_x & 0 & n_y \\ 0 & n_y & n_x \end{bmatrix} \begin{Bmatrix} \sigma_x \\ \sigma_y \\ \tau_{xy} \end{Bmatrix} \quad (204)$$

Let the following be given as:

$$\underset{2\times3}{\left[T\right]} \equiv \underset{2\times3}{\begin{bmatrix} n_x & 0 & n_y \\ 0 & n_y & n_x \end{bmatrix}} \quad (205)$$

Then, the relationship is expressed as:

$$\underset{2\times1}{\left\{p\right\}} \equiv \underset{2\times3}{\left[T\right]}\underset{3\times1}{\left\{\sigma\right\}} \quad (206)$$

Therefore, the surface force vector is given as:

$$\underset{2\times1}{\left\{p\right\}} \equiv \underset{2\times3}{\left[T\right]}\underset{3\times1}{\left\{\sigma\right\}} \equiv G\underset{2\times3}{\left[T\right]}\underset{3\times3}{\left[\mu\right]}\underset{3\times4}{\left[d\right]}\left(\underset{4\times n}{\left[D\chi_A\right]}\underset{n\times1}{\left\{U\right\}} + \underset{4\times\lambda}{\left[D\psi_o\right]}\underset{\lambda\times1}{\left\{c_o\right\}}\right) \quad (207)$$

[Formula 99]

A displacement on a boundary surface of an element is:

$$\underset{2\times1}{\left\{u_A\right\}} \equiv \underset{2\times n}{\left[\chi_A\right]}\underset{n\times1}{\left\{U\right\}} \quad (208)$$

The work wrk done by the surface force vector is:

$$wrk \equiv \frac{1}{2}\underset{1\times2}{\left\{U_A\right\}^T}\underset{2\times1}{\left\{p\right\}} \quad (209)$$

Therefore, we obtain:

$$wrk \equiv \frac{1}{2}G\underset{1\times n}{\left\{U\right\}^T}\underset{n\times2}{\left[\chi_A\right]^T}\underset{2\times3}{\left[T\right]}\underset{3\times3}{\left[\mu\right]}\underset{3\times4}{\left[d\right]}\left(\underset{4\times n}{\left[D\chi_A\right]}\underset{n\times1}{\left\{U\right\}} + \underset{4\times\lambda}{\left[D\psi_o\right]}\underset{\lambda\times1}{\left\{c_o\right\}}\right) \quad (210)$$

The integration on the boundary of the element gives work per unit thickness as follows:

$$\int_C wrk\, dc \equiv \frac{1}{2}G\underset{1\times n}{\left\{U\right\}^T}\left(\underset{n\times n}{\left[K_U\right]}\underset{n\times1}{\left\{U\right\}} + \underset{n\times\lambda}{\left[K_o\right]}\underset{\lambda\times1}{\left\{c_o\right\}}\right) \quad (211)$$

where

$$\underset{n\times n}{\left[K_U\right]} \equiv \int_C \underset{n\times 2}{\left[\chi_A\right]}^T \underset{2\times 3}{\left[T\right]} \underset{3\times 3}{\left[\mu\right]} \underset{3\times 4}{\left[d\right]} \underset{4\times n}{\left[D\chi_A\right]} dc \qquad (212)$$

$$\underset{n\times \lambda}{\left[K_o\right]} \equiv \int_C \underset{n\times 2}{\left[\chi_A\right]}^T \underset{2\times 3}{\left[T\right]} \underset{3\times 3}{\left[\mu\right]} \underset{3\times 4}{\left[d\right]} \underset{4\times \lambda}{\left[D\psi_o\right]} dc \qquad (213)$$

Recognizing the inside in the parentheses on the right side of the equation (211) as an equivalent nodal force F per unit thickness, we obtain:

$$\underset{n\times 1}{\left\{F\right\}} \equiv G\left( \underset{n\times n}{\left[K_U\right]} \underset{n\times 1}{\left\{U\right\}} + \underset{n\times \lambda}{\left[K_o\right]} \underset{\lambda\times 1}{\left\{\varepsilon_o\right\}} \right) \qquad (214)$$

In the case where a plane stress state is dealt with, this equation is multiplied by a plate thickness h, and we obtain an equivalent nodal force given as:

$$\underset{n\times 1}{\left\{Fh\right\}} \equiv Gh\left( \underset{n\times n}{\left[K_U\right]} \underset{n\times 1}{\left\{U\right\}} + \underset{n\times \lambda}{\left[K_o\right]} \underset{\lambda\times 1}{\left\{\varepsilon_o\right\}} \right) \qquad (215)$$

Further, it is useful to recognize:

$$\underset{n\times 1}{\left\{F/G\right\}} \equiv \underset{n\times n}{\left[K_U\right]} \underset{n\times 1}{\left\{U\right\}} + \underset{n\times \lambda}{\left[K_o\right]} \underset{\lambda\times 1}{\left\{\varepsilon_o\right\}} \qquad (216)$$

8. 7 Dual equivalent nodal force

From eqs. (4) to (6), a strain component is given as:
[Formula 100]

$$\begin{Bmatrix} \varepsilon_x^* \\ \varepsilon_y^* \\ \gamma_{xy}^* \end{Bmatrix} \equiv \begin{bmatrix} 1 & 0 & 0 & 0 \\ 0 & 0 & 0 & 1 \\ 0 & 1 & 1 & 0 \end{bmatrix} \begin{Bmatrix} \frac{\partial}{\partial x} u_x^* \\ \frac{\partial}{\partial x} u_y^* \\ \frac{\partial}{\partial y} u_x^* \\ \frac{\partial}{\partial y} u_y^* \end{Bmatrix} \qquad (217)$$

This is expressed with matrices as follows:

$$\underset{3\times 1}{\left\{\varepsilon^*\right\}} \equiv \underset{3\times 4}{\left[d\right]} \underset{4\times 1}{\left\{Du^*\right\}} \qquad (218)$$

From eqs. (7) to (9), the stress component is given as:
[Formula 101]

$$\begin{Bmatrix} \sigma_x^* \\ \sigma_y^* \\ \tau_{xy}^* \end{Bmatrix} = G \begin{bmatrix} \mu+1 & \mu-1 & 0 \\ \mu-1 & \mu+1 & 0 \\ 0 & 0 & 1 \end{bmatrix} \begin{Bmatrix} \varepsilon_x^* \\ \varepsilon_y^* \\ \gamma_{xy}^* \end{Bmatrix} \qquad (219)$$

This is expressed with matrices as follows:

$$\underset{3\times 1}{\{\sigma^*\}} = G \underset{3\times 3}{[\mu]} \underset{3\times 1}{\{\varepsilon^*\}} \qquad (220)$$

Therefore, we obtain:

$$\underset{3\times 1}{\{\sigma^*\}} = G \underset{3\times 3}{[\mu]} \underset{3\times 1}{\{\varepsilon^*\}} \equiv G \underset{3\times 3}{[\mu]} \underset{3\times 4}{[d]} \underset{4\times 1}{\{Du^*\}} \qquad (221)$$

This represents the stress components of eqs. (10) to (12).

The differential coefficient of the displacement is given as:

[Formula 102]

$$\underset{4\times 1}{\{Du^*\}} \equiv \begin{Bmatrix} \frac{\partial}{\partial x} u_x^* \\ \frac{\partial}{\partial x} u_y^* \\ \frac{\partial}{\partial y} u_x^* \\ \frac{\partial}{\partial y} u_y^* \end{Bmatrix} \equiv \begin{Bmatrix} \frac{\partial}{\partial x} \underset{2\times 1}{\{u_A^*\}} + \frac{\partial}{\partial x} \underset{2\times 1}{\{u_o^*\}} \\ \frac{\partial}{\partial y} \underset{2\times 1}{\{u_A^*\}} + \frac{\partial}{\partial y} \underset{2\times 1}{\{u_o^*\}} \end{Bmatrix}$$

$$\equiv \begin{bmatrix} \frac{\partial}{\partial x} \underset{2\times n}{[\chi_A]} \\ \frac{\partial}{\partial y} \underset{2\times n}{[\chi_A]} \end{bmatrix} \underset{n\times 1}{\{U^*\}} + \begin{bmatrix} \frac{\partial}{\partial x} \underset{2\times \lambda}{[\psi_o]} \\ \frac{\partial}{\partial y} \underset{2\times \lambda}{[\psi_o]} \end{bmatrix} \underset{\lambda\times 1}{\{\xi_o^*\}} \qquad (222)$$

Using eqs. (199) and (200), we obtain:

$$\underset{4\times 1}{\{Du^*\}} \equiv \underset{4\times n}{[D\chi_A]} \underset{n\times 1}{\{U^*\}} + \underset{4\times \lambda}{[D\psi_o]} \underset{\lambda\times 1}{\{\xi_o^*\}} \qquad (223)$$

The stress is given as:

[Formula 103]

$$\underset{3\times 1}{\{\sigma^*\}} \equiv G \underset{3\times 3}{[\mu]} \underset{3\times 4}{[d]} \underset{4\times 1}{\{Du^*\}} \equiv G \underset{3\times 3}{[\mu]} \underset{3\times 4}{[d]} \left( \underset{4\times n}{[D\chi_A]} \underset{n\times 1}{\{U^*\}} + \underset{4\times \lambda}{[D\psi_o]} \underset{\lambda\times 1}{\{\xi_o^*\}} \right) \qquad (224)$$

The non-dimensional stress is given as:

$$\underset{3\times 1}{\{\sigma^*/G\}} \equiv \underset{3\times 3}{[\mu]} \underset{3\times 4}{[d]} \underset{4\times 1}{\{Du^*\}} \equiv \underset{3\times 3}{[\mu]} \underset{3\times 4}{[d]} \left( \underset{4\times n}{[D\chi_A]} \underset{n\times 1}{\{U^*\}} + \underset{4\times \lambda}{[D\psi_o]} \underset{\lambda\times 1}{\{\xi_o^*\}} \right) \qquad (225)$$

The relationship between the surface force vector and the stress tensor is given as:

$$\begin{Bmatrix} p_x^* \\ p_y^* \end{Bmatrix} \equiv \begin{bmatrix} n_x & 0 & n_y \\ 0 & n_y & n_x \end{bmatrix} \begin{Bmatrix} \sigma_x^* \\ \sigma_y^* \\ \tau_{xy}^* \end{Bmatrix} \qquad (226)$$

This is expressed as:

$$\underset{2\times 1}{\{p^*\}} \equiv \underset{2\times 3}{[T]} \underset{3\times 1}{\{\sigma^*\}} \qquad (227)$$

Therefore, the surface force vector is given as:

$$\underset{2\times 1}{\{p^*\}} \equiv \underset{2\times 3}{[T]} \underset{3\times 1}{\{\sigma^*\}} \equiv G \underset{2\times 3}{[T]} \underset{3\times 3}{[\mu]} \underset{3\times 4}{[d]} \left( \underset{4\times n}{[D\chi_A]} \underset{n\times 1}{\{U^*\}} + \underset{4\times \lambda}{[D\psi_o]} \underset{\lambda\times 1}{\{\xi_o^*\}} \right) \qquad (228)$$

A displacement in an element boundary surface is:
[Formula 104]

$$\underset{2\times 1}{\{u_A^*\}} \equiv \underset{2\times n}{[\chi_A]} \underset{n\times 1}{\{U^*\}} \qquad (229)$$

The work wrk* done by the surface force vector is:

$$wrk^* \equiv \frac{1}{2} \underset{1\times 2}{\{U_A^*\}^T} \underset{2\times 1}{\{p^*\}} \qquad (230)$$

Therefore, we obtain:

$$wrk^* \equiv \frac{1}{2} G \underset{1\times n}{\{U^*\}^T} \underset{n\times 2}{[\chi_A]^T} \underset{2\times 3}{[T]} \underset{3\times 3}{[\mu]} \underset{3\times 4}{[d]} \left( \underset{4\times n}{[D\chi_A]} \underset{n\times 1}{\{U^*\}} + \underset{4\times \lambda}{[D\psi_o]} \underset{\lambda\times 1}{\{\xi_o^*\}} \right) \qquad (231)$$

The integration on the boundary of the element and use of eqs. (212) and (213) gives the work per unit thickness as follows:

$$\int_C wrk^* \, dc \equiv \frac{1}{2} G \underset{1\times n}{\{U^*\}^T} \left( \underset{n\times n}{[K_U]} \underset{n\times 1}{\{U^*\}} + \underset{n\times \lambda}{[K_o]} \underset{\lambda\times 1}{\{\xi_o^*\}} \right) \qquad (232)$$

Recognizing the inside in the parentheses on the right side of the equation (232) as a dual equivalent nodal force F* per unit thickness, we obtain:

$$\underset{n\times 1}{\{F^*\}} \equiv G \left( \underset{n\times n}{[K_U]} \underset{n\times 1}{\{U^*\}} + \underset{n\times \lambda}{[K_o]} \underset{\lambda\times 1}{\{\xi_o^*\}} \right) \qquad (233)$$

In the case where a plane stress state is dealt with, this equation is multiplied by a plate thickness h, and we obtain a dual equivalent nodal force as follows:

$$\underset{n\times 1}{\left\{F^{*}h\right\}} \equiv Gh\left(\underset{n\times n}{\left[K_U\right]}\underset{n\times 1}{\left\{U^{*}\right\}} + \underset{n\times \lambda}{\left[K_o\right]}\underset{\lambda\times 1}{\left\{\xi_o^{*}\right\}}\right) \tag{234}$$

Further, it is also useful to recognize it as follows:

$$\underset{n\times 1}{\left\{F^{*}/G\right\}} \equiv \underset{n\times n}{\left[K_U\right]}\underset{n\times 1}{\left\{U^{*}\right\}} + \underset{n\times \lambda}{\left[K_o\right]}\underset{\lambda\times 1}{\left\{\xi_o^{*}\right\}} \tag{235}$$

8. 8 Integration on boundary

A specific procedure for executing integration on each side is as follows.
[Formula 105]
The differential of the length on each side is as follows:

$$dc \equiv \sqrt{(dx)^2 + (dy)^2} = \sqrt{\left(\frac{\partial x}{\partial \xi}d\xi + \frac{\partial x}{\partial \eta}d\eta\right)^2 + \left(\frac{\partial y}{\partial \xi}d\xi + \frac{\partial y}{\partial \eta}d\eta\right)^2} \tag{236}$$

(1) Giving $d\eta=0$ on a curve of $\eta$=Const., we obtain:

$$dc \equiv J_\xi d\xi \ ; \quad J_\xi \equiv \sqrt{\left(\frac{\partial x}{\partial \xi}\right)^2 + \left(\frac{\partial y}{\partial \xi}\right)^2} \tag{237}$$

Integration on the curve gives:

$$\begin{aligned} \underset{n\times n}{\left[K_U\right]} &\equiv \int_{-1}^{1} \underset{n\times 2}{\left[\chi_A\right]^T} \underset{2\times 3}{\left[T\right]} \underset{3\times 3}{\left[\mu\right]} \underset{3\times 4}{\left[d\right]} \underset{4\times n}{\left[D\chi_A\right]} J_\xi \, d\xi \\ \underset{n\times \lambda}{\left[K_o\right]} &\equiv \int_{-1}^{1} \underset{n\times 2}{\left[\chi_A\right]^T} \underset{2\times 3}{\left[T\right]} \underset{3\times 3}{\left[\mu\right]} \underset{3\times 4}{\left[d\right]} \underset{4\times \lambda}{\left[D\psi_o\right]} J_\xi \, d\xi \end{aligned} \tag{238}$$

(2) Giving $d\xi=0$ on a curve of $\xi$=Const., we obtain:

$$dc \equiv J_\eta d\eta \ ; \quad J_\eta \equiv \sqrt{\left(\frac{\partial x}{\partial \eta}\right)^2 + \left(\frac{\partial y}{\partial \eta}\right)^2} \tag{239}$$

Integration on the curve gives:

$$\begin{aligned} \underset{n\times n}{\left[K_U\right]} &\equiv \int_{-1}^{1} \underset{n\times 2}{\left[\chi_A\right]^T} \underset{2\times 3}{\left[T\right]} \underset{3\times 3}{\left[\mu\right]} \underset{3\times 4}{\left[d\right]} \underset{4\times n}{\left[D\chi_A\right]} J_\eta \, d\eta \\ \underset{n\times \lambda}{\left[K_o\right]} &\equiv \int_{-1}^{1} \underset{n\times 2}{\left[\chi_A\right]^T} \underset{2\times 3}{\left[T\right]} \underset{3\times 3}{\left[\mu\right]} \underset{3\times 4}{\left[d\right]} \underset{4\times \lambda}{\left[D\psi_o\right]} J_\eta \, d\eta \end{aligned} \tag{240}$$

8. 9 Strain energy

Internal strain energy eng of an element is given as:
[Formula 106]
(241)

$$eng \equiv \frac{1}{2} G \underset{1\times 4}{\{Du\}^T} \underset{4\times 3}{[d]^T} \underset{3\times 3}{[\mu]} \underset{3\times 4}{[d]} \underset{4\times 1}{\{Du\}} \tag{242}$$

Therefore, we obtain:

$$eng \equiv \frac{1}{2} G \left( \underset{1\times n}{\{U\}^T} \underset{n\times 4}{[D\chi_A]^T} + \underset{1\times \lambda}{\{\varepsilon_o\}^T} \underset{\lambda\times 4}{[D\psi_o]^T} \right) \underset{4\times 3}{[d]^T} \underset{3\times 3}{[\mu]} \underset{3\times 4}{[d]} \left( \underset{4\times n}{[D\chi_A]} \underset{n\times 1}{\{U\}} + \underset{4\times \lambda}{[D\psi_o]} \underset{\lambda\times 1}{\{\varepsilon_o\}} \right) \tag{243}$$

8. 10 Dual strain energy

Internal strain energy eng* in an element is given as:
[Formula 107]

$$eng^* \equiv \frac{1}{2} \underset{1\times 3}{\{\varepsilon^*\}^T} \underset{3\times 1}{\{\sigma^*\}} \tag{244}$$

which is given as:

$$eng^* \equiv \frac{1}{2} G \underset{1\times 4}{\{Du^*\}^T} \underset{4\times 3}{[d]^T} \underset{3\times 3}{[\mu]} \underset{3\times 4}{[d]} \underset{4\times 1}{\{Du^*\}} \tag{245}$$

Therefore, we obtain:

$$eng^* \equiv \frac{1}{2} G \left( \underset{1\times n}{\{U^*\}^T} \underset{n\times 4}{[D\chi_A]^T} + \underset{1\times \lambda}{\{\varepsilon_o^*\}^T} \underset{\lambda\times 4}{[D\psi_o]^T} \right) \underset{4\times 3}{[d]^T} \underset{3\times 3}{[\mu]} \underset{3\times 4}{[d]} \left( \underset{4\times n}{[D\chi_A]} \underset{n\times 1}{\{U^*\}} + \underset{4\times \lambda}{[D\psi_o]} \underset{\lambda\times 1}{\{\varepsilon_o^*\}} \right) \tag{246}$$

8. 11 Adjoint boundary condition

The displacement on a boundary surface is expressed by eq. (208), the dual displacement is expressed by eq. (229), the surface force is expressed by eq. (207), and the dual surface force is expressed by eq. (228). With use of these, the boundary term R of eq. (60) is given as:
[Formula 108]

$$\begin{aligned} R &\equiv \frac{1}{G} \sum_i \int_C \left( u_i^* p_i - u_i p_i^* \right) dc \\ &= \frac{1}{G} \int_C \left( \underset{1\times 2}{\{u_A^*\}^T} \underset{2\times 1}{\{p\}} - \underset{1\times 2}{\{u_A\}^T} \underset{2\times 1}{\{p^*\}} \right) dc \end{aligned} \tag{247}$$

The integration on the boundary of the element and the use of eqs. (212) and (213) gives:

$$R \equiv \underset{1\times n}{\{U^*\}^T} \left( \underset{n\times n}{[K_U]} \underset{n\times 1}{\{U\}} + \underset{n\times \lambda}{[K_o]} \underset{\lambda\times 1}{\{\varepsilon_o\}} \right) - \underset{1\times n}{\{U\}^T} \left( \underset{n\times n}{[K_U]} \underset{n\times 1}{\{U^*\}} + \underset{n\times \lambda}{[K_o]} \underset{\lambda\times 1}{\{\varepsilon_o^*\}} \right) \tag{248}$$

With use of eqs. (216) and (235) expressing the equivalent nodal force, this equation is given as:
[Formula 109]

$$R \equiv \underset{1\times n}{\{U^*\}^T} \underset{n\times 1}{\{F/G\}} - \underset{1\times n}{\{U\}^T} \underset{n\times 1}{\{F^*/G\}} \tag{249}$$

This is transformed into:

$$R \equiv \left\{ \underset{1\times n}{\{F/G\}^T} \quad \underset{1\times n}{\{-U\}^T} \right\} \left\{ \begin{matrix} \underset{n\times 1}{\{U^*\}} \\ \underset{n\times 1}{\{F^*/G\}} \end{matrix} \right\} \tag{250}$$

The nodal force F is divided into a known part $F_b$ and an unknown part $F_v$, and the nodal displacement U is divided into a known part $U_b$ and unknown part $U_v$. Accordingly, the dual nodal displacement U is divided into an unknown part $U_v^*$ and a known part $U_b^*$, and the dual nodal force F* is divided into an unknown part $F_{v*}$ and a known part $F_{b*}$. Consequently, we obtain:
[Formula 110]

$$R \equiv \left\{ \underset{1\times n_{F_b}}{\{F_b/G\}^T} \quad \underset{1\times n_{F_v}}{\{F_v/G\}^T} \quad \underset{1\times n_{U_b}}{\{-U_b\}^T} \quad \underset{1\times n_{U_v}}{\{-U_v\}^T} \right\} \left\{ \begin{matrix} \underset{n_{U_v^*}\times 1}{\{U_v^*\}} \\ \underset{n_{U_b^*}\times 1}{\{U_b^*\}} \\ \underset{n_{F_v^*}\times 1}{\{F_v^*/G\}} \\ \underset{n_{F_b^*}\times 1}{\{F_b^*/G\}} \end{matrix} \right\} \tag{251}$$

The respective numbers of the parts are as follows:

$$\begin{aligned} n_{U_v^*} &= n_{F_b} \\ n_{U_b^*} &= n_{F_v} \\ n_{F_v^*} &= n_{U_b} \\ n_{F_b^*} &= n_{U_v} \end{aligned} \tag{252}$$

These satisfy:
[Formula 111]

$$\begin{aligned} n &= n_{F_b} + n_{F_v} = n_{U_v^*} + n_{U_b^*} \\ &= n_{U_b} + n_{U_v} = n_{F_v^*} + n_{F_b^*} \end{aligned} \tag{253}$$

If the known parts $F_b$ and $U_b$ are replaced with zero, this means that the homogeneous boundary condition is given. Here, with such a condition that the boundary term R is zero, the homogeneous adjoint boundary condition is obtained. Consequently, we obtain:
[Formula 112]

$$\underset{n_{U_b^*}\times 1}{\{U_b^*\}} = \underset{n_{U_b^*}\times 1}{\{0\}} \tag{254}$$

$$\underset{n_{F_b^*}\times 1}{\{F_b^*/G\}} = \underset{n_{F_b^*}\times 1}{\{0\}} \tag{255}$$

In the case where the combination of the known parts $F_b$, $U_b$ and the combination of the known parts $F_{b^*}$, $U_{b^*}$ coincide, this is a self-adjoint boundary condition, and in the case where they do not coincide, this is a non-self-adjoint boundary condition.

8. 12 Primal trial function and primal eigenfunction

The definition formula (216) of the equivalent nodal force is transformed to the following equation:
[Formula 113]

$$\begin{bmatrix} \underset{n\times n}{[K_U]} & \underset{n\times n}{[-I]} & \underset{n\times \lambda}{[K_o]} \end{bmatrix} \begin{Bmatrix} \underset{n\times 1}{\{U\}} \\ \underset{n\times 1}{\{F/G\}} \\ \underset{\lambda\times 1}{\{c_o\}} \end{Bmatrix} = \underset{n\times 1}{\{0\}} \tag{256}$$

where [I] is a unit matrix. This equation represents the relationship that should be established among the nodal displacement U, the nodal force F, and the coefficient $C_o$. By combining the internal displacement of the element expressed by eq. (173) with eq.(256), we obtain:
[Formula 114]

$$\begin{bmatrix} \underset{n\times n}{[K_U]} & \underset{n\times n}{[-I]} & \underset{n\times \lambda}{[K_o]} \\ \underset{2\times n}{[\chi_A]} & \underset{2\times n}{[0]} & \underset{2\times \lambda}{[\psi_o]} \end{bmatrix} \begin{Bmatrix} \underset{n\times 1}{\{U\}} \\ \underset{n\times 1}{\{F/G\}} \\ \underset{\lambda\times 1}{\{c_o\}} \end{Bmatrix} = \begin{Bmatrix} \underset{n\times 1}{\{0\}} \\ \underset{2\times 1}{\{u\}} \end{Bmatrix} \tag{257}$$

By combining the known part $U_b$ of the nodal displacement U and the known part $F_b$ of the nodal force F, we define the nodal known part $s_b$ as:
[Formula 115]

$$\underset{n_b\times 1}{\{s_b\}} \equiv \begin{Bmatrix} \underset{n_{U_b}\times 1}{\{U_b\}} \\ \underset{n_{F_b}\times 1}{\{F_b/G\}} \end{Bmatrix} \tag{258}$$

The number $n_b$ of the same is given as:
[Formula 116]

$$n_b \equiv n_{U_b} + n_{F_b} \tag{259}$$

By combining the unknown part $U_v$ of the nodal displacement U and the unknown part $F_v$ of the nodal force F, we define the nodal unknown part $s_v$ as:
[Formula 117]

$$\underset{n_v\times 1}{\{s_v\}} \equiv \begin{Bmatrix} \underset{n_{U_v}\times 1}{\{U_v\}} \\ \underset{n_{F_v}\times 1}{\{F_v/G\}} \end{Bmatrix} \qquad (260)$$

The number $n_v$ of the same is given as:
[Formula 118]

$$n_v \equiv n_{U_v} + n_{F_v} \qquad (261)$$

Further, according to eqs.(253), (259), and (261), the following is given:
[Formula 119]

$$n_b + n_v = 2n \qquad (262)$$

When U and F in eq. (257) are rearranged in the order according to eqs. (258) and (260), the columns of the matrix parts are also rearranged as follows:
[Formula 120]

$$\begin{bmatrix} \underset{n\times n_b}{[K_b]} & \underset{n\times n_v}{[K_v]} & \underset{n\times\lambda}{[K_o]} \\ \underset{2\times n_b}{[Y_b]} & \underset{2\times n_v}{[Y_v]} & \underset{2\times\lambda}{[\psi_o]} \end{bmatrix} \begin{Bmatrix} \underset{n_b\times 1}{\{s_b\}} \\ \underset{n_v\times 1}{\{s_v\}} \\ \underset{\lambda\times 1}{\{\varepsilon_o\}} \end{Bmatrix} = \begin{Bmatrix} \underset{n\times 1}{\{0\}} \\ \underset{2\times 1}{\{u\}} \end{Bmatrix} \qquad (263)$$

Here, the matrix $[K_b]$ is obtained by extracting corresponding columns from the matrices [Ku] and [-I] in the order in which the known parts $U_b$ and $F_b$ are arranged, and similarly, the matrix $[K_v]$ is obtained by extracting corresponding columns from the matrix [Kv] and [-I] in the order in which the unknown parts $U_v$ and $F_v$ are arranged. Further, the matrices $[Y_b]$ and $[Y_v]$ are obtained in the following manner. With use of the unit matrix [I] and the zero matrix [O], the matrices $[\chi_A]$ and [0] of eq. (257) are recognized as:
[Formula 121]

$$\underset{2\times n}{[\chi_A]} \equiv \underset{2\times n}{[\chi_A]}\underset{n\times n}{[I]} \qquad (264)$$

$$\underset{2\times n}{[0]} \equiv \underset{2\times n}{[\chi_A]}\underset{n\times n}{[O]} \qquad (265)$$

Then, the operation of extracting columns from the matrix $[\chi_A]$ can be expressed as an operation of picking out columns from the matrix [I], and similarly, the operation of extracting columns from the matrix [0] can be expressed as an operation of picking out columns of the matrix [O]. The corresponding columns are extracted from the matrix [I] in the order in which the known part $U_b$ and the unknown part $U_v$ are arranged, thereby composing the matrices $[I_{Ub}]$ and $[I_{Uv}]$, respectively. Likewise, the corresponding columns are extracted from [O] in the order in which the known part $F_b$ and the unknown part $F_v$ are arranged, thereby composing the matrices $[O_{Fb}]$ and $[O_{Fv}]$, respectively.

Regarding eq. (264), we define:
[Formula 122]

$$\underset{2\times n_{U_b}}{\left[\chi_{A_b}\right]} \equiv \underset{2\times n}{\left[\chi_A\right]}\underset{n\times n_{U_b}}{\left[I_{U_b}\right]} \qquad (266)$$

$$\underset{2\times n_{U_v}}{\left[\chi_{A_v}\right]} \equiv \underset{2\times n}{\left[\chi_A\right]}\underset{n\times n_{U_v}}{\left[I_{U_v}\right]} \qquad (267)$$

Regarding eq. (265), we define:
[Formula 123]

$$\underset{2\times n_{F_b}}{\left[0\right]} \equiv \underset{2\times n}{\left[\chi_A\right]}\underset{n\times n_{F_b}}{\left[O_{F_b}\right]} \qquad (268)$$

$$\underset{2\times n_{F_v}}{\left[0\right]} \equiv \underset{2\times n}{\left[\chi_A\right]}\underset{n\times n_{F_v}}{\left[O_{F_v}\right]} \qquad (269)$$

Further, we define coefficient matrices as follows:
[Formula 124]

$$\underset{n\times n_b}{\left[c_b\right]} \equiv \left[\underset{n\times n_{U_b}}{\left[I_{U_b}\right]} \quad \underset{n\times n_{F_b}}{\left[O_{F_b}\right]}\right] \qquad (270)$$

$$\underset{n\times n_v}{\left[c_v\right]} \equiv \left[\underset{n\times n_{U_v}}{\left[I_{U_v}\right]} \quad \underset{n\times n_{F_v}}{\left[O_{F_v}\right]}\right] \qquad (271)$$

Then, we obtain the matrices $[Y_b]$ and $[Y_v]$ as follows:
[Formula 125]

$$\underset{2\times n_b}{\left[Y_b\right]} \equiv \left[\underset{2\times n_{U_b}}{\left[\chi_{A_b}\right]} \quad \underset{2\times n_{F_b}}{\left[0\right]}\right] = \underset{2\times n}{\left[\chi_A\right]}\left[\underset{n\times n_{U_b}}{\left[I_{U_b}\right]} \quad \underset{n\times n_{F_b}}{\left[O_{F_b}\right]}\right] = \underset{2\times n}{\left[\chi_A\right]}\underset{n\times n_b}{\left[c_b\right]} \qquad (272)$$

$$\underset{2\times n_v}{\left[Y_v\right]} \equiv \left[\underset{2\times n_{U_v}}{\left[\chi_{A_v}\right]} \quad \underset{2\times n_{F_v}}{\left[0\right]}\right] = \underset{2\times n}{\left[\chi_A\right]}\left[\underset{n\times n_{U_v}}{\left[I_{U_v}\right]} \quad \underset{n\times n_{F_v}}{\left[O_{F_v}\right]}\right] = \underset{2\times n}{\left[\chi_A\right]}\underset{n\times n_v}{\left[c_v\right]} \qquad (273)$$

Through the above-described operation, the matrices of eq. (263) are settled, and the displacement u inside the element is given as:
[Formula 126]

$$\underset{2\times 1}{\{u\}} = \underset{2\times n_b}{[Y_b]}\underset{n_b\times 1}{\{s_b\}} + \underset{2\times n_v}{[Y_v]}\underset{n_v\times 1}{\{s_v\}} + \underset{2\times\lambda}{[\psi_o]}\underset{\lambda\times 1}{\{c_o\}} \quad (274)$$

In this equation, the displacement u is expressed with the nodal known part $s_b$, the nodal unknown part $s_v$, and the unknown coefficient $c_o$. The upper part of eq.(263) indicates that the following relationship is established between the unknown parts $s_v$ and $c_o$ and the known part $s_b$:
[Formula 127]

$$\underset{n\times n_v}{[K_v]}\underset{n_v\times 1}{\{s_v\}} + \underset{n\times\lambda}{[K_o]}\underset{\lambda\times 1}{\{c_o\}} = -\underset{n\times n_b}{[K_b]}\underset{n_b\times 1}{\{s_b\}} \quad (275)$$

Therefore, we find that the unknown parts $s_v$ and $c_o$ can be organized better, and the total number of the unknown parts can be reduced.

Then, the unknown parts $s_v$ and $c_o$ are rearranged so as to constitute unknown parts $s_e$ and $s_h$, and in accordance with this, the columns of the matrices [$K_v$] and [Ko] are replaced so as to constitute matrices [$K_e$] and [$K_h$]. Likewise, columns of the matrices [$Y_v$] and [$\psi_0$] are replaced so as to constitute matrices [$Y_e$] and [$Y_h$]. As a result, eq. (263) is transformed to:
[Formula 128]

$$\begin{bmatrix} \underset{n\times n_b}{[K_b]} & \underset{n\times n}{[K_e]} & \underset{n\times n_h}{[K_h]} \\ \underset{2\times n_b}{[Y_b]} & \underset{2\times n}{[Y_e]} & \underset{2\times n_h}{[Y_h]} \end{bmatrix} \begin{Bmatrix} \underset{n_b\times 1}{\{s_b\}} \\ \underset{n\times 1}{\{s_e\}} \\ \underset{n_h\times 1}{\{s_h\}} \end{Bmatrix} = \begin{Bmatrix} \underset{n\times 1}{\{0\}} \\ \underset{2\times 1}{\{u\}} \end{Bmatrix} \quad (276)$$

The purpose of this procedure is to cause [$K_e$] to have an inverse matrix, thereby to eliminate the unknown part $s_e$. Therefore, [$K_e$] is a square matrix. According to eqs. (263) and (276), the number $n_h$ of the unknown part $s_h$ is given as:
[Formula 129]

$$n_h = \lambda - n + n_v \quad (277)$$

According to eq. (262), the number may also be given as:
[Formula 130]

$$n_h = \lambda + n - n_b \quad (278)$$

The unknown parts $s_e$ and $s_h$ are composed through the following steps.

(1) Among the unknown part $s_v$, unknown variables which are categorized as unknown part $s_e$, which are $n_{ve}$ in number, are collected in the first half of the unknown part $s_e$.
(2) Among the unknown part $c_o$, unknown variables which are categorized as unknown part $s_e$, which are noe in number, are collected in the latter half of the unknown part $s_e$.
(3) Among the unknown part $s_v$, unknown variables which are categorized as unknown part $s_h$, which are $n_{vh}$ in

number, are collected in the first half of the unknown part $s_h$.
(4) Among the unknown part $c_o$, unknown variables which are categorized as unknown part $s_h$, which are $n_{oh}$ in number, are collected in the latter half of the unknown part $s_h$.

In this way, the number of the unknown part $s_h$ is given as:
[Formula 131]

$$n_h = n_{vh} + n_{oh} \quad (279)$$

According to the steps (1) and (3), we obtain:
[Formula 132]

$$n_v = n_{ve} + n_{vh} \quad (280)$$

According to the steps (2) and (4), we obtain:
[Formula 133]

$$\lambda = n_{oe} + n_{oh} \quad (281)$$

According to eqs. (277), (279), (280), and (281), we obtain:
[Formula 134]

$$n_{ve} + n_{oe} = n \quad (282)$$

This indicates the number of the unknown part $s_e$ is n.
In the self-adjoint boundary condition, the following is satisfied:
[Formula 135]

$$n_b = n_v = n \quad (283)$$

Therefore, by substituting this equation into eq. (277) or eq. (278), we obtain:
[Formula 136]

$$n_h = \lambda \quad (284)$$

Further, according to eqs. (279), (281), and (284), we obtain:
[Formula 137]

$$n_{vh} = n_{oe} \quad (285)$$

Since the matrix $[Y_V]$ is expressed by eq. (273), the operation of extracting columns from the matrix $[Y_v]$ can be expressed by an operation of picking out columns of the matrix $[c_v]$. By extracting the columns from the matrix $[c_v]$ to compose $[c_{ve}]$ and $[c_{vh}]$, we define:
[Formula 138]

$$\underset{2\times n_{ve}}{\left[Y_{ve}\right]} \equiv \underset{2\times n}{\left[\chi_A\right]} \underset{n\times n_{ve}}{\left[c_{ve}\right]} \quad (286)$$

$$\underset{2\times n_{vh}}{\begin{bmatrix} Y_{vh} \end{bmatrix}} \equiv \underset{2\times n}{\begin{bmatrix} \chi_A \end{bmatrix}} \underset{n\times n_{vh}}{\begin{bmatrix} c_{vh} \end{bmatrix}} \qquad (287)$$

With use of the unit matrix [I], the matrix [$\psi_0$] of eq. (263) is recognized as:
[Formula 139]

$$\underset{2\times\lambda}{\begin{bmatrix} \psi_o \end{bmatrix}} \equiv \underset{2\times\lambda}{\begin{bmatrix} \psi_o \end{bmatrix}} \underset{\lambda\times\lambda}{\begin{bmatrix} I \end{bmatrix}} \qquad (288)$$

Then, the operation of extracting columns from the matrix [$\psi_0$] can be expressed as an operation of picking out columns from the matrix [I]. By extracting the columns from the matrix [I] to compose [$I_{oe}$] and [$I_{oh}$], we define:
[Formula 140]

$$\underset{2\times n_{oe}}{\begin{bmatrix} \psi_{oe} \end{bmatrix}} \equiv \underset{2\times\lambda}{\begin{bmatrix} \psi_o \end{bmatrix}} \underset{\lambda\times n_{oe}}{\begin{bmatrix} I_{oe} \end{bmatrix}} \qquad (289)$$

$$\underset{2\times n_{oh}}{\begin{bmatrix} \psi_{oh} \end{bmatrix}} \equiv \underset{2\times\lambda}{\begin{bmatrix} \psi_o \end{bmatrix}} \underset{\lambda\times n_{oh}}{\begin{bmatrix} I_{oh} \end{bmatrix}} \qquad (290)$$

Therefore, the matrices [$Y_e$], [$Y_h$] are given as:
[Formula 141]

$$\underset{2\times n}{\begin{bmatrix} Y_e \end{bmatrix}} \equiv \begin{bmatrix} \underset{2\times n_{ve}}{\begin{bmatrix} Y_{ve} \end{bmatrix}} & \underset{2\times n_{oe}}{\begin{bmatrix} \psi_{oe} \end{bmatrix}} \end{bmatrix} = \begin{bmatrix} \underset{2\times n}{\begin{bmatrix} \chi_A \end{bmatrix}} & \underset{2\times\lambda}{\begin{bmatrix} \psi_o \end{bmatrix}} \end{bmatrix} \begin{bmatrix} \underset{n\times n_{ve}}{\begin{bmatrix} c_{ve} \end{bmatrix}} & \underset{n\times n_{oe}}{\begin{bmatrix} 0 \end{bmatrix}} \\ \underset{\lambda\times n_{ve}}{\begin{bmatrix} 0 \end{bmatrix}} & \underset{\lambda\times n_{oe}}{\begin{bmatrix} I_{oe} \end{bmatrix}} \end{bmatrix} \qquad (291)$$

$$\underset{2\times n_h}{\begin{bmatrix} Y_h \end{bmatrix}} \equiv \begin{bmatrix} \underset{2\times n_{vh}}{\begin{bmatrix} Y_{vh} \end{bmatrix}} & \underset{2\times n_{oh}}{\begin{bmatrix} \psi_{oh} \end{bmatrix}} \end{bmatrix} = \begin{bmatrix} \underset{2\times n}{\begin{bmatrix} \chi_A \end{bmatrix}} & \underset{2\times\lambda}{\begin{bmatrix} \psi_o \end{bmatrix}} \end{bmatrix} \begin{bmatrix} \underset{n\times n_{vh}}{\begin{bmatrix} c_{vh} \end{bmatrix}} & \underset{n\times n_{oh}}{\begin{bmatrix} 0 \end{bmatrix}} \\ \underset{\lambda\times n_{vh}}{\begin{bmatrix} 0 \end{bmatrix}} & \underset{\lambda\times n_{oh}}{\begin{bmatrix} I_{oh} \end{bmatrix}} \end{bmatrix} \qquad (292)$$

Further, we define a function matrix as follows:
[Formula 142]

$$\underset{2\times(n+\lambda)}{\begin{bmatrix} \Gamma \end{bmatrix}} \equiv \begin{bmatrix} \underset{2\times n}{\begin{bmatrix} \chi_A \end{bmatrix}} & \underset{2\times\lambda}{\begin{bmatrix} \psi_o \end{bmatrix}} \end{bmatrix} \qquad (293)$$

We also define coefficient matrices as follows:
[Formula 143]

$$\underset{(n+\lambda)\times n}{\left[c_e\right]} \equiv \begin{bmatrix} \underset{n\times n_{ve}}{\left[c_{ve}\right]} & \underset{n\times n_{oe}}{\left[0\right]} \\ \underset{\lambda\times n_{ve}}{\left[0\right]} & \underset{\lambda\times n_{oe}}{\left[I_{oe}\right]} \end{bmatrix} \quad (294)$$

$$\underset{(n+\lambda)\times n_h}{\left[c_h\right]} \equiv \begin{bmatrix} \underset{n\times n_{vh}}{\left[c_{vh}\right]} & \underset{n\times n_{oh}}{\left[0\right]} \\ \underset{\lambda\times n_{vh}}{\left[0\right]} & \underset{\lambda\times n_{oh}}{\left[I_{oh}\right]} \end{bmatrix} \quad (295)$$

Then, the matrices $[Y_e]$ and $[Y_h]$ are given as:
[Formula 144]

$$\underset{2\times n}{\left[Y_e\right]} \equiv \underset{2\times(n+\lambda)}{\left[\Gamma\right]} \underset{(n+\lambda)\times n}{\left[c_e\right]} \quad (296)$$

$$\underset{2\times n_h}{\left[Y_h\right]} \equiv \underset{2\times(n+\lambda)}{\left[\Gamma\right]} \underset{(n+\lambda)\times n_h}{\left[c_h\right]} \quad (297)$$

When eq. (276) is separated, they are transformed to the following equations:
[Formula 145]

$$\underset{n\times n}{\left[K_e\right]} \underset{n\times 1}{\left\{s_e\right\}} = -\underset{n\times n_b}{\left[K_b\right]} \underset{n_b\times 1}{\left\{s_b\right\}} - \underset{n\times n_h}{\left[K_h\right]} \underset{n_h\times 1}{\left\{s_h\right\}} \quad (298)$$

$$\underset{2\times 1}{\left\{u\right\}} = \underset{2\times n_b}{\left[Y_b\right]} \underset{n_b\times 1}{\left\{s_b\right\}} + \underset{2\times n}{\left[Y_e\right]} \underset{n\times 1}{\left\{s_e\right\}} + \underset{2\times n_h}{\left[Y_h\right]} \underset{n_h\times 1}{\left\{s_h\right\}} \quad (299)$$

By solving the unknown part $s_e$ of eq. (298), we obtain:
[Formula 146]

$$\underset{n\times 1}{\left\{s_e\right\}} = -\underset{n\times n}{\left[K_e\right]}^{-1} \underset{n\times n_b}{\left[K_b\right]} \underset{n_b\times 1}{\left\{s_b\right\}} - \underset{n\times n}{\left[K_e\right]}^{-1} \underset{n\times n_h}{\left[K_h\right]} \underset{n_h\times 1}{\left\{s_h\right\}} \quad (300)$$

By substituting this equation into eq. (299), we obtain:
[Formula 147]

$$\underset{2\times 1}{\left\{u\right\}} = \left(\underset{2\times n_b}{\left[Y_b\right]} - \underset{2\times n}{\left[Y_e\right]} \underset{n\times n}{\left[K_e\right]}^{-1} \underset{n\times n_b}{\left[K_b\right]}\right) \underset{n_b\times 1}{\left\{s_b\right\}} + \left(\underset{2\times n_h}{\left[Y_h\right]} - \underset{2\times n}{\left[Y_e\right]} \underset{n\times n}{\left[K_e\right]}^{-1} \underset{n\times n_h}{\left[K_h\right]}\right) \underset{n_h\times 1}{\left\{s_h\right\}} \quad (301)$$

The first term is a function having the known part $s_b$, and becomes a displacement $\{u_B\}$ that satisfies the inhomogeneous boundary condition. The second term is a function having the unknown part $s_h$, and becomes a displacement $\{u_H\}$ that satisfies the homogeneous boundary condition. In other words, we define:
[Formula 148]

$$\underset{2\times n_b}{\left[\chi_B\right]} \equiv \underset{2\times n_b}{\left[Y_b\right]} - \underset{2\times n}{\left[Y_e\right]}\underset{n\times n}{\left[K_e\right]}^{-1}\underset{n\times n_b}{\left[K_b\right]} \qquad (302)$$

$$\underset{2\times n_h}{\left[\psi_h\right]} \equiv \underset{2\times n_h}{\left[Y_h\right]} - \underset{2\times n}{\left[Y_e\right]}\underset{n\times n}{\left[K_e\right]}^{-1}\underset{n\times n_h}{\left[K_h\right]} \qquad (303)$$

Then, we obtain:
[Formula 149]

$$\underset{2\times 1}{\{u_B\}} \equiv \underset{2\times n_b}{\left[\chi_B\right]}\underset{n_b\times 1}{\{s_b\}} \qquad (304)$$

$$\underset{2\times 1}{\{u_H\}} \equiv \underset{2\times n_h}{\left[\psi_h\right]}\underset{n_h\times 1}{\{s_h\}} \qquad (305)$$

And we find:
[Formula 150]

$$\underset{2\times 1}{\{u\}} = \underset{2\times 1}{\{u_B\}} + \underset{2\times 1}{\{u_H\}} \qquad (306)$$

This equation shows details of eq. (174), and we find that the displacement {u} is expressed with the displacement $\{u_B\}$ that satisfies the inhomogeneous boundary condition and the displacement $\{u_H\}$ that satisfies the homogeneous boundary condition.

According to eqs. (272), (296), and (302), the matrix $[\chi_B]$ is given as:
[Formula 151]

$$\underset{2\times n_b}{\left[\chi_B\right]} \equiv \underset{2\times n}{\left[\chi_A\right]}\underset{n\times n_b}{\left[c_b\right]} - \underset{2\times(n+\lambda)}{\left[\Gamma\right]}\underset{(n+\lambda)\times n}{\left[c_e\right]}\underset{n\times n}{\left[K_e\right]}^{-1}\underset{n\times n_b}{\left[K_b\right]} \qquad (307)$$

According to eq. (293), we find that the first term of this equation is given as:
[Formula 152]

$$\underset{2\times n}{\left[\chi_A\right]}\underset{n\times n_b}{\left[c_b\right]} = \left[\underset{2\times n}{\left[\chi_A\right]}\quad\underset{2\times\lambda}{\left[\psi_o\right]}\right]\begin{bmatrix}\underset{n\times n_b}{\left[c_b\right]}\\ \underset{\lambda\times n_b}{\left[0\right]}\end{bmatrix} = \underset{2\times(n+\lambda)}{\left[\Gamma\right]}\begin{bmatrix}\underset{n\times n_b}{\left[c_b\right]}\\ \underset{\lambda\times n_b}{\left[0\right]}\end{bmatrix} \qquad (308)$$

Focusing this, we can give the following:
[Formula 153]

$$\underset{(n+\lambda)\times n_b}{\left[H_b\right]} \equiv \begin{bmatrix} \underset{n\times n_b}{\left[c_b\right]} \\ \underset{\lambda\times n_b}{\left[0\right]} \end{bmatrix} - \underset{(n+\lambda)\times n}{\left[c_e\right]} \underset{n\times n}{\left[K_e\right]^{-1}} \underset{n\times n_b}{\left[K_b\right]} \quad (309)$$

Then, we obtain:
[Formula 154]

$$\underset{2\times n_b}{\left[\chi_B\right]} \equiv \underset{2\times(n+\lambda)}{\left[\Gamma\right]} \underset{(n+\lambda)\times n_b}{\left[H_b\right]} \quad (310)$$

According to eqs. (296), (297), and (303), the matrix $[\psi_h]$ is given as:
[Formula 155]

$$\underset{2\times n_h}{\left[\psi_h\right]} \equiv \underset{2\times(n+\lambda)}{\left[\Gamma\right]} \underset{(n+\lambda)\times n_h}{\left[c_h\right]} - \underset{2\times(n+\lambda)}{\left[\Gamma\right]} \underset{(n+\lambda)\times n}{\left[c_e\right]} \underset{n\times n}{\left[K_e\right]^{-1}} \underset{n\times n_h}{\left[K_h\right]} \quad (311)$$

The following is assumed:
[Formula 156]

$$\underset{(n+\lambda)\times n_h}{\left[H_h\right]} \equiv \underset{(n+\lambda)\times n_h}{\left[c_h\right]} - \underset{(n+\lambda)\times n}{\left[c_e\right]} \underset{n\times n}{\left[K_e\right]^{-1}} \underset{n\times n_h}{\left[K_h\right]} \quad (312)$$

Then, we obtain:
[Formula 157]

$$\underset{2\times n_h}{\left[\psi_h\right]} \equiv \underset{2\times(n+\lambda)}{\left[\Gamma\right]} \underset{(n+\lambda)\times n_h}{\left[H_h\right]} \quad (313)$$

According to eqs. (310) and (313), we find that the matrices $[\chi_B]$ and $[\psi_h]$ are separated into a function part $[\Gamma]$ and coefficient parts $[H_b]$ and $[H_h]$. Further, the displacement {u} is expressed as:
[Formula 158]

$$\underset{2\times 1}{\left\{u\right\}} = \underset{2\times 1}{\left\{u_B\right\}} + \underset{2\times 1}{\left\{u_H\right\}} = \underset{2\times n_b}{\left[\chi_B\right]} \underset{n_b\times 1}{\left\{s_b\right\}} + \underset{2\times n_h}{\left[\psi_h\right]} \underset{n_h\times 1}{\left\{s_h\right\}} \quad (314)$$

From this, we find that an arbitrary nodal known part $s_b$ composes a function that satisfies the inhomogeneous boundary condition, and an arbitrary unknown part $s_h$ composes a function that satisfies the homogeneous boundary condition. That the displacement $\{u_H\}$ satisfies the homogeneous boundary condition with respect to the unknown part $s_h$ is achieved by the effects of the matrix $[\psi_h]$. Therefore, let the coefficient vector be $\{e_h\}$, and we can give the primal eigenfunction $\{\phi\}$ as:

[Formula 159]

$$\underset{2\times 1}{\{\phi\}} \equiv \underset{2\times n_h}{[\psi_h]} \underset{n_h\times 1}{\{e_h\}} \qquad (315)$$

At the same time, we can give the variation {δϕ} as:
[Formula 160]

$$\underset{2\times 1}{\{\delta\phi\}} \equiv \underset{2\times n_h}{[\psi_h]} \underset{n_h\times 1}{\{\delta e_h\}} \qquad (316)$$

The matrix $[\psi_h]$, which plays an important role, is referred to as a "primal trial function".

8. 13 Dual trial function and dual eigenfunction

Transforming the definition formula (235) of the equivalent nodal force, we obtain the following equation:
[Formula 161]

$$\begin{bmatrix} \underset{n\times n}{[K_U]} & \underset{n\times n}{[-I]} & \underset{n\times\lambda}{[K_o]} \end{bmatrix} \begin{Bmatrix} \underset{n\times 1}{\{U^*\}} \\ \underset{n\times 1}{\{F^*/G\}} \\ \underset{\lambda\times 1}{\{c_o^*\}} \end{Bmatrix} = \underset{n\times 1}{\{0\}} \qquad (317)$$

This equation represents the relationship that should be established among the dual nodal displacement U*, the dual nodal force F*, and the coefficient $c_o$*. By combining an internal displacement u* of the element expressed by eq. (190) into eq.(317), we obtain:
[Formula 162]

$$\begin{bmatrix} \underset{n\times n}{[K_U]} & \underset{n\times n}{[-I]} & \underset{n\times\lambda}{[K_o]} \\ \underset{2\times n}{[\chi_A]} & \underset{2\times n}{[0]} & \underset{2\times\lambda}{[\psi_o]} \end{bmatrix} \begin{Bmatrix} \underset{n\times 1}{\{U^*\}} \\ \underset{n\times 1}{\{F^*/G\}} \\ \underset{\lambda\times 1}{\{c_o^*\}} \end{Bmatrix} = \begin{Bmatrix} \underset{n\times 1}{\{0\}} \\ \underset{2\times 1}{\{u^*\}} \end{Bmatrix} \qquad (318)$$

By combining the known part $U_b$* of the dual nodal displacement U* and the known part $F_b$* of the dual nodal force F*, we define the nodal known part $s_b$* as:
[Formula 163]

$$\underset{n_b^*\times 1}{\left\{ s_b^* \right\}} \equiv \left\{ \begin{matrix} \underset{1\times n_{U_b^*}}{\left\{ U_b^* \right\}} \\ \underset{1\times n_{F_b^*}}{\left\{ F_b^* / G \right\}} \end{matrix} \right\} \tag{319}$$

The number $n_b^*$ of the same is given as:
[Formula 164]

$$n_b^* \equiv n_{U_b^*} + n_{F_b^*} \tag{320}$$

By combining the unknown part $U_v^*$ of the dual nodal displacement $U^*$ and the unknown part $F_v^*$ of the dual nodal force $F^*$, we define the nodal unknown part $s_v^*$ as:
[Formula 165]

$$\underset{n_v^*\times 1}{\left\{ s_v^* \right\}} \equiv \left\{ \begin{matrix} \underset{1\times n_{U_v^*}}{\left\{ U_v^* \right\}} \\ \underset{1\times n_{F_v^*}}{\left\{ F_v^* / G \right\}} \end{matrix} \right\} \tag{321}$$

The number $n_v^*$ of the same is given as:
[Formula 166]

$$n_v^* \equiv n_{U_v^*} + n_{F_v^*} \tag{322}$$

Further, according to eqs. (253), (320), and (322), we find:
[Formula 167]

$$n_b^* + n_v^* = 2n \tag{323}$$

If U and F in eq. (318) are rearranged in the order according to eqs. (319) and (321), the columns of the matrix parts are also rearranged as follows:
[Formula 168]

$$\begin{bmatrix} \underset{n\times n_b^*}{\left[K_b^*\right]} & \underset{n\times n_v^*}{\left[K_v^*\right]} & \underset{n\times\lambda}{\left[K_o\right]} \\ \underset{2\times n_b^*}{\left[Y_b^*\right]} & \underset{2\times n_v^*}{\left[Y_v^*\right]} & \underset{2\times\lambda}{\left[\psi_o\right]} \end{bmatrix} \begin{Bmatrix} \underset{n_b^*\times 1}{\left\{s_b^*\right\}} \\ \underset{n_v^*\times 1}{\left\{s_v^*\right\}} \\ \underset{\lambda\times 1}{\left\{c_o^*\right\}} \end{Bmatrix} = \begin{Bmatrix} \underset{n\times 1}{\left\{0\right\}} \\ \underset{2\times 1}{\left\{u^*\right\}} \end{Bmatrix} \quad (324)$$

Here, the matrix [$K_b$*] is obtained by extracting corresponding columns from the matrices [Ku] and [-I] in the order in which the known parts $U_b$* and $F_b$* are arranged, and similarly, the matrix [$K_v$*] is obtained by extracting corresponding columns from the matrix [Kv] and [-I] in the order in which the unknown parts $U_v$* and $F_v$* are arranged. Further, the matrices [$Y_b$*] and [$Y_v$*] are obtained in the following manner. With use of the unit matrix [I] and the zero matrix [O], the matrices [$\chi_A$] and [0] of eq. (318) are recognized as:
[Formula 169]

$$\underset{2\times n}{\left[\chi_A\right]} \equiv \underset{2\times n}{\left[\chi_A\right]}\underset{n\times n}{\left[I\right]} \quad (325)$$

$$\underset{2\times n}{\left[0\right]} \equiv \underset{2\times n}{\left[\chi_A\right]}\underset{n\times n}{\left[O\right]} \quad (326)$$

Then, the operation of extracting columns from the matrix [$\chi_A$] can be expressed as an operation of picking out columns from the matrix [I], and similarly, the operation of extracting columns from the matrix [0] can be expressed as an operation of picking out columns of the matrix [O]. The corresponding columns are extracted from the matrix [I] in the order in which the known parts $U_b$* and the unknown parts $U_v$* are arranged, which thereby compose the matrices [$I_{Ub^*}$] and [$I_{Uv^*}$], respectively. Likewise, the corresponding columns are extracted from "O" in the order in which the known parts $F_b$* and the unknown parts $F_v$* are arranged, which thereby compose the matrices [$O_{Fb^*}$] and [$O_{Fv^*}$], respectively.

Regarding eq. (325), we define:
[Formula 170]

$$\underset{2\times n_{U_b^*}}{\left[\chi_{A_b^*}\right]} \equiv \underset{2\times n}{\left[\chi_A\right]}\underset{n\times n_{U_b^*}}{\left[I_{U_b^*}\right]} \quad (327)$$

$$\underset{2\times n_{U_v^*}}{\left[\chi_{A_v^*}\right]} \equiv \underset{2\times n}{\left[\chi_A\right]}\underset{n\times n_{U_v^*}}{\left[I_{U_v^*}\right]} \quad (328)$$

Regarding eq. (326), we define:
[Formula 171]

$$\underset{2\times n_{F_b^*}}{\left[0\right]} \equiv \underset{2\times n}{\left[\chi_A\right]}\underset{n\times n_{F_b^*}}{\left[O_{F_b^*}\right]} \quad (329)$$

$$\underset{2\times n_{F_v^*}}{\left[0\right]} \equiv \underset{2\times n}{\left[\chi_A\right]} \underset{n\times n_{F_v^*}}{\left[O_{F_v^*}\right]} \tag{330}$$

Further, we define coefficient matrices as follows:
[Formula 172]

$$\underset{n\times n_b^*}{\left[c_b^*\right]} \equiv \left[\underset{n\times n_{U_b^*}}{\left[I_{U_b^*}\right]} \quad \underset{n\times n_{F_b^*}}{\left[O_{F_b^*}\right]}\right] \tag{331}$$

$$\underset{n\times n_v^*}{\left[c_v^*\right]} \equiv \left[\underset{n\times n_{U_v^*}}{\left[I_{U_v^*}\right]} \quad \underset{n\times n_{F_v^*}}{\left[O_{F_v^*}\right]}\right] \tag{332}$$

Then, we obtain the matrices [$Y_b$*] and [$Y_v$*] as follows:
[Formula 173]

$$\underset{2\times n_b^*}{\left[Y_b^*\right]} \equiv \left[\underset{2\times n_{U_b^*}}{\left[\chi_{A_b^*}\right]} \quad \underset{2\times n_{F_b^*}}{\left[0\right]}\right] = \underset{2\times n}{\left[\chi_A\right]} \left[\underset{n\times n_{U_b^*}}{\left[I_{U_b^*}\right]} \quad \underset{n\times n_{F_b^*}}{\left[O_{F_b^*}\right]}\right] = \underset{2\times n}{\left[\chi_A\right]} \underset{n\times n_b^*}{\left[c_b^*\right]} \tag{333}$$

$$\underset{2\times n_v^*}{\left[Y_v^*\right]} \equiv \left[\underset{2\times n_{U_v^*}}{\left[\chi_{A_v^*}\right]} \quad \underset{2\times n_{F_v^*}}{\left[0\right]}\right] = \underset{2\times n}{\left[\chi_A\right]} \left[\underset{n\times n_{U_v^*}}{\left[I_{U_v^*}\right]} \quad \underset{n\times n_{F_v^*}}{\left[O_{F_v^*}\right]}\right] = \underset{2\times n}{\left[\chi_A\right]} \underset{n\times n_v^*}{\left[c_v^*\right]} \tag{334}$$

Through the above-described operation, the matrices of eq. (324) are settled, and the internal dual displacement u* of the element is given as:
[Formula 174]

$$\underset{2\times 1}{\left\{u^*\right\}} = \underset{2\times n_b^*}{\left[Y_b^*\right]} \underset{n_b^*\times 1}{\left\{s_b^*\right\}} + \underset{2\times n_v^*}{\left[Y_v^*\right]} \underset{n_v^*\times 1}{\left\{s_v^*\right\}} + \underset{2\times\lambda}{\left[\psi_o\right]} \underset{\lambda\times 1}{\left\{c_o^*\right\}} \tag{335}$$

In this equation, the dual displacement u* is expressed with the nodal known part $s_b^*$, the nodal unknown part $s_v^*$, and the unknown coefficient $c_o^*$. The upper part of eq.(324) indicates that the following relationship is established between the unknown parts $s_v^*$, $c_o^*$ and the known part $s_b$*:
[Formula 175]

$$\underset{n\times n_v^*}{\left[K_v^*\right]}\underset{n_v^*\times 1}{\left\{s_v^*\right\}}+\underset{n\times\lambda}{\left[K_o\right]}\underset{\lambda\times 1}{\left\{c_o^*\right\}}=-\underset{n\times n_b^*}{\left[K_b^*\right]}\underset{n_b^*\times 1}{\left\{s_b^*\right\}} \quad (336)$$

Therefore, we find that the unknown parts $s_v^*$ and $c_o^*$ can be organized better, and the total number of the unknown parts can be reduced.

Then, the unknown parts $s_v^*$ and $c_o^*$ are rearranged so as to constitute unknown parts $s_e^*$ and $s_h^*$, and in accordance with this, the columns of the matrices [$K_v$*] and [Ko] are replaced so as to constitute matrices [$K_e$*] and [$k_h$*]. Likewise, columns of the matrices [$Y_v$*] and [$\psi_0$] are replaced so as to constitute matrices [$Y_e$*] and [$Y_h$*]. As a result, eq. (324) is transformed to:

[Formula 176]

$$\begin{bmatrix} \underset{n\times n_b^*}{\left[K_b^*\right]} & \underset{n\times n}{\left[K_e^*\right]} & \underset{n\times n_h^*}{\left[K_h^*\right]} \\ \underset{2\times n_b^*}{\left[Y_b^*\right]} & \underset{2\times n}{\left[Y_e^*\right]} & \underset{2\times n_h^*}{\left[Y_h^*\right]} \end{bmatrix} \begin{Bmatrix} \underset{n_b^*\times 1}{\left\{s_b^*\right\}} \\ \underset{n\times 1}{\left\{s_e^*\right\}} \\ \underset{n_h^*\times 1}{\left\{s_h^*\right\}} \end{Bmatrix} = \begin{Bmatrix} \underset{n\times 1}{\left\{0\right\}} \\ \underset{2\times 1}{\left\{u^*\right\}} \end{Bmatrix} \quad (337)$$

The purpose of this procedure is to cause [$K_e$*] to have an inverse matrix, thereby to eliminate the unknown part $s_e$*. Therefore, [$K_e$*] is a square matrix. According to eqs. (324) and (337), the number $n_h$* of the unknown part $s_h$* is given as:

[Formula 177]

$$n_h^* = \lambda - n + n_v^* \quad (338)$$

According to eq. (323), the number may also be given as:

[Formula 178]

$$n_h^* = \lambda + n - n_b^* \quad (339)$$

The unknown parts $s_e$* and $s_h$* are composed through the following steps.

(1) Among the unknown part $s_v$*, unknown variables which are categorized as unknown part $s_e$*, which are $n_{ve}$* in number, are collected in the first half of the unknown part $s_e$*.

(2) Among the unknown part $c_o$*, unknown variables which are categorized as unknown part $s_e$*, which are $n_{oe}$* in number, are collected in the latter half of the unknown part $s_e$*.

(3) Among the unknown part $s_v$*, unknown variables which are categorized as unknown part $s_h$*, which are $n_{vh}$* in number, are collected in the first half of the unknown part $s_h$*.

(4) Among the unknown part $c_o$*, unknown variables which are categorized as unknown part $s_h$*, which are $n_{oh}$* in number, are collected in the latter half of the unknown part $s_h$*.

In this way, the number of the unknown part $s_h$ is given as:

[Formula 179]

$$n_h^* = n_{vh}^* + n_{oh}^* \quad (340)$$

According to the steps (1) and (3), we obtain:
[Formula 180]

$$n_v^* = n_{ve}^* + n_{vh}^* \tag{341}$$

According to the steps (2) and (4), we obtain:
[Formula 181]

$$\lambda = n_{oe}^* + n_{oh}^* \tag{342}$$

According to eqs. (338), (340), (341), and (342), we obtain:
[Formula 182]

$$n_{ve}^* + n_{oe}^* = n \tag{343}$$

This indicates the number of the unknown part $s_e$* is n.
In the self-adjoint boundary condition, the following is satisfied:
[Formula 183]

$$n_b^* = n_v^* = n \tag{344}$$

Therefore, by substituting this equation into eq. (338) or eq. (339), we obtain:
[Formula 184]

$$n_h^* = \lambda \tag{345}$$

Further, according to eqs. (340), (342), and (345), we obtain:
[Formula 185]

$$n_{vh}^* = n_{oe}^* \tag{346}$$

Since the matrix [$Y_v$*] is expressed by eq. (334), the operation of extracting columns from the matrix [$Y_v$*] can be expressed by an operation of picking out columns of the matrix [$c_v$*]. By extracting the columns from the matrix [$c_v$*] to compose [$c_{ve}$*] and [$c_{vh}$*], we define:
[Formula 186]

$$\underset{2\times n_{ve}^*}{\left[Y_{ve}^*\right]} \equiv \underset{2\times n}{\left[\chi_A\right]} \underset{n\times n_{ve}^*}{\left[c_{ve}^*\right]} \tag{347}$$

$$\underset{2\times n_{vh}^*}{\left[Y_{vh}^*\right]} \equiv \underset{2\times n}{\left[\chi_A\right]} \underset{n\times n_{vh}^*}{\left[c_{vh}^*\right]} \tag{348}$$

With use of the unit matrix [I], the matrix [$\psi_0$] of eq. (324) is recognized as:
[Formula 187]

$$\underset{2\times\lambda}{[\psi_o]} \equiv \underset{2\times\lambda}{[\psi_o]}\underset{\lambda\times\lambda}{[I]} \tag{349}$$

Then, the operation of extracting columns from the matrix [$\psi_0$] can be expressed as an operation of picking out columns from the matrix [I]. By extracting the columns from the matrix [I] to compose [$I_{oe}$*] and [$I_{oh}$*], we define:
[Formula 188]

$$\underset{2\times n_{oe}^*}{[\psi_{oe}^*]} \equiv \underset{2\times\lambda}{[\psi_o]}\underset{\lambda\times n_{oe}^*}{[I_{oe}^*]} \tag{350}$$

$$\underset{2\times n_{oh}^*}{[\psi_{oh}^*]} \equiv \underset{2\times\lambda}{[\psi_o]}\underset{\lambda\times n_{oh}^*}{[I_{oh}^*]} \tag{351}$$

Therefore, the matrices [$Y_e$*] and [$Y_h$*] are given as:
[Formula 189]

$$\underset{2\times n}{[Y_e^*]} \equiv \left[\underset{2\times n_{ve}^*}{[Y_{ve}^*]} \quad \underset{2\times n_{oe}^*}{[\psi_{oe}^*]}\right] = \left[\underset{2\times n}{[\chi_A]} \quad \underset{2\times\lambda}{[\psi_o]}\right]\begin{bmatrix} \underset{n\times n_{ve}^*}{[c_{ve}^*]} & \underset{n\times n_{oe}^*}{[0]} \\ \underset{\lambda\times n_{ve}^*}{[0]} & \underset{\lambda\times n_{oe}^*}{[I_{oe}^*]} \end{bmatrix} \tag{352}$$

$$\underset{2\times n_h^*}{[Y_h^*]} \equiv \left[\underset{2\times n_{vh}^*}{[Y_{vh}^*]} \quad \underset{2\times n_{oh}^*}{[\psi_{oh}^*]}\right] = \left[\underset{2\times n}{[\chi_A]} \quad \underset{2\times\lambda}{[\psi_o]}\right]\begin{bmatrix} \underset{n\times n_{vh}^*}{[c_{vh}^*]} & \underset{n\times n_{oh}^*}{[0]} \\ \underset{\lambda\times n_{vh}^*}{[0]} & \underset{\lambda\times n_{oh}^*}{[I_{oh}^*]} \end{bmatrix} \tag{353}$$

Further, we define coefficient matrices as follows:
[Formula 190]

$$\underset{(n+\lambda)\times n}{[c_e^*]} \equiv \begin{bmatrix} \underset{n\times n_{ve}^*}{[c_{ve}^*]} & \underset{n\times n_{oe}^*}{[0]} \\ \underset{\lambda\times n_{ve}^*}{[0]} & \underset{\lambda\times n_{oe}^*}{[I_{oe}^*]} \end{bmatrix} \tag{354}$$

$$\underset{(n+\lambda)\times n_h^*}{\left[c_h^*\right]} \equiv \begin{bmatrix} \underset{n\times n_{vh}^*}{\left[c_{vh}^*\right]} & \underset{n\times n_{oh}^*}{\left[0\right]} \\ \underset{\lambda\times n_{vh}^*}{\left[0\right]} & \underset{\lambda\times n_{oh}^*}{\left[I_{oh}^*\right]} \end{bmatrix} \qquad (355)$$

Then, the matrices $[Y_e^*]$ and $[Y_h^*]$ are given as:
[Formula 191]

$$\underset{2\times n}{\left[Y_e^*\right]} \equiv \underset{2\times(n+\lambda)}{\left[\Gamma\right]} \underset{(n+\lambda)\times n}{\left[c_e^*\right]} \qquad (356)$$

$$\underset{2\times n_h^*}{\left[Y_h^*\right]} \equiv \underset{2\times(n+\lambda)}{\left[\Gamma\right]} \underset{(n+\lambda)\times n_h^*}{\left[c_h^*\right]} \qquad (357)$$

Separating eq. (337), we obtain:
[Formula 192]

$$\underset{n\times n}{\left[K_e^*\right]} \underset{n\times 1}{\left\{s_e^*\right\}} = -\underset{n\times n_b^*}{\left[K_b^*\right]} \underset{n_b^*\times 1}{\left\{s_b^*\right\}} - \underset{n\times n_h^*}{\left[K_h^*\right]} \underset{n_h^*\times 1}{\left\{s_h^*\right\}} \qquad (358)$$

$$\underset{2\times 1}{\left\{u^*\right\}} = \underset{2\times n_b^*}{\left[Y_b^*\right]} \underset{n_b^*\times 1}{\left\{s_b^*\right\}} + \underset{2\times n}{\left[Y_e^*\right]} \underset{n\times 1}{\left\{s_e^*\right\}} + \underset{2\times n_h^*}{\left[Y_h^*\right]} \underset{n_h^*\times 1}{\left\{s_h^*\right\}} \qquad (359)$$

Solving the unknown part $s_e^*$ in eq. (358), we obtain:
[Formula 193]

$$\underset{n\times 1}{\left\{s_e^*\right\}} = -\underset{n\times n}{\left[K_e^*\right]}^{-1} \underset{n\times n_b^*}{\left[K_b^*\right]} \underset{n_b^*\times 1}{\left\{s_b^*\right\}} - \underset{n\times n}{\left[K_e^*\right]}^{-1} \underset{n\times n_h^*}{\left[K_h^*\right]} \underset{n_h^*\times 1}{\left\{s_h^*\right\}} \qquad (360)$$

By substituting this equation into eq. (359), we obtain:
[Formula 194]

$$\underset{2\times 1}{\left\{u^*\right\}} = \left( \underset{2\times n_b^*}{\left[Y_b^*\right]} - \underset{2\times n}{\left[Y_e^*\right]} \underset{n\times n}{\left[K_e^*\right]}^{-1} \underset{n\times n_b^*}{\left[K_b^*\right]} \right) \underset{n_b^*\times 1}{\left\{s_b^*\right\}} + \left( \underset{2\times n_h^*}{\left[Y_h^*\right]} - \underset{2\times n}{\left[Y_e^*\right]} \underset{n\times n}{\left[K_e^*\right]}^{-1} \underset{n\times n_h^*}{\left[K_h^*\right]} \right) \underset{n_h^*\times 1}{\left\{s_h^*\right\}} \qquad (361)$$

The first term is a function having the known part $s_b^*$, and becomes a displacement $\{u_B^*\}$ that satisfies the inhomogeneous adjoint boundary condition. The second term is a function having the unknown part $s_h^*$, and becomes

a displacement {$u_H$*} that satisfies the homogeneous adjoint boundary condition. In other words, we define:
[Formula 195]

$$\underset{2\times n_b^*}{\left[\chi_B^*\right]} \equiv \underset{2\times n_b^*}{\left[Y_b^*\right]} - \underset{2\times n}{\left[Y_e^*\right]}\underset{n\times n}{\left[K_e^*\right]^{-1}}\underset{n\times n_b^*}{\left[K_b^*\right]} \quad (362)$$

$$\underset{2\times n_h^*}{\left[\psi_h^*\right]} \equiv \underset{2\times n_h^*}{\left[Y_h^*\right]} - \underset{2\times n}{\left[Y_e^*\right]}\underset{n\times n}{\left[K_e^*\right]^{-1}}\underset{n\times n_h^*}{\left[K_h^*\right]} \quad (363)$$

Then, we obtain:
[Formula 196]

$$\underset{2\times 1}{\left\{u_B^*\right\}} \equiv \underset{2\times n_b^*}{\left[\chi_B^*\right]}\underset{n_b^*\times 1}{\left\{s_b^*\right\}} \quad (364)$$

$$\underset{2\times 1}{\left\{u_H^*\right\}} \equiv \underset{2\times n_h^*}{\left[\psi_h^*\right]}\underset{n_h^*\times 1}{\left\{s_h^*\right\}} \quad (365)$$

And we find:
[Formula 197]

$$\underset{2\times 1}{\left\{u^*\right\}} = \underset{2\times 1}{\left\{u_B^*\right\}} + \underset{2\times 1}{\left\{u_H^*\right\}} \quad (366)$$

This equation shows details of eq. (191), and we find that the displacement {u*} is expressed with the displacement {$u_B$*} that satisfies the inhomogeneous adjoint boundary condition and the displacement {$u_{H^*}$} that satisfies the homogeneous adjoint boundary condition.
According to eqs. (333), (356), and (362), the matrix [$\chi_B$*] is given as:
[Formula 198]

$$\underset{2\times n_b^*}{\left[\chi_B^*\right]} \equiv \underset{2\times n}{\left[\chi_A\right]}\underset{n\times n_b^*}{\left[c_b^*\right]} - \underset{2\times(n+\lambda)}{\left[\Gamma\right]}\underset{(n+\lambda)\times n}{\left[c_e^*\right]}\underset{n\times n}{\left[K_e^*\right]^{-1}}\underset{n\times n_b^*}{\left[K_b^*\right]} \quad (367)$$

According to eq. (293), we find that the first term of this equation is given as:
[Formula 199]

$$\underset{2\times n}{\left[\chi_A\right]}\underset{n\times n_b^*}{\left[c_b^*\right]} = \left[\underset{2\times n}{\left[\chi_A\right]} \quad \underset{2\times\lambda}{\left[\psi_o\right]}\right]\begin{bmatrix}\underset{n\times n_b^*}{\left[c_b^*\right]} \\ \underset{\lambda\times n_b^*}{\left[0\right]}\end{bmatrix} = \underset{2\times(n+\lambda)}{\left[\Gamma\right]}\begin{bmatrix}\underset{n\times n_b^*}{\left[c_b^*\right]} \\ \underset{\lambda\times n_b^*}{\left[0\right]}\end{bmatrix} \quad (368)$$

Focusing this, we can give the following:
[Formula 200]

$$\underset{(n+\lambda)\times n_b^*}{\left[H_b^*\right]} \equiv \begin{bmatrix}\underset{n\times n_b^*}{\left[c_b^*\right]} \\ \underset{\lambda\times n_b^*}{\left[0\right]}\end{bmatrix} - \underset{(n+\lambda)\times n}{\left[c_e^*\right]}\underset{n\times n}{\left[K_e^*\right]^{-1}}\underset{n\times n_b^*}{\left[K_b^*\right]} \quad (369)$$

Then, we obtain:
[Formula 201]

$$\underset{2\times n_b^*}{\left[\chi_B^*\right]} \equiv \underset{2\times(n+\lambda)}{\left[\Gamma\right]}\underset{(n+\lambda)\times n_b^*}{\left[H_b^*\right]} \quad (370)$$

According to eqs. (356), (357), and (363), the matrix [$\psi_h^*$] is given as:
[Formula 202]

$$\underset{2\times n_h^*}{\left[\psi_h^*\right]} \equiv \underset{2\times(n+\lambda)}{\left[\Gamma\right]}\underset{(n+\lambda)\times n_h^*}{\left[c_h^*\right]} - \underset{2\times(n+\lambda)}{\left[\Gamma\right]}\underset{(n+\lambda)\times n}{\left[c_e^*\right]}\underset{n\times n}{\left[K_e^*\right]^{-1}}\underset{n\times n_h^*}{\left[K_h^*\right]} \quad (371)$$

Assuming
[Formula 203]

$$\underset{(n+\lambda)\times n_h^*}{\left[H_h^*\right]} \equiv \underset{(n+\lambda)\times n_h^*}{\left[c_h^*\right]} - \underset{(n+\lambda)\times n}{\left[c_e^*\right]}\underset{n\times n}{\left[K_e^*\right]^{-1}}\underset{n\times n_h^*}{\left[K_h^*\right]}, \quad (372)$$

then, we obtain:
[Formula 204]

$$\underset{2\times n_h^*}{\left[\psi_h^*\right]} \equiv \underset{2\times(n+\lambda)}{\left[\Gamma\right]}\underset{(n+\lambda)\times n_h^*}{\left[H_h^*\right]} \quad (373)$$

According to eqs. (370) and (373), we find that the matrices [$\chi_B$*] and [$\psi_h$*] are separated into a function part [Γ] and coefficient parts [$H_b$*] and [$H_h$*]. Further, the displacement {u*} is expressed as:
[Formula 205]

$$\underset{2\times 1}{\left\{u^*\right\}} = \underset{2\times 1}{\left\{u_B^*\right\}} + \underset{2\times 1}{\left\{u_H^*\right\}} = \underset{2\times n_b^*}{\left[\chi_B^*\right]}\underset{n_b^*\times 1}{\left\{s_b^*\right\}} + \underset{2\times n_h^*}{\left[\psi_h^*\right]}\underset{n_h^*\times 1}{\left\{s_h^*\right\}} \qquad (374)$$

From this, we find that an arbitrary nodal known part $s_b$* composes a function that satisfies the inhomogeneous adjoint boundary condition, and an arbitrary unknown part $s_h$* composes a function that satisfies the homogeneous adjoint boundary condition. That the displacement {$u_H$*} satisfies the homogeneous adjoint boundary condition with respect to the unknown part $s_h$* is achieved by the effects of the matrix [$\psi_h$*] Therefore, let the coefficient vector be {$e_h$*}, and we can give the dual eigenfunction {ϕ*} as:
[Formula 206]

$$\underset{2\times 1}{\left\{\phi^*\right\}} \equiv \underset{2\times n_h^*}{\left[\psi_h^*\right]}\underset{n_h^*\times 1}{\left\{e_h^*\right\}} \qquad (375)$$

At the same time, we can give the variation {δϕ*} as:
[Formula 207]

$$\underset{2\times 1}{\left\{\delta\phi^*\right\}} \equiv \underset{2\times n_h^*}{\left[\psi_h^*\right]}\underset{n_h^*\times 1}{\left\{\delta e_h^*\right\}} \qquad (376)$$

The matrix [$\psi_h$*], which plays an important role, is referred to as a " dual trial function ".

8. 14 Relationship of numbers

**[0311]** According to eqs. (259), (320), and (252), we obtain:
[Formula 208]

$$\begin{aligned} n_b + n_b^* &= n_{U_b} + n_{F_b} + n_{U_b^*} + n_{F_b^*} \\ &= n_{U_b} + n_{F_b} + n_{F_v} + n_{U_v} = 2n \end{aligned} \qquad (377)$$

According to eqs. (278), (339), and (377), we obtain:
[Formula 209]

$$\begin{aligned} n_h + n_h^* &= \left(\lambda + n - n_b\right) + \left(\lambda + n - n_b^*\right) \\ &= 2\lambda + 2n - \left(n_b + n_b^*\right) = 2\lambda \end{aligned} \qquad (378)$$

8. 15 Determination of primal eigenfunction and dual eigenfunction

The primal simultaneous differential equation (105) and the dual simultaneous differential equation (106) are expressed in matrix as follows:

[Formula 210]

$$\sum_j L_{ij}\phi_j = \lambda w_i \phi_i^* \;\Rightarrow\; \begin{bmatrix} L_{11} & L_{12} \\ L_{21} & L_{22} \end{bmatrix} \begin{Bmatrix} \phi_1 \\ \phi_2 \end{Bmatrix} = \lambda \begin{bmatrix} w_1 & 0 \\ 0 & w_2 \end{bmatrix} \begin{Bmatrix} \phi_1^* \\ \phi_2^* \end{Bmatrix} \quad (379)$$

$$\sum_j L_{ji}^*\phi_j^* = \lambda w_i \phi_i \;\Rightarrow\; \begin{bmatrix} L_{11}^* & L_{21}^* \\ L_{12}^* & L_{22}^* \end{bmatrix} \begin{Bmatrix} \phi_1^* \\ \phi_2^* \end{Bmatrix} = \lambda \begin{bmatrix} w_1 & 0 \\ 0 & w_2 \end{bmatrix} \begin{Bmatrix} \phi_1 \\ \phi_2 \end{Bmatrix} \quad (380)$$

Let differential operators be:
[Formula 211]

$$\underset{2\times 2}{\begin{bmatrix} L \end{bmatrix}} = \begin{bmatrix} L_{11} & L_{12} \\ L_{21} & L_{22} \end{bmatrix} \quad (381)$$

$$\underset{2\times 2}{\begin{bmatrix} L^* \end{bmatrix}} = \begin{bmatrix} L_{11}^* & L_{21}^* \\ L_{12}^* & L_{22}^* \end{bmatrix} \quad (382)$$

And let a weight be:
[Formula 212]

$$\underset{2\times 2}{\begin{bmatrix} w \end{bmatrix}} = \begin{bmatrix} w_1 & 0 \\ 0 & w_2 \end{bmatrix} \quad (383)$$

Then, the primal and dual simultaneous differential equations are transformed to:
[Formula 213]

$$\underset{2\times 2}{\begin{bmatrix} L \end{bmatrix}} \underset{2\times 1}{\begin{Bmatrix} \phi \end{Bmatrix}} = \lambda \underset{2\times 2}{\begin{bmatrix} w \end{bmatrix}} \underset{2\times 1}{\begin{Bmatrix} \phi^* \end{Bmatrix}} \quad (384)$$

$$\underset{2\times 2}{\begin{bmatrix} L^* \end{bmatrix}} \underset{2\times 1}{\begin{Bmatrix} \phi^* \end{Bmatrix}} = \lambda \underset{2\times 2}{\begin{bmatrix} w \end{bmatrix}} \underset{2\times 1}{\begin{Bmatrix} \phi \end{Bmatrix}} \quad (385)$$

According to the direct variational method of eq. (122), multiplying eqs.(384) and (385) by variations {δϕ*} and {δϕ}, respectively, and integrating the same, we obtain:
[Formula 214]

$$\int_S \underset{1\times 2}{\begin{Bmatrix} \delta\phi^* \end{Bmatrix}^T} \underset{2\times 2}{\begin{bmatrix} L \end{bmatrix}} \underset{2\times 1}{\begin{Bmatrix} \phi \end{Bmatrix}} ds = \lambda \int_S \underset{1\times 2}{\begin{Bmatrix} \delta\phi^* \end{Bmatrix}^T} \underset{2\times 2}{\begin{bmatrix} w \end{bmatrix}} \underset{2\times 1}{\begin{Bmatrix} \phi^* \end{Bmatrix}} ds \quad (386)$$

$$\int_S \underset{1\times 2}{\begin{Bmatrix} \delta\phi \end{Bmatrix}^T} \underset{2\times 2}{\begin{bmatrix} L^* \end{bmatrix}} \underset{2\times 1}{\begin{Bmatrix} \phi^* \end{Bmatrix}} ds = \lambda \int_S \underset{1\times 2}{\begin{Bmatrix} \delta\phi \end{Bmatrix}^T} \underset{2\times 2}{\begin{bmatrix} w \end{bmatrix}} \underset{2\times 1}{\begin{Bmatrix} \phi \end{Bmatrix}} ds \quad (387)$$

Substituting the eigenfunctions {ϕ} and {ϕ*} of eqs. (315) and (375), and the variations {δϕ} and {δϕ*} of eqs. (316) and (376) into the foregoing equations, we obtain:
[Formula 215]

$$\underset{1\times n_h^*}{\left\{\delta e_h^*\right\}^T}\int_S \underset{n_h^*\times 2}{\left[\psi_h^*\right]^T}\underset{2\times 2}{\left[L\right]}\underset{2\times n_h}{\left[\psi_h\right]}ds\underset{n_h\times 1}{\left\{e_h\right\}}=\lambda\underset{1\times n_h^*}{\left\{\delta e_h^*\right\}^T}\int_S \underset{n_h^*\times 2}{\left[\psi_h^*\right]^T}\underset{2\times 2}{\left[w\right]}\underset{2\times n_h^*}{\left[\psi_h^*\right]}ds\underset{n_h^*\times 1}{\left\{e_h^*\right\}} \quad (388)$$

$$\underset{1\times n_h}{\left\{\delta e_h\right\}^T}\int_S \underset{n_h\times 2}{\left[\psi_h\right]^T}\underset{2\times 2}{\left[L^*\right]}\underset{2\times n_h^*}{\left[\psi_h^*\right]}ds\underset{n_h^*\times 1}{\left\{e_h^*\right\}}=\lambda\underset{1\times n_h}{\left\{\delta e_h\right\}^T}\int_S \underset{n_h\times 2}{\left[\psi_h\right]^T}\underset{2\times 2}{\left[w\right]}\underset{2\times n_h}{\left[\psi_h\right]}ds\underset{n_h\times 1}{\left\{e_h\right\}} \quad (389)$$

Let the integration results on the left sides of the equations be:
[Formula 216]

$$\underset{n_h^*\times n_h}{\left[A_h\right]}\equiv\int_S \underset{n_h^*\times 2}{\left[\psi_h^*\right]^T}\underset{2\times 2}{\left[L\right]}\underset{2\times n_h}{\left[\psi_h\right]}ds \quad (390)$$

$$\underset{n_h\times n_h^*}{\left[A_h^*\right]}\equiv\int_S \underset{n_h\times 2}{\left[\psi_h\right]^T}\underset{2\times 2}{\left[L^*\right]}\underset{2\times n_h^*}{\left[\psi_h^*\right]}ds \quad (391)$$

Let the integrations results on the right sides of the equations be:
[Formula 217]

$$\underset{n_h\times n_h}{\left[B_h\right]}\equiv\int_S \underset{n_h\times 2}{\left[\psi_h\right]^T}\underset{2\times 2}{\left[w\right]}\underset{2\times n_h}{\left[\psi_h\right]}ds \quad (392)$$

$$\underset{n_h^*\times n_h^*}{\left[B_h^*\right]}\equiv\int_S \underset{n_h^*\times 2}{\left[\psi_h^*\right]^T}\underset{2\times 2}{\left[w\right]}\underset{2\times n_h^*}{\left[\psi_h^*\right]}ds \quad (393)$$

$[B_h]$ and $[B_h^*]$ are both symmetric matrices. Further, the primal trial function $[\psi_h]$ satisfies the homogeneous boundary condition, and the dual trial function $[\psi_h^*]$ satisfies the homogeneous adjoint boundary condition. Therefore, partial integration of the same gives:
[Formula 218]

$$\underset{n_h^*\times n_h}{\left[A_h\right]} \equiv \int_S \underset{n_h^*\times 2}{\left[\psi_h^*\right]^T} \underset{2\times 2}{\left[L\right]} \underset{2\times n_h}{\left[\psi_h\right]} ds = \left( \int_S \underset{n_h\times 2}{\left[\psi_h\right]^T} \underset{2\times 2}{\left[L^*\right]} \underset{2\times n_h^*}{\left[\psi_h^*\right]} ds \right)^T = \underset{n_h^*\times n_h}{\left[A_h^*\right]^T} \qquad (394)$$

In other words, we obtain:
[Formula 219]

$$\underset{n_h\times n_h^*}{\left[A_h^*\right]} = \underset{n_h\times n_h^*}{\left[A_h\right]^T} \qquad (395)$$

With use of eqs. (390) to (393), eqs. (388) and (389) are transformed to:
[Formula 220]

$$\underset{1\times n_h^*}{\left\{\delta e_h^*\right\}^T} \underset{n_h^*\times n_h}{\left[A_h\right]} \underset{n_h\times 1}{\left\{e_h\right\}} = \lambda \underset{1\times n_h^*}{\left\{\delta e_h^*\right\}^T} \underset{n_h^*\times n_h^*}{\left[B_h^*\right]} \underset{n_h^*\times 1}{\left\{e_h^*\right\}} \qquad (396)$$

$$\underset{1\times n_h}{\left\{\delta e_h\right\}^T} \underset{n_h\times n_h^*}{\left[A_h^*\right]} \underset{n_h^*\times 1}{\left\{e_h^*\right\}} = \lambda \underset{1\times n_h}{\left\{\delta e_h\right\}^T} \underset{n_h\times n_h}{\left[B_h\right]} \underset{n_h\times 1}{\left\{e_h\right\}} \qquad (397)$$

In order that these are established with respect to an arbitrary variation, the following has to be established:
[Formula 221]

$$\underset{n_h^*\times n_h}{\left[A_h\right]} \underset{n_h\times 1}{\left\{e_h\right\}} = \lambda \underset{n_h^*\times n_h^*}{\left[B_h^*\right]} \underset{n_h^*\times 1}{\left\{e_h^*\right\}} \qquad (398)$$

$$\underset{n_h\times n_h^*}{\left[A_h^*\right]} \underset{n_h^*\times 1}{\left\{e_h^*\right\}} = \lambda \underset{n_h\times n_h}{\left[B_h\right]} \underset{n_h\times 1}{\left\{e_h\right\}} \qquad (399)$$

Mutual substitution of eq. (398) and eq. (399) with each other gives the following equations on each eigenvector:
[Formula 222]

$$\underset{n_h\times n_h^*}{\left[A_h^*\right]} \underset{n_h^*\times n_h^*}{\left[B_h^*\right]^{-1}} \underset{n_h^*\times n_h}{\left[A_h\right]} \underset{n_h\times 1}{\left\{e_h\right\}} = \lambda^2 \underset{n_h\times n_h}{\left[B_h\right]} \underset{n_h\times 1}{\left\{e_h\right\}} \qquad (400)$$

$$\underset{n_h^*\times n_h}{\left[A_h\right]}\underset{n_h\times n_h}{\left[B_h\right]^{-1}}\underset{n_h\times n_h^*}{\left[A_h^*\right]}\underset{n_h^*\times 1}{\left\{e_h^*\right\}}=\lambda^2\underset{n_h^*\times n_h^*}{\left[B_h^*\right]}\underset{n_h^*\times 1}{\left\{e_h^*\right\}} \qquad (401)$$

By solving these, we obtain an eigenvalue λ and eigenvectors $\{e_h\}$, $\{e_h^*\}$. By contraries, combining eqs. (398) and (399) into one, we obtain:

[Formula 223]

$$\underset{2\lambda\times 2\lambda}{\left[A_s\right]}\underset{2\lambda\times 1}{\left\{e_s\right\}}=\lambda\underset{2\lambda\times 2\lambda}{\left[B_s\right]}\underset{2\lambda\times 1}{\left\{e_s\right\}} \qquad (402)$$

[Formula 224]

$$\underset{2\lambda\times 2\lambda}{\left[A_s\right]}\equiv\begin{bmatrix}\underset{n_h^*\times n_h^*}{\left[0\right]} & \underset{n_h^*\times n_h}{\left[A_h\right]}\\ \underset{n_h\times n_h^*}{\left[A_h^*\right]} & \underset{n_h\times n_h}{\left[0\right]}\end{bmatrix}=\begin{bmatrix}\underset{n_h^*\times n_h^*}{\left[0\right]} & \underset{n_h^*\times n_h}{\left[A_h\right]}\\ \underset{n_h\times n_h^*}{\left[A_h\right]^T} & \underset{n_h\times n_h}{\left[0\right]}\end{bmatrix} \qquad (403)$$

$$\underset{2\lambda\times 2\lambda}{\left[B_s\right]}\equiv\begin{bmatrix}\underset{n_h^*\times n_h^*}{\left[B_h^*\right]} & \underset{n_h^*\times n_h}{\left[0\right]}\\ \underset{n_h\times n_h^*}{\left[0\right]} & \underset{n_h\times n_h}{\left[B_h\right]}\end{bmatrix} \qquad (404)$$

$$\underset{2\lambda\times 1}{\left\{e_s\right\}}\equiv\begin{Bmatrix}\underset{n_h^*\times 1}{\left\{e_h^*\right\}}\\ \underset{n_h\times 1}{\left\{e_h\right\}}\end{Bmatrix} \qquad (405)$$

It should be noted that the equal sign in eq. (403) results from eq. (395).

By solving this, we obtain the eigenvalue λ and the eigenvectors $\{e_h\}$ and $\{e_h^*\}$. Since $[A_s]$ and $[B_s]$ are both symmetric matrices, the eigenvalue λ is a real number, and the eigenvectors $\{e_s\}$ are orthogonal each other, when $[A_s]$ or $[B_s]$ is interposed between them.

The calculation by eqs. (400) and (401) results in that the eigenvalue problem has a small size. However, the combination of the eigenvectors $\{e_h\}$ and $\{e_h^*\}$ has to be dealt with carefully. On the other hand, the calculation by eq. (402) results in that the eigenvalue problem has a large size, but the combination of the eigenvectors $\{e_h\}$ and $\{e_h^*\}$ can be obtained simultaneously, which makes it unnecessary to confirm the combination. Which method should be used may be decided according to the memory size, the calculation speed, for example. As eq. (402) is easier to handle from the viewpoint of formulation, the following description is based on this.

From eq. (402), 2 ℓ combinations of the eigenvalue λ and the eigenvector $\{e_s\}$ are obtained. The number of positive eigenvalues and the number of negative eigenvalues coincide. Let the number be $m_p$. This coincidence can be derived from the fact that deformation patterns of eqs. (398) and (399) in which λ and $\{e_h^*\}$ are sign-inverted while $\{e_h\}$

remains without inversion of the sign, also satisfy the simultaneous equations. This is described also in Section 4.4. In the case where [$A_s$] has null space, the eigenvalue is zero. Let the number of null space of [$A_h$] be mo.

By returning components {$e_h$} and {$e_h$*} of the eigenvector {$e_s$} belonging to the eigenvalue λ to eqs. (315) and (375), we obtain eigenfunctions {ϕ} and {ϕ*}.

Arranging $m_p$ eigenfunctions {ϕ}, {ϕ*} and $m_p$ eigenvectors {$e_h$}, {$e_h$*} belonging to a positive eigenvalue in the column direction (horizontal direction) and expressing them as [$\phi_p$], [$\phi_p$*] and [$e_p$], [$e_p$*], we obtain:

[Formula 225]

$$\underset{2\times m_p}{\left[\phi_p\right]} \equiv \underset{2\times n_h}{\left[\psi_h\right]}\underset{n_h\times m_p}{\left[e_p\right]} \qquad (406)$$

$$\underset{2\times m_p}{\left[\phi_p^*\right]} \equiv \underset{2\times n_h^*}{\left[\psi_h^*\right]}\underset{n_h^*\times m_p}{\left[e_p^*\right]} \qquad (407)$$

Arranging $m_p$ eigenvalues on the diagonal, we define:

[Formula 226]

$$\underset{m_p\times m_p}{\left[\lambda_p\right]} \equiv \begin{bmatrix} \lambda_1 & 0 & \Lambda & 0 \\ 0 & \lambda_2 & \Lambda & 0 \\ M & M & O & M \\ 0 & 0 & \Lambda & \lambda_m \end{bmatrix} \qquad (408)$$

Then, we obtain primal and dual simultaneous differential equations as follows:

[Formula 227]

$$\underset{2\times 2}{\left[L\right]}\underset{2\times m_p}{\left[\phi_p\right]} = \underset{2\times 2}{\left[w\right]}\underset{2\times m_p}{\left[\phi_p^*\right]}\underset{m_p\times m_p}{\left[\lambda_p\right]} \qquad (409)$$

$$\underset{2\times 2}{\left[L^*\right]}\underset{2\times m_p}{\left[\phi_p^*\right]} = \underset{2\times 2}{\left[w\right]}\underset{2\times m_p}{\left[\phi_p\right]}\underset{m_p\times m_p}{\left[\lambda_p\right]} \qquad (410)$$

The normalization with the orthogonality of the eigenfunctions allows [$e_p$], [$e_p$*] to satisfy:

[Formula 228]

$$\int_S \underset{m_p\times 2}{\left[\phi_p\right]^T}\underset{2\times 2}{\left[w\right]}\underset{2\times m_p}{\left[\phi_p\right]} ds = \underset{m_p\times m_p}{\left[I\right]} \qquad (411)$$

$$\int_S \underset{m_p\times 2}{\left[\phi_p^*\right]^T} \underset{2\times 2}{\left[w\right]} \underset{2\times m_p}{\left[\phi_p^*\right]} ds = \underset{m_p\times m_p}{\left[I\right]} \quad (412)$$

As a result, we obtain:
[Formula 229]

$$\int_S \underset{m_p\times 2}{\left[\phi_p^*\right]^T} \underset{2\times 2}{\left[L\right]} \underset{2\times m_p}{\left[\phi_p\right]} ds = \underset{m_p\times m_p}{\left[\lambda_p\right]} \quad (413)$$

$$\int_S \underset{m_p\times 2}{\left[\phi_p\right]^T} \underset{2\times 2}{\left[L^*\right]} \underset{2\times m_p}{\left[\phi_p^*\right]} ds = \underset{m_p\times m_p}{\left[\lambda_p\right]} \quad (414)$$

>

mo eigenfunctions {ϕ} and eigenvectors {$e_h$} belonging to a zero eigenvalue are arranged in the column direction (horizontal direction). Let them be [$\phi_0$] and [eo], respectively. Then, we obtain:
[Formula 230]

$$\underset{2\times m_o}{\left[\phi_o\right]} \equiv \underset{2\times n_h}{\left[\psi_h\right]} \underset{n_h\times m_o}{\left[e_o\right]} \quad (415)$$

According to the orthogonality of the eigenfunctions, we obtain:
[Formula 231]

$$\int_S \underset{m_p\times 2}{\left[\phi_p^*\right]^T} \underset{2\times 2}{\left[L\right]} \underset{2\times m_o}{\left[\phi_o\right]} ds = \underset{m_p\times m_o}{\left[0\right]} \quad (416)$$

8. 16 Details of matrices

By transforming [$A_h$] of eq. (390) according to eqs. (293), (313), and (373), we obtain:
[Formula 232]

$$\underset{n_h^*\times n_h}{\left[A_h\right]} \equiv \int_S \underset{n_h^*\times 2}{\left[\psi_h^*\right]^T} \underset{2\times 2}{\left[L\right]} \underset{2\times n_h}{\left[\psi_h\right]} ds = \underset{n_h^*\times(n+\lambda)}{\left[H_h^*\right]^T} \int_S \underset{(n+\lambda)\times 2}{\left[\Gamma\right]^T} \underset{2\times 2}{\left[L\right]} \underset{2\times(n+\lambda)}{\left[\Gamma\right]} ds \underset{(n+\lambda)\times n_h}{\left[H_h\right]}$$

$$= \underset{n_h^*\times(n+\lambda)}{\left[H_h^*\right]^T} \int_S \begin{bmatrix} \underset{n\times 2}{\left[\chi_A\right]^T} \\ \underset{\lambda\times 2}{\left[\psi_o\right]^T} \end{bmatrix} \underset{2\times 2}{\left[L\right]} \begin{bmatrix} \underset{2\times n}{\left[\chi_A\right]} & \underset{2\times\lambda}{\left[\psi_o\right]} \end{bmatrix} ds \underset{(n+\lambda)\times n_h}{\left[H_h\right]}$$

$$= \underset{n_h^*\times(n+\lambda)}{\left[H_h^*\right]^T} \int_S \begin{bmatrix} \underset{n\times 2}{\left[\chi_A\right]^T} \underset{2\times 2}{\left[L\right]} \underset{2\times n}{\left[\chi_A\right]} & \underset{n\times 2}{\left[\chi_A\right]^T} \underset{2\times 2}{\left[L\right]} \underset{2\times\lambda}{\left[\psi_o\right]} \\ \underset{\lambda\times 2}{\left[\psi_o\right]^T} \underset{2\times 2}{\left[L\right]} \underset{2\times n}{\left[\chi_A\right]} & \underset{\lambda\times 2}{\left[\psi_o\right]^T} \underset{2\times 2}{\left[L\right]} \underset{2\times\lambda}{\left[\psi_o\right]} \end{bmatrix} ds \underset{(n+\lambda)\times n_h}{\left[H_h\right]} \quad (417)$$

By transforming [$A_h^*$] of eq. (391) according to eqs. (293), (313), and (373), we obtain:
[Formula 233]

$$\underset{n_h\times n_h^*}{\left[A_h^*\right]} \equiv \int_S \underset{n_h\times 2}{\left[\psi_h\right]^T} \underset{2\times 2}{\left[L^*\right]} \underset{2\times n_h^*}{\left[\psi_h^*\right]} ds = \underset{n_h\times(n+\lambda)}{\left[H_h\right]^T} \int_S \underset{(n+\lambda)\times 2}{\left[\Gamma\right]^T} \underset{2\times 2}{\left[L^*\right]} \underset{2\times(n+\lambda)}{\left[\Gamma\right]} ds \underset{(n+\lambda)\times n_h^*}{\left[H_h^*\right]}$$

$$= \underset{n_h\times(n+\lambda)}{\left[H_h\right]^T} \int_S \begin{bmatrix} \underset{n\times 2}{\left[\chi_A\right]^T} \\ \underset{\lambda\times 2}{\left[\psi_o\right]^T} \end{bmatrix} \underset{2\times 2}{\left[L^*\right]} \begin{bmatrix} \underset{2\times n}{\left[\chi_A\right]} & \underset{2\times\lambda}{\left[\psi_o\right]} \end{bmatrix} ds \underset{(n+\lambda)\times n_h^*}{\left[H_h^*\right]}$$

$$= \underset{n_h\times(n+\lambda)}{\left[H_h\right]^T} \int_S \begin{bmatrix} \underset{n\times 2}{\left[\chi_A\right]^T} \underset{2\times 2}{\left[L^*\right]} \underset{2\times n}{\left[\chi_A\right]} & \underset{n\times 2}{\left[\chi_A\right]^T} \underset{2\times 2}{\left[L^*\right]} \underset{2\times\lambda}{\left[\psi_o\right]} \\ \underset{\lambda\times 2}{\left[\psi_o\right]^T} \underset{2\times 2}{\left[L^*\right]} \underset{2\times n}{\left[\chi_A\right]} & \underset{\lambda\times 2}{\left[\psi_o\right]^T} \underset{2\times 2}{\left[L^*\right]} \underset{2\times\lambda}{\left[\psi_o\right]} \end{bmatrix} ds \underset{(n+\lambda)\times n_h^*}{\left[H_h^*\right]} \quad (418)$$

By transforming [$B_h$] of eq. (392) according to eqs. (293) and (313), we obtain:
[Formula 234]

$$\underset{n_h\times n_h}{[B_h]} \equiv \int_S \underset{n_h\times 2}{[\psi_h]}^T \underset{2\times 2}{[w]} \underset{2\times n_h}{[\psi_h]} ds = \underset{n_h\times(n+\lambda)}{[H_h]}^T \int_S \underset{(n+\lambda)\times 2}{[\Gamma]}^T \underset{2\times 2}{[w]} \underset{2\times(n+\lambda)}{[\Gamma]} ds \underset{(n+\lambda)\times n_h}{[H_h]}$$

$$= \underset{n_h\times(n+\lambda)}{[H_h]}^T \int_S \begin{bmatrix} \underset{n\times 2}{[\chi_A]}^T \\ \underset{\lambda\times 2}{[\psi_o]}^T \end{bmatrix} \underset{2\times 2}{[w]} \begin{bmatrix} \underset{2\times n}{[\chi_A]} & \underset{2\times\lambda}{[\psi_o]} \end{bmatrix} ds \underset{(n+\lambda)\times n_h}{[H_h]}$$

$$= \underset{n_h\times(n+\lambda)}{[H_h]}^T \int_S \begin{bmatrix} \underset{n\times 2}{[\chi_A]}^T \underset{2\times 2}{[w]} \underset{2\times n}{[\chi_A]} & \underset{n\times 2}{[\chi_A]}^T \underset{2\times 2}{[w]} \underset{2\times\lambda}{[\psi_o]} \\ \underset{\lambda\times 2}{[\psi_o]}^T \underset{2\times 2}{[w]} \underset{2\times n}{[\chi_A]} & \underset{\lambda\times 2}{[\psi_o]}^T \underset{2\times 2}{[w]} \underset{2\times\lambda}{[\psi_o]} \end{bmatrix} ds \underset{(n+\lambda)\times n_h}{[H_h]} \quad (419)$$

This clearly shows that $[B_h]$ becomes a symmetric matrix. By transforming $[B_h^*]$ of eq. (393) according to eqs. (293) and (373), we obtain:
[Formula 235]

$$\underset{n_h^*\times n_h^*}{[B_h^*]} \equiv \int_S \underset{n_h^*\times 2}{[\psi_h^*]}^T \underset{2\times 2}{[w]} \underset{2\times n_h^*}{[\psi_h^*]} ds = \underset{n_h^*\times(n+\lambda)}{[H_h^*]}^T \int_S \underset{(n+\lambda)\times 2}{[\Gamma]}^T \underset{2\times 2}{[w]} \underset{2\times(n+\lambda)}{[\Gamma]} ds \underset{(n+\lambda)\times n_h^*}{[H_h^*]}$$

$$= \underset{n_h^*\times(n+\lambda)}{[H_h^*]}^T \int_S \begin{bmatrix} \underset{n\times 2}{[\chi_A]}^T \\ \underset{\lambda\times 2}{[\psi_o]}^T \end{bmatrix} \underset{2\times 2}{[w]} \begin{bmatrix} \underset{2\times n}{[\chi_A]} & \underset{2\times\lambda}{[\psi_o]} \end{bmatrix} ds \underset{(n+\lambda)\times n_h^*}{[H_h^*]}$$

$$= \underset{n_h^*\times(n+\lambda)}{[H_h^*]}^T \int_S \begin{bmatrix} \underset{n\times 2}{[\chi_A]}^T \underset{2\times 2}{[w]} \underset{2\times n}{[\chi_A]} & \underset{n\times 2}{[\chi_A]}^T \underset{2\times 2}{[w]} \underset{2\times\lambda}{[\psi_o]} \\ \underset{\lambda\times 2}{[\psi_o]}^T \underset{2\times 2}{[w]} \underset{2\times n}{[\chi_A]} & \underset{\lambda\times 2}{[\psi_o]}^T \underset{2\times 2}{[w]} \underset{2\times\lambda}{[\psi_o]} \end{bmatrix} ds \underset{(n+\lambda)\times n_h^*}{[H_h^*]} \quad (420)$$

This clearly shows that $[B_h^*]$ becomes a symmetric matrix.

8. 17 Eigenfunction method

Expressing the simultaneous partial differential equation (23) of the primal problem in matrix, we obtain:
[Formula 236]

$$\underset{2\times 2}{[L]} \underset{2\times 1}{\{u\}} = \underset{2\times 1}{\{f\}} \quad (421)$$

As the displacement {u} can be expressed by eq. (314), this equation is transformed to:
[Formula 237]

$$\underset{2\times 2}{[L]} \underset{2\times 1}{\{u_H\}} = \underset{2\times 1}{\{f\}} - \underset{2\times 2}{[L]} \underset{2\times 1}{\{u_B\}} \quad (422)$$

On the other hand, the displacement $\{u_H\}$ is expressed as follows with the eigenfunctions $[\phi_p]$ and $[\phi_0]$, with the coefficient vectors being defined to be $\{a_p\}$, $\{a_0\}$, and with use of eqs. (406) and (415):

[Formula 238]

$$\underset{2\times 1}{\{u_H\}} \equiv \underset{2\times m_p}{[\phi_p]}\underset{m_p\times 1}{\{a_p\}} + \underset{2\times m_o}{[\phi_o]}\underset{m_o\times 1}{\{a_o\}} = \underset{2\times n_h}{[\psi_h]}\left(\underset{n_h\times m_p}{[e_p]}\underset{m_p\times 1}{\{a_p\}} + \underset{n_h\times m_o}{[e_o]}\underset{m_o\times 1}{\{a_o\}}\right) \qquad (423)$$

Comparing this equation and eq. (305), we find that the unknown part $s_h$ is given as:
[Formula 239]

$$\underset{n_h\times 1}{\{s_h\}} = \underset{n_h\times m_p}{[e_p]}\underset{m_p\times 1}{\{a_p\}} + \underset{n_h\times m_o}{[e_o]}\underset{m_o\times 1}{\{a_o\}} \qquad (424)$$

In other words, this indicates that when the coefficient vectors $\{a_p\}$ and $\{a_0\}$ are settled, the unknown part $s_h$ is determined. According to eqs. (422) and (423), the simultaneous partial differential equation is transformed to:
[Formula 240]

$$\underset{2\times 2}{[L]}\underset{2\times m_p}{[\phi_p]}\underset{m_p\times 1}{\{a_p\}} + \underset{2\times 2}{[L]}\underset{2\times m_o}{[\phi_o]}\underset{m_o\times 1}{\{a_o\}} = \underset{2\times 1}{\{f\}} - \underset{2\times 2}{[L]}\underset{2\times 1}{\{u_B\}} \qquad (425)$$

When both sides are multiplied by $[\phi_p^*]^T$ so that an inner product is taken, the second term of the left side of the equation becomes zero according to eq. (416), and we obtain:
[Formula 241]

$$\int_S \underset{m_p\times 2}{[\phi_p^*]^T}\underset{2\times 2}{[L]}\underset{2\times m_p}{[\phi_p]}ds\,\underset{m_p\times 1}{\{a_p\}} = \int_S \underset{m_p\times 2}{[\phi_p^*]^T}\underset{2\times 1}{\{f\}}ds - \int_S \underset{m_p\times 2}{[\phi_p^*]^T}\underset{2\times 2}{[L]}\underset{2\times 1}{\{u_B\}}ds \qquad (426)$$

According to eqs. (304), (407), and (413), this equation is transformed to:
[Formula 242]

$$\underset{m_p\times m_p}{[\lambda_p]}\underset{m_p\times 1}{\{a_p\}} = \underset{m_p\times n_h^*}{[e_p^*]^T}\int_S \underset{n_h^*\times 2}{[\psi_h^*]^T}\underset{2\times 1}{\{f\}}ds - \underset{m_p\times n_h^*}{[e_p^*]^T}\int_S \underset{n_h^*\times 2}{[\psi_h^*]^T}\underset{2\times 2}{[L]}\underset{2\times n_b}{[\chi_B]}ds\,\underset{n_b\times 1}{\{s_b\}} \qquad (427)$$

Rearrangement of the equation gives:
[Formula 243]

$$\underset{m_p\times 1}{\{a_p\}} = \underset{m_p\times m_p}{[\lambda_p]^{-1}}\underset{m_p\times n_h^*}{[e_p^*]^T}\left(\int_S \underset{n_h^*\times 2}{[\psi_h^*]^T}\underset{2\times 1}{\{f\}}ds - \int_S \underset{n_h^*\times 2}{[\psi_h^*]^T}\underset{2\times 2}{[L]}\underset{2\times n_b}{[\chi_B]}ds\,\underset{n_b\times 1}{\{s_b\}}\right) \qquad (428)$$

Using eqs. (293), (310), and (373), we calculate the integration result of the right side of the equation as follows:
[Formula 244]

$$\underset{n_h^*\times 1}{\{C_F\}} \equiv \int_S \underset{n_h^*\times 2}{[\psi_h^*]}^T \underset{2\times 1}{\{f\}} ds = \underset{n_h^*\times(n+\lambda)}{[H_h^*]}^T \int_S \underset{(n+\lambda)\times 2}{[\Gamma]}^T \underset{2\times 1}{\{f\}} ds$$

$$= \underset{n_h^*\times(n+\lambda)}{[H_h^*]}^T \int_S \begin{bmatrix} \underset{n\times 2}{[\chi_A]}^T \\ \underset{\lambda\times 2}{[\psi_o]}^T \end{bmatrix} \underset{2\times 1}{\{f\}} ds \tag{429}$$

$$\underset{n_h^*\times n_b}{[C_B]} \equiv \int_S \underset{n_h^*\times 2}{[\psi_h^*]}^T \underset{2\times 2}{[L]} \underset{2\times n_b}{[\chi_B]} ds$$

$$= \underset{n_h^*\times(n+\lambda)}{[H_h^*]}^T \int_S \underset{(n+\lambda)\times 2}{[\Gamma]}^T \underset{2\times 2}{[L]} \underset{2\times(n+\lambda)}{[\Gamma]} ds \underset{(n+\lambda)\times n_b}{[H_b]}$$

$$= \underset{n_h^*\times(n+\lambda)}{[H_h^*]}^T \int_S \begin{bmatrix} \underset{n\times 2}{[\chi_A]}^T \\ \underset{\lambda\times 2}{[\psi_o]}^T \end{bmatrix} \underset{2\times 2}{[L]} \begin{bmatrix} \underset{2\times n}{[\chi_A]} & \underset{2\times\lambda}{[\psi_o]} \end{bmatrix} ds \underset{(n+\lambda)\times n_b}{[H_b]}$$

$$= \underset{n_h^*\times(n+\lambda)}{[H_h^*]}^T \int_S \begin{bmatrix} \underset{n\times 2}{[\chi_A]}^T \underset{2\times 2}{[L]} \underset{2\times n}{[\chi_A]} & \underset{n\times 2}{[\chi_A]}^T \underset{2\times 2}{[L]} \underset{2\times\lambda}{[\psi_o]} \\ \underset{\lambda\times 2}{[\psi_o]}^T \underset{2\times 2}{[L]} \underset{2\times n}{[\chi_A]} & \underset{\lambda\times 2}{[\psi_o]}^T \underset{2\times 2}{[L]} \underset{2\times\lambda}{[\psi_o]} \end{bmatrix} ds \underset{(n+\lambda)\times n_b}{[H_b]} \tag{430}$$

Then, we obtain:
[Formula 245]

$$\underset{m_p\times 1}{\{a_p\}} = \underset{m_p\times m_p}{[\lambda_p]}^{-1} \underset{m_p\times n_h^*}{[e_p^*]}^T \left( \underset{n_h^*\times 1}{\{C_F\}} - \underset{n_h^*\times n_b}{[C_B]} \underset{n_b\times 1}{\{s_b\}} \right) \tag{431}$$

We find that the coefficient vector $\{a_p\}$ is settled corresponding to the known part $s_b$.

When this equation is returned to eq. (424), in the case where no zero eigenvalue exists, the unknown parts $s_h$ is settled. This results in that the problem is solved completely. In the case where a zero eigenvalue exists, the unknown parts $s_h$ is a function of the coefficient vector $\{a_0\}$. Therefore, by adding the information on the boundary of the element, in addition to the node information, $\{a_0\}$ can be determined.

In this way, when the unknown part $s_h$ is determined, the unknown part $s_e$ is determined according to eq. (300). Therefore, by eq. (299) or (301), the displacement $\{u\}$ is determined completely. When the displacement is determined, the internal stress distribution, strain energy distribution, etc. of the element can be obtained.

8. 18 Handling of zero eigenvalue

The eigenvalue is zero in the case where, in the primal and dual simultaneous differential equations of eqs.

(384) and (385), either one of the following equations is established:
[Formula 246]

$$\underset{2\times 2}{\left[L\right]}\underset{2\times 1}{\left\{\phi\right\}}=\underset{2\times 1}{\left\{0\right\}} \tag{432}$$

[Formula 247]

$$\underset{2\times 2}{\left[L^{*}\right]}\underset{2\times 1}{\left\{\phi^{*}\right\}}=\underset{2\times 1}{\left\{0\right\}} \tag{433}$$

In eqs. (415) and (423), eq. (432) is assumed to be established. As this means a homogenized differential equation, the coefficient $\{a_0\}$ accompanying the solution thereof is arbitrary. The previous section shows the method of determining the arbitrarity thereof by adding the information on the boundary of the element, but there is another method in which a designer that performs the calculation determines it for him/herself. A system that displays in diagrams what deformation state or what stress state is taken according to the coefficient $\{a_0\}$ is provided, and viewing the diagrams, the designer determines the coefficient $\{a_0\}$ for him/herself so that a practical boundary condition is provided.

9. Use of conventional finite element

9.1 Equation of whole system

In Section (4) of Chapter 7, it is described that with respect to the conventional linear elastic finite element, particularly with respect to the h-element, an operation on a variation is not performed, and the obtained equation coincides with the energy conservation law of eq. (134). By combining a plurality of h-elements, we obtain an equation of motion of a whole system as follows:
[Formula 248]

$$\underset{n\times n}{\left[K\right]}\underset{n\times 1}{\left\{U\right\}}=\underset{n\times 1}{\left\{F\right\}} \tag{434}$$

The solution method is constructed on the premise that only either a displacement or an external force of each node is given, that is, on the premise that a self-adjoint boundary condition is given. For example, it is assumed that among n degrees of freedom in total, $n_1$ degrees of freedom belong to the field such that the displacement is known , and $n_2$ degrees of freedom belong to the field such that the external force is known, then we obtain:
[Formula 249]

$$n = n_1 + n_2 \tag{435}$$

By rearranging components of a stiffness matrix [K], a nodal displacement {U}, and a nodal external force {F}, we express eq.(434) as:
[Formula 250]

$$\begin{bmatrix} \underset{n_1\times n_1}{\left[K_{11}\right]} & \underset{n_1\times n_2}{\left[K_{12}\right]} \\ \underset{n_2\times n_1}{\left[K_{21}\right]} & \underset{n_2\times n_2}{\left[K_{22}\right]} \end{bmatrix} \begin{Bmatrix} \underset{n_1\times 1}{\left\{U_1\right\}} \\ \underset{n_2\times 1}{\left\{U_2\right\}} \end{Bmatrix} = \begin{Bmatrix} \underset{n_1\times 1}{\left\{F_1\right\}} \\ \underset{n_2\times 1}{\left\{F_2\right\}} \end{Bmatrix} \tag{436}$$

Known quantities are $\{U_1\}$ and $\{F_2\}$, and unknown quantities are $\{U_2\}$ and $\{F_1\}$. By separating eq.(436), we obtain:
[Formula 251]

$$\underset{n_1\times n_1}{\left[K_{11}\right]}\underset{n_1\times 1}{\left\{U_1\right\}}+\underset{n_1\times n_2}{\left[K_{12}\right]}\underset{n_2\times 1}{\left\{U_2\right\}}=\underset{n_1\times 1}{\left\{F_1\right\}} \qquad (437)$$

and
[Formula 252]

$$\underset{n_2\times n_1}{\left[K_{21}\right]}\underset{n_1\times 1}{\left\{U_1\right\}}+\underset{n_2\times n_2}{\left[K_{22}\right]}\underset{n_2\times 1}{\left\{U_2\right\}}=\underset{n_2\times 1}{\left\{F_2\right\}} \qquad (438)$$

Then, transforming eq. (438), we obtain:
[Formula 253]

$$\underset{n_2\times 1}{\left\{U_2\right\}}=\underset{n_2\times n_2}{\left[K_{22}\right]}^{-1}\left(\underset{n_2\times 1}{\left\{F_2\right\}}-\underset{n_2\times n_1}{\left[K_{21}\right]}\underset{n_1\times 1}{\left\{U_1\right\}}\right) \qquad (439)$$

Thus, the unknown amount $\{U_2\}$ is settled. By substituting this into eq. (437), we obtain:
[Formula 254]

$$\underset{n_1\times 1}{\left\{F_1\right\}}=\underset{n_1\times n_1}{\left[K_{11}\right]}\underset{n_1\times 1}{\left\{U_1\right\}}+\underset{n_1\times n_2}{\left[K_{12}\right]}\underset{n_2\times n_2}{\left[K_{22}\right]}^{-1}\left(\underset{n_2\times 1}{\left\{F_2\right\}}-\underset{n_2\times n_1}{\left[K_{21}\right]}\underset{n_1\times 1}{\left\{U_1\right\}}\right) \qquad (440)$$

Thus, the unknown amount $\{F_1\}$ is settled. In other words, all of the unknown quantities are obtained. Such a procedure is established as a conventional practice of the finite element method.

However, eq. (434) is obtained from the energy conservation law, as an equivalent equation, without any variation operation being involved. This indicates that it is not necessary that the self-adjoint boundary condition should be imposed. Eq.(434) may be solved with respect to the non-self-adjoint boundary condition.

9.2 Calculation under non-self-adjoint boundary condition

With use of the unit matrix [I], the equation of motion (434) of the whole system is recognized as:
[Formula 255]

$$\underset{n\times n}{\left[K\right]}\underset{n\times 1}{\left\{U\right\}}=\underset{n\times n}{\left[I\right]}\underset{n\times 1}{\left\{F\right\}} \qquad (441)$$

Then, we obtain:
[Formula 256]

$$\left[\underset{n\times n}{\left[K\right]}\quad\underset{n\times n}{\left[-I\right]}\right]\left\{\begin{matrix}\underset{n\times 1}{\left\{U\right\}}\\\underset{n\times 1}{\left\{F\right\}}\end{matrix}\right\}=\underset{n\times 1}{\left\{0\right\}} \qquad (442)$$

Combining the known part $U_b$ of the nodal displacement U and the known part $F_b$ of the nodal external force

F, we define the nodal known part $s_b$ as:
[Formula 257]

$$\underset{n_b\times 1}{\{s_b\}} \equiv \begin{Bmatrix} \underset{1\times n_{U_b}}{\{U_b\}} \\ \underset{1\times n_{F_b}}{\{F_b\}} \end{Bmatrix} \quad (443)$$

Combining the unknown part $U_v$ of the nodal displacement U and the unknown part $F_v$ of the nodal external force F, we define the nodal unknown part $s_v$ as:
[Formula 258]

$$\underset{n_v\times 1}{\{s_v\}} \equiv \begin{Bmatrix} \underset{1\times n_{U_v}}{\{U_v\}} \\ \underset{1\times n_{F_v}}{\{F_v\}} \end{Bmatrix} \quad (444)$$

Here, the following is given:
[Formula 259]

$$n_b + n_v = 2n \quad (445)$$

When U and F in eq. (442) are rearranged in the order according to eqs. (443) and (444), the columns of the matrix parts are also rearranged as follows:
[Formula 260]

$$\begin{bmatrix} \underset{n\times n_b}{[K_b]} & \underset{n\times n_v}{[K_v]} \end{bmatrix} \begin{Bmatrix} \underset{n_b\times 1}{\{s_b\}} \\ \underset{n_v\times 1}{\{s_v\}} \end{Bmatrix} = \underset{n\times 1}{\{0\}} \quad (446)$$

Here, the matrix $[K_b]$ is obtained by extracting corresponding columns from the matrices [K] and [-I] in the order in which the known parts $U_b$ and $F_b$ are arranged, and similarly, the matrix $[K_v]$ is obtained by extracting corresponding columns from the matrix [K] and [-I] in the order in which the unknown parts $U_v$ and $F_v$ are arranged. From eq.(446), we obtain:
[Formula 261]

$$\underset{n\times n_v}{[K_v]}\underset{n_v\times 1}{\{s_v\}} = -\underset{n\times n_b}{[K_b]}\underset{n_b\times 1}{\{s_b\}} \quad (447)$$

Since the right side of the equation is composed of the known parts alone, it is possible to obtain the nodal unknown part $s_v$ on the left side of the equation. In other words, depending on whether the matrix $[K_v]$ is an underdetermined system in which a plurality of solutions exist or it is an overdetermined system in which no solution possibly exists,

the unknown part $s_v$ can be obtained based on the knowledge of linear algebra. In the case where a plurality of solutions exist, this case corresponds to the zero eigenvalue case described in Section 8.18, a designer him/herself can determine a solution.

9.3 Case with gravity load

The nodal external force F of the equation of motion (434) of the whole system is divided into a term $F_g$ that represents a body force such as gravity load, and a term $F_s$ that represents a surface force, and is given as:
[Formula 262]

$$\underset{n\times 1}{\{F\}} \equiv \underset{n\times 1}{\{F_g\}} + \underset{n\times 1}{\{F_s\}} \tag{448}$$

Then, eq. (434) is transformed to:
[Formula 263]

$$\underset{n\times n}{[K]}\underset{n\times 1}{\{U\}} = \underset{n\times 1}{\{F_g\}} + \underset{n\times 1}{\{F_s\}} \tag{449}$$

Transposing the surface force $F_s$, we obtain:
[Formula 264]

$$\begin{bmatrix} \underset{n\times n}{[K]} & \underset{n\times n}{[-I]} \end{bmatrix} \begin{Bmatrix} \underset{n\times 1}{\{U\}} \\ \underset{n\times 1}{\{F_s\}} \end{Bmatrix} = \underset{n\times 1}{\{F_g\}} \tag{450}$$

Through the same procedure as that for obtaining eq. (446), this equation is transformed to:
[Formula 265]

$$\begin{bmatrix} \underset{n\times n_b}{[K_b]} & \underset{n\times n_v}{[K_v]} \end{bmatrix} \begin{Bmatrix} \underset{n_b\times 1}{\{s_b\}} \\ \underset{n_v\times 1}{\{s_v\}} \end{Bmatrix} = \underset{n\times 1}{\{F_g\}} \tag{451}$$

By transforming this equation so that the unknown part remains on the left side of the equation, we obtain:
[Formula 266]

$$\underset{n\times n_v}{[K_v]}\underset{n_v\times 1}{\{s_v\}} = -\underset{n\times n_b}{[K_b]}\underset{n_b\times 1}{\{s_b\}} + \underset{n\times 1}{\{F_g\}} \tag{452}$$

As is the case with the case described in the previous section, based on the knowledge of linear algebra, we can obtain the unknown part $s_v$.

9.4 Case where a plurality of solutions exist

In the case where a plurality of solutions exist, one particular solution $\{s_p\}$ that satisfies eq. (452), and homogeneous solutions $\{s_0\}$ that is the solution when the right side of eq. (452) is given as zero, are obtained. The number no of the homogeneous solution is given as:

[Formula 267]

$$n_o \equiv n_v - n \qquad (453)$$

Let a matrix in which the homogeneous solutions $\{s_0\}$ are arranged in the column direction (horizontal direction) be $[\psi_0]$, which is as follows:
[Formula 268]

$$\underset{n_v \times n_o}{\left[\psi_o\right]} \equiv \left[\underset{1}{\left\{s_o\right\}} \quad \underset{2}{\left\{s_o\right\}} \quad \Lambda \quad \underset{n_o}{\left\{s_o\right\}}\right] \qquad (454)$$

Let a mode coefficient with respect to the homogeneous solution be $\{a_0\}$. The solution $\{s_v\}$ is given as:
[Formula 269]

$$\underset{n_v \times 1}{\left\{s_v\right\}} = \underset{n_v \times 1}{\left\{s_p\right\}} + \underset{n_v \times n_o}{\left[\psi_o\right]} \underset{n_o \times 1}{\left\{a_o\right\}} \qquad (455)$$

Now that all of the nodal displacement U and the nodal external force F are determined, the non-self-adjoint problem is solved. Both U an F are in the format including the mode coefficient $\{a_0\}$, then they are the solution with respect to an arbitrary mode coefficient $\{a_0\}$.
However, the mode coefficient $\{a_0\}$ should be appropriately selected. Otherwise, with a conventional-type finite element, the solution sometimes indicates a state in which the element is folded and is kinked, and such analysis and result were often regarded as incorrect in many cases. This attributes to that, eq. (434), which is equivalent to the energy conservation law is satisfied as a whole system, but in an element, the differential equation is not satisfied.
Then, with focusing on that the deformation of the whole system is governed the mode coefficient $\{a_0\}$, the variation principle equivalent to the differential equation of the element, that is, the least-squares method of eqs. (122) to (128), is used, so that an appropriate $\{a_0\}$ is determined. In the case where a state in which the element is folded and is kinked is not assumed at values around the appropriate $\{a_0\}$, it can be considered that this means that a sufficiently accurate analysis result is obtained.

9.5 Use of least-squares method

In the case of a conventional-type finite element, an internal displacement of the element is represented by $\{u_A\}$ of eq. (166). $\{u_A\}$ is expressed with a nodal displacement U, and U is expressed with a mode coefficient $\{a_0\}$, as in eq. (455).
As the inside of the element is dominated by the differential equation, it is desirable that the mode coefficient $\{a_0\}$ can be determined by substituting $\{u_A\}$ into $\{u\}$ of eq. (421). By creating a functional of eq. (128) with respect to the whole system and differentiating the same by the mode coefficient $\{a_0\}$, eq. (127) can be formed. As a result, the mode coefficient $\{a_0\}$ can be determined.
A configuration may be such that the mode coefficient $\{a_0\}$ is made in synchronization with a slider and a diagram for deformation or stress distribution is displayed in response to adjustment of the mode coefficient made by a designer using the slider. This allows the designer to study what supporting method is available, and allows the designer to have more images. This makes it possible to narrow down the state of feasible deformation and to re-define the boundary condition, thereby allowing the designer to make studies in order to obtain a better structure.
Hereinafter, embodiments of the present invention are described in detail, with reference to the drawings.

[Embodiment 1]

FIG. 2 is a functional block diagram showing an exemplary configuration of an analyzer of the present embodiment. The analyzer 10 (analysis system 10) shown in FIG. 2 can be formed with a computer that includes a calculation unit 1. The calculation unit 1 inputs design data of an analysis object as well as differential equation data including

boundary condition data and differential operators with respect to the analysis object; calculates solutions of the differential equations of the analysis object; and outputs the same as analysis result data. Here, the calculation unit 1 calculates a solution $u_j$ by the following equation where a variation of a dual displacement $u_i^*$ is given as a dual variation $\delta u_i^*$. The following equation is the same as eq. (122).

[Formula 1]

$$\sum_i \int_S \left( \sum_j L_{ij} u_j - f_i \right) \cdot \delta u_i^* ds = 0$$

For example, the calculation unit 1 inputs, as design data, data that show the shape and material of an analysis object, and reads data of an original differential operator $L_{ij}$ to be used in the calculation, based on the design data. By using the original differential operator $L_{ij}$, the calculation unit 1 calculates a solution of a differential equation expressed as the foregoing equation of Formula 1. This makes it possible to calculate a solution of a non-self-adjoint problem.

In the foregoing equation (Formula 1), as an example, $f_i$ is assumed to represent a force acting on an analysis object, $u_i$ is assumed to be a displacement of the analysis object, but $f_i$ and $u_i$ are not limited to these. Depending on an analysis object and a differential operator, $f_i$ and $u_i$ may represent something other than a force and a displacement in some cases. For example, in a variety of analysis such as structural analysis, vibration analysis, electric field analysis, material analysis, fluid analysis, thermal analysis, acoustic field analysis, electromagnetic analysis, circuit simulator, and the like, appropriate values for an analysis object can be set for $f_i$ and $u_i$.

(Modification example 1)

The calculation unit 1 may calculate a solution $u_j$ by the following equation. The following equation is identical to the above-described eq. (123). In this case, a solution of a self-adjoint problem can be calculated.

[Formula 2]

$$\sum_i \int_S \left( \sum_j L_{ij} u_j - f_i \right) \cdot \delta u_i ds = 0$$

(Modification example 2)

The calculation unit 1 can calculate a solution $u_j$ of an analysis object by the following equation, by the direct variational method. The following equation is identical to the above-described eq. (127).

[Formula 3]

$$\sum_i \int_S \left( \sum_j L_{ij} u_j - f_i \right) \cdot \delta \sum_j L_{ij} u_j ds = 0$$

In the calculation of a solution $u_j$ by the direct variational method, a solution such that a variation is zero may be calculated in the functional $\Pi$ of the following equation.

[Formula 4]

$$\Pi \equiv \sum_i \int_S \left( \sum_j L_{ij} u_j - f_i \right)^2 ds$$

[Embodiment 2]

FIG. 3 is a functional block diagram showing an exemplary configuration of an analyzer of Embodiment 2. An analyzer 10a shown in FIG. 3 includes a setting unit 11, an adjoint boundary condition calculation unit 12, and a non-self-adjoint calculation unit 13.

The setting unit 11 sets an original differential operator and a boundary condition of a displacement of an analysis object. For example, the setting unit 11 is capable of receiving data that show a configuration or a material of an analysis object, as design data from a user, and determining an original differential operator based on the configuration or the material of the analysis object. Further, the setting unit 11 can receive input of boundary condition data from the user.

The adjoint boundary condition calculation unit 12 calculates an adjoint boundary condition based on the boundary condition received by the setting unit 11. For example, the adjoint boundary condition calculation unit 12 is capable of calculating an adjoint boundary condition from a boundary term that is obtained by partial integration of a sum of integration, that is, an inner product, obtained by multiplying a differential equation that includes an original differential operator contained in differential equation data that the setting unit 11 has read, by a dual eigenfunction $\phi_i^*$ or a dual displacement $u_i^*$.

For example, in the case where the analysis object is a two-dimensional elastic body, it is possible to calculate an adjoint boundary condition by using the above-described eq. (91). In this case, in eq. (91), such a condition for $\phi_i^*$ and $p_{Ei}^*$ that a boundary term is zero in the case where a homogeneous boundary condition imposed on $u_{Hi}$ and $p_{Hi}$ is imposed on $\phi_i$ and $p_{Ei}$ can be determined to be an adjoint boundary condition. As one example, in the case where a boundary condition such that a force is zero ($p_{Ei}$=0) is imposed on a boundary surface of an analysis object, $\phi_i^*$ may be arbitrary and either $p_{Ei}^*$ or $\phi_i$ has to be zero so that a boundary term $R_E$ is zero. Here, in the case where a boundary condition that a displacement is also zero ($\phi_i$=0) is imposed on the boundary surface of the analysis object, $p_{Ei}^*$ is arbitrary. In this case, in the adjoint boundary condition, both of the displacement and the force of the boundary surface are arbitrary. In such a case, the boundary condition and the adjoint boundary condition do not coincide, the problem is a non-self-adjoint problem. However, according to the effects of eq. (106), $\Sigma_j L_{ji}^* \phi_j^*$ has to satisfy the boundary condition imposed on $\phi_i$. This is included in the dual boundary condition. In the case of a non-self-adjoint problem, the problem is solved appropriately, by using the primal boundary condition and the dual boundary condition.

The non-self-adjoint calculation unit 13 calculates primal simultaneous differential equations and dual simultaneous differential equations from original differential operators, and determine a primal eigenfunction and a dual eigenfunction by using the primal simultaneous differential equations and the dual simultaneous differential equations, as well as the boundary condition and the adjoint boundary condition, thereby calculating solutions of simultaneous differential equations.

For example, let an original differential operator be $L_{ij}$. Then, a primal simultaneous differential equation can be defined as eq. (105), and a dual simultaneous differential equation can be defined as eq. (106). Further, according to eq. (90), an adjoint differential operator $L_{ij}^*$ can be calculated. The non-self-adjoint calculation unit 13 can defines a primal simultaneous eigenvalue problem (eq. (98)) and a dual simultaneous eigenvalue problem (eq. (99)) by using the primal simultaneous differential equation (eq. (105)), the dual simultaneous differential equation (eq. (106)), the boundary condition, and the adjoint boundary condition, and can calculate a primal eigenfunction $\phi$, and a dual eigenfunction $\phi^*$.

It should be noted that the solution method used by the non-self-adjoint calculation unit 13 is not limited to the solution method using the primal simultaneous eigenvalue problem (eq. (98)) and the dual simultaneous eigenvalue problem (eq. (99)). For example, it is possible to calculate a primal eigenfunction $\phi$, and a dual eigenfunction $\phi^*$ by using eqs. (122) and (123). In this case, the primal eigenfunction $\phi$ and the dual eigenfunction $\phi^*$ can be calculated analytically and approximately. For example, as is described below, an approximate eigenfunction can be calculated by using eqs. (122) and (123).

The non-self-adjoint calculation unit 13 calculates a solution of simultaneous equations of a primal problem by using a primal eigenfunction $\phi$ and a dual eigenfunction $\phi^*$. For example, it is capable of calculating a coefficient $c_k$ expressed by eq. (111), and substituting the same into eq. (69), to calculate a solution function $u_{Hj}$. Further, non-self-adjoint calculation unit 13 is capable of calculating a coefficient $c_k^*$ of a dual problem according to eq. (115), and substituting the same into eq. (70), to calculate a solution function $u_{Hj}^*$ of the dual problem.

(Operation example)

FIG. 4 is a flowchart showing an exemplary operation of the analyzer 10a shown in FIG. 3. In the example shown in FIG. 4, the setting unit 11 receives input of design data from a user (S1). The design data are not limited to a specific object or format. For example, in the case where the analysis object is a solid matter, the setting unit 11 can receive input of data representing a shape of a material of the analysis object. In the case where the analysis object is a fluid, the setting unit 11 can receive input of data representing physical properties of the fluid. Further, in the case of analysis by the finite element method, the setting unit 11 may receive input of data showing a configuration or physical properties of each element. Further, the setting unit 11 is capable of, not only receiving input from a user, but also obtaining design data by, for example, reading the design data from an accessible recording medium, or downloading the same via a network.

The setting unit 11 determines an original differential operator based on design data obtained at S1, and determine a differential equation of a primal problem (S2). For example, the setting unit 11 is capable of extracting differential operators corresponding to a shape of the analysis object indicated by design data from preliminarily recorded data, and setting differential equations including the extracted differential operators as differential equations of the primal problem. In this way, it is possible to determine differential equations of a primal problem in accordance with design data. Here, as one example, a case where the original differential operator is $L_{ij}$ is explained.

The setting unit 11 further obtains boundary condition data (S3). The boundary condition data are data that relate to a boundary condition of an analysis object, and are not limited to a specific object or format. For example, data indicating a condition of at least one of a displacement and a force of an analysis object on a boundary surface can be input as a boundary condition. In the present invention, both of a displacement and a force can be set, which could not been set conventionally.

The adjoint boundary condition calculation unit 12 generates adjoint boundary condition data, using the differential equations set at S2, and the boundary condition data obtained at S3. The adjoint boundary condition may be calculated by using eq. (91), as described above. Further, in the exemplary case where the finite element method is used, the boundary term expressed by eq. (60) can be calculated by using eqs. (208), (229), (207), and (228), which indicate a boundary displacement, a dual displacement, a surface force, and a dual surface force, respectively.

The non-self-adjoint calculation unit 13 generates data that indicate a primal simultaneous differential equation (for example, eq. (105)) and a dual simultaneous differential equation (eq. (106)), from the original differential operator $L_{ij}$ (S5). Then, the non-self-adjoint calculation unit 13 calculates a primal eigenfunction $\phi$, and a dual eigenfunction $\phi^*$, by using the primal simultaneous differential equation and the dual simultaneous differential equation calculated at S5, as well as the boundary condition obtained at S2 and the adjoint boundary condition calculated at S4 (S6).

By using the primal eigenfunction $\phi$ and the dual eigenfunction $\phi^*$ calculated at S6, the non-self-adjoint calculation unit 13 calculates a solution function $u_{Hj}$ of simultaneous equations of the primal problem, by the eigenfunction method, for example, by eqs. (111) and (69) (S7). Further, by using the primal eigenfunction $\phi$, and the dual eigenfunction $\phi^*$, the non-self-adjoint calculation unit 13 can calculate a solution function $u_{Hj}^*$ of simultaneous equations of the dual problem, for example, by eqs. (115) and (70). Regarding the solution calculated in this way, an analysis result is output to a display of a computer (not shown) or the like (S8). A specific example of an analysis result is described below.

The above-described processing makes it possible to determine an adjoint boundary condition based on a boundary condition, and further, by calculating a primal differential operator and a dual differential operator from an original differential operator, determine a primal eigenfunction and a dual eigenfunction of these. By calculating a solution of simultaneous equations of the primal problem by using these eigenfunctions, a solution of the non-self-adjoint problem can be calculated. It should be noted that even regarding a self-adjoint problem, a solution thereof can be calculated through the foregoing processing.

So far, an exemplary operation of the analyzer 10a has been described, but the processing by the analyzer 10a is not limited to the above-described example. It should be noted that the present embodiment can be regarded as a specific example of Embodiment 1 described above.

[Embodiment 3]

FIG. 5 is a functional block diagram illustrating an exemplary configuration of an analyzer according to Embodiment 3. An analyzer 10b shown in FIG. 5 includes a setting unit 11, an adjoint boundary condition calculation unit 12, a self-adjoint determination unit 15, a non-self-adjoint calculation unit 13, and a self-adjoint calculation unit 14. The setting unit 11, the adjoint boundary condition calculation unit 12, and the non-self-adjoint calculation unit 13 can be formed to have the same configurations as those in Embodiment 1 described above.

The analyzer 10b includes a self-adjoint determination unit 15 that determines whether a boundary condition and an adjoint boundary condition calculated by the adjoint boundary condition calculation unit coincide. In the case where the self-adjoint determination unit 15 determines that the boundary condition and the adjoint boundary condition

coincide, the self-adjoint calculation unit 14 determines a self-adjoint eigenfunction of the self-adjoint problem from original differential operators, so as to calculate a solution of the self-adjoint problem. In the case where it is determined that the boundary condition and the adjoint boundary condition do not coincide, the non-self-adjoint calculation unit 13 obtains a primal eigenfunction and a dual eigenfunction by using primal simultaneous differential equations and dual simultaneous differential equations, as well as the boundary condition and the adjoint boundary condition, so as to calculate solutions of simultaneous differential equations.

The self-adjoint determination unit 15 is capable of determining whether the boundary condition and the adjoint boundary condition are self-adjoint or non-self-adjoint, by determining whether the boundary condition and the adjoint boundary condition coincide. In other words, in the case where the original differential operator is self-adjoint and the boundary condition and the adjoint boundary condition coincide, they can be determined to be self-adjoint, and in the case where they do not coincide, they can be determined to be non-self-adjoint. Further, the determination by the self-adjoint determination unit 15 regarding whether the boundary condition and the adjoint boundary condition coincide or not involves the determination regarding whether the original differential operator $L_{ij}$ and the adjoint differential operator $L_{ij}$* coincide or not ($L_{ij}=L_{ij}$* or not). For example, the adjoint differential operator $L_{ij}$* can be calculated by partial integration of a sum of integration, that is, an inner product, obtained by multiplying a differential equation including the original differential operator by a dual eigenfunction $\phi_i$* or a dual displacement $u_i$*. For example, the adjoint differential operator $L_{ij}$* can be calculated by eq. (62) or (90).

The self-adjoint calculation unit 14 generates the simultaneous differential equations of the self-adjoint problem from the original differential operators, and calculates solutions of the simultaneous differential equations. For example, the self-adjoint calculation unit 14 can calculate the self-adjoint eigenfunction $\phi_i$ by using eq. (107) or (123) as simultaneous differential equations of the self-adjoint problem. The self-adjoint calculation unit 14, for example, calculates $c_k$ by an equation in which the self-adjoint eigenfunction $\phi_{ik}$ is replaced with $\phi_{ik}$* of eq. (111), and substituting this $c_k$ into eq. (69), thereby obtaining a solution function $u_{Hj}$ of the self-adjoint problem.

(Operation example)

FIG. 6 is a flowchart showing an exemplary operation of the analyzer 10b shown in FIG. 5. In FIG. 6, the analyzer 10b can execute the processing of S1 to S4 in the same manner as the processing of S1 to S4 in Embodiment 2. At S21, the self-adjoint determination unit 15 compares data showing the boundary condition obtained at S1 and the adjoint boundary condition data generated at S4, and thereby determines whether the boundary condition coincides with the adjoint boundary condition or not. When the self-adjoint determination unit 15 determines at S21 that they do not coincide (i.e., non- self-adjoint), the non-self-adjoint calculation unit 13 executes the processing at S5 to S7. The processing at S5 to S7 may be executed in the same manner as that at S4 to S7 in Embodiment 2.

When the self-adjoint determination unit 15 determines that the boundary condition and the adjoint boundary condition coincide (i.e., self-adjoint) at S21, the self-adjoint calculation unit 14 generates self-adjoint differential equation data from the original differential operator (S22). For example, the self-adjoint calculation unit 14 can use eq. (107) as the self-adjoint differential equation. In this case, the self-adjoint calculation unit 14 calculates the self-adjoint eigenfunction $\phi_i$ by using the original differential operator $L_{ij}$ obtained at S3 as a self-adjoint differential operator, and the boundary condition set at S2 as a self-adjoint boundary condition. Then, the self-adjoint calculation unit 14 calculates a solution function uj of the simultaneous differential equations of primal problem, by using the self-adjoint eigenfunction $\phi_i$ (S24). The result output at S8 may be executed in the same manner as that at S8 in Embodiment 2.

Through the above-described processing, whether a problem of an analysis object is self-adjoint or non-self-adjoint can be determined, and the processing can be switched appropriately according to the determination result. It should be noted that the present embodiment can be considered as a specific example of Embodiment 1 or 2 described above.

[Embodiment 4]

The present embodiment is an exemplary case where an analyzer is applied to an analysis using the finite element method (FEM). In the present embodiment, an original differential operator and a boundary condition are set with respect to a finite element. For example, the configuration and the analysis processing of the analyzer according to Embodiments 1 to 3 described above can be applied to a finite element as well.

Here, difference of the present embodiment, which is an embodiment in which the analysis processing according to the Embodiments 1 to 3 is used with respect to a finite element, from a conventional finite element method is explained. First of all, a variation operation is not executed in the conventional h-method as described above, while in the present embodiment, a solution is calculated by the direct variational method (for example, in Embodiment 1). The p-method is a technique for approximating an internal displacement of the element by a high-order function, in which a function that appropriately approximates an internal displacement of the element is found through trial and error and is used. In

contrast, in the present embodiment, a primal eigenfunction and a dual eigenfunction are calculated, and with use of these, an internal displacement of the element is appropriately explained.

FIG. 7 is a flowchart showing an exemplary operation of an analyzer of the present embodiment. The analyzer of the present embodiment may have the same configuration as that shown in FIG. 2 or FIG. 5. It should be noted that the flowchart shown in FIG. 7 is merely one example, and the present invention is not limited to this. In the example shown in FIG. 7, first of all, the setting unit 11 receives input of data indicating a shape of an analysis object (S31). For example, data indicating a shape of a finite element are input. Further, the setting unit 11 creates a weight constant (S32). It is preferable that the weight constant w is used in such a manner that an eigenvalue $\lambda$ is determined as a dimensionless quantity. For example, in the case where an analysis object is a ring, the order of the differential operator is second. Therefore, if the characteristic length is given as r, it is preferable that $w=1/r^2$ is set. Here, as the characteristic length, a length of a certain characteristic part of the object is used. In the case of a ring, a radius thereof is preferably used as a characteristic length. In this case, as eigenvalues $\lambda$ of similar figures coincide, calculation can be omitted with respect to the object having a similar figure.

Further, the setting unit 11 inputs a nodal displacement and a nodal force (S33). For example, a displacement u and a dual displacement u* of a node can be expressed by a boundary function $u_A$ that represent a displacement of an element boundary and a correction function $u_0$, and the correction function uo can be expressed by a sum of trial functions $\psi_0$ (For example, eqs. (173) and (190)). The setting unit 11 sets a trial function (S34). The trial function can be set, for example, as eq. (179). For example, in the case of 16-nodes quadrilateral element as shown in FIG. 8, a displacement on a boundary surface can be expressed by eq. (208), a dual displacement can be expressed by eq. (229), a surface force can be expressed by eq. (207), and a dual surface force can be expressed by eq. (228).

The adjoint boundary condition calculation unit 12 calculates an adjoint boundary condition from the boundary condition. For example, the adjoint boundary condition calculation unit 12 can calculate an adjoint boundary condition by substituting a displacement and a surface force of an element into a boundary term R that is obtained by partial integration of a sum of integration, that is, an inner product, obtained by multiplying differential equations that includes original differential operators by a dual displacement $u_i^*$.

For example, the boundary term R can be expressed by eq. (250). In this case, in eq. (250), a matrix element of a nodal force F is divided into a known part $F_b$ and an unknown part $F_v$, and the same are rearranged, while a nodal displacement U is divided into a known part $U_b$ and an unknown part $U_v$, and the same are rearranged. A dual nodal force F* also is divided into a known part $F_b^*$ and an unknown part $F_v^*$, and a dual displacement U* is divided into a known part $U_b^*$ and an unknown part $U_v^*$, and the same are arranged so as to correspond to vector elements of the rearranged nodal forces $F_b$, $F_v$ and nodal displacements $U_b$, $U_v$. Then, a result like eq. (251) is obtained. In order to make R zero, $U_b^*$ and $F_b^*$ corresponding to the unknown parts $F_v$ and $U_v$, respectively, should be zero. Therefore, an adjoint boundary condition expressed by eqs. (254) and (255) are obtained.

The non-self-adjoint calculation unit 13, for example, generates a primal trial function $[\psi_h]$ and a dual trial function $[\psi_h^*]$ (S37, S38). Let an approximate primal eigenfunction be $\{\phi\}$, and let an approximate dual eigenfunction be $\{\phi^*\}$. Let their respective coefficient vectors be $\{e_h\}$ and $\{e_h^*\}$, and $\{\phi\}$ and $\{\phi^*\}$ are given as:

$$\{\phi\}=[\psi_h]\{e_h\}$$
$$\{\phi^*\}=[\psi_h^*]\{e_h^*\}$$

Substituting these into the primal simultaneous differential equations (eq. (105)) and the dual simultaneous differential equations (eq. (106)), we obtain coefficient vectors $\{e_h\}$ and $\{e_h^*\}$ according to eqs. (122) and (123), and thereafter, obtain approximate eigenfunctions $\{\phi\}$ and $\{\phi^*\}$ (S39).

In one example, the primal trial function $[\psi_h]$ can be expressed as eq. (313). In this case, a function matrix $\Gamma$ is defined by eq. (293), and coefficient matrices $[c_e]$ and $[c_n]$ are defined by eqs. (294) and (295). The dual trial function $[\psi_h^*]$ can be expressed as, for example, eq. (373). In this case, coefficient matrices $[c_e^*]$ and $[c_h^*]$ are defined by eqs. (354) and (355).

The non-self-adjoint calculation unit 13 calculates a solution function of simultaneous equations of the primal problem by the eigenfunction method, by using the primal eigenfunction and the dual eigenfunction calculated at S39 (S40). Regarding the solution thus calculated, an analysis result is output to a computer display (not shown) or the like (S41). Specific examples of the analysis result are to be described below.

At S40, for example, according to (Formula 1), an equation (for example, eqs. (400), (401), or eq. (402)) obtained by multiplying the variation $\{\delta\phi\}$ of the approximate eigenfunction $\{\phi\}$ calculated at S37, and the variation $\{\delta\phi^*\}$ of the approximate dual eigenfunction $\{\phi^*\}$ calculated at S38 on the primal simultaneous differential equations and the dual simultaneous differential equations, and integrating the same, is solved, whereby an eigenvalue and an eigenvector can be obtained. With use of these, the displacement $\{u\}$ of the primal problem is determined.

As described above, by using the finite element method, even in the case where the shape is complicated and it is difficult to calculate an eigenfunction directly, an approximate eigenfunction can be determined.

[Embodiment 5]

An information processing device 10c illustrated in FIG. 67 includes an initial equation decision unit 21, a boundary condition decision unit 22, and a calculation unit 23. The initial equation decision unit 21 reads data that show a structure and properties of constituent elements of a system to be processed, and decides an equation that expresses the system. This equation may be, for example, n equations that include a variable representing a physical quantity to be determined. The equation can be expressed by, for example, data of a matrix or data of a differential equation, and the representation format of data is not limited particularly. The variable can be expressed by, for example, data of a vector, a function, or the like, but the representation format thereof is not limited particularly.

The initial equation decision unit 21 receives, for example, the designation of a system to be processed from a user, and can select simultaneous differential equations corresponding to the designated system, from preliminarily recorded simultaneous differential equations. Alternatively, the initial equation decision unit 21 may be configured to receive simultaneous differential equations from a user.

The boundary condition decision unit 22 reads a value representing a physical quantity as data representing a boundary condition, and decides a boundary condition. The boundary condition decision unit 22 also receives, for example, a boundary condition such that an external force and a displacement are designated with respect to one direction of one point, that is, 1 degree of freedom. Owing to the functions of the calculation unit 23, which are described below, even if a plurality of physical quantity are defined as a boundary condition with respect to 1 degree of freedom, such a case can be dealt with. As a boundary condition, not only designation of a known part but also designation of an unknown part can be received. For example, such a setting that the displacement and the external force are unknown with respect to one node can be received.

The calculation unit 23 transforms the n initial equations into an equation of 2n variables or an equation including 2n equations, then, decides a known part that includes a variable that becomes known according to a boundary condition, and an unknown part that includes an unknown variable, in the equation having 2n variables or the equation including 2n equations obtained by the transformation, and calculates a solution of the equation regarding the unknown part. For example, in the case where simultaneous differential equations are decided as initial equations, as shown in eq. (963), it can be transformed into a format having equations the number of which is twice the number of the initial equations. In the case where equations expressed by matrices and variable vectors are decided as initial equations, the initial equations can be transformed into, for example, as shown in eq. (442), matrices including variable vectors having a degree of freedom that is twice the degree of freedom of the variable vector of the initial equations.

The calculation unit 23 is capable of outputting information obtained from the calculated solution or information obtained from the solution. For example, in the case where an object is subjected to a force in a system to be processed and is displaced, the calculation unit 23 can output a transformed state, stress distribution, error distribution of the same, or the like, as information obtained from the solution.

(Exemplary operation using adjoint differential operator)

The initial equation decision unit 21 is capable of deciding, for example, simultaneous differential equations that express the relationship between a force acting on an object as a constituent element of the system, and a variable that represents a physical quantity of the object. The physical quantity of the object may be, for example, a displacement, a velocity, or the like, but it is not limited specifically.

The calculation unit 23 generates data indicating the 2n equations, by using differential operators of simultaneous differential equations decided by the initial equation decision unit 21, and adjoint differential operators that are determined from the differential operators, and calculates solutions of the 2n equations. The calculation unit 23 newly introduces dual simultaneous equations (including n equations) that includes dual variables, with respect to differential operators and variables of simultaneous differential equations of a primal problem that represents a system to be processed. This results in calculation of solutions of 2n equations. In this way, adjoint differential operators that are determined from differential operators are used for generating the 2n equations, and solutions of the 2n equations are calculated. By doing so, even in the case where a plurality of physical quantities are set as a boundary condition with respect to 1 degree of freedom, solutions can be calculated.

It should be noted that, for example, as shown in eq. (64), an inner product of the result of the differential operators of the simultaneous differential equations of primal problem acting on the primal variables with the dual variables is equal to an inner product of the primal variables with a result of the differential operators of the dual simultaneous differential equations acting on the dual variables. In the present specification, various examples of determining dual differential equations regarding various simultaneous differential equations are disclosed. It should be noted that information about dual differential equations could be recorded in association with differential equations preliminarily. The calculation unit 23 can read out information about dual differential equations corresponding to differential equations decided by the initial equation decision unit 21, and can use the same in an operation.

(Exemplary operation with respect to finite element)

Further, the calculation unit 23 is capable of calculating a solution of an equation, without calculating an adjoint operator, by transforming initial equations into an equation that includes 2n variables. For example, the initial equation decision unit 21 decides two n-dimensional variable vectors and an n-row matrix, thereby deciding initial equations that indicate physical quantities at nodes of a constituent element of a system.

For example, the calculation unit 23 is capable of generating an n-row matrix that represents the relationship between an n-dimensional vector of variables that represent displacements of nodes and an n-dimensional vector of variables that represent nodal forces. This can be considered to express differential equations that the system should satisfy, by using the n-dimensional vectors and the n-row matrix. For example, initial equations can be decided in the form as shown by eq. (441), eq. (449), or the like. In the example of eq. (441), n equations are expressed by an nXn matrix K and variable vectors {U} and {F} that are n-dimensional vectors.

The boundary condition decision unit 22 is configured to be able to decide a boundary condition in which, regarding variables of equations, the number of degrees of freedom of variables whose values are known, and the number of degrees of freedom of variables whose values are unknown, are different. For example, The boundary condition decision unit 22 may be configured so that even in the case where a user specifies a boundary condition such that a plurality of physical quantities are unknown or known with respect to one degree of freedom, an error display indicating that the setting by the user is inappropriate should not be output.

In this case, the calculation unit 23 generates a 2n-dimensional vector, based on two variable vectors. Further, based on variables of this 2n-dimensional vector, the matrix is transformed into a 2n-column matrix, and among the variables of the 2n-dimensional vector, a known part that includes variables that are made known by a boundary condition, and an unknown part that includes unknown variables, are decided. Here, the degree of freedom of the unknown part, and the degree of freedom of the known part do not have to be the same. For example, the calculation unit 23 can decide the unknown part and the known part, without imposing a condition that the degree of freedom of the unknown part and the degree of freedom of the known part should be the same. The calculation unit 23 transforms the 2n-column matrix and the 2n-dimensional vector so that a variable of the unknown part is expressed by a variable of the known part, and the variable of the unknown part is calculated with use of the transformed matrix. For example, the calculation unit 23 can rearrange elements of the variable vector so that the known part and the unknown part of each variable are combined, respectively, and accordingly, arrange the elements of the matrix. It should be noted that this specific example is shown by eqs. (441) to (447) in Section 9.2.

The calculation unit 23 can calculate a solution by executing the foregoing processing, with respect to both of a self-adjoint problem and a non-self-adjoint problem. For example, the calculation unit 23 can accept the case where a boundary condition of 1 degree of freedom , for example, such that a displacement and a force in the x direction of a certain node are both zero is set, or the case where a boundary condition such that a displacement and a force in the y direction of a certain node are both unknown is set. Such an operation as described above, by an equation having 2 times of variables, without any limitation on the numbers of degrees of freedom of the unknown part and the known part, enables calculation of a solution even under a non-self-adjoint boundary condition.

In the case where a plurality of solutions exist, for example, it is possible to decide a mode coefficient with respect to homogeneous solutions by a functional $\Pi$ of eq. (128) so that variations are zero, and determine a solution by using the decided mode coefficient. Further, the configuration may be such that input of a value in the vicinity of the decided mode coefficient is received from a user, a solution is calculated by using a mode coefficient of an input value, and the solution or information obtained from the solution is output. It should be noted that it is not necessary to provide such a configuration in an information processing device provided with the calculation unit 23. Alternatively, with respect to a plurality of solutions calculated by the calculation unit 23, the processing for determining a solution by using the mode coefficient may be executed by another information processing device. Further alternatively, the configuration may be such that input of a value in the vicinity of the mode coefficient from a user is received, and the processing of calculating a solution by using a mode coefficient of the input value and outputting the same is executed by another information processing device.

For example, in the case where as solutions of an equation calculated by the calculation unit 23, one particular solution and a plurality of homogeneous solution are obtained, the solutions can be expressed as the particular solution and the homogeneous solutions multiplied by an arbitrary mode coefficient. A set of mode coefficients can be determined by applying the solution expressed as the function of the mode coefficients to the equation (127) such that the variation of the functional $\Pi$ of equation (128) should be zero.

By using the set of mode coefficients determined herein, a solution that satisfies the differential equation approximately as a whole structural system can be obtained. Exemplary processing in such a case where a plurality of solutions exist are described in, for example, Sections 9.4, 9.5, and 11.3.10. In the present embodiment, the calculation unit 23 calculates a solution of an equation where the degree of freedom is increased to twice, in a situation in which the degree of freedom of an unknown part and the degree of freedom of a known part are not necessarily identical. With

this calculation unit 23, a plurality of solutions are calculated in some cases. In such a case as well, as described above, a typical solution among the plurality of solutions is calculated, and outputting of a solution is executed in a range that includes this solution, whereby an appropriate result can be output. Further, an operation by a user causes a solution to vary and be displayed. Thus, a user interface that is capable of conveying the result of a plurality of solutions in a recognizable style is provided.

[Embodiment 6]

An information processing device 10d shown in FIG. 68 includes an initial equation decision unit 21, a boundary condition decision unit 22, and a determination unit 33. The initial equation decision unit 21 and the boundary condition decision unit 22 can be configured in the same manner as that of the initial equation decision unit 21and the boundary condition decision unit 22 shown in FIG. 67. The determination unit 33 determines whether the boundary condition of the simultaneous differential equations decided by the initial equation decision unit 21 is a self-adjoint condition or not.

(Example of determination using adjoint boundary condition)

For example, in the case where the same number of dual variables as the number of variables of simultaneous differential equations and dual simultaneous differential equations are defined, the determination unit 33 calculates a boundary term obtained by partial integration of a sum of integration, that is, an inner product, of the simultaneous differential equations and the dual variables, and can decide such a condition of the dual variables that under a boundary condition decided by the boundary condition decision unit 22, the boundary term is zero, as an adjoint boundary condition. In the case where the adjoint boundary condition coincides with the boundary condition, the determination unit 33 determines that it is a self-adjoint condition.

In order to calculate the adjoint boundary condition, for example, equations for calculating a boundary term in association with differential equations can be recorded preliminarily in a recording section that is accessible by the information processing device 10d. The determination unit 33 can read equations of a boundary term corresponding to the differential equations decided by the initial equation decision unit 21, from the recording section, and calculate a boundary term.

The following is a specific example. In a quadrilateral element model, as shown by eq. (250) or eq. (1814), a boundary term R can be expressed by a product of a transposed matrix of a nodal external force F and displacement U, and a matrix of a dual nodal external force F* and a dual displacement U*. In such a case, as shown by eq. (251) or eq. (1814), each of the nodal external force F, the displacement U, the dual nodal external force F* and the dual displacement U* is divided into an unknown part and a known part, and they are rearranged, whereby an adjoint boundary condition is obtained. In this way, in a boundary term expressed by a transposed matrix of variables of differential equations and a matrix of dual variables, each variable is divided into an unknown part and a known part, and they are rearranged, whereby an adjoint boundary condition can be obtained. For example, eq. (251) or eq. (1814) can be used in the case where operators and a boundary condition of initial differential equations are set with respect to a finite element so that analysis is executed.

The determination unit is, for example, capable of outputting information based on a determination result regarding whether or not it is a self-adjoint condition, to a user. For example, in the case where the boundary condition and the adjoint boundary condition do not coincide and it is determined to be a non-self-adjoint condition, the determination unit can output a message saying that the analysis object is non-self-adjoint under the boundary condition. For example, the determination unit 33 is capable of outputting information that guiding the analysis of a non-self-adjoint problem, such as information that a function of dealing with a non-self-adjoint problem is necessary for analysis, where software that enables analysis of a non-self-adjoint problem is available and how to obtain it, etc.

Alternatively, based on information about whether or not the adjoint boundary condition and the boundary condition coincide, the determination unit 33 is capable of controlling a subsequent operation. For example, in the case where the adjoint boundary condition and the boundary condition coincide, the determination unit 33 causes analysis processing using the conventional finite element method to be executed, and in the case where the adjoint boundary condition and the boundary condition do not coincide, as described above, the determination unit 33 causes the information processing device to execute processing that can deal with a non-self-adjoint problem. Processing that can deal with a non-self-adjoint problem is, for example, processing of transforming initial equations into an equation that includes 2n equations, and in the transformed equation including 2n equations, determining a known part including a known variable and an unknown part including an unknown variable, thereby calculating a solution of an equation with respect to the unknown part.

(Example of determining self-adjoint condition without calculation of adjoint boundary condition)

It should be noted that there are some cases where the determination of a self-adjoint condition can be achieved without the calculation of an adjoint boundary condition as in the foregoing case. For example, as described in Section 11.7.1, in the case where a self-adjoint boundary condition is achieved, according to eq. (251) or eq.(1816), the number "n1" of known parts Ub of a nodal displacement U is equal to the number of unknown parts Fv of a nodal external force, and the number "n2" of known parts Fb of a nodal external force F is equal to the number of unknown parts Uv of a nodal displacement. Therefore, the determination unit 33 can determine whether it is a self-adjoint condition or not, based on whether or not a degree of freedom of an unknown part of one variable is equal to a degree of freedom of a known part of another variable.

(Exemplary combination of determination unit and calculation unit)

It should be noted that a configuration obtained by adding the determination unit 33 in FIG. 68 to the information processing device in FIG. 67 is possible. For example, based on the determination result by the determination unit 33, a control operation can be executed regarding whether or not the calculation unit 23 should perform an operation using the 2n-dimensional equation. With this, the calculation unit 23 can appropriately switch a non-self-adjoint operation using the 2n-dimensional equation, and a self-adjoint operation using the n-dimensional equation, thereby improving the processing efficiency.

The following is a specific example of the same. The boundary condition decision unit 22 can receive the designation of a known part and an unknown part of the variable from a user. Based on the designation received from the user, the determination unit 33 decides the unknown part and the known part of the variable, and outputs information about whether or not a degree of freedom of an unknown part of one variable is equal to a degree of freedom of a known part of another variable. In the case where the determination unit 33 determines that the degree of freedom of the unknown part of one variable is equal to the degree of freedom of the known part of another variable, the calculation unit 23 calculates the unknown part of the variable by using the n-row matrix expressing the differential operators. In the case where the determination unit 33 determines that the degree of freedom of the unknown part of one variable is not equal to the degree of freedom of the known part of another variable, the differential equations are transformed to a format having 2n variables and including 2n equations, and among the 2n transformed equations, solutions of the equations with respect to the unknown part is calculated.

[Operation example]

(Exemplary setting applicable to case of self-adjoint condition)

FIG. 69 is a flowchart showing exemplary processing for setting a nodal displacement vector, and a nodal external force vector, in the conventional analysis with respect to a finite element, on the premise that the boundary condition satisfies the self-adjoint condition. In the example shown in FIG. 69, the information processing device first receives input of a nodal displacement (S101). For example, a degree of freedom for which a displacement is known and its value are input by a user. Alternatively, data indicating a degree of freedom of a nodal displacement and its value may be read in. The degree of freedom is specified by, for example, the position and direction of a node. When a nodal displacement is input, a degree of freedom of a known part Ub of a nodal displacement and its value are settled (S102). When the degree of freedom of the known part Ub of the nodal displacement and its value are settled, a degree of freedom of an unknown part Fv of a nodal external force can be fixed automatically (S103). This is because in the case where a self-adjoint condition is satisfied, the degree of freedom of the unknown part Fv is equal to that of the known part Ub.

When the degree of freedom of the known part Ub of the nodal displacement is settled, the degree of freedom of the known part Ub is subtracted from a total degree of freedom, whereby the degree of freedom of the unknown part Uv of the nodal displacement is determined (S104). In the case where a self-adjoint condition is satisfied, the degree of freedom of the known part Fb is equal to the degree of freedom of the unknown part Uv. Therefore, the degree of freedom of the known part Fb is settled, whereby the value of the known part Fb is assumed to be zero (S105). At S107, when a degree of freedom and a value of a nodal external force are input by a user, the information processing device checks if the known part Fb of the nodal external force is not incompatible with the degree of freedom, and corrects the value of the known part Fb.

In this way, in the flow shown in FIG. 69, when the known part Ub of the nodal displacement is decided, the unknown part Fv, the unknown part Uv, and the known part Fb are calculated automatically. For a degree of freedom of a nodal external force for which a value is not designated, zero is set. In this way, as the degree of freedom satisfies the self-adjoint boundary condition, the analysis can be performed by the conventional-type finite element method, based

on the set nodal displacement and nodal external force (S108).

(Exemplary boundary condition setting 1 applicable to case of non-self-adjoint condition as well)

FIG. 70 is a flowchart showing exemplary processing for setting a nodal displacement vector and a nodal external force vector that is also applicable to the case where a boundary condition is a non-self-adjoint condition, in an analysis in which a finite element is used. In the example shown in FIG. 70, the boundary condition decision unit 22 of the information processing device receives input of a degree of freedom of a nodal displacement and a value thereof (S201), and decides and records a degree of freedom of a known part Ub of a nodal displacement and a value thereof (S202). When the known part Ub is decided, an unknown part Fv of the nodal external force (S203), an unknown part Uv of the nodal displacement (S204) and a known part Fb (S205) are calculated automatically. At S205, for a degree of freedom of a nodal external force for which a value is not designated, zero is set.

The boundary condition decision unit 22 receives input of a degree of freedom of a nodal external force and a value thereof (S206), and corrects the degree of freedom and value of the nodal external force Fb to the input degree of freedom and value (S207). Further, the boundary condition decision unit 22 also receives input of an unknown part of the nodal displacement (S208). In the present example, a degree of freedom of a node for which a displacement is unknown is input. For example, the configuration may be such that a user can input the same by designating a node and a direction on a screen, or may be such that data indicating a degree of freedom of an unknown part are read in. The boundary condition decision unit 22 corrects the degree of freedom of the unknown part Uv, based on the input information (S209).

Similarly, the boundary condition decision unit 22 receives input of an unknown part of the nodal external force (S210), and corrects the degree of freedom of the unknown part Fv, based on the input information (S211). At S208 to S211, such a designation that designates both of the displacement and the external force as unknown parts with respect to the same degree of freedom can be received. In other words, the boundary condition decision unit 22 is capable of setting such a condition that different variables are set with respect to the same degree of freedom.

The determination unit 33 determines whether or not the degree of freedom satisfies the self-adjoint boundary condition (S212), and displays the determination result (S213). The determination unit 33 can determine, for example, whether or not the number of degrees of freedom of the known part Ub of the nodal displacement and the number of the unknown part Fv of the nodal external force are equal to each other. In the case where they are equal, it is determined that the self-adjoint boundary condition is satisfied, and in the case where they are not equal to each other, it is determined that the self-adjoint boundary condition is not satisfied.

For example, a boundary condition in which a plurality of variables (in the present example, the nodal displacement and the nodal external force) are known with respect to one direction of a certain node, that is, one degree of freedom, or a boundary condition in which a plurality of variables are unknown with respect to one degree of freedom, is considered not to satisfy a self-adjoint boundary condition. In the case where a boundary condition that does not satisfy a self-adjoint boundary condition is set, conventionally, it is impossible to execute analysis, but the use of the technique disclosed in the present specification (for example, the technique using the new-type finite element method) makes it possible to execute analysis under a non-self-adjoint boundary condition (S215). The analysis under a self-adjoint boundary condition is feasible by the conventional-type finite element method (S214).

It should be noted that the analysis processing at S214 or S215 might be executed by another device. For example, in the case where it is determined at S212 that the self-adjoint boundary condition is satisfied, the determination unit 33 execute the analysis processing at S214 by the conventional-type finite element method, and in the case where it is determined that the self-adjoint boundary condition is not satisfied, the determination unit 33 outputs information at S212 so as to enable the analysis processing at S215. The determination unit 33 can output information about, for example, how to obtain software for executing the processing at S215, guidance, etc.

(Exemplary boundary condition setting 2 applicable to case of non-self-adjoint condition as well)

FIG. 71 is a flowchart showing another exemplary processing for setting a nodal displacement vector and a nodal external force vector that is also applicable to the case where a boundary condition is a non-self-adjoint condition. In the example shown in FIG. 71, input of degrees of freedom and values of a nodal displacement and a nodal external force is received, and a degree of freedom that are not input particularly is set as an unknown part. The boundary condition decision unit 22 receives input of a degree of freedom of a nodal displacement and a value thereof (S301), fixes a degree of freedom of a known part Ub of the nodal displacement and a value thereof based on the input (S302), and with these, sets a degree of freedom of an unknown part Uv thereof as well (S303). Similarly, the boundary condition decision unit 22 receives input of a degree of freedom of the nodal external force and a value thereof (S304), fixes a degree of freedom of a known part Fb of the nodal external force and a value thereof based on the input (S305), and with this, fixes a degree of freedom of an unknown part Fv thereof as well (S306). Determination processing (S307),

display processing (S308), and analysis processing (S309, 310) can be executed in the same manner as that in the case shown in FIG. 70.

In the example shown in FIG. 71, degrees of freedom of a nodal displacement and a nodal external force that are not input particularly are set as unknown parts. A user does not have to designate an unknown part clearly, but has to input and clearly set a value of zero for, for example, a node for which a displacement is to be set to zero. In contrast, in the example shown in FIG. 70, a variable of a degree of freedom for which a user has not designate as an unknown part or a known part is set to a certain value as a known part. Therefore, it is unnecessary for a user to set, regarding every degree of freedom, whether it is unknown or known. It should be noted that the information processing device might have a configuration such that a user is allowed to select which processing the user uses for inputting, either the processing shown in FIG. 70 or the processing shown in FIG. 71. It should be noted that the exemplary processing examples shown in FIGS. 70 and 71 are equivalent to the two processing methods (1) and (2) described in Section 11.7.1, respectively.

(Exemplary analysis of non-self-adjoint problem with respect to finite element method)

FIG. 72 is a flowchart showing an exemplary analysis of a non-self-adjoint problem where a finite element method is used. In the example shown in FIG. 72, first of all, the information processing device 10c inputs a calculation model (S401). For example, a finite element model, a shape, a material, an element, nodes, etc. of a structure to be processed are input.

The initial equation decision unit 21, using the data input at S401, creates element stiffness matrices, and creates a global stiffness matrix by superimposing the element stiffness matrices (S402). The global stiffness matrix created herein is exemplary initial equations expressed by a matrix. At S402, for example, two n-dimensional variable vectors each of which represents a physical amount at a node in a system in which the number of degrees of freedom is n, and an n-row stiffness matrix. More specifically, equations like eq. (441) or eq. (449) can be created.

The boundary condition decision unit 22 inputs data of a gravity load (S403), and creates a gravity load (S405). At S403, for example, data indicating a value of a gravity applied to each degree of freedom specified by a node and a direction, or a value of displacement thereof. Further, the boundary condition decision unit 22 inputs data that designate an unknown part of the nodal displacement and an unknown part of the nodal external force (S404). With the data input at S403 and S404, the known part and the unknown part of the nodal displacement, and the known part and the unknown part of the nodal external force are created (S405). It should be noted that the processing at S403, S404, and S405 can be executed in the same manner as, for example, that shown in FIG. 70.

The calculation unit 23 creates a matrix for use in an operation by transforming a stiffness matrix (S406). For example, based on two variable vectors having a degree of freedom of n, the calculation unit 23 generates a 2n-dimensional vector, and transforms the n-row matrix into a 2n-column matrix according to variables of the 2n-dimensional vector. For example, the matrix can be transformed into the form like eq. (450). The calculation unit 23 decides a known part that includes variables that become known by a boundary condition and an unknown part that includes unknown variables, among the variables of the 2n-dimensional vector. The 2n-column matrix and the 2n-dimensional vector are transformed so as to take formats such that the variables of the unknown part are expressed with the variables of the known part. For example, by using a transformed matrix as in eq. (452), variables of the unknown part can be calculated.

The calculation unit 23 calculates a solution of the equation of the matrix created at S406 (S407). In the case where only one solution exists as a result of the calculation, the calculation unit 23 creates a particular solution part of the nodal displacement and a particular solution part of the nodal external force (S408). For example, as in eq. (936), vectors that represent the particular solution of an unknown part can be created. In the case where a plurality of solutions exist, the calculation unit 23 defines a mode coefficient with respect to homogeneous solutions (S409). For example, let the number of homogeneous solutions be $n_o$, then, it is possible to define the $n_o$-dimensional vector $\{a_o\}$ as a mode coefficient. The calculation unit 23 creates a homogeneous solution part of the nodal displacement and a homogeneous solution part of the nodal external force (S410). For example, as shown in eq. (937), a matrix that represent the homogeneous solution of an unknown part can be created.

At S411, the calculation unit 23 decides the solution of the unknown part of the nodal displacement by using, for example, eq. (938), and decides the solution of the unknown part of the nodal external force by using, for example, eq. (939). In the case where the solution can be decided uniquely as a result of the processing at S411, the result is output, and the analysis processing is ended (S412).

In the case where the solution cannot be decided uniquely, an optimal value of $\{a_o\}$ is calculated by the least squares method. For example, the calculation unit 23 creates a matrix as shown in eq. (960) or eq. (961) (S413). Further, the calculation unit 23 decides a mode coefficient by, for example, solving eq. (962) regarding the mode coefficient $\{a_o\}$ (S414). The calculation unit 23 outputs a solution corresponding to the mode coefficient in a predetermined range with the decided mode coefficient as the central value (S415). For example, the calculation unit 23 receives input of a value in the vicinities of the decided mode coefficient from a user, calculates a solution by using a mode coefficient of the input

value, and outputs the calculated solution or information obtained from this solution. As the information obtained from the solution, for example, a transformed state, a stress distribution, an error distribution, or the like is output. Besides, a user interface may be provided so that the user can operate $\{a_o\}$ with a slider, so as to designate a value in the predetermined range including the mode coefficient decided at S414.

It should be noted a program for executing the processing in the case where a plurality of solutions exist at S408 to S410, and a program for executing the processing at S401 to S407 may be provided separately. In other words, a program for executing at least one of the steps at S408 to S410 or a recording medium that records the program are encompassed in embodiments of the present invention.

[Exemplary analysis result]

FIG. 9 shows a result of determination about how peripheries should be supported in order to obtain, for a ring on which uniform gravity is acting, such a boundary condition about the inner edge thereof that "the displacement is zero and the surface force is also zero". This problem has been considered insoluble conventionally, but by obtaining an analytical solution anew and comparing the same with a calculation result obtained by the eigenfunction method, it is confirmed that the calculation result is close to the analytical solution. From the figure, we can find that a large vertical stress $\sigma_r$ acts on an upper part and a lower part of the ring, and a shear stress $\tau_{r\theta}$ acts on left and right parts of the same, thereby being balanced with a gravity load. The inner edge is kept to be a perfect circle, from which we can find that no surface force acts. It should be noted that in FIG. 9, the left part shows the normal stress $\sigma_r$, the center part shows the normal stress $\sigma_\theta$, and the right part shows shear the stress $\tau_{r\theta}$. The result shown in FIG. 9 is a result obtained by analytical calculation, without the ring being represented by finite elements. Exemplary specific primal simultaneous differential equations used in the analysis are shown below.

[Formula 270]

$$\begin{cases} L_{1j}\phi_j \triangleq \left((1+\mu)\dfrac{\partial^2}{\partial x^2}+\dfrac{\partial^2}{\partial y^2}\right)\phi_1+\mu\dfrac{\partial^2\phi_2}{\partial x\partial y}=\lambda^*\phi_1^* \\ L_{2j}\phi_j \triangleq \mu\dfrac{\partial^2\phi_1}{\partial x\partial y}+\left(\dfrac{\partial^2}{\partial x^2}+(1+\mu)\dfrac{\partial^2}{\partial y^2}\right)\phi_2=\lambda^*\phi_2^* \end{cases}$$

$$\Rightarrow L_{ij}\phi_j \triangleq \lambda^*\phi_i^*$$

FIG. 10 shows an analysis result in the case of a square on which uniform gravity is acting, with a boundary condition for an upper edge thereof being such that "the displacement is zero and the surface force is also zero". In other words, it is a result of solving the following problem: in order to make both of the displacement and the surface force of the upper edge of the square zero under uniform gravity, how should the other sides of the square be supported? In FIG. 10, the left part shows a stress in the horizontal direction (x direction), the center part shows a stress in the vertical direction (y direction), and the right part shows a shear stress. In the left part of FIG. 10, large stresses $\sigma_x$ and $\sigma_y$ act on the lower edge of the square, whereby the displacement of the upper edge is kept to be zero. Here, the square is formulated as a finite element, and the element is only one. As a method of analysis with only one element, the p-method finite element is available. The analysis shown in FIG. 10 is an exemplary non-self-adjoint boundary condition, and an analysis with such a boundary condition cannot be performed by the p-method finite element method. Further, to which a boundary condition is set, either an edge or a node, depends on conveniences of formulation, and herein the formulation is such that a boundary condition is set with respect to a node.

FIG. 11 shows a result of analysis of in-plane deformation of a square plate having a fixed periphery. In FIG. 11, the left part shows a stress $\sigma_x$ in the horizontal direction (x direction), the center part shows a-stress $\sigma_y$ in the vertical direction (y direction), the right part shows shear stress. This indicates a self-adjoint boundary condition. The analysis result shown in FIG. 11 is identical to a result of analysis with respect to a p-method finite element. The analysis method of the above-described invention is considered to involve the p-method. In other words, by coding the finite element method based on the present invention, the p-method can be used seamlessly.

FIG. 12 shows a result of analysis of deformation by self-weight that occurs to a square plate element for out-of-plane deformation in the case where peripheries thereof are fixed. Here, the square is formulated as a finite element, and only one element is provided.

FIG. 13A shows a model of a beam, and FIG. 13B shows calculation results of primal eigenfunctions $\phi_1$, $\phi_2$, $\phi_3$, and dual eigenfunctions $\phi_1^*$, $\phi_2^*$, $\phi_3^*$ of the beam shown in FIG. 13A thereof having a left end under a free boundary condition and fixed boundary condition. FIG. 13C shows solutions (1-mode, 2-modes and 3-modes) determined by the eigenfunction method, and an analytical solution. The solution of 3-modes substantially overlaps the analytical solution.

FIGS. 14 and FIG. 15 show analysis results in the case where a virtual boundary of a square is defined in a

boundless region of the infinite, and a source (FIG. 14) or a vortex (FIG. 15) is arranged at the center thereof. The analysis results shown in FIGS. 14 and 15 show states of potential flow in the case where the Dirac's delta function is given to the right side of the above-described eq. (18) or (19) and calculation by the eigenfunction method is performed. We can confirm from these drawings that the state of the internal flow is close to the analytical solution.

[Exemplary analysis]

10. 1 Spring damper system

10. 1. 1 Differential equation

In the spring damper system shown in FIG. 16, let the damping coefficient be c, and let the spring constant be k. Let the displacement be u(t), and let the external force be f(t). The operator L is given as:
[Formula 271]

$$L \equiv c\frac{d}{dt} + k \tag{456}$$

Then, we obtain a differential equation given as:

$$Lu(t) = f(t) \tag{457}$$

The constant $\gamma$ is given as:

$$\gamma \equiv \frac{k}{c} \tag{458}$$

This reciprocal number ($1/\gamma$) is called a time constant.
When the initial condition is given as

$$u(a) = u_a, \tag{459}$$

We obtain an analytical solution of this as follows:

$$u(t) = \frac{1}{c}e^{-\gamma t}\int_a^t e^{\gamma\xi}\cdot f(\xi)d\xi + u_a e^{-\gamma(t-a)} \tag{460}$$

Regarding an external force $f(t)$, let a constant having dimensionality of force be F, and let a dimensionless function be $p(t)$. Then, the external force is given as:

$$f(t) \equiv F \cdot p(t) \tag{461}$$

Given a time range of $a<t<b$, dimensionless displacements are defined as:

$$\begin{aligned} &\hat{u}(t) \equiv \frac{k}{F}u(t) \\ &\hat{u}_a \equiv \frac{k}{F}u_a, \quad \hat{u}_b \equiv \frac{k}{F}u_b \end{aligned} \tag{462}$$

Then, we obtain an analytical solution (460) as follows:

$$\hat{u}(t) = \gamma e^{-\gamma t} \int_a^t e^{\gamma \xi} \cdot p(\xi) d\xi + \hat{u}_a e^{-\gamma(t-a)} \quad (463)$$

10. 1. 2 Adjoint boundary condition and adjoint differential operators

[Formula 272]

According to eq. (58), multiplying eq. (457) by *u** and integrating the same, we obtain:

$$\int_a^b Lu \cdot u^* dt = \int_a^b f \cdot u^* dt \qquad (464)$$

In the case of eq. (58), integration by region is performed, but in the present exemplary case, integration by time is performed. Partially integrating the left side of the equation , we obtain:

$$\int_a^b Lu \cdot u^* dt = \left[ cuu^* \right]_a^b + \int_a^b u \cdot \left( -c \frac{d}{dt} + k \right) u^* dt \qquad (465)$$

The operator *L** is given as:

$$L^* \equiv -c \frac{d}{dt} + k \qquad (466)$$

The boundary term *R* is given as:

$$R \equiv \left[ cuu^* \right]_a^b \qquad (467)$$

Then, eq. (465) is transformed to:

$$\int_a^b Lu \cdot u^* dt = R + \int_a^b u \cdot L^* u^* dt \qquad (468)$$

The operator satisfies:

$$L^* \neq L \qquad (469)$$

Therefore, this is a non-self-adjoint operator.

[Formula 273]

[Exemplary non-self-adjoint boundary condition 1]

Regarding the boundary term R , the initial condition is given as:

$$u(a) = 0 \qquad (470)$$

Then, we obtain the following as an adjoint boundary condition:

$$u^*(b) = 0 \quad (471)$$

As the conditions of eq. (470) and eq. (471) are different, this is a non-self-adjoint boundary condition. In the case of the initial condition of eq. (459), eq. (470) is given as a homogeneous boundary condition.

[Exemplary non-self-adjoint boundary condition 2]

Regarding the boundary term *R* , the initial condition is given as:

$$u(b) = 0 \quad (472)$$

Then, we obtain the following as an adjoint boundary condition:

$$u^*(a) = 0 \quad (473)$$

As conditions of eq. (472) and eq. (473) are different, this is a non-self-adjoint boundary condition.

10. 1. 3 Homogenization of boundary condition

[Formula 274]
According to eq. (24), an index B is added to a term that satisfies an inhomogeneous boundary condition so as to let the term be $u_B$, and an index H is added a term that satisfies a homogeneous boundary condition so as to let the term be $u_H$. The displacement *u* is expressed as follows, with the sum of these:

$$u(t) \equiv u_B(t) + u_H(t) \quad (474)$$

In order that the boundary function $u_B$ satisfies eq. (459) and is given as

$$u_B(a) = u_a , \quad (475)$$

we define:

$$u_B(t) \equiv u_a \quad (476)$$

With this definition, the following is established, which is a useful property:

$$Lu_B = \left( c\frac{d}{dt} + k \right) u_B = ku_B \quad (477)$$

Along with this, the following homogeneous boundary condition is imposed on $u_H$:

$$u_H(a) = 0 \quad (478)$$

This is equivalent to eq. (470).
When eq. (474) is substituted into eq. (457), the differential equation (457) is transformed to:

$$Lu_H = f_H \quad (479)$$

where

$$f_H \equiv f - Lu_B \quad (480)$$

This is equivalent to eqs. (40), (41), and the problem is changed to a problem of determining a solution function $u_H$ according to the boundary function $u_B$.

10. 1. 4 Simultaneous eigenvalue problem and eigenfunction method

[Formula 275]

In a simultaneous eigenvalue problem of

$$\begin{cases} L\phi = \lambda w \phi^* \\ L^*\phi^* = \lambda w \phi \end{cases}, \quad (481)$$

the weight $w$ is given as:

$$w \equiv k \quad (482)$$

The following boundary condition is imposed thereon:

$$\begin{cases} \phi(a) = 0 \\ \phi^*(b) = 0 \end{cases} \quad (483)$$

Then, this is equivalent to [Exemplary non-self-adjoint boundary condition 1] in Section 10. 1. 2, and the primal eigenfunction $\phi$ satisfies the condition of eq. (478). Then, according to eq. (69), let the solution function $u_H$ be expressed as:

$$u_H \equiv \sum_i c_i \phi_i \quad (484)$$

Substituting this into eq. (479), we obtain:

$$Lu_H \equiv \sum_i c_i L\phi_i = f_H \quad (485)$$

Further, according to eq. (481), we obtain:

$$\sum_i c_i \lambda_i w \phi_i^* = f_H \quad (486)$$

Multiplying both of the sides by $\phi_j^*$ and integrating the same, we obtain:

$$\sum_i c_i \lambda_i \int_a^b w\phi_i^* \cdot \phi_j^* dt = \int_a^b f_H \cdot \phi_j^* dt \quad (487)$$

According to the orthogonality, we obtain:

$$c_i \lambda_i \int_a^b w\phi_i^* \cdot \phi_i^* dt = \int_a^b f_H \cdot \phi_i^* dt \quad (488)$$

In other words, the coefficient $c_i$ is decided to be:

$$c_i = \frac{\int_a^b f_H \cdot \phi_i^* dt}{\lambda_i \int_a^b w\phi_i^* \cdot \phi_i^* dt} \quad (489)$$

According to eqs. (461), (477), (480), and (482), this equation is transformed to:
[Formula 276]

$$c_i = \frac{1}{\lambda_i}\left( \frac{F}{k} \frac{\int_a^b p \cdot \phi_i^* dt}{\int_a^b \phi_i^* \cdot \phi_i^* dt} - \frac{\int_a^b u_B \cdot \phi_i^* dt}{\int_a^b \phi_i^* \cdot \phi_i^* dt} \right) \quad (490)$$

Utilizing the weight $w$ is a constant, eq. (489) is transformed, and the coefficient $d_i^*$ is defined as:

$$d_i^* \equiv c_i \lambda_i w = \frac{\int_a^b f_H \cdot \phi_i^* dt}{\int_a^b \phi_i^* \cdot \phi_i^* dt} = F \frac{\int_a^b p \cdot \phi_i^* dt}{\int_a^b \phi_i^* \cdot \phi_i^* dt} - k \frac{\int_a^b u_B \cdot \phi_i^* dt}{\int_a^b \phi_i^* \cdot \phi_i^* dt} \quad (491)$$

Using this, eq. (486) is transformed to:

$$f_H = \sum_i d_i^* \phi_i^* \quad (492)$$

This indicates that the external force term $f_H$ is expanded by the dual eigenfunction $\phi_i^*$, and $d_i^*$ is an expansion coefficient thereof. The first term of the right side of the equation represents an expansion coefficient of an external force dimensionless function $p(t)$, and the second term thereof represents an expansion coefficient of the boundary function $u_B(t)$.

Consequently, the solution displacement $u(t)$ is given as:

$$\begin{aligned} u(t) &\equiv u_B(t) + u_H(t) \\ u_B(t) &\equiv u_a \\ u_H(t) &\equiv \sum_i c_i \phi_i(t) \\ c_i &\equiv \frac{1}{\lambda_i}\left( \frac{F}{k} \frac{\int_a^b p \cdot \phi_i^* dt}{\int_a^b \phi_i^* \cdot \phi_i^* dt} - \frac{\int_a^b u_B \cdot \phi_i^* dt}{\int_a^b \phi_i^* \cdot \phi_i^* dt} \right) \end{aligned} \quad (493)$$

By making this dimensionless according to eq. (462), we obtain:

$$\hat{u}(t) \equiv \hat{u}_B(t) + \hat{u}_H(t)$$
$$\hat{u}_B(t) \equiv \hat{u}_a$$
$$\hat{u}_H(t) \equiv \sum_i \hat{c}_i \phi_i(t)$$
$$\hat{c}_i \equiv \frac{1}{\lambda_i}\left( \frac{\int_a^b p \cdot \phi_i^* dt}{\int_a^b \phi_i^* \cdot \phi_i^* dt} - \frac{\int_a^b \hat{u}_B \cdot \phi_i^* dt}{\int_a^b \phi_i^* \cdot \phi_i^* dt} \right) \quad (494)$$

10. 1. 5 Eigenfunction sets

[Formula 277]

From the simultaneous eigenvalue problem (481), the following equations on each eigenfunction are obtained:

$$L^* L \phi = \lambda^2 k^2 \phi \quad (495)$$

$$L L^* \phi^* = \lambda^2 k^2 \phi^* \quad (496)$$

The operators satisfy:

$$L^* L = L L^* = -c^2 \frac{d^2}{dt^2} + k^2 \quad (497)$$

Since eqs. (495) and (496) take the same form, eq. (495) may be solved so that the formats of $\phi, \phi^*$ can be obtained. Eq. (495) is given as:

$$\left( -c^2 \frac{d^2}{dt^2} + k^2 \right) \phi = \lambda^2 k^2 \phi \quad (498)$$

And it is transformed to :

$$\left( \frac{d^2}{dt^2} - \gamma^2 \left(1 - \lambda^2\right) \right) \phi = 0 \quad (499)$$

This solution has $a_1, a_2, a_1^*, a_2^*$ as arbitrary coefficients.

(1) When $0<\lambda<1$, the following is given:

$$\omega_1 \equiv \gamma \sqrt{1 - \lambda^2} \quad (500)$$

Then, we obtain:

$$\begin{cases} \phi = a_1 \sinh \omega_1 t + a_2 \cosh \omega_1 t \\ \phi^* = a_1^* \sinh \omega_1 t + a_2^* \cosh \omega_1 t \end{cases} \quad (501)$$

(2) When λ=1, the following is given:

$$\begin{cases} \phi = a_1 t + a_2 \\ \phi^* = a_1^* t + a_2^* \end{cases} \quad (502)$$

(3) When 1<λ, the following is given:
[Formula 278]

$$\omega_3 \equiv \gamma\sqrt{\lambda^2 - 1} \quad (503)$$

Then, we obtain:

$$\begin{cases} \phi = a_1 \sin \omega_3 t + a_2 \cos \omega_3 t \\ \phi^* = a_1^* \sin \omega_3 t + a_2^* \cos \omega_3 t \end{cases} \quad (504)$$

Transforming the simultaneous eigenvalue problem (481), we obtain:

$$\begin{cases} \left(\frac{d}{dt} + \gamma\right)\phi = \lambda\gamma\phi^* \\ \left(\frac{d}{dt} - \gamma\right)\phi^* = -\lambda\gamma\phi \end{cases} \quad (505)$$

The coefficients $a_1, a_2, a_1^*, a_2^*$ can be decided so as to satisfy eq.(505). As a result of decision of the coefficients, the combinations we obtain are as follows.

(1) When 0<λ<1, the following two combinations are obtained:

$$\begin{cases} \phi = \cosh \omega_1 t - \frac{\omega_1}{\gamma} \sinh \omega_1 t \\ \phi^* = \lambda \cosh \omega_1 t \end{cases} \quad (506)$$

$$\begin{cases} \phi = \sinh \omega_1 t - \frac{\omega_1}{\gamma} \cosh \omega_1 t \\ \phi^* = \lambda \sinh \omega_1 t \end{cases} \quad (507)$$

(2) When λ=1, the following two combinations are obtained:

$$\begin{cases} \phi = 1 \\ \phi^* = 1 \end{cases} \quad (508)$$

$$\begin{cases} \phi = \gamma t - 1 \\ \phi^* = \gamma t \end{cases} \quad (509)$$

(3) When 1<$\lambda$, the following two combinations are obtained:

$$\begin{cases} \phi = \cos \omega_3 t + \dfrac{\omega_3}{\gamma} \sin \omega_3 t \\ \phi^* = \lambda \cos \omega_3 t \end{cases} \quad (510)$$

$$\begin{cases} \phi = \sin \omega_3 t - \dfrac{\omega_3}{\gamma} \cos \omega_3 t \\ \phi^* = \lambda \sin \omega_3 t \end{cases} \quad (511)$$

These combinations only satisfy the simultaneous differential equations (505), and such conditions that these combinations should satisfy the boundary condition have not been imposed.

10. 1. 6 Eigenfunction

[Formula 279]
In the previous section, three function combinations depending on the value of $\lambda$ are shown. In the present section, combinations that satisfy the boundary condition eq. (483) are shown as follows:.

(1) When 0<$\lambda$<1, no combination that satisfies the boundary condition (483) is available.
(2) The case where $\lambda$=1 is not taken into consideration at the present stage, though it might have to be considered in a special case.
(3) When 1<$\lambda$, with respect to $\lambda$ that satisfies the following characteristic equation (512), the following equations (513) are eigenfunctions:

$$\omega_3 \cos\left[(b-a)\omega_3\right] + \gamma \sin\left[(b-a)\omega_3\right] = 0 \quad (512)$$

$$\begin{cases} \phi = -\lambda \cos\left[\omega_3 (b-a)\right] \cdot \sin\left[\omega_3 (t-a)\right] \\ \phi^* = \sin\left[\omega_3 (b-t)\right] \end{cases} \quad (513)$$

A dimensionless quantity h is defined as:

$$h \equiv \gamma (b-a) \quad (514)$$

This results in that a termination time *b* is set as follows:
[Formula 280]

$$b = a + \frac{h}{\gamma} \quad (515)$$

Further, a dimensionless time ξ is defined as:

$$\xi \equiv \frac{t-a}{b-a} \quad (516)$$

This is transformed to:

$$t = a + \xi(b - a) \tag{517}$$

It should be noted that the dimensionless time η is defined as:

$$\begin{aligned} \eta &\equiv \gamma t \\ \eta_a &\equiv \gamma a \\ \eta_b &\equiv \gamma b \end{aligned} \tag{518}$$

The following relationship exists between the two dimensionless times $\xi, \eta$:

$$t = \frac{\eta}{\gamma} = a + \xi(b - a) \tag{519}$$

Therefore, they are associated by

$$\xi = \frac{a\gamma - \eta}{(a - b)\gamma} \tag{520}$$

and

$$\eta = \gamma\{a + \xi(b - a)\}. \tag{521}$$

[Formula 281]
When these relationships are substituted into eqs. (512) and (513), the characteristic equations are transformed to functions of $h, \lambda$, and the eigenfunctions are transformed to functions of $h, \lambda, \xi$.
Let the dimensionless quantity $h$ be:

$$h = 15 \tag{522}$$

Then, we obtain the first four eigenvalues as follows:

$$\lambda = \begin{cases} 1.0191 \\ 1.0748 \\ 1.1624 \\ 1.2763 \end{cases} \tag{523}$$

Each eigenfunction is normalized so that the maximum value is 1, and is shown in FIG. 17.

10. 1. 7 Exemplary analysis 1

[Formula 282]
The dimensionless function $P(t)$ of eq. (461) is given as:

$$p(t) \equiv \sin \gamma t \tag{524}$$

We obtain the following analytical solution according to eq. (463):

$$\hat{u}(\eta)= \frac{1}{2}\left\{\left(\cos\eta_a - \sin\eta_a\right)e^{-(\eta-\eta_a)} - \left(\cos\eta - \sin\eta\right)\right\} + \hat{u}_a e^{-(\eta-\eta_a)} \quad (525)$$

Let the initial condition be:

$$\hat{u}_a = 1 \quad at \quad \eta_a = 0 \quad (526)$$

Comparison between the analytical solutions of eq. (525) and the results obtained by the eigenfunction method of eq. (494) is shown in FIG. 18. In the drawing, the broken lines indicate the analytical solutions , and the solid lines indicate the results obtained by the eigenfunction method. "50M" means that the calculation is performed by using up to 50 modes. We can see that as the number of modes is greater, the accuracy of the eigenfunction method is improved, and the displacement $\hat{u}$ obtained by the calculation using about 10 modes by the eigenfunction method coincides well with the analytical solution.

10. 1. 8 Exemplary analysis 2

[Formula 283]
The dimensionless function *p*(*t*) of eq. (461) is given as:

$$p(t) \equiv \cos\gamma t \quad (527)$$

According to eq. (463), the analytical solution is transformed to:

$$\hat{u}(\eta)= \frac{1}{2}\left\{\left(\cos\eta_a + \sin\eta_a\right)e^{-(\eta-\eta_a)} + \left(\cos\eta + \sin\eta\right)\right\} + \hat{u}_a e^{-(\eta-\eta_a)} \quad (528)$$

Let the initial condition be:

$$\hat{u}_a = 1 \quad at \quad \eta_a = 0 \quad (529)$$

Comparison between the analytical solutions of eq. (528) and the results obtained by the eigenfunction method of eq. (494) is shown in FIG. 19. In the drawing, the broken lines indicate the analytical solutions , and the black solid lines indicate the results obtained by the eigenfunction method. "50M" means that the calculation is performed by using up to 50 modes. We can see that as the number of modes is greater, the accuracy of the eigenfunction method is improved, and the displacement $\hat{u}$ obtained by the calculation using about 10 modes by the eigenfunction method coincides well with the analytical solution.

10. 1. 9 Exemplary analysis 3

[Formula 284]
The dimensionless function *p*(*t*) of eq. (461) is given as:

$$p(t) \equiv e^{-\gamma t} \quad (530)$$

According to eq. (463), the analytical solution is transformed to:

$$\hat{u}(\eta) = (\eta - \eta_a)e^{-\eta} + \hat{u}_a e^{-(\eta - \eta_a)} \quad (531)$$

Let the initial condition be:

$$\hat{u}_a = 1 \quad at \quad \eta_a = 0 \quad (532)$$

Comparison between the analytical solutions of eq. (531), and the results obtained by the eigenfunction method of eq. (494) is shown in FIG. 20. In the drawing, the red broken lines indicate the analytical solutions, and the black solid lines indicate the results obtained by the eigenfunction method. "50M" means that the calculation is performed by using up to 50 modes. We can see that as the number of modes is greater, the accuracy of the eigenfunction method is improved, and the displacement $\hat{u}$ obtained by the calculation using about 10 modes by the eigenfunction method coincides well with the analytical solution.

10. 2 Mass-point spring system

10. 2. 1 Differential equation

Regarding a mass-point spring system shown in FIG. 21, let the mass of the point mass be m, and let the spring constant be k. Let the displacement and the external force be u(t) and f(t), respectively. The operator L is given as:
[Formula 285]

$$L \equiv m \frac{d^2}{dt^2} + k \quad (533)$$

Then, we obtain the differential equation as follows:

$$Lu(t) = f(t) \quad (534)$$

Let the natural angular frequency $\omega_0$ be:

$$\omega_o \equiv \sqrt{\frac{k}{m}} \quad (535)$$

When the initial condition is given as:

$$u(0) = u_o, \quad \dot{u}(0) = v_o \quad (536)$$

we obtain an analytical solution thereof as follows:
[Formula 286]

$$u(t) = \frac{1}{m\omega_o}\int_0^t f(\xi)\cdot\sin\left[\omega_o(t-\xi)\right]d\xi + u_o \cos\omega_o t + v_o \frac{1}{\omega_o}\sin\omega_o t \quad (537)$$

Regarding the external force *f*(*t*), let the constant having dimensionality of force be *F*, and let the dimensionless function be *p(t).* Then, the following is given:

$$f(t) \equiv F \cdot p(t) \tag{538}$$

Considering the time range as *a<t<b,* defining the dimensionless displacement as

$$\hat{u}(t) \equiv \frac{k}{F} u(t)$$
$$\hat{u}_a \equiv \frac{k}{F} u_a, \quad \hat{u}_b \equiv \frac{k}{F} u_b, \quad \hat{u}_o \equiv \frac{k}{F} u_o \quad ,(539)$$

and defining the dimensionless velocity as

$$\hat{v}_a \equiv \frac{k}{F\omega_o} v_a, \quad \hat{v}_b \equiv \frac{k}{F\omega_o} v_b, \quad \hat{v}_o \equiv \frac{k}{F\omega_o} v_o \quad ,(540)$$

the analytical solution (537) is given as:

$$\hat{u}(t) = \omega_o \int_0^t p(\xi) \cdot \sin\left[\omega_o \left(t - \xi\right)\right] d\xi + \hat{u}_o \cos \omega_o t + \hat{v}_o \sin \omega_o t \tag{541}$$

10. 2. 2 Adjoint boundary condition and adjoint differential operators

[Formula 287]

Multiplying eq. (534) by *u** and integrating the same according to eq. (58), we obtain:

$$\int_a^b Lu \cdot u^* dt = \int_a^b f \cdot u^* dt \tag{542}$$

Whereas integration by region is performed with respect to eq. (58), this shows an example of integration by time. Performing partial integration with respect to the left side of the equation, we obtain:

$$\int_a^b Lu \cdot u^* dt = \left[m\dot{u}u^* - mu\dot{u}^*\right]_a^b + \int_a^b u \cdot \left(m \frac{d^2}{dt^2} + k\right) u^* dt \tag{543}$$

Let the operator *L** be:

$$L^* \equiv m \frac{d^2}{dt^2} + k \tag{544}$$

Let the boundary term *R* be:

$$R \equiv \left[m\dot{u}u^* - mu\dot{u}^*\right]_a^b \tag{545}$$

Then, eq. (543) is transformed to:

$$\int_a^b Lu \cdot u^* dt = R + \int_a^b u \cdot L^* u^* dt \tag{546}$$

The operator satisfies:

$$L^* = L\,, \tag{547}$$

Therefore, this is a self-adjoint operator.
[Formula 288]

[Exemplary non-self-adjoint boundary condition 1]

Regarding the boundary term *R* , the initial conditions are given as:

$$\begin{aligned} u(a) &= 0 \\ \dot{u}(a) &= 0 \end{aligned} \tag{548}$$

Then, we obtain the following as adjoint boundary conditions:

$$\begin{aligned} u^*(b) &= 0 \\ \dot{u}^*(b) &= 0 \end{aligned} \tag{549}$$

As the conditions of eq. (548) and eq. (549) are different, this is a non-self-adjoint boundary condition. In the case of the initial conditions of eq. (536), eq. (548) is given as a homogeneous boundary condition when a=0.
[Formula 289]

[Exemplary self-adjoint boundary condition 1]

Regarding the boundary term *R* , the conditions of displacement are given as:

$$\begin{aligned} u(a) &= 0 \\ u(b) &= 0 \end{aligned} \tag{550}$$

Then, we obtain the following as adjoint boundary conditions:

$$\begin{aligned} u^*(a) &= 0 \\ u^*(b) &= 0 \end{aligned} \tag{551}$$

As the conditions of eq. (550) and eq. (551) coincide, this is a self-adjoint boundary condition.

10. 2. 3 Homogenization of boundary condition

[Formula 290]
According to eq. (24), an index B is added to a term that satisfies an inhomogeneous boundary condition so as to let the term be $u_B$, and an index H is added a term that satisfies a homogeneous boundary condition so as to let the term be $u_H$. The displacement *u* is expressed as follows, with the sum of these:

$$u(t) \equiv u_B(t) + u_H(t) \tag{552}$$

[Exemplary non-self-adjoint boundary condition 1]

In the case where the initial conditions are

$$\begin{aligned} u(a) &= u_a \\ \dot{u}(a) &= v_a \end{aligned} \quad , \qquad (553)$$

we define the boundary function $u_B$ as

$$u_B(t) \equiv u_a + v_a(t-a) \quad . \qquad (554)$$

From this, we obtain:

$$\begin{aligned} u_B(a) &= u_a \\ \dot{u}_B(a) &= v_a \end{aligned} \qquad (555)$$

Therefore, the following homogeneous boundary conditions are imposed on $u_H$:

$$\begin{aligned} u_H(a) &= 0 \\ \dot{u}_H(a) &= 0 \end{aligned} \qquad (556)$$

This is equivalent to eq. (548). Thus, this example becomes a non-self-adjoint problem.

It should be noted that the following is established, which is a useful property:

$$Lu_B = \left( m\frac{d^2}{dt^2} + k \right) u_B = ku_B \qquad (557)$$

[Formula 291]

[Exemplary self-adjoint boundary condition 1]

In the case where the displacement conditions are

$$\begin{aligned} u(a) &= u_a \\ u(b) &= u_b \end{aligned} \quad , \qquad (558)$$

we define the boundary function $u_B$ as

$$u_B(t) \equiv u_a + \frac{u_b - u_a}{b-a}(t-a) \quad . \qquad (559)$$

From this, we obtain:

$$\begin{aligned} u_B(a) &= u_a \\ u_B(b) &= u_b \end{aligned} \qquad (560)$$

Therefore, the following homogeneous boundary conditions are imposed on $u_H$:

$$\begin{aligned} u_H(a) &= 0 \\ u_H(b) &= 0 \end{aligned} \qquad (561)$$

This is equivalent to eq. (550). Thus, this example becomes a self-adjoint problem.

It should be noted that the following is established, which is a useful property:

$$Lu_B = \left( m\frac{d^2}{dt^2} + k \right) u_B = ku_B \qquad (562)$$

When eq. (552) is substituted into eq. (534), the differential equation (534) is transformed to:

$$Lu_H = f_H \qquad (563)$$

where

$$f_H \equiv f - Lu_B \qquad (564)$$

This is equivalent to eqs. (40),(41), and the problem is changed to a problem of determining a solution function $u_H$ according to the boundary function $u_B$.

10. 2. 4 Simultaneous eigenvalue problem and eigenfunction method 1

In the case of [Exemplary non-self-adjoint boundary condition 1], this is a method for solving a non-self-adjoint problem in which the boundary function $u_B$ of eq. (554) is used. In a simultaneous eigenvalue problem of [Formula 292]

$$\begin{cases} L\phi = \lambda w \phi^* \\ L^*\phi^* = \lambda w \phi \end{cases}, \qquad (565)$$

the weight $w$ is given as:

$$w \equiv k \qquad (566)$$

The following boundary condition is imposed thereon:

$$\begin{cases} \phi(a) = 0 \\ \dot{\phi}(a) = 0 \\ \phi^*(b) = 0 \\ \dot{\phi}^*(b) = 0 \end{cases} \qquad (567)$$

Then, the primal eigenfunction $\phi$ satisfies the condition of eq. (548). Then, according to eq. (69), let the solution function $u_H$ be expressed as:

$$u_H \equiv \sum_i c_i \phi_i \qquad (568)$$

Substituting this into eq. (563), we obtain:

$$Lu_H \equiv \sum_i c_i L\phi_i = f_H \tag{569}$$

Further, according to eq. (565), we obtain:

$$\sum_i c_i \lambda_i w \phi_i^* = f_H \tag{570}$$

Multiplying both of the sides by $\phi_j^*$ and integrating the same, we obtain:

$$\sum_i c_i \lambda_i \int_a^b w\phi_i^* \cdot \phi_j^* dt = \int_a^b f_H \cdot \phi_j^* dt \tag{571}$$

According to the orthogonality, we obtain:

$$c_i \lambda_i \int_a^b w\phi_i^* \cdot \phi_i^* dt = \int_a^b f_H \cdot \phi_i^* dt \tag{572}$$

In other words, the coefficient $c_i$ is decided to be:

$$c_i = \frac{\int_a^b f_H \cdot \phi_i^* dt}{\lambda_i \int_a^b w\phi_i^* \cdot \phi_i^* dt} \tag{573}$$

Then, it is transformed to:

$$c_i = \frac{1}{\lambda_i}\left( \frac{F}{k} \frac{\int_a^b p \cdot \phi_i^* dt}{\int_a^b \phi_i^* \cdot \phi_i^* dt} - \frac{\int_a^b u_B \cdot \phi_i^* dt}{\int_a^b \phi_i^* \cdot \phi_i^* dt} \right) \tag{574}$$

[Formula 293]

Utilizing the weight *w* is a constant, eq. (573) is transformed, and the coefficient $d_i^*$ is defined as:

$$d_i^* \equiv c_i \lambda_i w = \frac{\int_a^b f_H \cdot \phi_i^* dt}{\int_a^b \phi_i^* \cdot \phi_i^* dt} = F\frac{\int_a^b p \cdot \phi_i^* dt}{\int_a^b \phi_i^* \cdot \phi_i^* dt} - k\frac{\int_a^b u_B \cdot \phi_i^* dt}{\int_a^b \phi_i^* \cdot \phi_i^* dt} \tag{575}$$

Using this, eq. (570) is transformed to:

$$f_H = \sum_i d_i^* \phi_i^* \tag{576}$$

This indicates that the external force term $f_H$ is expanded by the dual eigenfunction $\phi_i^*$, and $d_i^*$ is an expansion coefficient thereof. The first term of the right side of the equation represents an expansion coefficient of an external force dimensionless function *p(t),* and the second term thereof represents an expansion coefficient of the boundary function $u_B(t)$.

Consequently, the solution displacement *u*(*t*) is given as:

$$\begin{aligned} u(t) &\equiv u_B(t) + u_H(t) \\ u_B(t) &\equiv u_a + v_a(t-a) \\ u_H(t) &\equiv \sum_i c_i \phi_i(t) \\ c_i &\equiv \frac{1}{\lambda_i}\left( \frac{F}{k}\frac{\int_a^b p\cdot\phi_i^* dt}{\int_a^b \phi_i^*\cdot\phi_i^* dt} - \frac{\int_a^b u_B\cdot\phi_i^* dt}{\int_a^b \phi_i^*\cdot\phi_i^* dt} \right) \end{aligned} \quad (577)$$

Making this dimensionless gives:

$$\begin{aligned} \hat{u}(t) &\equiv \hat{u}_B(t) + \hat{u}_H(t) \\ \hat{u}_B(t) &\equiv \hat{u}_a + \hat{v}_a\omega_o(t-a) \\ \hat{u}_H(t) &\equiv \sum_i \hat{c}_i \phi_i(t) \\ \hat{c}_i &\equiv \frac{1}{\lambda_i}\left( \frac{\int_a^b p\cdot\phi_i^* dt}{\int_a^b \phi_i^*\cdot\phi_i^* dt} - \frac{\int_a^b \hat{u}_B\cdot\phi_i^* dt}{\int_a^b \phi_i^*\cdot\phi_i^* dt} \right) \end{aligned} \quad (578)$$

10. 2. 5 Simultaneous eigenvalue problem and eigenfunction method 2

[Formula 291]

In the case of [Exemplary self-adjoint boundary condition 1], this is simplified as a self-adjoint problem, without use of a method for solving a non-self-adjoint problem. If the boundary conditions of

$$\begin{cases} \phi(a) = 0 \\ \phi(b) = 0 \\ \phi^*(a) = 0 \\ \phi^*(b) = 0 \end{cases} \quad (579)$$

are imposed, the primal eigenfunction $\phi$ satisfies conditions of eq. (550).

In the simultaneous eigenvalue problem of

$$\begin{cases} L\phi = \lambda w \phi^* \\ L^*\phi^* = \lambda w \phi \end{cases}, \quad (580)$$

$\phi$ and $\phi$* are equivalent. Therefore, the form they take is either

$$\phi^* = \phi \quad \Rightarrow \quad L\phi = \lambda w \phi, \quad (581)$$

or

$$\phi^* = -\phi \ \Rightarrow \ L\phi = -\lambda w \phi \, . \qquad (582)$$

In the case of this problem, the form of eq. (582) is taken.

In the case of eq. (582), in the procedure up to when eqs. (577), and (578) are obtained, $\phi^*$ may be changed to $(-\phi)$, and the boundary function $u_B$ of eq. (559) may be used. As a result, the solution displacement $u(t)$ is given as:

$$\begin{aligned} u(t) &\equiv u_B(t) + u_H(t) \\ u_B(t) &\equiv u_a + \frac{u_b - u_a}{b-a}(t-a) \\ u_H(t) &\equiv \sum_i c_i \phi_i(t) \\ c_i &\equiv -\frac{1}{\lambda_i}\left( \frac{F}{k} \frac{\int_a^b p \cdot \phi_i dt}{\int_a^b \phi_i \cdot \phi_i dt} - \frac{\int_a^b u_B \cdot \phi_i dt}{\int_a^b \phi_i \cdot \phi_i dt} \right) \end{aligned} \qquad (583)$$

Making this dimensionless gives:

$$\begin{aligned} \hat{u}(t) &\equiv \hat{u}_B(t) + \hat{u}_H(t) \\ \hat{u}_B(t) &\equiv \hat{u}_a + \frac{\hat{u}_b - \hat{u}_a}{b-a}(t-a) \\ \hat{u}_H(t) &\equiv \sum_i \hat{c}_i \phi_i(t) \\ \hat{c}_i &\equiv -\frac{1}{\lambda_i}\left( \frac{\int_a^b p \cdot \phi_i dt}{\int_a^b \phi_i \cdot \phi_i dt} - \frac{\int_a^b \hat{u}_B \cdot \phi_i dt}{\int_a^b \phi_i \cdot \phi_i dt} \right) \end{aligned} \qquad (584)$$

10. 2. 6 Eigenfunction sets

[Formula 295]

From the simultaneous eigenvalue problem (565), we obtain the following equations on each eigenfunction:

$$L^* L \phi = \lambda^2 k^2 \phi \qquad (585)$$

$$L L^* \phi^* = \lambda^2 k^2 \phi^* \qquad (586)$$

The operators satisfy:

$$L^* L = L L^* = m^2 \frac{d^4}{dt^4} + 2mk \frac{d^2}{dt^2} + k^2 \qquad (587)$$

Since eqs. (585) and (586) take the same form, eq. (585) may be solved to obtain a format with $\phi$ and $\phi^*$. Eq. (585) is as follows:

$$\left(m^2\frac{d^4}{dt^4}+2mk\frac{d^2}{dt^2}+k^2\right)\phi=\lambda^2k^2\phi \qquad (588)$$

This is transformed to:

$$\left(\frac{d^2}{dt^2}+\omega_o^2(1-\lambda)\right)\left(\frac{d^2}{dt^2}+\omega_o^2(1+\lambda)\right)\phi=0 \qquad (589)$$

This solution has $a_1,a_2,a_3,a_4$, $a_1^*,a_2^*,a_3^*,a_4^*$ as arbitrary coefficients.

(1) When $0<\lambda<1$, the following is given:

$$\begin{aligned}\omega_1 &\equiv \omega_o\sqrt{1-\lambda}\\ \omega_2 &\equiv \omega_o\sqrt{1+\lambda}\end{aligned} \qquad (590)$$

[Formula 296]
Then, we obtain:

$$\begin{cases}\phi=a_1\sin\omega_1 t+a_2\cos\omega_1 t+a_3\sin\omega_2 t+a_4\cos\omega_2 t\\ \phi^*=a_1^*\sin\omega_1 t+a_2^*\cos\omega_1 t+a_3^*\sin\omega_2 t+a_4^*\cos\omega_2 t\end{cases} \qquad (591)$$

(2) When $\lambda=1$, the following is given:

$$\omega_4\equiv\omega_o\sqrt{2} \qquad (592)$$

Then, we obtain:

$$\begin{cases}\phi=a_1 t+a_2+a_3\sin\omega_4 t+a_4\cos\omega_4 t\\ \phi^*=a_1^* t+a_2^*+a_3^*\sin\omega_4 t+a_4^*\cos\omega_4 t\end{cases} \qquad (593)$$

(3) When $1<\lambda$, the following is given:

$$\begin{aligned}\omega_5 &\equiv \omega_o\sqrt{\lambda-1}\\ \omega_6 &\equiv \omega_o\sqrt{1+\lambda}\end{aligned} \qquad (594)$$

Then, we obtain:

$$\begin{cases}\phi=a_1\sinh\omega_5 t+a_2\cosh\omega_5 t+a_3\sin\omega_6 t+a_4\cos\omega_6 t\\ \phi^*=a_1^*\sinh\omega_5 t+a_2^*\cosh\omega_5 t+a_3^*\sin\omega_6 t+a_4^*\cos\omega_6 t\end{cases} \qquad (595)$$

Transforming the simultaneous eigenvalue problem (565), we obtain:

$$\begin{cases} \left(\frac{d^2}{dt^2}+\omega_o^2\right)\phi=\lambda\omega_o^2\phi^* \\ \left(\frac{d^2}{dt^2}+\omega_o^2\right)\phi^*=\lambda\omega_o^2\phi \end{cases} \qquad (596)$$

The coefficients $a_1,a_2,a_3,a_4$, $a_1^*,a_2^*,a_3^*,a_4^*$ can be decided so as to satisfy eq.(596). As a result of decision of the coefficients, the combinations we obtain are as follows.
[Formula 297]

(1) When $0<\lambda<1$, the following four combinations are obtained:

$$\begin{cases} \phi=\cos\omega_1 t \\ \phi^*=\cos\omega_1 t \end{cases} \qquad (597)$$

$$\begin{cases} \phi=\sin\omega_1 t \\ \phi^*=\sin\omega_1 t \end{cases} \qquad (598)$$

$$\begin{cases} \phi=-\cos\omega_2 t \\ \phi^*=\cos\omega_2 t \end{cases} \qquad (599)$$

$$\begin{cases} \phi=-\sin\omega_2 t \\ \phi^*=\sin\omega_2 t \end{cases} \qquad (600)$$

(2) When $\lambda=1$, the following four combinations are obtained:

$$\begin{cases} \phi=1 \\ \phi^*=1 \end{cases} \qquad (601)$$

$$\begin{cases} \phi=t \\ \phi^*=t \end{cases} \qquad (602)$$

$$\begin{cases} \phi=-\cos\omega_4 t \\ \phi^*=\cos\omega_4 t \end{cases} \qquad (603)$$

$$\begin{cases} \phi=-\sin\omega_4 t \\ \phi^*=\sin\omega_4 t \end{cases} \qquad (604)$$

(3) When $1<\lambda$, the following four combinations are obtained:

$$\begin{cases} \phi = \cosh \omega_5 t \\ \phi^* = \cosh \omega_5 t \end{cases} \quad (605)$$

$$\begin{cases} \phi = \sinh \omega_5 t \\ \phi^* = \sinh \omega_5 t \end{cases} \quad (606)$$

$$\begin{cases} \phi = -\cos \omega_6 t \\ \phi^* = \cos \omega_6 t \end{cases} \quad (607)$$

$$\begin{cases} \phi = -\sin \omega_6 t \\ \phi^* = \sin \omega_6 t \end{cases} \quad (608)$$

These combinations only satisfy the simultaneous differential equations (596), and such conditions that these combinations should satisfy the boundary condition have not been imposed.

10. 2. 7 Eigenfunction

[Formula 298]

In the previous section, three function combinations depending on the value of $\lambda$ are shown. In the present section, combinations that satisfy the boundary condition eq. (567) are shown as follows.

(1) When $0<\lambda<1$, with respect to $\lambda$ that satisfies the following characteristic equation (609), the following equations (610) are eigenfunctions:

$$\begin{aligned} &2\omega_1\omega_2 + 2\omega_1\omega_2 \cos\left[(b-a)\omega_1\right]\cos\left[(b-a)\omega_2\right] \\ &+ \left(\omega_1^2 + \omega_2^2\right)\sin\left[(b-a)\omega_1\right]\sin\left[(b-a)\omega_2\right] = 0 \end{aligned} \quad (609)$$

$$\begin{cases} \phi = \omega_1 \begin{Bmatrix} -\cos\left[\omega_1(t-a)\right]\sin\left[\omega_2(b-a)\right] + \sin\left[\omega_2(b-t)\right] \\ -\cos\left[\omega_1(b-a)\right]\sin\left[\omega_2(t-a)\right] \end{Bmatrix} \\ \quad + \omega_2 \begin{Bmatrix} \cos\left[\omega_2(b-a)\right]\sin\left[\omega_1(t-a)\right] - \sin\left[\omega_1(b-t)\right] \\ + \cos\left[\omega_2(t-a)\right]\sin\left[\omega_1(b-a)\right] \end{Bmatrix} \\ \phi^* = \omega_1 \begin{Bmatrix} -\cos\left[\omega_1(t-a)\right]\sin\left[\omega_2(b-a)\right] - \sin\left[\omega_2(b-t)\right] \\ + \cos\left[\omega_1(b-a)\right]\sin\left[\omega_2(t-a)\right] \end{Bmatrix} \\ \quad + \omega_2 \begin{Bmatrix} \cos\left[\omega_2(b-a)\right]\sin\left[\omega_1(t-a)\right] - \sin\left[\omega_1(b-t)\right] \\ - \cos\left[\omega_2(t-a)\right]\sin\left[\omega_1(b-a)\right] \end{Bmatrix} \end{cases} \quad (610)$$

(2) The case where $\lambda=1$ is not taken into consideration at the present stage, though it might have to be considered in a special case.

[Formula 299]

(3) When $1<\lambda$, with respect to $\lambda$ that satisfies the following characteristic equation (611), the following equations (612) are eigenfunctions:

$$2\omega_5\omega_6 + 2\omega_5\omega_6 \cosh\left[(b-a)\omega_5\right]\cos\left[(b-a)\omega_6\right] + \left(-\omega_5^2 + \omega_6^2\right)\sinh\left[(b-a)\omega_5\right]\sin\left[(b-a)\omega_6\right] = 0 \quad (611)$$

$$\begin{cases} \phi = \omega_5 \begin{Bmatrix} -\cosh\left[\omega_5(t-a)\right]\cdot\sin\left[\omega_6(b-a)\right] + \sin\left[\omega_6(b-t)\right] \\ -\cosh\left[\omega_5(b-a)\right]\cdot\sin\left[\omega_6(t-a)\right] \end{Bmatrix} \\ \quad -\omega_6 \begin{Bmatrix} \cos\left[\omega_6(b-a)\right]\cdot\sinh\left[\omega_5(t-a)\right] - \sinh\left[\omega_5(b-t)\right] \\ +\cos\left[\omega_6(t-a)\right]\cdot\sinh\left[\omega_5(b-a)\right] \end{Bmatrix} \\ \phi^* = \omega_5 \begin{Bmatrix} -\cosh\left[\omega_5(t-a)\right]\cdot\sin\left[\omega_6(b-a)\right] - \sin\left[\omega_6(b-t)\right] \\ +\cosh\left[\omega_5(b-a)\right]\cdot\sin\left[\omega_6(t-a)\right] \end{Bmatrix} \\ \quad +\omega_6 \begin{Bmatrix} \cos\left[\omega_6(b-a)\right]\cdot\sinh\left[\omega_5(t-a)\right] - \sinh\left[\omega_5(b-t)\right] \\ -\cos\left[\omega_6(t-a)\right]\cdot\sinh\left[\omega_5(b-a)\right] \end{Bmatrix} \end{cases} \quad (612)$$

A dimensionless quantity $h$ is defined as:

$$h \equiv \omega_o (b-a) \quad (613)$$

This results in that a termination time $b$ is set as follows:

$$b = a + \frac{h}{\omega_o} \quad (614)$$

Further, a dimensionless time $\xi$ is defined as:

$$\xi \equiv \frac{t-a}{b-a} \quad (615)$$

This is transformed to:

$$t = a + \xi(b-a) \quad (616)$$

It should be noted that the dimensionless time $\eta$ is defined as:

$$\begin{aligned} \eta &\equiv \omega_o t \\ \eta_a &\equiv \omega_o a \\ \eta_b &\equiv \omega_o b \end{aligned} \quad (617)$$

The following relationship exists between the two dimensionless times $\xi, \eta$:
[Formula 300]

$$t = \frac{\eta}{\omega_o} = a + \xi(b-a) \quad (618)$$

Therefore, they are associated by

$$\xi = \frac{a\omega_o - \eta}{(a-b)\omega_o} \quad (619)$$

and

$$\eta = \omega_o \{a + \xi(b-a)\} \; . \quad (620)$$

When these relationships are substituted into eqs. (609) and (611), the characteristic equations are transformed to functions of *h*,$\lambda$. When these relationships are substituted into eqs. (610) and (612), the eigenfunctions are transformed to functions of *h*,$\lambda$,$\xi$.

Let the dimensionless quantity *h* be:

$$h = 15 \quad (621)$$

Then, we obtain the first two eigenvalues of eq. (609) as follows:

$$\lambda = \begin{cases} 0.19894 \\ 0.21840 \end{cases} \quad (622)$$

Each eigenfunction in eq. (610) is normalized so that the maximum value is 1, and is shown in FIG. 22.

[Formula 301]

<u>Likewise, the first two eigenvalues of eq. (610) are:</u>

$$\lambda = \begin{cases} 1.0776 \\ 1.6098 \end{cases} \quad (623)$$

Each eigenfunction in eq. (611) is normalized so that the maximum value is 1, and is shown in FIG. 23.

10. 2. 8 Exemplary analysis1

[Formula 302]

The dimensionless function *p*(*t*) of eq. (538) is given as:

$$p(t) \equiv \sin \omega_o t \quad (624)$$

We obtain the following analytical solution according to eq. (541):

$$\hat{u}(\eta) = \frac{1}{2}(-\eta\cos\eta + \sin\eta) + \hat{u}_o \cos\eta + \hat{v}_o \sin\eta \quad (625)$$

Let the initial condition be:

$$\hat{u}_a = 5, \hat{v}_a = 0 \quad at \quad \eta_a = 0 \quad (626)$$

Comparison between the analytical solutions of eq. (625) and the results obtained by the eigenfunction method of eq. (578) is shown in FIG. 24.

In the drawing, the broken lines indicate the analytical solutions , and the solid lines indicate the results obtained

by the eigenfunction method. "56M" means that the calculation is performed by using up to 56 modes. We can see that as the number of modes is greater, the accuracy of the eigenfunction method is improved, and the displacement $\hat{u}$ obtained by the calculation using about 10 modes by the eigenfunction method coincides well with the analytical solution.

10. 2. 9 Self-adjoint eigenfunction

[Formula 303]

As the problem is a self-adjoint problem under the boundary condition of eq. (558), an eigenfunction that satisfies eq. (579) is used.

To summarize this, the differential equation satisfies

$$\left(\frac{d^2}{dt^2} + \omega_o^2 (1+\lambda)\right)\phi = 0 \quad , \qquad (627)$$

and as the boundary condition, the following is imposed:

$$\begin{cases} \phi(a) = 0 \\ \phi(b) = 0 \end{cases} \qquad (628)$$

In this case, the n-th eigenvalue $\lambda_n$ is given as:

$$\lambda_n = \left\{\frac{n\pi}{(b-a)\omega_o}\right\}^2 - 1 \qquad (629)$$

The n-th eigenfunction $\phi_n$ is given as:

$$\phi_n = \sin\left[\frac{n\pi}{b-a}(t-a)\right] \qquad (630)$$

10. 2. 10 Exemplary analysis 2

[Formula 304]

The dimensionless function *p(t)* of eq. (538) is given as:

$$p(t) \equiv \sin \omega_o t \qquad (631)$$

According to eq. (541), we obtain an analytical solution given as:

$$\hat{u}(\eta) = \frac{1}{2}\left(-\eta\cos\eta + \eta_b \frac{\cos\eta_b}{\sin\eta_b}\sin\eta\right) + \hat{u}_o\left(\cos\eta - \frac{\cos\eta_b}{\sin\eta_b}\sin\eta\right) + \hat{u}_b\frac{\sin\eta}{\sin\eta_b} \qquad (632)$$

Let the condition of displacement be:

$$\hat{u}_a = 5, \hat{u}_b = 0, \eta_a = 0 \quad (633)$$

Comparison between the analytical solutions of eq. (632) and the results obtained by the eigenfunction method of eq. (584) is shown in FIG. 25. In the drawing, the broken lines indicate the analytical solutions, and the black solid lines indicate the results obtained by the eigenfunction method. "50M" means that the calculation is performed by using up to 50 modes. We can see that as the number of modes is greater, the accuracy of the eigenfunction method is improved, and the displacement $\hat{u}$ obtained by the calculation using about 10 modes by the eigenfunction method coincides well with the analytical solution.

10. 2. 11 Hamilton's principle

[Formula 305]

Regarding the mass-point spring system, we have discussed that the very differential operators are self-adjoint, but the boundary condition is non-self-adjoint, in some cases. We found that in such a case, it is necessary to solve the problem by using eigenfunctions of a non-self-adjoint problem. Here, the time t is taken as an integration variable of eq. (122), and Exemplary analysis 1 shows that the problem can be solved by:

$$\int_a^b Lu \cdot \delta u^* dt = \int_a^b f \cdot \delta u^* dt \quad (634)$$

Special exemplary cases of this equation include a self-adjoint problem. Exemplary analysis 2 shows that the problem can be solved as a self-adjoint problem by:

$$\int_a^b Lu \cdot \delta u dt = \int_a^b f \cdot \delta u dt \quad (635)$$

This is nothing but the Hamilton's principle. In other words, this shows that the present method involves not only the principle of virtual work but also the Hamilton's principle.

[Formula 306]

Generally, according to the Hamilton's principle, the both sides of the differential equation (534) are multiplied by $\delta u$ and are integrated, whereby eq. (635) is obtained, and thereafter, by partial integration, the left side of the equation is transformed to:

$$\begin{aligned}\int_a^b Lu \cdot \delta u dt &= \int_a^b \left( m \frac{d^2}{dt^2} u \right) \cdot \delta u dt + \int_a^b (ku) \cdot \delta u dt \\ &= \left[ \left( m \frac{d}{dt} u \right) \cdot \delta u \right]_a^b - \int_a^b \left( m \frac{d}{dt} u \right) \cdot \left( \frac{d}{dt} \delta u \right) dt + \int_a^b \delta \left( \frac{1}{2} k u^2 \right) dt \\ &= \left[ \left( m \frac{d}{dt} u \right) \cdot \delta u \right]_a^b - \int_a^b \delta \left\{ \frac{1}{2} m \left( \frac{d}{dt} u \right)^2 \right\} dt + \int_a^b \delta \left( \frac{1}{2} k u^2 \right) dt\end{aligned} \quad (636)$$

Here, a condition such that variations are zero at both end points of time, which is as follows, is imposed:

$$\begin{cases} \delta u(a) = 0 \\ \delta u(b) = 0 \end{cases} \quad (637)$$

Thereby, eq.(636) is transformed to:

$$\int_a^b Lu \cdot \delta u dt = \int_a^b \delta\left\{-\frac{1}{2}m\left(\frac{d}{dt}u\right)^2 + \frac{1}{2}ku^2\right\}dt \quad (638)$$

Here, we should note that the condition of eq. (637) is the boundary condition of the self-adjoint eigenfunction.

Kinetic energy *T* is given as:

$$T \equiv \frac{1}{2}m\left(\frac{d}{dt}u\right)^2 \quad (639)$$

[Formula 307]

Potential energy *U* is given as:

$$U \equiv \frac{1}{2}ku^2 \quad (640)$$

The Lagrangian function *P* is given as:

$$P \equiv U - T \quad (641)$$

Then, eq.(638) is transformed to:

$$\int_a^b Lu \cdot \delta u dt = \int_a^b \delta P dt \quad (642)$$

For example, in free vibration, the external force term f is zero. Therefore, by eliminating the symbol δ of variation from the integration, we obtain the following transformed equation:

$$\delta\int_a^b P dt = 0 \quad (643)$$

This is called the Hamilton's principle , which is the variational principle in the self-adjoint problem.

10. 3 Static deflection of string

10. 3. 1 Differential equation

In static deflection of a string shown in FIG. 26, let the length of the string be $\ell$, and let the tensile force be T. Let the displacement be u(x), and let the distributed load be f(x). Then, the operator L is given as:
[Formula 308]

$$L \equiv -T\frac{d^2}{dx^2} \quad (644)$$

Then, we obtain the following differential equation:

$$Lu(x) = f(x) \quad (645)$$

When boundary conditions are given as

$$u(0) = u_o$$
$$\dot{u}(0) = \theta_o \quad , \qquad (646)$$

we obtain the following analytical solution:

$$u(x) = -\frac{1}{T}\int_0^x \int_0^{\xi} f(\xi) d\xi d\xi + u_o + \theta_o x \quad (647)$$

When boundary conditions are given as:

$$u(0) = u_o$$
$$u(\lambda) = u_\lambda \quad , \qquad (648)$$

we obtain the following analytical solution:

$$u(x) = \frac{1}{T}\left(\frac{x}{\lambda}\int_0^{\lambda}\int_0^{\xi} f(\xi) d\xi d\xi - \int_0^{x}\int_0^{\xi} f(\xi) d\xi d\xi\right) + \left(1 - \frac{x}{\lambda}\right)u_o + \frac{x}{\lambda}u_\lambda \quad (649)$$

[Formula 309]

Regarding a distributed load *f*(*x*), let a constant having dimensionality of (force/length) be *Q*, and let a dimensionless function be *p*(*x*). Then, the distributed load is given as:

$$f(x) \equiv Q \cdot p(x) \quad (650)$$

Since terms having dimensionality of force are T and Qℓ,

$$\frac{Q\lambda}{T} \quad (651)$$

is dimensionless. A dimensionless position ξ is given as:

$$\xi \equiv \frac{x}{\lambda} \quad (652)$$

Dimensionless displacements are defined as:
[Formula 310]

$$\hat{u}(x) \equiv \frac{T}{Q\lambda^2}u(x)$$
$$\hat{u}_o \equiv \frac{T}{Q\lambda^2}u_o, \quad \hat{u}_\lambda \equiv \frac{T}{Q\lambda^2}u_\lambda \quad (653)$$

Dimensionless angles are defined as:

$$\hat{\theta}_o \equiv \frac{T}{Q\lambda}\theta_o, \quad \hat{\theta}_\lambda \equiv \frac{T}{Q\lambda}\theta_\lambda \tag{654}$$

Then, we obtain an analytical solution (647) as follows:

$$\hat{u}(x) = -\frac{1}{\lambda^2}\int_0^x\int_0^\xi p(\xi)d\xi d\xi + \hat{u}_o + \hat{\theta}_o\frac{x}{\lambda} \tag{655}$$

We obtain an analytical solution (649) as follows:

$$\hat{u}(x) = \frac{1}{\lambda^2}\left(\frac{x}{\lambda}\int_0^\lambda\int_0^\xi p(\xi)d\xi d\xi - \int_0^x\int_0^\xi f(\xi)d\xi d\xi\right) + \left(1-\frac{x}{\lambda}\right)\hat{u}_o + \frac{x}{\lambda}\hat{u}_\lambda \tag{656}$$

10. 3. 2 Adjoint boundary condition and adjoint differential operators

[Formula 311]

Multiplying eq. (645) by *u** and integrating the same, we obtain:

$$\int_0^\lambda Lu \cdot u^* dx = \int_0^\lambda f \cdot u^* dx \tag{657}$$

By partial integration of the left side of the equation, we obtain:

$$\int_0^\lambda Lu \cdot u^* dx = T\left[u\dot{u}^* - \dot{u}u^*\right]_0^\lambda + \int_0^\lambda u \cdot \left(-T\frac{d^2}{dx^2}\right)u^* dx \tag{658}$$

Let the operator *L** be:

$$L^* \equiv -T\frac{d^2}{dx^2} \tag{659}$$

Let the boundary term *R* be:

$$R \equiv T\left[u\dot{u}^* - \dot{u}u^*\right]_0^\lambda \tag{660}$$

Then, eq. (658) is transformed to:

$$\int_0^\lambda Lu \cdot u^* dx = R + \int_0^\lambda u \cdot L^* u^* dx \tag{661}$$

The operator satisfies:

$$L^* = L, \tag{662}$$

Therefore, this is a self-adjoint operator.
[Formula 312]

[Exemplary non-self-adjoint boundary condition 1]

Regarding the boundary term R, the boundary conditions are given as:

$$\begin{aligned} u(0) &= 0 \\ \dot{u}(0) &= 0 \end{aligned} \qquad (663)$$

Then, we obtain the following as adjoint boundary conditions:

$$\begin{aligned} u^*(\lambda) &= 0 \\ \dot{u}^*(\lambda) &= 0 \end{aligned} \qquad (664)$$

As the conditions of eq. (663) and eq. (664) are different, this is a non-self-adjoint boundary condition.

[Exemplary self-adjoint boundary condition 1]

Regarding the boundary term R, the boundary conditions are given as:

$$\begin{aligned} u(0) &= 0 \\ u(\lambda) &= 0 \end{aligned} \qquad (665)$$

Then, we obtain the following as adjoint boundary conditions:

$$\begin{aligned} u^*(0) &= 0 \\ u^*(\lambda) &= 0 \end{aligned} \qquad (666)$$

As the conditions of eq. (665) and eq. (666) coincide, this is a self-adjoint boundary condition.

10. 3. 3 Homogenization of boundary condition

An index B is added to a term that satisfies an inhomogeneous boundary condition so as to let the term be $u_B$, and an index H is added a term that satisfies a homogeneous boundary condition so as to let the term be $u_H$. The displacement u is expressed as follows, with the sum of these:
[Formula 313]

$$u(x) \equiv u_B(x) + u_H(x) \qquad (667)$$

[Exemplary non-self-adjoint boundary condition 1]

In the case where the boundary conditions are

$$\begin{aligned} u(0) &= u_o \\ \dot{u}(0) &= \theta_o \end{aligned} , \qquad (668)$$

we define the boundary function $u_B$ as

$$u_B(x) \equiv u_o \cos\frac{x}{\lambda} + \lambda\theta_o \sin\frac{x}{\lambda} \quad . \qquad (669)$$

Accordingly, we obtain:

$$\begin{aligned} u_B(0) &= u_o \\ \dot{u}_B(0) &= \theta_o \end{aligned} \qquad (670)$$

Therefore, the following homogeneous boundary conditions are imposed on $u_H$:

$$\begin{aligned} u_H(0) &= 0 \\ \dot{u}_H(0) &= 0 \end{aligned} \qquad (671)$$

This example becomes a non-self-adjoint problem.
It should be noted that the following is established, which is a useful property:

$$Lu_B = \left(-T\frac{d^2}{dx^2}\right)u_B = \frac{T}{\lambda^2}u_B \qquad (672)$$

[Formula 314]

[Exemplary self-adjoint boundary condition 1]

In the case where the boundary conditions are

$$\begin{aligned} u(0) &= u_o \\ u(\lambda) &= u_\lambda \end{aligned} \quad , \qquad (673)$$

we define the boundary function $u_B$ as

$$u_B(x) \equiv \frac{1}{\sin 1}\left\{u_o \sin\left(1 - \frac{x}{\lambda}\right) + u_\lambda \sin\left(\frac{x}{\lambda}\right)\right\} \quad .(674)$$

Accordingly, we obtain:

$$\begin{aligned} u_B(0) &= u_o \\ u_B(\lambda) &= u_\lambda \end{aligned} \qquad (675)$$

Therefore, the following homogeneous boundary conditions are imposed on $u_H$:

$$\begin{aligned} u_H(0) &= 0 \\ u_H(\lambda) &= 0 \end{aligned} \qquad (676)$$

This example becomes a self-adjoint problem.
It should be noted that the following is established, which is a useful property:

$$Lu_B = \left(-T\frac{d^2}{dx^2}\right)u_B = \frac{T}{\lambda^2}u_B \qquad (677)$$

When eq. (667) is substituted into eq. (645), the differential equation (645) is transformed to:

$$Lu_H = f_H \qquad (678)$$

where

$$f_H \equiv f - Lu_B \qquad (679)$$

This is equivalent to eqs. (40),(41), and the problem is changed to a problem of determining a solution function $u_H$ according to the boundary function $u_B$.

10. 3. 4 Eigenfunction sets

[Formula 315]
In a simultaneous eigenvalue problem of

$$\begin{cases} L\phi = \lambda w\phi^* \\ L^*\phi^* = \lambda w\phi \end{cases}, \qquad (680)$$

the weight $w$ is given as:

$$w \equiv \frac{T}{\lambda^2} \qquad (681)$$

From the simultaneous eigenvalue problem, the following equations on each eigenfunction are obtained:

$$L^*L\phi = \lambda^2\left(\frac{T}{\lambda^2}\right)^2\phi \qquad (682)$$

[Formula 316]

$$LL^*\phi^* = \lambda^2\left(\frac{T}{\lambda^2}\right)^2\phi^* \qquad (683)$$

The operators satisfy:

$$L^*L = LL^* = T^2\frac{d^4}{dx^4} \qquad (684)$$

Since eqs. (682) and (683) take the same form, eq. (682) may be solved so that the formats of $\phi,\phi^*$ can be obtained. Eq. (682) is given as:

$$\left(T^2 \frac{d^4}{dx^4}\right)\phi = \lambda^2\left(\frac{T}{\lambda^2}\right)^2 \phi \quad (685)$$

And it is transformed to,

$$\left(\frac{d^2}{dx^2} - \frac{1}{\lambda^2}\lambda\right)\left(\frac{d^2}{dx^2} + \frac{1}{\lambda^2}\lambda\right)\phi = 0 \quad (686)$$

This solution has $a_1,a_2,a_3,a_4$, $a_1^*,a_2^*,a_3^*,a_4^*$ as arbitrary coefficients. Given

$$\omega \equiv \frac{1}{\lambda}\sqrt{\lambda} \quad , \quad (687)$$

we obtain:

$$\begin{cases} \phi = a_1 \sin \omega x + a_2 \cos \omega x + a_3 \sinh \omega x + a_4 \cosh \omega x \\ \phi^* = a_1^* \sin \omega x + a_2^* \cos \omega x + a_3^* \sinh \omega x + a_4^* \cosh \omega x \end{cases} \quad (688)$$

Transforming the simultaneous eigenvalue problem (680) gives:

$$\begin{cases} \left(\frac{d^2}{dx^2}\right)\phi = -\lambda \frac{1}{\lambda^2}\phi^* \\ \left(\frac{d^2}{dx^2}\right)\phi^* = -\lambda \frac{1}{\lambda^2}\phi \end{cases} \quad (689)$$

The coefficient $a_1,a_2,a_3,a_4$, $a_1^*,a_2^*,a_3^*,a_4^*$ can be decided so as to satisfy eq.(689). As a result of decision of the coefficients, we can obtain the following four combinations.

$$\begin{cases} \phi = \cos \omega x \\ \phi^* = \cos \omega x \end{cases} \quad (690)$$

$$\begin{cases} \phi = \sin \omega x \\ \phi^* = \sin \omega x \end{cases} \quad (691)$$

$$\begin{cases} \phi = -\cosh \omega x \\ \phi^* = \cosh \omega x \end{cases} \quad (692)$$

$$\begin{cases} \phi = -\sinh \omega x \\ \phi^* = \sinh \omega x \end{cases} \quad (693)$$

These combinations only satisfy the simultaneous differential equations (680), and such conditions that these combinations should satisfy the boundary condition have not been imposed.

10. 3. 5 Eigenfunction

[Formula 317]

[Exemplary non-self-adjoint boundary condition 1]

In the case where the homogeneous boundary condition is expressed by eq. (671), the following conditions are imposed:

$$\begin{cases} \phi(0)=0 \\ \dot{\phi}(0)=0 \\ \phi^*(\lambda)=0 \\ \dot{\phi}^*(\lambda)=0 \end{cases} \qquad (694)$$

As a result, we obtain the following characteristic equation:

$$1+\cos\omega\lambda\cosh\omega\lambda=0 \qquad (695)$$

With respect to $\lambda$ satisfying this, the following are eigenfunctions:

$$\begin{cases} \phi=(\cos\omega\lambda+\cosh\omega\lambda)(\sin\omega x-\sinh\omega x) \\ \quad-(\sin\omega\lambda+\sinh\omega\lambda)(\cos\omega x-\cosh\omega x) \\ \phi^*=(\cos\omega\lambda+\cosh\omega\lambda)(\sin\omega x+\sinh\omega x) \\ \quad-(\sin\omega\lambda+\sinh\omega\lambda)(\cos\omega x+\cosh\omega x) \end{cases} \qquad (696)$$

When eqs. (652) and (687) are substituted therein, the characteristic equation becomes a function of $\lambda$, and the eigenfunctions become functions of $\lambda,\xi$. The first four eigenvalues are as follows:
[Formula 318]

$$\lambda=\begin{cases} 3.5160 \\ 22.034 \\ 61.697 \\ 120.90 \end{cases} \qquad (697)$$

Each eigenfunction is normalized so that the maximum value is 1, and is shown in FIG. 27.
[Formula 319]
[Exemplary self-adjoint boundary condition 1]
In the case where the homogeneous boundary condition is expressed by eq. (676), the following conditions are imposed:

$$\begin{cases} \phi(0)=0 \\ \phi(\lambda)=0 \\ \phi^*(0)=0 \\ \phi^*(\lambda)=0 \end{cases} \qquad (698)$$

As a result, we obtain the n-th eigenvalue $\lambda_n$, given as:

$$\lambda_n=(n\pi)^2 \qquad (699)$$

We also obtain the n-th eigenfunction $\phi_n$ given as:

$$\phi_n = \sin\left(\frac{n\pi}{\lambda}x\right) \tag{700}$$

10. 3. 6 Eigenfunction method

[Formula 320]

[Exemplary non-self-adjoint boundary condition 1]

A solution displacement $u(x)$ is given as:

$$\begin{aligned} u(x) &\equiv u_B(x) + u_H(x) \\ u_B(x) &\equiv u_o \cos\frac{x}{\lambda} + \lambda\theta_o \sin\frac{x}{\lambda} \\ u_H(x) &\equiv \sum_i c_i \phi_i(x) \\ c_i &\equiv \frac{1}{\lambda_i}\left(\frac{Q\lambda^2}{T}\frac{\int_0^\lambda p\cdot\phi_i^* dx}{\int_0^\lambda \phi_i^*\cdot\phi_i^* dx} - \frac{\int_0^\lambda u_B\cdot\phi_i^* dx}{\int_0^\lambda \phi_i^*\cdot\phi_i^* dx}\right) \end{aligned} \tag{701}$$

Making this dimensionless gives:

$$\begin{aligned} \hat{u}(x) &\equiv \hat{u}_B(x) + \hat{u}_H(x) \\ \hat{u}_B(x) &\equiv \hat{u}_o \cos\frac{x}{\lambda} + \hat{\theta}_o \sin\frac{x}{\lambda} \\ \hat{u}_H(x) &\equiv \sum_i \hat{c}_i \phi_i(x) \\ \hat{c}_i &\equiv \frac{1}{\lambda_i}\left(\frac{\int_0^\lambda p\cdot\phi_i^* dx}{\int_0^\lambda \phi_i^*\cdot\phi_i^* dx} - \frac{\int_0^\lambda \hat{u}_B\cdot\phi_i^* dx}{\int_0^\lambda \phi_i^*\cdot\phi_i^* dx}\right) \end{aligned} \tag{702}$$

[Exemplary self-adjoint boundary condition 1]

A solution displacement $u(x)$ is given as:
[Formula 321]

$$\begin{aligned} u(x) &\equiv u_B(x) + u_H(x) \\ u_B(x) &\equiv \frac{1}{\sin 1}\left\{u_o \sin\left(1-\frac{x}{\lambda}\right) + u_\lambda \sin\left(\frac{x}{\lambda}\right)\right\} \\ u_H(x) &\equiv \sum_i c_i \phi_i(x) \\ c_i &\equiv \frac{1}{\lambda_i}\left(\frac{Q\lambda^2}{T}\frac{\int_0^\lambda p\cdot\phi_i dx}{\int_0^\lambda \phi_i\cdot\phi_i dx} - \frac{\int_0^\lambda u_B\cdot\phi_i dx}{\int_0^\lambda \phi_i\cdot\phi_i dx}\right) \end{aligned} \tag{703}$$

Making this dimensionless gives:

$$
\begin{aligned}
&\hat{u}(x) \equiv \hat{u}_B(x) + \hat{u}_H(x) \\
&\quad \hat{u}_B(x) \equiv \frac{1}{\sin 1}\left\{ \hat{u}_o \sin\left(1 - \frac{x}{\lambda}\right) + \hat{u}_\lambda \sin\left(\frac{x}{\lambda}\right) \right\} \\
&\quad \hat{u}_H(x) \equiv \sum_i \hat{c}_i \phi_i(x) \\
&\quad \hat{c}_i \equiv \frac{1}{\lambda_i}\left( \frac{\int_0^\lambda p \cdot \phi_i dx}{\int_0^\lambda \phi_i \cdot \phi_i dx} - \frac{\int_0^\lambda \hat{u}_B \cdot \phi_i dx}{\int_0^\lambda \phi_i \cdot \phi_i dx} \right)
\end{aligned} \tag{704}
$$

10. 3. 7 Exemplary non-self-adjoint analysis 1

[Formula 322]

The dimensionless function $p(x)$ of eq. (650) is given as:

$$p(x) \equiv \sin \frac{\pi}{\lambda} x \tag{705}$$

We obtain the following analytical solution according to eq. (655):

$$\hat{u}(\xi) = \frac{-\pi\xi + \sin(\pi\xi)}{\pi^2} + \hat{u}_o + \hat{\theta}_o \xi \tag{706}$$

Let the boundary condition be:

$$\hat{u}_o = 0, \hat{\theta}_o = 0.1 \tag{707}$$

Comparison between the analytical solutions of eq. (706) and the results obtained by the eigenfunction method of eq. (702) is shown in FIG. 28. In the drawing, the broken lines indicate the analytical solution and the black solid lines indicate the results obtained by the eigenfunction method. "30M" means that the calculation is performed by using up to 30 modes. We can see that as the number of modes is greater, the accuracy of the eigenfunction method is improved, and the displacement $\hat{u}$ obtained by the calculation using about 3 modes by the eigenfunction method coincides well with the analytical solution.

10. 3. 8 Exemplary non-self-adjoint analysis 2

[Formula 323]

The dimensionless function $p(x)$ of eq. (650) is given as:

$$p(x) \equiv \cos \frac{\pi}{\lambda} x \tag{708}$$

According to eq. (655), the analytical solution is transformed to:

$$\hat{u}(\xi) = \frac{-1 + \cos(\pi\xi)}{\pi^2} + \hat{u}_o + \hat{\theta}_o \xi \tag{709}$$

Let the boundary condition be:

$$\hat{u}_o = 0, \hat{\theta}_o = 0.1 \tag{710}$$

Comparison between the analytical solutions of eq. (709) and the results obtained by the eigenfunction method of eq. (702) is shown in FIG. 29. In the drawing, the broken lines indicate the analytical solutions , and the black solid lines indicate the results obtained by the eigenfunction method. "30M" means that the calculation is performed by using up to 30 modes. We can see that as the number of modes is greater, the accuracy of the eigenfunction method is improved, and the displacement $\hat{u}$ obtained by the calculation using about 3 modes by the eigenfunction method coincides well with the analytical solution.

10. 3. 9 Exemplary self-adjoint analysis 1

[Formula 324]
The dimensionless function *p*(*x*) of eq. (650) is given as:

$$p(x) \equiv \sin \frac{\pi}{\lambda} x \qquad (711)$$

According to eq. (656), the analytical solution is transformed to:

$$\hat{u}(\xi) = \frac{\sin(\pi\xi)}{\pi^2} + (1-\xi)\hat{u}_o + \hat{u}_\lambda \xi \qquad (712)$$

Let the boundary condition be:

$$\hat{u}_o = 0, \hat{u}_\lambda = 0.1 \qquad (713)$$

Comparison between the analytical solutions of eq. (713) and the results obtained by the eigenfunction method of eq. (704) is shown in FIG. 30. In the drawing, the broken lines indicate the analytical solutions , and the black solid lines indicate the results obtained by the eigenfunction method. "30M" means that the calculation is performed by using up to 30 modes. We can see that as the number of modes is greater, the accuracy of the eigenfunction method is improved, and the displacement $\hat{u}$ obtained by the calculation using about 3 modes by the eigenfunction method coincides well with the analytical solution.

10. 3. 10 Exemplary self-adjoint analysis 2

[Formula 325]
The dimensionless function *p*(*x*) of eq. (650) is given as:

$$p(x) \equiv \cos \frac{\pi}{\lambda} x \qquad (714)$$

According to eq. (656), the analytical solution is transformed to:

$$\hat{u}(\xi) = \frac{-1 + 2\xi + \cos(\pi\xi)}{\pi^2} + (1-\xi)\hat{u}_o + \hat{u}_\lambda \xi \qquad (715)$$

Let the boundary condition be:

$$\hat{u}_o = 0, \hat{u}_\lambda = 0.1 \qquad (716)$$

Comparison between the analytical solutions of eq. (715) and the results obtained by the eigenfunction method of eq. (704) is shown in FIG. 31. In the drawing, the broken lines indicate the analytical solutions , and the black solid

lines indicate the results obtained by the eigenfunction method. "30M" means that the calculation is performed by using up to 30 modes. We can see that as the number of modes is greater, the accuracy of the eigenfunction method is improved, and the displacement $\hat{u}$ obtained by the calculation using about 3 modes by the eigenfunction method coincides well with the analytical solution.

10. 4 Static deflection of beam

10. 4. 1 Differential equation

In static deflection of a beam shown in FIG. 32, let the length of the beam be $\ell$, and let the bending stiffness be EI. Let the shear force be F(x), and let the bending moment be M(x). Further, let the displacement be u(x), and let the distributed load be f(x). Then, the operator L is given as:
[Formula 326]

$$L \equiv EI \frac{d^4}{dx^4} \qquad (717)$$

Then, we obtain the following differential equation:

$$Lu(x) = f(x) \qquad (718)$$

When boundary conditions are given as
[Formula 327]

$$\begin{aligned} u(0) &= u_o \\ u'(0) &= \theta_o \\ -EIu''(0) &= M_o \\ -EIu'''(0) &= F_o \end{aligned} \qquad (719)$$

we obtain the following analytical solution:

$$\begin{aligned} u(x) = {} & \frac{1}{EI}\int_0^x\int_0^\xi\int_0^\xi\int_0^\xi f(\xi)\,d\xi\,d\xi\,d\xi\,d\xi \\ & -\frac{1}{6}\frac{1}{EI}F_o x^3 - \frac{1}{2}\frac{1}{EI}M_o x^2 + \theta_o x + u_o \end{aligned} \qquad (720)$$

When boundary conditions are given as:

$$\begin{aligned} u(0) &= u_o \\ u'(0) &= \theta_o \\ u(\lambda) &= u_\lambda \\ u'(\lambda) &= \theta_\lambda \end{aligned} \qquad (721)$$

we obtain the following analytical solution:

$$u(x)=\frac{1}{EI}\left(\begin{array}{l}\int_0^x\int_0^\xi\int_0^\xi\int_0^\xi f(\xi)d\xi d\xi d\xi d\xi \\ +\left(\frac{x}{\lambda}\right)^2\left(\begin{array}{l}\left(2\frac{x}{\lambda}-3\right)\int_0^\lambda\int_0^\xi\int_0^\xi\int_0^\xi f(\xi)d\xi d\xi d\xi d\xi \\ -(x-\lambda)\int_0^\lambda\int_0^\xi\int_0^\xi f(\xi)d\xi d\xi d\xi\end{array}\right)\end{array}\right) \\ +\left(\frac{x}{\lambda}-1\right)^2\left(2\frac{x}{\lambda}+1\right)u_o+\left(\frac{x}{\lambda}-1\right)^2 x\theta_o \\ -\left(\frac{x}{\lambda}\right)^2\left(2\frac{x}{\lambda}-3\right)u_\lambda+\left(\frac{x}{\lambda}\right)^2(x-\lambda)\theta_\lambda \qquad (722)$$

[Formula 328]

Regarding a distributed load $f(x)$, let a constant having dimensionality of (force/length) be $Q$, and let a dimensionless function be $p(x)$. Then, the distributed load is given as:

$$f(x)\equiv Q\cdot p(x) \qquad (723)$$

Since terms having dimensionality of force are $\frac{EI}{\ell^2}$ and $Q\ell$,

$$\frac{Q\lambda^3}{EI} \qquad (724)$$

is dimensionless. A dimensionless position $\xi$ is given as:

$$\xi\equiv\frac{x}{\lambda} \qquad (725)$$

Dimensionless displacements are defined as:

$$\hat{u}(x)\equiv\frac{EI}{Q\lambda^4}u(x) \\ \hat{u}_o\equiv\frac{EI}{Q\lambda^4}u_o,\quad \hat{u}_\lambda\equiv\frac{EI}{Q\lambda^4}u_\lambda \qquad (726)$$

Dimensionless angles are defined as:

$$\hat{\theta}_o\equiv\frac{EI}{Q\lambda^3}\theta_o,\quad \hat{\theta}_\lambda\equiv\frac{EI}{Q\lambda^3}\theta_\lambda \qquad (727)$$

Dimensionless moments are defined as:

$$\hat{M}_o\equiv\frac{1}{Q\lambda^2}M_o,\quad \hat{M}_\lambda\equiv\frac{1}{Q\lambda^2}M_\lambda \qquad (728)$$

Dimensionless shear forces are defined as:

$$\hat{F}_o \equiv \frac{1}{Q\lambda}F_o, \quad \hat{F}_\lambda \equiv \frac{1}{Q\lambda}F_\lambda \qquad (729)$$

10. 4. 2 Adjoint boundary condition and adjoint differential operators

[Formula 329]
Multiplying eq. (718) by $u^*$ and integrating the same, we obtain:

$$\int_0^\lambda Lu \cdot u^* dx = \int_0^\lambda f \cdot u^* dx \qquad (730)$$

By partial integration of the left side of the equation, we obtain:
[Formula 330]

$$\int_0^\lambda Lu \cdot u^* dx = EI\left[\dddot{u}u^* - \ddot{u}\dot{u}^* + \dot{u}\ddot{u}^* - u\dddot{u}^*\right]_0^\lambda + \int_0^\lambda u \cdot \left(EI\frac{d^4}{dx^4}\right)u^* dx \qquad (731)$$

Let the operator $L^*$ be:

$$L^* \equiv EI\frac{d^4}{dx^4} \qquad (732)$$

Let the boundary term $R$ be:

$$R \equiv EI\left[\dddot{u}u^* - \ddot{u}\dot{u}^* + \dot{u}\ddot{u}^* - u\dddot{u}^*\right]_0^\lambda \qquad (733)$$

Then, eq. (731) is transformed to:

$$\int_0^\lambda Lu \cdot u^* dx = R + \int_0^\lambda u \cdot L^* u^* dx \qquad (734)$$

The operator satisfies:

$$L^* = L \qquad (735)$$

Therefore, this is a self-adjoint operator. It should be noted that the boundary term $R$ is transformed with use of the following equations:

$$\begin{aligned} &\theta \equiv \dot{u} && \theta^* \equiv \dot{u}^* \\ &M \equiv -EI\,\ddot{u} && M^* \equiv -EI\,\ddot{u}^* \\ &F \equiv -EI\,\dddot{u} && F^* \equiv -EI\,\dddot{u}^* \end{aligned} \qquad (736)$$

The transformed boundary term $R$ is given as:

$$R \equiv \left[-Fu^* + M\theta^* - \theta M^* + uF^*\right]_0^\lambda \qquad (737)$$

[Formula 331]

[Exemplary non-self-adjoint boundary condition 1]

Regarding the boundary term R , the boundary conditions are given as:

$$\begin{aligned} u(0) &= 0 \\ \theta(0) &= 0 \\ M(0) &= 0 \\ F(0) &= 0 \end{aligned} \quad (738)$$

Then, we obtain the following as adjoint boundary conditions:

$$\begin{aligned} u^*(\lambda) &= 0 \\ \theta^*(\lambda) &= 0 \\ M^*(\lambda) &= 0 \\ F^*(\lambda) &= 0 \end{aligned} \quad (739)$$

As the conditions of eq. (738) and (739) are different, this is a non-self-adjoint boundary condition.

[Exemplary self-adjoint boundary condition 1]

Regarding the boundary term R , the boundary conditions are given as:

$$\begin{aligned} u(0) &= 0 \\ \theta(0) &= 0 \\ u(\lambda) &= 0 \\ \theta(\lambda) &= 0 \end{aligned} \quad (740)$$

Then, we obtain the following as adjoint boundary conditions:

$$\begin{aligned} u^*(0) &= 0 \\ \theta^*(0) &= 0 \\ u^*(\lambda) &= 0 \\ \theta^*(\lambda) &= 0 \end{aligned} \quad (741)$$

As the conditions of eq. (740) and eq. (741)coincide, this is a self-adjoint boundary condition.

10. 4. 3 Homogenization of boundary condition

[Formula 332]

An index B is added to a term that satisfies an inhomogeneous boundary condition so as to let the term be $u_B$, and an index H is added a term that satisfies a homogeneous boundary condition so as to let the term be $u_H$. The displacement u is expressed as follows, with the sum of these:

$$u(x) \equiv u_B(x) + u_H(x) \quad (742)$$

[Exemplary non-self-adjoint boundary condition 1]

In the case where the boundary conditions are
[Formula 333]

$$\begin{aligned} u(0) &= u_o \\ \theta(0) &= \theta_o \\ M(0) &= M_o \quad , \\ F(0) &= F_o \end{aligned} \tag{743}$$

we define the boundary function $u_B$ as

$$u_B(x) \equiv \frac{1}{2}\left[\begin{aligned} &\lambda\left(\theta_o + F_o \frac{\lambda^2}{EI}\right)\sin\frac{x}{\lambda} + \lambda\left(\theta_o - F_o \frac{\lambda^2}{EI}\right)\sinh\frac{x}{\lambda} \\ &+\left(u_o + M_o \frac{\lambda^2}{EI}\right)\cos\frac{x}{\lambda} + \left(u_o - M_o \frac{\lambda^2}{EI}\right)\cosh\frac{x}{\lambda} \end{aligned}\right] . \tag{744}$$

Accordingly, we obtain:

$$\begin{aligned} u_B(0) &= u_o \\ \dot{u}_B(0) &= \theta_o \\ -EI\,\ddot{u}_B(0) &= M_o \\ -EI\,\dddot{u}_B(0) &= F_o \end{aligned} \tag{745}$$

Therefore, the following homogeneous boundary conditions are imposed on $u_H$:

$$\begin{aligned} u_H(0) &= 0 \\ \dot{u}_H(0) &= 0 \\ \ddot{u}_H(0) &= 0 \\ \dddot{u}_H(0) &= 0 \end{aligned} \tag{746}$$

This example becomes a non-self-adjoint problem.

It should be noted that the following is established, which is a useful property,:

$$Lu_B = \left(EI\frac{d^4}{dx^4}\right)u_B = \frac{EI}{\lambda^4}u_B \tag{747}$$

[Formula 334]

[Exemplary self-adjoint boundary condition 1]

In the case where the boundary conditions are

$$\begin{aligned} u(0) &= u_o \\ \theta(0) &= \theta_o \\ u(\lambda) &= u_\lambda \\ \theta(\lambda) &= \theta_\lambda \end{aligned} \tag{748}$$

we define the boundary function $u_B$ as

$$u_B(x) \equiv \frac{1}{2}\left[\begin{array}{l} \dfrac{\cos\left(\frac{1}{2}-\frac{x}{\lambda}\right)\left((u_o+u_\lambda)\sinh\frac{1}{2}+\lambda(\theta_o-\theta_\lambda)\cosh\frac{1}{2}\right)}{\cosh\frac{1}{2}\sin\frac{1}{2}+\cos\frac{1}{2}\sinh\frac{1}{2}} \\ +\dfrac{\cosh\left(\frac{1}{2}-\frac{x}{\lambda}\right)\left((u_o+u_\lambda)\sin\frac{1}{2}-\lambda(\theta_o-\theta_\lambda)\cos\frac{1}{2}\right)}{\cosh\frac{1}{2}\sin\frac{1}{2}+\cos\frac{1}{2}\sinh\frac{1}{2}} \\ -\dfrac{\sinh\left(\frac{1}{2}-\frac{x}{\lambda}\right)\left((u_o-u_\lambda)\cos\frac{1}{2}+\lambda(\theta_o+\theta_\lambda)\sin\frac{1}{2}\right)}{\cosh\frac{1}{2}\sin\frac{1}{2}-\cos\frac{1}{2}\sinh\frac{1}{2}} \\ +\dfrac{\sin\left(\frac{1}{2}-\frac{x}{\lambda}\right)\left((u_o-u_\lambda)\cosh\frac{1}{2}+\lambda(\theta_o+\theta_\lambda)\sinh\frac{1}{2}\right)}{\cosh\frac{1}{2}\sin\frac{1}{2}-\cos\frac{1}{2}\sinh\frac{1}{2}} \end{array}\right] \tag{749}$$

Accordingly, we obtain:

$$\begin{aligned} u_B(0) &= u_o \\ \dot{u}_B(0) &= \theta_o \\ u_B(\lambda) &= u_\lambda \\ \dot{u}_B(\lambda) &= \theta_\lambda \end{aligned} \tag{750}$$

Therefore, the following homogeneous boundary conditions are imposed on $u_H$:

$$\begin{aligned} u_H(0) &= 0 \\ \dot{u}_H(0) &= 0 \\ u_H(\lambda) &= 0 \\ \dot{u}_H(\lambda) &= 0 \end{aligned} \tag{751}$$

This example becomes a self-adjoint problem.

It should be noted that the following is established, which is a useful property,:

[Formula 335]

$$Lu_B = \left(EI\frac{d^4}{dx^4}\right)u_B = \frac{EI}{\lambda^4}u_B \tag{752}$$

When eq. (742) is substituted into eq. (718), the differential equation (718) is transformed to:

$$Lu_H = f_H \tag{753}$$

where

$$f_H \equiv f - Lu_B \tag{754}$$

This is equivalent to eqs. (40) and (41), and the problem is changed to a problem of determining a solution function $u_H$ according to the boundary function $u_B$.

10. 4. 4 Eigenfunction sets

[Formula 336]

In the simultaneous eigenvalue problem of

$$\begin{cases} L\phi = \lambda w\phi^* \\ L^*\phi^* = \lambda w\phi \end{cases}, \tag{755}$$

the weight $w$ is given as:

$$w \equiv \frac{EI}{\lambda^4} \tag{756}$$

From the simultaneous eigenvalue problem, the following equations on each eigenfunction are obtained:

$$L^*L\phi = \lambda^2\left(\frac{EI}{\lambda^4}\right)^2\phi \tag{757}$$

$$LL^*\phi^* = \lambda^2\left(\frac{EI}{\lambda^4}\right)^2\phi^* \tag{758}$$

The operators satisfy:

$$L^*L = LL^* = (EI)^2\frac{d^8}{dx^8} \tag{759}$$

Since eqs. (757) and (758) take the same form, eq. (757) may be solved so that the formats of $\phi,\phi^*$ can be obtained. Eq. (757) is given as:

$$\left((EI)^2\frac{d^8}{dx^8}\right)\phi = \lambda^2\left(\frac{EI}{\lambda^4}\right)^2\phi \tag{760}$$

And it is transformed to:

$$\left(\frac{d^4}{dx^4} - \frac{1}{\lambda^4}\lambda\right)\left(\frac{d^4}{dx^4} + \frac{1}{\lambda^4}\lambda\right)\phi = 0 \tag{761}$$

[Formula 337]

This solution has $a_1,a_2,a_3,a_4,a_5,a_6,a_7,a_8$, $a_1^*,a_2^*,a_3^*,a_4^*,a_5^*,a_6^*,a_7^*,a_8^*$ as arbitrary coefficients. Given

$$\begin{aligned} \omega_1 &\equiv \frac{1}{\lambda}\sqrt[4]{\lambda} \\ \omega_2 &\equiv \frac{1}{\sqrt{2}}\omega_1 \end{aligned}, \tag{762}$$

we obtain:

$$\begin{cases} \phi = a_1 \sin \omega_1 x + a_2 \cos \omega_1 x + a_3 \sinh \omega_1 x + a_4 \cosh \omega_1 x \\ + a_5 \sin \omega_2 x \sinh \omega_2 x + a_6 \cos \omega_2 x \sinh \omega_2 x \\ + a_7 \sin \omega_2 x \cosh \omega_2 x + a_8 \cos \omega_2 x \cosh \omega_2 x \\ \phi^* = a_1^* \sin \omega_1 x + a_2^* \cos \omega_1 x + a_3^* \sinh \omega_1 x + a_4^* \cosh \omega_1 x \\ + a_5^* \sin \omega_2 x \sinh \omega_2 x + a_6^* \cos \omega_2 x \sinh \omega_2 x \\ + a_7^* \sin \omega_2 x \cosh \omega_2 x + a_8^* \cos \omega_2 x \cosh \omega_2 x \end{cases} \quad (763)$$

Transforming the simultaneous eigenvalue problem (755), we obtain:

$$\begin{cases} \left(\frac{d^4}{dx^4}\right)\phi = \lambda \frac{1}{\lambda^4}\phi^* \\ \left(\frac{d^4}{dx^4}\right)\phi^* = \lambda \frac{1}{\lambda^4}\phi \end{cases} \quad (764)$$

The coefficients $a_1,a_2,a_3,a_4,a_5,a_6,a_7,a_8$, $a_1^*,a_2^*,a_3^*,a_4^*,a_5^*,a_6^*,a_7^*,a_8^*$ can be decided so as to satisfy eq.(764).

As a result of decision of the coefficients, the combinations we obtain are the following eight combinations:

$$\begin{cases} \phi = \cos \omega_1 x \\ \phi^* = \cos \omega_1 x \end{cases} \quad (765)$$

[Formula 338]

$$\begin{cases} \phi = \sin \omega_1 x \\ \phi^* = \sin \omega_1 x \end{cases} \quad (766)$$

$$\begin{cases} \phi = \cosh \omega_1 x \\ \phi^* = \cosh \omega_1 x \end{cases} \quad (767)$$

$$\begin{cases} \phi = \sinh \omega_1 x \\ \phi^* = \sinh \omega_1 x \end{cases} \quad (768)$$

$$\begin{cases} \phi = \cos \omega_2 x \cosh \omega_2 x \\ \phi^* = -\cos \omega_2 x \cosh \omega_2 x \end{cases} \quad (769)$$

$$\begin{cases} \phi = \cos \omega_2 x \sinh \omega_2 x \\ \phi^* = -\cos \omega_2 x \sinh \omega_2 x \end{cases} \quad (770)$$

$$\begin{cases} \phi = \sin \omega_2 x \cosh \omega_2 x \\ \phi^* = -\sin \omega_2 x \cosh \omega_2 x \end{cases} \quad (771)$$

$$\begin{cases} \phi = \sin \omega_2 x \sinh \omega_2 x \\ \phi^* = -\sin \omega_2 x \sinh \omega_2 x \end{cases} \quad (772)$$

These combinations only satisfy the simultaneous differential equations (764), and such conditions that these combinations should satisfy the boundary condition have not been imposed.

10. 4. 5 Eigenfunction

[Formula 339]

[Exemplary non-self-adjoint boundary condition 1]

In the case where the homogeneous boundary condition is expressed by eq. (746), the following conditions are imposed:

$$\begin{cases} \phi(0) = 0 \\ \dot{\phi}(0) = 0 \\ \ddot{\phi}(0) = 0 \\ \dddot{\phi}(0) = 0 \\ \phi^*(\lambda) = 0 \\ \dot{\phi}^*(\lambda) = 0 \\ \ddot{\phi}^*(\lambda) = 0 \\ \dddot{\phi}^*(\lambda) = 0 \end{cases} \quad (773)$$

The characteristic equation and the eigenfunctions obtained consequently are relatively long, and cannot be described herein. Studies are going on so as to simplify the same. Numerical values of the same can be obtained. The first four eigenvalues are:

$$\lambda = \begin{cases} 45.018 \\ 630.33 \\ 3889.2 \\ 14614. \end{cases} \quad (774)$$

Each eigenfunction is normalized so that the maximum value is 1, and is shown in FIG. 33.

[Exemplary self-adjoint boundary condition 1]

In the case where the homogeneous boundary condition is expressed by eq. (751), the following conditions are imposed:
[Formula 340]

$$\begin{cases} \phi(0) = 0 \\ \dot{\phi}(0) = 0 \\ \phi(\lambda) = 0 \\ \dot{\phi}(\lambda) = 0 \\ \phi^*(0) = 0 \\ \dot{\phi}^*(0) = 0 \\ \phi^*(\lambda) = 0 \\ \dot{\phi}^*(\lambda) = 0 \end{cases} \quad (775)$$

As a result, we obtain the following characteristic equation:

$$-1+\cos\omega_1\lambda\cosh\omega_1\lambda=0 \qquad (776)$$

With respect to $\lambda$ that satisfies this characteristic equation, the following function is an eigenfunction:

$$\left\{\begin{aligned}\phi=&\left(\sinh\omega_1\lambda-\sin\omega_1\lambda\right)\left(\cosh\omega_1 x-\cos\omega_1 x\right)\\&-\left(\cosh\omega_1\lambda-\cos\omega_1\lambda\right)\left(\sinh\omega_1 x-\sin\omega_1 x\right)\end{aligned}\right. \qquad (777)$$

When eqs. (725) and (762) are substituted into these, the characteristic equation is transformed to a function of $\lambda$, and the eigenfunction is transformed to a function of $\lambda,\xi$. Then, we obtain the first four eigenvalues as follows:

$$\lambda=\begin{cases}500.56\\3803.5\\14618.\\39944.\end{cases} \qquad (778)$$

Each eigenfunction is normalized so that the maximum value is 1, and is shown in FIG. 34.

10. 4. 6 Eigenfunction method

[Formula 341]

[Exemplary non-self-adjoint boundary condition 1]

The solution displacement $u(x)$ is given as:

$$\begin{aligned}
u(x)&\equiv u_B(x)+u_H(x)\\
u_B(x)&\equiv\frac{1}{2}\left[\begin{aligned}&\lambda\left(\theta_o+F_o\frac{\lambda^2}{EI}\right)\sin\frac{x}{\lambda}+\lambda\left(\theta_o-F_o\frac{\lambda^2}{EI}\right)\sinh\frac{x}{\lambda}\\&+\left(u_o+M_o\frac{\lambda^2}{EI}\right)\cos\frac{x}{\lambda}+\left(u_o-M_o\frac{\lambda^2}{EI}\right)\cosh\frac{x}{\lambda}\end{aligned}\right]\\
u_H(x)&\equiv\sum_i c_i\phi_i(x)\\
c_i&\equiv\frac{1}{\lambda_i}\left(\frac{Q\lambda^4}{EI}\frac{\int_0^\lambda p\cdot\phi_i^* dx}{\int_0^\lambda \phi_i^*\cdot\phi_i^* dx}-\frac{\int_0^\lambda u_B\cdot\phi_i^* dx}{\int_0^\lambda \phi_i^*\cdot\phi_i^* dx}\right)
\end{aligned} \qquad (779)$$

Making this dimensionless gives:

$$\begin{aligned}
\hat{u}(x)&\equiv\hat{u}_B(x)+\hat{u}_H(x)\\
\hat{u}_B(x)&\equiv\frac{1}{2}\left[\begin{aligned}&\left(\hat{\theta}_o+\hat{F}_o\right)\sin\frac{x}{\lambda}+\left(\hat{\theta}_o-\hat{F}_o\right)\sinh\frac{x}{\lambda}\\&+\left(\hat{u}_o+\hat{M}_o\right)\cos\frac{x}{\lambda}+\left(\hat{u}_o-\hat{M}_o\right)\cosh\frac{x}{\lambda}\end{aligned}\right]\\
\hat{u}_H(x)&\equiv\sum_i \hat{c}_i\phi_i(x)\\
\hat{c}_i&\equiv\frac{1}{\lambda_i}\left(\frac{\int_0^\lambda p\cdot\phi_i^* dx}{\int_0^\lambda \phi_i^*\cdot\phi_i^* dx}-\frac{\int_0^\lambda \hat{u}_B\cdot\phi_i^* dx}{\int_0^\lambda \phi_i^*\cdot\phi_i^* dx}\right)
\end{aligned} \qquad (780)$$

[Formula 342]

[Exemplary self-adjoint boundary condition 1]

A solution displacement $u(x)$ is given as:

$$u(x) \equiv u_B(x) + u_H(x)$$

$$u_B(x) \equiv \frac{1}{2}\left[\begin{array}{l} \dfrac{\cos\left(\frac{1}{2}-\frac{x}{\lambda}\right)\left((u_o+u_\lambda)\sinh\frac{1}{2}+\lambda(\theta_o-\theta_\lambda)\cosh\frac{1}{2}\right)}{\cosh\frac{1}{2}\sin\frac{1}{2}+\cos\frac{1}{2}\sinh\frac{1}{2}} \\ +\dfrac{\cosh\left(\frac{1}{2}-\frac{x}{\lambda}\right)\left((u_o+u_\lambda)\sin\frac{1}{2}-\lambda(\theta_o-\theta_\lambda)\cos\frac{1}{2}\right)}{\cosh\frac{1}{2}\sin\frac{1}{2}+\cos\frac{1}{2}\sinh\frac{1}{2}} \\ -\dfrac{\sinh\left(\frac{1}{2}-\frac{x}{\lambda}\right)\left((u_o-u_\lambda)\cos\frac{1}{2}+\lambda(\theta_o+\theta_\lambda)\sin\frac{1}{2}\right)}{\cosh\frac{1}{2}\sin\frac{1}{2}-\cos\frac{1}{2}\sinh\frac{1}{2}} \\ +\dfrac{\sin\left(\frac{1}{2}-\frac{x}{\lambda}\right)\left((u_o-u_\lambda)\cosh\frac{1}{2}+\lambda(\theta_o+\theta_\lambda)\sinh\frac{1}{2}\right)}{\cosh\frac{1}{2}\sin\frac{1}{2}-\cos\frac{1}{2}\sinh\frac{1}{2}} \end{array}\right] \quad (781)$$

$$u_H(x) \equiv \sum_i c_i \phi_i(x)$$

$$c_i \equiv \frac{1}{\lambda_i}\left(\frac{Q\lambda^4}{EI}\frac{\int_0^\lambda p\cdot\phi_i dx}{\int_0^\lambda \phi_i\cdot\phi_i dx} - \frac{\int_0^\lambda u_B\cdot\phi_i dx}{\int_0^\lambda \phi_i\cdot\phi_i dx}\right)$$

Making this dimensionless gives:

$$\hat{u}(x) \equiv \hat{u}_B(x) + \hat{u}_H(x)$$

$$\hat{u}_B(x) \equiv \frac{1}{2}\left[\begin{array}{l} \dfrac{\cos\left(\frac{1}{2}-\frac{x}{\lambda}\right)\left((\hat{u}_o+\hat{u}_\lambda)\sinh\frac{1}{2}+(\hat{\theta}_o-\hat{\theta}_\lambda)\cosh\frac{1}{2}\right)}{\cosh\frac{1}{2}\sin\frac{1}{2}+\cos\frac{1}{2}\sinh\frac{1}{2}} \\ +\dfrac{\cosh\left(\frac{1}{2}-\frac{x}{\lambda}\right)\left((\hat{u}_o+\hat{u}_\lambda)\sin\frac{1}{2}-(\hat{\theta}_o-\hat{\theta}_\lambda)\cos\frac{1}{2}\right)}{\cosh\frac{1}{2}\sin\frac{1}{2}+\cos\frac{1}{2}\sinh\frac{1}{2}} \\ -\dfrac{\sinh\left(\frac{1}{2}-\frac{x}{\lambda}\right)\left((\hat{u}_o-\hat{u}_\lambda)\cos\frac{1}{2}+(\hat{\theta}_o+\hat{\theta}_\lambda)\sin\frac{1}{2}\right)}{\cosh\frac{1}{2}\sin\frac{1}{2}-\cos\frac{1}{2}\sinh\frac{1}{2}} \\ +\dfrac{\sin\left(\frac{1}{2}-\frac{x}{\lambda}\right)\left((\hat{u}_o-\hat{u}_\lambda)\cosh\frac{1}{2}+(\hat{\theta}_o+\hat{\theta}_\lambda)\sinh\frac{1}{2}\right)}{\cosh\frac{1}{2}\sin\frac{1}{2}-\cos\frac{1}{2}\sinh\frac{1}{2}} \end{array}\right] \quad (782)$$

$$\hat{u}_H(x) \equiv \sum_i \hat{c}_i \phi_i(x)$$

$$\hat{c}_i \equiv \frac{1}{\lambda_i}\left(\frac{\int_0^\lambda p\cdot\phi_i dx}{\int_0^\lambda \phi_i\cdot\phi_i dx} - \frac{\int_0^\lambda \hat{u}_B\cdot\phi_i dx}{\int_0^\lambda \phi_i\cdot\phi_i dx}\right)$$

10. 4. 7 Exemplary non-self-adjoint analysis 1

[Formula 343]

The dimensionless function $p(x)$ of eq. (723) is given as:

$$p(x) \equiv \sin \frac{\pi}{\lambda} x \quad (783)$$

According to eq. (720), we obtain an analytical solution as follows:

$$\hat{u}(\xi) = \frac{-6\pi\xi + \pi^3\xi^3 + 6\sin(\pi\xi)}{6\pi^4} - \frac{\xi^3}{6}\hat{F}_o - \frac{\xi^2}{2}\hat{M}_o + \hat{u}_o + \hat{\theta}_o\xi \quad (784)$$

Let the boundary condition be:

$$\hat{u}_o = 0, \hat{\theta}_o = -0.01, \hat{M}_o = 0, \hat{F}_o = 0 \quad (785)$$

Comparison between the analytical solutions of eq. (784) and the results obtained by the eigenfunction method of eq. (780) is shown in FIG. 35. In order to direct the curves in the same direction as that in FIG. 32, the drawings are created by inverting the sign of each function value. In reading the drawing, signs of values of only the vertical axis coordinates should be inverted. In the drawing, the broken lines indicate the analytical solutions, and the black solid lines indicate the results obtained by the eigenfunction method. "32M" means that the calculation is performed by using up to 32 modes. We can see that as the number of modes is greater, the accuracy of the eigenfunction method is improved, and the displacement $\hat{u}$ obtained by the calculation using about 3 modes by the eigenfunction method coincides well with the analytical solution.

10. 4. 8 Exemplary non-self-adjoint analysis 2

[Formula 344]

The dimensionless function $p(x)$ of eq. (723) is given as:

$$p(x) \equiv \cos \frac{\pi}{\lambda} x \quad (786)$$

According to eq. (720), we obtain an analytical solution as follows:

$$\hat{u}(\xi) = \frac{-2 + \pi^2\xi^2 + 2\cos(\pi\xi)}{2\pi^4} - \frac{\xi^3}{6}\hat{F}_o - \frac{\xi^2}{2}\hat{M}_o + \hat{u}_o + \hat{\theta}_o\xi \quad (787)$$

Let the boundary condition be:

$$\hat{u}_o = 0, \hat{\theta}_o = -0.01, \hat{M}_o = 0, \hat{F}_o = 0 \quad (788)$$

Comparison between the analytical solutions of eq. (787) and the results obtained by the eigenfunction method of eq. (780) is shown in FIG. 36. In order to direct the curves in the same direction as that in FIG. 32, the drawings are created by inverting the sign of each function value. In reading the drawing, signs of values of only the vertical axis coordinates should be inverted. In the drawing, the broken lines indicate the analytical solutions, and the black solid lines indicate the results obtained by the eigenfunction method. "32M" means that the calculation is performed by using up to 32 modes. We can see that as the number of modes is greater, the accuracy of the eigenfunction method is improved, and the displacement $\hat{u}$ obtained by the calculation using about 3 modes by the eigenfunction method coincides well with the analytical solution.

10. 4. 9 Exemplary self-adjoint analysis 1

[Formula 345]
The dimensionless function *p*(*x*) of eq. (723) is given as:

$$p(x) \equiv \sin\frac{\pi}{\lambda}x \qquad (789)$$

According to eq. (722), we obtain an analytical solution as follows:

$$\hat{u}(\xi) = \frac{\pi(\xi-1)\xi + \sin(\pi\xi)}{\pi^4} + (\xi-1)^2(1+2\xi)\hat{u}_o - \xi^2(2\xi-3)\hat{u}_\lambda + \xi(\xi-1)^2\hat{\theta}_o + \xi^2(\xi-1)\hat{\theta}_\lambda \qquad (790)$$

Let the boundary condition be:

$$\hat{u}_o = 0, \hat{\theta}_o = -0.01, \hat{u}_\lambda = 0, \hat{\theta}_\lambda = 0 \qquad (791)$$

Comparison between the analytical solutions of eq. (790) and the results obtained by the eigenfunction method of eq. (782) is shown in FIG. 37. In order to direct the curves in the same direction as that in FIG. 32, the drawings are created by inverting the sign of each function value. In reading the red drawing, signs of values of only the vertical axis coordinates should be inverted. In the drawing, the broken lines indicate analytical solutions and the black solid lines indicate the results obtained by the eigenfunction method. "32M" means that the calculation is performed by using up to 32 modes. We can see that as the number of modes is greater, the accuracy of the eigenfunction method is improved, and the displacement $\hat{u}$ obtained by the calculation using about 3 modes by the eigenfunction method coincides well with the analytical solution.

10. 4. 10 Exemplary self-adjoint analysis 2

[Formula 346]
The dimensionless function *p*(*x*) of eq. (723) is given as:

$$p(x) \equiv \cos\frac{\pi}{\lambda}x \qquad (792)$$

According to eq. (722), we obtain:

$$\hat{u}(\xi) = \frac{-1 + 6\xi^2 - 4\xi^3 + \cos(\pi\xi)}{\pi^4} + (1 - 3\xi^2 + 2\xi^3)\hat{u}_o + \xi^2(3-2\xi)\hat{u}_\lambda + \xi(\xi-1)^2\hat{\theta}_o + \xi^2(\xi-1)\hat{\theta}_\lambda \qquad (793)$$

Let the boundary condition be:

$$\hat{u}_o = 0, \hat{\theta}_o = -0.01, \hat{u}_\lambda = 0, \hat{\theta}_\lambda = 0 \qquad (794)$$

Comparison between the analytical solutions of eq. (793) and the results obtained by the eigenfunction method of eq. (782) is shown in FIG. 38. In order to direct the curves in the same direction as that in FIG. 32, the drawings are created by inverting the sign of each function value. In reading the drawing, signs of values of only the vertical axis

coordinates should be inverted. In the drawing, the broken lines indicate the analytical solutions, and the black solid lines indicate the results obtained by the eigenfunction method. "32M" means that the calculation is performed by using up to 32 modes. We can see that as the number of modes is greater, the accuracy of the eigenfunction method is improved, and the displacement $\hat{u}$ obtained by the calculation using about 3 modes by the eigenfunction method coincides well with the analytical solution.

[Other exemplary analysis results]

FIG. 39 shows one solution other than the solution shown in FIG. 10 among a plurality of solutions obtained in the analysis shown in FIG. 10 in the case where such a plurality of solutions are generated when the eigenvalue is zero. With such a plurality of solutions presented to a designer, the designer can make studies about a method that is feasible in terms of design.

FIGS. 40A and 40B show a plurality of exemplary solutions of the displacement obtained by calculation for a finite element in the case where both of a displacement and a surface force of a top face of a square plate on which uniform gravity is acting, are zero. In examples shown in FIGS. 40A and 40B, 6x6 finite elements composes a square. Circles indicate nodes. 10 modes in total are shown. Arbitrary combinations of these become solutions. For example, by calculation shown in Section 9. 2, a plurality of solutions can be determined. Further, a configuration may be such that a mode coefficient is made in synchronization with a slider and a deformation diagram is displayed in response to adjustment of the mode coefficient made by a designer using the slider. This allows the designer to study what supporting method is available, and allows the designer to have more images. This makes it possible for the designer to narrow down the feasible supporting method, and thereafter perform calculation again.

[Others]

The calculation unit 1, the setting unit 11, the adjoint boundary condition calculation unit 12, the non-self-adjoint calculation unit 13, the self-adjoint determination unit 15, and the self-adjoint calculation unit 14 in Embodiments 1 to 6 described above are configured by a processor of a computer that reads a program and data from a memory and executes data processing according to the program. The calculation unit 1 may obtain design data, and boundary condition data by receiving input by a user via an input device and a user interface, or alternatively, may obtain the same by reading it from a memory. Differential equation data are preferably recorded preliminarily in a memory to which the calculation unit 1 can make access.

The function of the calculation unit 1 can be realized by a CPU of one computer, or can be realized by a plurality of computers that can perform data communication with one another. Further, a program that causes a computer to execute the processing of the calculation unit 1, and a non-transitory recording medium that stores the program are also included in embodiments of the present invention.

It should be noted that the present invention is not limited to Embodiments 1 to 6 described above. The present invention can be applied to any analysis using differential equations, for example, structure analysis , vibration analysis , electric field analysis , material analysis , fluid analysis , thermal analysis , acoustic field analysis , electromagnetic analysis , or circuit simulator.

11. Supplementary description

11. 1 Details of expression transformation in "direct variational method and least-squares method" in Section 5.2

11. 1. 1 Direct variational method of primal problem

[Formula 347]

To the differential equation with homogeneous boundary condition (40)

$$\sum_j L_{ij} u_{Hj} = f_{Hi} , \qquad (40) \text{ (Aforementioned)}$$

the solution function $u_{Hj}$ of eq. (69)

$$u_{Hj} \equiv \sum_k c_k \phi_{jk} \qquad (69) \text{ (Aforementioned)}$$

is substituted, and the primal simultaneous differential equation (105)

$$\sum_j L_{ij}\phi_j = \lambda w_i \phi_i^* \qquad (105)\ \text{(Aforementioned)}$$

is used. Then, we obtain:

$$\sum_k c_k \lambda_k w_i \phi_{ik}^* = f_{Hi} \qquad (109)\ \text{(Aforementioned)}$$

Here, $\lambda_k$ is a $k$-th eigenvalue. An inner product of both sides of this equation and the function $\phi_i^*$ is determined, and orthogonality among normal orthogonality of the following eq. (104) is used:
[Formula 348]

$$\sum_i \int_S w_i \phi_{im}^* \cdot \phi_{in}^* ds = \sum_i \int_S \phi_{im} \cdot w_i \phi_{in} ds = \delta_{mn} \qquad (104)\ \text{(Aforementioned)}$$

Then, we obtain:

$$c_k \lambda_k \sum_i \int_S w_i \phi_{ik}^* \cdot \phi_{ik}^* ds = \sum_i \int_S f_{Hi} \cdot \phi_{ik}^* ds \qquad (110)\ \text{(Aforementioned)}$$

This causes the coefficient $c_k$ to be settled. The normalization of eq. (104) gives:

$$c_k = \frac{1}{\lambda_k} \sum_i \int_S f_{Hi} \cdot \phi_{ik}^* ds \qquad (111)\ \text{(Aforementioned)}$$

We find that from an inner product of the external force term $f_{Hi}$ and the dual eigenfunction $\phi_i^*$, the coefficient $c_k$ is settled.
[Formula 349]
The combining of a plurality of the above-described procedures is equivalent to the determining of an inner product of the dual variation $\delta u_i^*$ of the following eq. (121) and eq. (40):

$$\delta u_i^* = \delta u_{Hi}^* \equiv \sum_k \delta c_k^* \phi_{ik}^* \qquad (121)\ \text{(Aforementioned)}$$

In specific calculation, the inner product of the dual variation $\delta u_i^*$ and eq. (40) is determined as follows:

$$\sum_i \int_S \sum_j L_{ij} u_{Hj} \cdot \delta u_i^* ds = \sum_i \int_S f_{Hi} \cdot \delta u_i^* ds \qquad (795)$$

This is equivalent to an inner product of the dual variation $\delta u_i^*$ and eq. (109), which is as follows:

$$\sum_k c_k \lambda_k \sum_i \int_S w_i \phi_{ik}^* \cdot \delta u_i^* ds = \sum_i \int_S f_{Hi} \cdot \delta u_i^* ds \qquad (796)$$

Substituting eq. (121) into this equation and utilizing the orthogonality of eq. (104) gives:

$$\sum_k c_k \lambda_k \delta c_k^* \sum_i \int_S w_i \phi_{ik}^* \cdot \phi_{ik}^* ds = \sum_k \delta c_k^* \sum_i \int_S f_{Hi} \cdot \phi_{ik}^* ds \quad (797)$$

By normalization of eq. (104), this equation is transformed to:

$$\sum_k c_k \lambda_k \delta c_k^* = \sum_k \delta c_k^* \sum_i \int_S f_{Hi} \cdot \phi_{ik}^* ds \quad (798)$$

This is nothing but a combination of a plurality of the equations (111). By creating eq.(796) with respect to various $\delta u_i^*$, that is, various $\delta c_k^*$, and solving the simultaneous equations algebraically, the coefficients $c_k$ can be determined.

From these, we can find that an equation obtained by transforming eq. (795), which is
[Formula 350]

$$\sum_i \int_S \left( \sum_j L_{ij} u_{Hj} - f_{Hi} \right) \cdot \delta u_i^* ds = 0 \quad , \quad (799)$$

indicates the direct variational method, and is equivalent to the eigenfunction method of eq. (111). Substituting the external force term $f_{Hi}$ of eq. (41), which is

$$f_{Hi} \equiv f_i - \sum_j L_{ij} u_{Bj} \quad , \quad (41) \text{ (Aforementioned)}$$

into eq. (799) gives:

$$\sum_i \int_S \left\{ \sum_j L_{ij} \left( u_{Bj} + u_{Hj} \right) - f_i \right\} \cdot \delta u_i^* ds = 0 \quad . \quad (800)$$

The displacement of this equation is expressed with the primal displacement $u_j$ of the following eq. (24):
[Formula 351]

$$u_j \equiv u_{Bj} + u_{Hj} \quad (24) \text{ (Aforementioned)}$$

Then, we obtain:

$$\sum_i \int_S \left( \sum_j L_{ij} u_j - f_i \right) \cdot \delta u_i^* ds = 0 \quad (122) \text{ (Aforementioned)}$$

This is the direct variational method of the primal problem.

In the case of the self-adjoint problem, the primal and dual eigenfunctions $\varphi_i$ and $\varphi_i^*$ coincide via eq. (107). Therefore, eqs. (120) and (121) are equal to each other, and eq. (122) is transformed to:
[Formula 352]

$$\sum_i \int_S \left( \sum_j L_{ij} u_j - f_i \right) \cdot \delta u_i ds = 0 \quad (123) \text{ (Aforementioned)}$$

11. 1. 2 Least-squares method of primal problem

According to the primal simultaneous differential equation (105)
[Formula 353]

$$\sum_j L_{ij} \phi_j = \lambda w_i \phi_i^* \quad (105) \text{ (Aforementioned)}$$

and the primal variation $\delta u_i$ of eq. (120)

$$\delta u_i = \delta u_{Hi} \equiv \sum_k \delta c_k \phi_{ik} \quad , \quad (120) \text{ (Aforementioned)}$$

we obtain a sum of differential coefficients of the primal variation $\delta u_j$ as follows:

$$\sum_j L_{ij} \delta u_j = \sum_k \delta c_k \sum_j L_{ij} \phi_{jk} = \sum_k \delta c_k \lambda_k w_i \phi_{ik}^* \quad (124) \text{ (Aforementioned)}$$

In the primal and dual eigenfunctions using the same weight w with respect to the every component, we can define:
[Formula 354]

$$\delta c_k^* \equiv \delta c_k \lambda_k w_i, \quad w_i = w \quad (125) \text{ (Aforementioned)}$$

Therefore, according to this equation and eq. (121), we obtain the dual variation $\delta u_i^*$ as follows:

$$\delta u_i^* = \sum_k \delta c_k^* \phi_{ik}^* = \sum_k \delta c_k \lambda_k w_i \phi_{ik}^*, \quad w_i = w \quad (801)$$

As the right side of the equation coincides with that of eq. (124), we can recognize:

$$\delta u_i^* = \sum_j L_{ij} \delta u_j = \delta \sum_j L_{ij} u_j \quad (126) \text{ (Aforementioned)}$$

Substituting this equation into eq. (122) gives:

$$\sum_i \int_S \left( \sum_j L_{ij} u_j - f_i \right) \cdot \delta \sum_j L_{ij} u_j ds = 0 \quad (127) \text{ (Aforementioned)}$$

In the case where $f_i$ is dealt with as a known external force, eq.(127) is equivalent to a case where the functional $\pi$ is given as

$$\Pi \equiv \sum_i \int_S \left( \sum_j L_{ij} u_j - f_i \right)^2 ds \quad (128) \text{ (Aforementioned)}$$

and its variation is zero. In other words, the least-squares method is applied as the variational principle.

11. 1. 3 Direct variational method of dual problem

The solution function $u^*_{Hj}$ of the following eq. (70) is substituted to the following differential equation (66) with homogeneous boundary condition:
[Formula 355]

$$\sum_j L^*_{ji} u^*_{Hj} = f^*_{Hi} \quad (66) \text{ (Aforementioned)}$$

$$u^*_{Hj} \equiv \sum_k c^*_k \phi^*_{jk} \quad (70) \text{ (Aforementioned)}$$

And the following dual simultaneous differential equation (106) is used:

$$\sum_j L^*_{ji} \phi^*_j = \lambda w_i \phi_i \quad (106) \text{ (Aforementioned)}$$

Then, we obtain:

$$\sum_k c^*_k \lambda_k w_i \phi_{ik} = f^*_{Hi} \quad (113) \text{ (Aforementioned)}$$

Here, $\lambda_k$ is a $k$-th eigenvalue. An inner product of both sides of eq.(113) and the function $\phi_i$ is determined, and orthogonality among normal orthogonality of the following eq. (104) is used:

$$\sum_i \int_S w_i \phi^*_{im} \cdot \phi^*_{in} ds = \sum_i \int_S \phi_{im} \cdot w_i \phi_{in} ds = \delta_{mn} \quad (104) \text{ (Aforementioned)}$$

Then, we obtain:

$$c^*_k \lambda_k \sum_i \int_S w_i \phi_{ik} \cdot \phi_{ik} ds = \sum_i \int_S f^*_{Hi} \cdot \phi_{ik} ds \quad (114) \text{ (Aforementioned)}$$

This causes the coefficient $c_k^*$ to be settled. The normalization of eq. (104) gives:
[Formula 356]

$$c^*_k = \frac{1}{\lambda_k} \sum_i \int_S f^*_{Hi} \cdot \phi_{ik} ds \quad (115) \text{ (Aforementioned)}$$

We find that from an inner product of the external force term $f^*_{Hi}$ and the primal eigenfunction $\phi_i$, the coefficient $c^*_k$ is settled.

The combining of a plurality of the above-described procedures is equivalent to the determining of an inner

product of the primal variation $\delta u_i$ of the following eq. (120) and eq. (66):

$$\delta u_i = \delta u_{Hi} \equiv \sum_k \delta c_k \phi_{ik} \qquad (120)\ \text{(Aforementioned)}$$

In specific calculation, the inner product of the primal variation $\delta u_i$ and eq. (66) is determined as follows:

$$\sum_i \int_S \sum_j L_{ji}^* u_{Hj}^* \cdot \delta u_i ds = \sum_i \int_S f_{Hi}^* \cdot \delta u_i ds \qquad (802)$$

This is equivalent to an inner product of the primal variation $\delta u_i$ and eq. (113), which is as follows:

$$\sum_k c_k^* \lambda_k \sum_i \int_S w_i \phi_{ik} \cdot \delta u_i ds = \sum_i \int_S f_{Hi}^* \cdot \delta u_i ds \qquad (803)$$

Substituting eq. (120) into this equation and utilizing the orthogonality of eq. (104) gives:

$$\sum_k c_k^* \lambda_k \delta c_k \sum_i \int_S w_i \phi_{ik} \cdot \phi_{ik} ds = \sum_k \delta c_k \sum_i \int_S f_{Hi}^* \cdot \phi_{ik} ds \qquad (804)$$

By normalization of eq. (104), this equation is transformed to:

$$\sum_k c_k^* \lambda_k \delta c_k = \sum_k \delta c_k \sum_i \int_S f_{Hi}^* \cdot \phi_{ik} ds \qquad (805)$$

This is nothing but a combination of a plurality of the equations (115). By creating the foregoing equations with respect to various $\delta u_i$, that is, various $\delta c_k$, and solving the simultaneous equations algebraically, the coefficients $c_k^*$ can be determined.

From these, we can find that an equation obtained by transforming eq. (802), which is

[Formula 357]

$$\sum_i \int_S \left( \sum_j L_{ji}^* u_{Hj}^* - f_{Hi}^* \right) \cdot \delta u_i ds = 0 , \qquad (806)$$

indicates the direct variational method, and is equivalent to the eigenfunction method of eq. (115).

Substituting the external force term $f_{Hi}^*$ of eq. (67), which is

$$f_{Hi}^* \equiv f_i^* - \sum_j L_{ji}^* u_{Bj}^* \qquad (67)\ \text{(Aforementioned)}$$

into eq. (806) gives:

$$\sum_i \int_S \left\{ \sum_j L_{ji}^* \left( u_{Bj}^* + u_{Hj}^* \right) - f_i^* \right\} \cdot \delta u_i ds = 0 \qquad (807)$$

The displacement of this equation is expressed with the dual displacement $u_j^*$ of the following eq. (42):

$$u_j^* \equiv u_{Bj}^* + u_{Hj}^* \qquad (42) \text{ (Aforementioned)}$$

Then, we obtain:

$$\sum_i \int_S \left( \sum_j L_{ji}^* u_j^* - f_i^* \right) \cdot \delta u_i ds = 0 \qquad (808)$$

This is the direct variational method of the dual problem.

In the case of the self-adjoint problem, the primal and dual eigenfunctions $\varphi_i$ and $\varphi_i^*$ coincide via eq. (107). Therefore, eq. (120) and (121) are equal to each other, and eq. (808) is transformed to:
[Formula 358]

$$\sum_i \int_S \left( \sum_j L_{ji}^* u_j^* - f_i^* \right) \cdot \delta u_i^* ds = 0 \qquad (809)$$

11. 1. 4 Least-squares method of dual problem

According to the dual simultaneous differential equation (106)
[Formula 359]

$$\sum_j L_{ji}^* \phi_j^* = \lambda w_i \phi_i \qquad (106) \text{ (Aforementioned)}$$

and the dual variation $\delta u_i^*$ of eq.(121)

$$\delta u_i^* = \delta u_{Hi}^* \equiv \sum_k \delta c_k^* \phi_{ik}^* , \qquad (121) \text{ (Aforementioned)}$$

we obtain a sum of differential coefficients of dual variation $\delta u_j^*$ as follows:

$$\sum_j L_{ji}^* \delta u_j^* = \sum_k \delta c_k^* \sum_j L_{ji}^* \phi_{jk}^* = \sum_k \delta c_k^* \lambda_k w_i \phi_{ik} \quad (810)$$

In the primal and dual eigenfunctions using the same weight w with respect to the every component, we can define:

$$\delta c_k \equiv \delta c_k^* \lambda_k w_i, \quad w_i = w \qquad (811)$$

Therefore, according to this equation and eq. (120), we obtain the primal variation $\delta u_i$ as follows:
[Formula 360]

$$\delta u_i = \sum_k \delta c_k \phi_{ik} = \sum_k \delta c_k^* \lambda_k w_i \phi_{ik}, \quad w_i = w \qquad (812)$$

As the right side of the equation coincides with that of eq. (810), we can recognize:

$$\delta u_i = \sum_j L^*_{ji} \delta u^*_j = \delta \sum_j L^*_{ji} u^*_j \qquad (813)$$

Substituting this equation into eq. (808) gives:

$$\sum_i \int_S \left( \sum_j L^*_{ji} u^*_j - f^*_i \right) \cdot \delta \sum_j L^*_{ji} u^*_j ds = 0 \qquad (814)$$

In the case where $f^*_i$ is dealt with a known external force, this equation is equivalent to a case where the functional $\pi^*$ is given as

$$\Pi^* \equiv \sum_i \int_S \left( \sum_j L^*_{ji} u^*_j - f^*_i \right)^2 ds \qquad (815)$$

and its variation is zero. In other words, the least-squares method is applied as the variational principle.

11. 2 Details of equation transformation in "Energy principle in theory of elasticity" of Chapter 6

11. 2. 1 Formula of partial integration

Orthogonal coordinates x, y are taken in a two-dimensional region, and let a boundary surface of an object be C, and let an internal region of the body be S. Let components of an outward unit normal vector of a boundary surface be nx and $n_y$. Partial integration of arbitrary functions f, f* as functions of x, y gives:
[Formula 361]

$$\int_S \frac{\partial f}{\partial x} f^* ds = \int_C n_x f \cdot f^* dc - \int_S f \frac{\partial f^*}{\partial x} ds \qquad (816)$$

and

$$\int_S \frac{\partial f}{\partial y} f^* ds = \int_C n_y f \cdot f^* dc - \int_S f \frac{\partial f^*}{\partial y} ds. \qquad (817)$$

11. 2. 2 Direct variational method of self-adjoint problem

The direct variational method of the self-adjoint problem is expressed by the following eq. (123):
[Formula 362]

$$\sum_i \int_S \left( \sum_j L_{ij} u_j - f_i \right) \cdot \delta u_i ds = 0 \qquad (123) \text{ (Aforementioned)}$$

The following description is supplementary explanation about the procedure of transforming this to obtain the following eq. (132):

$$\delta U = \int_C \left( p_x \delta u_x + p_y \delta u_y \right) dc + \int_S \left( b_x \delta u_x + b_y \delta u_y \right) ds \qquad (132) \text{ (Aforementioned)}$$

The differential equations of the theory of elasticity are expressed by the following eqs. (1) and (2): [Formula 363]

$$\left\{(1+\mu)\frac{\partial^2}{\partial x^2}+\frac{\partial^2}{\partial y^2}\right\}u_x+\mu\frac{\partial^2}{\partial x\partial y}u_y=-\frac{1}{G}b_x \quad (1) \text{ (Aforementioned)}$$

$$\mu\frac{\partial^2}{\partial x\partial y}u_x+\left\{\frac{\partial^2}{\partial x^2}+(1+\mu)\frac{\partial^2}{\partial y^2}\right\}u_y=-\frac{1}{G}b_y \quad (2) \text{ (Aforementioned)}$$

The original differential operator $L_{ij}$ is expressed by the following eq. (15):

$$\begin{bmatrix} L_{11} & L_{12} \\ L_{21} & L_{22} \end{bmatrix} \equiv \begin{bmatrix} (1+\mu)\frac{\partial^2}{\partial x^2}+\frac{\partial^2}{\partial y^2} & \mu\frac{\partial^2}{\partial x\partial y} \\ \mu\frac{\partial^2}{\partial x\partial y} & \frac{\partial^2}{\partial x^2}+(1+\mu)\frac{\partial^2}{\partial y^2} \end{bmatrix} \quad (15) \text{ (Aforementioned)}$$

Defining the right sides of the differential equations (1) and (2) as follows

$$\begin{Bmatrix} f_1 \\ f_2 \end{Bmatrix} \equiv -\frac{1}{G}\begin{Bmatrix} b_x \\ b_y \end{Bmatrix} \quad (818)$$

and describing eqs. (1) and (2) generally gives the following eq. (23):

$$\sum_j L_{ij}u_j=f_i \quad (23) \text{ (Aforementioned)}$$

With use of these equations, the left side of eq. (123) is transformed to: [Formula 364]

$$\begin{aligned} &\sum_i \int_S \left(\sum_j L_{ij}u_j - f_i\right)\cdot\delta u_i ds \\ &\equiv \int_S \left[\left\{(1+\mu)\frac{\partial^2}{\partial x^2}+\frac{\partial^2}{\partial y^2}\right\}u_x+\mu\frac{\partial^2}{\partial x\partial y}u_y+\frac{1}{G}b_x\right]\delta u_x ds \\ &+\int_S \left[\mu\frac{\partial^2}{\partial x\partial y}u_x+\left\{\frac{\partial^2}{\partial x^2}+(1+\mu)\frac{\partial^2}{\partial y^2}\right\}u_y+\frac{1}{G}b_y\right]\delta u_y ds \end{aligned} \quad (819)$$

The stress components are expressed by the following eqs. (10), (11), and (12):

$$\sigma_x \equiv G\left\{(\mu+1)\frac{\partial u_x}{\partial x}+(\mu-1)\frac{\partial u_y}{\partial y}\right\} \quad (10) \text{ (Aforementioned)}$$

$$\sigma_y \equiv G\left\{(\mu-1)\frac{\partial u_x}{\partial x}+(\mu+1)\frac{\partial u_y}{\partial y}\right\} \quad (11) \text{ (Aforementioned)}$$

$$\tau_{xy} = \tau_{yx} \equiv G\left(\frac{\partial u_y}{\partial x}+\frac{\partial u_x}{\partial y}\right) \quad (12) \text{ (Aforementioned)}$$

Expressing eq. (819) by using these stress components gives:
[Formula 365]

$$\begin{aligned}&\sum_i \int_S \left(\sum_j L_{ij}u_j - f_i\right)\cdot \delta u_i ds \\ &\equiv \frac{1}{G}\int_S \left(\frac{\partial \sigma_x}{\partial x}+\frac{\partial \tau_{yx}}{\partial y}+b_x\right)\delta u_x ds \\ &+\frac{1}{G}\int_S \left(\frac{\partial \tau_{xy}}{\partial x}+\frac{\partial \sigma_y}{\partial y}+b_y\right)\delta u_y ds\end{aligned} \quad (820)$$

According to the formula of partial integration (816), we obtain:

$$\int_S \frac{\partial \sigma_x}{\partial x}\delta u_x ds = \int_C n_x\sigma_x\cdot\delta u_x dc - \int_S \sigma_x \frac{\partial \delta u_x}{\partial x} ds \quad (821)$$

and

$$\int_S \frac{\partial \tau_{xy}}{\partial x}\delta u_y ds = \int_C n_x\tau_{xy}\cdot\delta u_y dc - \int_S \tau_{xy} \frac{\partial \delta u_y}{\partial x} ds \quad (822)$$

According to the formula of partial integration (817), we obtain:
[Formula 366]

$$\int_S \frac{\partial \tau_{yx}}{\partial y}\delta u_x ds = \int_C n_y\tau_{yx}\cdot\delta u_x dc - \int_S \tau_{yx} \frac{\partial \delta u_x}{\partial y} ds \quad (823)$$

and

$$\int_S \frac{\partial \sigma_y}{\partial y}\delta u_y ds = \int_C n_y\sigma_y\cdot\delta u_y dc - \int_S \sigma_y \frac{\partial \delta u_y}{\partial y} ds \quad (824)$$

Substituting eqs. (821) to (824) into eq. (820) gives:

$$\begin{aligned}&\sum_i \int_S \left( \sum_j L_{ij} u_j - f_i \right) \cdot \delta u_i ds \\ &\equiv \frac{1}{G} \int_S \left( b_x \delta u_x + b_y \delta u_y \right) ds \\ &+ \frac{1}{G} \int_C \left( n_x \sigma_x + n_y \tau_{yx} \right) \delta u_x dc - \frac{1}{G} \int_S \left( \sigma_x \frac{\partial \delta u_x}{\partial x} + \tau_{yx} \frac{\partial \delta u_x}{\partial y} \right) ds \\ &+ \frac{1}{G} \int_C \left( n_x \tau_{xy} + n_y \sigma_y \right) \delta u_y dc - \frac{1}{G} \int_S \left( \tau_{xy} \frac{\partial \delta u_y}{\partial x} + \sigma_y \frac{\partial \delta u_y}{\partial y} \right) ds\end{aligned} \quad (825)$$

[Formula 367]

According to Cauchy's formula (13) and (14), the surface forces $p_x$,$p_y$ are given as:

$$p_x \equiv n_x \sigma_x + n_y \tau_{yx} \quad (13) \text{ (Aforementioned)}$$

$$p_y \equiv n_x \tau_{xy} + n_y \sigma_y \quad (14) \text{ (Aforementioned)}$$

Substituting these into (825) eq. and further utilizing the symmetricity $\tau_{xy} = \tau_{yx}$ of the shear stresses of eq. (12) gives:

$$\begin{aligned}&\sum_i \int_S \left( \sum_j L_{ij} u_j - f_i \right) \cdot \delta u_i ds \\ &\equiv \frac{1}{G} \int_S \left( b_x \delta u_x + b_y \delta u_y \right) ds + \frac{1}{G} \int_C \left( p_x \delta u_x + p_y \delta u_y \right) dc \\ &- \frac{1}{G} \int_S \left\{ \sigma_x \frac{\partial \delta u_x}{\partial x} + \tau_{xy} \left( \frac{\partial \delta u_x}{\partial y} + \frac{\partial \delta u_y}{\partial x} \right) + \sigma_y \frac{\partial \delta u_y}{\partial y} \right\} ds\end{aligned} \quad (826)$$

The displacement-strain relationship is expressed by the following eqs. (4), (5), and (6):

$$\varepsilon_x \equiv \frac{\partial}{\partial x} u_x \quad (4) \text{ (Aforementioned)}$$

[Formula 368]

$$\varepsilon_y \equiv \frac{\partial}{\partial y} u_y \quad (5) \text{ (Aforementioned)}$$

$$\gamma_{xy} \equiv \frac{\partial}{\partial y} u_x + \frac{\partial}{\partial x} u_y \quad (6) \text{ (Aforementioned)}$$

Inverting the order of variation and differentiation according to eq. (826), and further, substituting eqs.(4) to (6) gives:

$$\sum_i \int_S \left( \sum_j L_{ij} u_j - f_i \right) \cdot \delta u_i ds$$
$$\equiv \frac{1}{G} \int_C \left( p_x \delta u_x + p_y \delta u_y \right) dc + \frac{1}{G} \int_S \left( b_x \delta u_x + b_y \delta u_y \right) ds \qquad (827)$$
$$- \frac{1}{G} \int_S \left( \sigma_x \cdot \delta \varepsilon_x + \tau_{xy} \cdot \delta \gamma_{xy} + \sigma_y \cdot \delta \varepsilon_y \right) ds$$

Since the direct variational method of eq. (123) indicates that eq.(827) becomes zero, let eq.(827) be zero, and we obtain:
[Formula 369]

$$\frac{1}{G} \int_S \left( \sigma_x \delta \varepsilon_x + \sigma_y \delta \varepsilon_y + \tau_{xy} \delta \gamma_{xy} \right) ds$$
$$= \frac{1}{G} \left[ \int_C \left( p_x \delta u_x + p_y \delta u_y \right) dc + \int_S \left( b_x \delta u_x + b_y \delta u_y \right) ds \right] \qquad (828)$$

Eliminating the modulus of rigidity G gives:

$$\int_S \left( \sigma_x \delta \varepsilon_x + \sigma_y \delta \varepsilon_y + \tau_{xy} \delta \gamma_{xy} \right) ds$$
$$= \int_C \left( p_x \delta u_x + p_y \delta u_y \right) dc + \int_S \left( b_x \delta u_x + b_y \delta u_y \right) ds \qquad (829)$$

The variation $\delta U$ of the strain energy is expressed by the following eq. (131):

$$\delta U \equiv \int_S \left( \sigma_x \delta \varepsilon_x + \sigma_y \delta \varepsilon_y + \tau_{xy} \delta \gamma_{xy} \right) ds \quad (131) \text{ (Aforementioned)}$$

Applying eq. (131) to the left side of the equation of eq. (829) gives the following eq. (132):

$$\delta U = \int_C \left( p_x \delta u_x + p_y \delta u_y \right) dc + \int_S \left( b_x \delta u_x + b_y \delta u_y \right) ds \quad (132) \text{ (Aforementioned)}$$

Both of eqs. (132) and (829) express nothing but the direct variational method, though their format is conventionally referred to as the principle of virtual work.

11. 2. 3 Variation of strain energy

The strain energy U is expressed by the following eq. (130):
[Formula 370]

$$U \equiv \frac{1}{2} \int_S \left( \sigma_x \varepsilon_x + \sigma_y \varepsilon_y + \tau_{xy} \gamma_{xy} \right) ds \quad (130) \text{ (Aforementioned)}$$

The variation $\delta U$ thereof is expressed by the following eq. (131):

$$\delta U \equiv \int_S \left( \sigma_x \delta \varepsilon_x + \sigma_y \delta \varepsilon_y + \tau_{xy} \delta \gamma_{xy} \right) ds \quad (131) \text{ (Aforementioned)}$$

The following description is supplementary explanation about the procedure of obtaining these. Performing variation on the strain energy $U$ of eq. (130) gives:

$$\delta U \equiv \frac{1}{2}\int_S \left(\delta\sigma_x \varepsilon_x + \sigma_x \delta\varepsilon_x\right)ds + \frac{1}{2}\int_S \left(\delta\sigma_y \varepsilon_y + \sigma_y \delta\varepsilon_y\right)ds + \frac{1}{2}\int_S \left(\delta\tau_{xy} \gamma_{xy} + \tau_{xy} \delta\gamma_{xy}\right)ds \quad (830)$$

In order to calculate variations of stress included in this equation, the stress-strain relationship of eqs. (7), (8), and (9) is prepared as follows:
[Formula 371]

$$\sigma_x = G\left\{(\mu+1)\varepsilon_x + (\mu-1)\varepsilon_y\right\} \quad (7)\ \text{(Aforementioned)}$$

$$\sigma_y = G\left\{(\mu-1)\varepsilon_x + (\mu+1)\varepsilon_y\right\} \quad (8)\ \text{(Aforementioned)}$$

$$\tau_{xy} = G\,\gamma_{xy} \quad (9)\ \text{(Aforementioned)}$$

Performing variation on each gives:

$$\delta\sigma_x \equiv G\left\{(\mu+1)\delta\varepsilon_x + (\mu-1)\delta\varepsilon_y\right\} \quad (831)$$

$$\delta\sigma_y \equiv G\left\{(\mu-1)\delta\varepsilon_x + (\mu+1)\delta\varepsilon_y\right\} \quad (832)$$

$$\delta\tau_{xy} \equiv G\,\delta\gamma_{xy} \quad (833)$$

Substituting eqs. (831), (832), and (833) into eq. (830) gives:

$$\delta U \equiv \frac{1}{2}\int_S \left[G\left\{(\mu+1)\delta\varepsilon_x + (\mu-1)\delta\varepsilon_y\right\}\varepsilon_x + \sigma_x \delta\varepsilon_x\right]ds + \frac{1}{2}\int_S \left[G\left\{(\mu-1)\delta\varepsilon_x + (\mu+1)\delta\varepsilon_y\right\}\varepsilon_y + \sigma_y \delta\varepsilon_y\right]ds + \frac{1}{2}\int_S \left[G\,\delta\gamma_{xy}\,\gamma_{xy} + \tau_{xy}\delta\gamma_{xy}\right]ds \quad (834)$$

Rearranging eq.(834) gives:
[Formula 372]

$$\delta U \equiv \frac{1}{2}\int_S \left[G\left\{(\mu+1)\varepsilon_x + (\mu-1)\varepsilon_y\right\} + \sigma_x\right]\delta\varepsilon_x ds + \frac{1}{2}\int_S \left[G\left\{(\mu-1)\varepsilon_x + (\mu+1)\varepsilon_y\right\} + \sigma_y\right]\delta\varepsilon_y ds + \frac{1}{2}\int_S \left[G\,\gamma_{xy} + \tau_{xy}\right]\delta\gamma_{xy} ds \quad (835)$$

Applying eqs. (7), (8), and (9) to this equation gives:

$$\delta U \equiv \frac{1}{2}\int_S \left(\sigma_x + \sigma_x\right)\delta\varepsilon_x ds + \frac{1}{2}\int_S \left(\sigma_y + \sigma_y\right)\delta\varepsilon_y ds + \frac{1}{2}\int_S \left(\tau_{xy} + \tau_{xy}\right)\delta\gamma_{xy} ds \quad (836)$$

Rearranging this gives:

$$\delta U \equiv \int_S \left(\sigma_x \delta\varepsilon_x + \sigma_y \delta\varepsilon_y + \tau_{xy}\delta\gamma_{xy}\right) ds \quad (131) \text{ (Aforementioned)}$$

11. 2. 4 Energy conservation law

The Clapeyron's theorem, which expresses the energy conservation law, is expressed by the following eq. (134): [Formula 373]

$$U = \frac{1}{2}\int_C \left(p_x u_x + p_y u_y\right) dc + \frac{1}{2}\int_S \left(b_x u_x + b_y u_y\right) ds \quad (134) \text{ (Aforementioned)}$$

The left side of this equation represents strain energy *U* of the following eq. (130):

$$U \equiv \frac{1}{2}\int_S \left(\sigma_x \varepsilon_x + \sigma_y \varepsilon_y + \tau_{xy}\gamma_{xy}\right) ds \quad (130) \text{ (Aforementioned)}$$

According to eqs. (130) and (134), we obtain:

$$\frac{1}{2}\int_S \left(\sigma_x \varepsilon_x + \sigma_y \varepsilon_y + \tau_{xy}\gamma_{xy}\right) ds = \frac{1}{2}\int_C \left(p_x u_x + p_y u_y\right) dc + \frac{1}{2}\int_S \left(b_x u_x + b_y u_y\right) ds \quad (837)$$

Multiplying the both sides by 2 gives:

$$\int_S \left(\sigma_x \varepsilon_x + \sigma_y \varepsilon_y + \tau_{xy}\gamma_{xy}\right) ds = \int_C \left(p_x u_x + p_y u_y\right) dc + \int_S \left(b_x u_x + b_y u_y\right) ds \quad (838)$$

This coincides with the result of eliminating the symbol $\delta$ of variation from eq. (829), as described in Chapter 7, Section (4).

11. 2. 5 Summary of the h-method element

General textbooks of the finite element method describe that the stiffness matrix of an element is configured based on the recognition of eq. (829) as expression of the principle of virtual work, but as described in Chapter 7, Section (4), actually eq. (838) expressing the energy conservation law is used. The following section describes this in detail.

11. 3 Details of equation transformation in "Use of conventional finite element" in Chapter 9

11. 3. 1 Shape function

FIG. 8 referred to in Section 8.1 shows the node arrangement of a16-nodes quadrilateral element. Though this may be used in the h-method, a node arrangement in the case of a 4-nodes quadrilateral element, which is a more typical element, is shown in FIG. 41. Shape functions thereof, $N_i$ (i=1 to 4), are as follows:

[Formula 374]

$$N_1 \equiv +\frac{1}{4}(\xi-1)(\eta-1) \quad (839)$$

$$N_2 \equiv -\frac{1}{4}(\xi+1)(\eta-1) \quad (840)$$

$$N_3 \equiv +\frac{1}{4}(\xi+1)(\eta+1) \quad (841)$$

$$N_4 \equiv -\frac{1}{4}(\xi-1)(\eta+1) \quad (842)$$

These equations represent boundary internals when ξ and η are in the ranges indicated by the signs of inequality of the following expressions, and represent boundaries when ξ and η are in the ranges indicated by the equal signs of the following expressions:

$$\begin{aligned} -1 \le \xi \le 1 \\ -1 \le \eta \le 1 \end{aligned} \quad (843)$$

11. 3. 2 Internal coordinates of the element

With use of the shape function Ni(i=1 to n~), an internal coordinate $x_j$ of the element is written as:
[Formula 375]

$$x_j \equiv \sum_{i=1}^{\tilde{n}} N_i X_{ij} \quad (156) \text{ (Aforementioned)}$$

where $X_{ij}$ represents a node coordinate, and $\tilde{n}$ represents the number of nodes of the element. Details of the *x*,*y* coordinates are as follows:

$$\begin{Bmatrix} x \\ y \end{Bmatrix} \equiv \begin{Bmatrix} x_1 \\ x_2 \end{Bmatrix} \equiv \begin{bmatrix} N_1 & 0 & \Lambda & N_{\tilde{n}} & 0 \\ 0 & N_1 & \Lambda & 0 & N_{\tilde{n}} \end{bmatrix} \begin{Bmatrix} X_{11} \\ X_{12} \\ \mathrm{M} \\ X_{\tilde{n}1} \\ X_{\tilde{n}2} \end{Bmatrix} \quad (157) \text{ (Aforementioned)}$$

Given

$$n \equiv 2\tilde{n}, \quad (158) \text{ (Aforementioned)}$$

eq.(157) is expressed with matrices as follows:

$$\underset{2\times 1}{\{x\}} \equiv \underset{2\times n}{[N]} \underset{n\times 1}{\{X\}} \quad (159) \text{ (Aforementioned)}$$

11. 3. 3 Internal displacement of the element

In eq. (163) of Section 8.3, a displacement $u_j$ is expressed with matrices as follows:
[Formula 376]

$$\underset{2\times 1}{\{u\}} \equiv \underset{2\times 1}{\{u_A\}} + \underset{2\times 1}{\{u_o\}} \qquad (163) \text{ (Aforementioned)}$$

Here, $u_{Aj}$ represents a boundary function, and $u_{Oj}$ represents a correction function. The boundary function $u_{Aj}$ represents not only a displacement on the element boundary but also an internal displacement of the element, but there is no guarantee that this satisfies the differential equation. Therefore, the correction function $u_{Oj}$ is added. However, a conventional element, that is, an element of the h-method, is characterized in that an internal displacement of the element is expressed by the boundary function $u_{Aj}$ alone. In other words, without addition of the correction function $u_{Oj}$, the displacement is expressed as follows assertively:
[Formula 378]

$$\underset{2\times 1}{\{u\}} \equiv \underset{2\times 1}{\{u_A\}} \qquad (844)$$

With use of an interpolation function $\chi_{Ai}$($i$=1~$\tilde{n}$), an internal displacement $u_{Aj}$ in the element is written as:

$$u_{Aj} \equiv \sum_{i=1}^{\tilde{n}} \chi_{Ai} U_{ij} \qquad (164) \text{ (Aforementioned)}$$

$U_{ij}$ represents a nodal displacement. Here, like the method currently used for isoparametric element, the shape function $N_i$ is adopted as the interpolation function $\chi_{Ai}$. The details of the displacement are as follows:
[Formula 379]

$$\begin{Bmatrix} u_{A1} \\ u_{A2} \end{Bmatrix} \equiv \begin{bmatrix} \chi_{A1} & 0 & \cdots & \chi_{A\tilde{n}} & 0 \\ 0 & \chi_{A1} & \cdots & 0 & \chi_{A\tilde{n}} \end{bmatrix} \begin{Bmatrix} U_{11} \\ U_{12} \\ \vdots \\ U_{\tilde{n}1} \\ U_{\tilde{n}2} \end{Bmatrix} \qquad (165) \text{ (Aforementioned)}$$

This is expressed with matrices as follows:

$$\underset{2\times 1}{\{u_A\}} \equiv \underset{2\times n}{\left[\chi_A\right]} \underset{n\times 1}{\{U\}} \qquad (166) \text{ (Aforementioned)}$$

According to eqs. (844) and (166), the internal displacement of the element $u_j$ of the h-method is given as:

$$\underset{2\times 1}{\{u\}} \equiv \underset{2\times 1}{\{u_A\}} \equiv \underset{2\times n}{\left[\chi_A\right]} \underset{n\times 1}{\{U\}} \qquad (845)$$

The difference is made clear when it is compared with the following eq. (173):

$$\underset{2\times 1}{\{u\}} \equiv \underset{2\times 1}{\{u_A\}} + \underset{2\times 1}{\{u_o\}} \equiv \underset{2\times n}{\left[\chi_A\right]} \underset{n\times 1}{\{U\}} + \underset{2\times \lambda}{\left[\psi_o\right]} \underset{\lambda\times 1}{\{c_o\}} \qquad (173) \text{ (Aforementioned)}$$

11. 3. 4 Strain and stress

According to eqs. (4) to (6), a strain component is expressed as:
[Formula 380]

$$\begin{Bmatrix} \varepsilon_x \\ \varepsilon_y \\ \gamma_{xy} \end{Bmatrix} \equiv \begin{bmatrix} 1 & 0 & 0 & 0 \\ 0 & 0 & 0 & 1 \\ 0 & 1 & 1 & 0 \end{bmatrix} \begin{Bmatrix} \frac{\partial}{\partial x} u_x \\ \frac{\partial}{\partial x} u_y \\ \frac{\partial}{\partial y} u_x \\ \frac{\partial}{\partial y} u_y \end{Bmatrix} \quad (192)\ \text{(Aforementioned)}$$

This is expressed with matrices as follows:

$$\underset{3\times 1}{\{\varepsilon\}} \equiv \underset{3\times 4}{[d]} \underset{4\times 1}{\{Du\}} \quad (193)\ \text{(Aforementioned)}$$

According to eqs. (7) to (9), the stress component is given as:

$$\begin{Bmatrix} \sigma_x \\ \sigma_y \\ \tau_{xy} \end{Bmatrix} = G \begin{bmatrix} \mu+1 & \mu-1 & 0 \\ \mu-1 & \mu+1 & 0 \\ 0 & 0 & 1 \end{bmatrix} \begin{Bmatrix} \varepsilon_x \\ \varepsilon_y \\ \gamma_{xy} \end{Bmatrix} \quad (194)\ \text{(Aforementioned)}$$

This is expressed with matrices as follows:

$$\underset{3\times 1}{\{\sigma\}} = G \underset{3\times 3}{[\mu]} \underset{3\times 1}{\{\varepsilon\}} \quad (195)\ \text{(Aforementioned)}$$

Consequently, we obtain:

$$\underset{3\times 1}{\{\sigma\}} = G \underset{3\times 3}{[\mu]} \underset{3\times 1}{\{\varepsilon\}} \equiv G \underset{3\times 3}{[\mu]} \underset{3\times 4}{[d]} \underset{4\times 1}{\{Du\}} \quad (196)\ \text{(Aforementioned)}$$

This expresses a stress component according to eqs. (10) to (12). Calculation of the coefficient matrix gives:

$$\underset{3\times 3}{[\mu]} \underset{3\times 4}{[d]} = \begin{bmatrix} \mu+1 & \mu-1 & 0 \\ \mu-1 & \mu+1 & 0 \\ 0 & 0 & 1 \end{bmatrix} \begin{bmatrix} 1 & 0 & 0 & 0 \\ 0 & 0 & 0 & 1 \\ 0 & 1 & 1 & 0 \end{bmatrix} = \begin{bmatrix} \mu+1 & 0 & 0 & \mu-1 \\ \mu-1 & 0 & 0 & \mu+1 \\ 0 & 1 & 1 & 0 \end{bmatrix} \quad (197)\ \text{(Aforementioned)}$$

The differential coefficient of the displacement is given as:
[Formula 381]

$$\underset{4\times 1}{\{Du\}} \equiv \begin{Bmatrix} \frac{\partial}{\partial x}u_x \\ \frac{\partial}{\partial x}u_y \\ \frac{\partial}{\partial y}u_x \\ \frac{\partial}{\partial y}u_y \end{Bmatrix} \equiv \begin{Bmatrix} \frac{\partial}{\partial x}\underset{2\times 1}{\{u_A\}} \\ \frac{\partial}{\partial y}\underset{2\times 1}{\{u_A\}} \end{Bmatrix} \equiv \begin{bmatrix} \frac{\partial}{\partial x}\underset{2\times n}{[\chi_A]} \\ \frac{\partial}{\partial y}\underset{2\times n}{[\chi_A]} \end{bmatrix} \underset{n\times 1}{\{U\}} \quad (846)$$

The matrix on the right side of the equation is expressed as:

$$\underset{4\times n}{[D\chi_A]} \equiv \begin{bmatrix} \frac{\partial}{\partial x}\underset{2\times n}{[\chi_A]} \\ \frac{\partial}{\partial y}\underset{2\times n}{[\chi_A]} \end{bmatrix} \equiv \begin{bmatrix} \frac{\partial}{\partial x}\chi_{A1} & 0 & \Lambda & \frac{\partial}{\partial x}\chi_{A\tilde{n}} & 0 \\ 0 & \frac{\partial}{\partial x}\chi_{A1} & \Lambda & 0 & \frac{\partial}{\partial x}\chi_{A\tilde{n}} \\ \frac{\partial}{\partial y}\chi_{A1} & 0 & \Lambda & \frac{\partial}{\partial y}\chi_{A\tilde{n}} & 0 \\ 0 & \frac{\partial}{\partial y}\chi_{A1} & \Lambda & 0 & \frac{\partial}{\partial y}\chi_{A\tilde{n}} \end{bmatrix} \quad (199) \text{ (Aforementioned)}$$

[Formula 382]
Then, the differential coefficient of the displacement is transformed to:

$$\underset{4\times 1}{\{Du\}} \equiv \underset{4\times n}{[D\chi_A]} \underset{n\times 1}{\{U\}} \quad (847)$$

The stress is given as:

$$\underset{3\times 1}{\{\sigma\}} \equiv G \underset{3\times 3}{[\mu]} \underset{3\times 4}{[d]} \underset{4\times 1}{\{Du\}} \equiv G \underset{3\times 3}{[\mu]} \underset{3\times 4}{[d]} \underset{4\times n}{[D\chi_A]} \underset{n\times 1}{\{U\}} \quad (848)$$

The dimensionless stress is given as:

$$\underset{3\times 1}{\{\sigma/G\}} \equiv \underset{3\times 3}{[\mu]} \underset{3\times 4}{[d]} \underset{4\times 1}{\{Du\}} \equiv \underset{3\times 3}{[\mu]} \underset{3\times 4}{[d]} \underset{4\times n}{[D\chi_A]} \underset{n\times 1}{\{U\}} \quad (849)$$

11. 3. 5 Strain energy

A strain energy U is expressed by the following eq. (130):
[Formula 383]

$$U \equiv \frac{1}{2}\int_S \left(\sigma_x \varepsilon_x + \sigma_y \varepsilon_y + \tau_{xy}\gamma_{xy}\right) ds \quad (130) \text{ (Aforementioned)}$$

This is used in the left side of the equation (837) expressing the energy conservation law. Multiplying this by 2 gives the left side of eq. (838).
Internal strain energy *eng* of an element is given as:
[Formula 384]

$$eng \equiv \frac{1}{2} \underset{1\times 3}{\{\varepsilon\}^T} \underset{3\times 1}{\{\sigma\}}$$ (241) (Aforementioned)

According to eqs. (193) and (196), the foregoing equation is transformed to:

$$eng \equiv \frac{1}{2} G \underset{1\times 4}{\{Du\}^T} \underset{4\times 3}{[d]^T} \underset{3\times 3}{[\mu]} \underset{3\times 4}{[d]} \underset{4\times 1}{\{Du\}} \qquad (850)$$

Therefore, according to eq. (847), internal strain energy *eng* of an element of the h-method is given as:

$$eng \equiv \frac{1}{2} G \underset{1\times n}{\{U\}^T} \underset{n\times 4}{[D\chi_A]^T} \underset{4\times 3}{[d]^T} \underset{3\times 3}{[\mu]} \underset{3\times 4}{[d]} \underset{4\times n}{[D\chi_A]} \underset{n\times 1}{\{U\}} \qquad (851)$$

When this is integrated inside the element, the strain energy *U* of eq. (130) is obtained as:

$$\begin{aligned} U &\equiv \frac{1}{2} \int_S \left(\sigma_x \varepsilon_x + \sigma_y \varepsilon_y + \tau_{xy} \gamma_{xy}\right) ds = \int_S eng\, ds \\ &= \frac{1}{2} G \underset{1\times n}{\{U\}^T} \int_S \underset{n\times 4}{[D\chi_A]^T} \underset{4\times 3}{[d]^T} \underset{3\times 3}{[\mu]} \underset{3\times 4}{[d]} \underset{4\times n}{[D\chi_A]} ds \underset{n\times 1}{\{U\}} \end{aligned} \qquad (852)$$

This equation is confusing since the energy and the nodal displacement are indicated by the same sign "U", but the "U" on the left side of the equation represents the strain energy, and two "{U}"s appearing on the right side of the equation represent the nodal displacement. The integration term of eq.(852) is defined as:
[Formula 385]

$$\underset{n\times n}{[K_{eng}]} \equiv \int_S \underset{n\times 4}{[D\chi_A]^T} \underset{4\times 3}{[d]^T} \underset{3\times 3}{[\mu]} \underset{3\times 4}{[d]} \underset{4\times n}{[D\chi_A]} ds \qquad (853)$$

[$K_{eng}$] multiplied by the modulus of rigidity G represents a stiffness matrix of the h-method element, and eq. (852) indicates that the strain energy *U* can be calculated by:

$$U \equiv \frac{1}{2} G \underset{1\times n}{\{U\}^T} \underset{n\times n}{[K_{eng}]} \underset{n\times 1}{\{U\}} \qquad (854)$$

11. 3. 6 Equivalent nodal force

Work *wrk* done by an external force is given as:
[Formula 386]

$$wrk \equiv \frac{1}{2} \int_C \left(p_x u_x + p_y u_y\right) dc + \frac{1}{2} \int_S \left(b_x u_x + b_y u_y\right) ds \qquad (855)$$

This is used in the right side of the equation (837) expressing the energy conservation law. Multiplying this by 2 gives the right side of eq. (838). Let terms $p_x$, $p_y$ of the surface force integrated on the boundary and divided to nodes be $F_p$, and let terms $b_x$, $b_y$ of the body force integrated inside the element and divided to nodes be $F_b$. Then, an equivalent nodal force per unit thickness is given as:
[Formula 387]

$$\underset{n\times 1}{\{F\}} \equiv \underset{n\times 1}{\{F_p\}} + \underset{n\times 1}{\{F_b\}} \quad (856)$$

Using equivalent nodal forces $F_p$,$F_b$, we define work done by surface force as:

$$\frac{1}{2}\int_C (p_x u_x + p_y u_y) dc \equiv \frac{1}{2} \underset{1\times n}{\{U\}^T} \underset{n\times 1}{\{F_p\}} \quad (857)$$

We define work done by body force as:

$$\frac{1}{2}\int_S (b_x u_x + b_y u_y) ds \equiv \frac{1}{2} \underset{1\times n}{\{U\}^T} \underset{n\times 1}{\{F_b\}} \quad (858)$$

These are combined and the work *wrk* done by external force expressed by eq. (855) is expressed as:

$$\begin{aligned} wrk &\equiv \frac{1}{2}\int_C (p_x u_x + p_y u_y) dc + \frac{1}{2}\int_S (b_x u_x + b_y u_y) ds \\ &\equiv \frac{1}{2} \underset{1\times n}{\{U\}^T} \underset{n\times 1}{\{F_p\}} + \frac{1}{2} \underset{1\times n}{\{U\}^T} \underset{n\times 1}{\{F_b\}} \\ &\equiv \frac{1}{2} \underset{1\times n}{\{U\}^T} \underset{n\times 1}{\{F\}} \end{aligned} \quad (859)$$

11. 3. 7 Element stiffness matrix of the h-method

According to the energy conservation law of eq. (837), eq. (854) and eq. (859) are equated, which is given as: [Formula 388]

$$\frac{1}{2}G \underset{1\times n}{\{U\}^T} \underset{n\times n}{\left[K_{eng}\right]} \underset{n\times 1}{\{U\}} = \frac{1}{2} \underset{1\times n}{\{U\}^T} \underset{n\times 1}{\{F\}} \quad (860)$$

In order that this equation should be established with respect to an arbitrary nodal displacement *U*, the following has to be given:

$$G \underset{n\times n}{\left[K_{eng}\right]} \underset{n\times 1}{\{U\}} = \underset{n\times 1}{\{F\}} \quad (861)$$

As this equation is an expression per unit thickness, this equation is multiplied by a plate thickness *h* in order to deal with a plane stress state, and is given as:

$$Gh \underset{n\times n}{\left[K_{eng}\right]} \underset{n\times 1}{\{U\}} = \underset{n\times 1}{\{Fh\}} \quad (862)$$

Dividing the both sides by a modulus of rigidity *G* gives:

$$\underset{n\times n}{\left[K_{eng}\right]} \underset{n\times 1}{\{U\}} = \underset{n\times 1}{\{F/G\}} \quad (863)$$

To recognize this is useful. We define an element stiffness matrix [$K_{elm}$] per unit thickness as: [Formula 389]

$$\underset{n\times n}{\left[K_{elm}\right]} \equiv G \underset{n\times n}{\left[K_{eng}\right]} \quad (864)$$

Then, eq. (861) is transformed to:

$$\underset{n\times n}{\left[K_{elm}\right]} \underset{n\times 1}{\left\{U\right\}} = \underset{n\times 1}{\left\{F\right\}} \quad (865)$$

This expresses equivalence between the nodal displacement U and the equivalent nodal force F in terms of energy.

We divide an object as an analysis object into an enormous number of elements, create the equations (865) with regard to the elements, respectively, and compose an equation of the whole system, while being careful about shared nodes. Then, we obtain:

[Formula 390]

$$\underset{N\times N}{\left[K\right]} \underset{N\times 1}{\left\{U\right\}} = \underset{N\times 1}{\left\{F\right\}} \quad (866)$$

where N represents the total number of degrees of freedom of the whole system. The total degrees of freedom N is represented by "n" in eq. (434). A method for solution by recognizing this as equilibrium of force is the linear elastic finite element method by the h-method, that is, the conventional method.

Closely studying the procedure for obtaining eq. (865), we can see that no variation operation is used anywhere, and no virtual displacement appears. In many textbooks, it is explained as if eq. (829) is calculated whereby eq. (865) is obtained, but actually this explanation is not correct. Actually the energy conservation law of eqs. (837), (838) is used. Therefore, it is rational to understand that eqs. (866), (434) express equivalence in terms of energy, rather than to understand that they express equilibrium of force.

Therefore, as shown in Section 9.2, it is not necessary to be bound by a self-adjoint boundary condition, but eqs. (866), (434) may be solved under a non-self-adjoint boundary condition.

11. 3. 8 Characteristics of finite element

Regarding a new finite element, the equivalent nodal force F per unit thickness is expressed by eq. (214), which is as follows:

[Formula 391]

$$\underset{n\times 1}{\left\{F\right\}} \equiv G\left(\underset{n\times n}{\left[K_U\right]} \underset{n\times 1}{\left\{U\right\}} + \underset{n\times \lambda}{\left[K_o\right]} \underset{\lambda\times 1}{\left\{\varepsilon_o\right\}}\right) \quad (214) \text{ (Aforementioned)}$$

The dual equivalent nodal force *F** per unit thickness is expressed by eq. (233), which is as follows:

$$\underset{n\times 1}{\left\{F^*\right\}} \equiv G\left(\underset{n\times n}{\left[K_U\right]} \underset{n\times 1}{\left\{U^*\right\}} + \underset{n\times \lambda}{\left[K_o\right]} \underset{\lambda\times 1}{\left\{\varepsilon_o^*\right\}}\right) \quad (233) \text{ (Aforementioned)}$$

Here, details the matrix part is expressed by eqs. (212), (213) as follows:

$$\underset{n\times n}{\left[K_U\right]} \equiv \int_C \underset{n\times 2}{\left[\chi_A\right]}^T \underset{2\times 3}{\left[T\right]} \underset{3\times 3}{\left[\mu\right]} \underset{3\times 4}{\left[d\right]} \underset{4\times n}{\left[D\chi_A\right]} dc \quad (212) \text{ (Aforementioned)}$$

$$\underset{n\times\lambda}{\left[K_o\right]} \equiv \int_C \underset{n\times 2}{\left[\chi_A\right]^T} \underset{2\times 3}{\left[T\right]^T} \underset{3\times 3}{\left[\mu\right]} \underset{3\times 4}{\left[d\right]} \underset{4\times\lambda}{\left[D\psi_o\right]} dc \quad (213) \text{ (Aforementioned)}$$

These are obtained by integration of a surface force on an element boundary.

In contrast, in the case of the conventional finite element method, that is, in the case of an element of the h-method, the equivalent nodal force F per unit thickness is defined by eq. (861) as follows:

[Formula 392]

$$\underset{n\times 1}{\left\{F\right\}} = G \underset{n\times n}{\left[K_{eng}\right]} \underset{n\times 1}{\left\{U\right\}} \quad (861) \text{ (Aforementioned)}$$

Here, details the matrix part is expressed by eq. (853) as follows:

$$\underset{n\times n}{\left[K_{eng}\right]} \equiv \int_S \underset{n\times 4}{\left[D\chi_A\right]^T} \underset{4\times 3}{\left[d\right]^T} \underset{3\times 3}{\left[\mu\right]} \underset{3\times 4}{\left[d\right]} \underset{4\times n}{\left[D\chi_A\right]} ds \quad (853) \text{ (Aforementioned)}$$

This is obtained by equating the internal strain energy of the element and work done by the equivalent nodal force.

While the stiffness matrix in the case of the new finite element is composed of two matrices of [Ku], [Ko], the stiffness matrix in the case of the h-method element is composed of one matrix of [$K_{eng}$]. The conventional and new stiffness matrices are completely different in their characteristics as seen in details thereof, that is, the calculation methods of eqs. (212), (213), and eq. (853), and we can see that this does not mean that the two coincide if effects by a correction function, that is, [Ko], are ignored.

11. 3. 9 Stiffness matrix of rectangular element

Regarding a rectangular element having node arrangement as shown in FIG. 41, let coordinates of nodes 1, 2, 3, and 4 be (-a,-b), (a,-b), (a,b), and (-a,b), respectively, and let an aspect ratio $\kappa$ thereof be:

[Formula 393]

$$\kappa \equiv \frac{b}{a} \quad (867)$$

With respect to this rectangular element, calculation of an integration term expressed by eq. (853),

$$\underset{n\times n}{\left[K_{eng}\right]} \equiv \int_S \underset{n\times 4}{\left[D\chi_A\right]^T} \underset{4\times 3}{\left[d\right]^T} \underset{3\times 3}{\left[\mu\right]} \underset{3\times 4}{\left[d\right]} \underset{4\times n}{\left[D\chi_A\right]} ds \quad (853) \text{ (Aforementioned)}$$

is performed.

The internal coordinates of the element are expressed by (159):

$$\underset{2\times 1}{\left\{x\right\}} \equiv \underset{2\times n}{\left[N\right]} \underset{n\times 1}{\left\{X\right\}} \quad (159) \text{ (Aforementioned)}$$

As a result, internal coordinates $x_j$ of the 4-nodes element shown in 41 are given as:

[Formula 394]

$$x_1 \equiv a\xi$$
$$x_2 \equiv b\eta \qquad (156) \text{ (Aforementioned)}$$

Therefore, a Jacobian $J$ is given as:

$$J \equiv ab \qquad (868)$$

And an area fragment $ds$ of the integration term of eq. (199) is given as:

$$ds \equiv J\, d\xi d\eta \qquad (869)$$

The integration variable can be converted, and we obtain:

$$\underset{n\times n}{\left[K_{eng}\right]} \equiv \int_{-1}^{1}\int_{-1}^{1} \underset{n\times 4}{\left[D\chi_A\right]^T} \underset{4\times 3}{\left[d\right]^T} \underset{3\times 3}{\left[\mu\right]} \underset{3\times 4}{\left[d\right]} \underset{4\times n}{\left[D\chi_A\right]} J\, d\xi d\eta \qquad (870)$$

The internal displacement $u_j$ of the element is expressed by eq. (845) as follows:
[Formula 395]

$$\underset{2\times 1}{\{u\}} \equiv \underset{2\times 1}{\{u_A\}} \equiv \underset{2\times n}{\left[\chi_A\right]} \underset{n\times 1}{\{U\}} \qquad (845) \text{ (Aforementioned)}$$

Details of the same are given as:

$$\begin{Bmatrix} u_1 \\ u_2 \end{Bmatrix} \equiv \begin{Bmatrix} u_{A1} \\ u_{A2} \end{Bmatrix} \equiv \begin{bmatrix} \chi_{A1} & 0 & \cdots & \chi_{A4} & 0 \\ 0 & \chi_{A1} & \cdots & 0 & \chi_{A4} \end{bmatrix} \begin{Bmatrix} U_{11} \\ U_{12} \\ \vdots \\ U_{41} \\ U_{42} \end{Bmatrix} \qquad (871)$$

Here, like the method currently used for isoparametric element, the shape function $N_i$ is adopted as the interpolation function $\chi_{Ai}$. $U_{ij}$ represents a nodal displacement, and depending on the arrangement thereof, the arrangement of matrices of various types is settled. According to eq. (192), (193), we obtain:
[Formula 396]

$$\underset{3\times 4}{\left[d\right]} \equiv \begin{bmatrix} 1 & 0 & 0 & 0 \\ 0 & 0 & 0 & 1 \\ 0 & 1 & 1 & 0 \end{bmatrix} \qquad (872)$$

According to eqs. (194), (195), we obtain:

$$\underset{3\times 3}{\left[\mu\right]} = \begin{bmatrix} \mu+1 & \mu-1 & 0 \\ \mu-1 & \mu+1 & 0 \\ 0 & 0 & 1 \end{bmatrix} \tag{873}$$

As a result, we obtain:
[Formula 397]

$$\underset{4\times 3}{\left[d\right]^T} \underset{3\times 3}{\left[\mu\right]} \underset{3\times 4}{\left[d\right]} \equiv \begin{bmatrix} \mu+1 & 0 & 0 & \mu-1 \\ 0 & 1 & 1 & 0 \\ 0 & 1 & 1 & 0 \\ \mu-1 & 0 & 0 & \mu+1 \end{bmatrix} \tag{874}$$

With regard to a differential coefficient of the displacement, we obtain, according to eq. (199), as follows:

$$\underset{4\times 8}{\left[D\chi_A\right]} \equiv \begin{bmatrix} \frac{\eta-1}{4a} & 0 & -\frac{\eta-1}{4a} & 0 & \frac{\eta+1}{4a} & 0 & -\frac{\eta+1}{4a} & 0 \\ 0 & \frac{\eta-1}{4a} & 0 & -\frac{\eta-1}{4a} & 0 & \frac{\eta+1}{4a} & 0 & -\frac{\eta+1}{4a} \\ \frac{\xi-1}{4b} & 0 & -\frac{\xi+1}{4b} & 0 & \frac{\xi+1}{4b} & 0 & -\frac{\xi-1}{4b} & 0 \\ 0 & \frac{\xi-1}{4b} & 0 & -\frac{\xi+1}{4b} & 0 & \frac{\xi+1}{4b} & 0 & -\frac{\xi-1}{4b} \end{bmatrix} \tag{875}$$

As a result of the foregoing operation, eq. (870) can be calculated, and we obtain:
[Formula 398]

$$\underset{8\times 8}{\left[K_{eng}\right]} \equiv \begin{bmatrix} A_1 & B_1 & A_3 & -B_2 & A_7 & -B_1 & A_5 & B_2 \\ B_1 & A_2 & B_2 & A_4 & -B_1 & A_8 & -B_2 & A_6 \\ A_3 & B_2 & A_1 & -B_1 & A_5 & -B_2 & A_7 & B_1 \\ -B_2 & A_4 & -B_1 & A_2 & B_2 & A_6 & B_1 & A_8 \\ A_7 & -B_1 & A_5 & B_2 & A_1 & B_1 & A_3 & -B_2 \\ -B_1 & A_8 & -B_2 & A_6 & B_1 & A_2 & B_2 & A_4 \\ A_5 & -B_2 & A_7 & B_1 & A_3 & B_2 & A_1 & -B_1 \\ B_2 & A_6 & B_1 & A_8 & -B_2 & A_4 & -B_1 & A_2 \end{bmatrix} \tag{876}$$

Here, the following are given:
[Formula 339]

$$C_1 \equiv (1+\mu)\kappa + \frac{1}{\kappa} \tag{877}$$

$$C_2 \equiv \kappa + (1+\mu)\frac{1}{\kappa} \tag{878}$$

$$C_3 \equiv -2(1+\mu)\kappa + \frac{1}{\kappa} \tag{879}$$

$$C_4 \equiv -2\kappa + (1+\mu)\frac{1}{\kappa} \quad (880)$$

$$C_5 \equiv (1+\mu)\kappa - \frac{2}{\kappa} \quad (881)$$

$$C_6 \equiv \kappa - (1+\mu)\frac{2}{\kappa} \quad (882)$$

Then, we obtain:
[Formula 400]

$$A_1 \equiv \frac{C_1}{3} \quad (883)$$

$$A_2 \equiv \frac{C_2}{3} \quad (884)$$

$$A_3 \equiv \frac{C_3}{6} \quad (885)$$

$$A_4 \equiv \frac{C_4}{6} \quad (886)$$

$$A_5 \equiv \frac{C_5}{6} \quad (887)$$

$$A_6 \equiv \frac{C_6}{6} \quad (888)$$

$$A_7 \equiv -\frac{C_1}{6} \quad (889)$$

$$A_8 \equiv -\frac{C_2}{6} \quad (890)$$

Further, we obtain:
[Formula 401]

$$B_1 \equiv \frac{\mu}{4} \quad (891)$$

$$B_2 \equiv \frac{1}{4}(2-\mu) \quad (892)$$

It should be noted that the constant $\mu$ is given by eq. (3) as follows, with the Poisson's ratio being given as *v*;

$$\mu \equiv \frac{1+v}{1-v}(Plane\ Stress), \quad \mu \equiv \frac{1}{1-2v}(Plane\ Strain) \qquad (3)\ \text{(Aforementioned)}$$

Regarding the element stiffness matrix [$K_{elm}$] per unit thickness, substituting eq. (876) into eq. (864) allows both of the plane stress state and the plane strain state to be given as:
[Formula 402]

$$\underset{8\times 8}{\left[K_{elm}\right]} \equiv G \underset{8\times 8}{\left[K_{eng}\right]} \qquad (893)$$

Incidentally, textbooks about the finite element method usually define the element stiffness matrix [$K_{elm}$] in a format of a matrix of eq. (876) multiplied by the coefficient *c**, as follows:

$$\underset{8\times 8}{\left[K_{elm}\right]} \equiv c^* \begin{bmatrix} A_1^* & B_1^* & A_3^* & -B_2^* & A_7^* & -B_1^* & A_5^* & B_2^* \\ B_1^* & A_2^* & B_2^* & A_4^* & -B_1^* & A_8^* & -B_2^* & A_6^* \\ A_3^* & B_2^* & A_1^* & -B_1^* & A_5^* & -B_2^* & A_7^* & B_1^* \\ -B_2^* & A_4^* & -B_1^* & A_2^* & B_2^* & A_6^* & B_1^* & A_8^* \\ A_7^* & -B_1^* & A_5^* & B_2^* & A_1^* & B_1^* & A_3^* & -B_2^* \\ -B_1^* & A_8^* & -B_2^* & A_6^* & B_1^* & A_2^* & B_2^* & A_4^* \\ A_5^* & -B_2^* & A_7^* & B_1^* & A_3^* & B_2^* & A_1^* & -B_1^* \\ B_2^* & A_6^* & B_1^* & A_8^* & -B_2^* & A_4^* & -B_1^* & A_2^* \end{bmatrix} \qquad (894)$$

In the case where this equation is used, it is necessary to rewrite the matrix element to make the matrix element different in the case of the plane stress state and in the case of the plane strain state, and this is slightly complicating. However, as it is also important to show the equation seen often in textbooks and know correspondence between the equation and eq. (893), the matrix elements of the both are shown below. We can see that eq. (893), which does not require distinguishing the two states, can be handled easily.

In the plane stress state, let a Young's modulus be E, and we obtain a coefficient c* of eq. (894) as follows:
[Formula 403]

$$c^* \equiv \frac{E}{12\left(1-v^2\right)} \qquad (895)$$

Given

$$C_1^* \equiv 2\kappa + \frac{1-v}{\kappa} \qquad (896)$$

$$C_2^* \equiv (1-v)\kappa + \frac{2}{\kappa} \qquad (897)$$

$$C_3^* \equiv -4\kappa + \frac{1-v}{\kappa} \qquad (898)$$

$$C_4^* \equiv -4\kappa\left(1-\nu\right)+\frac{2}{\kappa} \quad (899)$$

$$C_5^* \equiv 2\kappa-\frac{2\left(1-\nu\right)}{\kappa} \quad (900)$$

$$C_6^* \equiv \left(1-\nu\right)\kappa-\frac{4}{\kappa}, \quad (901)$$

we obtain:
[Formula 404]

$$A_1^* \equiv 2C_1^* \quad (902)$$

$$A_2^* \equiv 2C_2^* \quad (903)$$

$$A_3^* \equiv C_3^* \quad (904)$$

$$A_4^* \equiv C_4^* \quad (905)$$

$$A_5^* \equiv C_5^* \quad (906)$$

$$A_6^* \equiv C_6^* \quad (907)$$

$$A_7^* \equiv -C_1^* \quad (908)$$

$$A_8^* \equiv -C_2^* \quad (909)$$

Further, we obtain:
[Formula 405]

$$B_1^* \equiv \frac{3}{2}\left(1+\nu\right) \quad (910)$$

$$B_2^* \equiv \frac{3}{2}\left(1-3\nu\right) \quad (911)$$

It should be noted that an element stiffness matrix [$K_{elm}$] obtained by substituting the following equation (912) regarding a material constant and the following value (913) of eq. (3) in the plane stress state into eq. (893) coincides with eq. (894) in the plane stress state.

$$G=\frac{E}{2\left(1+\nu\right)} \quad (912)$$

$$\mu \equiv \frac{1+\nu}{1-\nu} \tag{913}$$

Similarly, in the plane strain state, let a Young's modulus be E, and we obtain a coefficient c* of eq. (894) as follows:
[Formula 406]

$$c^* \equiv \frac{E(1-\nu)}{12(1+\nu)(1-2\nu)} \tag{914}$$

Given

$$C_1^* \equiv \kappa + \frac{1-2\nu}{2(1-\nu)}\frac{1}{\kappa} \tag{915}$$

$$C_2^* \equiv \frac{1-2\nu}{2(1-\nu)}\kappa + \frac{1}{\kappa} \tag{916}$$

$$C_3^* \equiv -4\kappa + \frac{1-2\nu}{(1-\nu)}\frac{1}{\kappa} \tag{917}$$

$$C_4^* \equiv -\frac{2(1-2\nu)}{(1-\nu)}\kappa + \frac{2}{\kappa} \tag{918}$$

$$C_5^* \equiv 2\kappa - \frac{2(1-2\nu)}{(1-\nu)}\frac{1}{\kappa} \tag{919}$$

$$C_6^* \equiv \frac{1-2\nu}{(1-\nu)}\kappa - \frac{4}{\kappa}\ , \tag{920}$$

we obtain:
[Formula 407]

$$A_1^* \equiv 4C_1^* \tag{921}$$

$$A_2^* \equiv 4C_2^* \tag{922}$$

$$A_3^* \equiv C_3^* \tag{923}$$

$$A_4^* \equiv C_4^* \tag{924}$$

$$A_5^* \equiv C_5^* \quad (925)$$

$$A_6^* \equiv C_6^* \quad (926)$$

$$A_7^* \equiv -2C_1^* \quad (927)$$

$$A_8^* \equiv -2C_2^* \quad (928)$$

Further, we obtain:
[Formula 408]

$$B_1^* \equiv \frac{3}{2}\left(\frac{1}{1-\nu}\right) \quad (929)$$

$$B_2^* \equiv \frac{3}{2}\left(\frac{1-4\nu}{1-\nu}\right) \quad (930)$$

It should be noted that an element stiffness matrix [$K_{elm}$] obtained by substituting the following equation (912) regarding a material constant and the following value (931) of eq. (3) in the plane strain state into eq. (893) coincides with eq. (894) in the plane strain state.

$$G = \frac{E}{2(1+\nu)} \quad (912)\ \text{(Aforementioned)}$$

$$\mu \equiv \frac{1}{1-2\nu} \quad (931)$$

11. 3. 10 Supplementary description about underdetermined system in which a plurality of solutions exist

In Section 9.4, the number of homogeneous solutions $n_o$ is given as:
[Formula 409]

$$n_o \equiv n_v - n \quad (453)\ \text{(Aforementioned)}$$

where $n$ represents the number of degrees of freedom in the whole structure, and $n_v$ represents the number of unknown values. This assumes a case where either the rank of the matrix [$K_v$] in either the following equation (447) or the following equation (452) is equal to $n$, and the following equation (932) is satisfied:

$$\underset{n\times n_v}{\left[K_v\right]}\underset{n_v\times 1}{\left\{s_v\right\}} = -\underset{n\times n_b}{\left[K_b\right]}\underset{n_b\times 1}{\left\{s_b\right\}} \quad (447)\ \text{(Aforementioned)}$$

$$\underset{n\times n_v}{\left[K_v\right]}\underset{n_v\times 1}{\left\{s_v\right\}} = -\underset{n\times n_b}{\left[K_b\right]}\underset{n_b\times 1}{\left\{s_b\right\}} + \underset{n\times 1}{\left\{F_g\right\}} \quad (452)\ \text{(Aforementioned)}$$

$$rank\left[K_v\right] = n \quad (932)$$

In the case where the rank of the matrix $[K_v]$ is smaller than $n$, we obtain the following based on the linear algebra:

$$n_o \equiv n_v - rank\left[K_v\right] \quad (933)$$

In this case, eq. (933) may be adopted in place of eq. (453).

11. 3. 11 Supplementary description about the least-squares method

The following is supplementary explanation about the calculation method of the variational principle shown in Section 9.5. First of all, similarly to eq. (251), the nodal displacement U is divided in to a known part $U_b$ and an unknown part $U_v$, and is defined as:
[Formula 410]

$$\underset{n\times 1}{\{U\}} \equiv \begin{Bmatrix} \underset{n_{U_b}\times 1}{\{U_b\}} \\ \underset{n_{U_v}\times 1}{\{U_v\}} \end{Bmatrix} \quad (934)$$

where $n$ represents the total number of degrees of freedom in the whole structure. Similarly, the nodal external force F is divided in to a known part $F_b$ and an unknown part $F_v$, and is defined as:

$$\underset{n\times 1}{\{F\}} \equiv \begin{Bmatrix} \underset{n_{F_b}\times 1}{\{F_b\}} \\ \underset{n_{F_v}\times 1}{\{F_v\}} \end{Bmatrix} \quad (935)$$

This is identical to the contents described in section 8.11, except that n is regarded as the total number of degrees of freedom when the whole structure is divided into mesh and is expressed by the h-method element.
Let a mode coefficient with respect to a homogeneous solution be $\{a_O\}$, and we obtain a solution $\{s_v\}$ expressed by the following eq. (455):
[Formula 411]

$$\underset{n_v\times 1}{\{s_v\}} = \underset{n_v\times 1}{\{s_p\}} + \underset{n_v\times n_o}{\left[\psi_o\right]} \underset{n_o\times 1}{\{a_o\}} \quad (455) \text{ (Aforementioned)}$$

The node unknown part $s_v$ is expressed by eq. (444) as follows:

$$\underset{n_v \times 1}{\{s_v\}} \equiv \begin{Bmatrix} \underset{n_{U_v} \times 1}{\{U_v\}} \\ \underset{n_{F_v} \times 1}{\{F_v\}} \end{Bmatrix} \quad (444) \text{ (Aforementioned)}$$

The particular solution $\{s_p\}$ and the matrix $[\psi_o]$ of eq. (455) is divided into two, i.e., the upper part and the lower part, and are defined as follows:

$$\begin{Bmatrix} \underset{n_{U_v} \times 1}{\{s_{pU}\}} \\ \underset{n_{F_v} \times 1}{\{s_{pF}\}} \end{Bmatrix} \equiv \underset{n_v \times 1}{\{s_p\}} \quad (936)$$

and
[Formula 412]

$$\begin{bmatrix} \underset{n_{U_v} \times n_o}{[\psi_{oU}]} \\ \underset{n_{F_v} \times n_o}{[\psi_{oF}]} \end{bmatrix} \equiv \underset{n_v \times n_o}{[\psi_o]} \quad (937)$$

Then, we obtain the unknown part $U_v$ of the nodal displacement $U$ given as:

$$\underset{n_{U_v} \times 1}{\{U_v\}} = \underset{n_{U_v} \times 1}{\{s_{pU}\}} + \underset{n_{U_v} \times n_o}{[\psi_{oU}]} \underset{n_o \times 1}{\{a_o\}} \quad (938)$$

Also, we obtain the unknown part $F_v$ of the nodal external force $F$ given as:

$$\underset{n_{F_v} \times 1}{\{F_v\}} = \underset{n_{F_v} \times 1}{\{s_{pF}\}} + \underset{n_{F_v} \times n_o}{[\psi_{oF}]} \underset{n_o \times 1}{\{a_o\}} \quad (939)$$

Both of the unknown parts $U_v$ and $F_v$ are expressed with the mode coefficient $\{a_O\}$, which means that the problem is solved completely. In other words, the problem is solved with respect to an arbitrary $\{a_O\}$.

However, this solution merely represents the equivalence in terms of energy as described in Section 11. 3. 7, and there is no guarantee that the differential equations are satisfied inside the element and in the whole structure. Therefore, by using the variational principle of eq. (122) and the least squares method so as to obtain a solution that approximately satisfies the differential equations in the whole structure system, $\{a_O\}$ is determined by the variational principle, and thereafter, the unknown displacement is determined by eq. (938), and the unknown external force is determined by eq. (939). Since it can be considered that the solution satisfying the approximately differential equations can be expressed in the vicinities of $\{a_O\}$ determined by the variational principle , a designer is allowed to proceed designing work, while confirming the state of feasible deformation, stress distribution, error distribution, and the like by operating a slider.

According to eqs. (934), (938), the nodal displacement U is given as:
[Formula 413]

$$\underset{n\times 1}{\{U\}} \equiv \left\{\begin{matrix} \underset{n_{U_b}\times 1}{\{U_b\}} \\ \underset{n_{U_v}\times 1}{\{U_v\}} \end{matrix}\right\} = \left\{\begin{matrix} \underset{n_{U_b}\times 1}{\{U_b\}} \\ \underset{n_{U_v}\times 1}{\{s_{pU}\}} \end{matrix}\right\} + \left\{\begin{matrix} \underset{n_{U_b}\times 1}{\{0\}} \\ \underset{n_{U_v}\times n_o}{[\psi_{oU}]}\underset{n_o\times 1}{\{a_o\}} \end{matrix}\right\} \quad (940)$$

Here, by defining

$$\underset{n\times 1}{\{U_p\}} \equiv \left\{\begin{matrix} \underset{n_{U_b}\times 1}{\{U_b\}} \\ \underset{n_{U_v}\times 1}{\{s_{pU}\}} \end{matrix}\right\} \quad (941)$$

and

$$\underset{n\times n_o}{[\psi_U]} \equiv \begin{bmatrix} \underset{n_{U_b}\times n_o}{[0]} \\ \underset{n_{U_v}\times n_o}{[\psi_{oU}]} \end{bmatrix}, \quad (942)$$

we obtain:
[Formula 414]

$$\underset{n\times 1}{\{U\}} = \underset{n\times 1}{\{U_p\}} + \underset{n\times n_o}{[\psi_U]}\underset{n_o\times 1}{\{a_o\}} \quad (943)$$

Similarly, according to eqs. (935), (939), the nodal external force F is given as:

$$\underset{n\times 1}{\{F\}} \equiv \left\{\begin{matrix} \underset{n_{F_b}\times 1}{\{F_b\}} \\ \underset{n_{F_v}\times 1}{\{F_v\}} \end{matrix}\right\} = \left\{\begin{matrix} \underset{n_{F_b}\times 1}{\{F_b\}} \\ \underset{n_{F_v}\times 1}{\{s_{pF}\}} \end{matrix}\right\} + \left\{\begin{matrix} \underset{n_{F_b}\times 1}{\{0\}} \\ \underset{n_{F_v}\times n_o}{[\psi_{oF}]}\underset{n_o\times 1}{\{a_o\}} \end{matrix}\right\} \quad (944)$$

Here, defining

$$\underset{n\times 1}{\{F_p\}} \equiv \begin{Bmatrix} \underset{n_{F_b}\times 1}{\{F_b\}} \\ \underset{n_{F_v}\times 1}{\{s_{pF}\}} \end{Bmatrix} \qquad (945)$$

and
[Formula 415]

$$\underset{n\times n_o}{[\psi_F]} \equiv \begin{bmatrix} \underset{n_{F_b}\times n_o}{[0]} \\ \underset{n_{F_v}\times n_o}{[\psi_{oF}]} \end{bmatrix}, \qquad (946)$$

we obtain:

$$\underset{n\times 1}{\{F\}} = \underset{n\times 1}{\{F_p\}} + \underset{n\times n_o}{[\psi_F]}\underset{n_o\times 1}{\{a_o\}} \qquad (947)$$

On the other hand, in the h-method element, the internal displacement of the element is expressed by eq. (166) as follows:

$$\underset{2\times 1}{\{u_A\}} \equiv \underset{2\times n}{[\chi_A]}\underset{n\times 1}{\{U\}} \qquad (166)\ \text{(Aforementioned)}$$

where n represents the number of degrees of the element. Since the same sign "n" used for different items makes the equation complicating, the signs are replaced as follows. Let the total number of degrees of freedom when the whole structure is divided into mesh and is expressed by the h-method element be $n_T$, and eq. (943) is given as:
[Formula 416]

$$\underset{n_T\times 1}{\{U\}} = \underset{n_T\times 1}{\{U_p\}} + \underset{n_T\times n_o}{[\psi_U]}\underset{n_o\times 1}{\{a_o\}} \qquad (948)$$

Further, let the number of degrees of freedom of a certain element be $n_A$, and let a displacement be $U_A$, which is used exclusively regarding the element, and then, eq. (166) is given as:

$$\underset{2\times 1}{\{u_A\}} \equiv \underset{2\times n_A}{[\chi_A]}\underset{n_A\times 1}{\{U_A\}} \qquad (949)$$

The displacement used exclusively regarding the element is extracted from eq. (948), and is written as:

$$\underset{n_A\times 1}{\{U_A\}} = \underset{n_A\times 1}{\{U_{pA}\}} + \underset{n_A\times n_o}{[\psi_{UA}]}\underset{n_o\times 1}{\{a_o\}} \qquad (950)$$

Substituting this into $U_A$ of eq. (949) gives:

$$\underset{2\times 1}{\{u_A\}} \equiv \underset{2\times n_A}{[\chi_A]}\underset{n_A\times 1}{\{U_A\}} = \underset{2\times n_A}{[\chi_A]}\left(\underset{n_A\times 1}{\{U_{pA}\}} + \underset{n_A\times n_o}{[\psi_{UA}]}\underset{n_o\times 1}{\{a_o\}}\right) \qquad (951)$$

We can see that this equation expresses the internal displacement distribution in the element, and constitutes a function of the mode coefficient $\{a_O\}$.

The simultaneous partial differential equation (23) of a certain element is given as:

[Formula 417]

$$\sum_j L_{ij} u_j = f_i \qquad (23) \text{ (Aforementioned)}$$

This is expressed with matrices gives as the following eq. (421):

$$\underset{2\times 2}{[L]}\underset{2\times 1}{\{u\}} = \underset{2\times 1}{\{f\}} \qquad (421) \text{ (Aforementioned)}$$

Since the internal displacement of the element $\{u\}$ of the h-method element is expressed with $\{u_A\}$ of eq. (951), this equation is transformed to:

$$\underset{2\times 2}{[L]}\underset{2\times n_A}{[\chi_A]}\left(\underset{n_A\times 1}{\{U_{pA}\}} + \underset{n_A\times n_o}{[\psi_{UA}]}\underset{n_o\times 1}{\{a_o\}}\right) = \underset{2\times 1}{\{f\}} \qquad (952)$$

However there is no guarantee that the relationship indicated by the equal sign of this equation, and only what can be expected is that the relationship indicated by an approximately equal sign is established by giving an appropriate $\{a_O\}$. Therefore, the error function $E_k$ with respect to the k-th element is defined as:

[Formula 418]

$$\underset{2\times 1}{\{E_k\}} \equiv \underset{2\times 2}{[L]}\underset{2\times n_A}{[\chi_A]}\left(\underset{n_A\times 1}{\{U_{pA}\}} + \underset{n_A\times n_o}{[\psi_{UA}]}\underset{n_o\times 1}{\{a_o\}}\right) - \underset{2\times 1}{\{f\}} \qquad (953)$$

Then, the differential equation (952) is transformed to:

$$\underset{2\times 1}{\{E_k\}} = \underset{2\times 1}{\{0\}} \qquad (954)$$

According to eq. (953), we can find how an internal error $E_k$ in the element is distributed depending on the mode coefficient $\{a_o\}$

The functional $\Pi$ is given as the following eq. (128):

$$\Pi \equiv \sum_i \int_S \left( \sum_j L_{ij} u_j - f_i \right)^2 ds \quad (128) \text{ (Aforementioned)}$$

Therefore, given

$$\Pi_k \equiv \int_S \underset{1\times 2}{\{E_k\}^T} \underset{2\times 1}{\{E_k\}} ds \quad , \qquad (955)$$

the mode coefficient $\{a_O\}$ may be determined so that the variation thereof is zero, and this is equivalent to that the variational principle is applied. However, at this stage, the variation principle is applied to only one element. Let the total number of elements representing the whole structure be $n_E$, and let the functional in the whole structure be $\Pi_T$. Then, we obtain:
[Formula 419]

$$\Pi_T \equiv \sum_{k=1}^{n_E} \Pi_k = \sum_{k=1}^{n_E} \int_S \underset{1\times 2}{\{E_k\}^T} \underset{2\times 1}{\{E_k\}} ds \qquad (956)$$

Here, the mode coefficient $\{a_O\}$ is determined so that the variation of $\Pi_T$ is zero, and this is equivalent to that the variational principle is applied to the whole structure, and is equal to the equation (127) that expresses the direct variational method as follows:
[Formula 420]

$$\sum_i \int_S \left( \sum_j L_{ij} u_j - f_i \right) \cdot \delta \sum_j L_{ij} u_j ds = 0 \quad (127) \text{ (Aforementioned)}$$

In other words, the mode coefficient $\{a_o\}$ may be determined so that the following is established:

$$\frac{\delta \Pi_T}{2} \equiv \sum_{k=1}^{n_E} \int_S \underset{1\times 2}{\{\delta E_k\}^T} \underset{2\times 1}{\{E_k\}} ds = 0 \qquad (957)$$

Here, the following is established:

$$\underset{2\times 1}{\{\delta E_k\}} \equiv \underset{2\times 2}{[L]} \underset{2\times n_A}{[\chi_A]} \underset{n_A \times n_o}{[\psi_{UA}]} \underset{n_o \times 1}{\{\delta a_o\}} \qquad (958)$$

Therefore, the variation $\delta\Pi_T$ is given as:
[Formula 421]

$$\frac{\delta\Pi_T}{2} \equiv \underset{1\times n_o}{\{\delta a_o\}^T} \sum_{k=1}^{n_E} \underset{n_o\times n_A}{\left[\psi_{UA}\right]^T} \int_S \left(\underset{2\times 2}{\left[L\right]}\underset{2\times n_A}{\left[\chi_A\right]}\right)^T \underset{2\times 2}{\left[L\right]}\underset{2\times n_A}{\left[\chi_A\right]} ds \underset{n_A\times n_o}{\left[\psi_{UA}\right]} \underset{n_o\times 1}{\{a_o\}}$$
$$+ \underset{1\times n_o}{\{\delta a_o\}^T} \sum_{k=1}^{n_E} \underset{n_o\times n_A}{\left[\psi_{UA}\right]^T} \int_S \left(\underset{2\times 2}{\left[L\right]}\underset{2\times n_A}{\left[\chi_A\right]}\right)^T \underset{2\times 2}{\left[L\right]}\underset{2\times n_A}{\left[\chi_A\right]} ds \underset{n_A\times 1}{\{U_{pA}\}}$$
$$- \underset{1\times n_o}{\{\delta a_o\}^T} \sum_{k=1}^{n_E} \underset{n_o\times n_A}{\left[\psi_{UA}\right]^T} \int_S \left(\underset{2\times 2}{\left[L\right]}\underset{2\times n_A}{\left[\chi_A\right]}\right)^T ds \underset{2\times 1}{\{f\}} \quad (959)$$

In order that the equation (957) should be established with respect to an arbitrary variation $\{\delta a_O\}$, when the following is given
[Formula 422]

$$\underset{n_o\times n_o}{\left[A\right]} \equiv \sum_{k=1}^{n_E} \underset{n_o\times n_A}{\left[\psi_{UA}\right]^T} \int_S \left(\underset{2\times 2}{\left[L\right]}\underset{2\times n_A}{\left[\chi_A\right]}\right)^T \underset{2\times 2}{\left[L\right]}\underset{2\times n_A}{\left[\chi_A\right]} ds \underset{n_A\times n_o}{\left[\psi_{UA}\right]} \quad (960)$$

$$\underset{n_o\times 1}{\{B\}} \equiv \sum_{k=1}^{n_E} \underset{n_o\times n_A}{\left[\psi_{UA}\right]^T} \int_S \left(\underset{2\times 2}{\left[L\right]}\underset{2\times n_A}{\left[\chi_A\right]}\right)^T ds \underset{2\times 1}{\{f\}}$$
$$- \sum_{k=1}^{n_E} \underset{n_o\times n_A}{\left[\psi_{UA}\right]^T} \int_S \left(\underset{2\times 2}{\left[L\right]}\underset{2\times n_A}{\left[\chi_A\right]}\right)^T \underset{2\times 2}{\left[L\right]}\underset{2\times n_A}{\left[\chi_A\right]} ds \underset{n_A\times 1}{\{U_{pA}\}} \quad (961)$$

the following should be established.

$$\underset{n_o\times n_o}{\left[A\right]} \underset{n_o\times 1}{\{a_o\}} = \underset{n_o\times 1}{\{B\}} \quad (962)$$

This equation can be solved with respect to the mode coefficient $\{a_O\}$. We can consider that with this, a solution that satisfies the differential equations approximately as the whole structure system is obtained, and when the determined $\{a_O\}$ is returned to eq. (938), the unknown displacement is settled, and when the same is returned to eq. (939), the unknwon external force is settled. With this value taken as a starting point, a designer can proceed designing work, while confirming the state of feasible deformation, stress distribution, error distribution, and the like, by operating $\{a_O\}$ with a slider.

11. 3. 12 Supplementary description about common structural characteristics

The simultaneous partial differential equation (23) is given as:
[Formula 423]

$$\sum_j L_{ij} u_j = f_i \quad (23) \text{ (Aforementioned)}$$

In order to solve this, we use the primal simultaneous differential equation (105) and the dual simultaneous differential equation (106):

$$\sum_j L_{ij}\phi_j = \lambda w_i \phi_i^* \qquad (105) \text{ (Aforementioned)}$$

$$\sum_j L_{ji}^*\phi_j^* = \lambda w_i \phi_i \qquad (106) \text{ (Aforementioned)}$$

Equations (105), (106) can be united into the following, with respect to a more general two-dimensional problem, though this can be applied to the static equilibrium equation of a two-dimensional elastic body:
[Formula 424]

$$\begin{bmatrix} 0 & 0 & L_{11}^* & L_{21}^* \\ 0 & 0 & L_{12}^* & L_{22}^* \\ L_{11} & L_{12} & 0 & 0 \\ L_{21} & L_{22} & 0 & 0 \end{bmatrix} \begin{Bmatrix} \phi_1 \\ \phi_2 \\ \phi_1^* \\ \phi_2^* \end{Bmatrix} = \lambda \begin{bmatrix} w_1 & 0 & 0 & 0 \\ 0 & w_2 & 0 & 0 \\ 0 & 0 & w_1 & 0 \\ 0 & 0 & 0 & w_2 \end{bmatrix} \begin{Bmatrix} \phi_1 \\ \phi_2 \\ \phi_1^* \\ \phi_2^* \end{Bmatrix} \qquad (963)$$

In this equation, the matrix part of the left side of the equation is a self-adjoint operator. In other words, this equation is devised so that a non-self-adjoint problem is changed to a self-adjoint problem so that an eigenfunction of a complete system can be obtained. Since it is a two-dimensional problem, two equations exist in eq.(23), but unknown functions (also referred to as variables) are $\varphi_1$, $\varphi_2$, $\varphi_1$*, and $\varphi_2$*. Thus, four unknown functions, the number of which is twice the number of the equations, are defined. Further, as described in Section 8.18, analysis is performed using functions $\varphi_1$, $\varphi_2$, $\varphi_1$*, and $\varphi_2$* such that an eigenvalue is zero. Thus, this method can be used in the case of a unique solution and in the case of a plurality of solutions, and this is a structural characteristic.
On the other hand, in the formulation with respect to a conventional element, that is, the following eq. (442)
[Formula 425]

$$\begin{bmatrix} \underset{n\times n}{[K]} & \underset{n\times n}{[-I]} \end{bmatrix} \begin{Bmatrix} \underset{n\times 1}{\{U\}} \\ \underset{n\times 1}{\{F\}} \end{Bmatrix} = \underset{n\times 1}{\{0\}}, \qquad (442) \text{ (Aforementioned)}$$

the number of equations is the number of rows "*n*", and 2n variables *U*,*F*, the number of which is twice the number of the equations, are defined. Further, as described in Section 9.2, the underdetermined system is equivalent to a case where the eigenvalue $\lambda$ is zero, that is, a solution is determined as the following eq. (455)

$$\underset{n_v\times 1}{\{s_v\}} = \underset{n_v\times 1}{\{s_p\}} + \underset{n_v\times n_o}{[\psi_o]}\underset{n_o\times 1}{\{a_o\}} \qquad (455) \text{ (Aforementioned)}$$

Thus, this method can be used in the case of a unique solution and in the case of a plurality of solutions, and this is a structural characteristic.
These are characteristics shared by both of the solution methods.

11. 4 Static deflection of ring

This section should better be included in Chapter 10.

11. 4. 1 Differential equation

Static equilibrium equations of a two-dimensional elastic body are, in the orthogonal coordinate system, given as:
[Formula 426]

$$\left\{(1+\mu)\frac{\partial^2}{\partial x^2}+\frac{\partial^2}{\partial y^2}\right\}u_x+\mu\frac{\partial^2}{\partial x\partial y}u_y=-\frac{1}{G}b_x \quad (1) \text{ (Aforementioned)}$$

$$\mu\frac{\partial^2}{\partial x\partial y}u_x+\left\{\frac{\partial^2}{\partial x^2}+(1+\mu)\frac{\partial^2}{\partial y^2}\right\}u_y=-\frac{1}{G}b_y \quad (2) \text{ (Aforementioned)}$$

where $u_x$, $u_y$ represent displacements in the x, y directions, respectively, $b_x$, $b_y$ represent body forces in the x, y directions per unit volume, and G represents a modulus of rigidity. Let a Poisson's ratio be ν, and then, the constant μ is given as: [Formula 427]

$$\mu\equiv\frac{1+\nu}{1-\nu}(Plane\ Stress),\quad \mu\equiv\frac{1}{1-2\nu}(Plane\ Strain) \quad (3) \text{ (Aforementioned)}$$

Here, the right sides of differential equations (1), (2) are defined as:

$$\begin{Bmatrix} f_x \\ f_y \end{Bmatrix}\equiv-\frac{1}{G}\begin{Bmatrix} b_x \\ b_y \end{Bmatrix} \quad (964)$$

We recognize this as a constant.

11. 4. 2 Coordinate conversion

The relationship between the orthogonal coordinate system and the polar coordinate system is given as: [Formula 428]

$$x=r\cos\theta \quad (965)$$

$$y=r\sin\theta \quad (966)$$

The inverse relationship of the same is as follows:

$$r=\sqrt{x^2+y^2} \quad (967)$$

$$\theta=\arctan\frac{y}{x} \quad (968)$$

11. 4. 3 Displacement conversion

The relationship among orthogonal coordinate components $u_x$, $u_y$ and polar coordinate components $u_r$, $u_\theta$ of a displacement is given as: [Formula 429]

$$u_r=\cos\theta\cdot u_x+\sin\theta\cdot u_y \quad (969)$$

$$u_\theta = -\sin\theta \cdot u_x + \cos\theta \cdot u_y \quad (970)$$

The inverse relationship of the same is as follows:

$$u_x = \cos\theta \cdot u_r - \sin\theta \cdot u_\theta \quad (971)$$

$$u_y = \sin\theta \cdot u_r + \cos\theta \cdot u_\theta \quad (972)$$

11. 4. 4 Surface force conversion

Conversion of a surface force is similar to that of a displacement. The relationship among orthogonal coordinate components $p_x$, $p_y$ and polar coordinate components $p_r$, $p_\theta$ of a surface force is given as:
[Formula 430]

$$p_r = \cos\theta \cdot p_x + \sin\theta \cdot p_y \quad (973)$$

$$p_\theta = -\sin\theta \cdot p_x + \cos\theta \cdot p_y \quad (974)$$

The inverse relationship of the same is as follows:

$$p_x = \cos\theta \cdot p_r - \sin\theta \cdot p_\theta \quad (975)$$

$$p_y = \sin\theta \cdot p_r + \cos\theta \cdot p_\theta \quad (976)$$

11. 4. 5 Stress conversion

The relationship among orthogonal coordinate components $\sigma_x$, $\sigma_y$, $\tau_{xy}$ and polar coordinate components $\sigma_r$, $\sigma_\theta$, $\tau_{r\theta}$ of stress is given as:
[Formula 431]

$$\sigma_r = \cos^2\theta \cdot \sigma_x + \sin^2\theta \cdot \sigma_y + 2\sin\theta\cos\theta \cdot \tau_{xy} \quad (977)$$

$$\sigma_\theta = \sin^2\theta \cdot \sigma_x + \cos^2\theta \cdot \sigma_y - 2\sin\theta\cos\theta \cdot \tau_{xy} \quad (978)$$

$$\tau_{r\theta} = \sin\theta\cos\theta \cdot \left(\sigma_y - \sigma_x\right) + \left(\cos^2\theta - \sin^2\theta\right) \tau_{xy} \quad (979)$$

The inverse relationship of the same is as follows:

$$\sigma_x = \cos^2\theta \cdot \sigma_r + \sin^2\theta \cdot \sigma_\theta - 2\sin\theta\cos\theta \cdot \tau_{r\theta} \quad (980)$$

[Formula 432]

$$\sigma_y = \sin^2\theta\cdot\sigma_r + \cos^2\theta\cdot\sigma_\theta + 2\sin\theta\cos\theta\cdot\tau_{r\theta} \quad (981)$$

$$\tau_{xy} = \sin\theta\cos\theta\cdot(\sigma_r - \sigma_\theta) + (\cos^2\theta - \sin^2\theta)\,\tau_{r\theta} \quad (982)$$

11. 4. 6 Conversion of differential operator

Differentiating eq. (967) gives:
[Formula 433]

$$\frac{\partial r}{\partial x} \equiv \frac{x}{\sqrt{x^2+y^2}} = \frac{x}{r} = \cos\theta \quad (983)$$

$$\frac{\partial r}{\partial y} \equiv \frac{y}{\sqrt{x^2+y^2}} = \frac{y}{r} = \sin\theta \quad (984)$$

Differentiating eq. (968) gives:

$$\frac{\partial \theta}{\partial x} \equiv -\frac{y}{x^2+y^2} = -\frac{y}{r^2} = -\frac{1}{r}\sin\theta \quad (985)$$

$$\frac{\partial \theta}{\partial y} \equiv +\frac{x}{x^2+y^2} = +\frac{x}{r^2} = +\frac{1}{r}\cos\theta \quad (986)$$

According to the chain rule, the following is established with respect to an arbitrary function $\phi$:

$$\frac{\partial\phi}{\partial x} \equiv \frac{\partial r}{\partial x}\frac{\partial\phi}{\partial r} + \frac{\partial\theta}{\partial x}\frac{\partial\phi}{\partial\theta} \equiv \cos\theta\frac{\partial\phi}{\partial r} - \frac{1}{r}\sin\theta\frac{\partial\phi}{\partial\theta} \quad (987)$$

$$\frac{\partial\phi}{\partial y} \equiv \frac{\partial r}{\partial y}\frac{\partial\phi}{\partial r} + \frac{\partial\theta}{\partial y}\frac{\partial\phi}{\partial\theta} \equiv \sin\theta\frac{\partial\phi}{\partial r} + \frac{1}{r}\cos\theta\frac{\partial\phi}{\partial\theta} \quad (988)$$

Differentiating these again gives:
[Formula 434]

$$\frac{\partial^2\phi}{\partial x^2} \equiv \cos^2\theta\cdot\frac{\partial^2\phi}{\partial r^2} + \frac{1}{r}\sin^2\theta\cdot\frac{\partial\phi}{\partial r} + \frac{1}{r^2}\sin^2\theta\cdot\frac{\partial^2\phi}{\partial\theta^2} - \sin 2\theta\cdot\frac{\partial}{\partial r}\left[\frac{1}{r}\frac{\partial\phi}{\partial\theta}\right] \quad (989)$$

$$\frac{\partial^2\phi}{\partial y^2} \equiv \sin^2\theta\cdot\frac{\partial^2\phi}{\partial r^2} + \frac{1}{r}\cos^2\theta\cdot\frac{\partial\phi}{\partial r} + \frac{1}{r^2}\cos^2\theta\cdot\frac{\partial^2\phi}{\partial\theta^2} + \sin 2\theta\cdot\frac{\partial}{\partial r}\left[\frac{1}{r}\frac{\partial\phi}{\partial\theta}\right] \quad (990)$$

$$\frac{\partial^2\phi}{\partial x\partial y} \equiv \sin\theta\cos\theta\cdot\left(\frac{\partial^2\phi}{\partial r^2} - \frac{1}{r}\frac{\partial\phi}{\partial r} - \frac{1}{r^2}\frac{\partial^2\phi}{\partial\theta^2}\right) + \cos 2\theta\cdot\frac{\partial}{\partial r}\left[\frac{1}{r}\frac{\partial\phi}{\partial\theta}\right] \quad (991)$$

Adding eqs. (989) and (990) gives:
[Formula 435]

$$\nabla^2\phi \equiv \left(\frac{\partial^2}{\partial x^2} + \frac{\partial^2}{\partial y^2}\right)\phi = \left(\frac{\partial^2}{\partial r^2} + \frac{1}{r}\frac{\partial}{\partial r} + \frac{1}{r^2}\frac{\partial^2}{\partial\theta^2}\right)\phi \quad (992)$$

This represents a change of variables of the Laplace operator $\nabla^2$.

11. 4. 7 Biharmonic equation

The following biharmonic equations are obtained from the simultaneous differential equations (1) and (2):
[Formula 436]

$$\nabla^4 u_x \equiv \left(\frac{\partial^2}{\partial x^2} + \frac{\partial^2}{\partial y^2}\right)^2 u_x = 0 \quad (993)$$

$$\nabla^4 u_y \equiv \left(\frac{\partial^2}{\partial x^2} + \frac{\partial^2}{\partial y^2}\right)^2 u_y = 0 \quad (994)$$

Expanding operators gives:

$$\nabla^4 \equiv \left(\frac{\partial^2}{\partial x^2} + \frac{\partial^2}{\partial y^2}\right)^2 = \frac{\partial^4}{\partial x^4} + 2\frac{\partial^4}{\partial x^2\partial y^2} + \frac{\partial^4}{\partial y^4} \quad (995)$$

According to eq. (992), the differential equations (993) and (994) are converted to the following in the polar coordinate system:

$$\nabla^4 u_x \equiv \left(\frac{\partial^2}{\partial r^2} + \frac{1}{r}\frac{\partial}{\partial r} + \frac{1}{r^2}\frac{\partial^2}{\partial\theta^2}\right)^2 u_x = 0 \quad (996)$$

$$\nabla^4 u_y \equiv \left(\frac{\partial^2}{\partial r^2} + \frac{1}{r}\frac{\partial}{\partial r} + \frac{1}{r^2}\frac{\partial^2}{\partial\theta^2}\right)^2 u_y = 0 \quad (997)$$

Expanding operators gives:
[Formula 437]

$$\nabla^4 \equiv \left(\frac{\partial^2}{\partial r^2} + \frac{1}{r}\frac{\partial}{\partial r} + \frac{1}{r^2}\frac{\partial^2}{\partial\theta^2}\right)^2 = \left(\frac{1}{r^3}\frac{\partial}{\partial r} - \frac{1}{r^2}\frac{\partial^2}{\partial r^2} + \frac{2}{r}\frac{\partial^3}{\partial r^3} + \frac{\partial^4}{\partial r^4}\right) + \frac{2}{r^2}\left(-\frac{1}{r}\frac{\partial}{\partial r} + \frac{\partial^2}{\partial r^2}\right)\frac{\partial^2}{\partial\theta^2} + \frac{1}{r^4}\left(4\frac{\partial^2}{\partial\theta^2} + \frac{\partial^4}{\partial\theta^4}\right) \quad (998)$$

Let general solutions of differential equations (996) and (997) of the polar coordinate system be ψ(r, θ), a solution satisfying eq. (999) is given as eq. (1000) in the variable separation form:
[Formula 438]

$$\nabla^4 \psi = 0 \qquad (999)$$

$$\psi(r,\theta) \equiv A(r)\cdot B(\theta) \qquad (1000)$$

11. 4. 8 Solution by separation of variables

Substituting eq. (1000) into eq. (999) gives:
[Formula 439]

$$\nabla^4 \psi \equiv \frac{1}{r^4}\left[\begin{array}{l} 2r\left(-\dot{A} + r\ddot{A}\right)\ddot{B} + A\left(4\ddot{B} + \ddddot{B}\right) \\ + rB\left\{\dot{A} + r\left(-\ddot{A} + 2r\dddot{A} + r^2\ddddot{A}\right)\right\}\end{array}\right] = 0 \qquad (1001)$$

With periodicity of 2π being expected, $B(\theta)$ is given as:

$$B(\theta) \equiv \sin(m\,\theta), \cos(m\,\theta) \qquad (1002)$$

Here, $m$ represents an integer. Therefore, we obtain:

$$\begin{array}{l} \ddot{B} = -m^2 B \\ \ddddot{B} = -m^2\ddot{B} = m^4 B \end{array} \qquad (1003)$$

Substituting these into eq. (1001) and rearranging the same, we obtain:

$$\begin{array}{l} m^2\left(m^2 - 4\right)A \\ + r\left[\left(1 + 2m^2\right)\dot{A} + r\left\{-\left(1 + 2m^2\right)\ddot{A} + r\left(2\dddot{A} + r\ddddot{A}\right)\right\}\right] = 0 \end{array} \qquad (1004)$$

A general solution of this equation is given as:
[Formula 440]

$$A(r) = r^{2-m}, r^{-m}, r^{m}, r^{2+m} \qquad (1005)$$

As a result, a product of eq. (1002) and eq. (1005) as follows is a solution by separation of variables.

$$\psi(r,\theta) \equiv \begin{pmatrix} \sin(m\,\theta) \\ \cos(m\,\theta) \end{pmatrix} \times \begin{pmatrix} r^{2-m} \\ r^{-m} \\ r^{m} \\ r^{2+m} \end{pmatrix} \qquad (1006)$$

Incidentally, as inconveniences occur in the case where m=0 in the foregoing equation, the following is given:
[Formula 441]

$$B(\theta) \equiv 1, \theta \qquad (1007)$$

However, as $B(\theta) \equiv \theta$ is inconvenient from the viewpoint of periodicity, this is excluded, and with only $B(\theta) \equiv 1$ as an object of solution, we obtain:

$$\begin{aligned} \ddot{B} &= 0 \\ \ddddot{B} &= 0 \end{aligned} \qquad (1008)$$

Substituting these into eq. (1001) and rearranging the same, we obtain:

$$\dot{A} + r\left\{-\ddot{A} + r\left(2\dddot{A} + r\ddddot{A}\right)\right\} = 0 \qquad (1009)$$

The general solution of this equation is:

$$A(r) = 1, r^2, \ln r, r^2 \ln r \qquad (1010)$$

As a result, we obtain the following as a solution by separation of variables.

$$\psi(r,\theta) \equiv 1 \times \begin{pmatrix} 1 \\ r^2 \\ \ln r \\ r^2 \ln r \end{pmatrix} \qquad (1011)$$

Further, since inconveniences occur also in the case where m=1 in eq. (1006), the following is given:
[Formula 442]

$$B(\theta) \equiv \sin(\theta), \cos(\theta) \qquad (1012)$$

Then, we obtain:

$$\begin{aligned} \ddot{B} &= -B \\ \ddddot{B} &= -\ddot{B} = B \end{aligned} \qquad (1013)$$

Substituting these into (1001) and rearranging the same, we obtain:
[Formula 443]

$$-3A + r\left[3\dot{A} + r\left\{-3\ddot{A} + r\left(2\dddot{A} + r\ddddot{A}\right)\right\}\right] = 0 \qquad (1014)$$

The general solution of this equation is:

$$A(r) = \frac{1}{r}, r, r^3, r \ln r \qquad (1015)$$

As a result, a product of eq. (1012) and eq. (1015) as follows is a solution by separation of variables.

$$\psi(r,\theta) \equiv \begin{pmatrix} \sin(\theta) \\ \cos(\theta) \end{pmatrix} \times \begin{pmatrix} \frac{1}{r} \\ r \\ r^3 \\ r \ln r \end{pmatrix} \qquad (1016)$$

In view of the foregoing description, eqs. (1006), (1011), and (1016) may be used as the format of the solution of the differential equation (1001).

11. 4. 9 Boundary condition

Let an outer radius and an inner radius of a two-dimensional ring be R and γR, respectively. The range of an inner diameter ratio γ is as follows:
[Formula 444]

$$0 < \gamma < 1 \qquad (1017)$$

How to support an outer edge in a ring on which uniform gravity is acting, in order to provide a boundary condition of an inner edge such that the surface force is zero and the displacement is zero is determined.
This is a problem that has been considered insoluble conventionally.
A boundary condition such that a displacement of an inner edge is zero is given as:
[Formula 445]

$$\begin{aligned} u_r\Big|_{r=\gamma R} &= 0 \\ u_\theta\Big|_{r=\gamma R} &= 0 \end{aligned} \qquad (1018)$$

A boundary condition such that a surface force of an inner edge is zero is given as:

$$\begin{aligned} \sigma_r\Big|_{r=\gamma R} &= 0 \\ \tau_{r\theta}\Big|_{r=\gamma R} &= 0 \end{aligned} \qquad (1019)$$

11. 4. 10 Analytical solution

In the case of a solution that satisfies the differential equations (1), (2) and the boundary condition of eqs. (1018) and (1019), the format of eq. (1016) is unnecessary. Therefore, general solutions $u_x$ and $u_y$ of the differential equations (996) and (997) are expressed by eqs. (1006) and (1011), respectively.
As a result of calculation, the functions are given as:
[Formula 446]

$$\chi_1 \equiv \frac{2+\mu}{8(1+\mu)}\left\{\left(\frac{r}{R}-\gamma\right)\left(\frac{r}{R}+\gamma\right)-2\gamma^2\left(\ln\frac{r}{R}-\ln\gamma\right)\right\} \qquad (1020)$$

$$\chi_2 \equiv \frac{\mu}{16(1+\mu)}\left(\frac{r}{R}-\gamma^2\frac{R}{r}\right)^2\cos 2\theta \qquad (1021)$$

$$\chi_3 \equiv \frac{\mu}{16(1+\mu)}\left(\frac{r}{R} - \gamma^2 \frac{R}{r}\right)^2 \sin 2\theta \qquad (1022)$$

Then, we obtain:

$$u_x \equiv R^2 \left\{ f_x (\chi_1 - \chi_2) - f_y \chi_3 \right\} \qquad (1023)$$

$$u_y \equiv R^2 \left\{ -f_x \chi_3 + f_y (\chi_1 + \chi_2) \right\} \qquad (1024)$$

Here, $f_x$,$f_y$ are given as the following eq. (964):

$$\begin{Bmatrix} f_x \\ f_y \end{Bmatrix} \equiv -\frac{1}{G} \begin{Bmatrix} b_x \\ b_y \end{Bmatrix} \qquad (964) \text{ (Aforementioned)}$$

where $b_x$, $b_y$ represent body forces in the x, y directions per unit volume, and G represents a modulus of rigidity. As $f_x$, $f_y$ have a dimensionality of the reciprocal number of the length, the outer radius R is assumed to be the characteristic length, and dimensionless load coefficients $c_x$, $c_y$ are defined as:
[Formula 447]

$$\frac{1}{R}\begin{Bmatrix} c_x \\ c_y \end{Bmatrix} \equiv \begin{Bmatrix} f_x \\ f_y \end{Bmatrix} \equiv -\frac{1}{G}\begin{Bmatrix} b_x \\ b_y \end{Bmatrix} \quad \Rightarrow \quad \begin{Bmatrix} c_x \\ c_y \end{Bmatrix} \equiv -\frac{R}{G}\begin{Bmatrix} b_x \\ b_y \end{Bmatrix} \qquad (1025)$$

This facilitates the handling of the problem.
In a plane stress state, the material constant is given as:
[Formula 448]

$$\nu \equiv \frac{3}{10}, \qquad \mu \equiv \frac{1+\nu}{1-\nu} = \frac{13}{7} \qquad (1026)$$

The inner diameter ratio $\gamma$ is given as:

$$\gamma \equiv \frac{3}{10} \qquad (1027)$$

Deformation and stress distribution in the case where a uniform gravity load $f_y$ is caused to act thereon is shown in FIG. 42. Here, the load coefficients $c_x$, $c_y$ are given as:
[Formula 449]

$$\begin{Bmatrix} c_x \\ c_y \end{Bmatrix} \equiv \begin{Bmatrix} 0 \\ 1 \end{Bmatrix} \qquad (1028)$$

Thus, the displacement is made dimensionless as to the outer radius R.

11. 4. 11 Formula of partial integration

As described in Section 11. 2. 1, partial integration using arbitrary functions f, f* as functions of x, y gives: [Formula 450]

$$\int_S \frac{\partial f}{\partial x} f^* ds = \int_C n_x f \cdot f^* dc - \int_S f \frac{\partial f^*}{\partial x} ds \quad (816) \text{ (Aforementioned)}$$

and

$$\int_S \frac{\partial f}{\partial y} f^* ds = \int_C n_y f \cdot f^* dc - \int_S f \frac{\partial f^*}{\partial y} ds \quad (817) \text{ (Aforementioned)}$$

Expanding these gives:

$$\int_S \frac{\partial^2 f}{\partial x^2} f^* ds = \int_C \left( n_x \frac{\partial f}{\partial x} f^* - n_x f \frac{\partial f^*}{\partial x} \right) dc + \int_S f \frac{\partial^2 f^*}{\partial x^2} ds \quad (1029)$$

and

$$\int_S \frac{\partial^2 f}{\partial y^2} f^* ds = \int_C \left( n_y \frac{\partial f}{\partial y} f^* - n_y f \frac{\partial f^*}{\partial y} \right) dc + \int_S f \frac{\partial^2 f^*}{\partial y^2} ds \quad (1030)$$

Further, this also gives: [Formula 451]

$$\int_S \frac{\partial^2 f}{\partial x \partial y} f^* ds = \int_C \left( n_x \frac{\partial f}{\partial y} f^* - n_y f \frac{\partial f^*}{\partial x} \right) dc + \int_S f \frac{\partial^2 f^*}{\partial x \partial y} ds \quad (1031)$$

and

$$\int_S \frac{\partial^2 f}{\partial x \partial y} f^* ds = \int_C \left( n_y \frac{\partial f}{\partial x} f^* - n_x f \frac{\partial f^*}{\partial y} \right) dc + \int_S f \frac{\partial^2 f^*}{\partial x \partial y} ds \quad (1032)$$

Equating eq. (1031) and eq. (1032) gives:

$$\int_C \left( n_x \frac{\partial f}{\partial y} f^* - n_y f \frac{\partial f^*}{\partial x} \right) dc = \int_C \left( n_y \frac{\partial f}{\partial x} f^* - n_x f \frac{\partial f^*}{\partial y} \right) dc \quad (1033)$$

Rearranging these, we obtain the relationship of boundary integration as follows:

$$\int_C \left( n_x \frac{\partial f}{\partial y} - n_y \frac{\partial f}{\partial x} \right) f^* dc = \int_C f \left( n_y \frac{\partial f^*}{\partial x} - n_x \frac{\partial f^*}{\partial y} \right) dc \quad (1034)$$

11. 4. 12 Adjoint differential operator and adjoint boundary condition Expressing the right sides of the differential equations (1) and (2) with eq. (964) gives:

[Formula 452]

$$\left\{(1+\mu)\frac{\partial^2}{\partial x^2}+\frac{\partial^2}{\partial y^2}\right\}u_x+\mu\frac{\partial^2}{\partial x\partial y}u_y=f_x \quad (1035)$$

$$\mu\frac{\partial^2}{\partial x\partial y}u_x+\left\{\frac{\partial^2}{\partial x^2}+(1+\mu)\frac{\partial^2}{\partial y^2}\right\}u_y=f_y \quad (1036)$$

General description of these gives eq. (23) as follows:

$$\sum_j L_{ij}u_j=f_i \quad (23) \text{ (Aforementioned)}$$

Here, the original differential operator $L_{ij}$ is expressed by eq. (15) as follows:
[Formula 453]

$$\begin{bmatrix} L_{11} & L_{12} \\ L_{21} & L_{22} \end{bmatrix} \equiv \begin{bmatrix} (1+\mu)\frac{\partial^2}{\partial x^2}+\frac{\partial^2}{\partial y^2} & \mu\frac{\partial^2}{\partial x\partial y} \\ \mu\frac{\partial^2}{\partial x\partial y} & \frac{\partial^2}{\partial x^2}+(1+\mu)\frac{\partial^2}{\partial y^2} \end{bmatrix} \quad (15) \text{ (Aforementioned)}$$

The adjoint differential operator $L^*_{ij}$ is expressed by eq. (16) as follows:

$$\begin{bmatrix} L^*_{11} & L^*_{21} \\ L^*_{12} & L^*_{22} \end{bmatrix} \equiv \begin{bmatrix} (1+\mu)\frac{\partial^2}{\partial x^2}+\frac{\partial^2}{\partial y^2} & \mu\frac{\partial^2}{\partial x\partial y} \\ \mu\frac{\partial^2}{\partial x\partial y} & \frac{\partial^2}{\partial x^2}+(1+\mu)\frac{\partial^2}{\partial y^2} \end{bmatrix} \quad (16) \text{ (Aforementioned)}$$

A sum of integration obtained by multiplying eq. (23) by the dual displacement $u^*_i$, that is, inner product, is expressed by eq. (58) as follows:

$$\sum_i\sum_j\int_S L_{ij}u_j\cdot u^*_i ds=\sum_i\int_S f_i\cdot u^*_i ds \quad (58) \text{ (Aforementioned)}$$

As preparation for the dual displacement $u_i^*$, the displacement-strain relationships corresponding to eqs. (4), (5), and (6) are as follows, both regarding the plane stress and regarding the plane strain state:
[Formula 454]

$$\varepsilon^*_x \equiv \frac{\partial}{\partial x}u^*_x \quad (1037)$$

$$\varepsilon^*_y \equiv \frac{\partial}{\partial y}u^*_y \quad (1038)$$

$$\gamma^*_{xy} \equiv \frac{\partial}{\partial y}u^*_x+\frac{\partial}{\partial x}u^*_y \quad (1039)$$

The stress-strain relationships corresponding to eqs. (7), (8), (9) are as follows:

$$\sigma_x^* = G\left\{(\mu+1)\varepsilon_x^* + (\mu-1)\varepsilon_y^*\right\} \quad (1040)$$

$$\sigma_y^* = G\left\{(\mu-1)\varepsilon_x^* + (\mu+1)\varepsilon_y^*\right\} \quad (1041)$$

$$\tau_{xy}^* = G\ \gamma_{xy}^* \quad (1042)$$

Stress components corresponding to eqs. (10), (11), (12) are given as:
[Formula 455]

$$\sigma_x^* \equiv G\left\{(\mu+1)\frac{\partial u_1^*}{\partial x} + (\mu-1)\frac{\partial u_2^*}{\partial y}\right\} \quad (1043)$$

$$\sigma_y^* \equiv G\left\{(\mu-1)\frac{\partial u_1^*}{\partial x} + (\mu+1)\frac{\partial u_2^*}{\partial y}\right\} \quad (1044)$$

$$\tau_{xy}^* = \tau_{yx}^* \equiv G\left(\frac{\partial u_2^*}{\partial x} + \frac{\partial u_1^*}{\partial y}\right) \quad (1045)$$

Surface forces corresponding to eqs. (13), (14) are given as:

$$p_x^* \equiv n_x \sigma_x^* + n_y \tau_{yx}^* \quad (1046)$$

$$p_y^* \equiv n_x \tau_{xy}^* + n_y \sigma_y^* \quad (1047)$$

Here, partial integration of the left side of eq. (58) is performed.

- When |i=1, j=1|, using eqs. (1029), (1030), we obtain:
  [Formula 456]

$$\int_S L_{11}u_1 \cdot u_1^* ds \equiv \int_S \left[ (1+\mu)\frac{\partial^2}{\partial x^2} + \frac{\partial^2}{\partial y^2} \right] u_1 \cdot u_1^* ds$$
$$= (1+\mu)\int_S \frac{\partial^2 u_1}{\partial x^2} \cdot u_1^* ds + \int_S \frac{\partial^2 u_1}{\partial y^2} \cdot u_1^* ds$$
$$= \int_C \left\{ (1+\mu) n_x \frac{\partial u_1}{\partial x} + n_y \frac{\partial u_1}{\partial y} \right\} u_1^* dc$$
$$- \int_C u_1 \left\{ (1+\mu) n_x \frac{\partial u_1^*}{\partial x} + n_y \frac{\partial u_1^*}{\partial y} \right\} dc \qquad (1048)$$
$$+ \int_S u_1 \cdot \left[ (1+\mu)\frac{\partial^2}{\partial x^2} + \frac{\partial^2}{\partial y^2} \right] u_1^* ds$$

Let the boundary term of the right side of this equation be $R_{11}$, let the differential operator of the same be $L_{11}^*$, and they are given as:
[Formula 457]

$$R_{11} \equiv \int_C \left\{ (1+\mu) n_x \frac{\partial u_1}{\partial x} + n_y \frac{\partial u_1}{\partial y} \right\} u_1^* dc - \int_C u_1 \left\{ (1+\mu) n_x \frac{\partial u_1^*}{\partial x} + n_y \frac{\partial u_1^*}{\partial y} \right\} dc$$
$$L_{11}^* \equiv (1+\mu)\frac{\partial^2}{\partial x^2} + \frac{\partial^2}{\partial y^2} \qquad (1049)$$

$L_{11}^*$ represents an adjoint differential operator shown in eq. (16).

- When |i=1, j=2|, using eq. (1031), we obtain:
  [Formula 458]

$$\int_S L_{12}u_2 \cdot u_1^* ds \equiv \int_S \left[ \mu \frac{\partial^2}{\partial x \partial y} \right] u_2 \cdot u_1^* ds$$
$$= \int_C \mu \left( n_x \frac{\partial u_2}{\partial y} u_1^* - n_y u_2 \frac{\partial u_1^*}{\partial x} \right) dc \qquad (1050)$$
$$+ \int_S u_2 \cdot \left[ \mu \frac{\partial^2}{\partial x \partial y} \right] u_1^* ds$$

Let the boundary term of the right side of this equation be $R_{12}$, let the differential operator of the same be $L_{12}^*$, and they are given as:

$$R_{12} \equiv \int_C \mu \left( n_x \frac{\partial u_2}{\partial y} u_1^* - n_y u_2 \frac{\partial u_1^*}{\partial x} \right) dc$$
$$L_{12}^* \equiv \mu \frac{\partial^2}{\partial x \partial y} \qquad (1051)$$

$L_{12}^*$ is an adjoint differential operator shown in eq. (16).

- When |i=2, j=1|, using eq. (1032), we obtain:
  [Formula 459]

$$
\begin{aligned}
\int_S L_{21} u_1 \cdot u_2^* ds &\equiv \int_S \left[ \mu \frac{\partial^2}{\partial x \partial y} \right] u_1 \cdot u_2^* ds \\
&= \int_C \mu \left( n_y \frac{\partial u_1}{\partial x} u_2^* - n_x u_1 \frac{\partial u_2^*}{\partial y} \right) dc \\
&+ \int_S u_1 \cdot \left[ \mu \frac{\partial^2}{\partial x \partial y} \right] u_2^* ds
\end{aligned}
\quad (1052)
$$

Let the boundary term of the right side of this equation be $R_{21}$, let the differential operator of the same be $L_{21}^*$, and they are given as:

$$
\begin{aligned}
R_{21} &\equiv \int_C \mu \left( n_y \frac{\partial u_1}{\partial x} u_2^* - n_x u_1 \frac{\partial u_2^*}{\partial y} \right) dc \\
L_{21}^* &\equiv \mu \frac{\partial^2}{\partial x \partial y}
\end{aligned}
\quad (1053)
$$

$L_{21}$* represents an adjoint differential operator shown in eq. (16).

- When |i=2, j=2|, using eqs. (1029), (1030), we obtain:
  [Formula 460]

$$
\begin{aligned}
\int_S L_{22} u_2 \cdot u_2^* ds &\equiv \int_S \left[ \frac{\partial^2}{\partial x^2} + (1+\mu) \frac{\partial^2}{\partial y^2} \right] u_2 \cdot u_2^* ds \\
&= \int_S \frac{\partial^2 u_2}{\partial x^2} \cdot u_2^* ds + (1+\mu) \int_S \frac{\partial^2 u_2}{\partial y^2} \cdot u_2^* ds \\
&= \int_C \left\{ n_x \frac{\partial u_2}{\partial x} + (1+\mu) n_y \frac{\partial u_2}{\partial y} \right\} u_2^* dc \\
&- \int_C u_2 \left\{ n_x \frac{\partial u_2^*}{\partial x} + (1+\mu) n_y \frac{\partial u_2^*}{\partial y} \right\} dc \\
&+ \int_S u_2 \cdot \left[ \frac{\partial^2}{\partial x^2} + (1+\mu) \frac{\partial^2}{\partial y^2} \right] u_2^* ds
\end{aligned}
\quad (1054)
$$

Let the boundary term of the right side of this equation be $R_{22}$, let the differential operator of the same be $L_{22}$*, and they are given as:
[Formula 461]

$$
\begin{aligned}
R_{22} &\equiv \int_C \left\{ n_x \frac{\partial u_2}{\partial x} + (1+\mu) n_y \frac{\partial u_2}{\partial y} \right\} u_2^* dc \\
&- \int_C u_2 \left\{ n_x \frac{\partial u_2^*}{\partial x} + (1+\mu) n_y \frac{\partial u_2^*}{\partial y} \right\} dc \\
L_{22}^* &\equiv \frac{\partial^2}{\partial x^2} + (1+\mu) \frac{\partial^2}{\partial y^2}
\end{aligned}
\quad (1055)
$$

$L_{22}^{*}$ is an adjoint differential operator given in eq. (16).

In the case where the following is satisfied as in the present case, the operators are referred to as self-adjoint differential operators:

$L_{ji}^{*} = L_{ij}$ **Fehler! Verweisquelle konnte nicht gefunden werden.** (Aforementioned)

Adding the boundary terms and expressing the same as R, we obtain:
[Formula 462]

$$\begin{aligned} R &\equiv R_{11} + R_{12} + R_{21} + R_{22} \\ &= \int_C \left\{ (1+\mu) n_x \frac{\partial u_1}{\partial x} + n_y \frac{\partial u_1}{\partial y} + \mu n_x \frac{\partial u_2}{\partial y} \right\} u_1^* dc \\ &+ \int_C \left\{ n_x \frac{\partial u_2}{\partial x} + (1+\mu) n_y \frac{\partial u_2}{\partial y} + \mu n_y \frac{\partial u_1}{\partial x} \right\} u_2^* dc \\ &- \int_C u_1 \left\{ (1+\mu) n_x \frac{\partial u_1^*}{\partial x} + n_y \frac{\partial u_1^*}{\partial y} + \mu n_x \frac{\partial u_2^*}{\partial y} \right\} dc \\ &- \int_C u_2 \left\{ n_x \frac{\partial u_2^*}{\partial x} + (1+\mu) n_y \frac{\partial u_2^*}{\partial y} + \mu n_y \frac{\partial u_1^*}{\partial x} \right\} dc \end{aligned} \qquad (1056)$$

Transforming this equation and utilizing the relationship of boundary integration expressed by eq. (1034), we obtain:

$$\begin{aligned} R \equiv &\int_C \left[ n_x \left\{ (\mu+1)\frac{\partial u_1}{\partial x} + (\mu-1)\frac{\partial u_2}{\partial y} \right\} + n_y \left( \frac{\partial u_2}{\partial x} + \frac{\partial u_1}{\partial y} \right) \right] u_1^* dc \\ &+ \int_C \left[ n_x \left( \frac{\partial u_2}{\partial x} + \frac{\partial u_1}{\partial y} \right) + n_y \left\{ (\mu+1)\frac{\partial u_2}{\partial y} + (\mu-1)\frac{\partial u_1}{\partial x} \right\} \right] u_2^* dc \\ &- \int_C u_1 \left[ n_x \left\{ (\mu+1)\frac{\partial u_1^*}{\partial x} + (\mu-1)\frac{\partial u_2^*}{\partial y} \right\} + n_y \left( \frac{\partial u_2^*}{\partial x} + \frac{\partial u_1^*}{\partial y} \right) \right] dc \\ &- \int_C u_2 \left[ n_x \left( \frac{\partial u_2^*}{\partial x} + \frac{\partial u_1^*}{\partial y} \right) + n_y \left\{ (\mu+1)\frac{\partial u_2^*}{\partial y} + (\mu-1)\frac{\partial u_1^*}{\partial x} \right\} \right] dc \end{aligned} \qquad (1057)$$

Using eqs. (10), (11), (12) and eqs. (1043), (1044), (1045), we obtain:
[Formula 463]

$$\begin{aligned} R \equiv &\frac{1}{G} \int_C \left( n_x \sigma_x + n_y \tau_{yx} \right) u_1^* dc + \frac{1}{G} \int_C \left( n_x \tau_{xy} + n_y \sigma_y \right) u_2^* dc \\ &- \frac{1}{G} \int_C u_1 \left( n_x \sigma_x^* + n_y \tau_{yx}^* \right) dc - \frac{1}{G} \int_C u_2 \left( n_x \tau_{xy}^* + n_y \sigma_y^* \right) dc \end{aligned} \qquad (1058)$$

Using eqs. (13), (14) and eqs. (1046), (1047), that is, Cauchy's formula, we obtain:

$$R \equiv \frac{1}{G} \int_C \left( p_x u_1^* + p_y u_2^* \right) dc - \frac{1}{G} \int_C \left( u_1 p_x^* + u_2 p_y^* \right) dc \qquad (1059)$$

The boundary term *R* of this equation is expressed by eq. (60) as follows:

$$R \equiv \frac{1}{G} \sum_i \int_C \left( p_i u_i^* - p_i^* u_i \right) dc \qquad (60) \text{ (Aforementioned)}$$

According to the above-described result, partial integration of the left side of eq. (58) gives:

$$\sum_i \sum_j \int_S L_{ij} u_j \cdot u_i^* ds = R + \sum_i \sum_j \int_S u_j \cdot L_{ij}^* u_i^* ds \qquad (59) \text{ (Aforementioned)}$$

Incidentally, in order to express the boundary term R of eq. (1059) with polar coordinate components, using eqs. (971), (972), we prepare:
[Formula 464]

$$u_1 = \cos\theta \cdot u_r - \sin\theta \cdot u_\theta \qquad (1060)$$

$$u_2 = \sin\theta \cdot u_r + \cos\theta \cdot u_\theta \qquad (1061)$$

and

$$u_1^* = \cos\theta \cdot u_r^* - \sin\theta \cdot u_\theta^* \qquad (1062)$$

$$u_2^* = \sin\theta \cdot u_r^* + \cos\theta \cdot u_\theta^* \ . \qquad (1063)$$

Similarly, using eqs. (975), (976), we prepare:

$$p_x = \cos\theta \cdot p_r - \sin\theta \cdot p_\theta \qquad (1064)$$

$$p_y = \sin\theta \cdot p_r + \cos\theta \cdot p_\theta \qquad (1065)$$

and

$$p_x^* = \cos\theta \cdot p_r^* - \sin\theta \cdot p_\theta^* \qquad (1066)$$

$$p_y^* = \sin\theta \cdot p_r^* + \cos\theta \cdot p_\theta^* \ . \qquad (1067)$$

Substituting eqs. (1060) to (1067) into eq. (1059) gives:

$$R \equiv \frac{1}{G} \int_C \left( p_r \cdot u_r^* + p_\theta \cdot u_\theta^* \right) dc - \frac{1}{G} \int_C \left( u_r \cdot p_r^* + u_\theta \cdot p_\theta^* \right) dc \qquad (1068)$$

This equation is a boundary term written with polar coordinate components.
According to a condition such that the boundary term R is zero, the adjoint boundary condition is settled . The following description shows an example of this, in which a radius r of an outer edge of a ring is assumed to satisfy r=R, and a radius r of an inner edge thereof is assumed to satisfy r=γR. This is complicating as the same signs as those of the boundary term R, but the meanings of these are considerably different, and therefore it is possible to distinguish these.

[Exemplary non-self-adjoint boundary condition 1]

Regarding a ring, a boundary condition such that the surface force is zero and the displacement is also zero on the inner edge (r=γR) is expressed by eqs. (1018), (1019), and we obtain:
[Formula 465]

$$\left.\begin{aligned} u_r\big|_{r=\gamma R} &= 0 \\ u_\theta\big|_{r=\gamma R} &= 0 \\ p_r\big|_{r=\gamma R} &= 0 \\ p_\theta\big|_{r=\gamma R} &= 0 \end{aligned}\right\} \Leftrightarrow \left\{\begin{aligned} u_x\big|_{r=\gamma R} &= 0 \\ u_y\big|_{r=\gamma R} &= 0 \\ p_x\big|_{r=\gamma R} &= 0 \\ p_y\big|_{r=\gamma R} &= 0 \end{aligned}\right. \quad (1069)$$

In this case, a condition such that the boundary term *R* of eq. (60) is zero is given as:

$$\left.\begin{aligned} u_r^*\big|_{r=R} &= 0 \\ u_\theta^*\big|_{r=R} &= 0 \\ p_r^*\big|_{r=R} &= 0 \\ p_\theta^*\big|_{r=R} &= 0 \end{aligned}\right\} \Leftrightarrow \left\{\begin{aligned} u_x^*\big|_{r=R} &= 0 \\ u_y^*\big|_{r=R} &= 0 \\ p_x^*\big|_{r=R} &= 0 \\ p_y^*\big|_{r=R} &= 0 \end{aligned}\right. \quad (1070)$$

This is a condition such that on the outer edge (r=R), the dual surface forces $p_x^*$, $p_y^*$ are zero and the dual displacements $u_x^*$, $u_y^*$ are also zero, and this condition is the adjoint boundary condition. As the condition of eq. (1069) and the condition of eq. (1070) are different, this is a non-self-adjoint boundary condition.
It should be noted that the condition equations (1018), (1019) coincide with eq. (1069). In other words, the condition given in Section 11. 4. 9 is a non-self-adjoint boundary condition.

[Exemplary self-adjoint boundary condition 1]

Regarding a ring, a boundary condition such that the displacement is zero on the inner edge (r=γR) and the displacement is also zero on the outer edge (r=R) is given as:
[Formula 466]

$$\left.\begin{aligned} u_r\big|_{r=\gamma R} &= 0 \\ u_\theta\big|_{r=\gamma R} &= 0 \\ u_r\big|_{r=R} &= 0 \\ u_\theta\big|_{r=R} &= 0 \end{aligned}\right\} \Leftrightarrow \left\{\begin{aligned} u_x\big|_{r=\gamma R} &= 0 \\ u_y\big|_{r=\gamma R} &= 0 \\ u_x\big|_{r=R} &= 0 \\ u_y\big|_{r=R} &= 0 \end{aligned}\right. \quad (1071)$$

In this case, a condition such that the boundary term *R* of eq. (60) is zero is obtained as follows:

$$\left.\begin{array}{l} u_r^*\big|_{r=\gamma R}=0 \\ u_\theta^*\big|_{r=\gamma R}=0 \\ u_r^*\big|_{r=R}=0 \\ u_\theta^*\big|_{r=R}=0 \end{array}\right\} \Leftrightarrow \left\{\begin{array}{l} u_x^*\big|_{r=\gamma R}=0 \\ u_y^*\big|_{r=\gamma R}=0 \\ u_x^*\big|_{r=R}=0 \\ u_y^*\big|_{r=R}=0 \end{array}\right. \qquad (1072)$$

As the condition of eq. (1071) and the condition of eq. (1072) coincide, this is a self-adjoint boundary condition.

11. 4. 13 Homogenization of boundary condition and boundary term

An index B is added to a term that satisfies an inhomogeneous boundary condition so as to let the term be $u_{Bj}$, and an index H is added to a term that satisfies a homogeneous boundary condition so as to let the term be $u_{Hj}$. A primal displacement $u_j$ is expressed by a sum of these, which is given as:
[Formula 467]

$$u_j \equiv u_{Bj} + u_{Hj} \qquad (24)\ \text{(Aforementioned)}$$

Substituting this equation into eq. (23), we obtain the following simultaneous partial differential equation (40) with a homogeneous boundary condition:

$$\sum_j L_{ij} u_j = f_i \qquad (23)\ \text{(Aforementioned)}$$

$$\sum_j L_{ij} u_{Hj} = f_{Hi} \qquad (40)\ \text{(Aforementioned)}$$

An inner product of this with the function $u_{Hi}^*$ satisfying the homogeneous adjoint boundary condition is given as:
[Formula 468]

$$\sum_i \sum_j \int_S L_{ij} u_{Hj} \cdot u_{Hi}^* ds = \sum_i \int_S f_{Hi} \cdot u_{Hi}^* ds \quad (61)\ \text{(Aforementioned)}$$

Then, partial integration of the left side of the equation (61) gives the following.

- When |i=1, j=1|, using eqs. (1029), (1030), we obtain:
  [Formula 469]

$$\begin{aligned}\int_S L_{11}u_{H1}\cdot u_{H1}^{*}ds &\equiv \int_S \left[(1+\mu)\frac{\partial^2}{\partial x^2}+\frac{\partial^2}{\partial y^2}\right]u_{H1}\cdot u_{H1}^{*}ds\\ &= (1+\mu)\int_S \frac{\partial^2 u_{H1}}{\partial x^2}\cdot u_{H1}^{*}ds+\int_S \frac{\partial^2 u_{H1}}{\partial y^2}\cdot u_{H1}^{*}ds\\ &= \int_C \left\{(1+\mu)n_x\frac{\partial u_{H1}}{\partial x}+n_y\frac{\partial u_{H1}}{\partial y}\right\}u_{H1}^{*}dc\\ &-\int_C u_{H1}\left\{(1+\mu)n_x\frac{\partial u_{H1}^{*}}{\partial x}+n_y\frac{\partial u_{H1}^{*}}{\partial y}\right\}dc\\ &+\int_S u_{H1}\cdot\left[(1+\mu)\frac{\partial^2}{\partial x^2}+\frac{\partial^2}{\partial y^2}\right]u_{H1}^{*}ds\end{aligned} \quad (1073)$$

Let the boundary term of the right side of this equation be $R_{H11}$, let the differential operator of the same be $L_{11}^{*}$, and they are given as:

$$\begin{aligned}R_{H11} &\equiv \int_C \left\{(1+\mu)n_x\frac{\partial u_{H1}}{\partial x}+n_y\frac{\partial u_{H1}}{\partial y}\right\}u_{H1}^{*}dc\\ &-\int_C u_{H1}\left\{(1+\mu)n_x\frac{\partial u_{H1}^{*}}{\partial x}+n_y\frac{\partial u_{H1}^{*}}{\partial y}\right\}dc\\ L_{11}^{*} &\equiv (1+\mu)\frac{\partial^2}{\partial x^2}+\frac{\partial^2}{\partial y^2}\end{aligned} \quad (1074)$$

$L_{11}^{*}$ represents an adjoint differential operator shown in eq. (16).

- When |i=1, j=2|, using eq. (1031), we obtain:
  [Formula 470]

$$\begin{aligned}\int_S L_{12}u_{H2}\cdot u_{H1}^{*}ds &\equiv \int_S \left[\mu\frac{\partial^2}{\partial x\partial y}\right]u_{H2}\cdot u_{H1}^{*}ds\\ &= \int_C \mu\left(n_x\frac{\partial u_{H2}}{\partial y}u_{H1}^{*}-n_y u_{H2}\frac{\partial u_{H1}^{*}}{\partial x}\right)dc\\ &+\int_S u_{H2}\cdot\left[\mu\frac{\partial^2}{\partial x\partial y}\right]u_{H1}^{*}ds\end{aligned} \quad (1075)$$

Let the boundary term of the right side of this equation be $R_{H12}$, let the differential operator of the same be $L_{12}^{*}$, and they are given as:

$$\begin{aligned}R_{H12} &\equiv \int_C \mu\left(n_x\frac{\partial u_{H2}}{\partial y}u_{H1}^{*}-n_y u_{H2}\frac{\partial u_{H1}^{*}}{\partial x}\right)dc\\ L_{12}^{*} &\equiv \mu\frac{\partial^2}{\partial x\partial y}\end{aligned} \quad (1076)$$

$L_{12}^{*}$ is an adjoint differential operator given in eq. (16).

- When |i=2, j=1|, using eq. (1032), we obtain:

[Formula 471]

$$\int_S L_{21}u_{H1}\cdot u_{H2}^{*}ds \equiv \int_S\left[\mu\frac{\partial^2}{\partial x\partial y}\right]u_{H1}\cdot u_{H2}^{*}ds$$
$$= \int_C \mu\left(n_y\frac{\partial u_{H1}}{\partial x}u_{H2}^{*} - n_x u_{H1}\frac{\partial u_{H2}^{*}}{\partial y}\right)dc \qquad (1077)$$
$$+ \int_S u_{H1}\cdot\left[\mu\frac{\partial^2}{\partial x\partial y}\right]u_{H2}^{*}ds$$

Let the boundary term of the right side of this equation be $R_{H21}$, let the differential operator of the same be $L_{21}^{*}$, and they are given as:

$$R_{H21} \equiv \int_C \mu\left(n_y\frac{\partial u_{H1}}{\partial x}u_{H2}^{*} - n_x u_{H1}\frac{\partial u_{H2}^{*}}{\partial y}\right)dc$$
$$L_{21}^{*} \equiv \mu\frac{\partial^2}{\partial x\partial y} \qquad (1078)$$

$L_{21}^{*}$ is an adjoint differential operator given in eq. (16).

- When |i=2, j=2|, using eqs. (1029), (1030), we obtain:
  [Formula 472]

$$\int_S L_{22}u_{H2}\cdot u_{H2}^{*}ds \equiv \int_S\left[\frac{\partial^2}{\partial x^2} + (1+\mu)\frac{\partial^2}{\partial y^2}\right]u_{H2}\cdot u_{H2}^{*}ds$$
$$= \int_S \frac{\partial^2 u_{H2}}{\partial x^2}\cdot u_{H2}^{*}ds + (1+\mu)\int_S \frac{\partial^2 u_{H2}}{\partial y^2}\cdot u_{H2}^{*}ds$$
$$= \int_C\left\{n_x\frac{\partial u_{H2}}{\partial x} + (1+\mu)n_y\frac{\partial u_{H2}}{\partial y}\right\}u_{H2}^{*}dc$$
$$- \int_C u_{H2}\left\{n_x\frac{\partial u_{H2}^{*}}{\partial x} + (1+\mu)n_y\frac{\partial u_{H2}^{*}}{\partial y}\right\}dc \qquad (1079)$$
$$+ \int_S u_{H2}\cdot\left[\frac{\partial^2}{\partial x^2} + (1+\mu)\frac{\partial^2}{\partial y^2}\right]u_{H2}^{*}ds$$

Let the boundary term of the right side of this equation be $R_{H22}$, let the differential operator of the same be $L_{22}^{*}$, and they are given as:

$$R_{H22} \equiv \int_C\left\{n_x\frac{\partial u_{H2}}{\partial x} + (1+\mu)n_y\frac{\partial u_{H2}}{\partial y}\right\}u_{H2}^{*}dc$$
$$- \int_C u_{H2}\left\{n_x\frac{\partial u_{H2}^{*}}{\partial x} + (1+\mu)n_y\frac{\partial u_{H2}^{*}}{\partial y}\right\}dc \qquad (1080)$$
$$L_{22}^{*} \equiv \frac{\partial^2}{\partial x^2} + (1+\mu)\frac{\partial^2}{\partial y^2}$$

$L_{22}^{*}$ is an adjoint differential operator given in eq. (16).

In the case where the following is satisfied as in the present case, the operators are referred to as self-adjoint differential operators:
[Formula 473]

$$L_{ji}^{*} = L_{ij}$$ **Fehler! Verweisquelle konnte nicht gefunden werden.**

Adding the boundary terms and expressing the same as $R_H$, we obtain:

$$\begin{aligned} R_H &\equiv R_{H11} + R_{H12} + R_{H21} + R_{H22} \\ &= \int_C \left\{ (1+\mu) n_x \frac{\partial u_{H1}}{\partial x} + n_y \frac{\partial u_{H1}}{\partial y} + \mu n_x \frac{\partial u_{H2}}{\partial y} \right\} u_{H1}^{*} dc \\ &+ \int_C \left\{ n_x \frac{\partial u_{H2}}{\partial x} + (1+\mu) n_y \frac{\partial u_{H2}}{\partial y} + \mu n_y \frac{\partial u_{H1}}{\partial x} \right\} u_{H2}^{*} dc \\ &- \int_C u_{H1} \left\{ (1+\mu) n_x \frac{\partial u_{H1}^{*}}{\partial x} + n_y \frac{\partial u_{H1}^{*}}{\partial y} + \mu n_x \frac{\partial u_{H2}^{*}}{\partial y} \right\} dc \\ &- \int_C u_{H2} \left\{ n_x \frac{\partial u_{H2}^{*}}{\partial x} + (1+\mu) n_y \frac{\partial u_{H2}^{*}}{\partial y} + \mu n_y \frac{\partial u_{H1}^{*}}{\partial x} \right\} dc \end{aligned} \qquad (1081)$$

Transforming this equation and utilizing the relationship of boundary integration expressed by eq. (1034), we obtain:
[Formula 474]

$$\begin{aligned} R_H \equiv & \int_C \left[ n_x \left\{ (\mu+1) \frac{\partial u_{H1}}{\partial x} + (\mu-1) \frac{\partial u_{H2}}{\partial y} \right\} + n_y \left( \frac{\partial u_{H2}}{\partial x} + \frac{\partial u_{H1}}{\partial y} \right) \right] u_{H1}^{*} dc \\ &+ \int_C \left[ n_x \left( \frac{\partial u_{H2}}{\partial x} + \frac{\partial u_{H1}}{\partial y} \right) + n_y \left\{ (\mu+1) \frac{\partial u_{H2}}{\partial y} + (\mu-1) \frac{\partial u_{H1}}{\partial x} \right\} \right] u_{H2}^{*} dc \\ &- \int_C u_{H1} \left[ n_x \left\{ (\mu+1) \frac{\partial u_{H1}^{*}}{\partial x} + (\mu-1) \frac{\partial u_{H2}^{*}}{\partial y} \right\} + n_y \left( \frac{\partial u_{H2}^{*}}{\partial x} + \frac{\partial u_{H1}^{*}}{\partial y} \right) \right] dc \\ &- \int_C u_{H2} \left[ n_x \left( \frac{\partial u_{H2}^{*}}{\partial x} + \frac{\partial u_{H1}^{*}}{\partial y} \right) + n_y \left\{ (\mu+1) \frac{\partial u_{H2}^{*}}{\partial y} + (\mu-1) \frac{\partial u_{H1}^{*}}{\partial x} \right\} \right] dc \end{aligned} \qquad (1082)$$

Using eqs. (27), (30), (33) and eqs. (45), (48), (51), we obtain:
[Formula 475]

$$\begin{aligned} R_H \equiv & \frac{1}{G} \int_C \left( n_x \sigma_{Hx} + n_y \tau_{Hyx} \right) u_{H1}^{*} dc + \frac{1}{G} \int_C \left( n_x \tau_{Hxy} + n_y \sigma_{Hy} \right) u_{H2}^{*} dc \\ &- \frac{1}{G} \int_C u_{H1} \left( n_x \sigma_{Hx}^{*} + n_y \tau_{Hyx}^{*} \right) dc - \frac{1}{G} \int_C u_{H2} \left( n_x \tau_{Hxy}^{*} + n_y \sigma_{Hy}^{*} \right) dc \end{aligned} \qquad (1083)$$

Using eqs. (36), (39) and eqs. (54), (57), that is,Cauchy's formula, we obtain:

$$R_H \equiv \frac{1}{G} \int_C \left( p_{Hx} u_{H1}^{*} + p_{Hy} u_{H2}^{*} \right) dc - \frac{1}{G} \int_C \left( u_{H1} p_{Hx}^{*} + u_{H2} p_{Hy}^{*} \right) dc \quad (1084)$$

The boundary term $R_H$ of this equation is expressed by eq. (63) as follows:

$$R_H \equiv \frac{1}{G}\sum_i \int_C \left(p_{Hi} u^*_{Hi} - p^*_{Hi} u_{Hi}\right) dc \quad (63) \text{ (Aforementioned)}$$

In order that this is expressed with polar coordinate components, this equation is transformed in the same manner as that done when eq. (1068) is obtained, and is given as:
[Formula 476]

$$\begin{aligned} R_H \equiv & \frac{1}{G}\int_C \left(p_{Hr} \cdot u^*_{Hr} + p_{H\theta} \cdot u^*_{H\theta}\right) dc \\ & - \frac{1}{G}\int_C \left(u_{Hr} \cdot p^*_{Hr} + u_{H\theta} \cdot p^*_{H\theta}\right) dc \end{aligned} \quad (1085)$$

According to the results of the above-described operation, partial integration of the left side of the equation (61) gives:

$$\sum_i \sum_j \int_S L_{ij} u_{Hj} \cdot u^*_{Hi} ds = R_H + \sum_i \sum_j \int_S u_{Hj} \cdot L^*_{ij} u^*_{Hi} ds \quad (62) \text{ (Aforementioned)}$$

11. 4. 14 Getting equations on each function from the simultaneous eigenvalue problem

The outer radius R is assumed to be the characteristic length, and the weight constant is given as:
[Formula 477]

$$w_1 = w_2 = w \equiv \frac{1}{R^2} \quad (1086)$$

Then, details of the following primal simultaneous differential equation (105) are given as eqs. (1087) and (1088):

$$\sum_j L_{ij} \phi_j = \lambda w_i \phi^*_i \quad (105) \text{ (Aforementioned)}$$

$$\left\{(1+\mu)\frac{\partial^2}{\partial x^2} + \frac{\partial^2}{\partial y^2}\right\}\phi_x + \mu \frac{\partial^2}{\partial x \partial y}\phi_y = \lambda w \phi^*_x \quad (1087)$$

$$\mu \frac{\partial^2}{\partial x \partial y}\phi_x + \left\{\frac{\partial^2}{\partial x^2} + (1+\mu)\frac{\partial^2}{\partial y^2}\right\}\phi_y = \lambda w \phi^*_y \quad (1088)$$

On the other hand, details of the following dual simultaneous differential equation (106) are given as eqs. (1089) and (1090):

$$\sum_j L^*_{ji} \phi^*_j = \lambda w_i \phi_i \quad (106) \text{ (Aforementioned)}$$

$$\left\{(1+\mu)\frac{\partial^2}{\partial x^2} + \frac{\partial^2}{\partial y^2}\right\}\phi^*_x + \mu \frac{\partial^2}{\partial x \partial y}\phi^*_y = \lambda w \phi_x \quad (1089)$$

$$\mu \frac{\partial^2}{\partial x \partial y}\phi_x^* + \left\{\frac{\partial^2}{\partial x^2} + (1+\mu)\frac{\partial^2}{\partial y^2}\right\}\phi_y^* = \lambda w \phi_y \quad (1090)$$

The primal simultaneous eigenvalue problem is as expressed by eq. (98):
[Formula 478]

$$\sum_j \sum_k L_{ji}^* \frac{1}{w_j} L_{jk}\phi_k = \lambda^2 w_i \phi_i \quad (98) \text{ (Aforementioned)}$$

Transposing the weight constant *w* according to eq. (1086), we obtain:

$$\sum_j \sum_k L_{ji}^* L_{jk}\phi_k = \lambda^2 w^2 \phi_i \quad (1091)$$

Using differential operators of eqs. (15), (16), we calculate the left side of this equation, and obtain:

$$\left[\left(\nabla^2 + \mu \frac{\partial^2}{\partial x^2}\right)^2 + \mu^2 \frac{\partial^4}{\partial x^2 \partial y^2}\right]\phi_x + \left[\mu(2+\mu)\frac{\partial^2}{\partial x \partial y}\nabla^2\right]\phi_y = \lambda^2 w^2 \phi_x \quad (1092)$$

$$\left[\mu(2+\mu)\frac{\partial^2}{\partial x \partial y}\nabla^2\right]\phi_x + \left[\left(\nabla^2 + \mu \frac{\partial^2}{\partial y^2}\right)^2 + \mu^2 \frac{\partial^4}{\partial x^2 \partial y^2}\right]\phi_y = \lambda^2 w^2 \phi_y \quad (1093)$$

Obtaining equations on each function from these simultaneous equations and rearranging the same, both of $\phi_x$, and $\phi_y$ become function $\phi$ that satisfy the following differential equation:
[Formula 479]

$$\left(\nabla^4 - \lambda^2 w^2\right)\left\{\nabla^4 - \left(\frac{\lambda w}{1+\mu}\right)^2\right\}\phi = 0 \quad (1094)$$

On the other hand, the dual simultaneous eigenvalue problem is expressed by the following eq. (99):

$$\sum_j \sum_k L_{ij} \frac{1}{w_j} L_{kj}^* \phi_k^* = \lambda^2 w_i \phi_i^* \quad (99) \text{ (Aforementioned)}$$

Similarly this is transformed to:

$$\sum_j \sum_k L_{ij} L_{kj}^* \phi_k^* = \lambda^2 w^2 \phi_i^* \quad (1095)$$

Calculating the left side of this equation by using the differential operators of eqs. (15), (16), we obtain an equation composed of the same operators as those in eqs. (1092), (1093) as follows:

$$\left[\left(\nabla^2 + \mu \frac{\partial^2}{\partial x^2}\right)^2 + \mu^2 \frac{\partial^4}{\partial x^2 \partial y^2}\right]\phi_x^* + \left[\mu(2+\mu)\frac{\partial^2}{\partial x \partial y}\nabla^2\right]\phi_y^* = \lambda^2 w^2 \phi_x^* \quad (1096)$$

[Formula 480]

$$\left[\mu(2+\mu)\frac{\partial^2}{\partial x \partial y}\nabla^2\right]\phi_x^* + \left[\left(\nabla^2 + \mu\frac{\partial^2}{\partial y^2}\right)^2 + \mu^2\frac{\partial^4}{\partial x^2 \partial y^2}\right]\phi_y^* = \lambda^2 w^2 \phi_y^* \qquad (1097)$$

Obtaining equations on each function from these simultaneous equations and rearranging the same, both of $\phi_x^*, \phi_y^*$ become function $\phi^*$ that satisfy the following differential equation:

$$\left(\nabla^4 - \lambda^2 w^2\right)\left\{\nabla^4 - \left(\frac{\lambda w}{1+\mu}\right)^2\right\}\phi^* = 0 \qquad (1098)$$

11. 4. 15 Eigenfunction set

Since eqs. (1094) and (1098) are the same differential equation, consequently, we find that $\varphi_x$, $\varphi_y$ and $\varphi_x^*$, $\varphi_y^*$ are composed of the same function set respectively. Therefore, focusing on solving eq. (1094), we give:
[Formula 481]

$$\omega_1 \equiv \sqrt{\lambda w} \qquad (1099)$$

$$\omega_2 \equiv \sqrt{\frac{\lambda w}{1+\mu}} \qquad (1100)$$

Then, the differential equation (1094) is transformed to:

$$\left(\nabla^4 - \omega_1^4\right)\left(\nabla^4 - \omega_2^4\right)\phi = 0 \qquad (1101)$$

Factorizing the same, we obtain:

$$\left(\nabla^2 + \omega_1^2\right)\left(\nabla^2 - \omega_1^2\right)\left(\nabla^2 + \omega_2^2\right)\left(\nabla^2 - \omega_2^2\right)\phi = 0 \qquad (1102)$$

Expressing the weight constant *w* by eq. (1086), we express $\omega_1$, $\omega_2$ as:

$$\omega_1 \equiv \frac{1}{R}\sqrt{\lambda} \qquad (1103)$$

$$\omega_2 \equiv \frac{1}{R}\sqrt{\frac{\lambda}{1+\mu}} \equiv \frac{1}{\sqrt{1+\mu}}\omega_1 \qquad (1104)$$

Incidentally, regarding the function of $\theta$, with periodicity of $2\pi$ being expected, let m represent an integer, and a solution thereof is to be determined by separation of variables. Then, a solution of the differential equation (1105) is given by eq. (1106):
[Formula 482]

$$\left(\nabla^2 + \omega_1^2\right)\phi = 0 \qquad (1105)$$

$$\phi(r,\theta) \equiv \begin{pmatrix} \sin(m\theta) \\ \cos(m\theta) \end{pmatrix} \times \begin{pmatrix} J_m(\omega_1 r) \\ Y_m(\omega_1 r) \end{pmatrix} \quad (1106)$$

Here, $J_m$ and $Y_m$ are Bessel functions of the first kind and the same of the second kind respectively . Similarly, a solution of the differential equation (1107) is given by eq. (1108):

$$\left(\nabla^2 - \omega_1^2\right)\phi = 0 \quad (1107)$$

$$\phi(r,\theta) \equiv \begin{pmatrix} \sin(m\theta) \\ \cos(m\theta) \end{pmatrix} \times \begin{pmatrix} I_m(\omega_1 r) \\ K_m(\omega_1 r) \end{pmatrix} \quad (1108)$$

Here, $I_m$ and $K_m$ are modified Bessel functions of the first kind and the same of the second kind respectively

Similarly, a solution of the differential equation (1109) is given by eq. (1110):

[Formula 483]

$$\left(\nabla^2 + \omega_2^2\right)\phi = 0 \quad (1109)$$

$$\phi(r,\theta) \equiv \begin{pmatrix} \sin(m\theta) \\ \cos(m\theta) \end{pmatrix} \times \begin{pmatrix} J_m(\omega_2 r) \\ Y_m(\omega_2 r) \end{pmatrix} \quad (1110)$$

A solution of the differential equation (1111) is given by eq. (1112):

$$\left(\nabla^2 - \omega_2^2\right)\phi = 0 \quad (1111)$$

$$\phi(r,\theta) \equiv \begin{pmatrix} \sin(m\theta) \\ \cos(m\theta) \end{pmatrix} \times \begin{pmatrix} I_m(\omega_2 r) \\ K_m(\omega_2 r) \end{pmatrix} \quad (1112)$$

11. 4. 16 Combination of solutions satisfying primal simultaneous eigenvalue problem

Transforming eqs. (1092), (1093) of the primal simultaneous eigenvalue problem, we obtain:

[Formula 484]

$$\left[\nabla^4 - \lambda^2 w^2\right]\phi_x + \mu\left(2+\mu\right)\nabla^2 \frac{\partial}{\partial x}\left(\frac{\partial}{\partial x}\phi_x + \frac{\partial}{\partial y}\phi_y\right) = 0 \quad (1113)$$

$$\left[\nabla^4 - \lambda^2 w^2\right]\phi_y + \mu\left(2+\mu\right)\nabla^2 \frac{\partial}{\partial y}\left(\frac{\partial}{\partial x}\phi_x + \frac{\partial}{\partial y}\phi_y\right) = 0 \quad (1114)$$

Using $\omega_1$ of eq. (1099), we obtain:

$$\left[\nabla^4 - \omega_1^4\right]\phi_x + \mu\left(2+\mu\right)\nabla^2 \frac{\partial}{\partial x}\left(\frac{\partial}{\partial x}\phi_x + \frac{\partial}{\partial y}\phi_y\right) = 0 \quad (1115)$$

$$\left[\nabla^4 - \omega_1^4\right]\phi_y + \mu\left(2+\mu\right)\nabla^2 \frac{\partial}{\partial y}\left(\frac{\partial}{\partial x}\phi_x + \frac{\partial}{\partial y}\phi_y\right) = 0 \quad (1116)$$

In the case where the solutions $\varphi_x$, $\varphi_y$ are selected from a function system that satisfies eq. (1105) or eq. (1107), both of $\varphi_x$, $\varphi_y$ satisfy:
[Formula 485]

$$\left(\nabla^4 - \omega_1^4\right)\phi = 0 \qquad (1117)$$

Therefore, according to eqs. (1115), (1116), the combination of $\phi_x, \phi_y$ has to satisfy:

$$\frac{\partial}{\partial x}\left(\frac{\partial}{\partial x}\phi_x + \frac{\partial}{\partial y}\phi_y\right) = 0 \qquad (1118)$$

$$\frac{\partial}{\partial y}\left(\frac{\partial}{\partial x}\phi_x + \frac{\partial}{\partial y}\phi_y\right) = 0 \qquad (1119)$$

This requires that the terms in the parenthesis are constants. However, since the solution formats of $\varphi_x$, $\varphi_y$ are eqs. (1106), (1108), they do not take a constant other than zero. Therefore, as an equation that the combination of $\varphi_x$, $\varphi_y$ should satisfy, we obtain the following equation:
[Formula 486]

$$\frac{\partial}{\partial x}\phi_x + \frac{\partial}{\partial y}\phi_y = 0 \qquad (1120)$$

On the other hand, eqs. (1092),(1093) of the primal simultaneous eigenvalue problem can be transformed to:

$$\left[\nabla^4 - \left(\frac{\lambda w}{1+\mu}\right)^2\right]\phi_x - \frac{\mu(2+\mu)}{1+\mu}\nabla^2\frac{\partial}{\partial y}\left(\frac{\partial}{\partial y}\phi_x - \frac{\partial}{\partial x}\phi_y\right) = 0 \qquad (1121)$$

$$\left[\nabla^4 - \left(\frac{\lambda w}{1+\mu}\right)^2\right]\phi_y + \frac{\mu(2+\mu)}{1+\mu}\nabla^2\frac{\partial}{\partial x}\left(\frac{\partial}{\partial y}\phi_x - \frac{\partial}{\partial x}\phi_y\right) = 0 \qquad (1122)$$

Using $\omega_2$ of eq. (1100), we obtain:

$$\left[\nabla^4 - \omega_2^4\right]\phi_x - \frac{\mu(2+\mu)}{1+\mu}\nabla^2\frac{\partial}{\partial y}\left(\frac{\partial}{\partial y}\phi_x - \frac{\partial}{\partial x}\phi_y\right) = 0 \qquad (1123)$$

$$\left[\nabla^4 - \omega_2^4\right]\phi_y + \frac{\mu(2+\mu)}{1+\mu}\nabla^2\frac{\partial}{\partial x}\left(\frac{\partial}{\partial y}\phi_x - \frac{\partial}{\partial x}\phi_y\right) = 0 \qquad (1124)$$

In the case where the solutions $\varphi_x$, $\varphi_y$ are selected from a function system that satisfies eq. (1109) or (1111), both of $\varphi_x$, $\varphi_y$ satisfy:
[Formula 487]

$$\left(\nabla^4 - \omega_2^4\right)\phi = 0 \qquad (1125)$$

Therefore, according to eqs. (1123),(1124), the combination of $\phi_x, \phi_y$ has to satisfy:

$$\frac{\partial}{\partial y}\left(\frac{\partial}{\partial y}\phi_x - \frac{\partial}{\partial x}\phi_y\right) = 0 \quad (1126)$$

$$\frac{\partial}{\partial x}\left(\frac{\partial}{\partial y}\phi_x - \frac{\partial}{\partial x}\phi_y\right) = 0 \quad (1127)$$

This requires that the terms in the parenthesis are constants. However, since the solution formats of $\varphi_x$, $\varphi_y$ are eqs. (1110), (1112), they do not take a constant other than zero. Therefore, as an equation that the combination of $\varphi_x$, $\varphi_y$ should satisfy, we obtain the following equation:
[Formula 488]

$$\frac{\partial}{\partial y}\phi_x - \frac{\partial}{\partial x}\phi_y = 0 \quad (1128)$$

11. 4. 17 Combination of solutions satisfying dual simultaneous eigenvalue problem

Transforming eqs. (1096), (1097) of the dual simultaneous eigenvalue problem, we obtain:
[Formula 489]

$$\left[\nabla^4 - \lambda^2 w^2\right]\phi_x^* + \mu(2+\mu)\nabla^2\frac{\partial}{\partial x}\left(\frac{\partial}{\partial x}\phi_x^* + \frac{\partial}{\partial y}\phi_y^*\right) = 0 \quad (1129)$$

$$\left[\nabla^4 - \lambda^2 w^2\right]\phi_y^* + \mu(2+\mu)\nabla^2\frac{\partial}{\partial y}\left(\frac{\partial}{\partial x}\phi_x^* + \frac{\partial}{\partial y}\phi_y^*\right) = 0 \quad (1130)$$

Using $\omega_1$ of eq. (1099), we obtain:
[Formula 490]

$$\left[\nabla^4 - \omega_1^4\right]\phi_x^* + \mu(2+\mu)\nabla^2\frac{\partial}{\partial x}\left(\frac{\partial}{\partial x}\phi_x^* + \frac{\partial}{\partial y}\phi_y^*\right) = 0 \quad (1131)$$

$$\left[\nabla^4 - \omega_1^4\right]\phi_y^* + \mu(2+\mu)\nabla^2\frac{\partial}{\partial y}\left(\frac{\partial}{\partial x}\phi_x^* + \frac{\partial}{\partial y}\phi_y^*\right) = 0 \quad (1132)$$

In the case where the solutions $\phi_x^*, \phi_y^*$ are selected from a function system that satisfies eq. (1105) or eq. (1107), both of $\phi_x^*, \phi_y^*$ satisfy:

$$\left(\nabla^4 - \omega_1^4\right)\phi^* = 0 \quad (1133)$$

Therefore, according to eqs. (1131), (1132), the combination of $\phi_x^*, \phi_y^*$ has to satisfy:

$$\frac{\partial}{\partial x}\left(\frac{\partial}{\partial x}\phi_x^* + \frac{\partial}{\partial y}\phi_y^*\right) = 0 \quad (1134)$$

$$\frac{\partial}{\partial y}\left(\frac{\partial}{\partial x}\phi_x^* + \frac{\partial}{\partial y}\phi_y^*\right) = 0 \qquad (1135)$$

This requires that the terms in the parenthesis are constants. However, since the solution formats of $\phi_x^*$, $\phi_y^*$ are eqs. (1106), (1108), they do not take a constant other than zero. Therefore, as an equation that the combination of $\phi_x^*$, $\phi_y^*$ shoud satisfy, we obtain the following equation:
[Formula 491]

$$\frac{\partial}{\partial x}\phi_x^* + \frac{\partial}{\partial y}\phi_y^* = 0 \qquad (1136)$$

On the other hand, eqs. (1096), (1097) of the dual simultaneous eigenvalue problem can be transformed to:
[Formula 492]

$$\left[\nabla^4 - \left(\frac{\lambda w}{1+\mu}\right)^2\right]\phi_x^* - \frac{\mu(2+\mu)}{1+\mu}\nabla^2\frac{\partial}{\partial y}\left(\frac{\partial}{\partial y}\phi_x^* - \frac{\partial}{\partial x}\phi_y^*\right) = 0 \qquad (1137)$$

$$\left[\nabla^4 - \left(\frac{\lambda w}{1+\mu}\right)^2\right]\phi_y^* + \frac{\mu(2+\mu)}{1+\mu}\nabla^2\frac{\partial}{\partial x}\left(\frac{\partial}{\partial y}\phi_x^* - \frac{\partial}{\partial x}\phi_y^*\right) = 0 \qquad (1138)$$

Using $\omega_2$ of eq. (1100), we obtain:

$$\left[\nabla^4 - \omega_2^4\right]\phi_x^* - \frac{\mu(2+\mu)}{1+\mu}\nabla^2\frac{\partial}{\partial y}\left(\frac{\partial}{\partial y}\phi_x^* - \frac{\partial}{\partial x}\phi_y^*\right) = 0 \qquad (1139)$$

$$\left[\nabla^4 - \omega_2^4\right]\phi_y^* + \frac{\mu(2+\mu)}{1+\mu}\nabla^2\frac{\partial}{\partial x}\left(\frac{\partial}{\partial y}\phi_x^* - \frac{\partial}{\partial x}\phi_y^*\right) = 0 \qquad (1140)$$

In the case where the solutions $\phi_x^*$, $\phi_y^*$ are selected from a function system that satisfies eq. (1109) or (1111), both of $\phi_x^*$, $\phi_y^*$ satisfy:
[Formula 493]

$$\left(\nabla^4 - \omega_2^4\right)\phi^* = 0 \qquad (1141)$$

Therefore, according to eqs. (1139),(1140), the combination of $\phi_x^*, \phi_y^*$ has to satisfy:

$$\frac{\partial}{\partial y}\left(\frac{\partial}{\partial y}\phi_x^* - \frac{\partial}{\partial x}\phi_y^*\right) = 0 \qquad (1142)$$

$$\frac{\partial}{\partial x}\left(\frac{\partial}{\partial y}\phi_x^* - \frac{\partial}{\partial x}\phi_y^*\right) = 0 \qquad (1143)$$

This requires that the terms in the parenthesis are constants. However, since the solution formats of $\phi_x^*$, $\phi_y^*$ are eqs. (1110), (1112), they do not take a constant other than zero. Therefore, as an equation that the combination of $\phi_x^*$, $\phi_y^*$should satisfy, we obtain the following equation:
[Formula 494]

$$\frac{\partial}{\partial y}\phi_x^* - \frac{\partial}{\partial x}\phi_y^* = 0 \qquad (1144)$$

11. 4. 18 Combination of solutions satisfying primal simultaneous differential equations

Transforming eqs. (1087), (1088) of the primal simultaneous differential equations, we obtain:
[Formula 495]

$$\nabla^2\phi_x + \mu\frac{\partial}{\partial x}\left(\frac{\partial}{\partial x}\phi_x + \frac{\partial}{\partial y}\phi_y\right) = \lambda w \phi_x^* \qquad (1145)$$

$$\nabla^2\phi_y + \mu\frac{\partial}{\partial y}\left(\frac{\partial}{\partial x}\phi_x + \frac{\partial}{\partial y}\phi_y\right) = \lambda w \phi_y^* \qquad (1146)$$

Using $\omega_1$ of eq. (1099), we obtain:

$$\nabla^2\phi_x + \mu\frac{\partial}{\partial x}\left(\frac{\partial}{\partial x}\phi_x + \frac{\partial}{\partial y}\phi_y\right) = \omega_1^2 \phi_x^* \qquad (1147)$$

$$\nabla^2\phi_y + \mu\frac{\partial}{\partial y}\left(\frac{\partial}{\partial x}\phi_x + \frac{\partial}{\partial y}\phi_y\right) = \omega_1^2 \phi_y^* \qquad (1148)$$

In the case where the solutions $\phi_x$, $\phi_y$ are selected from a function system of the following eq. (1106) satisfying the following eq. (1105), the solutions $\phi_x$, $\phi_y$ have to satisfy the following eq. (1120):
[Formula 496]

$$\left(\nabla^2 + \omega_1^2\right)\phi = 0 \qquad (1105) \text{ (Aforementioned)}$$

$$\phi(r,\theta) \equiv \begin{pmatrix}\sin(m\theta)\\ \cos(m\theta)\end{pmatrix} \times \begin{pmatrix}J_m(\omega_1 r)\\ Y_m(\omega_1 r)\end{pmatrix} \qquad (1106) \text{ (Aforementioned)}$$

$$\frac{\partial}{\partial x}\phi_x + \frac{\partial}{\partial y}\phi_y = 0 \qquad (1120) \text{ (Aforementioned)}$$

Therefore, eqs. (1147), (1148) are transformed to:

$$\nabla^2\phi_x = \omega_1^2\phi_x^* = -\omega_1^2\phi_x \qquad (1149)$$

$$\nabla^2\phi_y = \omega_1^2\phi_y^* = -\omega_1^2\phi_y \qquad (1150)$$

From eqs.(1149) and (1150), we obtain:

$$\phi_x^* = -\phi_x \quad (1151)$$

$$\phi_y^* = -\phi_y \quad (1152)$$

Substituting these into the primal simultaneous differential equations (1087), (1088), we obtain:
[Formula 497]

$$\left\{(1+\mu)\frac{\partial^2}{\partial x^2} + \frac{\partial^2}{\partial y^2}\right\}\phi_x + \mu\frac{\partial^2}{\partial x \partial y}\phi_y = -\lambda w \phi_x \quad (1153)$$

$$\mu\frac{\partial^2}{\partial x \partial y}\phi_x + \left\{\frac{\partial^2}{\partial x^2} + (1+\mu)\frac{\partial^2}{\partial y^2}\right\}\phi_y = -\lambda w \phi_y \quad (1154)$$

This indicates that a combination of $\phi_x$, $\phi_y$ that is formed with a function system of eq. (1106) and satisfies eq. (1120) satisfies these simultaneous differential equations.

In the case where the solutions $\phi_x$, $\phi_y$ are selected from a function system of the following eq. (1108) satisfying the following eq. (1107), the solutions $\phi_x$, $\phi_y$ have to satisfy the following eq. (1120):
[Formula 498]

$$\left(\nabla^2 - \omega_1^2\right)\phi = 0 \quad (1107) \text{ (Aforementioned)}$$

$$\phi(r,\theta) \equiv \begin{pmatrix}\sin(m\theta)\\ \cos(m\theta)\end{pmatrix} \times \begin{pmatrix} I_m(\omega_1 r)\\ K_m(\omega_1 r)\end{pmatrix} \quad (1108) \text{ (Aforementioned)}$$

$$\frac{\partial}{\partial x}\phi_x + \frac{\partial}{\partial y}\phi_y = 0 \quad (1120) \text{ (Aforementioned)}$$

Therefore, eqs. (1147), (1148) are transformed to:

$$\nabla^2\phi_x = \omega_1^2\phi_x^* = \omega_1^2\phi_x \quad (1155)$$

$$\nabla^2\phi_y = \omega_1^2\phi_y^* = \omega_1^2\phi_y \quad (1156)$$

From eqs.(1155) and (1156), we obtain:
[Formula 499]

$$\phi_x^* = \phi_x \quad (1157)$$

$$\phi_y^* = \phi_y \quad (1158)$$

Substituting these into the primal simultaneous differential equations (1087), (1088), we obtain:

$$\left\{(1+\mu)\frac{\partial^2}{\partial x^2}+\frac{\partial^2}{\partial y^2}\right\}\phi_x+\mu\frac{\partial^2}{\partial x\partial y}\phi_y=+\lambda w\phi_x \quad (1159)$$

$$\mu\frac{\partial^2}{\partial x\partial y}\phi_x+\left\{\frac{\partial^2}{\partial x^2}+(1+\mu)\frac{\partial^2}{\partial y^2}\right\}\phi_y=+\lambda w\phi_y \quad (1160)$$

This indicates that a combination of $\phi_x$, $\phi_y$ that is formed with a function system of eq. (1108) and satisfies eq. (1120) satisfies these simultaneous differential equations.

On the other hand, eqs. (1087), (1088) of the primal simultaneous differential equations can be transformed also to:

[Formula 500]

$$\nabla^2\phi_x-\frac{\mu}{1+\mu}\frac{\partial}{\partial y}\left(\frac{\partial}{\partial y}\phi_x-\frac{\partial}{\partial x}\phi_y\right)=\frac{\lambda w}{1+\mu}\phi_x^* \quad (1161)$$

$$\nabla^2\phi_y+\frac{\mu}{1+\mu}\frac{\partial}{\partial x}\left(\frac{\partial}{\partial y}\phi_x-\frac{\partial}{\partial x}\phi_y\right)=\frac{\lambda w}{1+\mu}\phi_y^* \quad (1162)$$

Using $\omega_2$ of eq. (1100), we obtain:

$$\nabla^2\phi_x-\frac{\mu}{1+\mu}\frac{\partial}{\partial y}\left(\frac{\partial}{\partial y}\phi_x-\frac{\partial}{\partial x}\phi_y\right)=\omega_2^2\phi_x^* \quad (1163)$$

$$\nabla^2\phi_y+\frac{\mu}{1+\mu}\frac{\partial}{\partial x}\left(\frac{\partial}{\partial y}\phi_x-\frac{\partial}{\partial x}\phi_y\right)=\omega_2^2\phi_y^* \quad (1164)$$

[Formula 501]

In the case where the solutions $\phi_x,\phi_y$ are selected from a function system of the following eq. (1110) satisfying the following eq. (1109), the solutions $\phi_x,\phi_y$ have to satisfy the following eq. (1128):

$$(\nabla^2+\omega_2^2)\phi=0 \quad (1109)\ \text{(Aforementioned)}$$

$$\phi(r,\theta)\equiv\begin{pmatrix}\sin(m\theta)\\ \cos(m\theta)\end{pmatrix}\times\begin{pmatrix}J_m(\omega_2 r)\\ Y_m(\omega_2 r)\end{pmatrix} \quad (1110)\ \text{(Aforementioned)}$$

$$\frac{\partial}{\partial y}\phi_x-\frac{\partial}{\partial x}\phi_y=0 \quad (1128)\ \text{(Aforementioned)}$$

Therefore, eqs. (1163), (1164) are transformed to:

$$\nabla^2\phi_x=\omega_2^2\phi_x^*=-\omega_2^2\phi_x \quad (1165)$$

$$\nabla^2\phi_y = \omega_2^2\phi_y^* = -\omega_2^2\phi_y \quad (1166)$$

[Formula 502]

From eqs.(1165) and (1166), we obtain:

$$\phi_x^* = -\phi_x \quad (1167)$$

$$\phi_y^* = -\phi_y \quad (1168)$$

Substituting these into the primal simultaneous differential equations (1087), (1088), we obtain:

$$\left\{(1+\mu)\frac{\partial^2}{\partial x^2} + \frac{\partial^2}{\partial y^2}\right\}\phi_x + \mu\frac{\partial^2}{\partial x \partial y}\phi_y = -\lambda w \phi_x \quad (1169)$$

$$\mu\frac{\partial^2}{\partial x \partial y}\phi_x + \left\{\frac{\partial^2}{\partial x^2} + (1+\mu)\frac{\partial^2}{\partial y^2}\right\}\phi_y = -\lambda w \phi_y \quad (1170)$$

This indicates that a combination of $\phi_x$, $\phi_y$ that is formed with a function system of eq. (1110) and satisfies eq. (1128) satisfies these simultaneous differential equations.

[Formula 503]

In the case where the solutions $\phi_x, \phi_y$ are selected from a function system of the following eq. (1112) satisfying the following eq. (1111), the solutions $\phi_x, \phi_y$ have to satisfy the following eq. (1128):

$$\left(\nabla^2 - \omega_2^2\right)\phi = 0 \quad (1111) \text{ (Aforementioned)}$$

$$\phi(r,\theta) \equiv \begin{pmatrix}\sin(m\theta)\\ \cos(m\theta)\end{pmatrix} \times \begin{pmatrix} I_m(\omega_2 r)\\ K_m(\omega_2 r)\end{pmatrix} \quad (1112) \text{ (Aforementioned)}$$

$$\frac{\partial}{\partial y}\phi_x - \frac{\partial}{\partial x}\phi_y = 0 \quad (1128) \text{ (Aforementioned)}$$

Therefore, eqs. (1163), (1164) are transformed to:

[Formula 504]

$$\nabla^2\phi_x = \omega_2^2\phi_x^* = \omega_2^2\phi_x \quad (1171)$$

$$\nabla^2\phi_y = \omega_2^2\phi_y^* = \omega_2^2\phi_y \quad (1172)$$

From eqs.(1171) and (1172), we obtain:

$$\phi_x^* = \phi_x \qquad (1173)$$

$$\phi_y^* = \phi_y \qquad (1174)$$

Substituting these into the primal simultaneous differential equations (1087), (1088), we obtain:

$$\left\{(1+\mu)\frac{\partial^2}{\partial x^2} + \frac{\partial^2}{\partial y^2}\right\}\phi_x + \mu\frac{\partial^2}{\partial x \partial y}\phi_y = +\lambda w \phi_x \qquad (1175)$$

$$\mu\frac{\partial^2}{\partial x \partial y}\phi_x + \left\{\frac{\partial^2}{\partial x^2} + (1+\mu)\frac{\partial^2}{\partial y^2}\right\}\phi_y = +\lambda w \phi_y \qquad (1176)$$

This indicates that a combination of $\phi_x$, $\phi_y$ that is formed with a function system of eq. (1112) and satisfies eq. (1128) satisfies these simultaneous differential equations.

11. 4. 19 Combination of solutions satisfying dual simultaneous differential equations

Transforming eqs. (1089), (1090) of the dual simultaneous differential equations, we obtain:
[Formula 505]

$$\nabla^2\phi_x^* + \mu\frac{\partial}{\partial x}\left(\frac{\partial}{\partial x}\phi_x^* + \frac{\partial}{\partial y}\phi_y^*\right) = \lambda w \phi_x \qquad (1177)$$

$$\nabla^2\phi_y^* + \mu\frac{\partial}{\partial y}\left(\frac{\partial}{\partial x}\phi_x^* + \frac{\partial}{\partial y}\phi_y^*\right) = \lambda w \phi_y \qquad (1178)$$

Using $\omega_1$ of eq. (1099), we obtain:

$$\nabla^2\phi_x^* + \mu\frac{\partial}{\partial x}\left(\frac{\partial}{\partial x}\phi_x^* + \frac{\partial}{\partial y}\phi_y^*\right) = \omega_1^2 \phi_x \qquad (1179)$$

[Formula 506]

$$\nabla^2\phi_y^* + \mu\frac{\partial}{\partial y}\left(\frac{\partial}{\partial x}\phi_x^* + \frac{\partial}{\partial y}\phi_y^*\right) = \omega_1^2 \phi_y \qquad (1180)$$

In the case where the solutions $\phi_x^*$, $\phi_y^*$ are selected from a function system of the following eq. (1106) satisfying the following eq. (1105), the solutions $\phi_x^*$, $\phi_y^*$ have to satisfy the following eq. (1136):

$$(\nabla^2 + \omega_1^2)\phi = 0 \qquad (1105) \text{ (Aforementioned)}$$

$$\phi(r,\theta) \equiv \begin{pmatrix} \sin(m\theta) \\ \cos(m\theta) \end{pmatrix} \times \begin{pmatrix} J_m(\omega_1 r) \\ Y_m(\omega_1 r) \end{pmatrix} \quad (1106) \text{ (Aforementioned)}$$

$$\frac{\partial}{\partial x}\phi_x^* + \frac{\partial}{\partial y}\phi_y^* = 0 \quad (1136) \text{ (Aforementioned)}$$

Therefore, eqs. (1179), (1180) are transformed to:
[Formula 507]

$$\nabla^2 \phi_x^* = \omega_1^2 \phi_x = -\omega_1^2 \phi_x^* \quad (1181)$$

$$\nabla^2 \phi_y^* = \omega_1^2 \phi_y = -\omega_1^2 \phi_y^* \quad (1182)$$

From eqs.(1181) and (1182), we obtain:

$$\phi_x = -\phi_x^* \quad (1183)$$

$$\phi_y = -\phi_y^* \quad (1184)$$

Substituting these into the dual simultaneous differential equations (1089), (1090), we obtain:

$$\left\{(1+\mu)\frac{\partial^2}{\partial x^2} + \frac{\partial^2}{\partial y^2}\right\}\phi_x^* + \mu\frac{\partial^2}{\partial x \partial y}\phi_y^* = -\lambda w \phi_x^* \quad (1185)$$

$$\mu\frac{\partial^2}{\partial x \partial y}\phi_x^* + \left\{\frac{\partial^2}{\partial x^2} + (1+\mu)\frac{\partial^2}{\partial y^2}\right\}\phi_y^* = -\lambda w \phi_y^* \quad (1186)$$

This indicates that a combination of $\phi_x^*$, $\phi_y^*$ that is formed with a function system of eq. (1106) and satisfies eq. (1136) satisfies these simultaneous differential equations.

In the case where the solutions $\phi_x^*$, $\phi_y^*$ are selected from a function system of the following eq. (1108) satisfying the following eq. (1107), the solutions $\phi_x^*$, $\phi_y^*$ have to satisfy the following eq. (1136):
[Formula 508]

$$\left(\nabla^2 - \omega_1^2\right)\phi = 0 \quad (1107) \text{ (Aforementioned)}$$

$$\phi(r,\theta) \equiv \begin{pmatrix} \sin(m\theta) \\ \cos(m\theta) \end{pmatrix} \times \begin{pmatrix} I_m(\omega_1 r) \\ K_m(\omega_1 r) \end{pmatrix} \quad (1108) \text{ (Aforementioned)}$$

$$\frac{\partial}{\partial x}\phi_x^* + \frac{\partial}{\partial y}\phi_y^* = 0 \quad (1136) \text{ (Aforementioned)}$$

Therefore, eqs. (1179), (1180) are transformed to:

$$\nabla^2\phi_x^* = \omega_1^2\phi_x = \omega_1^2\phi_x^* \quad (1187)$$

$$\nabla^2\phi_y^* = \omega_1^2\phi_y = \omega_1^2\phi_y^* \quad (1188)$$

From eqs.(1187) and (1188), we obtain:

$$\phi_x = \phi_x^* \quad (1189)$$

$$\phi_y = \phi_y^* \quad (1190)$$

Substituting these into the dual simultaneous differential equations (1089), (1090), we obtain:
[Formula 509]

$$\left\{(1+\mu)\frac{\partial^2}{\partial x^2} + \frac{\partial^2}{\partial y^2}\right\}\phi_x^* + \mu\frac{\partial^2}{\partial x \partial y}\phi_y^* = +\lambda w \phi_x^* \quad (1191)$$

$$\mu\frac{\partial^2}{\partial x \partial y}\phi_x^* + \left\{\frac{\partial^2}{\partial x^2} + (1+\mu)\frac{\partial^2}{\partial y^2}\right\}\phi_y^* = +\lambda w \phi_y^* \quad (1192)$$

This indicates that a combination of $\phi_x$*, $\phi_y$* that is formed with a function system of eq. (1108) and satisfies eq. (1136) satisfies these simultaneous differential equations.

On the other hand, eqs. (1089), (1090) of the dual simultaneous differential equations can be transformed to:
[Formula 510]

$$\nabla^2\phi_x^* - \frac{\mu}{1+\mu}\frac{\partial}{\partial y}\left(\frac{\partial}{\partial y}\phi_x^* - \frac{\partial}{\partial x}\phi_y^*\right) = \frac{\lambda w}{1+\mu}\phi_x \quad (1193)$$

$$\nabla^2\phi_y^* + \frac{\mu}{1+\mu}\frac{\partial}{\partial x}\left(\frac{\partial}{\partial y}\phi_x^* - \frac{\partial}{\partial x}\phi_y^*\right) = \frac{\lambda w}{1+\mu}\phi_y \quad (1194)$$

Using $\omega_2$ of eq. (1100), we obtain:
[Formula 511]

$$\nabla^2\phi_x^* - \frac{\mu}{1+\mu}\frac{\partial}{\partial y}\left(\frac{\partial}{\partial y}\phi_x^* - \frac{\partial}{\partial x}\phi_y^*\right) = \omega_2^2\phi_x \quad (1195)$$

$$\nabla^2\phi_y^* + \frac{\mu}{1+\mu}\frac{\partial}{\partial x}\left(\frac{\partial}{\partial y}\phi_x^* - \frac{\partial}{\partial x}\phi_y^*\right) = \omega_2^2\phi_y \quad (1196)$$

In the case where the solutions $\phi_x^*, \phi_y^*$ are selected from a function system of the following eq. (1110) satisfying the following

eq. (1109), the solutions $\phi_x^*, \phi_y^*$ have to satisfy the following eq. (1144):

$$\left(\nabla^2 + \omega_2^2\right)\phi = 0 \qquad (1109) \text{ (Aforementioned)}$$

[Formula 512]

$$\phi(r,\theta) \equiv \begin{pmatrix} \sin(m\theta) \\ \cos(m\theta) \end{pmatrix} \times \begin{pmatrix} J_m(\omega_2 r) \\ Y_m(\omega_2 r) \end{pmatrix} \qquad (1110) \text{ (Aforementioned)}$$

$$\frac{\partial}{\partial y}\phi_x^* - \frac{\partial}{\partial x}\phi_y^* = 0 \qquad (1144) \text{ (Aforementioned)}$$

Therefore, eqs. (1195), (1196) are transformed to:

$$\nabla^2 \phi_x^* = \omega_2^2 \phi_x = -\omega_2^2 \phi_x^* \qquad (1197)$$

$$\nabla^2 \phi_y^* = \omega_2^2 \phi_y = -\omega_2^2 \phi_y^* \qquad (1198)$$

From eqs.(1197) and (1198), we obtain:

$$\phi_x = -\phi_x^* \qquad (1199)$$

$$\phi_y = -\phi_y^* \qquad (1200)$$

Substituting these into the dual simultaneous differential equations (1089), (1090), we obtain:
[Formula 513]

$$\left\{(1+\mu)\frac{\partial^2}{\partial x^2} + \frac{\partial^2}{\partial y^2}\right\}\phi_x^* + \mu\frac{\partial^2}{\partial x \partial y}\phi_y^* = -\lambda w \phi_x^* \qquad (1201)$$

$$\mu\frac{\partial^2}{\partial x \partial y}\phi_x^* + \left\{\frac{\partial^2}{\partial x^2} + (1+\mu)\frac{\partial^2}{\partial y^2}\right\}\phi_y^* = -\lambda w \phi_y^* \qquad (1202)$$

This indicates that a combination of $\phi_x^*$, $\phi_y^*$ that is formed with a function system of eq. (1110) and satisfies eq. (1144) satisfies these simultaneous differential equations.

In the case where the solutions $\phi_x^*$, $\phi_y^*$ are selected from a function system of the following eq. (1112) satisfying the following eq. (1111), the solutions $\phi_x^*$, $\phi_y^*$ have to satisfy the following eq. (1144):
[Formula 514]

$$\left(\nabla^2 - \omega_2^2\right)\phi = 0 \qquad (1111) \text{ (Aforementioned)}$$

$$\phi(r,\theta) \equiv \begin{pmatrix} \sin(m\theta) \\ \cos(m\theta) \end{pmatrix} \times \begin{pmatrix} I_m(\omega_2 r) \\ K_m(\omega_2 r) \end{pmatrix} \qquad (1112) \text{ (Aforementioned)}$$

$$\frac{\partial}{\partial y}\phi_x^* - \frac{\partial}{\partial x}\phi_y^* = 0 \qquad (1144) \text{ (Aforementioned)}$$

Therefore, eqs. (1195), (1196) are transformed to:
[Formula 515]

$$\nabla^2 \phi_x^* = \omega_2^2 \phi_x = \omega_2^2 \phi_x^* \qquad (1203)$$

$$\nabla^2 \phi_y^* = \omega_2^2 \phi_y = \omega_2^2 \phi_y^* \qquad (1204)$$

From eqs.(1203) and (1204), we obtain:

$$\phi_x = \phi_x^* \qquad (1205)$$

$$\phi_y = \phi_y^* \qquad (1206)$$

Substituting these into the dual simultaneous differential equations (1089), (1090), we obtain:

$$\left\{(1+\mu)\frac{\partial^2}{\partial x^2} + \frac{\partial^2}{\partial y^2}\right\}\phi_x^* + \mu\frac{\partial^2}{\partial x \partial y}\phi_y^* = +\lambda w \phi_x^* \qquad (1207)$$

$$\mu\frac{\partial^2}{\partial x \partial y}\phi_x^* + \left\{\frac{\partial^2}{\partial x^2} + (1+\mu)\frac{\partial^2}{\partial y^2}\right\}\phi_y^* = +\lambda w \phi_y^* \qquad (1208)$$

This indicates that a combination of $\phi_x^*$, $\phi_y^*$ that is formed with a function system of eq. (1112) and satisfies eq. (1144) satisfies these simultaneous differential equations.

11. 4. 20 Appearance of solution function

In using the solutions of eqs. (1106), (1108), (1110), and (1112), the functions are classified depending on the integer m, into a category with the integer m of an odd number and a category with the integer m of an even number. Therefore let n be an integer, and the following is given:
[Formula 516]

$$m \equiv \begin{cases} 2n & \text{even number} \\ 2n+1 & \text{odd number} \end{cases} \qquad (1209)$$

Then, the formats of the functions are classified into the following four categories:
(1) If a function $\phi_{ee}$ is defined as

$$\phi_{ee}(\theta) \equiv \cos 2n\theta \;, \qquad (1210)$$

the following equations are established:

$$\phi_{ee}(\theta) = \phi_{ee}(-\theta), \qquad \phi_{ee}(\theta) = \phi_{ee}(\pi - \theta) \quad (1211)$$

Therefore, the function becomes a function that is vertically symmetric (symmetric with respect to the x axis), and horizontally symmetric (symmetric with respect to the y axis). In other words, the function is even in the x direction, and is even in the y direction. Thus, the index of "ee", which is an acronym of "even" and "even", is added.

(2) If a function $\phi_{oe}$ is defined as

[Formula 517]

$$\phi_{oe}(\theta) \equiv \cos(2n+1)\theta, \qquad (1212)$$

the following equations are established:

$$\phi_{oe}(\theta) = \phi_{oe}(-\theta), \qquad \phi_{oe}(\theta) = -\phi_{oe}(\pi - \theta) \quad (1213)$$

Therefore, the function becomes a function that is vertically symmetric (symmetric with respect to the x axis), and horizontally anti-symmetric (anti-symmetric with respect to the y axis). In other words, the function is odd in the x direction, and is even in the y direction. Thus, the index of "oe", which is an acronym of "odd" and "even", is added.

(3) If a function $\phi_{oo}$ is defined as

[Formula 518]

$$\phi_{oo}(\theta) \equiv \sin 2n\theta, \qquad (1214)$$

the following equations are established:

$$\phi_{oo}(\theta) = -\phi_{oo}(-\theta), \qquad \phi_{oo}(\theta) = -\phi_{oo}(\pi - \theta) \quad (1215)$$

Therefore, the function becomes a function that is vertically anti-symmetric (anti-symmetric with respect to the x axis), and horizontally anti-symmetric (anti-symmetric with respect to the y axis). In other words, the function is odd in the x direction, and is odd in the y direction. Thus, the index of "oo", which is an acronym of "odd" and "odd", is added.

(4) If a function $\phi_{eo}$ is defined as,

[Formula 519]

$$\phi_{eo}(\theta) \equiv \sin(2n+1)\theta, \qquad (1216)$$

the following equations are established:

$$\phi_{eo}(\theta) = -\phi_{eo}(-\theta), \qquad \phi_{eo}(\theta) = \phi_{eo}(\pi - \theta) \quad (1217)$$

Therefore, the function becomes a function that is vertical anti-symmetric (anti-symmetric with respect to the x axis) and horizontally symmetric (symmetric with respect to the y axis). In other words, the function is even in the x direction, and is odd in the y direction. Thus, the index of "eo", which is an acronym of "even" and "odd", is added.

Next, the following typical deformation modes occur, depending on the above-described combination of the functions having a displacement in the x direction as $\phi_x$, and a displacement in the y direction as $\phi_y$:

[SA]

When the displacement in the x direction is expressed by the function $\phi_{xee}$ in the form of eq. (1210) and the displacement in the y direction is expressed by the function $\phi_{yoo}$ in the form of eq. (1214), the deformation is symmetric with respect to the x axis and asymmetric with respect to the y axis, as shown in FIG. 43. Such a deformation is called

a "mode SA", "SA" being an acronym of "symmetric" and "asymmetric". The combination $\phi_{SA}$ of functions that expresses this deformation is defined as follows, with an index of "SA":
[Formula 520]

$$\phi_{SA} \equiv \begin{cases} \phi_{xee} \\ \phi_{yoo} \end{cases} \quad (1218)$$

[AS]

When the displacement in the x direction is expressed by function $\phi_{xoo}$ in the form of eq. (1214) and the displacement in the y direction is expressed by the function $\phi_{yee}$ in the form of eq. (1210), the deformation is asymmetric with respect to the x axis and symmetric with respect to the y axis, as shown in FIG. 44. Such a deformation is called a "mode AS", "AS" being an acronym of "asymmetric" and "symmetric". The combination $\varphi_{AS}$ of functions that expresses this deformation is defined as follows, with an index of "AS":
[Formula 521]

$$\phi_{AS} \equiv \begin{cases} \phi_{xoo} \\ \phi_{yee} \end{cases} \quad (1219)$$

[SS]

When the displacement in the x direction is expressed by the function $\phi_{xoe}$ in the form of eq. (1212), and the displacement in the y direction is expressed by the function $\phi_{yeo}$ in the form of eq. (1216), the deformation is symmetric with respect to the x axis and symmetric with respect to the y axis, as shown in FIG. 45. Such a deformation is called a "mode SS", "SS" being an acronym of "symmetric" and "symmetric". The combination $\phi_{ss}$ of functions that expresses this deformation is defined as follows, with an index of "SS":
[Formula 522]

$$\phi_{SS} \equiv \begin{cases} \phi_{xoe} \\ \phi_{yeo} \end{cases} \quad (1220)$$

[AA]

When the displacement in the x direction is expressed by the function $\phi_{xeo}$ in the form of eq. (1216) and the displacement in the y direction is expressed by the function $\phi y_{eo}$ in the form of eq. (1212), the deformation is asymmetric with respect to the x axis and asymmetric with respect to the y axis, as shown in FIG. 46. Such a deformation is called a "mode AA", "AA" being an acronym of "asymmetric" and "asymmetric". The combination $\phi_{AA}$ of functions that expresses this deformation is defined as follows, with an index of "AA":
[Formula 523]

$$\phi_{AA} \equiv \begin{cases} \phi_{xeo} \\ \phi_{yoe} \end{cases} \quad (1221)$$

11. 4. 21 Solution function using Bessel functions of the first kind

Eigenvalues $\omega_1$, $\omega_2$ are collectively represented as $\omega$, and solutions using Bessel functions of the first kind $J_m$ of eqs. (1106), (1110) are expressed as follows according to eq. (1209):
[Formula 524]

$$\phi_{Jee}(r,\theta,n,\omega) \equiv \cos 2n\theta \cdot J_{2n}(\omega r) \quad (1222)$$

$$\phi_{Joo}(r,\theta,n,\omega) \equiv \sin 2n\theta \cdot J_{2n}(\omega r) \quad (1223)$$

$$\phi_{Joe}(r,\theta,n,\omega) \equiv \cos(2n+1)\theta \cdot J_{2n+1}(\omega r) \quad (1224)$$

$$\phi_{Jeo}(r,\theta,n,\omega) \equiv \sin(2n+1)\theta \cdot J_{2n+1}(\omega r) \quad (1225)$$

Master variables of these functions are r and θ, while n and ω represent parameters. As the equation is long if all of these variables are described, only variables that should be noticed are described hereinafter. For example, in the case where n changes on both sides of an equation but r, θ, ω do not change, the argument is expressed as (n). Here, derived functions as follows are obtained:
[Formula 525]

$$\frac{\partial}{\partial x}\phi_{Jee}(n) = \frac{\omega}{2}\left\{\phi_{Joe}(n-1) - \phi_{Joe}(n)\right\} \quad (1226)$$

$$\frac{\partial}{\partial x}\phi_{Joo}(n) = \frac{\omega}{2}\left\{\phi_{Jeo}(n-1) - \phi_{Jeo}(n)\right\} \quad (1227)$$

$$\frac{\partial}{\partial x}\phi_{Jeo}(n) = \frac{\omega}{2}\left\{\phi_{Joo}(n) - \phi_{Joo}(n+1)\right\} \quad (1228)$$

$$\frac{\partial}{\partial x}\phi_{Joe}(n) = \frac{\omega}{2}\left\{\phi_{Jee}(n) - \phi_{Jee}(n+1)\right\} \quad (1229)$$

and

$$\frac{\partial}{\partial y}\phi_{Jee}(n) = -\frac{\omega}{2}\left\{\phi_{Jeo}(n-1) + \phi_{Jeo}(n)\right\} \quad (1230)$$

$$\frac{\partial}{\partial y}\phi_{Joo}(n) = \frac{\omega}{2}\left\{\phi_{Joe}(n-1) + \phi_{Joe}(n)\right\} \quad (1231)$$

$$\frac{\partial}{\partial y}\phi_{Jeo}(n) = \frac{\omega}{2}\left\{\phi_{Jee}(n) + \phi_{Jee}(n+1)\right\} \quad (1232)$$

$$\frac{\partial}{\partial y}\phi_{Joe}(n) = -\frac{\omega}{2}\left\{\phi_{Joo}(n) + \phi_{Joo}(n+1)\right\} \quad (1233)$$

Further, the following relationship equations are derived from eqs. (1226) to (1229):
[Formula 526]

$$\frac{\partial}{\partial x}\left\{\phi_{Jee}(n)+\phi_{Jee}(n+1)\right\}=\frac{\omega}{2}\left\{\phi_{Joe}(n-1)-\phi_{Joe}(n+1)\right\} \quad (1234)$$

$$\frac{\partial}{\partial x}\left\{\phi_{Joo}(n)+\phi_{Joo}(n+1)\right\}=\frac{\omega}{2}\left\{\phi_{Jeo}(n-1)-\phi_{Jeo}(n+1)\right\} \quad (1235)$$

$$\frac{\partial}{\partial x}\left\{\phi_{Jeo}(n)+\phi_{Jeo}(n+1)\right\}=\frac{\omega}{2}\left\{\phi_{Joo}(n)-\phi_{Joo}(n+2)\right\} \quad (1236)$$

$$\frac{\partial}{\partial x}\left\{\phi_{Joe}(n)+\phi_{Joe}(n+1)\right\}=\frac{\omega}{2}\left\{\phi_{Jee}(n)-\phi_{Jee}(n+2)\right\} \quad (1237)$$

The following equations are derived from eqs. (1230) to (1233):

$$\frac{\partial}{\partial y}\left\{\phi_{Jee}(n)-\phi_{Jee}(n+1)\right\}=-\frac{\omega}{2}\left\{\phi_{Jeo}(n-1)-\phi_{Jeo}(n+1)\right\} \quad (1238)$$

[Formula 527]

$$\frac{\partial}{\partial y}\left\{\phi_{Joo}(n)-\phi_{Joo}(n+1)\right\}=\frac{\omega}{2}\left\{\phi_{Joe}(n-1)-\phi_{Joe}(n+1)\right\} \quad (1239)$$

$$\frac{\partial}{\partial y}\left\{\phi_{Jeo}(n)-\phi_{Jeo}(n+1)\right\}=\frac{\omega}{2}\left\{\phi_{Jee}(n)-\phi_{Jee}(n+2)\right\} \quad (1240)$$

$$\frac{\partial}{\partial y}\left\{\phi_{Joe}(n)-\phi_{Joe}(n+1)\right\}=-\frac{\omega}{2}\left\{\phi_{Joo}(n)-\phi_{Joo}(n+2)\right\} \quad (1241)$$

Here, with focus on the combinations of eqs. (1234) and (1239), eqs. (1235) and (1238), eqs.(1237) and (1240), and eqs. (1236) and (1241), the following four combinations are defined:
[Formula 528]

$$\phi_{J1SA}(n)\equiv\begin{cases}\phi_x\equiv\phi_{Jee}(n)+\phi_{Jee}(n+1)\\ \phi_y\equiv-\phi_{Joo}(n)+\phi_{Joo}(n+1)\end{cases} \quad (1242)$$

$$\phi_{J1AS}(n)\equiv\begin{cases}\phi_x\equiv\phi_{Joo}(n)+\phi_{Joo}(n+1)\\ \phi_y\equiv\phi_{Jee}(n)-\phi_{Jee}(n+1)\end{cases} \quad (1243)$$

$$\phi_{J1SS}(n)\equiv\begin{cases}\phi_x\equiv\phi_{Joe}(n)+\phi_{Joe}(n+1)\\ \phi_y\equiv-\phi_{Jeo}(n)+\phi_{Jeo}(n+1)\end{cases} \quad (1244)$$

$$\phi_{J1AA}(n) \equiv \begin{cases} \phi_x \equiv \phi_{Jeo}(n) + \phi_{Jeo}(n+1) \\ \phi_y \equiv \phi_{Joe}(n) - \phi_{Joe}(n+1) \end{cases} \quad (1245)$$

Then, we find that the following eq. (1120) is established for each of the combinations:
[Formula 529]

$$\frac{\partial}{\partial x}\phi_x + \frac{\partial}{\partial y}\phi_y = 0 \quad (1120) \text{ (Aforementioned)}$$

Therefore, we can see that the combinations of eqs. (1242) to (1245) in which $\omega$ is replaced with $\omega_1$ of eq. (1099) satisfy eqs. (1092) and (1093) of the primal simultaneous eigenvalue problem. In other words, $\phi_x$, $\phi_y$ are primal eigenfunctions. Further, according to eqs. (1151), (1152), sign-inverted functions of $\phi_x$, $\phi_y$ are dual eigenfunctions $\phi_x^*$, $\phi_y^*$. Thus, four sets of the functions $\phi_x$, $\phi_y$, $\phi_x^*$, $\phi_y^*$ that satisfy the primal simultaneous differential equations (1087) and (1088) are obtained.

With use of eqs. (74) to (76), stresses can be calculated by eqs. (1242) to (1245) as follows:
[Formula 530]

$$\sigma_{J1SA}(n) \equiv \begin{cases} \sigma_x \equiv G\omega\{\phi_{Joe}(n-1) - \phi_{Joe}(n+1)\} \\ \sigma_y \equiv -\sigma_x \\ \tau_{xy} \equiv -G\omega\{\phi_{Jeo}(n-1) + \phi_{Jeo}(n+1)\} \end{cases} \quad (1246)$$

$$\sigma_{J1AS}(n) \equiv \begin{cases} \sigma_x \equiv G\omega\{\phi_{Jeo}(n-1) - \phi_{Jeo}(n+1)\} \\ \sigma_y \equiv -\sigma_x \\ \tau_{xy} \equiv G\omega\{\phi_{Joe}(n-1) + \phi_{Joe}(n+1)\} \end{cases} \quad (1247)$$

$$\sigma_{J1SS}(n) \equiv \begin{cases} \sigma_x \equiv G\omega\{\phi_{Jee}(n) - \phi_{Jee}(n+2)\} \\ \sigma_y \equiv -\sigma_x \\ \tau_{xy} \equiv -G\omega\{\phi_{Joo}(n) + \phi_{Joo}(n+2)\} \end{cases} \quad (1248)$$

$$\sigma_{J1AA}(n) \equiv \begin{cases} \sigma_x \equiv G\omega\{\phi_{Joo}(n) - \phi_{Joo}(n+2)\} \\ \sigma_y \equiv -\sigma_x \\ \tau_{xy} \equiv G\omega\{\phi_{Jee}(n) + \phi_{Jee}(n+2)\} \end{cases} \quad (1249)$$

In this way, the combinations in which $\omega$ is replaced with $\omega_1$ of eq. (1099) express stresses $\sigma_x$, $\sigma_y$, $\tau_{xy}$ based on the primal eigenfunctions. It should be noted that according to eqs. (82) to (84) and eqs. (1151), (1152), $\sigma_x$, $\sigma_y$, $\tau_{xy}$ having inverted signs represent stresses $\sigma_x^*$, $\sigma_y^*$, $\tau_{xy}^*$ based on the dual eigenfunctions. Thus, four sets of the functions expressing stresses $\sigma_x$, $\sigma_y$, $\tau_{xy}$, $\sigma_x^*$, $\sigma_y^*$, $\tau_{xy}^*$ are obtained.

The four sets are defined again below:
[Formula 531]

$$J_{1SA}(n) \equiv \begin{cases} \phi_x \equiv \phi_{Jee}(n,\omega_1) + \phi_{Jee}(n+1,\omega_1) \\ \phi_y \equiv -\phi_{Joo}(n,\omega_1) + \phi_{Joo}(n+1,\omega_1) \\ \sigma_x \equiv G\omega_1 \left\{\phi_{Joe}(n-1,\omega_1) - \phi_{Joe}(n+1,\omega_1)\right\} \\ \sigma_y \equiv -\sigma_x \\ \tau_{xy} \equiv -G\omega_1 \left\{\phi_{Jeo}(n-1,\omega_1) + \phi_{Jeo}(n+1,\omega_1)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1250)$$

$$J_{1AS}(n) \equiv \begin{cases} \phi_x \equiv \phi_{Joo}(n,\omega_1) + \phi_{Joo}(n+1,\omega_1) \\ \phi_y \equiv \phi_{Jee}(n,\omega_1) - \phi_{Jee}(n+1,\omega_1) \\ \sigma_x \equiv G\omega_1 \left\{\phi_{Jeo}(n-1,\omega_1) - \phi_{Jeo}(n+1,\omega_1)\right\} \\ \sigma_y \equiv -\sigma_x \\ \tau_{xy} \equiv G\omega_1 \left\{\phi_{Joe}(n-1,\omega_1) + \phi_{Joe}(n+1,\omega_1)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1251)$$

$$J_{1SS}(n) \equiv \begin{cases} \phi_x \equiv \phi_{Joe}(n,\omega_1) + \phi_{Joe}(n+1,\omega_1) \\ \phi_y \equiv -\phi_{Jeo}(n,\omega_1) + \phi_{Jeo}(n+1,\omega_1) \\ \sigma_x \equiv G\omega_1 \left\{\phi_{Jee}(n,\omega_1) - \phi_{Jee}(n+2,\omega_1)\right\} \\ \sigma_y \equiv -\sigma_x \\ \tau_{xy} \equiv -G\omega_1 \left\{\phi_{Joo}(n,\omega_1) + \phi_{Joo}(n+2,\omega_1)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1252)$$

$$J_{1AA}(n) \equiv \begin{cases} \phi_x \equiv \phi_{Jeo}(n,\omega_1) + \phi_{Jeo}(n+1,\omega_1) \\ \phi_y \equiv \phi_{Joe}(n,\omega_1) - \phi_{Joe}(n+1,\omega_1) \\ \sigma_x \equiv G\omega_1 \left\{\phi_{Joo}(n,\omega_1) - \phi_{Joo}(n+2,\omega_1)\right\} \\ \sigma_y \equiv -\sigma_x \\ \tau_{xy} \equiv G\omega_1 \left\{\phi_{Jee}(n,\omega_1) + \phi_{Jee}(n+2,\omega_1)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1253)$$

Though a boundary condition has not been reflected yet, they satisfy the primal simultaneous differential equations (1087), (1088) with respect to an arbitrary n.

Similarly, focusing on combinations of eqs. (1238) and (1235), eqs. (1239) and (1234), eqs. (1241) and (1236), and eqs. (1240) and (1237), we define the following four combinations:

[Formula 532]

$$\phi_{J2SA}(n) \equiv \begin{cases} \phi_x \equiv -\phi_{Jee}(n) + \phi_{Jee}(n+1) \\ \phi_y \equiv \phi_{Joo}(n) + \phi_{Joo}(n+1) \end{cases} \quad (1254)$$

$$\phi_{J2AS}(n) \equiv \begin{cases} \phi_x \equiv \phi_{Joo}(n) - \phi_{Joo}(n+1) \\ \phi_y \equiv \phi_{Jee}(n) + \phi_{Jee}(n+1) \end{cases} \quad (1255)$$

$$\phi_{J2SS}(n) \equiv \begin{cases} \phi_x \equiv -\phi_{Joe}(n) + \phi_{Joe}(n+1) \\ \phi_y \equiv \phi_{Jeo}(n) + \phi_{Jeo}(n+1) \end{cases} \quad (1256)$$

$$\phi_{J2AA}(n) \equiv \begin{cases} \phi_x \equiv \phi_{Jeo}(n) - \phi_{Jeo}(n+1) \\ \phi_y \equiv \phi_{Joe}(n) + \phi_{Joe}(n+1) \end{cases} \quad (1257)$$

Regarding each of the same, the following eq. (1128) is established:

$$\frac{\partial}{\partial x}\phi_y - \frac{\partial}{\partial y}\phi_x = 0 \qquad (1128) \text{ (Aforementioned)}$$

Therefore, we can see that the combinations of eqs. (1254) to (1257) in which $\omega$ is replaced with $\omega_2$ of eq. (1100) satisfy eqs. (1092) and (1093) of the primal simultaneous eigenvalue problem. In other words, $\phi_x$, $\phi_y$ are primal eigenfunctions. Further, according to eqs. (1167), (1168), sign-inverted functions of $\phi_x$, $\phi_y$ are dual eigenfunctions $\phi_x^*$, $\phi_y^*$. Thus, four sets of the functions $\phi_x$, $\phi_y$, $\phi_x^*$, $\phi_y^*$ that satisfy the primal simultaneous differential equations (1087) and (1088) are obtained.

With use of eqs. (74) to (76), stresses can be calculated by eqs. (1254) to (1257) as follows:

[Formula 533]

$$\sigma_{J2SA}(n) \equiv \begin{cases} \sigma_x \equiv G\omega\left[2\mu\phi_{Joe}(n) - \left\{\phi_{Joe}(n-1) + \phi_{Joe}(n+1)\right\}\right] \\ \sigma_y \equiv G\omega\left[2\mu\phi_{Joe}(n) + \left\{\phi_{Joe}(n-1) + \phi_{Joe}(n+1)\right\}\right] \\ \tau_{xy} \equiv G\omega\left\{\phi_{Jeo}(n-1) - \phi_{Jeo}(n+1)\right\} \end{cases} \quad (1258)$$

$$\sigma_{J2AS}(n) \equiv \begin{cases} \sigma_x \equiv G\omega\left[-2\mu\phi_{Jeo}(n) + \left\{\phi_{Jeo}(n-1) + \phi_{Jeo}(n+1)\right\}\right] \\ \sigma_y \equiv G\omega\left[-2\mu\phi_{Jeo}(n) - \left\{\phi_{Jeo}(n-1) + \phi_{Jeo}(n+1)\right\}\right] \\ \tau_{xy} \equiv G\omega\left\{\phi_{Joe}(n-1) - \phi_{Joe}(n+1)\right\} \end{cases} \quad (1259)$$

$$\sigma_{J2SS}(n) \equiv \begin{cases} \sigma_x \equiv G\omega\left[2\mu\phi_{Jee}(n+1) - \left\{\phi_{Jee}(n) + \phi_{Jee}(n+2)\right\}\right] \\ \sigma_y \equiv G\omega\left[2\mu\phi_{Jee}(n+1) + \left\{\phi_{Jee}(n) + \phi_{Jee}(n+2)\right\}\right] \\ \tau_{xy} \equiv G\omega\left\{\phi_{Joo}(n) - \phi_{Joo}(n+2)\right\} \end{cases} \quad (1260)$$

$$\sigma_{J2AA}(n) \equiv \begin{cases} \sigma_x \equiv G\omega\left[-2\mu\phi_{Joo}(n+1) + \left\{\phi_{Joo}(n) + \phi_{Joo}(n+2)\right\}\right] \\ \sigma_y \equiv G\omega\left[-2\mu\phi_{Joo}(n+1) - \left\{\phi_{Joo}(n) + \phi_{Joo}(n+2)\right\}\right] \\ \tau_{xy} \equiv G\omega\left\{\phi_{Jee}(n) - \phi_{Jee}(n+2)\right\} \end{cases} \quad (1261)$$

In this way, the combinations in which $\omega$ is replaced with $\omega_2$ of eq. (1100) express stresses $\sigma_x$, $\sigma_y$, $\tau_{xy}$ based on the primal eigenfunctions. It should be noted that according to eqs. (82) to (84) and eqs. (1167), (1168), $\sigma_x$, $\sigma_y$, $\tau_{xy}$ having inverted signs represent stresses $\sigma_x^*$, $\sigma_y^*$, $\tau_{xy}^*$ based on the dual eigenfunctions. Thus, four sets of the functions expressing stresses $\sigma_x$, $\sigma_y$, $\tau_{xy}$, $\sigma_x^*$, $\sigma_y^*$, $\tau_{xy}^*$ are obtained.

The four sets are defined again below:

[Formula 534]

$$J_{2SA}(n) \equiv \begin{cases} \phi_x \equiv -\phi_{Jee}(n,\omega_2) + \phi_{Jee}(n+1,\omega_2) \\ \phi_y \equiv \phi_{Joo}(n,\omega_2) + \phi_{Joo}(n+1,\omega_2) \\ \sigma_x \equiv G\omega_2\left[2\mu\phi_{Joe}(n,\omega_2) - \left\{\phi_{Joe}(n-1,\omega_2) + \phi_{Joe}(n+1,\omega_2)\right\}\right] \\ \sigma_y \equiv G\omega_2\left[2\mu\phi_{Joe}(n,\omega_2) + \left\{\phi_{Joe}(n-1,\omega_2) + \phi_{Joe}(n+1,\omega_2)\right\}\right] \\ \tau_{xy} \equiv G\omega_2\left\{\phi_{Jeo}(n-1,\omega_2) - \phi_{Jeo}(n+1,\omega_2)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1262)$$

$$J_{2AS}(n) \equiv \begin{cases} \phi_x \equiv \phi_{Joo}(n,\omega_2) - \phi_{Joo}(n+1,\omega_2) \\ \phi_y \equiv \phi_{Jee}(n,\omega_2) + \phi_{Jee}(n+1,\omega_2) \\ \sigma_x \equiv G\omega_2\left[-2\mu\phi_{Jeo}(n,\omega_2) + \left\{\phi_{Jeo}(n-1,\omega_2) + \phi_{Jeo}(n+1,\omega_2)\right\}\right] \\ \sigma_y \equiv G\omega_2\left[-2\mu\phi_{Jeo}(n,\omega_2) - \left\{\phi_{Jeo}(n-1,\omega_2) + \phi_{Jeo}(n+1,\omega_2)\right\}\right] \\ \tau_{xy} \equiv G\omega_2\left\{\phi_{Joe}(n-1,\omega_2) - \phi_{Joe}(n+1,\omega_2)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1263)$$

$$J_{2SS}(n) \equiv \begin{cases} \phi_x \equiv -\phi_{Joe}(n,\omega_2) + \phi_{Joe}(n+1,\omega_2) \\ \phi_y \equiv \phi_{Jeo}(n,\omega_2) + \phi_{Jeo}(n+1,\omega_2) \\ \sigma_x \equiv G\omega_2\left[2\mu\phi_{Jee}(n+1,\omega_2) - \left\{\phi_{Jee}(n,\omega_2) + \phi_{Jee}(n+2,\omega_2)\right\}\right] \\ \sigma_y \equiv G\omega_2\left[2\mu\phi_{Jee}(n+1,\omega_2) + \left\{\phi_{Jee}(n,\omega_2) + \phi_{Jee}(n+2,\omega_2)\right\}\right] \\ \tau_{xy} \equiv G\omega_2\left\{\phi_{Joo}(n,\omega_2) - \phi_{Joo}(n+2,\omega_2)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1264)$$

$$J_{2AA}(n) \equiv \begin{cases} \phi_x \equiv \phi_{Jeo}(n,\omega_2) - \phi_{Jeo}(n+1,\omega_2) \\ \phi_y \equiv \phi_{Joe}(n,\omega_2) + \phi_{Joe}(n+1,\omega_2) \\ \sigma_x \equiv G\omega_2\left[-2\mu\phi_{Joo}(n+1,\omega_2) + \left\{\phi_{Joo}(n,\omega_2) + \phi_{Joo}(n+2,\omega_2)\right\}\right] \\ \sigma_y \equiv G\omega_2\left[-2\mu\phi_{Joo}(n+1,\omega_2) - \left\{\phi_{Joo}(n,\omega_2) + \phi_{Joo}(n+2,\omega_2)\right\}\right] \\ \tau_{xy} \equiv G\omega_2\left\{\phi_{Jee}(n,\omega_2) - \phi_{Jee}(n+2,\omega_2)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1265)$$

Though a boundary condition has not been reflected yet, they satisfy the primal simultaneous differential equations (1087), (1088) with respect to an arbitrary n.

11. 4. 22 Solution function using Bessel functions of the second kind

Eigenvalues $\omega_1$, $\omega_2$ are collectively represented as $\omega$, and solutions using Bessel functions of the second kind $Y_m$ of eqs. (1106), (1110) are expressed as follows according to eq. (1209):
[Formula 535]

$$\phi_{Yee}(r,\theta,n,\omega) \equiv \cos 2n\theta \cdot Y_{2n}(\omega r) \quad (1266)$$

[Formula 536]

$$\phi_{Yoo}(r,\theta,n,\omega) \equiv \sin 2n\theta \cdot Y_{2n}(\omega r) \quad (1267)$$

$$\phi_{Yoe}(r,\theta,n,\omega) \equiv \cos(2n+1)\theta \cdot Y_{2n+1}(\omega r) \quad (1268)$$

$$\phi_{Yeo}(r,\theta,n,\omega) \equiv \sin(2n+1)\theta \cdot Y_{2n+1}(\omega r) \quad (1269)$$

Master variables of these functions are r and $\theta$, while n and $\omega$ represent parameters. As the equation is long if all of these variables are described, only variables that should be noticed are described hereinafter. For example, in the case where n changes on both sides of an equation but r, $\theta$, $\omega$ do not change, the argument is expressed as (n). Here, derived functions as follows are obtained:
[Formula 537]

$$\frac{\partial}{\partial x}\phi_{Yee}(n) = \frac{\omega}{2}\left\{\phi_{Yoe}(n-1) - \phi_{Yoe}(n)\right\} \quad (1270)$$

$$\frac{\partial}{\partial x}\phi_{Yoo}(n) = \frac{\omega}{2}\left\{\phi_{Yeo}(n-1) - \phi_{Yeo}(n)\right\} \quad (1271)$$

$$\frac{\partial}{\partial x}\phi_{Yeo}(n) = \frac{\omega}{2}\left\{\phi_{Yoo}(n) - \phi_{Yoo}(n+1)\right\} \quad (1272)$$

$$\frac{\partial}{\partial x}\phi_{Yoe}(n) = \frac{\omega}{2}\left\{\phi_{Yee}(n) - \phi_{Yee}(n+1)\right\} \quad (1273)$$

and

$$\frac{\partial}{\partial y}\phi_{Yee}(n) = -\frac{\omega}{2}\left\{\phi_{Yeo}(n-1) + \phi_{Yeo}(n)\right\} \quad (1274)$$

$$\frac{\partial}{\partial y}\phi_{Yoo}(n) = \frac{\omega}{2}\left\{\phi_{Yoe}(n-1) + \phi_{Yoe}(n)\right\} \quad (1275)$$

$$\frac{\partial}{\partial y}\phi_{Yeo}(n) = \frac{\omega}{2}\left\{\phi_{Yee}(n) + \phi_{Yee}(n+1)\right\} \quad (1276)$$

$$\frac{\partial}{\partial y}\phi_{Yoe}(n) = -\frac{\omega}{2}\left\{\phi_{Yoo}(n) + \phi_{Yoo}(n+1)\right\} \quad (1277)$$

Further, the following relationship equations are derived from eqs. (1270) to (1273):
[Formula 538]

$$\frac{\partial}{\partial x}\left\{\phi_{Yee}(n) + \phi_{Yee}(n+1)\right\} = \frac{\omega}{2}\left\{\phi_{Yoe}(n-1) - \phi_{Yoe}(n+1)\right\} \quad (1278)$$

$$\frac{\partial}{\partial x}\left\{\phi_{Yoo}(n) + \phi_{Yoo}(n+1)\right\} = \frac{\omega}{2}\left\{\phi_{Yeo}(n-1) - \phi_{Yeo}(n+1)\right\} \quad (1279)$$

$$\frac{\partial}{\partial x}\left\{\phi_{Yeo}(n) + \phi_{Yeo}(n+1)\right\} = \frac{\omega}{2}\left\{\phi_{Yoo}(n) - \phi_{Yoo}(n+2)\right\} \quad (1280)$$

$$\frac{\partial}{\partial x}\left\{\phi_{Yoe}(n) + \phi_{Yoe}(n+1)\right\} = \frac{\omega}{2}\left\{\phi_{Yee}(n) - \phi_{Yee}(n+2)\right\} \quad (1281)$$

The following equations are derived from eqs. (1274) to (1277):
[Formula 539]

$$\frac{\partial}{\partial y}\left\{\phi_{Yee}(n) - \phi_{Yee}(n+1)\right\} = -\frac{\omega}{2}\left\{\phi_{Yeo}(n-1) - \phi_{Yeo}(n+1)\right\} \quad (1282)$$

$$\frac{\partial}{\partial y}\left\{\phi_{Yoo}(n) - \phi_{Yoo}(n+1)\right\} = \frac{\omega}{2}\left\{\phi_{Yoe}(n-1) - \phi_{Yoe}(n+1)\right\} \quad (1283)$$

$$\frac{\partial}{\partial y}\left\{\phi_{Yeo}(n) - \phi_{Yeo}(n+1)\right\} = \frac{\omega}{2}\left\{\phi_{Yee}(n) - \phi_{Yee}(n+2)\right\} \quad (1284)$$

$$\frac{\partial}{\partial y}\left\{\phi_{Yoe}(n) - \phi_{Yoe}(n+1)\right\} = -\frac{\omega}{2}\left\{\phi_{Yoo}(n) - \phi_{Yoo}(n+2)\right\} \quad (1285)$$

Here, with focus on the combinations of eqs. (1278) and (1283), eqs. (1279) and (1282), eqs. (1281) and (1284), and eqs. (1280) and (1285), the following four combinations are defined:

[Formula 540]

$$\phi_{Y1SA}(n) \equiv \begin{cases} \phi_x \equiv \phi_{Yee}(n) + \phi_{Yee}(n+1) \\ \phi_y \equiv -\phi_{Yoo}(n) + \phi_{Yoo}(n+1) \end{cases} \quad (1286)$$

$$\phi_{Y1AS}(n) \equiv \begin{cases} \phi_x \equiv \phi_{Yoo}(n) + \phi_{Yoo}(n+1) \\ \phi_y \equiv \phi_{Yee}(n) - \phi_{Yee}(n+1) \end{cases} \quad (1287)$$

$$\phi_{Y1SS}(n) \equiv \begin{cases} \phi_x \equiv \phi_{Yoe}(n) + \phi_{Yoe}(n+1) \\ \phi_y \equiv -\phi_{Yeo}(n) + \phi_{Yeo}(n+1) \end{cases} \quad (1288)$$

$$\phi_{Y1AA}(n) \equiv \begin{cases} \phi_x \equiv \phi_{Yeo}(n) + \phi_{Yeo}(n+1) \\ \phi_y \equiv \phi_{Yoe}(n) - \phi_{Yoe}(n+1) \end{cases} \quad (1289)$$

Then, we find that the following eq. (1120) is established for each of the combinations:

$$\frac{\partial}{\partial x}\phi_x + \frac{\partial}{\partial y}\phi_y = 0 \quad (1120) \text{ (Aforementioned)}$$

Therefore, we can see that the combinations of eqs. (1286) to (1289) in which $\omega$ is replaced with $\omega_1$ of eq. (1099) satisfy eqs. (1092) and (1093) of the primal simultaneous eigenvalue problem. In other words, $\phi_x$, $\phi_y$ are primal eigenfunctions. Further, according to eqs. (1151), (1152), sign-inverted functions of $\phi_x$, $\phi_y$ are dual eigenfunctions $\phi_x^*$, $\phi_y^*$. Thus, four sets of the functions $\phi_x$, $\phi_y$, $\phi_x^*$, $\phi_y^*$ that satisfy the primal simultaneous differential equations (1087) and (1088) are obtained.

With use of eqs. (74) to (76), stresses can be calculated by eqs. (1286) to (1289) as follows:

[Formula 541]

$$\sigma_{Y1SA}(n) \equiv \begin{cases} \sigma_x \equiv G\omega\left\{\phi_{Yoe}(n-1) - \phi_{Yoe}(n+1)\right\} \\ \sigma_y \equiv -\sigma_x \\ \tau_{xy} \equiv -G\omega\left\{\phi_{Yeo}(n-1) + \phi_{Yeo}(n+1)\right\} \end{cases} \quad (1290)$$

$$\sigma_{Y1AS}(n) \equiv \begin{cases} \sigma_x \equiv G\omega\left\{\phi_{Yeo}(n-1) - \phi_{Yeo}(n+1)\right\} \\ \sigma_y \equiv -\sigma_x \\ \tau_{xy} \equiv G\omega\left\{\phi_{Yoe}(n-1) + \phi_{Yoe}(n+1)\right\} \end{cases} \quad (1291)$$

$$\sigma_{Y1SS}(n) \equiv \begin{cases} \sigma_x \equiv G\omega\left\{\phi_{Yee}(n) - \phi_{Yee}(n+2)\right\} \\ \sigma_y \equiv -\sigma_x \\ \tau_{xy} \equiv -G\omega\left\{\phi_{Yoo}(n) + \phi_{Yoo}(n+2)\right\} \end{cases} \quad (1292)$$

$$\sigma_{Y1AA}(n) \equiv \begin{cases} \sigma_x \equiv G\omega\left\{\phi_{Yoo}(n) - \phi_{Yoo}(n+2)\right\} \\ \sigma_y \equiv -\sigma_x \\ \tau_{xy} \equiv G\omega\left\{\phi_{Yee}(n) + \phi_{Yee}(n+2)\right\} \end{cases} \quad (1293)$$

In this way, the combinations in which ω is replaced with $\omega_1$ of eq. (1099) express stresses $\sigma_x$, $\sigma_y$, $\tau_{xy}$ based on the primal eigenfunctions. It should be noted that according to eqs. (82) to (84) and eqs. (1151), (1152), $\sigma_x$, $\sigma_y$, $\tau_{xy}$ having inverted signs represent stresses $\sigma_x^*$, $\sigma_y^*$, $\tau_{xy}^*$ based on the dual eigenfunctions. Thus, four sets of the functions expressing stresses $\sigma_x$, $\sigma_y$, $\tau_{xy}$, $\sigma_x^*$, $\sigma_y^*$, $\tau_{xy}^*$ are obtained.

The four sets are defined again below:

[Formula 542]

$$Y_{1SA}(n) \equiv \begin{cases} \phi_x \equiv \phi_{Yee}(n,\omega_1) + \phi_{Yee}(n+1,\omega_1) \\ \phi_y \equiv -\phi_{Yoo}(n,\omega_1) + \phi_{Yoo}(n+1,\omega_1) \\ \sigma_x \equiv G\omega_1\left\{\phi_{Yoe}(n-1,\omega_1) - \phi_{Yoe}(n+1,\omega_1)\right\} \\ \sigma_y \equiv -\sigma_x \\ \tau_{xy} \equiv -G\omega_1\left\{\phi_{Yeo}(n-1,\omega_1) + \phi_{Yeo}(n+1,\omega_1)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1294)$$

$$Y_{1AS}(n) \equiv \begin{cases} \phi_x \equiv \phi_{Yoo}(n,\omega_1) + \phi_{Yoo}(n+1,\omega_1) \\ \phi_y \equiv \phi_{Yee}(n,\omega_1) - \phi_{Yee}(n+1,\omega_1) \\ \sigma_x \equiv G\omega_1\left\{\phi_{Yeo}(n-1,\omega_1) - \phi_{Yeo}(n+1,\omega_1)\right\} \\ \sigma_y \equiv -\sigma_x \\ \tau_{xy} \equiv G\omega_1\left\{\phi_{Yoe}(n-1,\omega_1) + \phi_{Yoe}(n+1,\omega_1)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1295)$$

$$Y_{1SS}(n) \equiv \begin{cases} \phi_x \equiv \phi_{Yoe}(n,\omega_1) + \phi_{Yoe}(n+1,\omega_1) \\ \phi_y \equiv -\phi_{Yeo}(n,\omega_1) + \phi_{Yeo}(n+1,\omega_1) \\ \sigma_x \equiv G\omega_1\left\{\phi_{Yee}(n,\omega_1) - \phi_{Yee}(n+2,\omega_1)\right\} \\ \sigma_y \equiv -\sigma_x \\ \tau_{xy} \equiv -G\omega_1\left\{\phi_{Yoo}(n,\omega_1) + \phi_{Yoo}(n+2,\omega_1)\right\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1296)$$

[Formula 543]

$$Y_{1AA}(n) \equiv \begin{cases} \phi_x \equiv \phi_{Yeo}(n,\omega_1) + \phi_{Yeo}(n+1,\omega_1) \\ \phi_y \equiv \phi_{Yoe}(n,\omega_1) - \phi_{Yoe}(n+1,\omega_1) \\ \sigma_x \equiv G\omega_1 \{\phi_{Yoo}(n,\omega_1) - \phi_{Yoo}(n+2,\omega_1)\} \\ \sigma_y \equiv -\sigma_x \\ \tau_{xy} \equiv G\omega_1 \{\phi_{Yee}(n,\omega_1) + \phi_{Yee}(n+2,\omega_1)\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1297)$$

Though a boundary condition has not been reflected yet, they satisfy the primal simultaneous differential equations (1087), (1088) with respect to an arbitrary n.

Similarly, focusing on combinations of eqs. (1282) and (1279), eqs. (1283) and (1278), eqs. (1285) and (1280), and eqs. (1284) and (1281), we define the following four combinations:

[Formula 544]

$$\phi_{Y2SA}(n) \equiv \begin{cases} \phi_x \equiv -\phi_{Yee}(n) + \phi_{Yee}(n+1) \\ \phi_y \equiv \phi_{Yoo}(n) + \phi_{Yoo}(n+1) \end{cases} \quad (1298)$$

$$\phi_{Y2AS}(n) \equiv \begin{cases} \phi_x \equiv \phi_{Yoo}(n) - \phi_{Yoo}(n+1) \\ \phi_y \equiv \phi_{Yee}(n) + \phi_{Yee}(n+1) \end{cases} \quad (1299)$$

$$\phi_{Y2SS}(n) \equiv \begin{cases} \phi_x \equiv -\phi_{Yoe}(n) + \phi_{Yoe}(n+1) \\ \phi_y \equiv \phi_{Yeo}(n) + \phi_{Yeo}(n+1) \end{cases} \quad (1300)$$

$$\phi_{Y2AA}(n) \equiv \begin{cases} \phi_x \equiv \phi_{Yeo}(n) - \phi_{Yeo}(n+1) \\ \phi_y \equiv \phi_{Yoe}(n) + \phi_{Yoe}(n+1) \end{cases} \quad (1301)$$

Regarding each of the same, the following eq. (1128) is established:

$$\frac{\partial}{\partial x}\phi_y - \frac{\partial}{\partial y}\phi_x = 0 \qquad (1128) \text{ (Aforementioned)}$$

Therefore, we can see that the combinations of eqs. (1298) to (1301) in which ω is replaced with $\omega_2$ of eq. (1100) satisfy the primal simultaneous eigenvalue problem of eqs. (1092) and (1093). In other words, $\phi_x$, $\phi_y$ are primal eigenfunctions. Further, according to eqs. (1167), (1168), sign-inverted functions of $\phi_x$, $\phi_y$ are dual eigenfunctions $\phi_x^*$, $\phi_y^*$. Thus, four sets of the functions $\phi_x$, $\phi_y$, $\phi_x^*$, $\phi_y^*$ that satisfy the primal simultaneous differential equations (1087) and (1088) are obtained.

Further, with use of eqs. (74) to (76), stresses can be calculated by eqs. (1298) to (1301) as follows:

[Formula 545]

$$\sigma_{Y2SA}(n) \equiv \begin{cases} \sigma_x \equiv G\omega\left[2\mu\phi_{Yoe}(n) - \{\phi_{Yoe}(n-1) + \phi_{Yoe}(n+1)\}\right] \\ \sigma_y \equiv G\omega\left[2\mu\phi_{Yoe}(n) + \{\phi_{Yoe}(n-1) + \phi_{Yoe}(n+1)\}\right] \\ \tau_{xy} \equiv G\omega\{\phi_{Yeo}(n-1) - \phi_{Yeo}(n+1)\} \end{cases} \quad (1302)$$

$$\sigma_{Y2AS}(n) \equiv \begin{cases} \sigma_x \equiv G\omega\left[-2\mu\phi_{Yeo}(n) + \{\phi_{Yeo}(n-1) + \phi_{Yeo}(n+1)\}\right] \\ \sigma_y \equiv G\omega\left[-2\mu\phi_{Yeo}(n) - \{\phi_{Yeo}(n-1) + \phi_{Yeo}(n+1)\}\right] \\ \tau_{xy} \equiv G\omega\{\phi_{Yoe}(n-1) - \phi_{Yoe}(n+1)\} \end{cases} \quad (1303)$$

$$\sigma_{Y2SS}(n) \equiv \begin{cases} \sigma_x \equiv G\omega\left[2\mu\phi_{Yee}(n+1) - \{\phi_{Yee}(n) + \phi_{Yee}(n+2)\}\right] \\ \sigma_y \equiv G\omega\left[2\mu\phi_{Yee}(n+1) + \{\phi_{Yee}(n) + \phi_{Yee}(n+2)\}\right] \\ \tau_{xy} \equiv G\omega\{\phi_{Yoo}(n) - \phi_{Yoo}(n+2)\} \end{cases} \quad (1304)$$

$$\sigma_{Y2AA}(n) \equiv \begin{cases} \sigma_x \equiv G\omega\left[-2\mu\phi_{Yoo}(n+1) + \{\phi_{Yoo}(n) + \phi_{Yoo}(n+2)\}\right] \\ \sigma_y \equiv G\omega\left[-2\mu\phi_{Yoo}(n+1) - \{\phi_{Yoo}(n) + \phi_{Yoo}(n+2)\}\right] \\ \tau_{xy} \equiv G\omega\{\phi_{Yee}(n) - \phi_{Yee}(n+2)\} \end{cases} \quad (1305)$$

In this way, the combinations in which $\omega$ is replaced with $\omega_2$ of eq. (1100) express stresses $\sigma_x$, $\sigma_y$, $\tau_{xy}$ based on the primal eigenfunctions. It should be noted that according to eqs. (82) to (84) and eqs. (1167), (1168), $\sigma_x$, $\sigma_y$, $\tau_{xy}$ having inverted signs represent stresses $\sigma_x^*$, $\sigma_y^*$, $\tau_{xy}^*$ based on the dual eigenfunctions. Thus, four sets of the functions expressing stresses $\sigma_x$, $\sigma_y$, $\tau_{xy}$, $\sigma_x^*$, $\sigma_y^*$, $\tau_{xy}^*$ are obtained.

The four sets are defined again below:

[Formula 546]

$$Y_{2SA}(n) \equiv \begin{cases} \phi_x \equiv -\phi_{Yee}(n,\omega_2) + \phi_{Yee}(n+1,\omega_2) \\ \phi_y \equiv \phi_{Yoo}(n,\omega_2) + \phi_{Yoo}(n+1,\omega_2) \\ \sigma_x \equiv G\omega_2\left[2\mu\phi_{Yoe}(n,\omega_2) - \{\phi_{Yoe}(n-1,\omega_2) + \phi_{Yoe}(n+1,\omega_2)\}\right] \\ \sigma_y \equiv G\omega_2\left[2\mu\phi_{Yoe}(n,\omega_2) + \{\phi_{Yoe}(n-1,\omega_2) + \phi_{Yoe}(n+1,\omega_2)\}\right] \\ \tau_{xy} \equiv G\omega_2\{\phi_{Yeo}(n-1,\omega_2) - \phi_{Yeo}(n+1,\omega_2)\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1306)$$

$$Y_{2AS}(n) \equiv \begin{cases} \phi_x \equiv \phi_{Yoo}(n,\omega_2) - \phi_{Yoo}(n+1,\omega_2) \\ \phi_y \equiv \phi_{Yee}(n,\omega_2) + \phi_{Yee}(n+1,\omega_2) \\ \sigma_x \equiv G\omega_2\left[-2\mu\phi_{Yeo}(n,\omega_2) + \{\phi_{Yeo}(n-1,\omega_2) + \phi_{Yeo}(n+1,\omega_2)\}\right] \\ \sigma_y \equiv G\omega_2\left[-2\mu\phi_{Yeo}(n,\omega_2) - \{\phi_{Yeo}(n-1,\omega_2) + \phi_{Yeo}(n+1,\omega_2)\}\right] \\ \tau_{xy} \equiv G\omega_2\{\phi_{Yoe}(n-1,\omega_2) - \phi_{Yoe}(n+1,\omega_2)\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1307)$$

$$Y_{2SS}(n) \equiv \begin{cases} \phi_x \equiv -\phi_{Yoe}(n,\omega_2) + \phi_{Yoe}(n+1,\omega_2) \\ \phi_y \equiv \phi_{Yeo}(n,\omega_2) + \phi_{Yeo}(n+1,\omega_2) \\ \sigma_x \equiv G\omega_2\left[2\mu\phi_{Yee}(n+1,\omega_2) - \{\phi_{Yee}(n,\omega_2) + \phi_{Yee}(n+2,\omega_2)\}\right] \\ \sigma_y \equiv G\omega_2\left[2\mu\phi_{Yee}(n+1,\omega_2) + \{\phi_{Yee}(n,\omega_2) + \phi_{Yee}(n+2,\omega_2)\}\right] \\ \tau_{xy} \equiv G\omega_2\{\phi_{Yoo}(n,\omega_2) - \phi_{Yoo}(n+2,\omega_2)\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1308)$$

$$Y_{2AA}(n) \equiv \begin{cases} \phi_x \equiv \phi_{Yeo}(n,\omega_2) - \phi_{Yeo}(n+1,\omega_2) \\ \phi_y \equiv \phi_{Yoe}(n,\omega_2) + \phi_{Yoe}(n+1,\omega_2) \\ \sigma_x \equiv G\omega_2\left[-2\mu\phi_{Yoo}(n+1,\omega_2) + \{\phi_{Yoo}(n,\omega_2) + \phi_{Yoo}(n+2,\omega_2)\}\right] \\ \sigma_y \equiv G\omega_2\left[-2\mu\phi_{Yoo}(n+1,\omega_2) - \{\phi_{Yoo}(n,\omega_2) + \phi_{Yoo}(n+2,\omega_2)\}\right] \\ \tau_{xy} \equiv G\omega_2\{\phi_{Yee}(n,\omega_2) - \phi_{Yee}(n+2,\omega_2)\} \\ \phi_x^* \equiv -\phi_x, \quad \phi_y^* \equiv -\phi_y \\ \sigma_x^* \equiv -\sigma_x, \quad \sigma_y^* \equiv -\sigma_y, \quad \tau_{xy}^* \equiv -\tau_{xy} \end{cases} \quad (1309)$$

Though a boundary condition has not been reflected yet, they satisfy the primal simultaneous differential equations (1087), (1088) with respect to an arbitrary n.

11. 4. 23 Solution function using modified Bessel function of the first kind

Eigenvalues $\omega_1$, $\omega_2$ are collectively represented as $\omega$, and solutions using the modified Bessel function of the first kind $I_m$ of eqs. (1108), (1112) are expressed as follows according to eq. (1209):
[Formula 547]

$$\phi_{Iee}(r,\theta,n,\omega) \equiv \cos 2n\theta \cdot I_{2n}(\omega r) \quad (1310)$$

$$\phi_{Ioo}(r,\theta,n,\omega) \equiv \sin 2n\theta \cdot I_{2n}(\omega r) \quad (1311)$$

$$\phi_{Ioe}(r,\theta,n,\omega) \equiv \cos(2n+1)\theta \cdot I_{2n+1}(\omega r) \quad (1312)$$

$$\phi_{Ieo}(r,\theta,n,\omega) \equiv \sin(2n+1)\theta \cdot I_{2n+1}(\omega r) \quad (1313)$$

Master variables of these functions are r and $\theta$, while n and $\omega$ represent parameters. As the equation is long if all of these variables are described, only variables that should be noticed are described hereinafter. For example, in the case where n changes on both sides of an equation but r, $\theta$, $\omega$ do not change, the argument is expressed as (n). Here, derived functions as follows are obtained:
[Formula 548]

$$\frac{\partial}{\partial x}\phi_{Iee}(n) = \frac{\omega}{2}\{\phi_{Ioe}(n-1) + \phi_{Ioe}(n)\} \quad (1314)$$

$$\frac{\partial}{\partial x}\phi_{Ioo}(n) = \frac{\omega}{2}\{\phi_{Ieo}(n-1) + \phi_{Ieo}(n)\} \quad (1315)$$

$$\frac{\partial}{\partial x}\phi_{Ieo}(n) = \frac{\omega}{2}\{\phi_{Ioo}(n) + \phi_{Ioo}(n+1)\} \quad (1316)$$

$$\frac{\partial}{\partial x}\phi_{Ioe}(n) = \frac{\omega}{2}\{\phi_{Iee}(n) + \phi_{Iee}(n+1)\} \quad (1317)$$

and

$$\frac{\partial}{\partial y}\phi_{Iee}(n)=-\frac{\omega}{2}\left\{\phi_{Ieo}(n-1)-\phi_{Ieo}(n)\right\} \quad (1318)$$

$$\frac{\partial}{\partial y}\phi_{Ioo}(n)=\frac{\omega}{2}\left\{\phi_{Ioe}(n-1)-\phi_{Ioe}(n)\right\} \quad (1319)$$

$$\frac{\partial}{\partial y}\phi_{Ieo}(n)=\frac{\omega}{2}\left\{\phi_{Iee}(n)-\phi_{Iee}(n+1)\right\} \quad (1320)$$

[Formula 549]

$$\frac{\partial}{\partial y}\phi_{Ioe}(n)=-\frac{\omega}{2}\left\{\phi_{Ioo}(n)-\phi_{Ioo}(n+1)\right\} \quad (1321)$$

Further, the following relationship equations are derived from eqs. (1314) to (1317):

$$\frac{\partial}{\partial x}\left\{\phi_{Iee}(n)-\phi_{Iee}(n+1)\right\}=\frac{\omega}{2}\left\{\phi_{Ioe}(n-1)-\phi_{Ioe}(n+1)\right\} \quad (1322)$$

$$\frac{\partial}{\partial x}\left\{\phi_{Ioo}(n)-\phi_{Ioo}(n+1)\right\}=\frac{\omega}{2}\left\{\phi_{Ieo}(n-1)-\phi_{Ieo}(n+1)\right\} \quad (1323)$$

$$\frac{\partial}{\partial x}\left\{\phi_{Ieo}(n)-\phi_{Ieo}(n+1)\right\}=\frac{\omega}{2}\left\{\phi_{Ioo}(n)-\phi_{Ioo}(n+2)\right\} \quad (1324)$$

$$\frac{\partial}{\partial x}\left\{\phi_{Ioe}(n)-\phi_{Ioe}(n+1)\right\}=\frac{\omega}{2}\left\{\phi_{Iee}(n)-\phi_{Iee}(n+2)\right\} \quad (1325)$$

The following relationship equations are derived from eqs. (1318) to (1321):

$$\frac{\partial}{\partial y}\left\{\phi_{Iee}(n)+\phi_{Iee}(n+1)\right\}=-\frac{\omega}{2}\left\{\phi_{Ieo}(n-1)-\phi_{Ieo}(n+1)\right\} \quad (1326)$$

$$\frac{\partial}{\partial y}\left\{\phi_{Ioo}(n)+\phi_{Ioo}(n+1)\right\}=\frac{\omega}{2}\left\{\phi_{Ioe}(n-1)-\phi_{Ioe}(n+1)\right\} \quad (1327)$$

$$\frac{\partial}{\partial y}\left\{\phi_{Ieo}(n)+\phi_{Ieo}(n+1)\right\}=\frac{\omega}{2}\left\{\phi_{Iee}(n)-\phi_{Iee}(n+2)\right\} \quad (1328)$$

$$\frac{\partial}{\partial y}\left\{\phi_{Ioe}(n)+\phi_{Ioe}(n+1)\right\}=-\frac{\omega}{2}\left\{\phi_{Ioo}(n)-\phi_{Ioo}(n+2)\right\} \quad (1329)$$

Here, with focus on the combinations of eqs. (1322) and (1327), eqs.(1323) and (1326), eqs. (1325) and (1328), and eqs. (1324) and (1329), the following four combinations are defined:
[Formula 550]

$$\phi_{I1SA}(n) \equiv \begin{cases} \phi_x \equiv -\phi_{Iee}(n) + \phi_{Iee}(n+1) \\ \phi_y \equiv \phi_{Ioo}(n) + \phi_{Ioo}(n+1) \end{cases} \quad (1330)$$

$$\phi_{I1AS}(n) \equiv \begin{cases} \phi_x \equiv \phi_{Ioo}(n) - \phi_{Ioo}(n+1) \\ \phi_y \equiv \phi_{Iee}(n) + \phi_{Iee}(n+1) \end{cases} \quad (1331)$$

$$\phi_{I1SS}(n) \equiv \begin{cases} \phi_x \equiv -\phi_{Ioe}(n) + \phi_{Ioe}(n+1) \\ \phi_y \equiv \phi_{Ieo}(n) + \phi_{Ieo}(n+1) \end{cases} \quad (1332)$$

$$\phi_{I1AA}(n) \equiv \begin{cases} \phi_x \equiv \phi_{Ieo}(n) - \phi_{Ieo}(n+1) \\ \phi_y \equiv \phi_{Ioe}(n) + \phi_{Ioe}(n+1) \end{cases} \quad (1333)$$

Then, we find that the following eq. (1120) is established for each of the combinations:

$$\frac{\partial}{\partial x}\phi_x + \frac{\partial}{\partial y}\phi_y = 0 \quad (1120) \text{ (Aforementioned)}$$

Therefore, we can see that the combinations of eqs. (1330) to (1333) in which $\omega$ is replaced with $\omega_1$ of eq. (1099) satisfy eqs. (1092) and (1093) of the primal simultaneous eigenvalue problem. In other words, $\phi_x$, $\phi_y$ are primal eigenfunctions. Further, according to eqs. (1157), (1158), the same functions as $\phi_x$, $\phi_y$ are dual eigenfunctions $\phi_x^*$, $\phi_y^*$. Thus, four sets of the functions $\phi_x$, $\phi_y$, $\phi_x^*$, $\phi_y^*$ that satisfy the primal simultaneous differential equations (1087) and (1088) are obtained.

With use of eqs. (74) to (76), stresses can be calculated by eq. (1330) as follows:

[Formula 551]

$$\sigma_{I1SA}(n) \equiv \begin{cases} \sigma_x \equiv G\omega\left\{-\phi_{Ioe}(n-1) + \phi_{Ioe}(n+1)\right\} \\ \sigma_y \equiv -\sigma_x \\ \tau_{xy} \equiv G\omega\left\{\phi_{Ieo}(n-1) + \phi_{Ieo}(n+1)\right\} \end{cases} \quad (1334)$$

$$\sigma_{I1AS}(n) \equiv \begin{cases} \sigma_x \equiv G\omega\left\{\phi_{Ieo}(n-1) - \phi_{Ieo}(n+1)\right\} \\ \sigma_y \equiv -\sigma_x \\ \tau_{xy} \equiv G\omega\left\{\phi_{Ioe}(n-1) + \phi_{Ioe}(n+1)\right\} \end{cases} \quad (1335)$$

$$\sigma_{I1SS}(n) \equiv \begin{cases} \sigma_x \equiv -G\omega\left\{\phi_{Iee}(n) - \phi_{Iee}(n+2)\right\} \\ \sigma_y \equiv -\sigma_x \\ \tau_{xy} \equiv G\omega\left\{\phi_{Ioo}(n) + \phi_{Ioo}(n+2)\right\} \end{cases} \quad (1336)$$

$$\sigma_{I1AA}(n) \equiv \begin{cases} \sigma_x \equiv G\omega\left\{\phi_{Ioo}(n) - \phi_{Ioo}(n+2)\right\} \\ \sigma_y \equiv -\sigma_x \\ \tau_{xy} \equiv G\omega\left\{\phi_{Iee}(n) + \phi_{Iee}(n+2)\right\} \end{cases} \quad (1337)$$

In this way, the combinations in which ω is replaced with $\omega_1$ of eq. (1099) express stresses $\sigma_x$, $\sigma_y$, $\tau_{xy}$ based on the primal eigenfunctions. It should be noted that according to eqs. (82) to (84) and eqs. (1157), (1158), the same as $\sigma_x$, $\sigma_y$, $\tau_{xy}$ represent stresses $\sigma_x{}^*$, $\sigma_y{}^*$, $\tau_{xy}{}^*$ based on the dual eigenfunctions. Thus, four sets of the functions expressing stresses $\sigma_x$, $\sigma_y$, $\tau_{xy}$, $\sigma_x{}^*$, $\sigma_y{}^*$, $\tau_{xy}{}^*$ are obtained.

The four sets are defined again below:

[Formula 552]

$$I_{1SA}(n) \equiv \begin{cases} \phi_x \equiv -\phi_{Iee}(n,\omega_1) + \phi_{Iee}(n+1,\omega_1) \\ \phi_y \equiv \phi_{Ioo}(n,\omega_1) + \phi_{Ioo}(n+1,\omega_1) \\ \sigma_x \equiv G\omega_1\left\{-\phi_{Ioe}(n-1,\omega_1) + \phi_{Ioe}(n+1,\omega_1)\right\} \\ \sigma_y \equiv -\sigma_x \\ \tau_{xy} \equiv G\omega_1\left\{\phi_{Ieo}(n-1,\omega_1) + \phi_{Ieo}(n+1,\omega_1)\right\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \quad (1338)$$

$$I_{1AS}(n) \equiv \begin{cases} \phi_x \equiv \phi_{Ioo}(n,\omega_1) - \phi_{Ioo}(n+1,\omega_1) \\ \phi_y \equiv \phi_{Iee}(n,\omega_1) + \phi_{Iee}(n+1,\omega_1) \\ \sigma_x \equiv G\omega_1\left\{\phi_{Ieo}(n-1,\omega_1) - \phi_{Ieo}(n+1,\omega_1)\right\} \\ \sigma_y \equiv -\sigma_x \\ \tau_{xy} \equiv G\omega_1\left\{\phi_{Ioe}(n-1,\omega_1) + \phi_{Ioe}(n+1,\omega_1)\right\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \quad (1339)$$

$$I_{1SS}(n) \equiv \begin{cases} \phi_x \equiv -\phi_{Ioe}(n,\omega_1) + \phi_{Ioe}(n+1,\omega_1) \\ \phi_y \equiv \phi_{Ieo}(n,\omega_1) + \phi_{Ieo}(n+1,\omega_1) \\ \sigma_x \equiv -G\omega_1\left\{\phi_{Iee}(n,\omega_1) - \phi_{Iee}(n+2,\omega_1)\right\} \\ \sigma_y \equiv -\sigma_x \\ \tau_{xy} \equiv G\omega_1\left\{\phi_{Ioo}(n,\omega_1) + \phi_{Ioo}(n+2,\omega_1)\right\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \quad (1340)$$

$$I_{1AA}(n) \equiv \begin{cases} \phi_x \equiv \phi_{Ieo}(n,\omega_1) - \phi_{Ieo}(n+1,\omega_1) \\ \phi_y \equiv \phi_{Ioe}(n,\omega_1) + \phi_{Ioe}(n+1,\omega_1) \\ \sigma_x \equiv G\omega_1 \{\phi_{Ioo}(n,\omega_1) - \phi_{Ioo}(n+2,\omega_1)\} \\ \sigma_y \equiv -\sigma_x \\ \tau_{xy} \equiv G\omega_1 \{\phi_{Iee}(n,\omega_1) + \phi_{Iee}(n+2,\omega_1)\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \quad (1341)$$

Though a boundary condition has not been reflected yet, they satisfy the primal simultaneous differential equations (1087), (1088) with respect to an arbitrary n.

Similarly, focusing on combinations of eqs. (1326) and (1323), eqs. (1327) and (1322), eqs. (1329) and (1324), and eqs. (1328) and (1325), we define the following four combinations:
[Formula 553]

$$\phi_{I2SA}(n) \equiv \begin{cases} \phi_x \equiv \phi_{Iee}(n) + \phi_{Iee}(n+1) \\ \phi_y \equiv -\phi_{Ioo}(n) + \phi_{Ioo}(n+1) \end{cases} \quad (1342)$$

$$\phi_{I2AS}(n) \equiv \begin{cases} \phi_x \equiv \phi_{Ioo}(n) + \phi_{Ioo}(n+1) \\ \phi_y \equiv \phi_{Iee}(n) - \phi_{Iee}(n+1) \end{cases} \quad (1343)$$

$$\phi_{I2SS}(n) \equiv \begin{cases} \phi_x \equiv \phi_{Ioe}(n) + \phi_{Ioe}(n+1) \\ \phi_y \equiv -\phi_{Ieo}(n) + \phi_{Ieo}(n+1) \end{cases} \quad (1344)$$

$$\phi_{I2AA}(n) \equiv \begin{cases} \phi_x \equiv \phi_{Ieo}(n) + \phi_{Ieo}(n+1) \\ \phi_y \equiv \phi_{Ioe}(n) - \phi_{Ioe}(n+1) \end{cases} \quad (1345)$$

Regarding each of the same, the following eq. (1128) is established:

$$\frac{\partial}{\partial x}\phi_y - \frac{\partial}{\partial y}\phi_x = 0 \quad (1128) \text{ (Aforementioned)}$$

Therefore, we can see that the combinations of eqs. (1342) to (1345) in which $\omega$ is replaced with $\omega_2$ of eq. (1100) satisfy eqs. (1092) and (1093) of the primal simultaneous eigenvalue problem. In other words, $\phi_x$, $\phi_y$ are primal eigenfunctions. Further, according to eqs. (1173), (1174), the same functions as $\phi_x$, $\phi_y$ are dual eigenfunctions $\phi_x^*$, $\phi_y^*$. Thus, four sets of the functions $\phi_x$, $\phi_y$, $\phi_x^*$, $\phi_y^*$ that satisfy the primal simultaneous differential equations (1087) and (1088) are obtained.

With use of eqs. (74) to (76), stresses can be calculated by eqs. (1342) to (1345) as follows:
[Formula 554]

$$\sigma_{I2SA}(n) \equiv \begin{cases} \sigma_x \equiv G\omega\left[2\mu\phi_{Ioe}(n) + \left\{\phi_{Ioe}(n-1) + \phi_{Ioe}(n+1)\right\}\right] \\ \sigma_y \equiv G\omega\left[2\mu\phi_{Ioe}(n) - \left\{\phi_{Ioe}(n-1) + \phi_{Ioe}(n+1)\right\}\right] \\ \tau_{xy} \equiv G\omega\left\{-\phi_{Ieo}(n-1) + \phi_{Ieo}(n+1)\right\} \end{cases} \quad (1346)$$

$$\sigma_{I2AS}(n) \equiv \begin{cases} \sigma_x \equiv G\omega\left[2\mu\phi_{Ieo}(n) + \left\{\phi_{Ieo}(n-1) + \phi_{Ieo}(n+1)\right\}\right] \\ \sigma_y \equiv G\omega\left[2\mu\phi_{Ieo}(n) - \left\{\phi_{Ieo}(n-1) + \phi_{Ieo}(n+1)\right\}\right] \\ \tau_{xy} \equiv G\omega\left\{\phi_{Ioe}(n-1) - \phi_{Ioe}(n+1)\right\} \end{cases} \quad (1347)$$

$$\sigma_{I2SS}(n) \equiv \begin{cases} \sigma_x \equiv G\omega\left[2\mu\phi_{Iee}(n+1) + \left\{\phi_{Iee}(n) + \phi_{Iee}(n+2)\right\}\right] \\ \sigma_y \equiv G\omega\left[2\mu\phi_{Iee}(n+1) - \left\{\phi_{Iee}(n) + \phi_{Iee}(n+2)\right\}\right] \\ \tau_{xy} \equiv G\omega\left\{-\phi_{Ioo}(n) + \phi_{Ioo}(n+2)\right\} \end{cases} \quad (1348)$$

$$\sigma_{I2AA}(n) \equiv \begin{cases} \sigma_x \equiv G\omega\left[2\mu\phi_{Ioo}(n+1) + \left\{\phi_{Ioo}(n) + \phi_{Ioo}(n+2)\right\}\right] \\ \sigma_y \equiv G\omega\left[2\mu\phi_{Ioo}(n+1) - \left\{\phi_{Ioo}(n) + \phi_{Ioo}(n+2)\right\}\right] \\ \tau_{xy} \equiv G\omega\left\{\phi_{Iee}(n) - \phi_{Iee}(n+2)\right\} \end{cases} \quad (1349)$$

In this way, the combinations in which $\omega$ is replaced with $\omega_2$ of eq. (1100) express stresses $\sigma_x$, $\sigma_y$, $\tau_{xy}$ based on the primal eigenfunctions. It should be noted that according to eqs. (82) to (84) and eqs. (1173), (1174), the same as $\sigma_x$, $\sigma_y$, $\tau_{xy}$ represent stresses $\sigma_x^*$, $\sigma_y^*$, $\tau_{xy}^*$ based on the dual eigenfunctions. Thus, four sets of the functions expressing stresses $\sigma_x$, $\sigma_y$, $\tau_{xy}$, $\sigma_x^*$, $\sigma_y^*$, $\tau_{xy}^*$ are obtained.

The four sets are defined again below:

[Formula 555]

$$I_{2SA}(n) \equiv \begin{cases} \phi_x \equiv \phi_{Iee}(n,\omega_2) + \phi_{Iee}(n+1,\omega_2) \\ \phi_y \equiv -\phi_{Ioo}(n,\omega_2) + \phi_{Ioo}(n+1,\omega_2) \\ \sigma_x \equiv G\omega_2\left[2\mu\phi_{Ioe}(n,\omega_2) + \left\{\phi_{Ioe}(n-1,\omega_2) + \phi_{Ioe}(n+1,\omega_2)\right\}\right] \\ \sigma_y \equiv G\omega_2\left[2\mu\phi_{Ioe}(n,\omega_2) - \left\{\phi_{Ioe}(n-1,\omega_2) + \phi_{Ioe}(n+1,\omega_2)\right\}\right] \\ \tau_{xy} \equiv G\omega_2\left\{-\phi_{Ieo}(n-1,\omega_2) + \phi_{Ieo}(n+1,\omega_2)\right\} \\ \phi_x^* \equiv \phi_x, \qquad \phi_y^* \equiv \phi_y \\ \sigma_x^* \equiv \sigma_x, \qquad \sigma_y^* \equiv \sigma_y, \qquad \tau_{xy}^* \equiv \tau_{xy} \end{cases} \quad (1350)$$

$$I_{2AS}(n) \equiv \begin{cases} \phi_x \equiv \phi_{Ioo}(n,\omega_2) + \phi_{Ioo}(n+1,\omega_2) \\ \phi_y \equiv \phi_{Iee}(n,\omega_2) - \phi_{Iee}(n+1,\omega_2) \\ \sigma_x \equiv G\omega_2\left[2\mu\phi_{Ieo}(n,\omega_2) + \left\{\phi_{Ieo}(n-1,\omega_2) + \phi_{Ieo}(n+1,\omega_2)\right\}\right] \\ \sigma_y \equiv G\omega_2\left[2\mu\phi_{Ieo}(n,\omega_2) - \left\{\phi_{Ieo}(n-1,\omega_2) + \phi_{Ieo}(n+1,\omega_2)\right\}\right] \\ \tau_{xy} \equiv G\omega_2\left\{\phi_{Ioe}(n-1,\omega_2) - \phi_{Ioe}(n+1,\omega_2)\right\} \\ \phi_x^* \equiv \phi_x, \qquad \phi_y^* \equiv \phi_y \\ \sigma_x^* \equiv \sigma_x, \qquad \sigma_y^* \equiv \sigma_y, \qquad \tau_{xy}^* \equiv \tau_{xy} \end{cases} \tag{1351}$$

$$I_{2SS}(n) \equiv \begin{cases} \phi_x \equiv \phi_{Ioe}(n,\omega_2) + \phi_{Ioe}(n+1,\omega_2) \\ \phi_y \equiv -\phi_{Ieo}(n,\omega_2) + \phi_{Ieo}(n+1,\omega_2) \\ \sigma_x \equiv G\omega_2\left[2\mu\phi_{Iee}(n+1,\omega_2) + \left\{\phi_{Iee}(n,\omega_2) + \phi_{Iee}(n+2,\omega_2)\right\}\right] \\ \sigma_y \equiv G\omega_2\left[2\mu\phi_{Iee}(n+1,\omega_2) - \left\{\phi_{Iee}(n,\omega_2) + \phi_{Iee}(n+2,\omega_2)\right\}\right] \\ \tau_{xy} \equiv G\omega_2\left\{-\phi_{Ioo}(n,\omega_2) + \phi_{Ioo}(n+2,\omega_2)\right\} \\ \phi_x^* \equiv \phi_x, \qquad \phi_y^* \equiv \phi_y \\ \sigma_x^* \equiv \sigma_x, \qquad \sigma_y^* \equiv \sigma_y, \qquad \tau_{xy}^* \equiv \tau_{xy} \end{cases} \tag{1352}$$

$$I_{2AA}(n) \equiv \begin{cases} \phi_x \equiv \phi_{Ieo}(n,\omega_2) + \phi_{Ieo}(n+1,\omega_2) \\ \phi_y \equiv \phi_{Ioe}(n,\omega_2) - \phi_{Ioe}(n+1,\omega_2) \\ \sigma_x \equiv G\omega_2\left[2\mu\phi_{Ioo}(n+1,\omega_2) + \left\{\phi_{Ioo}(n,\omega_2) + \phi_{Ioo}(n+2,\omega_2)\right\}\right] \\ \sigma_y \equiv G\omega_2\left[2\mu\phi_{Ioo}(n+1,\omega_2) - \left\{\phi_{Ioo}(n,\omega_2) + \phi_{Ioo}(n+2,\omega_2)\right\}\right] \\ \tau_{xy} \equiv G\omega_2\left\{\phi_{Iee}(n,\omega_2) - \phi_{Iee}(n+2,\omega_2)\right\} \\ \phi_x^* \equiv \phi_x, \qquad \phi_y^* \equiv \phi_y \\ \sigma_x^* \equiv \sigma_x, \qquad \sigma_y^* \equiv \sigma_y, \qquad \tau_{xy}^* \equiv \tau_{xy} \end{cases} \tag{1353}$$

Though a boundary condition has not been reflected yet, they satisfy the primal simultaneous differential equations (1087), (1088) with respect to an arbitrary n.

11. 4. 24 Solution function using modified Bessel function of the second kind

Eigenvalues $\omega_1$, $\omega_2$ are collectively represented as $\omega$, and solutions using the modified Bessel function of the second kind $K_m$ of eqs. (1108), (1112) are expressed as follows according to eq. (1209):
[Formula 556]

$$\phi_{Kee}(r,\theta,n,\omega) \equiv \cos 2n\theta \cdot K_{2n}(\omega r) \tag{1354}$$

$$\phi_{Koo}(r,\theta,n,\omega) \equiv \sin 2n\theta \cdot K_{2n}(\omega r) \tag{1355}$$

$$\phi_{Koe}(r,\theta,n,\omega) \equiv \cos(2n+1)\theta \cdot K_{2n+1}(\omega r) \tag{1356}$$

$$\phi_{Keo}(r,\theta,n,\omega) \equiv \sin\left(2n+1\right)\theta \cdot K_{2n+1}(\omega r) \quad (1357)$$

Master variables of these functions are r and θ, while n and ω represent parameters. As the equation is long if all of these variables are described, only variables that should be noticed are described hereinafter. For example, in the case where n changes on both sides of an equation but r, θ, ω do not change, the argument is expressed as (n). Here, derived functions as follows are obtained:
[Formula 557]

$$\frac{\partial}{\partial x}\phi_{Kee}(n) = -\frac{\omega}{2}\left\{\phi_{Koe}(n-1) + \phi_{Koe}(n)\right\} \quad (1358)$$

$$\frac{\partial}{\partial x}\phi_{Koo}(n) = -\frac{\omega}{2}\left\{\phi_{Keo}(n-1) + \phi_{Keo}(n)\right\} \quad (1359)$$

$$\frac{\partial}{\partial x}\phi_{Keo}(n) = -\frac{\omega}{2}\left\{\phi_{Koo}(n) + \phi_{Koo}(n+1)\right\} \quad (1360)$$

$$\frac{\partial}{\partial x}\phi_{Koe}(n) = -\frac{\omega}{2}\left\{\phi_{Kee}(n) + \phi_{Kee}(n+1)\right\} \quad (1361)$$

and,

$$\frac{\partial}{\partial y}\phi_{Kee}(n) = \frac{\omega}{2}\left\{\phi_{Keo}(n-1) - \phi_{Keo}(n)\right\} \quad (1362)$$

$$\frac{\partial}{\partial y}\phi_{Koo}(n) = -\frac{\omega}{2}\left\{\phi_{Koe}(n-1) - \phi_{Koe}(n)\right\} \quad (1363)$$

$$\frac{\partial}{\partial y}\phi_{Keo}(n) = -\frac{\omega}{2}\left\{\phi_{Kee}(n) - \phi_{Kee}(n+1)\right\} \quad (1364)$$

$$\frac{\partial}{\partial y}\phi_{Koe}(n) = \frac{\omega}{2}\left\{\phi_{Koo}(n) - \phi_{Koo}(n+1)\right\} \quad (1365)$$

Further, the following relationship equations are derived from eqs. (1358) to (1361):
[Formula 558]

$$\frac{\partial}{\partial x}\left\{\phi_{Kee}(n) - \phi_{Kee}(n+1)\right\} = -\frac{\omega}{2}\left\{\phi_{Koe}(n-1) - \phi_{Koe}(n+1)\right\} \quad (1366)$$

$$\frac{\partial}{\partial x}\left\{\phi_{Koo}(n) - \phi_{Koo}(n+1)\right\} = -\frac{\omega}{2}\left\{\phi_{Keo}(n-1) - \phi_{Keo}(n+1)\right\} \quad (1367)$$

$$\frac{\partial}{\partial x}\left\{\phi_{Keo}(n) - \phi_{Keo}(n+1)\right\} = -\frac{\omega}{2}\left\{\phi_{Koo}(n) - \phi_{Koo}(n+2)\right\} \quad (1368)$$

$$\frac{\partial}{\partial x}\left\{\phi_{Koe}(n)-\phi_{Koe}(n+1)\right\}=-\frac{\omega}{2}\left\{\phi_{Kee}(n)-\phi_{Kee}(n+2)\right\} \quad (1369)$$

The following relationship equations are derived from eqs. (1362) to (1365):

$$\frac{\partial}{\partial y}\left\{\phi_{Kee}(n)+\phi_{Kee}(n+1)\right\}=\frac{\omega}{2}\left\{\phi_{Keo}(n-1)-\phi_{Keo}(n+1)\right\} \quad (1370)$$

$$\frac{\partial}{\partial y}\left\{\phi_{Koo}(n)+\phi_{Koo}(n+1)\right\}=-\frac{\omega}{2}\left\{\phi_{Koe}(n-1)-\phi_{Koe}(n+1)\right\} \quad (1371)$$

$$\frac{\partial}{\partial y}\left\{\phi_{Keo}(n)+\phi_{Keo}(n+1)\right\}=-\frac{\omega}{2}\left\{\phi_{Kee}(n)-\phi_{Kee}(n+2)\right\} \quad (1372)$$

$$\frac{\partial}{\partial y}\left\{\phi_{Koe}(n)+\phi_{Koe}(n+1)\right\}=\frac{\omega}{2}\left\{\phi_{Koo}(n)-\phi_{Koo}(n+2)\right\} \quad (1373)$$

Here, with focus on the combinations of eqs. (1366) and (1371), eqs. (1367) and (1370), eqs. (1369) and (1372), and eqs. (1368) and (1373), the following four combinations are defined:
[Formula 559]

$$\phi_{K1SA}(n)\equiv\begin{cases}\phi_x\equiv-\phi_{Kee}(n)+\phi_{Kee}(n+1)\\ \phi_y\equiv\phi_{Koo}(n)+\phi_{Koo}(n+1)\end{cases} \quad (1374)$$

$$\phi_{K1AS}(n)\equiv\begin{cases}\phi_x\equiv\phi_{Koo}(n)-\phi_{Koo}(n+1)\\ \phi_y\equiv\phi_{Kee}(n)+\phi_{Kee}(n+1)\end{cases} \quad (1375)$$

$$\phi_{K1SS}(n)\equiv\begin{cases}\phi_x\equiv-\phi_{Koe}(n)+\phi_{Koe}(n+1)\\ \phi_y\equiv\phi_{Keo}(n)+\phi_{Keo}(n+1)\end{cases} \quad (1376)$$

$$\phi_{K1AA}(n)\equiv\begin{cases}\phi_x\equiv\phi_{Keo}(n)-\phi_{Keo}(n+1)\\ \phi_y\equiv\phi_{Koe}(n)+\phi_{Koe}(n+1)\end{cases} \quad (1377)$$

Then, we find that the following eq. (1120) is established for each of the combinations:
[Formula 560]

$$\frac{\partial}{\partial x}\phi_x+\frac{\partial}{\partial y}\phi_y=0 \quad (1120)\ \text{(Aforementioned)}$$

Therefore, we can see that the combinations of eqs. (1374) to (1377) in which $\omega$ is replaced with $\omega_1$ of eq. (1099) satisfy the primal simultaneous eigenvalue problems of eqs. (1092) and (1093). In other words, $\phi_x$, $\phi_y$ are primal eigenfunctions. Further, according to eqs. (1157), (1158), the same functions as $\phi_x$, $\phi_y$ are dual eigenfunctions $\phi_x^*$, $\phi_y^*$. Thus, four sets of the functions $\phi_x$, $\phi_y$, $\phi_x^*$, $\phi_y^*$ that satisfy the primal simultaneous differential equations (1087) and (1088) are obtained.

With use of eqs. (74) to (76), stresses can be calculated by eqs. (1374) to (1377) as follows:
[Formula 561]

$$\sigma_{K1SA}(n) \equiv \begin{cases} \sigma_x \equiv G\omega\left\{\phi_{Koe}(n-1) - \phi_{Koe}(n+1)\right\} \\ \sigma_y \equiv -\sigma_x \\ \tau_{xy} \equiv -G\omega\left\{\phi_{Keo}(n-1) + \phi_{Keo}(n+1)\right\} \end{cases} \quad (1378)$$

$$\sigma_{K1AS}(n) \equiv \begin{cases} \sigma_x \equiv G\omega\left\{-\phi_{Keo}(n-1) + \phi_{Keo}(n+1)\right\} \\ \sigma_y \equiv -\sigma_x \\ \tau_{xy} \equiv -G\omega\left\{\phi_{Koe}(n-1) + \phi_{Koe}(n+1)\right\} \end{cases} \quad (1379)$$

$$\sigma_{K1SS}(n) \equiv \begin{cases} \sigma_x \equiv G\omega\left\{\phi_{Kee}(n) - \phi_{Kee}(n+2)\right\} \\ \sigma_y \equiv -\sigma_x \\ \tau_{xy} \equiv -G\omega\left\{\phi_{Koo}(n) + \phi_{Koo}(n+2)\right\} \end{cases} \quad (1380)$$

$$\sigma_{K1AA}(n) \equiv \begin{cases} \sigma_x \equiv G\omega\left\{-\phi_{Koo}(n) + \phi_{Koo}(n+2)\right\} \\ \sigma_y \equiv -\sigma_x \\ \tau_{xy} \equiv -G\omega\left\{\phi_{Kee}(n) + \phi_{Kee}(n+2)\right\} \end{cases} \quad (1381)$$

In this way, the combinations in which $\omega$ is replaced with $\omega_1$ of eq. (1099) express stresses $\sigma_x$, $\sigma_y$, $\tau_{xy}$ based on the primal eigenfunctions. It should be noted that according to eqs. (82) to (84) and eqs. (1157), (1158), the same as $\sigma_x$, $\sigma_y$, $\tau_{xy}$ represent stresses $\sigma_x^*$, $\sigma_y^*$, $\tau_{xy}^*$ based on the dual eigenfunctions. Thus, four sets of the functions expressing stresses $\sigma_x$, $\sigma_y$, $\tau_{xy}$, $\sigma_x^*$, $\sigma_y^*$, $\tau_{xy}^*$ are obtained.
The four sets are defined again below:
[Formula 562]

$$K_{1SA}(n) \equiv \begin{cases} \phi_x \equiv -\phi_{Kee}(n,\omega_1) + \phi_{Kee}(n+1,\omega_1) \\ \phi_y \equiv \phi_{Koo}(n,\omega_1) + \phi_{Koo}(n+1,\omega_1) \\ \sigma_x \equiv G\omega_1\left\{\phi_{Koe}(n-1,\omega_1) - \phi_{Koe}(n+1,\omega_1)\right\} \\ \sigma_y \equiv -\sigma_x \\ \tau_{xy} \equiv -G\omega_1\left\{\phi_{Keo}(n-1,\omega_1) + \phi_{Keo}(n+1,\omega_1)\right\} \\ \phi_x^* \equiv \phi_x, \qquad \phi_y^* \equiv \phi_y \\ \sigma_x^* \equiv \sigma_x, \qquad \sigma_y^* \equiv \sigma_y, \qquad \tau_{xy}^* \equiv \tau_{xy} \end{cases} \quad (1382)$$

$$K_{1AS}(n) \equiv \begin{cases} \phi_x \equiv \phi_{Koo}(n,\omega_1) - \phi_{Koo}(n+1,\omega_1) \\ \phi_y \equiv \phi_{Kee}(n,\omega_1) + \phi_{Kee}(n+1,\omega_1) \\ \sigma_x \equiv G\omega_1 \left\{ -\phi_{Keo}(n-1,\omega_1) + \phi_{Keo}(n+1,\omega_1) \right\} \\ \sigma_y \equiv -\sigma_x \\ \tau_{xy} \equiv -G\omega_1 \left\{ \phi_{Koe}(n-1,\omega_1) + \phi_{Koe}(n+1,\omega_1) \right\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \quad (1383)$$

$$K_{1SS}(n) \equiv \begin{cases} \phi_x \equiv -\phi_{Koe}(n,\omega_1) + \phi_{Koe}(n+1,\omega_1) \\ \phi_y \equiv \phi_{Keo}(n,\omega_1) + \phi_{Keo}(n+1,\omega_1) \\ \sigma_x \equiv G\omega_1 \left\{ \phi_{Kee}(n,\omega_1) - \phi_{Kee}(n+2,\omega_1) \right\} \\ \sigma_y \equiv -\sigma_x \\ \tau_{xy} \equiv -G\omega_1 \left\{ \phi_{Koo}(n,\omega_1) + \phi_{Koo}(n+2,\omega_1) \right\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \quad (1384)$$

[Formula 563]

$$K_{1AA}(n) \equiv \begin{cases} \phi_x \equiv \phi_{Keo}(n,\omega_1) - \phi_{Keo}(n+1,\omega_1) \\ \phi_y \equiv \phi_{Koe}(n,\omega_1) + \phi_{Koe}(n+1,\omega_1) \\ \sigma_x \equiv G\omega_1 \left\{ -\phi_{Koo}(n,\omega_1) + \phi_{Koo}(n+2,\omega_1) \right\} \\ \sigma_y \equiv -\sigma_x \\ \tau_{xy} \equiv -G\omega_1 \left\{ \phi_{Kee}(n,\omega_1) + \phi_{Kee}(n+2,\omega_1) \right\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \quad (1385)$$

Though a boundary condition has not been reflected yet, they satisfy the primal simultaneous differential equations (1087), (1088) with respect to an arbitrary n.

Similarly, focusing on combinations of eqs. (1370) and (1367), eqs. (1371)and (1366), eqs. (1373) and (1368), and eqs. (1372) and (1369), we define the following four combinations:

[Formula 564]

$$\phi_{K2SA}(n) \equiv \begin{cases} \phi_x \equiv \phi_{Kee}(n) + \phi_{Kee}(n+1) \\ \phi_y \equiv -\phi_{Koo}(n) + \phi_{Koo}(n+1) \end{cases} \quad (1386)$$

$$\phi_{K2AS}(n) \equiv \begin{cases} \phi_x \equiv \phi_{Koo}(n) + \phi_{Koo}(n+1) \\ \phi_y \equiv \phi_{Kee}(n) - \phi_{Kee}(n+1) \end{cases} \quad (1387)$$

$$\phi_{K2SS}(n) \equiv \begin{cases} \phi_x \equiv \phi_{Koe}(n) + \phi_{Koe}(n+1) \\ \phi_y \equiv -\phi_{Keo}(n) + \phi_{Keo}(n+1) \end{cases} \quad (1388)$$

$$\phi_{K2AA}(n) \equiv \begin{cases} \phi_x \equiv \phi_{Keo}(n) + \phi_{Keo}(n+1) \\ \phi_y \equiv \phi_{Koe}(n) - \phi_{Koe}(n+1) \end{cases} \quad (1389)$$

Regarding each of the same, the following eq. (1128) is established:

$$\frac{\partial}{\partial x}\phi_y - \frac{\partial}{\partial y}\phi_x = 0 \qquad (1128) \text{ (Aforementioned)}$$

Therefore, we can see that the combinations of eqs. (1386) to (1389) in which $\omega$ is replaced with $\omega_2$ of eq. (1100) satisfy eqs. (1092) and (1093) of the primal simultaneous eigenvalue problem. In other words, $\phi_x$, $\phi_y$ are primal eigenfunctions. Further, according to eqs. (1173), (1174), the same functions as $\phi_x$, $\phi_y$ are dual eigenfunctions $\phi_x^*$, $\phi_y^*$. Thus, four sets of the functions $\phi_x$, $\phi_y$, $\phi_x^*$, $\phi_y^*$ that satisfy the primal simultaneous differential equations (1087) and (1088) are obtained.

With use of eqs. (74) to (76), stresses can be calculated by eqs. (1386) to (1389) as follows:

[Formula 565]

$$\sigma_{K2SA}(n) \equiv \begin{cases} \sigma_x \equiv G\omega\left[-2\mu\phi_{Koe}(n) - \{\phi_{Koe}(n-1) + \phi_{Koe}(n+1)\}\right] \\ \sigma_y \equiv G\omega\left[-2\mu\phi_{Koe}(n) + \{\phi_{Koe}(n-1) + \phi_{Koe}(n+1)\}\right] \\ \tau_{xy} \equiv G\omega\{\phi_{Keo}(n-1) - \phi_{Keo}(n+1)\} \end{cases} \quad (1390)$$

$$\sigma_{K2AS}(n) \equiv \begin{cases} \sigma_x \equiv G\omega\left[-2\mu\phi_{Keo}(n) - \{\phi_{Keo}(n-1) + \phi_{Keo}(n+1)\}\right] \\ \sigma_y \equiv G\omega\left[-2\mu\phi_{Keo}(n) + \{\phi_{Keo}(n-1) + \phi_{Keo}(n+1)\}\right] \\ \tau_{xy} \equiv G\omega\{-\phi_{Koe}(n-1) + \phi_{Koe}(n+1)\} \end{cases} \quad (1391)$$

$$\sigma_{K2SS}(n) \equiv \begin{cases} \sigma_x \equiv G\omega\left[-2\mu\phi_{Kee}(n+1) - \{\phi_{Kee}(n) + \phi_{Kee}(n+2)\}\right] \\ \sigma_y \equiv G\omega\left[-2\mu\phi_{Kee}(n+1) + \{\phi_{Kee}(n) + \phi_{Kee}(n+2)\}\right] \\ \tau_{xy} \equiv G\omega\{\phi_{Koo}(n) - \phi_{Koo}(n+2)\} \end{cases} \quad (1392)$$

$$\sigma_{K2AA}(n) \equiv \begin{cases} \sigma_x \equiv G\omega\left[-2\mu\phi_{Koo}(n+1) - \{\phi_{Koo}(n) + \phi_{Koo}(n+2)\}\right] \\ \sigma_y \equiv G\omega\left[-2\mu\phi_{Koo}(n+1) + \{\phi_{Koo}(n) + \phi_{Koo}(n+2)\}\right] \\ \tau_{xy} \equiv G\omega\{-\phi_{Kee}(n) + \phi_{Kee}(n+2)\} \end{cases} \quad (1393)$$

In this way, the combinations in which $\omega$ is replaced with $\omega_2$ of eq. (1100) express stresses $\sigma_x$, $\sigma_y$, $\tau_{xy}$ based on the primal eigenfunctions. It should be noted that according to eqs. (82) to (84) and eqs. (1173), (1174), the same as $\sigma_x$, $\sigma_y$, $\tau_{xy}$ represent stresses $\sigma_x^*$, $\sigma_y^*$, $\tau_{xy}^*$ based on the dual eigenfunctions. Thus, four sets of the functions expressing stresses $\sigma_x$, $\sigma_y$, $\tau_{xy}$, $\sigma_x^*$, $\sigma_y^*$, $\tau_{xy}^*$ are obtained.

The four sets are defined again below:

[Formula 566]

$$K_{2SA}(n) \equiv \begin{cases} \phi_x \equiv \phi_{Kee}(n,\omega_2) + \phi_{Kee}(n+1,\omega_2) \\ \phi_y \equiv -\phi_{Koo}(n,\omega_2) + \phi_{Koo}(n+1,\omega_2) \\ \sigma_x \equiv G\omega_2 \left[ -2\mu\phi_{Koe}(n,\omega_2) - \left\{ \phi_{Koe}(n-1,\omega_2) + \phi_{Koe}(n+1,\omega_2) \right\} \right] \\ \sigma_y \equiv G\omega_2 \left[ -2\mu\phi_{Koe}(n,\omega_2) + \left\{ \phi_{Koe}(n-1,\omega_2) + \phi_{Koe}(n+1,\omega_2) \right\} \right] \\ \tau_{xy} \equiv G\omega_2 \left\{ \phi_{Keo}(n-1,\omega_2) - \phi_{Keo}(n+1,\omega_2) \right\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \tag{1394}$$

$$K_{2AS}(n) \equiv \begin{cases} \phi_x \equiv \phi_{Koo}(n,\omega_2) + \phi_{Koo}(n+1,\omega_2) \\ \phi_y \equiv \phi_{Kee}(n,\omega_2) - \phi_{Kee}(n+1,\omega_2) \\ \sigma_x \equiv G\omega_2 \left[ -2\mu\phi_{Keo}(n,\omega_2) - \left\{ \phi_{Keo}(n-1,\omega_2) + \phi_{Keo}(n+1,\omega_2) \right\} \right] \\ \sigma_y \equiv G\omega_2 \left[ -2\mu\phi_{Keo}(n,\omega_2) + \left\{ \phi_{Keo}(n-1,\omega_2) + \phi_{Keo}(n+1,\omega_2) \right\} \right] \\ \tau_{xy} \equiv G\omega_2 \left\{ -\phi_{Koe}(n-1,\omega_2) + \phi_{Koe}(n+1,\omega_2) \right\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \tag{1395}$$

$$K_{2SS}(n) \equiv \begin{cases} \phi_x \equiv \phi_{Koe}(n,\omega_2) + \phi_{Koe}(n+1,\omega_2) \\ \phi_y \equiv -\phi_{Keo}(n,\omega_2) + \phi_{Keo}(n+1,\omega_2) \\ \sigma_x \equiv G\omega_2 \left[ -2\mu\phi_{Kee}(n+1,\omega_2) - \left\{ \phi_{Kee}(n,\omega_2) + \phi_{Kee}(n+2,\omega_2) \right\} \right] \\ \sigma_y \equiv G\omega_2 \left[ -2\mu\phi_{Kee}(n+1,\omega_2) + \left\{ \phi_{Kee}(n,\omega_2) + \phi_{Kee}(n+2,\omega_2) \right\} \right] \\ \tau_{xy} \equiv G\omega_2 \left\{ \phi_{Koo}(n,\omega_2) - \phi_{Koo}(n+2,\omega_2) \right\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \tag{1396}$$

$$K_{2AA}(n) \equiv \begin{cases} \phi_x \equiv \phi_{Keo}(n,\omega_2) + \phi_{Keo}(n+1,\omega_2) \\ \phi_y \equiv \phi_{Koe}(n,\omega_2) - \phi_{Koe}(n+1,\omega_2) \\ \sigma_x \equiv G\omega_2 \left[ -2\mu\phi_{Koo}(n+1,\omega_2) - \left\{ \phi_{Koo}(n,\omega_2) + \phi_{Koo}(n+2,\omega_2) \right\} \right] \\ \sigma_y \equiv G\omega_2 \left[ -2\mu\phi_{Koo}(n+1,\omega_2) + \left\{ \phi_{Koo}(n,\omega_2) + \phi_{Koo}(n+2,\omega_2) \right\} \right] \\ \tau_{xy} \equiv G\omega_2 \left\{ -\phi_{Kee}(n,\omega_2) + \phi_{Kee}(n+2,\omega_2) \right\} \\ \phi_x^* \equiv \phi_x, \quad \phi_y^* \equiv \phi_y \\ \sigma_x^* \equiv \sigma_x, \quad \sigma_y^* \equiv \sigma_y, \quad \tau_{xy}^* \equiv \tau_{xy} \end{cases} \tag{1397}$$

Though a boundary condition has not been reflected yet, they satisfy the primal simultaneous differential equations (1087), (1088) with respect to an arbitrary n.

11. 4. 25 Function set of primal eigenfunction and dual eigenfunction

By imposing a boundary condition on the combination of function sets shown in Sections 11. 4. 21 to 11. 4. 24,

eigenvalues and eigenfunctions belonging to the same are settled. Regarding each of four deformation types of the modes SA, AS, SS, and AA, specific formulae of the primal eigenfunctions $\phi_x$, $\phi_y$, the stresses $\sigma_x$, $\sigma_y$, $\tau_{xy}$ based on these primal eigenfunctions, the dual eigenfunctions $\phi_x^*$, $\phi_y^*$, and the stresses $\sigma_x^*$, $\sigma_y^*$, $\tau_{xy}^*$ based on these dual eigenfunctions are show below.

[SA]

To the mode SA, the following eight sets in total belong: $J_{1SA}$ of eq. (1250); $J_{2SA}$ of eq. (1262); $Y_{1SA}$ of eq. (1294); $Y_{2SA}$ of eq. (1306); $I_{1SA}$ of eq. (1338); $I_{2SA}$ of eq. (1350); $K_{1SA}$ of eq. (1382); and $K_{2SA}$ of eq. (1394). As they serve as solution functions with respect to an arbitrary integer n, the total number is 8n.

(1) Regarding $J_{1SA}$, we obtain:

[Formula 567]

$$\begin{cases} \phi_x \equiv J_{2n}(\omega_1 r)\cdot\cos 2n\theta + J_{2n+2}(\omega_1 r)\cdot\cos(2n+2)\theta \\ \phi_y \equiv -J_{2n}(\omega_1 r)\cdot\sin 2n\theta + J_{2n+2}(\omega_1 r)\cdot\sin(2n+2)\theta \\ \phi_x^* \equiv -\phi_x, \quad \phi_y^* \equiv -\phi_y \end{cases} \quad (1398)$$

$$\begin{cases} \sigma_x \equiv G\omega_1 \{J_{2n-1}(\omega_1 r)\cdot\cos(2n-1)\theta - J_{2n+3}(\omega_1 r)\cdot\cos(2n+3)\theta\} \\ \sigma_y \equiv -\sigma_x \\ \tau_{xy} \equiv -G\omega_1 \{J_{2n-1}(\omega_1 r)\cdot\sin(2n-1)\theta + J_{2n+3}(\omega_1 r)\cdot\sin(2n+3)\theta\} \\ \sigma_x^* \equiv -\sigma_x, \quad \sigma_y^* \equiv -\sigma_y, \quad \tau_{xy}^* \equiv -\tau_{xy} \end{cases} \quad (1399)$$

Converting eq. (1398) according to eqs. (969), (970) gives:
[Formula 568]

$$\begin{cases} \phi_r \equiv \{J_{2n}(\omega_1 r) + J_{2n+2}(\omega_1 r)\}\cos(2n+1)\theta \\ \phi_\theta \equiv \{-J_{2n}(\omega_1 r) + J_{2n+2}(\omega_1 r)\}\sin(2n+1)\theta \\ \phi_r^* \equiv -\phi_r, \quad \phi_\theta^* \equiv -\phi_\theta \end{cases} \quad (1400)$$

Converting eq. (1399) according to eqs. (977), (978), (979) gives:

$$\begin{cases} \sigma_r \equiv G\omega_1 \{J_{2n-1}(\omega_1 r) - J_{2n+3}(\omega_1 r)\}\cos(2n+1)\theta \\ \sigma_\theta \equiv -\sigma_r \\ \tau_{r\theta} \equiv -G\omega_1 \{J_{2n-1}(\omega_1 r) + J_{2n+3}(\omega_1 r)\}\sin(2n+1)\theta \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1401)$$

(2) Regarding $J_{2SA}$, we obtain:
[Formula 569]

$$\begin{cases} \phi_x \equiv -J_{2n}(\omega_2 r)\cdot\cos 2n\theta + J_{2n+2}(\omega_2 r)\cdot\cos(2n+2)\theta \\ \phi_y \equiv J_{2n}(\omega_2 r)\cdot\sin 2n\theta + J_{2n+2}(\omega_2 r)\cdot\sin(2n+2)\theta \\ \phi_x^* \equiv -\phi_x, \quad \phi_y^* \equiv -\phi_y \end{cases} \quad (1402)$$

$$\begin{cases} g_1 \equiv 2\mu \cdot J_{2n+1}(\omega_2 r) \cdot \cos(2n+1)\theta \\ g_2 \equiv J_{2n-1}(\omega_2 r) \cdot \cos(2n-1)\theta + J_{2n+3}(\omega_2 r) \cdot \cos(2n+3)\theta \\ g_3 \equiv J_{2n-1}(\omega_2 r) \cdot \sin(2n-1)\theta - J_{2n+3}(\omega_2 r) \cdot \sin(2n+3)\theta \\ \sigma_x \equiv G\omega_2(g_1 - g_2), \quad \sigma_y \equiv G\omega_2(g_1 + g_2), \quad \tau_{xy} \equiv G\omega_2 g_3 \\ \sigma_x^* \equiv -\sigma_x, \quad \sigma_y^* \equiv -\sigma_y, \quad \tau_{xy}^* \equiv -\tau_{xy} \end{cases} \quad (1403)$$

Converting eq. (1402) according to eqs. (969), (970) gives:
[Formula 570]

$$\begin{cases} \phi_r \equiv \{-J_{2n}(\omega_2 r) + J_{2n+2}(\omega_2 r)\}\cos(2n+1)\theta \\ \phi_\theta \equiv \{J_{2n}(\omega_2 r) + J_{2n+2}(\omega_2 r)\}\sin(2n+1)\theta \\ \phi_r^* \equiv -\phi_r, \quad \phi_\theta^* \equiv -\phi_\theta \end{cases} \quad (1404)$$

Converting eq. (1403) according to eqs. (977), (978), (979) gives:

$$\begin{cases} h_1 \equiv 2\mu \cdot J_{2n+1}(\omega_2 r) \cdot \cos(2n+1)\theta \\ h_2 \equiv \{J_{2n-1}(\omega_2 r) + J_{2n+3}(\omega_2 r)\}\cos(2n+1)\theta \\ h_3 \equiv \{J_{2n-1}(\omega_2 r) - J_{2n+3}(\omega_2 r)\}\sin(2n+1)\theta \\ \sigma_r \equiv G\omega_2(h_1 - h_2), \quad \sigma_\theta \equiv G\omega_2(h_1 + h_2), \quad \tau_{r\theta} \equiv G\omega_2 h_3 \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1405)$$

(3) Regarding $Y_{1SA}$, we obtain:
[Formula 571]

$$\begin{cases} \phi_x \equiv Y_{2n}(\omega_1 r) \cdot \cos 2n\theta + Y_{2n+2}(\omega_1 r) \cdot \cos(2n+2)\theta \\ \phi_y \equiv -Y_{2n}(\omega_1 r) \cdot \sin 2n\theta + Y_{2n+2}(\omega_1 r) \cdot \sin(2n+2)\theta \\ \phi_x^* \equiv -\phi_x, \quad \phi_y^* \equiv -\phi_y \end{cases} \quad (1406)$$

$$\begin{cases} \sigma_x \equiv G\omega_1 \{Y_{2n-1}(\omega_1 r) \cdot \cos(2n-1)\theta - Y_{2n+3}(\omega_1 r) \cdot \cos(2n+3)\theta\} \\ \sigma_y \equiv -\sigma_x \\ \tau_{xy} \equiv -G\omega_1 \{Y_{2n-1}(\omega_1 r) \cdot \sin(2n-1)\theta + Y_{2n+3}(\omega_1 r) \cdot \sin(2n+3)\theta\} \\ \sigma_x^* \equiv -\sigma_x, \quad \sigma_y^* \equiv -\sigma_y, \quad \tau_{xy}^* \equiv -\tau_{xy} \end{cases} \quad (1407)$$

Converting eq. (1406) according to eqs. (969), (970) gives:
[Formula 572]

$$\begin{cases} \phi_r \equiv \{Y_{2n}(\omega_1 r) + Y_{2n+2}(\omega_1 r)\}\cos(2n+1)\theta \\ \phi_\theta \equiv \{-Y_{2n}(\omega_1 r) + Y_{2n+2}(\omega_1 r)\}\sin(2n+1)\theta \\ \phi_r^* \equiv -\phi_r, \quad \phi_\theta^* \equiv -\phi_\theta \end{cases} \quad (1408)$$

Converting eq. (1407) according to eqs. (977), (978), (979) gives:

$$\begin{cases} \sigma_r \equiv G\omega_1 \left\{Y_{2n-1}(\omega_1 r) - Y_{2n+3}(\omega_1 r)\right\}\cos(2n+1)\theta \\ \sigma_\theta \equiv -\sigma_r \\ \tau_{r\theta} \equiv -G\omega_1 \left\{Y_{2n-1}(\omega_1 r) + Y_{2n+3}(\omega_1 r)\right\}\sin(2n+1)\theta \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1409)$$

(4) Regarding $Y_{2SA}$, we obtain:
[Formula 573]

$$\begin{cases} \phi_x \equiv -Y_{2n}(\omega_2 r)\cdot\cos 2n\theta + Y_{2n+2}(\omega_2 r)\cdot\cos(2n+2)\theta \\ \phi_y \equiv Y_{2n}(\omega_2 r)\cdot\sin 2n\theta + Y_{2n+2}(\omega_2 r)\cdot\sin(2n+2)\theta \\ \phi_x^* \equiv -\phi_x, \quad \phi_y^* \equiv -\phi_y \end{cases} \quad (1410)$$

[Formula 574]

$$\begin{cases} g_1 \equiv 2\mu\cdot Y_{2n+1}(\omega_2 r)\cdot\cos(2n+1)\theta \\ g_2 \equiv Y_{2n-1}(\omega_2 r)\cdot\cos(2n-1)\theta + Y_{2n+3}(\omega_2 r)\cdot\cos(2n+3)\theta \\ g_3 \equiv Y_{2n-1}(\omega_2 r)\cdot\sin(2n-1)\theta - Y_{2n+3}(\omega_2 r)\cdot\sin(2n+3)\theta \\ \sigma_x \equiv G\omega_2(g_1 - g_2), \quad \sigma_y \equiv G\omega_2(g_1 + g_2), \quad \tau_{xy} \equiv G\omega_2 g_3 \\ \sigma_x^* \equiv -\sigma_x, \quad \sigma_y^* \equiv -\sigma_y, \quad \tau_{xy}^* \equiv -\tau_{xy} \end{cases} \quad (1411)$$

Converting eq. (1410) according to eqs. (969), (970) gives:

$$\begin{cases} \phi_r \equiv \left\{-Y_{2n}(\omega_2 r) + Y_{2n+2}(\omega_2 r)\right\}\cos(2n+1)\theta \\ \phi_\theta \equiv \left\{Y_{2n}(\omega_2 r) + Y_{2n+2}(\omega_2 r)\right\}\sin(2n+1)\theta \\ \phi_r^* \equiv -\phi_r, \quad \phi_\theta^* \equiv -\phi_\theta \end{cases} \quad (1412)$$

Converting eq. (1411) according to eqs. (977), (978), (979) gives:
[Formula 575]

$$\begin{cases} h_1 \equiv 2\mu\cdot Y_{2n+1}(\omega_2 r)\cdot\cos(2n+1)\theta \\ h_2 \equiv \left\{Y_{2n-1}(\omega_2 r) + Y_{2n+3}(\omega_2 r)\right\}\cos(2n+1)\theta \\ h_3 \equiv \left\{Y_{2n-1}(\omega_2 r) - Y_{2n+3}(\omega_2 r)\right\}\sin(2n+1)\theta \\ \sigma_r \equiv G\omega_2(h_1 - h_2), \quad \sigma_\theta \equiv G\omega_2(h_1 + h_2), \quad \tau_{r\theta} \equiv G\omega_2 h_3 \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1413)$$

(5) Regarding $I_{1SA}$, we obtain:
[Formula 576]

$$\begin{cases} \phi_x \equiv -I_{2n}(\omega_1 r)\cdot\cos 2n\theta + I_{2n+2}(\omega_1 r)\cdot\cos(2n+2)\theta \\ \phi_y \equiv I_{2n}(\omega_1 r)\cdot\sin 2n\theta + I_{2n+2}(\omega_1 r)\cdot\sin(2n+2)\theta \\ \phi_x^* \equiv \phi_x, \quad \phi_y^* \equiv \phi_y \end{cases} \quad (1414)$$

$$\begin{cases} \sigma_x \equiv G\omega_1 \left\{-I_{2n-1}(\omega_1 r)\cdot\cos\left(2n-1\right)\theta + I_{2n+3}(\omega_1 r)\cdot\cos\left(2n+3\right)\theta\right\} \\ \sigma_y \equiv -\sigma_x \\ \tau_{xy} \equiv G\omega_1 \left\{I_{2n-1}(\omega_1 r)\cdot\sin\left(2n-1\right)\theta + I_{2n+3}(\omega_1 r)\cdot\sin\left(2n+3\right)\theta\right\} \\ \sigma_x^* \equiv \sigma_x, \quad \sigma_y^* \equiv \sigma_y, \quad \tau_{xy}^* \equiv \tau_{xy} \end{cases} \quad (1415)$$

Converting eq. (1414) according to eqs. (969), (970) gives:

$$\begin{cases} \phi_r \equiv \left\{-I_{2n}(\omega_1 r) + I_{2n+2}(\omega_1 r)\right\}\cos\left(2n+1\right)\theta \\ \phi_\theta \equiv \left\{I_{2n}(\omega_1 r) + I_{2n+2}(\omega_1 r)\right\}\sin\left(2n+1\right)\theta \\ \phi_r^* \equiv \phi_r, \quad \phi_\theta^* \equiv \phi_\theta \end{cases} \quad (1416)$$

Converting eq. (1415) according to eqs. (977), (978), (979) gives:
[Formula 577]

$$\begin{cases} \sigma_r \equiv G\omega_1 \left\{-I_{2n-1}(\omega_1 r) + I_{2n+3}(\omega_1 r)\right\}\cos\left(2n+1\right)\theta \\ \sigma_\theta \equiv -\sigma_r \\ \tau_{r\theta} \equiv G\omega_1 \left\{I_{2n-1}(\omega_1 r) + I_{2n+3}(\omega_1 r)\right\}\sin\left(2n+1\right)\theta \\ \sigma_r^* \equiv \sigma_r, \quad \sigma_\theta^* \equiv \sigma_\theta, \quad \tau_{r\theta}^* \equiv \tau_{r\theta} \end{cases} \quad (1417)$$

(6) Regarding $I_{2SA}$, we obtain:
[Formula 578]

$$\begin{cases} \phi_x \equiv I_{2n}(\omega_2 r)\cdot\cos 2n\theta + I_{2n+2}(\omega_2 r)\cdot\cos\left(2n+2\right)\theta \\ \phi_y \equiv -I_{2n}(\omega_2 r)\cdot\sin 2n\theta + I_{2n+2}(\omega_2 r)\cdot\sin\left(2n+2\right)\theta \\ \phi_x^* \equiv \phi_x, \quad \phi_y^* \equiv \phi_y \end{cases} \quad (1418)$$

$$\begin{cases} g_1 \equiv 2\mu\cdot I_{2n+1}(\omega_2 r)\cdot\cos\left(2n+1\right)\theta \\ g_2 \equiv I_{2n-1}(\omega_2 r)\cdot\cos\left(2n-1\right)\theta + I_{2n+3}(\omega_2 r)\cdot\cos\left(2n+3\right)\theta \\ g_3 \equiv -I_{2n-1}(\omega_2 r)\cdot\sin\left(2n-1\right)\theta + I_{2n+3}(\omega_2 r)\cdot\sin\left(2n+3\right)\theta \\ \sigma_x \equiv G\omega_2\left(g_1+g_2\right), \quad \sigma_y \equiv G\omega_2\left(g_1-g_2\right), \quad \tau_{xy} \equiv G\omega_2 g_3 \\ \sigma_x^* \equiv \sigma_x, \quad \sigma_y^* \equiv \sigma_y, \quad \tau_{xy}^* \equiv \tau_{xy} \end{cases} \quad (1419)$$

Converting eq. (1418) according to eqs. (969), (970) gives:
[Formula 579]

$$\begin{cases} \phi_r \equiv \left\{I_{2n}(\omega_2 r) + I_{2n+2}(\omega_2 r)\right\}\cos\left(2n+1\right)\theta \\ \phi_\theta \equiv \left\{-I_{2n}(\omega_2 r) + I_{2n+2}(\omega_2 r)\right\}\sin\left(2n+1\right)\theta \\ \phi_r^* \equiv \phi_r, \quad \phi_\theta^* \equiv \phi_\theta \end{cases} \quad (1420)$$

Converting eq. (1419) according to eqs. (977), (978), (979) gives:

$$\begin{cases} h_1 \equiv 2\mu \cdot I_{2n+1}(\omega_2 r) \cdot \cos(2n+1)\theta \\ h_2 \equiv \{I_{2n-1}(\omega_2 r) + I_{2n+3}(\omega_2 r)\}\cos(2n+1)\theta \\ h_3 \equiv \{-I_{2n-1}(\omega_2 r) + I_{2n+3}(\omega_2 r)\}\sin(2n+1)\theta \\ \sigma_r \equiv G\omega_2(h_1+h_2), \quad \sigma_\theta \equiv G\omega_2(h_1-h_2), \quad \tau_{r\theta} \equiv G\omega_2 h_3 \\ \sigma_r^* \equiv \sigma_r, \quad \sigma_\theta^* \equiv \sigma_\theta, \quad \tau_{r\theta}^* \equiv \tau_{r\theta} \end{cases} \quad (1421)$$

(7) Regarding $I_{1SA}$, we obtain:
[Formula 580]

$$\begin{cases} \phi_x \equiv -K_{2n}(\omega_1 r) \cdot \cos 2n\theta + K_{2n+2}(\omega_1 r) \cdot \cos(2n+2)\theta \\ \phi_y \equiv K_{2n}(\omega_1 r) \cdot \sin 2n\theta + K_{2n+2}(\omega_1 r) \cdot \sin(2n+2)\theta \\ \phi_x^* \equiv \phi_x, \quad \phi_y^* \equiv \phi_y \end{cases} \quad (1422)$$

$$\begin{cases} \sigma_x \equiv G\omega_1\{K_{2n-1}(\omega_1 r) \cdot \cos(2n-1)\theta - K_{2n+3}(\omega_1 r) \cdot \cos(2n+3)\theta\} \\ \sigma_y \equiv -\sigma_x \\ \tau_{xy} \equiv -G\omega_1\{K_{2n-1}(\omega_1 r) \cdot \sin(2n-1)\theta + K_{2n+3}(\omega_1 r) \cdot \sin(2n+3)\theta\} \\ \sigma_x^* \equiv \sigma_x, \quad \sigma_y^* \equiv \sigma_y, \quad \tau_{xy}^* \equiv \tau_{xy} \end{cases} \quad (1423)$$

Converting eq. (1422) according to eqs. (969), (970) gives:
[Formula 581]

$$\begin{cases} \phi_r \equiv \{-K_{2n}(\omega_1 r) + K_{2n+2}(\omega_1 r)\}\cos(2n+1)\theta \\ \phi_\theta \equiv \{K_{2n}(\omega_1 r) + K_{2n+2}(\omega_1 r)\}\sin(2n+1)\theta \\ \phi_r^* \equiv \phi_r, \quad \phi_\theta^* \equiv \phi_\theta \end{cases} \quad (1424)$$

Converting eq. (1423) according to eqs. (977), (978), (979) gives:

$$\begin{cases} \sigma_r \equiv G\omega_1\{K_{2n-1}(\omega_1 r) - K_{2n+3}(\omega_1 r)\}\cos(2n+1)\theta \\ \sigma_\theta \equiv -\sigma_r \\ \tau_{r\theta} \equiv -G\omega_1\{K_{2n-1}(\omega_1 r) + K_{2n+3}(\omega_1 r)\}\sin(2n+1)\theta \\ \sigma_r^* \equiv \sigma_r, \quad \sigma_\theta^* \equiv \sigma_\theta, \quad \tau_{r\theta}^* \equiv \tau_{r\theta} \end{cases} \quad (1425)$$

(8) Regarding $I_{2SA}$, we obtain:
[Formula 582]

$$\begin{cases} \phi_x \equiv K_{2n}(\omega_2 r) \cdot \cos 2n\theta + K_{2n+2}(\omega_2 r) \cdot \cos(2n+2)\theta \\ \phi_y \equiv -K_{2n}(\omega_2 r) \cdot \sin 2n\theta + K_{2n+2}(\omega_2 r) \cdot \sin(2n+2)\theta \\ \phi_x^* \equiv \phi_x, \quad \phi_y^* \equiv \phi_y \end{cases} \quad (1426)$$

$$\begin{cases} g_1 \equiv -2\mu \cdot K_{2n+1}(\omega_2 r) \cdot \cos(2n+1)\theta \\ g_2 \equiv K_{2n-1}(\omega_2 r) \cdot \cos(2n-1)\theta + K_{2n+3}(\omega_2 r) \cdot \cos(2n+3)\theta \\ g_3 \equiv K_{2n-1}(\omega_2 r) \cdot \sin(2n-1)\theta - K_{2n+3}(\omega_2 r) \cdot \sin(2n+3)\theta \\ \sigma_x \equiv G\omega_2(g_1 - g_2), \quad \sigma_y \equiv G\omega_2(g_1 + g_2), \quad \tau_{xy} \equiv G\omega_2 g_3 \\ \sigma_x^* \equiv \sigma_x, \quad \sigma_y^* \equiv \sigma_y, \quad \tau_{xy}^* \equiv \tau_{xy} \end{cases} \quad (1427)$$

[Formula 583]

Converting eq. (1426) according to eqs. (969), (970) gives:

$$\begin{cases} \phi_r \equiv \{K_{2n}(\omega_2 r) + K_{2n+2}(\omega_2 r)\}\cos(2n+1)\theta \\ \phi_\theta \equiv \{-K_{2n}(\omega_2 r) + K_{2n+2}(\omega_2 r)\}\sin(2n+1)\theta \\ \phi_r^* \equiv \phi_r, \quad \phi_\theta^* \equiv \phi_\theta \end{cases} \quad (1428)$$

Converting eq. (1427) according to eqs. (977), (978), (979) gives:

$$\begin{cases} h_1 \equiv -2\mu \cdot K_{2n+1}(\omega_2 r) \cdot \cos(2n+1)\theta \\ h_2 \equiv \{K_{2n-1}(\omega_2 r) + K_{2n+3}(\omega_2 r)\}\cos(2n+1)\theta \\ h_3 \equiv \{K_{2n-1}(\omega_2 r) - K_{2n+3}(\omega_2 r)\}\sin(2n+1)\theta \\ \sigma_r \equiv G\omega_2(h_1 - h_2), \quad \sigma_\theta \equiv G\omega_2(h_1 + h_2), \quad \tau_{r\theta} \equiv G\omega_2 h_3 \\ \sigma_r^* \equiv \sigma_r, \quad \sigma_\theta^* \equiv \sigma_\theta, \quad \tau_{r\theta}^* \equiv \tau_{r\theta} \end{cases} \quad (1429)$$

[AS]

To the mode AS, the following eight sets in total belong: $J_{1AS}$ of eq. (1251); $J_{2AS}$ of eq. (1263); $Y_{1AS}$ of eq. (1295); $Y_{2AS}$ of eq. (1307); $I_{1AS}$ of eq. (1339); $I_{2AS}$ of eq. (1351); $K_{1AS}$ of eq. (1383); and $K_{2AS}$ of eq. (1395). As they serve as solution functions with respect to an arbitrary integer n, the total number is 8n.

(1) Regarding $J_{1AS}$, we obtain:

[Formula 584]

$$\begin{cases} \phi_x \equiv J_{2n}(\omega_1 r) \cdot \sin 2n\theta + J_{2n+2}(\omega_1 r) \cdot \sin(2n+2)\theta \\ \phi_y \equiv J_{2n}(\omega_1 r) \cdot \cos 2n\theta - J_{2n+2}(\omega_1 r) \cdot \cos(2n+2)\theta \\ \phi_x^* \equiv -\phi_x, \quad \phi_y^* \equiv -\phi_y \end{cases} \quad (1430)$$

[Formula 585]

$$\begin{cases} \sigma_x \equiv G\omega_1 \{J_{2n-1}(\omega_1 r) \cdot \sin(2n-1)\theta - J_{2n+3}(\omega_1 r) \cdot \sin(2n+3)\theta\} \\ \sigma_y \equiv -\sigma_x \\ \tau_{xy} \equiv G\omega_1 \{J_{2n-1}(\omega_1 r) \cdot \cos(2n-1)\theta + J_{2n+3}(\omega_1 r) \cdot \cos(2n+3)\theta\} \\ \sigma_x^* \equiv -\sigma_x, \quad \sigma_y^* \equiv -\sigma_y, \quad \tau_{xy}^* \equiv -\tau_{xy} \end{cases} \quad (1431)$$

Converting eq. (1430) according to eqs. (969), (970) gives:

$$\begin{cases} \phi_r \equiv \left\{J_{2n}(\omega_1 r)+J_{2n+2}(\omega_1 r)\right\}\sin(2n+1)\theta \\ \phi_\theta \equiv \left\{J_{2n}(\omega_1 r)-J_{2n+2}(\omega_1 r)\right\}\cos(2n+1)\theta \\ \phi_r^* \equiv -\phi_r, \quad \phi_\theta^* \equiv -\phi_\theta \end{cases} \quad (1432)$$

Converting eq. (1431) according to eqs. (977), (978), (979) gives:
[Formula 586]

$$\begin{cases} \sigma_r \equiv G\omega_1 \left\{J_{2n-1}(\omega_1 r)-J_{2n+3}(\omega_1 r)\right\}\sin(2n+1)\theta \\ \sigma_\theta \equiv -\sigma_r \\ \tau_{r\theta} \equiv G\omega_1 \left\{J_{2n-1}(\omega_1 r)+J_{2n+3}(\omega_1 r)\right\}\cos(2n+1)\theta \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1433)$$

(2) Regarding $J_{2AS}$, we obtain:
[Formula 587]

$$\begin{cases} \phi_x \equiv J_{2n}(\omega_2 r)\cdot\sin 2n\theta - J_{2n+2}(\omega_2 r)\cdot\sin(2n+2)\theta \\ \phi_y \equiv J_{2n}(\omega_2 r)\cdot\cos 2n\theta + J_{2n+2}(\omega_2 r)\cdot\cos(2n+2)\theta \\ \phi_x^* \equiv -\phi_x, \quad \phi_y^* \equiv -\phi_y \end{cases} \quad (1434)$$

$$\begin{cases} g_1 \equiv -2\mu\cdot J_{2n+1}(\omega_2 r)\cdot\sin(2n+1)\theta \\ g_2 \equiv J_{2n-1}(\omega_2 r)\cdot\sin(2n-1)\theta + J_{2n+3}(\omega_2 r)\cdot\sin(2n+3)\theta \\ g_3 \equiv J_{2n-1}(\omega_2 r)\cdot\cos(2n-1)\theta - J_{2n+3}(\omega_2 r)\cdot\cos(2n+3)\theta \\ \sigma_x \equiv G\omega_2(g_1+g_2), \quad \sigma_y \equiv G\omega_2(g_1-g_2), \quad \tau_{xy} \equiv G\omega_2 g_3 \\ \sigma_x^* \equiv -\sigma_x, \quad \sigma_y^* \equiv -\sigma_y, \quad \tau_{xy}^* \equiv -\tau_{xy} \end{cases} \quad (1435)$$

Converting eq. (1434) according to eqs. (969), (970) gives:
[Formula 588]

$$\begin{cases} \phi_r \equiv \left\{J_{2n}(\omega_2 r)-J_{2n+2}(\omega_2 r)\right\}\sin(2n+1)\theta \\ \phi_\theta \equiv \left\{J_{2n}(\omega_2 r)+J_{2n+2}(\omega_2 r)\right\}\cos(2n+1)\theta \\ \phi_r^* \equiv -\phi_r, \quad \phi_\theta^* \equiv -\phi_\theta \end{cases} \quad (1436)$$

Converting (1435) according to eqs. (977), (978), (979) gives:

$$\begin{cases} h_1 \equiv -2\mu\cdot J_{2n+1}(\omega_2 r)\cdot\sin(2n+1)\theta \\ h_2 \equiv \left\{J_{2n-1}(\omega_2 r)+J_{2n+3}(\omega_2 r)\right\}\sin(2n+1)\theta \\ h_3 \equiv \left\{J_{2n-1}(\omega_2 r)-J_{2n+3}(\omega_2 r)\right\}\cos(2n+1)\theta \\ \sigma_r \equiv G\omega_2(h_1+h_2), \quad \sigma_\theta \equiv G\omega_2(h_1-h_2), \quad \tau_{r\theta} \equiv G\omega_2 h_3 \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1437)$$

(3) Regarding $Y_{1AS}$, we obtain:
[Formula 589]

$$\begin{cases} \phi_x \equiv Y_{2n}(\omega_1 r)\cdot \sin 2n\theta + Y_{2n+2}(\omega_1 r)\cdot \sin\left(2n+2\right)\theta \\ \phi_y \equiv Y_{2n}(\omega_1 r)\cdot \cos 2n\theta - Y_{2n+2}(\omega_1 r)\cdot \cos\left(2n+2\right)\theta \\ \phi_x^* \equiv -\phi_x, \quad \phi_y^* \equiv -\phi_y \end{cases} \quad (1438)$$

$$\begin{cases} \sigma_x \equiv G\omega_1 \left\{Y_{2n-1}(\omega_1 r)\cdot \sin\left(2n-1\right)\theta - Y_{2n+3}(\omega_1 r)\cdot \sin\left(2n+3\right)\theta\right\} \\ \sigma_y \equiv -\sigma_x \\ \tau_{xy} \equiv G\omega_1 \left\{Y_{2n-1}(\omega_1 r)\cdot \cos\left(2n-1\right)\theta + Y_{2n+3}(\omega_1 r)\cdot \cos\left(2n+3\right)\theta\right\} \\ \sigma_x^* \equiv -\sigma_x, \quad \sigma_y^* \equiv -\sigma_y, \quad \tau_{xy}^* \equiv -\tau_{xy} \end{cases}$$

Converting eq. (1438) according to eqs. (969), (970) gives:
[Formula 590]

$$\begin{cases} \phi_r \equiv \left\{Y_{2n}(\omega_1 r) + Y_{2n+2}(\omega_1 r)\right\}\sin\left(2n+1\right)\theta \\ \phi_\theta \equiv \left\{Y_{2n}(\omega_1 r) - Y_{2n+2}(\omega_1 r)\right\}\cos\left(2n+1\right)\theta \\ \phi_r^* \equiv -\phi_r, \quad \phi_\theta^* \equiv -\phi_\theta \end{cases} \quad (1440)$$

Converting (1439) according to eqs. (977), (978), (979) gives:

$$\begin{cases} \sigma_r \equiv G\omega_1 \left\{Y_{2n-1}(\omega_1 r) - Y_{2n+3}(\omega_1 r)\right\}\sin\left(2n+1\right)\theta \\ \sigma_\theta \equiv -\sigma_r \\ \tau_{r\theta} \equiv G\omega_1 \left\{Y_{2n-1}(\omega_1 r) + Y_{2n+3}(\omega_1 r)\right\}\cos\left(2n+1\right)\theta \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1441)$$

(4) Regarding $Y_{2AS}$, we obtain:
[Formula 591]

$$\begin{cases} \phi_x \equiv Y_{2n}(\omega_2 r)\cdot \sin 2n\theta - Y_{2n+2}(\omega_2 r)\cdot \sin\left(2n+2\right)\theta \\ \phi_y \equiv Y_{2n}(\omega_2 r)\cdot \cos 2n\theta + Y_{2n+2}(\omega_2 r)\cdot \cos\left(2n+2\right)\theta \\ \phi_x^* \equiv -\phi_x, \quad \phi_y^* \equiv -\phi_y \end{cases} \quad (1442)$$

$$\begin{cases} g_1 \equiv -2\mu \cdot Y_{2n+1}(\omega_2 r)\cdot \sin\left(2n+1\right)\theta \\ g_2 \equiv Y_{2n-1}(\omega_2 r)\cdot \sin\left(2n-1\right)\theta + Y_{2n+3}(\omega_2 r)\cdot \sin\left(2n+3\right)\theta \\ g_3 \equiv Y_{2n-1}(\omega_2 r)\cdot \cos\left(2n-1\right)\theta - Y_{2n+3}(\omega_2 r)\cdot \cos\left(2n+3\right)\theta \\ \sigma_x \equiv G\omega_2\left(g_1 + g_2\right), \quad \sigma_y \equiv G\omega_2\left(g_1 - g_2\right), \quad \tau_{xy} \equiv G\omega_2 g_3 \\ \sigma_x^* \equiv -\sigma_x, \quad \sigma_y^* \equiv -\sigma_y, \quad \tau_{xy}^* \equiv -\tau_{xy} \end{cases} \quad (1443)$$

Converting eq. (1442) according to eqs. (969), (970) gives:
[Formula 592]

$$\begin{cases} \phi_r \equiv \left\{Y_{2n}(\omega_2 r) - Y_{2n+2}(\omega_2 r)\right\}\sin\left(2n+1\right)\theta \\ \phi_\theta \equiv \left\{Y_{2n}(\omega_2 r) + Y_{2n+2}(\omega_2 r)\right\}\cos\left(2n+1\right)\theta \\ \phi_r^* \equiv -\phi_r, \quad \phi_\theta^* \equiv -\phi_\theta \end{cases} \tag{1444}$$

Converting (1443) according to eqs. (977), (978), (979) gives:

$$\begin{cases} h_1 \equiv -2\mu \cdot Y_{2n+1}(\omega_2 r)\cdot \sin\left(2n+1\right)\theta \\ h_2 \equiv \left\{Y_{2n-1}(\omega_2 r) + Y_{2n+3}(\omega_2 r)\right\}\sin\left(2n+1\right)\theta \\ h_3 \equiv \left\{Y_{2n-1}(\omega_2 r) - Y_{2n+3}(\omega_2 r)\right\}\cos\left(2n+1\right)\theta \\ \sigma_r \equiv G\omega_2\left(h_1 + h_2\right), \quad \sigma_\theta \equiv G\omega_2\left(h_1 - h_2\right), \quad \tau_{r\theta} \equiv G\omega_2 h_3 \\ \sigma_r^* \equiv -\sigma_r, \quad \sigma_\theta^* \equiv -\sigma_\theta, \quad \tau_{r\theta}^* \equiv -\tau_{r\theta} \end{cases} \tag{1445}$$

(5) Regarding $I_{1AS}$, we obtain:
[Formula 593]

$$\begin{cases} \phi_x \equiv I_{2n}(\omega_1 r)\cdot \sin 2n\theta - I_{2n+2}(\omega_1 r)\cdot \sin\left(2n+2\right)\theta \\ \phi_y \equiv I_{2n}(\omega_1 r)\cdot \cos 2n\theta + I_{2n+2}(\omega_1 r)\cdot \cos\left(2n+2\right)\theta \\ \phi_x^* \equiv \phi_x, \quad \phi_y^* \equiv \phi_y \end{cases} \tag{1446}$$

$$\begin{cases} \sigma_x \equiv G\omega_1\left\{I_{2n-1}(\omega_1 r)\cdot \sin\left(2n-1\right)\theta - I_{2n+3}(\omega_1 r)\cdot \sin\left(2n+3\right)\theta\right\} \\ \sigma_y \equiv -\sigma_x \\ \tau_{xy} \equiv G\omega_1\left\{I_{2n-1}(\omega_1 r)\cdot \cos\left(2n-1\right)\theta + I_{2n+3}(\omega_1 r)\cdot \cos\left(2n+3\right)\theta\right\} \\ \sigma_x^* \equiv \sigma_x, \quad \sigma_y^* \equiv \sigma_y, \quad \tau_{xy}^* \equiv \tau_{xy} \end{cases} \tag{1447}$$

Converting eq. (1446) according to eqs. (969), (970) gives:
[Formula 594]

$$\begin{cases} \phi_r \equiv \left\{I_{2n}(\omega_1 r) - I_{2n+2}(\omega_1 r)\right\}\sin\left(2n+1\right)\theta \\ \phi_\theta \equiv \left\{I_{2n}(\omega_1 r) + I_{2n+2}(\omega_1 r)\right\}\cos\left(2n+1\right)\theta \\ \phi_r^* \equiv \phi_r, \quad \phi_\theta^* \equiv \phi_\theta \end{cases} \tag{1448}$$

Converting eq. (1447) according to eqs. (977), (978), (979) gives:

$$\begin{cases} \sigma_r \equiv G\omega_1\left\{I_{2n-1}(\omega_1 r) - I_{2n+3}(\omega_1 r)\right\}\sin\left(2n+1\right)\theta \\ \sigma_\theta \equiv -\sigma_r \\ \tau_{r\theta} \equiv G\omega_1\left\{I_{2n-1}(\omega_1 r) + I_{2n+3}(\omega_1 r)\right\}\cos\left(2n+1\right)\theta \\ \sigma_r^* \equiv \sigma_r, \quad \sigma_\theta^* \equiv \sigma_\theta, \quad \tau_{r\theta}^* \equiv \tau_{r\theta} \end{cases} \tag{1449}$$

(6) Regarding $I_{2AS}$, we obtain:
[Formula 595]

$$\begin{cases} \phi_x \equiv I_{2n}(\omega_2 r)\cdot \sin 2n\theta + I_{2n+2}(\omega_2 r)\cdot \sin\left(2n+2\right)\theta \\ \phi_y \equiv I_{2n}(\omega_2 r)\cdot \cos 2n\theta - I_{2n+2}(\omega_2 r)\cdot \cos\left(2n+2\right)\theta \\ \phi_x^* \equiv \phi_x, \qquad \phi_y^* \equiv \phi_y \end{cases} \quad (1450)$$

$$\begin{cases} g_1 \equiv 2\mu\cdot I_{2n+1}(\omega_2 r)\cdot \sin\left(2n+1\right)\theta \\ g_2 \equiv I_{2n-1}(\omega_2 r)\cdot \sin\left(2n-1\right)\theta + I_{2n+3}(\omega_2 r)\cdot \sin\left(2n+3\right)\theta \\ g_3 \equiv I_{2n-1}(\omega_2 r)\cdot \cos\left(2n-1\right)\theta - I_{2n+3}(\omega_2 r)\cdot \cos\left(2n+3\right)\theta \\ \sigma_x \equiv G\omega_2\left(g_1+g_2\right), \quad \sigma_y \equiv G\omega_2\left(g_1-g_2\right), \quad \tau_{xy} \equiv G\omega_2 g_3 \\ \sigma_x^* \equiv \sigma_x, \qquad \sigma_y^* \equiv \sigma_y, \qquad \tau_{xy}^* \equiv \tau_{xy} \end{cases} \quad (1451)$$

Converting eq. (1450) according to eqs. (969), (970) gives:
[Formula 596]

$$\begin{cases} \phi_r \equiv \left\{I_{2n}(\omega_2 r) + I_{2n+2}(\omega_2 r)\right\}\sin\left(2n+1\right)\theta \\ \phi_\theta \equiv \left\{I_{2n}(\omega_2 r) - I_{2n+2}(\omega_2 r)\right\}\cos\left(2n+1\right)\theta \\ \phi_r^* \equiv \phi_r, \qquad \phi_\theta^* \equiv \phi_\theta \end{cases} \quad (1452)$$

Converting eq. (1451) according to eqs. (977), (978), (979) gives:
[Formula 597]

$$\begin{cases} h_3 \equiv 2\mu\cdot I_{2n+1}(\omega_2 r)\cdot \sin\left(2n+1\right)\theta \\ h_1 \equiv \left\{I_{2n-1}(\omega_2 r) + I_{2n+3}(\omega_2 r)\right\}\sin\left(2n+1\right)\theta \\ h_2 \equiv \left\{I_{2n-1}(\omega_2 r) - I_{2n+3}(\omega_2 r)\right\}\cos\left(2n+1\right)\theta \\ \sigma_r \equiv G\omega_2\left(h_1+h_2\right), \quad \sigma_\theta \equiv G\omega_2\left(h_1-h_2\right), \quad \tau_{r\theta} \equiv G\omega_2 h_3 \\ \sigma_r^* \equiv \sigma_r, \qquad \sigma_\theta^* \equiv \sigma_\theta, \qquad \tau_{r\theta}^* \equiv \tau_{r\theta} \end{cases} \quad (1453)$$

(7) Regarding $K_{1AS}$, we obtain:
[Formula 598]

$$\begin{cases} \phi_x \equiv K_{2n}(\omega_1 r)\cdot \sin 2n\theta - K_{2n+2}(\omega_1 r)\cdot \sin\left(2n+2\right)\theta \\ \phi_y \equiv K_{2n}(\omega_1 r)\cdot \cos 2n\theta + K_{2n+2}(\omega_1 r)\cdot \cos\left(2n+2\right)\theta \\ \phi_x^* \equiv \phi_x, \qquad \phi_y^* \equiv \phi_y \end{cases} \quad (1454)$$

$$\begin{cases} \sigma_x \equiv G\omega_1\left\{-K_{2n-1}(\omega_1 r)\cdot \sin\left(2n-1\right)\theta + K_{2n+3}(\omega_1 r)\cdot \sin\left(2n+3\right)\theta\right\} \\ \sigma_y \equiv -\sigma_x \\ \tau_{xy} \equiv -G\omega_1\left\{K_{2n-1}(\omega_1 r)\cdot \cos\left(2n-1\right)\theta + K_{2n+3}(\omega_1 r)\cdot \cos\left(2n+3\right)\theta\right\} \\ \sigma_x^* \equiv \sigma_x, \qquad \sigma_y^* \equiv \sigma_y, \qquad \tau_{xy}^* \equiv \tau_{xy} \end{cases} \quad (1455)$$

Converting eq. (1454) according to eqs. (969), (970) gives:
[Formula 599]

$$\begin{cases} \phi_r \equiv \{K_{2n}(\omega_1 r) - K_{2n+2}(\omega_1 r)\}\sin(2n+1)\theta \\ \phi_\theta \equiv \{K_{2n}(\omega_1 r) + K_{2n+2}(\omega_1 r)\}\cos(2n+1)\theta \\ \phi_r^* \equiv \phi_r, \qquad \phi_\theta^* \equiv \phi_\theta \end{cases} \tag{1456}$$

Converting eq. (1455) according to eqs. (977), (978), (979) gives:

$$\begin{cases} \sigma_r \equiv -G\omega_1 \{K_{2n-1}(\omega_1 r) - K_{2n+3}(\omega_1 r)\}\sin(2n+1)\theta \\ \sigma_\theta \equiv -\sigma_r \\ \tau_{r\theta} \equiv -G\omega_1 \{K_{2n-1}(\omega_1 r) + K_{2n+3}(\omega_1 r)\}\cos(2n+1)\theta \\ \sigma_r^* \equiv \sigma_r, \qquad \sigma_\theta^* \equiv \sigma_\theta, \qquad \tau_{r\theta}^* \equiv \tau_{r\theta} \end{cases} \tag{1457}$$

(8) Regarding $K_{2AS}$, we obtain:
[Formula 600]

$$\begin{cases} \phi_x \equiv K_{2n}(\omega_2 r)\cdot\sin 2n\theta + K_{2n+2}(\omega_2 r)\cdot\sin(2n+2)\theta \\ \phi_y \equiv K_{2n}(\omega_2 r)\cdot\cos 2n\theta - K_{2n+2}(\omega_2 r)\cdot\cos(2n+2)\theta \\ \phi_x^* \equiv \phi_x, \qquad \phi_y^* \equiv \phi_y \end{cases} \tag{1458}$$

$$\begin{cases} g_1 \equiv -2\mu\cdot K_{2n+1}(\omega_2 r)\cdot\sin(2n+1)\theta \\ g_2 \equiv K_{2n-1}(\omega_2 r)\cdot\sin(2n-1)\theta + K_{2n+3}(\omega_2 r)\cdot\sin(2n+3)\theta \\ g_3 \equiv -K_{2n-1}(\omega_2 r)\cdot\cos(2n-1)\theta + K_{2n+3}(\omega_2 r)\cdot\cos(2n+3)\theta \\ \sigma_x \equiv G\omega_2(g_1 - g_2), \qquad \sigma_y \equiv G\omega_2(g_1 + g_2), \qquad \tau_{xy} \equiv G\omega_2 g_3 \\ \sigma_x^* \equiv \sigma_x, \qquad \sigma_y^* \equiv \sigma_y, \qquad \tau_{xy}^* \equiv \tau_{xy} \end{cases} \tag{1459}$$

Converting eq. (1458) according to eqs. (969), (970) gives:
[Formula 601]

$$\begin{cases} \phi_r \equiv \{K_{2n}(\omega_2 r) + K_{2n+2}(\omega_2 r)\}\sin(2n+1)\theta \\ \phi_\theta \equiv \{K_{2n}(\omega_2 r) - K_{2n+2}(\omega_2 r)\}\cos(2n+1)\theta \\ \phi_r^* \equiv \phi_r, \qquad \phi_\theta^* \equiv \phi_\theta \end{cases} \tag{1460}$$

Converting (1459) according to eqs. (977), (978), (979) gives:

$$\begin{cases} h_1 \equiv -2\mu\cdot K_{2n+1}(\omega_2 r)\cdot\sin(2n+1)\theta \\ h_2 \equiv \{K_{2n-1}(\omega_2 r) + K_{2n+3}(\omega_2 r)\}\sin(2n+1)\theta \\ h_3 \equiv \{-K_{2n-1}(\omega_2 r) + K_{2n+3}(\omega_2 r)\}\cos(2n+1)\theta \\ \sigma_r \equiv G\omega_2(h_1 - h_2), \qquad \sigma_\theta \equiv G\omega_2(h_1 + h_2), \qquad \tau_{r\theta} \equiv G\omega_2 h_3 \\ \sigma_r^* \equiv \sigma_r, \qquad \sigma_\theta^* \equiv \sigma_\theta, \qquad \tau_{r\theta}^* \equiv \tau_{r\theta} \end{cases} \tag{1461}$$

[SS]

To the mode SS, the following eight sets in total belong: $J_{1SS}$ of eq. (1252); $J_{2SS}$ of eq. (1264); $Y_{1SS}$ of eq. (1296); $Y_{2SS}$ of eq. (1308); $I_{1SS}$ of eq. (1340); $I_{2SS}$ of eq. (1352); $K_{1SS}$ of eq. (1384); $K_{2SS}$ of eq. (1396). As they serve

as solution functions with respect to an arbitrary integer n, the total number is 8n.

(1) Regarding $J_{1SS}$, we obtain:
[Formula 602]

$$\begin{cases} \phi_x \equiv J_{2n+1}(\omega_1 r)\cdot\cos(2n+1)\theta + J_{2n+3}(\omega_1 r)\cdot\cos(2n+3)\theta \\ \phi_y \equiv -J_{2n+1}(\omega_1 r)\cdot\sin(2n+1)\theta + J_{2n+3}(\omega_1 r)\cdot\sin(2n+3)\theta \\ \phi_x^* \equiv -\phi_x, \quad \phi_y^* \equiv -\phi_y \end{cases} \quad (1462)$$

$$\begin{cases} \sigma_x \equiv G\omega_1 \{J_{2n}(\omega_1 r)\cdot\cos 2n\theta - J_{2n+4}(\omega_1 r)\cdot\cos(2n+4)\theta\} \\ \sigma_y \equiv -\sigma_x \\ \tau_{xy} \equiv -G\omega_1 \{J_{2n}(\omega_1 r)\cdot\sin 2n\theta + J_{2n+4}(\omega_1 r)\cdot\sin(2n+4)\theta\} \\ \sigma_x^* \equiv -\sigma_x, \quad \sigma_y^* \equiv -\sigma_y, \quad \tau_{xy}^* \equiv -\tau_{xy} \end{cases} \quad (1463)$$

Converting eq. (1462) according to eqs. (969), (970) gives:
[Formula 603]

$$\begin{cases} \phi_r \equiv \{J_{2n+1}(\omega_1 r) + J_{2n+3}(\omega_1 r)\}\cos(2n+2)\theta \\ \phi_\theta \equiv \{-J_{2n+1}(\omega_1 r) + J_{2n+3}(\omega_1 r)\}\sin(2n+2)\theta \\ \phi_r^* \equiv -\phi_r, \quad \phi_\theta^* \equiv -\phi_\theta \end{cases} \quad (1464)$$

Converting eq. (1463) according to eqs. (977), (978), (979) gives:

$$\begin{cases} \sigma_r \equiv G\omega_1 \{J_{2n}(\omega_1 r) - J_{2n+4}(\omega_1 r)\}\cos(2n+2)\theta \\ \sigma_\theta \equiv -\sigma_r \\ \tau_{r\theta} \equiv -G\omega_1 \{J_{2n}(\omega_1 r) + J_{2n+4}(\omega_1 r)\}\sin(2n+2)\theta \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1465)$$

(2) Regarding $J_{2SS}$, we obtain:
[Formula 604]

$$\begin{cases} \phi_x \equiv -J_{2n+1}(\omega_2 r)\cdot\cos(2n+1)\theta + J_{2n+3}(\omega_2 r)\cdot\cos(2n+3)\theta \\ \phi_y \equiv J_{2n+1}(\omega_2 r)\cdot\sin(2n+1)\theta + J_{2n+3}(\omega_2 r)\cdot\sin(2n+3)\theta \\ \phi_x^* \equiv -\phi_x, \quad \phi_y^* \equiv -\phi_y \end{cases} \quad (1466)$$

$$\begin{cases} g_1 \equiv 2\mu\cdot J_{2n+2}(\omega_2 r)\cdot\cos(2n+2)\theta \\ g_2 \equiv J_{2n}(\omega_2 r)\cdot\cos 2n\theta + J_{2n+4}(\omega_2 r)\cdot\cos(2n+4)\theta \\ g_3 \equiv J_{2n}(\omega_2 r)\cdot\sin 2n\theta - J_{2n+4}(\omega_2 r)\cdot\sin(2n+4)\theta \\ \sigma_x \equiv G\omega_2(g_1 - g_2), \quad \sigma_y \equiv G\omega_2(g_1 + g_2), \quad \tau_{xy} \equiv G\omega_2 g_3 \\ \sigma_x^* \equiv -\sigma_x, \quad \sigma_y^* \equiv -\sigma_y, \quad \tau_{xy}^* \equiv -\tau_{xy} \end{cases} \quad (1467)$$

Converting eq. (1466) according to eqs. (969), (970) gives:
[Formula 605]

$$\begin{cases} \phi_r \equiv \left\{-J_{2n+1}(\omega_2 r) + J_{2n+3}(\omega_2 r)\right\}\cos\left(2n+2\right)\theta \\ \phi_\theta \equiv \left\{J_{2n+1}(\omega_2 r) + J_{2n+3}(\omega_2 r)\right\}\sin\left(2n+2\right)\theta \\ \phi_r^* \equiv -\phi_r, \quad \phi_\theta^* \equiv -\phi_\theta \end{cases} \quad (1468)$$

Converting (1467) according to eqs. (977), (978) ,(979) gives:

$$\begin{cases} h_1 \equiv 2\mu \cdot J_{2n+2}(\omega_2 r) \cdot \cos\left(2n+2\right)\theta \\ h_2 \equiv \left\{J_{2n}(\omega_2 r) + J_{2n+4}(\omega_2 r)\right\}\cos\left(2n+2\right)\theta \\ h_3 \equiv \left\{J_{2n}(\omega_2 r) - J_{2n+4}(\omega_2 r)\right\}\sin\left(2n+2\right)\theta \\ \sigma_r \equiv G\omega_2\left(h_1 - h_2\right), \quad \sigma_\theta \equiv G\omega_2\left(h_1 + h_2\right), \quad \tau_{r\theta} \equiv G\omega_2 h_3 \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1469)$$

(3) Regarding $Y_{1SS}$, we obtain:
[Formula 606]

$$\begin{cases} \phi_x \equiv Y_{2n+1}(\omega_1 r) \cdot \cos\left(2n+1\right)\theta + Y_{2n+3}(\omega_1 r) \cdot \cos\left(2n+3\right)\theta \\ \phi_y \equiv -Y_{2n+1}(\omega_1 r) \cdot \sin\left(2n+1\right)\theta + Y_{2n+3}(\omega_1 r) \cdot \sin\left(2n+3\right)\theta \\ \phi_x^* \equiv -\phi_x, \quad \phi_y^* \equiv -\phi_y \end{cases} \quad (1470)$$

$$\begin{cases} \sigma_x \equiv G\omega_1\left\{Y_{2n}(\omega_1 r) \cdot \cos 2n\theta - Y_{2n+4}(\omega_1 r) \cdot \cos\left(2n+4\right)\theta\right\} \\ \sigma_y \equiv -\sigma_x \\ \tau_{xy} \equiv -G\omega_1\left\{Y_{2n}(\omega_1 r) \cdot \sin 2n\theta + Y_{2n+4}(\omega_1 r) \cdot \sin\left(2n+4\right)\theta\right\} \\ \sigma_x^* \equiv -\sigma_x, \quad \sigma_y^* \equiv -\sigma_y, \quad \tau_{xy}^* \equiv -\tau_{xy} \end{cases} \quad (1471)$$

Converting eq. (1470) according to eqs. (969), (970) gives:
[Formula 607]

$$\begin{cases} \phi_r \equiv \left\{Y_{2n+1}(\omega_1 r) + Y_{2n+3}(\omega_1 r)\right\}\cos\left(2n+2\right)\theta \\ \phi_\theta \equiv \left\{-Y_{2n+1}(\omega_1 r) + Y_{2n+3}(\omega_1 r)\right\}\sin\left(2n+2\right)\theta \\ \phi_r^* \equiv -\phi_r, \quad \phi_\theta^* \equiv -\phi_\theta \end{cases} \quad (1472)$$

Converting eq. (1471) according to eqs. (977), (978), (979) gives:
[Formula 608]

$$\begin{cases} \sigma_r \equiv G\omega_1\left\{Y_{2n}(\omega_1 r) - Y_{2n+4}(\omega_1 r)\right\}\cos\left(2n+2\right)\theta \\ \sigma_\theta \equiv -\sigma_r \\ \tau_{r\theta} \equiv -G\omega_1\left\{Y_{2n}(\omega_1 r) + Y_{2n+4}(\omega_1 r)\right\}\sin\left(2n+2\right)\theta \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1473)$$

(4) Regarding $Y_{2SS}$, we obtain:

[Formula 609]

$$\begin{cases} \phi_x \equiv -Y_{2n+1}(\omega_2 r)\cdot\cos(2n+1)\theta + Y_{2n+3}(\omega_2 r)\cdot\cos(2n+3)\theta \\ \phi_y \equiv Y_{2n+1}(\omega_2 r)\cdot\sin(2n+1)\theta + Y_{2n+3}(\omega_2 r)\cdot\sin(2n+3)\theta \\ \phi_x^* \equiv -\phi_x, \quad \phi_y^* \equiv -\phi_y \end{cases} \quad (1474)$$

$$\begin{cases} g_1 \equiv 2\mu\cdot Y_{2n+2}(\omega_2 r)\cdot\cos(2n+2)\theta \\ g_2 \equiv Y_{2n}(\omega_2 r)\cdot\cos 2n\theta + Y_{2n+4}(\omega_2 r)\cdot\cos(2n+4)\theta \\ g_3 \equiv Y_{2n}(\omega_2 r)\cdot\sin 2n\theta - Y_{2n+4}(\omega_2 r)\cdot\sin(2n+4)\theta \\ \sigma_x \equiv G\omega_2(g_1-g_2), \quad \sigma_y \equiv G\omega_2(g_1+g_2), \quad \tau_{xy} \equiv G\omega_2 g_3 \\ \sigma_x^* \equiv -\sigma_x, \quad \sigma_y^* \equiv -\sigma_y, \quad \tau_{xy}^* \equiv -\tau_{xy} \end{cases} \quad (1475)$$

Converting eqs. (1474) according to eqs. (969), (970) gives:
[Formula 610]

$$\begin{cases} \phi_r \equiv \{-Y_{2n+1}(\omega_2 r) + Y_{2n+3}(\omega_2 r)\}\cos(2n+2)\theta \\ \phi_\theta \equiv \{Y_{2n+1}(\omega_2 r) + Y_{2n+3}(\omega_2 r)\}\sin(2n+2)\theta \\ \phi_r^* \equiv -\phi_r, \quad \phi_\theta^* \equiv -\phi_\theta \end{cases} \quad (1476)$$

Converting eq. (1475) according to eqs. (977), (978), (979) gives:

$$\begin{cases} h_1 \equiv 2\mu\cdot Y_{2n+2}(\omega_2 r)\cdot\cos(2n+2)\theta \\ h_2 \equiv \{Y_{2n}(\omega_2 r) + Y_{2n+4}(\omega_2 r)\}\cos(2n+2)\theta \\ h_3 \equiv \{Y_{2n}(\omega_2 r) - Y_{2n+4}(\omega_2 r)\}\sin(2n+2)\theta \\ \sigma_r \equiv G\omega_2(h_1-h_2), \quad \sigma_\theta \equiv G\omega_2(h_1+h_2), \quad \tau_{r\theta} \equiv G\omega_2 h_3 \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1477)$$

(5) Regarding $I_{155}$, we obtain:
[Formula 611]

$$\begin{cases} \phi_x \equiv -I_{2n+1}(\omega_1 r)\cdot\cos(2n+1)\theta + I_{2n+3}(\omega_1 r)\cdot\cos(2n+3)\theta \\ \phi_y \equiv I_{2n+1}(\omega_1 r)\cdot\sin(2n+1)\theta + I_{2n+3}(\omega_1 r)\cdot\sin(2n+3)\theta \\ \phi_x^* \equiv \phi_x, \quad \phi_y^* \equiv \phi_y \end{cases} \quad (1478)$$

$$\begin{cases} \sigma_x \equiv G\omega_1\{-I_{2n}(\omega_1 r)\cdot\cos 2n\theta + I_{2n+4}(\omega_1 r)\cdot\cos(2n+4)\theta\} \\ \sigma_y \equiv -\sigma_x \\ \tau_{xy} \equiv G\omega_1\{I_{2n}(\omega_1 r)\cdot\sin 2n\theta + I_{2n+4}(\omega_1 r)\cdot\sin(2n+4)\theta\} \\ \sigma_x^* \equiv \sigma_x, \quad \sigma_y^* \equiv \sigma_y, \quad \tau_{xy}^* \equiv \tau_{xy} \end{cases} \quad (1479)$$

Converting eq. (1478) according to eqs. (969), (970) gives:
[Formula 612]

$$\begin{cases} \phi_r \equiv \left\{-I_{2n+1}(\omega_1 r) + I_{2n+3}(\omega_1 r)\right\}\cos\left(2n+2\right)\theta \\ \phi_\theta \equiv \left\{I_{2n+1}(\omega_1 r) + I_{2n+3}(\omega_1 r)\right\}\sin\left(2n+2\right)\theta \\ \phi_r^* \equiv \phi_r, \qquad \phi_\theta^* \equiv \phi_\theta \end{cases} \quad (1480)$$

Converting eq. (1479) according to eqs. (977), (978), (979) gives:

$$\begin{cases} \sigma_r \equiv G\omega_1 \left\{-I_{2n}(\omega_1 r) + I_{2n+4}(\omega_1 r)\right\}\cos\left(2n+2\right)\theta \\ \sigma_\theta \equiv -\sigma_r \\ \tau_{r\theta} \equiv G\omega_1 \left\{I_{2n}(\omega_1 r) + I_{2n+4}(\omega_1 r)\right\}\sin\left(2n+2\right)\theta \\ \sigma_r^* \equiv \sigma_r, \qquad \sigma_\theta^* \equiv \sigma_\theta, \qquad \tau_{r\theta}^* \equiv \tau_{r\theta} \end{cases} \quad (1481)$$

(6) Regarding $I_{2SS}$, we obtain:
[Formula 613]

$$\begin{cases} \phi_x \equiv I_{2n+1}(\omega_2 r)\cdot\cos\left(2n+1\right)\theta + I_{2n+3}(\omega_2 r)\cdot\cos\left(2n+3\right)\theta \\ \phi_y \equiv -I_{2n+1}(\omega_2 r)\cdot\sin\left(2n+1\right)\theta + I_{2n+3}(\omega_2 r)\cdot\sin\left(2n+3\right)\theta \\ \phi_x^* \equiv \phi_x, \qquad \phi_y^* \equiv \phi_y \end{cases} \quad (1482)$$

$$\begin{cases} g_1 \equiv 2\mu\cdot I_{2n+2}(\omega_2 r)\cdot\cos\left(2n+2\right)\theta \\ g_2 \equiv I_{2n}(\omega_2 r)\cdot\cos 2n\theta + I_{2n+4}(\omega_2 r)\cdot\cos\left(2n+4\right)\theta \\ g_3 \equiv -I_{2n}(\omega_2 r)\cdot\sin 2n\theta + I_{2n+4}(\omega_2 r)\cdot\sin\left(2n+4\right)\theta \\ \sigma_x \equiv G\omega_2\left(g_1+g_2\right), \qquad \sigma_y \equiv G\omega_2\left(g_1-g_2\right), \qquad \tau_{xy} \equiv G\omega_2 g_3 \\ \sigma_x^* \equiv \sigma_x, \qquad \sigma_y^* \equiv \sigma_y, \qquad \tau_{xy}^* \equiv \tau_{xy} \end{cases} \quad (1483)$$

Converting eq. (1482) according to eqs. (969), (970) gives:
[Formula 614]

$$\begin{cases} \phi_r \equiv \left\{I_{2n+1}(\omega_2 r) + I_{2n+3}(\omega_2 r)\right\}\cos\left(2n+2\right)\theta \\ \phi_\theta \equiv \left\{-I_{2n+1}(\omega_2 r) + I_{2n+3}(\omega_2 r)\right\}\sin\left(2n+2\right)\theta \\ \phi_r^* \equiv \phi_r, \qquad \phi_\theta^* \equiv \phi_\theta \end{cases} \quad (1484)$$

Converting eq. (1483) according to eqs. (977), (978), (979) gives:

$$\begin{cases} h_1 \equiv 2\mu\cdot I_{2n+2}(\omega_2 r)\cdot\cos\left(2n+2\right)\theta \\ h_2 \equiv \left\{I_{2n}(\omega_2 r) + I_{2n+4}(\omega_2 r)\right\}\cos\left(2n+2\right)\theta \\ h_3 \equiv \left\{-I_{2n}(\omega_2 r) + I_{2n+4}(\omega_2 r)\right\}\sin\left(2n+2\right)\theta \\ \sigma_r \equiv G\omega_2\left(h_1+h_2\right), \qquad \sigma_\theta \equiv G\omega_2\left(h_1-h_2\right), \qquad \tau_{r\theta} \equiv G\omega_2 h_3 \\ \sigma_r^* \equiv \sigma_r, \qquad \sigma_\theta^* \equiv \sigma_\theta, \qquad \tau_{r\theta}^* \equiv \tau_{r\theta} \end{cases} \quad (1485)$$

(7) Regarding $K_{1SS}$, we obtain:
[Formula 615]

$$\begin{cases} \phi_x \equiv -K_{2n+1}(\omega_1 r)\cdot\cos(2n+1)\theta + K_{2n+3}(\omega_1 r)\cdot\cos(2n+3)\theta \\ \phi_y \equiv K_{2n+1}(\omega_1 r)\cdot\sin(2n+1)\theta + K_{2n+3}(\omega_1 r)\cdot\sin(2n+3)\theta \\ \phi_x^* \equiv \phi_x, \qquad \phi_y^* \equiv \phi_y \end{cases} \quad (1486)$$

$$\begin{cases} \sigma_x \equiv G\omega_1 \{K_{2n}(\omega_1 r)\cdot\cos 2n\theta - K_{2n+4}(\omega_1 r)\cdot\cos(2n+4)\theta\} \\ \sigma_y \equiv -\sigma_x \\ \tau_{xy} \equiv -G\omega_1 \{K_{2n}(\omega_1 r)\cdot\sin 2n\theta + K_{2n+4}(\omega_1 r)\cdot\sin(2n+4)\theta\} \\ \sigma_x^* \equiv \sigma_x, \qquad \sigma_y^* \equiv \sigma_y, \qquad \tau_{xy}^* \equiv \tau_{xy} \end{cases} \quad (1487)$$

Converting eq. (1486) according to eqs. (969), (970) gives:
[Formula 616]

$$\begin{cases} \phi_r \equiv \{-K_{2n+1}(\omega_1 r) + K_{2n+3}(\omega_1 r)\}\cos(2n+2)\theta \\ \phi_\theta \equiv \{K_{2n+1}(\omega_1 r) + K_{2n+3}(\omega_1 r)\}\sin(2n+2)\theta \\ \phi_r^* \equiv \phi_r, \qquad \phi_\theta^* \equiv \phi_\theta \end{cases} \quad (1488)$$

Converting eq. (1487) according to eqs. (977), (978), (979) gives:

$$\begin{cases} \sigma_r \equiv G\omega_1 \{K_{2n}(\omega_1 r) - K_{2n+4}(\omega_1 r)\}\cos(2n+2)\theta \\ \sigma_\theta \equiv -\sigma_r \\ \tau_{r\theta} \equiv -G\omega_1 \{K_{2n}(\omega_1 r) + K_{2n+4}(\omega_1 r)\}\sin(2n+2)\theta \\ \sigma_r^* \equiv \sigma_r, \qquad \sigma_\theta^* \equiv \sigma_\theta, \qquad \tau_{r\theta}^* \equiv \tau_{r\theta} \end{cases} \quad (1489)$$

(8) Regarding $K_{2SS}$, we obtain:
[Formula 617]

$$\begin{cases} \phi_x \equiv K_{2n+1}(\omega_2 r)\cdot\cos(2n+1)\theta + K_{2n+3}(\omega_2 r)\cdot\cos(2n+3)\theta \\ \phi_y \equiv -K_{2n+1}(\omega_2 r)\cdot\sin(2n+1)\theta + K_{2n+3}(\omega_2 r)\cdot\sin(2n+3)\theta \\ \phi_x^* \equiv \phi_x, \qquad \phi_y^* \equiv \phi_y \end{cases} \quad (1490)$$

$$\begin{cases} g_1 \equiv -2\mu\cdot K_{2n+2}(\omega_2 r)\cdot\cos(2n+2)\theta \\ g_2 \equiv K_{2n}(\omega_2 r)\cdot\cos 2n\theta + K_{2n+4}(\omega_2 r)\cdot\cos(2n+4)\theta \\ g_3 \equiv K_{2n}(\omega_2 r)\cdot\sin 2n\theta - K_{2n+4}(\omega_2 r)\cdot\sin(2n+4)\theta \\ \sigma_x \equiv G\omega_2(g_1 - g_2), \quad \sigma_y \equiv G\omega_2(g_1 + g_2), \quad \tau_{xy} \equiv G\omega_2 g_3 \\ \sigma_x^* \equiv \sigma_x, \qquad \sigma_y^* \equiv \sigma_y, \qquad \tau_{xy}^* \equiv \tau_{xy} \end{cases} \quad (1491)$$

Converting eq. (1490) according to eqs. (969), (970) gives:
[Formula 618]

$$\begin{cases} \phi_r \equiv \{K_{2n+1}(\omega_2 r) + K_{2n+3}(\omega_2 r)\}\cos(2n+2)\theta \\ \phi_\theta \equiv \{-K_{2n+1}(\omega_2 r) + K_{2n+3}(\omega_2 r)\}\sin(2n+2)\theta \\ \phi_r^* \equiv \phi_r, \quad \phi_\theta^* \equiv \phi_\theta \end{cases} \tag{1492}$$

Converting eq. (1491) according to eqs. (977), (978), (979) gives:

$$\begin{cases} h_1 \equiv -2\mu \cdot K_{2n+2}(\omega_2 r)\cdot\cos(2n+2)\theta \\ h_2 \equiv \{K_{2n}(\omega_2 r) + K_{2n+4}(\omega_2 r)\}\cos(2n+2)\theta \\ h_3 \equiv \{K_{2n}(\omega_2 r) - K_{2n+4}(\omega_2 r)\}\sin(2n+2)\theta \\ \sigma_r \equiv G\omega_2(h_1 - h_2), \quad \sigma_\theta \equiv G\omega_2(h_1 + h_2), \quad \tau_{r\theta} \equiv G\omega_2 h_3 \\ \sigma_r^* \equiv \sigma_r, \quad \sigma_\theta^* \equiv \sigma_\theta, \quad \tau_{r\theta}^* \equiv \tau_{r\theta} \end{cases} \tag{1493}$$

[AA]

To the mode AA, the following eight sets in total belong: $J_{1AA}$ of eq. (1253): $J_{2AA}$ of eq. (1265): $Y_{1AA}$ of eq. (1297): $Y_{2AA}$ of eq. (1309): $I_{1AA}$ of eq. (1341): $I_{2AA}$ of eq. (1353): $K_{1AA}$ of eq. (1385): and $K_{2AA}$ of eq. (1397). As they serve as solution functions with respect to an arbitrary integer n, the total number is 8n.

(1) Regarding $J_{1AA}$, we obtain:

[Formula 619]

$$\begin{cases} \phi_x \equiv J_{2n+1}(\omega_1 r)\cdot\sin(2n+1)\theta + J_{2n+3}(\omega_1 r)\cdot\sin(2n+3)\theta \\ \phi_y \equiv J_{2n+1}(\omega_1 r)\cdot\cos(2n+1)\theta - J_{2n+3}(\omega_1 r)\cdot\cos(2n+3)\theta \\ \phi_x^* \equiv -\phi_x, \quad \phi_y^* \equiv -\phi_y \end{cases} \tag{1494}$$

$$\begin{cases} \sigma_x \equiv G\omega_1\{J_{2n}(\omega_1 r)\cdot\sin 2n\theta - J_{2n+4}(\omega_1 r)\cdot\sin(2n+4)\theta\} \\ \sigma_y \equiv -\sigma_x \\ \tau_{xy} \equiv G\omega_1\{J_{2n}(\omega_1 r)\cdot\cos 2n\theta + J_{2n+4}(\omega_1 r)\cdot\cos(2n+4)\theta\} \\ \sigma_x^* \equiv -\sigma_x, \quad \sigma_y^* \equiv -\sigma_y, \quad \tau_{xy}^* \equiv -\tau_{xy} \end{cases} \tag{1495}$$

Converting eq. (1494) according to eqs. (969), (970) gives:

[Formula 620]

$$\begin{cases} \phi_r \equiv \{J_{2n+1}(\omega_1 r) + J_{2n+3}(\omega_1 r)\}\sin(2n+2)\theta \\ \phi_\theta \equiv \{J_{2n+1}(\omega_1 r) - J_{2n+3}(\omega_1 r)\}\cos(2n+2)\theta \\ \phi_r^* \equiv -\phi_r, \quad \phi_\theta^* \equiv -\phi_\theta \end{cases} \tag{1496}$$

Converting eq. (1495) according to eqs. (977), (978), (979) gives:

$$\begin{cases} \sigma_r \equiv G\omega_1 \left\{J_{2n}(\omega_1 r) - J_{2n+4}(\omega_1 r)\right\}\sin\left(2n+2\right)\theta \\ \sigma_\theta \equiv -\sigma_r \\ \tau_{r\theta} \equiv G\omega_1 \left\{J_{2n}(\omega_1 r) + J_{2n+4}(\omega_1 r)\right\}\cos\left(2n+2\right)\theta \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1497)$$

(2) Regarding $J_{2AA}$, we obtain:
[Formula 621]

$$\begin{cases} \phi_x \equiv J_{2n+1}(\omega_2 r)\cdot\sin\left(2n+1\right)\theta - J_{2n+3}(\omega_2 r)\cdot\sin\left(2n+3\right)\theta \\ \phi_y \equiv J_{2n+1}(\omega_2 r)\cdot\cos\left(2n+1\right)\theta + J_{2n+3}(\omega_2 r)\cdot\cos\left(2n+3\right)\theta \\ \phi_x^* \equiv -\phi_x, \quad \phi_y^* \equiv -\phi_y \end{cases} \quad (1498)$$

$$\begin{cases} g_1 \equiv -2\mu\cdot J_{2n+2}(\omega_2 r)\cdot\sin\left(2n+2\right)\theta \\ g_2 \equiv J_{2n}(\omega_2 r)\cdot\sin 2n\theta + J_{2n+4}(\omega_2 r)\cdot\sin\left(2n+4\right)\theta \\ g_3 \equiv J_{2n}(\omega_2 r)\cdot\cos 2n\theta - J_{2n+4}(\omega_2 r)\cdot\cos\left(2n+4\right)\theta \\ \sigma_x \equiv G\omega_2\left(g_1+g_2\right), \quad \sigma_y \equiv G\omega_2\left(g_1-g_2\right), \quad \tau_{xy} \equiv G\omega_2 g_3 \\ \sigma_x^* \equiv -\sigma_x, \quad \sigma_y^* \equiv -\sigma_y, \quad \tau_{xy}^* \equiv -\tau_{xy} \end{cases} \quad (1499)$$

Converting eq. (1498) according to eqs. (969), (970) gives:
[Formula 622]

$$\begin{cases} \phi_r \equiv \left\{J_{2n+1}(\omega_2 r) - J_{2n+3}(\omega_2 r)\right\}\sin\left(2n+2\right)\theta \\ \phi_\theta \equiv \left\{J_{2n+1}(\omega_2 r) + J_{2n+3}(\omega_2 r)\right\}\cos\left(2n+2\right)\theta \\ \phi_r^* \equiv -\phi_r, \quad \phi_\theta^* \equiv -\phi_\theta \end{cases} \quad (1500)$$

Converting eq. (1499) according to eqs. (977), (978), (979) gives:

$$\begin{cases} h_1 \equiv -2\mu\cdot J_{2n+2}(\omega_2 r)\cdot\sin\left(2n+2\right)\theta \\ h_2 \equiv \left\{J_{2n}(\omega_2 r) + J_{2n+4}(\omega_2 r)\right\}\sin\left(2n+2\right)\theta \\ h_3 \equiv \left\{J_{2n}(\omega_2 r) - J_{2n+4}(\omega_2 r)\right\}\cos\left(2n+2\right)\theta \\ \sigma_r \equiv G\omega_2\left(h_1+h_2\right), \quad \sigma_\theta \equiv G\omega_2\left(h_1-h_2\right), \quad \tau_{r\theta} \equiv G\omega_2 h_3 \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1501)$$

(3) Regarding $Y_{1AA}$, we obtain:
[Formula 623]

$$\begin{cases} \phi_x \equiv Y_{2n+1}(\omega_1 r)\cdot\sin\left(2n+1\right)\theta + Y_{2n+3}(\omega_1 r)\cdot\sin\left(2n+3\right)\theta \\ \phi_y \equiv Y_{2n+1}(\omega_1 r)\cdot\cos\left(2n+1\right)\theta - Y_{2n+3}(\omega_1 r)\cdot\cos\left(2n+3\right)\theta \\ \phi_x^* \equiv -\phi_x, \quad \phi_y^* \equiv -\phi_y \end{cases} \quad (1502)$$

$$\begin{cases} \sigma_x \equiv G\omega_1 \left\{ Y_{2n}(\omega_1 r)\cdot \sin 2n\theta - Y_{2n+4}(\omega_1 r)\cdot \sin\left(2n+4\right)\theta \right\} \\ \sigma_y \equiv -\sigma_x \\ \tau_{xy} \equiv G\omega_1 \left\{ Y_{2n}(\omega_1 r)\cdot \cos 2n\theta + Y_{2n+4}(\omega_1 r)\cdot \cos\left(2n+4\right)\theta \right\} \\ \sigma_x^* \equiv -\sigma_x, \quad \sigma_y^* \equiv -\sigma_y, \quad \tau_{xy}^* \equiv -\tau_{xy} \end{cases} \quad (1503)$$

Converting eq. (1502) according to eqs. (969), (970) gives:

$$\begin{cases} \phi_r \equiv \left\{ Y_{2n+1}(\omega_1 r) + Y_{2n+3}(\omega_1 r) \right\} \sin\left(2n+2\right)\theta \\ \phi_\theta \equiv \left\{ Y_{2n+1}(\omega_1 r) - Y_{2n+3}(\omega_1 r) \right\} \cos\left(2n+2\right)\theta \\ \phi_r^* \equiv -\phi_r, \quad \phi_\theta^* \equiv -\phi_\theta \end{cases} \quad (1504)$$

[Formula 624]

Converting eq. (1503) according to eqs. (977), (978), (979) gives:

$$\begin{cases} \sigma_r \equiv G\omega_1 \left\{ Y_{2n}(\omega_1 r) - Y_{2n+4}(\omega_1 r) \right\} \sin\left(2n+2\right)\theta \\ \sigma_\theta \equiv -\sigma_r \\ \tau_{r\theta} \equiv G\omega_1 \left\{ Y_{2n}(\omega_1 r) + Y_{2n+4}(\omega_1 r) \right\} \cos\left(2n+2\right)\theta \\ \sigma_r^* \equiv -\sigma_r, \quad \sigma_\theta^* \equiv -\sigma_\theta, \quad \tau_{r\theta}^* \equiv -\tau_{r\theta} \end{cases} \quad (1505)$$

(4) Regarding $Y_{2AA}$, we obtain:

[Formula 625]

$$\begin{cases} \phi_x \equiv Y_{2n+1}(\omega_2 r)\cdot \sin\left(2n+1\right)\theta - Y_{2n+3}(\omega_2 r)\cdot \sin\left(2n+3\right)\theta \\ \phi_y \equiv Y_{2n+1}(\omega_2 r)\cdot \cos\left(2n+1\right)\theta + Y_{2n+3}(\omega_2 r)\cdot \cos\left(2n+3\right)\theta \\ \phi_x^* \equiv -\phi_x, \quad \phi_y^* \equiv -\phi_y \end{cases} \quad (1506)$$

$$\begin{cases} g_1 \equiv -2\mu \cdot Y_{2n+2}(\omega_2 r)\cdot \sin\left(2n+2\right)\theta \\ g_2 \equiv Y_{2n}(\omega_2 r)\cdot \sin 2n\theta + Y_{2n+4}(\omega_2 r)\cdot \sin\left(2n+4\right)\theta \\ g_3 \equiv Y_{2n}(\omega_2 r)\cdot \cos 2n\theta - Y_{2n+4}(\omega_2 r)\cdot \cos\left(2n+4\right)\theta \\ \sigma_x \equiv G\omega_2\left(g_1+g_2\right), \quad \sigma_y \equiv G\omega_2\left(g_1-g_2\right), \quad \tau_{xy} \equiv G\omega_2 g_3 \\ \sigma_x^* \equiv -\sigma_x, \quad \sigma_y^* \equiv -\sigma_y, \quad \tau_{xy}^* \equiv -\tau_{xy} \end{cases} \quad (1507)$$

Converting eq. (1506) according to eqs. (969), (970) gives:

[Formula 626]

$$\begin{cases} \phi_r \equiv \left\{ Y_{2n+1}(\omega_2 r) - Y_{2n+3}(\omega_2 r) \right\} \sin\left(2n+2\right)\theta \\ \phi_\theta \equiv \left\{ Y_{2n+1}(\omega_2 r) + Y_{2n+3}(\omega_2 r) \right\} \cos\left(2n+2\right)\theta \\ \phi_r^* \equiv -\phi_r, \quad \phi_\theta^* \equiv -\phi_\theta \end{cases} \quad (1508)$$

Converting eq. (1507) according to eqs. (977), (978), (979) gives:

$$\begin{cases} h_1 \equiv -2\mu \cdot Y_{2n+2}(\omega_2 r) \cdot \sin(2n+2)\theta \\ h_2 \equiv \{Y_{2n}(\omega_2 r) + Y_{2n+4}(\omega_2 r)\}\sin(2n+2)\theta \\ h_3 \equiv \{Y_{2n}(\omega_2 r) - Y_{2n+4}(\omega_2 r)\}\cos(2n+2)\theta \\ \sigma_r \equiv G\omega_2(h_1+h_2), \quad \sigma_\theta \equiv G\omega_2(h_1-h_2), \quad \tau_{r\theta} \equiv G\omega_2 h_3 \\ \sigma_r^* \equiv -\sigma_r, \quad \sigma_\theta^* \equiv -\sigma_\theta, \quad \tau_{r\theta}^* \equiv -\tau_{r\theta} \end{cases} \tag{1509}$$

(5) Regarding $I_{1AA}$, we obtain:
[Formula 627]

$$\begin{cases} \phi_x \equiv I_{2n+1}(\omega_1 r) \cdot \sin(2n+1)\theta - I_{2n+3}(\omega_1 r) \cdot \sin(2n+3)\theta \\ \phi_y \equiv I_{2n+1}(\omega_1 r) \cdot \cos(2n+1)\theta + I_{2n+3}(\omega_1 r) \cdot \cos(2n+3)\theta \\ \phi_x^* \equiv \phi_x, \quad \phi_y^* \equiv \phi_y \end{cases} \tag{1510}$$

$$\begin{cases} \sigma_x \equiv G\omega_1\{I_{2n}(\omega_1 r) \cdot \sin 2n\theta - I_{2n+4}(\omega_1 r) \cdot \sin(2n+4)\theta\} \\ \sigma_y \equiv -\sigma_x \\ \tau_{xy} \equiv G\omega_1\{I_{2n}(\omega_1 r) \cdot \cos 2n\theta + I_{2n+4}(\omega_1 r) \cdot \cos(2n+4)\theta\} \\ \sigma_x^* \equiv \sigma_x, \quad \sigma_y^* \equiv \sigma_y, \quad \tau_{xy}^* \equiv \tau_{xy} \end{cases} \tag{1511}$$

Converting eq. (1510) according to eqs. (969), (970) gives:
[Formula 628]

$$\begin{cases} \phi_r \equiv \{I_{2n+1}(\omega_1 r) - I_{2n+3}(\omega_1 r)\}\sin(2n+2)\theta \\ \phi_\theta \equiv \{I_{2n+1}(\omega_1 r) + I_{2n+3}(\omega_1 r)\}\cos(2n+2)\theta \\ \phi_r^* \equiv \phi_r, \quad \phi_\theta^* \equiv \phi_\theta \end{cases} \tag{1512}$$

Converting eq. (1511) according to eqs. (977), (978), (979) gives:

$$\begin{cases} \sigma_r \equiv G\omega_1\{I_{2n}(\omega_1 r) - I_{2n+4}(\omega_1 r)\}\sin(2n+2)\theta \\ \sigma_\theta \equiv -\sigma_r \\ \tau_{r\theta} \equiv G\omega_1\{I_{2n}(\omega_1 r) + I_{2n+4}(\omega_1 r)\}\cos(2n+2)\theta \\ \sigma_r^* \equiv \sigma_r, \quad \sigma_\theta^* \equiv \sigma_\theta, \quad \tau_{r\theta}^* \equiv \tau_{r\theta} \end{cases} \tag{1513}$$

(6) Regarding $I_{2AA}$, we obtain:
[Formula 629]

$$\begin{cases} \phi_x \equiv I_{2n+1}(\omega_2 r) \cdot \sin(2n+1)\theta + I_{2n+3}(\omega_2 r) \cdot \sin(2n+3)\theta \\ \phi_y \equiv I_{2n+1}(\omega_2 r) \cdot \cos(2n+1)\theta - I_{2n+3}(\omega_2 r) \cdot \cos(2n+3)\theta \\ \phi_x^* \equiv \phi_x, \quad \phi_y^* \equiv \phi_y \end{cases} \tag{1514}$$

$$\begin{cases} g_1 \equiv 2\mu \cdot I_{2n+2}(\omega_2 r)\cdot \sin\left(2n+2\right)\theta \\ g_2 \equiv I_{2n}(\omega_2 r)\cdot \sin 2n\theta + I_{2n+4}(\omega_2 r)\cdot \sin\left(2n+4\right)\theta \\ g_3 \equiv I_{2n}(\omega_2 r)\cdot \cos 2n\theta - I_{2n+4}(\omega_2 r)\cdot \cos\left(2n+4\right)\theta \\ \sigma_x \equiv G\omega_2\left(g_1+g_2\right),\quad \sigma_y \equiv G\omega_2\left(g_1-g_2\right),\quad \tau_{xy} \equiv G\omega_2 g_3 \\ \sigma_x^* \equiv \sigma_x,\quad \sigma_y^* \equiv \sigma_y,\quad \tau_{xy}^* \equiv \tau_{xy} \end{cases} \tag{1515}$$

Converting eq. (1514) according to eqs. (969), (970) gives:
[Formula 630]

$$\begin{cases} \phi_r \equiv \left\{I_{2n+1}(\omega_2 r) + I_{2n+3}(\omega_2 r)\right\}\sin\left(2n+2\right)\theta \\ \phi_\theta \equiv \left\{I_{2n+1}(\omega_2 r) - I_{2n+3}(\omega_2 r)\right\}\cos\left(2n+2\right)\theta \\ \phi_r^* \equiv \phi_r,\quad \phi_\theta^* \equiv \phi_\theta \end{cases} \tag{1516}$$

Converting eq. (1515) according to eqs. (977), (978), (979) gives:

$$\begin{cases} h_1 \equiv 2\mu \cdot I_{2n+2}(\omega_2 r)\cdot \sin\left(2n+2\right)\theta \\ h_2 \equiv \left\{I_{2n}(\omega_2 r) + I_{2n+4}(\omega_2 r)\right\}\sin\left(2n+2\right)\theta \\ h_3 \equiv \left\{I_{2n}(\omega_2 r) - I_{2n+4}(\omega_2 r)\right\}\cos\left(2n+2\right)\theta \\ \sigma_r \equiv G\omega_2\left(h_1+h_2\right),\quad \sigma_\theta \equiv G\omega_2\left(h_1-h_2\right),\quad \tau_{r\theta} \equiv G\omega_2 h_3 \\ \sigma_r^* \equiv \sigma_r,\quad \sigma_\theta^* \equiv \sigma_\theta,\quad \tau_{r\theta}^* \equiv \tau_{r\theta} \end{cases} \tag{1517}$$

(7) Regarding $K_{1AA}$, we obtain:
[Formula 631]

$$\begin{cases} \phi_x \equiv K_{2n+1}(\omega_1 r)\cdot \sin\left(2n+1\right)\theta - K_{2n+3}(\omega_1 r)\cdot \sin\left(2n+3\right)\theta \\ \phi_y \equiv K_{2n+1}(\omega_1 r)\cdot \cos\left(2n+1\right)\theta + K_{2n+3}(\omega_1 r)\cdot \cos\left(2n+3\right)\theta \\ \phi_x^* \equiv \phi_x,\quad \phi_y^* \equiv \phi_y \end{cases} \tag{1518}$$

$$\begin{cases} \sigma_x \equiv -G\omega_1\left\{K_{2n}(\omega_1 r)\cdot \sin 2n\theta - K_{2n+4}(\omega_1 r)\cdot \sin\left(2n+4\right)\theta\right\} \\ \sigma_y \equiv -\sigma_x \\ \tau_{xy} \equiv -G\omega_1\left\{K_{2n}(\omega_1 r)\cdot \cos 2n\theta + K_{2n+4}(\omega_1 r)\cdot \cos\left(2n+4\right)\theta\right\} \\ \sigma_x^* \equiv \sigma_x,\quad \sigma_y^* \equiv \sigma_y,\quad \tau_{xy}^* \equiv \tau_{xy} \end{cases} \tag{1519}$$

Converting eq. (1518) according to eqs. (969), (970) gives:
[Formula 632]

$$\begin{cases} \phi_r \equiv \left\{K_{2n+1}(\omega_1 r) - K_{2n+3}(\omega_1 r)\right\}\sin\left(2n+2\right)\theta \\ \phi_\theta \equiv \left\{K_{2n+1}(\omega_1 r) + K_{2n+3}(\omega_1 r)\right\}\cos\left(2n+2\right)\theta \\ \phi_r^* \equiv \phi_r,\quad \phi_\theta^* \equiv \phi_\theta \end{cases} \tag{1520}$$

Converting eq. (1519) according to eqs. (977), (978), (979) gives:

$$\begin{cases} \sigma_r \equiv -G\omega_1 \left\{K_{2n}(\omega_1 r) - K_{2n+4}(\omega_1 r)\right\}\sin(2n+2)\theta \\ \sigma_\theta \equiv -\sigma_r \\ \tau_{r\theta} \equiv -G\omega_1 \left\{K_{2n}(\omega_1 r) + K_{2n+4}(\omega_1 r)\right\}\cos(2n+2)\theta \\ \sigma_r^* \equiv \sigma_r, \quad \sigma_\theta^* \equiv \sigma_\theta, \quad \tau_{r\theta}^* \equiv \tau_{r\theta} \end{cases} \quad (1521)$$

(8) Regarding $K_{2AA}$, we obtain:
[Formula 633]

$$\begin{cases} \phi_x \equiv K_{2n+1}(\omega_2 r)\cdot\sin(2n+1)\theta + K_{2n+3}(\omega_2 r)\cdot\sin(2n+3)\theta \\ \phi_y \equiv K_{2n+1}(\omega_2 r)\cdot\cos(2n+1)\theta - K_{2n+3}(\omega_2 r)\cdot\cos(2n+3)\theta \\ \phi_x^* \equiv \phi_x, \quad \phi_y^* \equiv \phi_y \end{cases} \quad (1522)$$

$$\begin{cases} g_1 \equiv -2\mu\cdot K_{2n+2}(\omega_2 r)\cdot\sin(2n+2)\theta \\ g_2 \equiv K_{2n}(\omega_2 r)\cdot\sin 2n\theta + K_{2n+4}(\omega_2 r)\cdot\sin(2n+4)\theta \\ g_3 \equiv -K_{2n}(\omega_2 r)\cdot\cos 2n\theta + K_{2n+4}(\omega_2 r)\cdot\cos(2n+4)\theta \\ \sigma_x \equiv G\omega_2(g_1 - g_2), \quad \sigma_y \equiv G\omega_2(g_1 + g_2), \quad \tau_{xy} \equiv G\omega_2 g_3 \\ \sigma_x^* \equiv \sigma_x, \quad \sigma_y^* \equiv \sigma_y, \quad \tau_{xy}^* \equiv \tau_{xy} \end{cases} \quad (1523)$$

Converting eq. (1522) according to eqs. (969), (970) gives:
[Formula 634]

$$\begin{cases} \phi_r \equiv \left\{K_{2n+1}(\omega_2 r) + K_{2n+3}(\omega_2 r)\right\}\sin(2n+2)\theta \\ \phi_\theta \equiv \left\{K_{2n+1}(\omega_2 r) - K_{2n+3}(\omega_2 r)\right\}\cos(2n+2)\theta \\ \phi_r^* \equiv \phi_r, \quad \phi_\theta^* \equiv \phi_\theta \end{cases} \quad (1524)$$

Converting eq. (1523) according to eqs. (977), (978), (979) gives:

$$\begin{cases} h_1 \equiv -2\mu\cdot K_{2n+2}(\omega_2 r)\cdot\sin(2n+2)\theta \\ h_2 \equiv \left\{K_{2n}(\omega_2 r) + K_{2n+4}(\omega_2 r)\right\}\sin(2n+2)\theta \\ h_3 \equiv \left\{-K_{2n}(\omega_2 r) + K_{2n+4}(\omega_2 r)\right\}\cos(2n+2)\theta \\ \sigma_r \equiv G\omega_2(h_1 - h_2), \quad \sigma_\theta \equiv G\omega_2(h_1 + h_2), \quad \tau_{r\theta} \equiv G\omega_2 h_3 \\ \sigma_r^* \equiv \sigma_r, \quad \sigma_\theta^* \equiv \sigma_\theta, \quad \tau_{r\theta}^* \equiv \tau_{r\theta} \end{cases} \quad (1525)$$

11. 4. 26 Boundary condition and adjoint boundary condition, as well as eigenfunction set

For comparison with analytical solutions in Section 11. 4. 10, a problem is solved with a boundary condition given in Section 11. 4. 9. More specifically, it is determined, regarding a ring on which uniform gravity is acting in the y direction, how the outer edge thereof should be supported so that a boundary condition for the inner edge thereof is such that a surface force is zero and a displacement is zero. This is a problem that has been considered insoluble conventionally.

A boundary condition imposed on an eigenfunction is given as:
[Formula 635]

$$\left.\begin{aligned} \phi_r\big|_{r=\gamma R} &= 0 \\ \phi_\theta\big|_{r=\gamma R} &= 0 \\ \sigma_{Er}\big|_{r=\gamma R} &= 0 \\ \tau_{Er\theta}\big|_{r=\gamma R} &= 0 \end{aligned}\right\} \Leftrightarrow \begin{cases} p_{Er}\big|_{r=\gamma R} = 0 \\ p_{E\theta}\big|_{r=\gamma R} = 0 \end{cases} \quad (1526)$$

The index E represents a stress or a surface force generated by the eigenfunction, as described in Section 4.2. Eq.(1526) are equal to the condition equations (1018), (1019), and (1069). In the same manner as that for obtaining eq. (1085), the boundary term $R_E$ of eq. (91) is expressed as follows with polar coordinate components:

[Formula 636]

$$R_E \equiv \frac{1}{G}\int_C \left(p_{Er}\cdot\phi_r^* + p_{E\theta}\cdot\phi_\theta^*\right)dc - \frac{1}{G}\int_C \left(\phi_r \cdot p_{Er}^* + \phi_\theta \cdot p_{E\theta}^*\right)dc \quad (1527)$$

Therefore, the adjoint boundary condition is given as:

$$\left.\begin{aligned} \phi_r^*\big|_{r=R} &= 0 \\ \phi_\theta^*\big|_{r=R} &= 0 \\ \sigma_{Er}^*\big|_{r=R} &= 0 \\ \tau_{Er\theta}^*\big|_{r=R} &= 0 \end{aligned}\right\} \Leftrightarrow \begin{cases} p_{Er}^*\big|_{r=R} = 0 \\ p_{E\theta}^*\big|_{r=R} = 0 \end{cases} \quad (1528)$$

This is equal to eq. (1070), which is a condition such that on the outer edge (r=R), the surface force is zero and the displacement is zero. As the condition of eq. (1526) and the condition of eq. (1528) are different, this is a non-self-adjoint boundary condition.

Only the function set of the mode AS is able to express the solution in the case of uniform gravity in the y direction, and the other three modes, SA, SS, AA do not contribute to this. To the mode AS, the following eight sets in total belong: $J_{1AS}$ of eq. (1251); $J_{2AS}$ of eq. (1263) ; $Y_{1AS}$ of eq. (1295); $Y_{2AS}$ of eq. (1307); $I_{1AS}$ of eq. (1339); $I_{2AS}$ of eq. (1351); $K_{1AS}$ of eq. (1383); and $K_{2AS}$ of eq. (1395). Besides, they serve as solution functions with respect to an arbitrary integer n, the total number is 8n. However, only one function set of n=0 among those of the mode AS is able to expressing the solution in the case of uniform gravity, and the sets of n≠0 do not contribute to this.

The primal eigenfunction and the dual eigenfunction, as well as stress functions based on these are collectively given as F. Then, $J_{1AS}$ of eq. (1251) is multiplied by a coefficient $c_{J1}$, $J_{2AS}$ of eq. (1263) is multiplied by a coefficient $c_{J2}$, $Y_{1AS}$ of eq. (1295) is multiplied by a coefficient $c_{Y1}$, $Y_{2AS}$ of eq. (1307) is multiplied by a coefficient $c_{Y2}$, $I_{1AS}$ of eq. (1339) is multiplied by a coefficient $c_{I1}$, $I_{2AS}$ of eq. (1351) is multiplied by a coefficient $c_{I1}$, $K_{1AS}$ of eq. (1383) is multiplied by a coefficient $c_{K1}$, and $K_{2AS}$ of eq. (1395) is multiplied by a coefficient $c_{K2}$, and they are added and equated to F. In other words, the following is given:

[Formula 637]

$$F \equiv \begin{cases} \phi_x, & \phi_y \\ \sigma_x, & \sigma_y, \quad \tau_{xy} \\ \phi_x^*, & \phi_y^* \\ \sigma_x^*, & \sigma_y^*, \quad \tau_{xy}^* \end{cases}, \qquad \underset{8\times 1}{\{c_F\}} \equiv \begin{Bmatrix} c_{J1} \\ c_{J2} \\ c_{Y1} \\ c_{Y2} \\ c_{I1} \\ c_{I2} \\ c_{K1} \\ c_{K2} \end{Bmatrix} \quad (1529)$$

Then, the following equation is created:

$$F = c_{J1} \cdot J_{1AS} + c_{J2} \cdot J_{2AS} + c_{Y1} \cdot Y_{1AS} + c_{Y2} \cdot Y_{2AS} + c_{I1} \cdot I_{1AS} + c_{I2} \cdot I_{2AS} + c_{K1} \cdot K_{1AS} + c_{K2} \cdot K_{2AS} \quad (1530)$$

The coefficients $c_F$ are determined so that F satisfies the imposed boundary condition. It is convenient to give the boundary condition with polar coordinate components as is the case with eqs. (1526), (1528). Then we use following expressions, $J_{1AS}$ with eqs. (1432) and (1433), $J_{2AS}$ with eqs. (1436) and (1437), $Y_{1AS}$ with eqs. (1440) and (1441), $Y_{2AS}$ with eqs. (1444) and (1445), $I_{1AS}$ with eqs. (1448) and (1449), $I_{2AS}$ with eqs. (1452) and (1453), $K_{1AS}$ with eqs. (1456) and (1457), and $K_{2AS}$ with eqs. (1460) and (1461). As the boundary conditions are eight in total, and the coefficients $c_F$ are eight in total as well, the following simultaneous equation is obtained:
[Formula 638]

$$\underset{8\times 8}{\left[A\right]}\underset{8\times 1}{\left\{c_F\right\}} = \underset{8\times 1}{\left\{0\right\}} \quad (1531)$$

Components of the matrix *A* are given as:

$$\underset{8\times 8}{\left[A\right]} \equiv \begin{bmatrix} a_{11} & a_{12} & a_{13} & a_{14} & a_{15} & a_{16} & a_{17} & a_{18} \\ a_{21} & a_{22} & a_{23} & a_{24} & a_{25} & a_{26} & a_{27} & a_{28} \\ a_{31} & a_{32} & a_{33} & a_{34} & a_{35} & a_{36} & a_{37} & a_{38} \\ a_{41} & a_{42} & a_{43} & a_{44} & a_{45} & a_{46} & a_{47} & a_{48} \\ a_{51} & a_{52} & a_{53} & a_{54} & a_{55} & a_{56} & a_{57} & a_{58} \\ a_{61} & a_{62} & a_{63} & a_{64} & a_{65} & a_{66} & a_{67} & a_{68} \\ a_{71} & a_{72} & a_{73} & a_{74} & a_{75} & a_{76} & a_{77} & a_{78} \\ a_{81} & a_{82} & a_{83} & a_{84} & a_{85} & a_{86} & a_{87} & a_{88} \end{bmatrix} \quad (1532)$$

[Formula 639]
Eigenvalues $\omega_1, \omega_2$ of eqs. (1103), (1104) are given with $\chi_1, \chi_2$ as follows:

$$\omega_1 \equiv \frac{1}{R}\sqrt{\lambda} \equiv \frac{1}{R}\chi_1 \qquad \Rightarrow \qquad \chi_1 \equiv \sqrt{\lambda} \quad (1533)$$

$$\omega_2 \equiv \frac{1}{R}\sqrt{\frac{\lambda}{1+\mu}} \equiv \frac{1}{R}\chi_2 \quad \Rightarrow \quad \chi_2 \equiv \sqrt{\frac{\lambda}{1+\mu}} \quad (1534)$$

Then, the equations are rearranged, and the components of the matrix A can be simplified as follows. Here, let us note that not only the function set of n=0 but also the function sets of n≠0 satisfy the boundary condition. In the case of the y-direction uniform gravity load, the function set of n=0 expresses a solution, but in the other load states, the function sets of n≠0 can express a solution. Therefore, the components of the matrix A are expressed with use of n. The first and second columns of the matrix A are given as:
[Formula 640]

$$\begin{aligned} c_1 &\equiv J_{2n}(\chi_1) &, \quad c_5 &\equiv J_{2n}(\chi_2) \\ c_2 &\equiv J_{2n+2}(\chi_1) &, \quad c_6 &\equiv J_{2n+2}(\chi_2) \\ c_3 &\equiv J_{2n}(\gamma\chi_1) &, \quad c_7 &\equiv J_{2n}(\gamma\chi_2) \\ c_4 &\equiv J_{2n+2}(\gamma\chi_1) &, \quad c_8 &\equiv J_{2n+2}(\gamma\chi_2) \end{aligned} \quad (1535)$$

Then, we obtain:
[Formula 641]

$$
\begin{array}{ll}
a_{11} \equiv c_1 & , \quad a_{12} \equiv c_5 \\
a_{21} \equiv c_2 & , \quad a_{22} \equiv -c_6 \\
a_{31} \equiv c_1 + c_2 & , \quad a_{32} \equiv 0 \\
a_{41} \equiv 0 & , \quad a_{42} \equiv c_5 + c_6 \\
a_{51} \equiv c_3 & , \quad a_{52} \equiv c_7 \\
a_{61} \equiv c_4 & , \quad a_{62} \equiv -c_8 \\
a_{71} \equiv c_3 + c_4 & , \quad a_{72} \equiv 0 \\
a_{81} \equiv 0 & , \quad a_{82} \equiv c_7 + c_8
\end{array}
\qquad (1536)
$$

The third and fourth columns of the matrix A are given as:
[Formula 642]

$$
\begin{array}{ll}
c_9 \equiv Y_{2n}(\chi_1) & , \quad c_{13} \equiv Y_{2n}(\chi_2) \\
c_{10} \equiv Y_{2n+2}(\chi_1) & , \quad c_{14} \equiv Y_{2n+2}(\chi_2) \\
c_{11} \equiv Y_{2n}(\gamma\,\chi_1) & , \quad c_{15} \equiv Y_{2n}(\gamma\,\chi_2) \\
c_{12} \equiv Y_{2n+2}(\gamma\,\chi_1) & , \quad c_{16} \equiv Y_{2n+2}(\gamma\,\chi_2)
\end{array}
\qquad (1537)
$$

Then, we obtain:
[Formula 643]

$$
\begin{array}{ll}
a_{13} \equiv c_9 & , \quad a_{14} \equiv c_{13} \\
a_{23} \equiv c_{10} & , \quad a_{24} \equiv -c_{14} \\
a_{33} \equiv c_9 + c_{10} & , \quad a_{34} \equiv 0 \\
a_{43} \equiv 0 & , \quad a_{44} \equiv c_{13} + c_{14} \\
a_{53} \equiv c_{11} & , \quad a_{54} \equiv c_{15} \\
a_{63} \equiv c_{12} & , \quad a_{64} \equiv -c_{16} \\
a_{73} \equiv c_{11} + c_{12} & , \quad a_{74} \equiv 0 \\
a_{83} \equiv 0 & , \quad a_{84} \equiv c_{15} + c_{16}
\end{array}
\qquad (1538)
$$

The fifth and sixth columns of the matrix A are given as:
[Formula 644]

$$
\begin{array}{ll}
c_{17} \equiv I_{2n}(\chi_1) & , \quad c_{21} \equiv I_{2n}(\chi_2) \\
c_{18} \equiv I_{2n+2}(\chi_1) & , \quad c_{22} \equiv I_{2n+2}(\chi_2) \\
c_{19} \equiv I_{2n}(\gamma\,\chi_1) & , \quad c_{23} \equiv I_{2n}(\gamma\,\chi_2) \\
c_{20} \equiv I_{2n+2}(\gamma\,\chi_1) & , \quad c_{24} \equiv I_{2n+2}(\gamma\,\chi_2)
\end{array}
\qquad (1539)
$$

Then, we obtain:
[Formula 645]

$$
\begin{array}{ll}
a_{15} \equiv -c_{17} & , \quad a_{16} \equiv -c_{21} \\
a_{25} \equiv c_{18} & , \quad a_{26} \equiv -c_{22} \\
a_{35} \equiv c_{17} - c_{18} & , \quad a_{36} \equiv 0 \\
a_{45} \equiv 0 & , \quad a_{46} \equiv c_{21} - c_{22} \\
a_{55} \equiv c_{19} & , \quad a_{56} \equiv c_{23} \\
a_{65} \equiv -c_{20} & , \quad a_{66} \equiv c_{24} \\
a_{75} \equiv -c_{19} + c_{20} & , \quad a_{76} \equiv 0 \\
a_{85} \equiv 0 & , \quad a_{86} \equiv -c_{23} + c_{24}
\end{array}
\qquad (1540)
$$

The seventh and eighth columns of the matrix A are given as:
[Formula 646]

$$\begin{array}{ll} c_{25} \equiv K_{2n}(\chi_1) & , \quad c_{29} \equiv K_{2n}(\chi_2) \\ c_{26} \equiv K_{2n+2}(\chi_1) & , \quad c_{30} \equiv K_{2n+2}(\chi_2) \\ c_{27} \equiv K_{2n}(\gamma\chi_1) & , \quad c_{31} \equiv K_{2n}(\gamma\chi_2) \\ c_{28} \equiv K_{2n+2}(\gamma\chi_1) & , \quad c_{32} \equiv K_{2n+2}(\gamma\chi_2) \end{array} \qquad (1541)$$

Then, we obtain:
[Formula 647]

$$\begin{array}{ll} a_{17} \equiv -c_{25} & , \quad a_{18} \equiv -c_{29} \\ a_{27} \equiv c_{26} & , \quad a_{28} \equiv -c_{30} \\ a_{37} \equiv c_{25} - c_{26} & , \quad a_{38} \equiv 0 \\ a_{47} \equiv 0 & , \quad a_{48} \equiv c_{29} - c_{30} \\ a_{57} \equiv c_{27} & , \quad a_{58} \equiv c_{31} \\ a_{67} \equiv -c_{28} & , \quad a_{68} \equiv c_{32} \\ a_{77} \equiv -c_{27} + c_{28} & , \quad a_{78} \equiv 0 \\ a_{87} \equiv 0 & , \quad a_{88} \equiv -c_{31} + c_{32} \end{array} \qquad (1542)$$

The determinant of the matrix A become functions of $\chi_1$, $\chi_2$, and consequently functions of the eigenvalue $\lambda$ according to eqs. (1533), (1534). By solving an characteristic equation that makes the determinant zero, we obtain the eigenvalue $\lambda$. Further, according to eq. (1531), we obtain an eigenvector $c_F$ corresponding to the eigenvalue $\lambda$. As the characteristic equation and the eigenvector have great length, it is impossible to describe the same herein unfortunately. However, the result of solution can be described numerically.

11. 4. 27 Primal eigenfunction and dual eigenfunction

In a plane stress state, the material constants are given as follows, as is the case with the analytical solution described in Section 11. 4. 10:
[Formula 648]

$$\nu \equiv \frac{3}{10}, \qquad \mu \equiv \frac{1+\nu}{1-\nu} = \frac{13}{7} \qquad (1026) \text{ (Aforementioned)}$$

The inner diameter ratio $\gamma$ is given as:

$$\gamma \equiv \frac{3}{10} \qquad (1027) \text{ (Aforementioned)}$$

Solving the characteristic equation obtained from eq. (1531) in which n=0 gives four lower-order eigenvalues $\lambda$ in the vicinities of:
[Formula 649]

$$\begin{cases} 5.317 \times 10^0 \\ 1.882 \times 10^1 \\ 5.080 \times 10^1 \\ 1.157 \times 10^2 \end{cases} \qquad (1543)$$

When eigenvectors $c_F$ corresponding to the eigenvalues $\lambda$ are determined and substituted into eq. (1530), F is settled. F includes a primal eigenfunction, a dual eigenfunction, and a stress function based on the same.

States of deformation and stress distribution in the No.1 mode ($\lambda$=5. 317$\times 10^0$) are shown in FIG. 47. The upper

part shows states determined according to the primal eigenfunction, wherein the surface force is zero and the displacement is zero also on the inner edge. The lower part shows states determined according to the dual eigenfunction, wherein the surface force is zero and the displacement is zero on the outer edge. The states of deformation in the upper part appear similar to deformation determined according to the analytical solution shown in FIG. 42, but the stress distribution thereof is significantly different. For example, in the case of the analytical solution, stress distribution is seen regarding $\sigma_\tau$, while in the case of the primal eigenfunction, similar stress distribution is seen regarding $\sigma_\theta$.

States of deformation and stress distribution in No. 2 mode ($\lambda$=1.882$\times$10$^1$) are shown in FIG. 48. The upper part shows states determined according to the primal eigenfunction, wherein the surface force is zero and the displacement is zero also on the inner edge. The lower part shows states determined according to the dual eigenfunction, wherein the surface force is zero and the displacement is zero on the outer edge. Focusing on $\sigma_\theta$ according to the primal eigenfunction, we can see that the distribution is similar to that of $\sigma_\theta$ in the No. 1 mode. Further, we can see that the distribution of $\sigma_\tau$ is similar to that according to the analytical solution. Therefore, from the difference between No.1 mode and No. 2 mode, it can be expected to obtain states similar to those according to the analytical solution.

States of deformation and stress distribution in No. 3 mode ($\lambda$=5.080$\times$10$^1$) are shown in FIG. 49. The states of deformation are slightly complicated.

States of deformation and stress distribution in No. 4mode ($\lambda$=1.157$\times$10$^2$) are shown in FIG. 50. The states of deformation are further complicated.

11. 4. 28 Eigenfunction method

A solution is determined by the eigenfunction method described in Section 5.1. As is the case with the analytical solution described in Section 11. 4. 10, load coefficients $c_x$, $c_y$ are given as:
[Formula 650]

$$\begin{Bmatrix} c_x \\ c_y \end{Bmatrix} \equiv \begin{Bmatrix} 0 \\ 1 \end{Bmatrix} \qquad (1028) \text{ (Aforementioned)}$$

Then, a displacement is made dimensionless with the outer radius R.

Results of calculation performed by using up to No.2 mode are shown in FIG. 51. The stress $\sigma_\theta$ is cancelled, and we find that the distribution of $\sigma_\tau$ is similar to the analytical solution.

Results of calculation performed by using up to No. 3 mode are shown in FIG. 52. We find that the distribution of the stress $\sigma_\tau$ is closer to that of the analytical solution.

Results of calculation performed by using up to No. 10 mode are shown in FIG. 53. We find that the stress distribution is closer to that of the analytical solution.

Results of calculation performed by using up to No. 30 mode are shown in FIG. 54. We find that the results have substantially no difference from the results of calculation performed by using up to No. 10 mode, and the stress distribution and the state of deformation are generally closer to the analytical solution.

11. 5 Source and vortex

This section should better be included in Section 10.

11. 5. 1 Differential equation

The problem of two-dimensional irrotational flow is described by simultaneous partial differential equations of the following equation of continuity (18) and the following equation of vortex-free condition (19) in the orthogonal coordinate system:
[Formula 651]

$$\frac{\partial u_x}{\partial x} + \frac{\partial u_y}{\partial y} = 0 \qquad (18) \text{ (Aforementioned)}$$

$$\frac{\partial u_y}{\partial x} - \frac{\partial u_x}{\partial y} = 0 \qquad (19) \text{ (Aforementioned)}$$

where $u_x$,$u_y$ represent velocities in the $x,y$directions, respectively. If the velocity potential $\phi$ is defined as satisfying the following relationship with velocity of flow

$$u_x \equiv \frac{\partial \phi}{\partial x}, \qquad u_y \equiv \frac{\partial \phi}{\partial y} \quad , \tag{1544}$$

and when this equation is substituted into eq. (19), the equal sign is established always. Therefore, only using the velocity potential satisfies the vortex-free condition equation (19). Further, substituting eq. (1544) into eq. (18), we obtain the following Laplace's equation:
[Formula 652]

$$\nabla^2 \phi \equiv \left( \frac{\partial^2}{\partial x^2} + \frac{\partial^2}{\partial y^2} \right) \phi = 0 \tag{1545}$$

which represents the equation of continuity. Therefore, the problem of irrotational flow is called a two-dimensional potential flow.

On the other hand, if the flow function $\psi$is defined as satisfying the following relationship with the velocity of flow

$$u_x \equiv \frac{\partial \psi}{\partial y}, \qquad u_y \equiv -\frac{\partial \psi}{\partial x}, \tag{1546}$$

and when this equation is substituted into eq. (18), the equal sign is established always. Therefore, only using the flow function satisfies the equation of continuity (18). Further, substituting eq. (1546) into eq. (19), we obtain the following Laplace's equation:
[Formula 653]

$$-\nabla^2 \psi \equiv -\left( \frac{\partial^2}{\partial x^2} + \frac{\partial^2}{\partial y^2} \right) \psi = 0 \tag{1547}$$

which represents the vortex-free condition.

In the case where a source is represented by Dirac's function, the right sides of eqs. (18) and (1545) become functions.Further, in the case where a vortex is represented Dirac's function, the right sides of eqs. (19) and (1547) become functions. To eliminate the necessity of switching the equations according to the characteristics of the source or the vortex, eq. (18) may be recognized as
[Formula 654]

$$\frac{\partial u_x}{\partial x} + \frac{\partial u_y}{\partial y} = f_x \tag{1548}$$

and $f_x$ is perceived as source distribution, and similarly, eq. (19) may be given as

$$-\frac{\partial u_x}{\partial y} + \frac{\partial u_y}{\partial x} = f_y \tag{1549}$$

and $f_y$ may be recognized as vortex distribution. Further, if the problem is dealt with by the simultaneous differential equations (1548), (1549), the boundary function can be designated with the velocities $u_x$, $u_y$, which is advantages.

Velocities $u_x$, $u_y$ determined as primal solutions are referred to as primal velocities, and written as $u_1$, $u_2$. If the right-hand sides of the equations are written as $f_1$, $f_2$, then the simultaneous partial differential equations (1548), (1549) are transformed to the form of eq. (23):
[Formula 655]

$$\sum_j L_{ij} u_j = f_i \qquad (23) \text{ (Aforementioned)}$$

This equation is a basis for application of the eigenfunction method to a problem of hydrodynamics.

11. 5. 2 Polar coordinate solution of harmonic equation

In Section 11. 4. 8, solutions of biharmonic equations are obtained, some of which satisfy a harmonic equation (Laplace's equation). Since the polar coordinate format of the differential operator is given by eq. (992),
[Formula 656]

$$\nabla^2 \phi \equiv \left( \frac{\partial^2}{\partial x^2} + \frac{\partial^2}{\partial y^2} \right) \phi = \left( \frac{\partial^2}{\partial r^2} + \frac{1}{r}\frac{\partial}{\partial r} + \frac{1}{r^2}\frac{\partial^2}{\partial \theta^2} \right) \phi , \qquad (992) \text{ (Aforementioned)}$$

eq. (1545) is transformed to:

$$\nabla^2 \phi \equiv \left( \frac{\partial^2}{\partial r^2} + \frac{1}{r}\frac{\partial}{\partial r} + \frac{1}{r^2}\frac{\partial^2}{\partial \theta^2} \right) \phi = 0 . \qquad (1550)$$

A solution satisfying this is transformed into a variable separation form as follows:

$$\phi(r,\theta) \equiv A(r) \cdot B(\theta) \qquad (1551)$$

Then, eq. (1550) is transformed to:

$$r^2 \frac{\ddot{A}(r)}{A(r)} + r \frac{\dot{A}(r)}{A(r)} = - \frac{\ddot{B}(\theta)}{B(\theta)} \equiv v^2 \qquad (1552)$$

where v represents an arbitrary constant.
A differential equation obtained from eq. (1552) is given as:
[Formula 657]

$$\ddot{B}(\theta) + v^2 B(\theta) = 0 \qquad (1553)$$

And a solution of this equation is given as:

$$B(\theta) = \sin v\theta, \cos v\theta \qquad (1554)$$

Similarly, a differential equation obtained from eq. (1552) is given as:
[Formula 658]

$$\ddot{A}(r) + \frac{1}{r}\dot{A}(r) - \left( \frac{v}{r} \right)^2 A(r) = 0 \qquad (1555)$$

And a solution of this equation is given as:

$$A(r) = r^v, r^{-v} \qquad (1556)$$

Consequently, we obtain the following solution:

$$\phi(r,\theta) \equiv A(r)\cdot B(\theta) = \begin{pmatrix} r^{v} \\ r^{-v} \end{pmatrix} \times \begin{pmatrix} \sin v\theta \\ \cos v\theta \end{pmatrix} \quad (1557)$$

As a derived function of a velocity potential represents a velocity, it is necessary to obtain a solution of periodicity in the θ direction. Therefore, let v be an integer n, and we obtain:
[Formula 659]

$$\phi(r,\theta) \equiv A(r)\cdot B(\theta) = \begin{pmatrix} r^{n} \\ r^{-n} \end{pmatrix} \times \begin{pmatrix} \sin n\theta \\ \cos n\theta \end{pmatrix} \quad (1558)$$

In a special case where v=0 in eq. (1552), a solution given as eq. (1560) is obtained as a solution of a differential equation (1559):
[Formula 660]

$$\ddot{B}(\theta) = 0 \quad (1559)$$

$$B(\theta) = 1, \theta \quad (1560)$$

Similarly, a solution of a differential equation (1561) is given as eq. (1562):

$$\ddot{A}(r) + \frac{1}{r}\dot{A}(r) = 0 \quad (1561)$$

$$A(r) = 1, \ln r \quad (1562)$$

Consequently, we obtain the following solution:

$$\phi(r,\theta) \equiv A(r)\cdot B(\theta) = \begin{pmatrix} 1 \\ \ln r \end{pmatrix} \times \begin{pmatrix} 1 \\ \theta \end{pmatrix} \quad (1563)$$

As a derived function of a velocity potential represents a velocity, it is necessary to obtain a solution of periodicity in the θ direction, and therefore, θ·ln r is inappropriate as a solution. Further, 1·1 represents nothing but a velocity of zero. Therefore, the following two are solutions:
[Formula 661]

$$\phi(r,\theta) \equiv \ln r, \theta \quad (1564)$$

The first solution ln r of this equation represents a source, and the second solution θ represents a vortex.

11. 5. 3 Orthogonal coordinate solution of harmonic equation

When a solution satisfying the following harmonic equation (Laplace's equation) (1545) is given in a variable separation form given as eq. (1565)
[Formula 662]

$$\nabla^2\phi \equiv \left(\frac{\partial^2}{\partial x^2}+\frac{\partial^2}{\partial y^2}\right)\phi = 0 \qquad (1545) \text{ (Aforementioned)}$$

$$\phi(x,y) \equiv X(x)\cdot Y(y), \qquad (1565)$$

eq. (1545) is transformed to

$$\frac{X''(x)}{X(x)} = -\frac{Y''(y)}{Y(y)} \equiv v^2 \qquad (1566)$$

where v represents an arbitrary constant.

A differential equation obtained from eq. (1556) is given as:
[Formula 663]

$$X''(x) - v^2X(x) = 0 \qquad (1567)$$

And a solution of this equation is given as:

$$X(x) = \sinh vx, \cosh vx \qquad (1568)$$

Similarly, a differential equation obtained from eq. (1566) is given as:

$$Y''(y) + v^2Y(y) = 0 \qquad (1569)$$

And a solution of this equation is given as:

$$Y(y) = \sin vy, \cos vy \qquad (1570)$$

Consequently, we obtain the following solution:

$$\phi(x,y) \equiv X(x)\cdot Y(y) = \begin{pmatrix}\sinh vx\\ \cosh vx\end{pmatrix}\times\begin{pmatrix}\sin vy\\ \cos vy\end{pmatrix} \qquad (1571)$$

Understanding that inverting the sign of the constant part $v^2$ of eq. (1566) gives

$$-\frac{X''(x)}{X(x)} = \frac{Y''(y)}{Y(y)} \equiv v^2 \quad , \qquad (1572)$$

a differential equation obtained from eq. (1572) is given as:
[Formula 664]

$$X''(x) + v^2X(x) = 0 \qquad (1573)$$

And a solution thereof is given as:

$$X(x) = \sin vx, \cos vx \qquad (1574)$$

Similarly, a differential equation obtained from eq. (1572) is given as:

$$Y''(y) - v^2 Y(y) = 0 \qquad (1575)$$

And a solution thereof is given as:

$$Y(y) = \sinh vy, \cosh vy \qquad (1576)$$

Consequently, we obtain the following solution:

$$\phi(x,y) \equiv X(x) \cdot Y(y) = \begin{pmatrix} \sin vx \\ \cos vx \end{pmatrix} \times \begin{pmatrix} \sinh vy \\ \cosh vy \end{pmatrix} \qquad (1577)$$

In a special case where *v*=0 in eq. (1572), a solution given as eq. (1579) is obtained as a solution of a differential equation (1578):
[Formula 665]

$$X''(x) = 0 \qquad (1578)$$

$$X(x) = 1, x \qquad (1579)$$

Similarly, a solution of a differential equation (1580) is given as eq. (1581):

$$Y''(y) = 0 \qquad (1580)$$

$$Y(y) = 1, y \qquad (1581)$$

Consequently, we obtain the following solution:

$$\phi(x,y) \equiv X(x) \cdot Y(y) = \begin{pmatrix} 1 \\ x \end{pmatrix} \times \begin{pmatrix} 1 \\ y \end{pmatrix} \qquad (1582)$$

11. 5. 4 Orthogonal coordinate solution of harmonic characteristic equation

When a solution satisfying the following harmonic characteristic equation (1583) is given in a variable separation form given as eq. (1584)
[Formula 666]

$$\left(\nabla^2 + \omega^2\right)\phi \equiv \left(\frac{\partial^2}{\partial x^2} + \frac{\partial^2}{\partial y^2} + \omega^2\right)\phi = 0 \qquad (1583)$$

$$\phi(x,y) \equiv X(x) \cdot Y(y) \ , \qquad (1584)$$

eq. (1583) is transformed to

$$\frac{\ddot{X}(x)}{X(x)} + \frac{\ddot{Y}(y)}{Y(y)} + \omega^2 = 0. \quad (1585)$$

Assuming that solutions having periodicity are obtained in both of the x and y directions, and giving

$$\frac{\ddot{X}(x)}{X(x)} \equiv -\alpha^2 \quad (1586)$$

$$\frac{\ddot{Y}(y)}{Y(y)} \equiv -\beta^2 \quad , \quad (1587)$$

then, we obtain:
[Formula 667]

$$\alpha^2 + \beta^2 = \omega^2 \quad (1588)$$

A differential equation obtained from eq. (1586) is given as:

$$\ddot{X}(x) + \alpha^2 X(x) = 0 \quad (1589)$$

And a solution of this equation is given as:

$$X(x) = \sin \alpha x, \cos \alpha x \quad (1590)$$

Similarly, a differential equation obtained from eq. (1587) is given as:

$$\ddot{Y}(y) + \beta^2 Y(y) = 0 \quad (1591)$$

And a solution of this equation is given as:

$$Y(y) = \sin \beta y, \cos \beta y \quad (1592)$$

Consequently, we obtain the following solution:

$$\phi(x,y) \equiv X(x) \cdot Y(y) = \begin{pmatrix} \sin \alpha x \\ \cos \alpha x \end{pmatrix} \times \begin{pmatrix} \sin \beta y \\ \cos \beta y \end{pmatrix} \quad (1593)$$

11. 5. 5 Solution of source

Let the intensity of source at the origin of coordinates be Q[$m^2$/s], and the velocity potential $\phi$ is given as follows according to eq. (1564):
[Formula 668]

$$\phi = \frac{Q}{2\pi} \ln r = \frac{Q}{2\pi} \ln \sqrt{x^2 + y^2} \quad (1594)$$

Differentiating this gives velocities of $u_x$,$u_y$, which are given as:

$$u_x \equiv \frac{\partial \phi}{\partial x} = \frac{Q}{2\pi} \frac{x}{x^2 + y^2}$$
$$u_y \equiv \frac{\partial \phi}{\partial y} = \frac{Q}{2\pi} \frac{y}{x^2 + y^2} \qquad (1595)$$

In the case where the intensity $Q$ = 1, the souce is called a source of unit intensity. Let the velocity vector by the components $u_x$,$u_y$ of eq.(1595) be $v$, and we obtain:

$$div(\boldsymbol{v}) = \frac{\partial u_x}{\partial x} + \frac{\partial u_y}{\partial y} = 0 \qquad (1596)$$

$$rot(\boldsymbol{v}) = \frac{\partial u_y}{\partial x} - \frac{\partial u_x}{\partial y} = 0 \qquad (1597)$$

Thus, these certainly satisfy eqs. (18), (19). However, from the viewpoint of Gauss's divergence theorem

$$\int_S div(\boldsymbol{v}) ds = \int_C \boldsymbol{n} \cdot \boldsymbol{v} dc, \qquad (1598)$$

what is seen is different slightly. Whereas the left side of the equation becomes zero according to eq. (1596), the right side of the equation becomes Q. In order to make the left side of the equation Q, div(v)=Q·δ(x, y) may be satisfied. Therefore, recognizing the differential equations as
[Formula 669]

$$div(\boldsymbol{v}) = \frac{\partial u_x}{\partial x} + \frac{\partial u_y}{\partial y} = Q \cdot \delta(x,y) \qquad (1599)$$

$$rot(\boldsymbol{v}) = \frac{\partial u_y}{\partial x} - \frac{\partial u_x}{\partial y} = 0 \qquad (1600)$$

is suitable for the representation of the source at the origin of coordinates. This format is included in eqs. (1548) and (1549). It should be noted that in eq. (1598), n represents an outward unit normal vector at a boundary C, and when a circular field is given, we obtain:
[Formula 670]

$$\boldsymbol{n} = \begin{Bmatrix} n_x \\ n_y \end{Bmatrix} = \begin{Bmatrix} \cos\theta \\ \sin\theta \end{Bmatrix} \qquad (1601)$$

11. 5. 6 Solution of vortex

Let the intensity (circulation) of vortex at the origin of coordinates be $\Gamma$[$m^2$/s], and the velocity potential $\phi$ is given as follows according to eq. (1564):
[Formula 671]

$$\phi = \frac{\Gamma}{2\pi}\theta = \frac{\Gamma}{2\pi}\arctan\frac{y}{x} \qquad (1602)$$

Differentiating this gives a velocities of $u_x$,$u_y$, which are given as:

$$u_x \equiv \frac{\partial \phi}{\partial x} = -\frac{\Gamma}{2\pi}\frac{y}{x^2+y^2}$$
$$u_y \equiv \frac{\partial \phi}{\partial y} = \frac{\Gamma}{2\pi}\frac{x}{x^2+y^2} \qquad (1603)$$

In the case where the intensity $\Gamma$=1, the vortex is called as a vortex of unit intensity. Let the velocity vector by the components $u_x$,$u_y$ of eq.(1603) be *v*, and we obtain:

$$div(\boldsymbol{v}) = \frac{\partial u_x}{\partial x} + \frac{\partial u_y}{\partial y} = 0 \qquad (1604)$$

$$rot(\boldsymbol{v}) = \frac{\partial u_y}{\partial x} - \frac{\partial u_x}{\partial y} = 0 \qquad (1605)$$

Thus, these certainly satisfy eqs. (18), (19). However, from the viewpoint of Stokes' theorem in plane
[Formula 672]

$$\int_S rot(\boldsymbol{v})ds = \int_C \boldsymbol{t}\cdot\boldsymbol{v}dc \quad , \qquad (1606)$$

what is seen is different slightly. Whereas the left side of the equation becomes zero according to eq. (1605), the right side of the equation becomes r. In order to make the left side of the equation r, $rot(v)=\Gamma\cdot\delta(x,y)$ may be satisfied. Therefore, recognizing the differential equations as

$$div(\boldsymbol{v}) = \frac{\partial u_x}{\partial x} + \frac{\partial u_y}{\partial y} = 0 \qquad (1607)$$

[Formula 673]

$$rot(\boldsymbol{v}) = \frac{\partial u_y}{\partial x} - \frac{\partial u_x}{\partial y} = \Gamma\cdot\delta(x,y) \qquad (1608)$$

is suitable for the representation of the source at the origin of coordinates. This format is included in eqs. (1548) and (1549). It should be noted that in eq. (1606), t represents a unit tangent vector at a boundary C, and when a circular field is given, we obtain:
[Formula 674]

$$\boldsymbol{t} = \begin{Bmatrix} t_x \\ t_y \end{Bmatrix} = \begin{Bmatrix} -\sin\theta \\ \cos\theta \end{Bmatrix} \qquad (1609)$$

11. 5. 7 States of source and vortex in rectangular region

[Formula 675]
The observation region x and y given as

$$-a \square x \square a$$
$$-b \square y \square b \ , \qquad (1610)$$

an aspect ratio $\kappa$ is given as

$$\kappa \equiv \frac{b}{a}. \qquad (1611)$$

Let a characteristic length be R , and dimensionless coordinates $\{\xi, \eta\}$ are given as:

$$\{\xi, \eta\} \equiv \left\{\frac{x}{R}, \frac{y}{R}\right\} \qquad (1612)$$

Here, an observation region is given as:

$$\begin{aligned} -\frac{a}{R} \le \frac{x}{R} \le \frac{a}{R} \quad &\Rightarrow \quad -\frac{a}{R} \le \xi \le \frac{a}{R} \\ -\frac{b}{R} \le \frac{y}{R} \le \frac{b}{R} \quad &\Rightarrow \quad -\kappa\frac{a}{R} \le \eta \le \kappa\frac{a}{R} \end{aligned} \qquad (1613)$$

Defining a characteristic velocity owing to a source as Q/(2πR), and making the velocities $u_x$, $u_y$ according to eq. (1595) dimensionless, we obtain:
[Formula 676]

$$\begin{aligned} u_{xo} &\equiv u_x / \frac{Q}{2\pi R} = \frac{\xi}{\xi^2 + \eta^2} \\ u_{yo} &\equiv u_y / \frac{Q}{2\pi R} = \frac{\eta}{\xi^2 + \eta^2} \end{aligned} \qquad (1614)$$

The observation region is assumed to be in a square shape. A state of the dimensionless velocities is shown in FIG. 55.

Defining a characteristic velocity owing to a vortex as $\Gamma/(2\pi R)$, and making the velocities $u_x$, $u_y$ according to eq. (1603) dimensionless, we obtain:
[Formula 677]

$$\begin{aligned} u_{xo} &\equiv u_x / \frac{\Gamma}{2\pi R} = -\frac{\eta}{\xi^2 + \eta^2} \\ u_{yo} &\equiv u_y / \frac{\Gamma}{2\pi R} = \frac{\xi}{\xi^2 + \eta^2} \end{aligned} \qquad (1615)$$

The observation region is assumed to be in a square shape. A state of the dimensionless velocity is shown in FIG. 56.

11. 5. 8 Adjoint differential operator and adjoint boundary condition

[Formula 678]

The simultaneous differential equations (1548) and (1549) are generally described as eq. (23):,

$$\sum_j L_{ij} u_j = f_i \qquad (23) \text{ (Aforementioned)}$$

Here, the original differential operators $L_{ij}$ are expressed by eq. (20):

$$\begin{bmatrix} L_{11} & L_{12} \\ L_{21} & L_{22} \end{bmatrix} \equiv \begin{bmatrix} \frac{\partial}{\partial x} & \frac{\partial}{\partial y} \\ -\frac{\partial}{\partial y} & \frac{\partial}{\partial x} \end{bmatrix} \quad (20) \text{ (Aforementioned)}$$

The adjoint differential operators $L_{ij}^*$ are expressed by eq. (21):

$$\begin{bmatrix} L_{11}^* & L_{21}^* \\ L_{12}^* & L_{22}^* \end{bmatrix} \equiv \begin{bmatrix} -\frac{\partial}{\partial x} & \frac{\partial}{\partial y} \\ -\frac{\partial}{\partial y} & -\frac{\partial}{\partial x} \end{bmatrix} \quad (21) \text{ (Aforementioned)}$$

A sum of integration obtained by multiplying the equation (23) by the dual velocity $u_i^*$, that is, an inner product, is expressed by eq. (58):

$$\sum_i \sum_j \int_S L_{ij} u_j \cdot u_i^* ds = \sum_i \int_S f_i \cdot u_i^* ds \quad (58) \text{ (Aforementioned)}$$

Then, let the left side of the equation (58) be subjected to partial integration.

- When [*i*=i,*j*=1], using eq. (816), we obtain:

$$\begin{aligned} \int_S L_{11} u_1 \cdot u_1^* ds &\equiv \int_S \frac{\partial u_1}{\partial x} \cdot u_1^* ds \\ &= \int_C n_x u_1 \cdot u_1^* dc - \int_S u_1 \cdot \frac{\partial u_1^*}{\partial x} ds \end{aligned} \quad (1616)$$

Let the boundary term of the right side of this equation be $R_{11}$, let the differential operator thereof be $L_{11}^*$, and they are given as:

$$\begin{aligned} R_{11} &\equiv \int_C n_x u_1 \cdot u_1^* dc \\ L_{11}^* &\equiv -\frac{\partial}{\partial x} \end{aligned} \quad (1617)$$

$L_{11}^*$ is the adjoint differential operator shown in eq. (21).

- When [*i*=1,*j*=2], using eq. (817), we obtain:

$$\begin{aligned} \int_S L_{12} u_2 \cdot u_1^* ds &\equiv \int_S \frac{\partial u_2}{\partial y} \cdot u_1^* ds \\ &= \int_C n_y u_2 \cdot u_1^* dc - \int_S u_2 \cdot \frac{\partial u_1^*}{\partial y} ds \end{aligned} \quad (1618)$$

Let the boundary term of the right side of this equation be $R_{12}$, let the differential operator thereof be $L_{12}^*$, and they are given as:

$$R_{12} \equiv \int_C n_y u_2 \cdot u_1^* dc$$
$$L_{12}^* \equiv -\frac{\partial}{\partial y} \qquad (1619)$$

$L_{12}^*$ is the adjoint differential operator shown in eq. (21).

- When [$i$=2,$j$=1], using eq. (817), we obtain:

$$\int_S L_{21} u_1 \cdot u_2^* ds \equiv \int_S -\frac{\partial u_1}{\partial y} \cdot u_2^* ds = -\int_C n_y u_1 \cdot u_2^* dc + \int_S u_1 \cdot \frac{\partial u_2^*}{\partial y} ds \qquad (1620)$$

[Formula 679]

Let the boundary term of the right side of this equation be $R_{21}$, let the differential operator therof be $L_{21}^*$, and they are given as:

$$R_{21} \equiv -\int_C n_y u_1 \cdot u_2^* dc$$
$$L_{21}^* \equiv \frac{\partial}{\partial y} \qquad (1621)$$

$L_{21}^*$ is the adjoint differential operator shown in eq. (21).

- When [$i$ = 2,$j$ = 2], using eq. (816), we obtain:

$$\int_S L_{22} u_2 \cdot u_2^* ds \equiv \int_S \frac{\partial u_2}{\partial x} \cdot u_2^* ds = \int_C n_x u_2 \cdot u_2^* dc - \int_S u_2 \cdot \frac{\partial u_2^*}{\partial x} ds \qquad (1622)$$

Let the boundary term of the right side of this equation be $R_{22}$, let the differential operator thereof be $L_{22}^*$, and they are given as:

$$R_{22} \equiv \int_C n_x u_2 \cdot u_2^* dc$$
$$L_{22}^* \equiv -\frac{\partial}{\partial x} \qquad (1623)$$

$L_{22}^*$ is the adjoint differential operator shown in eq. (21).

In the case where the following is satisfied as in the present case, the operators are referred to as non-self-adjoint differential operators:

$$L_{ji}^* \neq L_{ij} \qquad (22) \text{ (Aforementioned)}$$

Adding the boundary terms and giving it as R , we obtain:

$$\begin{aligned} R &\equiv R_{11} + R_{12} + R_{21} + R_{22} \\ &= \int_C n_x u_1 \cdot u_1^* dc + \int_C n_y u_2 \cdot u_1^* dc \\ &\quad - \int_C n_y u_1 \cdot u_2^* dc + \int_C n_x u_2 \cdot u_2^* dc \end{aligned} \qquad (1624)$$

This equation is transformed to:

$$R = \int_C (n_x u_1 + n_y u_2) u_1^* dc + \int_C (n_x u_2 - n_y u_1) u_2^* dc \qquad (1625)$$

Here, the following relationship between components $n_x$,$n_y$ of a unit tangent vector and components $t_x$,$t_y$ of a unit tangent vector is used.

$$\begin{aligned} n_x &= t_y \\ n_y &= -t_x \end{aligned} \qquad (1626)$$

[Formula 680]
Then, we obtain:

$$R = \int_C (n_x u_1 + n_y u_2) u_1^* dc + \int_C (t_x u_1 + t_y u_2) u_2^* dc \qquad (1627)$$

Further, a normal direction velocity $u_n$, and a tangent direction velocity $u_t$ are given as:

$$\begin{aligned} u_n &= n_x u_1 + n_y u_2 \\ u_t &= t_x u_1 + t_y u_2 \end{aligned} \qquad (1628)$$

Using this, we obtain:

$$R = \int_C (u_n \cdot u_1^* + u_t \cdot u_2^*) dc \qquad (1629)$$

According to the above-described results, partial integration of the left side of eq. (58) gives:

$$\sum_i \sum_j \int_S L_{ij} u_j \cdot u_i^* ds = R + \sum_i \sum_j \int_S u_j \cdot L_{ij}^* u_i^* ds \quad (59) \text{ (Aforementioned)}$$

Here, details of the integrand of the right side of the equation are described below:

$$\{u_1 \quad u_2\} \begin{bmatrix} L_{11}^* & L_{21}^* \\ L_{12}^* & L_{22}^* \end{bmatrix} \begin{Bmatrix} u_1^* \\ u_2^* \end{Bmatrix} \equiv \{u_1 \quad u_2\} \begin{bmatrix} -\frac{\partial}{\partial x} & \frac{\partial}{\partial y} \\ -\frac{\partial}{\partial y} & -\frac{\partial}{\partial x} \end{bmatrix} \begin{Bmatrix} u_1^* \\ u_2^* \end{Bmatrix} \quad (1630)$$

Extracting work of the adjoint differential operators $L_{ij}^*$, we obtain:

$$\begin{bmatrix} L_{11}^* & L_{21}^* \\ L_{12}^* & L_{22}^* \end{bmatrix} \begin{Bmatrix} u_1^* \\ u_2^* \end{Bmatrix} \equiv \begin{Bmatrix} \frac{\partial u_2^*}{\partial y} - \frac{\partial u_1^*}{\partial x} \\ -\frac{\partial u_2^*}{\partial x} - \frac{\partial u_1^*}{\partial y} \end{Bmatrix} \qquad (1631)$$

Further, the dual problem of eq. (65) is given as:

$$\sum_j L^*_{ji} u^*_j = f^*_i \qquad (65)\ \text{(Aforementioned)}$$

$f^*_i$ of the right side of the equation are external force terms of the dual problem. Therefore, according to eq. (1631), the dual problem (65) is transformed to:

$$\frac{\partial u^*_2}{\partial y} - \frac{\partial u^*_1}{\partial x} = f^*_1 \qquad (1632)$$

[Formula 681]

$$-\frac{\partial u^*_2}{\partial x} - \frac{\partial u^*_1}{\partial y} = f^*_2 \qquad (1633)$$

In eqs.(1632) and (1633), $-u^*_2$ is regarded as a velocity $v_x$, in the x direction, and $-u^*_1$ is regarded as a velocity $v_y$ in the y direction. They are replaced as follows:

$$\begin{array}{l} (-u^*_2) \rightarrow v_x \\ (-u^*_1) \rightarrow v_y \end{array} , \qquad (1634)$$

Then, we find that eq. (1632) expresses the vortex condition of eq. (1549), and eq. (1633) expresses the continuum condition of eq. (1548). As physical interpretation of the dual problem, here, $-u^*_2$ is regarded as a velocity in the x direction, and $-u^*_1$ is regarded as a velocity in the y direction. From this viewpoint, eq. (1624) can be transformed to:

$$R = \int_C u_1 \cdot \left(n_x u^*_1 - n_y u^*_2\right) dc + \int_C u_2 \cdot \left(n_y u^*_1 + n_x u^*_2\right) dc \qquad (1635)$$

Here, using eq. (1626) gives:

$$R = \int_C u_1 \cdot \left(t_x u^*_2 + t_y u^*_1\right) dc + \int_C u_2 \cdot \left(n_x u^*_2 + n_y u^*_1\right) dc \qquad (1636)$$

Further, the normal direction velocity $u^*_n$, and the tangent direction velocity $u^*_t$ are given as follows according to the understanding about eq. (1634):

$$\begin{array}{l} u^*_n = n_x v_x + n_y v_y \equiv -n_x u^*_2 - n_y u^*_1 \\ u^*_t = t_x v_x + t_y v_y \equiv -t_x u^*_2 - t_y u^*_1 \end{array} \qquad (1637)$$

With use of eq.(1637), eq. (1636) is transformed to:

$$R = -\int_C \left(u_1 \cdot u^*_t + u_2 \cdot u^*_n\right) dc \qquad (1638)$$

From this, we can see that the boundary term of eq. (59) can be understood in two ways according to eq. (1629) and according to eq. (1638), and the more convenient one may be used. What physical quantity the argument functions $u_1^*$, $u_2^*$ of the dual problem are associated with is a matter decided by a person using the present solution method, as

is the case with eq. (1643). Whatever physical quantity they are associated with, it does not affect the solution of the primal problem.

11. 5. 9 Homogenization of boundary condition and boundary term

An index B is added to a term that satisfies an inhomogeneous boundary condition so as to let the term be $u_{Bj}$, and an index H is added to a term that satisfies a homogeneous boundary condition so as to let the term be $u_{Hj}$. A primal velocity is expressed by a sum of these, which is given as:
[Formula 682]

$$u_j \equiv u_{Bj} + u_{Hj} \quad (24) \text{ (Aforementioned)}$$

Substituting this equation into eq. (23), we obtain the following simultaneous partial differential equation (40) with a homogeneous boundary condition:

$$\sum_j L_{ij} u_j = f_i \quad (23) \text{ (Aforementioned)}$$

$$\sum_j L_{ij} u_{Hj} = f_{Hi} \quad (40) \text{ (Aforementioned)}$$

An inner product of this with the function $u_H^*$ satisfying the homogeneous adjoint boundary condition is given as:

$$\sum_i \sum_j \int_S L_{ij} u_{Hj} \cdot u_{Hi}^* ds = \sum_i \int_S f_{Hi} \cdot u_{Hi}^* ds \quad (61) \text{ (Aforementioned)}$$

Then, partial integration of the left side of the equation (61) gives:

- When [*i* = 1,*j* = 1], using eq. (816), we obtain:

$$\begin{aligned} \int_S L_{11} u_{H1} \cdot u_{H1}^* ds &\equiv \int_S \frac{\partial u_{H1}}{\partial x} \cdot u_{H1}^* ds \\ &= \int_C n_x u_{H1} \cdot u_{H1}^* dc - \int_S u_{H1} \cdot \frac{\partial u_{H1}^*}{\partial x} ds \end{aligned} \quad (1639)$$

Let the boundary term of the right side of this equation be $R_{11}$, let the differential operator thereof be $L_{11}^*$, and they are given as:

$$\begin{aligned} R_{H11} &\equiv \int_C n_x u_{H1} \cdot u_{H1}^* dc \\ L_{11}^* &\equiv -\frac{\partial}{\partial x} \end{aligned} \quad (1640)$$

$L_{11}^*$ is the adjoint differential operator shown in eq. (21).

- When [*i* = 1,*j* = 2], using eq. (817), we obtain:
  [Formula 683]

$$\int_S L_{12} u_{H2} \cdot u_{H1}^* ds \equiv \int_S \frac{\partial u_{H2}}{\partial y} \cdot u_{H1}^* ds = \int_C n_y u_{H2} \cdot u_{H1}^* dc - \int_S u_{H2} \cdot \frac{\partial u_{H1}^*}{\partial y} ds \quad (1641)$$

Let the boundary term of the right side of this equation be $R_{12}$, let the differential operator thereof be $L_{12}^*$, and they are given as:

$$R_{H12} \equiv \int_C n_y u_{H2} \cdot u_{H1}^* dc$$
$$L_{12}^* \equiv -\frac{\partial}{\partial y} \quad (1642)$$

$L_{12}^*$ is the adjoint differential operator given in eq.(21).

- When [$i$ = 2,$j$ = 1], using eq. (817), we obtain:

$$\int_S L_{21} u_{H1} \cdot u_{H2}^* ds \equiv \int_S -\frac{\partial u_{H1}}{\partial y} \cdot u_{H2}^* ds = -\int_C n_y u_{H1} \cdot u_{H2}^* dc + \int_S u_{H1} \cdot \frac{\partial u_{H2}^*}{\partial y} ds \quad (1643)$$

Let the boundary term of the right side of this equation be $R_{21}$, let the differential operator thereof be $L_{21}^*$, and they are given as:

$$R_{H21} \equiv -\int_C n_y u_1 \cdot u_2^* dc$$
$$L_{21}^* \equiv \frac{\partial}{\partial y} \quad (1644)$$

$L_{21}^*$ is the adjoint differential operator given in eq. (21).

- When [$i$ = 2,$j$ = 2], using eq. (816), we obtain:

$$\int_S L_{22} u_2 \cdot u_2^* ds \equiv \int_S \frac{\partial u_2}{\partial x} \cdot u_2^* ds = \int_C n_x u_2 \cdot u_2^* dc - \int_S u_2 \cdot \frac{\partial u_2^*}{\partial x} ds \quad (1645)$$

Let the boundary term of the right side of this equation be $R_{22}$, let the differential operator thereof be $L_{22}^*$, and they are given as:

$$R_{H22} \equiv \int_C n_x u_2 \cdot u_2^* dc$$
$$L_{22}^* \equiv -\frac{\partial}{\partial x} \quad (1646)$$

$L_{22}^{*}$ is an adjoint differential operator given in eq. (21).
[Formula 684]

In the case where the following is satisfied as in the present case, the operators are referred to as non-self-adjoint differential operators.

$$L_{ji}^{*} \neq L_{ij} \qquad (22) \text{ (Aforementioned)}$$

Adding the boundary terms and expressing the same as $R_H$, we obtain:

$$\begin{aligned} R_H &\equiv R_{H11} + R_{H12} + R_{H21} + R_{H22} \\ &= \int_C n_x u_{H1} \cdot u_{H1}^{*} dc + \int_C n_y u_{H2} \cdot u_{H1}^{*} dc \\ &\quad - \int_C n_y u_{H1} \cdot u_{H2}^{*} dc + \int_C n_x u_{H2} \cdot u_{H2}^{*} dc \end{aligned} \qquad (1647)$$

Transforming this equation gives:

$$R_H = \int_C \left(n_x u_{H1} + n_y u_{H2}\right) u_{H1}^{*} dc + \int_C \left(n_x u_{H2} - n_y u_{H1}\right) u_{H2}^{*} dc \qquad (1648)$$

Here, using eq. (1626), we obtain:

$$R_H = \int_C \left(n_x u_{H1} + n_y u_{H2}\right) u_{H1}^{*} dc + \int_C \left(t_x u_{H1} + t_y u_{H2}\right) u_{H2}^{*} dc \qquad (1649)$$

Further, using the normal direction velocity $u_{Hn}$, and the tangent direction velocity $u_{Ht}$ satisfying the following

$$\begin{aligned} u_{Hn} &= n_x u_{H1} + n_y u_{H2} \\ u_{Ht} &= t_x u_{H1} + t_y u_{H2} \end{aligned} \quad , \qquad (1650)$$

we obtain:

$$R_H = \int_C \left(u_{Hn} \cdot u_{H1}^{*} + u_{Ht} \cdot u_{H2}^{*}\right) dc \qquad (1651)$$

According to the results of the above-described operation, partial integration of the left side of eq. (61) gives:

$$\sum_i \sum_j \int_S L_{ij} u_{Hj} \cdot u_{Hi}^{*} ds = R_H + \sum_i \sum_j \int_S u_{Hj} \cdot L_{ij}^{*} u_{Hi}^{*} ds \qquad (62) \text{ (Aforementioned)}$$

Here, details of the integrand of the right side of the equation are described below:

$$\begin{Bmatrix} u_{H1} & u_{H2} \end{Bmatrix} \begin{bmatrix} L_{11}^{*} & L_{21}^{*} \\ L_{12}^{*} & L_{22}^{*} \end{bmatrix} \begin{Bmatrix} u_{H1}^{*} \\ u_{H2}^{*} \end{Bmatrix} \equiv \begin{Bmatrix} u_{H1} & u_{H2} \end{Bmatrix} \begin{bmatrix} -\dfrac{\partial}{\partial x} & \dfrac{\partial}{\partial y} \\ -\dfrac{\partial}{\partial y} & -\dfrac{\partial}{\partial x} \end{bmatrix} \begin{Bmatrix} u_{H1}^{*} \\ u_{H2}^{*} \end{Bmatrix} \qquad (1652)$$

Extracting work of the adjoint differential operators $L_{ij}^{*}$, we obtain:

[Formula 685]

$$\begin{bmatrix} L_{11}^* & L_{21}^* \\ L_{12}^* & L_{22}^* \end{bmatrix} \begin{Bmatrix} u_{H1}^* \\ u_{H2}^* \end{Bmatrix} \equiv \begin{Bmatrix} \dfrac{\partial u_{H2}^*}{\partial y} - \dfrac{\partial u_{H1}^*}{\partial x} \\ -\dfrac{\partial u_{H2}^*}{\partial x} - \dfrac{\partial u_{H1}^*}{\partial y} \end{Bmatrix} \quad (1653)$$

The dual problem equation (66) with a homogeneous boundary condition is given as:

$$\sum_j L_{ji}^* u_{Hj}^* = f_{Hi}^* \quad (66) \text{ (Aforementioned)}$$

Here, $f_{Hi}^*$ of the right side of the equation represent the external force terms of the dual problem. Therefore, according to eq. (1653), the dual problem equation (66) is transformed to:

$$\frac{\partial u_{H2}^*}{\partial y} - \frac{\partial u_{H1}^*}{\partial x} = f_{H1}^* \quad (1654)$$

$$-\frac{\partial u_{H2}^*}{\partial x} - \frac{\partial u_{H1}^*}{\partial y} = f_{H2}^* \quad (1655)$$

In eqs.(1654) and (1655), $-u_{H2}^*$ is regarded as a velocity $v_x$ in the x direction, and $-u_{H1}^*$ is regarded as a velocity $v_y$ in the y direction. They are replaced as follows:

$$\begin{aligned} \left(-u_{H2}^*\right) &\rightarrow v_x \\ \left(-u_{H1}^*\right) &\rightarrow v_y \end{aligned} , \quad (1656)$$

Then, we find that eq. (1654) expresses the vortex condition of eq. (1549), and eq. (1655) expresses the continuum condition of eq. (1548). As physical interpretation of the dual problem, here, $-u_{H2}^*$ is regarded as a velocity in the x direction, and $-u_{H1}^*$ is regarded as a velocity in the y direction. From this viewpoint, eq. (1647) is transformed to:
[Formula 686]

$$R_H = \int_C u_{H1} \cdot \left(n_x u_{H1}^* - n_y u_{H2}^*\right) dc + \int_C u_{H2} \cdot \left(n_y u_{H1}^* + n_x u_{H2}^*\right) dc \quad (1657)$$

Here, using eq. (1626) gives:

$$R_H = \int_C u_{H1} \cdot \left(t_x u_{H2}^* + t_y u_{H1}^*\right) dc + \int_C u_{H2} \cdot \left(n_x u_{H2}^* + n_y u_{H1}^*\right) dc \quad (1658)$$

Further, the normal direction velocity $u_{Hn}^*$, and the tangent direction velocity $u_{Ht}^*$ are given as follows according to the understanding about eq. (1656):

$$u_{Hn}^* = n_x v_x + n_y v_y \equiv -n_x u_{H2}^* - n_y u_{H1}^*$$
$$u_{Ht}^* = t_x v_x + t_y v_y \equiv -t_x u_{H2}^* - t_y u_{H1}^* \qquad (1659)$$

With use of eq.(1659), eq. (1658) is transformed to:

$$R_H = -\int_C \left(u_{H1} \cdot u_{Ht}^* + u_{H2} \cdot u_{Hn}^*\right) dc \qquad (1660)$$

From this, we can see that the boundary term $R_H$ of eq. (62) can be understood in two ways according to eq. (1651) and according to eq. (1660), and the more convenient one may be used. What physical quantity the argument functions $u_{H1}$*, $u_{H2}$* of the dual problem are associated with is a matter decided by a person using the present solution method, as is the case with eq. (1656). Whatever physical quantity they are associated with, it does not affect the solution of the primal problem.

11. 5. 10 Getting equations on each function from the simultaneous eigenvalue problem

R is assumed to be the characteristic length, and the weight constant is given as:
[Formula 687]

$$w_1 = w_2 = w \equiv \frac{1}{R} \qquad (1661)$$

Then, details of the following primal simultaneous differential equation (105) are given as eqs. (1662) and (1663):

$$\sum_j L_{ij} \phi_j = \lambda w_i \phi_i^* \qquad (105) \text{ (Aforementioned)}$$

$$\frac{\partial \phi_x}{\partial x} + \frac{\partial \phi_y}{\partial y} = \lambda w \phi_x^* \qquad (1662)$$

$$-\frac{\partial \phi_x}{\partial y} + \frac{\partial \phi_y}{\partial x} = \lambda w \phi_y^* \qquad (1663)$$

On the other hand, details of the following dual simultaneous differential equation (106) are given as eqs. (1664) and (1665):

$$\sum_j L_{ji}^* \phi_j^* = \lambda w_i \phi_i \qquad (106) \text{ (Aforementioned)}$$

$$-\frac{\partial \phi_x^*}{\partial x} + \frac{\partial \phi_y^*}{\partial y} = \lambda w \phi_x \qquad (1664)$$

[Formula 688]

$$-\frac{\partial \phi_x^*}{\partial y} - \frac{\partial \phi_y^*}{\partial x} = \lambda w \phi_y \qquad (1665)$$

The primal simultaneous eigenvalue problem is as expressed by eq. (98):

$$\sum_j \sum_k L^*_{ji} \frac{1}{w_j} L_{jk} \phi_k = \lambda^2 w_i \phi_i \qquad (98)\ \text{(Aforementioned)}$$

Transposing the weight constant *w* according to eq. (1661), we obtain:

$$\sum_j \sum_k L^*_{ji} L_{jk} \phi_k = \lambda^2 w^2 \phi_i \qquad (1666)$$

Using differential operators of eqs. (18),(19) we can calculate the left side of this equation, we obtain:

$$\nabla^2 \phi_x = -\lambda^2 w^2 \phi_x \qquad (1667)$$

$$\nabla^2 \phi_y = -\lambda^2 w^2 \phi_y \qquad (1668)$$

Successfully obtaining differential equations on each function from the simultaneous equations of eq.(1666), we obtain differential equations on $\phi_x$,$\phi_y$, which are functions $\phi$ satisfying the following:

$$\left(\nabla^2 + \lambda^2 w^2\right)\phi = 0 \qquad (1669)$$

On the other hand, the dual simultaneous eigenvalue problem is expressed by the following eq. (99):

$$\sum_j \sum_k L_{ij} \frac{1}{w_j} L^*_{kj} \phi^*_k = \lambda^2 w_i \phi^*_i \qquad (99)\ \text{(Aforementioned)}$$

Similarly this is transformed to

$$\sum_j \sum_k L_{ij} L^*_{kj} \phi^*_k = \lambda^2 w^2 \phi^*_i \qquad (1670)$$

Calculating the left side of this equation by using the differential operators of eqs. (18),(19), we obtain equations composed of the same operators as those in eqs.(1667),(1668) as follows:

$$\nabla^2 \phi^*_x = -\lambda^2 w^2 \phi^*_x \qquad (1671)$$

$$\nabla^2 \phi^*_y = -\lambda^2 w^2 \phi^*_y \qquad (1672)$$

Successfully obtaining differential equations on each function from the simultaneous equations of eq.(1670), we obtain differential equations on $\phi_x^*$, $\phi_y^*$, which are functions $\phi^*$ satisfying the following:

$$\left(\nabla^2 + \lambda^2 w^2\right)\phi^* = 0 \qquad (1673)$$

11. 5. 11 Solution function

Since eqs. (1669) and (1673) are the same differential equation, consequently, we find that $\varphi_x$, $\varphi_y$ and $\varphi_x^*$, $\varphi_y^*$ are composed of the same function set respectively. Therefore, focusing on solving eq. (1669), we give:
[Formula 689]

$$\omega \equiv \lambda w = \frac{1}{R}\lambda \qquad (1674)$$

Then, the differential equation (1669) is transformed to:,

$$\left(\nabla^2 + \omega^2\right)\phi \equiv \left(\frac{\partial^2}{\partial x^2} + \frac{\partial^2}{\partial y^2} + \omega^2\right)\phi = 0 \qquad (1583) \text{ (Aforementioned)}$$

The solution by separation of variables of this equation is:

$$\phi(x,y) \equiv X(x)\cdot Y(y) = \begin{pmatrix}\sin \alpha x \\ \cos \alpha x\end{pmatrix} \times \begin{pmatrix}\sin \beta y \\ \cos \beta y\end{pmatrix} \qquad (1593) \text{ (Aforementioned)}$$

Therefore, we obtain:

$$\alpha^2 + \beta^2 = \omega^2 \qquad (1588) \text{ (Aforementioned)}$$

According to eq. (1674), the primal simultaneous differential equations (1662), (1663) are transformed to:

$$\frac{\partial \phi_x}{\partial x} + \frac{\partial \phi_y}{\partial y} = \omega \phi_x^* \qquad (1675)$$

$$-\frac{\partial \phi_x}{\partial y} + \frac{\partial \phi_y}{\partial x} = \omega \phi_y^* \qquad (1676)$$

The dual simultaneous differential equations (1664), (1665) are transformed to:

$$-\frac{\partial \phi_x^*}{\partial x} + \frac{\partial \phi_y^*}{\partial y} = \omega \phi_x \qquad (1677)$$

$$-\frac{\partial \phi_x^*}{\partial y} - \frac{\partial \phi_y^*}{\partial x} = \omega \phi_y \qquad (1678)$$

According to the combinations of eq. (1593), the following eight solutions satisfy these primal and dual simultaneous differential equations at the same time:
[Formula 690]

$$(1) \qquad F_{SS1} \equiv \begin{cases} \phi_x = \dfrac{\alpha}{\omega}\sin \alpha x \cos \beta y \\ \phi_y = \dfrac{\beta}{\omega}\cos \alpha x \sin \beta y \\ \phi_x^* = \cos \alpha x \cos \beta y \\ \phi_y^* = 0 \end{cases} \qquad (1679)$$

(2)

$$F_{AA1} \equiv \begin{cases} \phi_x = \dfrac{\alpha}{\omega}\cos \alpha x \sin \beta y \\ \phi_y = \dfrac{\beta}{\omega}\sin \alpha x \cos \beta y \\ \phi_x^* = -\sin \alpha x \sin \beta y \\ \phi_y^* = 0 \end{cases} \quad (1680)$$

(3)

$$F_{SA1} \equiv \begin{cases} \phi_x = -\dfrac{\alpha}{\omega}\cos \alpha x \cos \beta y \\ \phi_y = \dfrac{\beta}{\omega}\sin \alpha x \sin \beta y \\ \phi_x^* = \sin \alpha x \cos \beta y \\ \phi_y^* = 0 \end{cases} \quad (1681)$$

(4)

$$F_{AS1} \equiv \begin{cases} \phi_x = \dfrac{\alpha}{\omega}\sin \alpha x \sin \beta y \\ \phi_y = -\dfrac{\beta}{\omega}\cos \alpha x \cos \beta y \\ \phi_x^* = \cos \alpha x \sin \beta y \\ \phi_y^* = 0 \end{cases} \quad (1682)$$

[Formula 691]

(5)

$$F_{SS2} \equiv \begin{cases} \phi_x = \dfrac{\beta}{\omega}\sin \alpha x \cos \beta y \\ \phi_y = -\dfrac{\alpha}{\omega}\cos \alpha x \sin \beta y \\ \phi_x^* = 0 \\ \phi_y^* = \sin \alpha x \sin \beta y \end{cases} \quad (1683)$$

(6)

$$F_{AA2} \equiv \begin{cases} \phi_x = -\dfrac{\beta}{\omega}\cos \alpha x \sin \beta y \\ \phi_y = \dfrac{\alpha}{\omega}\sin \alpha x \cos \beta y \\ \phi_x^* = 0 \\ \phi_y^* = \cos \alpha x \cos \beta y \end{cases} \quad (1684)$$

(7) $$F_{SA2} \equiv \begin{cases} \phi_x = \dfrac{\beta}{\omega}\cos \alpha x \cos \beta y \\ \phi_y = \dfrac{\alpha}{\omega}\sin \alpha x \sin \beta y \\ \phi_x^* = 0 \\ \phi_y^* = \cos \alpha x \sin \beta y \end{cases} \qquad (1685)$$

(8) $$F_{AS2} \equiv \begin{cases} \phi_x = \dfrac{\beta}{\omega}\sin \alpha x \sin \beta y \\ \phi_y = \dfrac{\alpha}{\omega}\cos \alpha x \cos \beta y \\ \phi_x^* = 0 \\ \phi_y^* = -\sin \alpha x \cos \beta y \end{cases} \qquad (1686)$$

A solution such that the eigenvalue ω of the primal simultaneous differential equations (1675), (1676) is zero is a homogeneous solution. According to the following combinations of solutions of the harmonic equation
[Formula 692]

$$\phi(x,y) \equiv X(x)\cdot Y(y) = \begin{pmatrix} \sin vx \\ \cos vx \end{pmatrix} \times \begin{pmatrix} \sinh vy \\ \cosh vy \end{pmatrix}, \qquad (1577)\ \text{(Aforementioned)}$$

the following four homogeneous solutions of the primal simultaneous differential equations are obtained.

Here, *v* is an arbitrary constant.

(1) $$H_{SS1} \equiv \begin{cases} \phi_x = -\sin vx \cosh vy \\ \phi_y = \cos vx \sinh vy \end{cases} \qquad (1687)$$

(2) $$H_{AA1} \equiv \begin{cases} \phi_x = \cos vx \sinh vy \\ \phi_y = \sin vx \cosh vy \end{cases} \qquad (1688)$$

[Formula 693]

(3) $$H_{SA1} \equiv \begin{cases} \phi_x = \cos vx \cosh vy \\ \phi_y = \sin vx \sinh vy \end{cases} \qquad (1689)$$

(4) $$H_{AS1} \equiv \begin{cases} \phi_x = -\sin vx \sinh vy \\ \phi_y = \cos vx \cosh vy \end{cases} \qquad (1690)$$

According to the combinations of solutions given as eq. (1571) of the harmonic equation

$$\phi(x,y) \equiv X(x)\cdot Y(y) = \begin{pmatrix} \sinh vx \\ \cosh vx \end{pmatrix} \times \begin{pmatrix} \sin vy \\ \cos vy \end{pmatrix}, \qquad (1571)\ \text{(Aforementioned)}$$

four homogeneous solutions of the primal simultaneous differential equations are obtained as follows, where $v$ represents an arbitrary constant.

(1) $$H_{SS2} \equiv \begin{cases} \phi_x = -\sinh vx \cos vy \\ \phi_y = \cosh vx \sin vy \end{cases} \quad (1691)$$

(2) $$H_{AA2} \equiv \begin{cases} \phi_x = \cosh vx \sin vy \\ \phi_y = \sinh vx \cos vy \end{cases} \quad (1692)$$

(3) $$H_{SA2} \equiv \begin{cases} \phi_x = -\cosh vx \cos vy \\ \phi_y = \sinh vx \sin vy \end{cases} \quad (1693)$$

(4) $$H_{AS2} \equiv \begin{cases} \phi_x = \sinh vx \sin vy \\ \phi_y = \cosh vx \cos vy \end{cases} \quad (1694)$$

Though a boundary condition has not been reflected yet on the foregoing solutions, the solutions satisfy the primal simultaneous differential equations (1675), (1676).

11. 5. 12 Homogenization of boundary condition

In Section 11. 5. 1, we find that regarding a problem of hydrodynamics as well, the simultaneous partial differential equations (1548), (1549) are transformed to eq. (23), and can be expressed as:
[Formula 694]

$$\sum_j L_{ij} u_j = f_i \quad (23) \text{ (Aforementioned)}$$

As is the case with Section 3.1, an index B is added to a term that satisfies an inhomogeneous boundary condition so as to let the term be $u_{Bj}$, and an index H is added to a term that satisfies a homogeneous boundary condition so as to let the term be $u_{Hj}$. A primal velocity $u_j$ is expressed by a sum of these, which is given as:

$$u_j \equiv u_{Bj} + u_{Hj} \quad (24) \text{ (Aforementioned)}$$

This can be written regarding each component as follows:

$$\begin{aligned} u_x &\equiv u_1 \equiv u_{B1} + u_{H1} \\ u_y &\equiv u_2 \equiv u_{B2} + u_{H2} \end{aligned} \quad (1695)$$

$u_{Bj}$ does not necessarily satisfy eq. (23), and when taking the form of eq. (24), it satisfies eq. (23). Substituting eq. (24) into eq. (23), we obtain simultaneous partial differential equations expressed with a homogeneous boundary condition as follows:

$$\sum_j L_{ij} u_{Hj} = f_{Hi} \quad (40) \text{ (Aforementioned)}$$

The external force term $f_{Hi}$ is given as:

$$f_{Hi} \equiv f_i - \sum_j L_{ij} u_{Bj} \qquad (41) \text{ (Aforementioned)}$$

Here, defining the boundary function differential term $f_{Bi}$ as

$$f_{Bi} \equiv \sum_j L_{ij} u_{Bj} \quad , \qquad (1696)$$

we obtain:

$$f_{Hi} \equiv f_i - f_{Bi} \qquad (1697)$$

[Source]

When whether or not flow distribution caused by a source existing at the origin of coordinates can be reproduced by the eigenfunction method is to be confirmed, what is actually done is to solve eqs. (1599) and (1600) as the simultaneous partial differential equation (23):
[Formula 695]

$$div(\boldsymbol{v}) = \frac{\partial u_x}{\partial x} + \frac{\partial u_y}{\partial y} = Q \cdot \delta(x,y) \quad (1599) \text{ (Aforementioned)}$$

$$rot(\boldsymbol{v}) = \frac{\partial u_y}{\partial x} - \frac{\partial u_x}{\partial y} = 0 \qquad (1600) \text{ (Aforementioned)}$$

The external force term $f_i$ of eq. (23) can be written regarding each component as follows:

$$\begin{aligned} f_x &\equiv f_1 \equiv Q \cdot \delta(x,y) \\ f_y &\equiv f_2 \equiv 0 \end{aligned} \qquad (1698)$$

The condition necessary as the boundary function $u_{Bj}$ is a condition of having a velocity different from that of eq. (1595) in a rectangular region and the same velocity as that of eq. (1595) only on the boundary. In the case where eq. (1595) is used as the boundary function $u_{Bj}$, which satisfies the differential equations (1599), (1600), the boundary function differential term $f_{Bi}$ coincides with the external force term $f_i$, and the extenal force term $f_{Hi}$ becomes zero. As a result, $u_{Hj}$ is zero, and this is not an object to which the eigenfunction method is to be applied.

Here, $u_{Bj}$ is not given, but $u_{Bj}$ is used as the homogeneous solution in which the right side of the differential equation (23) is zero. As a result, the boundary function differential term $f_{Bi}$ is zero, and the external force term $f_{Hi}$ coincides with $f_i$. Therefore, $u_{Hj}$ is a particular solution of the differential equation (23) having the right-hand side of eq. (1698). In other words, the velocity of eq. (1595) is separated into the particular solution part $u_{Hj}$ and the homogeneous solution part $u_{Bj}$.

[Vortex]

When whether or not flow distribution caused by a vortex existing at the origin of coordinates can be reproduced by the eigenfunction method is to be confirmed, what is actually done is to solve eqs. (1607) and (1608) as the simultaneous partial differential equation (23):

$$div(\boldsymbol{v}) = \frac{\partial u_x}{\partial x} + \frac{\partial u_y}{\partial y} = 0 \qquad (1607) \text{ (Aforementioned)}$$

$$rot(\boldsymbol{v}) = \frac{\partial u_y}{\partial x} - \frac{\partial u_x}{\partial y} = \Gamma \cdot \delta(x,y) \quad (1608) \text{ (Aforementioned)}$$

The external force term $f_i$ of eq. (23) can be written regarding each component as follows:

$$\begin{aligned} f_x &\equiv f_1 \equiv 0 \\ f_y &\equiv f_2 \equiv \Gamma \cdot \delta(x,y) \end{aligned} \quad (1699)$$

[Formula 696]

The condition necessary as the boundary function $u_{Bj}$ is a condition of having a velocity different from that of eq. (1603) in a rectangular region and the same velocity as that of eq. (1603) only on the boundary. In the case where eq. (1603) is used as the boundary function $u_{Bj}$, which satisfies the differential equations (1607), (1608), the boundary function differential term $f_{Bi}$ coincides with the external force term $f_i$, and the external force term $f_{Hi}$ becomes zero. As a result, $u_{Hj}$ is zero, and this is not an object to which the eigenfunction method is to be applied.

Here, $u_{Bj}$ is not given, but $u_{Bj}$ is used as the homogeneous solution in which the right side of the differential equation (23) is zero. As a result, the boundary function differential term $f_{Bi}$ is zero, and the external force term $f_{Hi}$ coincides with $f_i$. Therefore, $u_{Hj}$ is a particular solution of the differential equation (23) having the right-hand side of eq. (1699). In other words, the velocity of eq. (1603) is separated into the particular solution part $u_{Hj}$ and the homogeneous solution part $u_{Bj}$.

Since a similar eigenfunction method to that described in Section 5. 1. 1 is used, the outline is described herein. The solution function $u_{Hj}$ is expressed by a sum of eigenfunctions as follows:

$$u_{Hj} \equiv \sum_k c_k \phi_{jk} \quad (69) \text{ (Aforementioned)}$$

Substituting eq. (69) into the differential equation (40) gives:

$$\sum_k c_k \lambda_k w_i \phi^*_{ik} = f_{Hi} \quad (109) \text{ (Aforementioned)}$$

Determining an inner product with the function $\phi^*_i$ and utilizing orthogonality, we obtain:

$$c_k \lambda_k \sum_i \int_S w_i \phi^*_{ik} \cdot \phi^*_{ik} ds = \sum_i \int_S f_{Hi} \cdot \phi^*_{ik} ds \quad (110) \text{ (Aforementioned)}$$

This settles the coefficient $c_k$.

The above-described equation (109) is characterized in that the external force term $f_{Hi}$ is expressed by the dual eigenfunction $\phi^*_i$. Here, the case where boundary function differential term $f_{Bi}$ is zero

[Formula 697]

and the external force term $f_{Hi}$ coincides with $f_i$ is dealt with, the boundary condition of the dual eigenfunction $\phi^*_i$ should coincide with the external force term $f_i$. Therefore, according to eqs. (1698) and (1699), we can see that the boundary condition of $\phi^*_i$ as well as the *x*,*y* components are zero on the peripheries.

The above-described studies prove that the boundary condition imposed on the eigenfunctions is given as:

$$(1) \quad \begin{aligned} \phi^*_x = 0, \phi^*_y = 0 \quad &: on\ x = \pm a \\ \phi^*_x = 0, \phi^*_y = 0 \quad &: on\ y = \pm b \end{aligned} \quad (1700)$$

This condition makes the boundary term $R_H$ of the following equation (1651) zero.

$$R_H = \int_C \left( u_{Hn} \cdot u_{H1}^* + u_{Ht} \cdot u_{H2}^* \right) dc \quad (1651) \text{ (Aforementioned)}$$

Therefore, according to Section 4.3, the eigenfunctions are obtained as an orthogonal function system.

11. 5. 13 Rules for eigenfunction names

In the eigenfunction shown in the next section, the eigenvalues α, β are formed with the combinations given as: [Formula 698]

$$\alpha = \left\{ \frac{2m-1}{2a}\pi, \frac{2m}{2a}\pi \right\}$$
$$\beta = \left\{ \frac{2n-1}{2b}\pi, \frac{2n}{2b}\pi \right\} \quad (1701)$$

where *m,n* are integers. There are two kinds of the eigenvalue α, and two kinds of the eigenvalue $\beta$. For example, a function *F* formed with the eigenvalues of

$$\alpha = \frac{2m-1}{2a}\pi \quad \Leftarrow (1)$$
$$\beta = \frac{2n}{2b}\pi \quad \Leftarrow (2) \quad (1702)$$

is represented by "$F_{12}$", which means that $\alpha$ of the type (1) and $\beta$ of the type (2) are used. Here, the first index is the number indicative of the type of $\alpha$, and the second index is the number indicative of the type of $\beta$.

Further, this is followed by an alphabet indicating the mode form (Section 11. 4. 20) exhibited by the primal eigenfunction. For example, if the function *F* is formed with the eigenvalue $\alpha$ of the type (1) and the eigenvalue $\beta$ of the type (2), and is in the mode SS, the function is represented by $F_{12SS}$.

The boundary conditions that the eigenfunction satisfies are distinguished with numbers provided at upper right, such as "$F_{12SS}^1$". The number at upper right is the number indicative of the boundary condition.

11. 5. 14 Primal eigenfunction and dual eigenfunction

[Formula 699]

The solution functions $F_{SS1}$,$F_{AA1}$,$F_{SA1}$,$F_{AS1}$ and $F_{SS2}$,$F_{AA2}$,$F_{SA2}$,$F_{AS2}$ mentioned in Section 11. 5. 11 may be combined to obtain a solution that satisfies the following condition equations (1700):

$$(1) \quad \begin{array}{ll} \phi_x^* = 0, \phi_y^* = 0 & : on\ x = \pm a \\ \phi_x^* = 0, \phi_y^* = 0 & : on\ y = \pm b \end{array} \quad (1700) \text{ (Aforementioned)}$$

This results in that only giving appropriate eigenvalues $\alpha,\beta$ to each solution function is required, which is simple. More specifically, eight eigenfunctions shown below are provided.

Here, the functions are named according to the rules described in Section11. 5. 13, and the boundary condition number is (1). $\lambda$ is an eigenvalue in the primal simultaneous differential equations (1662), (1663) and the dual simultaneous differential equations (1664), (1665).

(1)
$$F_{11AA}^{1} \equiv \begin{cases} \alpha = \dfrac{2m-1}{2a}\pi, \beta = \dfrac{2n-1}{2b}\pi, \lambda = R\sqrt{\alpha^2+\beta^2} \\ \phi_x = -\dfrac{\beta}{\sqrt{\alpha^2+\beta^2}}\cos\alpha x \sin\beta y \\ \phi_y = \dfrac{\alpha}{\sqrt{\alpha^2+\beta^2}}\sin\alpha x \cos\beta y \\ \phi_x^* = 0, \quad \phi_y^* = \cos\alpha x \cos\beta y \end{cases} \quad (1703)$$

[Formula 700]

(2)
$$F_{11SS}^{1} \equiv \begin{cases} \alpha = \dfrac{2m-1}{2a}\pi, \beta = \dfrac{2n-1}{2b}\pi, \lambda = R\sqrt{\alpha^2+\beta^2} \\ \phi_x = \dfrac{\alpha}{\sqrt{\alpha^2+\beta^2}}\sin\alpha x \cos\beta y \\ \phi_y = \dfrac{\beta}{\sqrt{\alpha^2+\beta^2}}\cos\alpha x \sin\beta y \\ \phi_x^* = \cos\alpha x \cos\beta y, \quad \phi_y^* = 0 \end{cases} \quad (1704)$$

(3)
$$F_{21AS}^{1} \equiv \begin{cases} \alpha = \dfrac{2m}{2a}\pi, \beta = \dfrac{2n-1}{2b}\pi, \lambda = R\sqrt{\alpha^2+\beta^2} \\ \phi_x = \dfrac{\beta}{\sqrt{\alpha^2+\beta^2}}\sin\alpha x \sin\beta y \\ \phi_y = \dfrac{\alpha}{\sqrt{\alpha^2+\beta^2}}\cos\alpha x \cos\beta y \\ \phi_x^* = 0, \quad \phi_y^* = -\sin\alpha x \cos\beta y \end{cases} \quad (1705)$$

(4)
$$F_{21SA}^{1} \equiv \begin{cases} \alpha = \dfrac{2m}{2a}\pi, \beta = \dfrac{2n-1}{2b}\pi, \lambda = R\sqrt{\alpha^2+\beta^2} \\ \phi_x = -\dfrac{\alpha}{\sqrt{\alpha^2+\beta^2}}\cos\alpha x \cos\beta y \\ \phi_y = \dfrac{\beta}{\sqrt{\alpha^2+\beta^2}}\sin\alpha x \sin\beta y \\ \phi_x^* = \sin\alpha x \cos\beta y, \quad \phi_y^* = 0 \end{cases} \quad (1706)$$

(5)
$$F_{12AS}^{1} \equiv \begin{cases} \alpha = \dfrac{2m-1}{2a}\pi, \beta = \dfrac{2n}{2b}\pi, \lambda = R\sqrt{\alpha^2+\beta^2} \\ \phi_x = \dfrac{\alpha}{\sqrt{\alpha^2+\beta^2}}\sin\alpha x \sin\beta y \\ \phi_y = -\dfrac{\beta}{\sqrt{\alpha^2+\beta^2}}\cos\alpha x \cos\beta y \\ \phi_x^* = \cos\alpha x \sin\beta y, \quad \phi_y^* = 0 \end{cases} \quad (1707)$$

[Formula 701]

(6)
$$F^1_{12SA} \equiv \begin{cases} \alpha = \dfrac{2m-1}{2a}\pi, \beta = \dfrac{2n}{2b}\pi, \lambda = R\sqrt{\alpha^2+\beta^2} \\ \phi_x = \dfrac{\beta}{\sqrt{\alpha^2+\beta^2}} \cos \alpha x \cos \beta y \\ \phi_y = \dfrac{\alpha}{\sqrt{\alpha^2+\beta^2}} \sin \alpha x \sin \beta y \\ \phi_x^* = 0, \quad \phi_y^* = \cos \alpha x \sin \beta y \end{cases} \quad (1708)$$

(7)
$$F^1_{22AA} \equiv \begin{cases} \alpha = \dfrac{2m}{2a}\pi, \beta = \dfrac{2n}{2b}\pi, \lambda = R\sqrt{\alpha^2+\beta^2} \\ \phi_x = \dfrac{\alpha}{\sqrt{\alpha^2+\beta^2}} \cos \alpha x \sin \beta y \\ \phi_y = \dfrac{\beta}{\sqrt{\alpha^2+\beta^2}} \sin \alpha x \cos \beta y \\ \phi_x^* = -\sin \alpha x \sin \beta y, \quad \phi_y^* = 0 \end{cases} \quad (1709)$$

(8)
$$F^1_{22SS} \equiv \begin{cases} \alpha = \dfrac{2m}{2a}\pi, \beta = \dfrac{2n}{2b}\pi, \lambda = R\sqrt{\alpha^2+\beta^2} \\ \phi_x = \dfrac{\beta}{\sqrt{\alpha^2+\beta^2}} \sin \alpha x \cos \beta y \\ \phi_y = -\dfrac{\alpha}{\sqrt{\alpha^2+\beta^2}} \cos \alpha x \sin \beta y \\ \phi_x^* = 0, \quad \phi_y^* = \sin \alpha x \sin \beta y \end{cases} \quad (1710)$$

These eigenfunctions have orthogonality. Further, all of the eigenfunctions have orthogonality with respect to homogeneous solutions $H_{SS1}, H_{AA1}, H_{SA1}, H_{AS1}$ of eqs. (1687) to (1690), and also with respect to $H_{SS2}, H_{AA2}, H_{SA2}, H_{AS2}$ of eqs. (1691) to (1694). This means that a space representing a particular solution part of the velocity and a space representing a homogeneous solution part are orthogonal with each other.

States of No. 1 mode of the primal eigenfunction and the dual eigenfunction of (1) to (8) are shown in FIGS. 57 to 64.

11. 5. 15 Eigenfunction method

A solution is determined by the eigenfunction method described in Section 5.1. The determined solution is made dimensionless in the same manner as that described in Section 11. 5. 7, and states of flow are shown.

[Source]

Given a square observation region, calculation was performed with the mode number m×n of the eigenfunction being set to at most 30×30. As the external force term $f_i$ is given by eq. (1698), the particular solution part $u_{Hj}$ can be expressed by the eigenfunction $F^1_{11SS}$ of eq. (1704) alone. The state of dimensionless velocity is shown in FIG. 65. This result indicates the particular solution of eqs. (1599), (1600).

FIG. 65 is similar to the state determined by the analytical solution (FIG. 55), expressing a state of fluid springing out from the origin. This, however, shows only the particular solution part, and it is necessary to check how different it is from the analytical solution. The state obtained by subtracting the eigenfunction solution from the analytical solution of eq. (1595) is shown in FIG. 66.

FIG. 66 shows that difference is significant in the vicinities of the boundary. This is called "residual flow". The residual flow is represented by $u_{Bj}$ of the homogeneous solution part. The particular solution part is represented by the eigenfunction $F^1_{11SS}$ of eq. (1704) alone, and the eigenvalue is given as:
[Formula 702]

$$\alpha = \frac{2m-1}{2a}\pi, \beta = \frac{2n-1}{2b}\pi \quad (1711)$$

Using this, as well as the homogeneous solution of the mode SS, $H_{SS1}$ of eq. (1687), and $H_{SS2}$ of eq. (1691), we express $u_{Bj}$ as follows:

$$u_{Bj} \equiv \sum_m c_{1m} H_{SS1}(v_m) + \sum_n c_{2n} H_{SS2}(v_n) \quad (1712)$$

where $c_{1m}$,$c_{2n}$ represent coefficients and $v_m$,$v_n$ represent values of *v* in the mode *m,n.* More specifically, the value of *v* of the homogeneous solution $H_{SS1}$ is given in accordance with $\alpha$ as follows:

$$v_m \equiv \frac{2m-1}{2a}\pi \quad (1713)$$

The value of *v* of the homogeneous solution $H_{SS2}$ is given in accordance with $\beta$ as follows:
[Formula 703]

$$v_n = \frac{2n-1}{2b}\pi \quad (1714)$$

Since $H_{SS1}$,$H_{SS2}$ are orthogonal to $F^1_{11SS}$, the coefficients $c_{1m}$,$c_{2n}$ can be determined by the least-squares method in which $u_{Bj}$ is replaced with the velocity of eq. (1595). Results of calculation performed with the mode number m×n of the homogeneous solution being set to at most 30×30 are shown in Fig. 52.

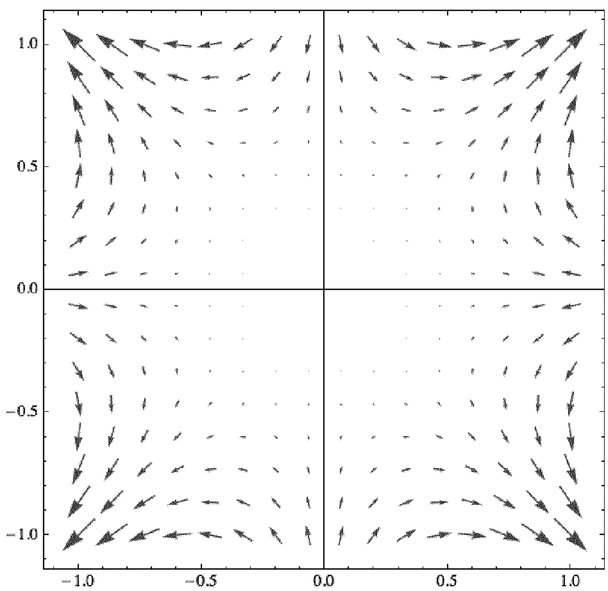


Fig. 52 Velocity Distribution of Residual Flow for Source.
Fig. 52 is similar to FIG. 51, from which we can see that the residual flow can be expressed. In other words, this shows that the homogeneous solution part $u_{Bj}$ is determined appropriately.
[Formula 704]
A sum of the particular solution part $u_{Hj}$ (FIG. 65) and the homogeneous solution part $u_{Bj}$ (Fig. 52) is shown in Fig. 53. This is the final result obtained by reproducing the analytical solutions of the source by the eigenfunction method.

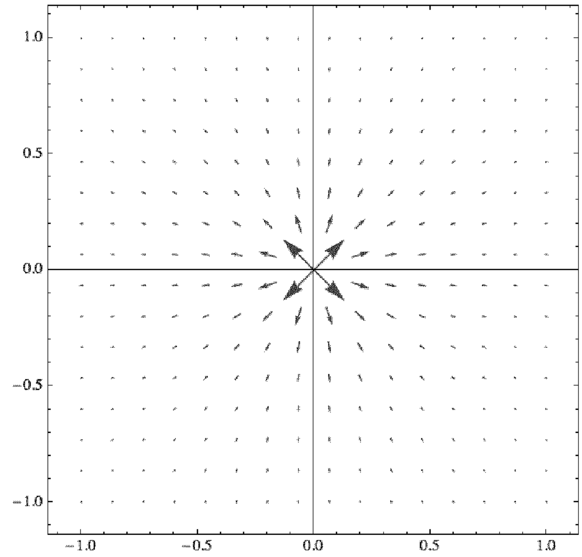


Fig. 53 Velocity Distribution of ($u_{Bj}$ + $u_{Hj}$) for Source.

From Fig. 53, we can see that the flow distribution by the source is reproduced substantially completely. In order to know final error distribution, a state obtained by subtracting ($u_{Bj}$ + $u_{Hj}$) (FIG. 53) from the analytical solutions (FIG. 40) is shown in Fig. 51.

[Formula 705]

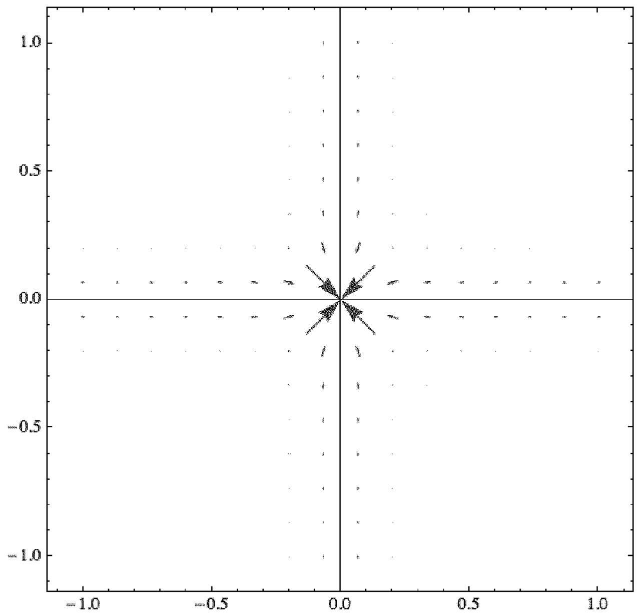


Fig. 54 Velocity Distribution Error of for Source.

From Fig. 54, we can see that errors remain at the origin and along the coordinate axes. These errors decrease as the mode number $m \times n$ of the eigenfunction is increased.

[Vortex]

Given a square observation region, calculation was performed with the mode number m×n of the eigenfunction being set to at most 30x30. As the external force term $f_i$ is given by eq. (1699), the particular solution part $u_{Hj}$ can be expressed by the eigenfunction $F^1_{11AA}$ of eq. (1703) alone. The state of dimensionless velocity is shown in FIG. 55. This result indicates the particular solutions of eqs. (1607), (1608).

[Formula 706]

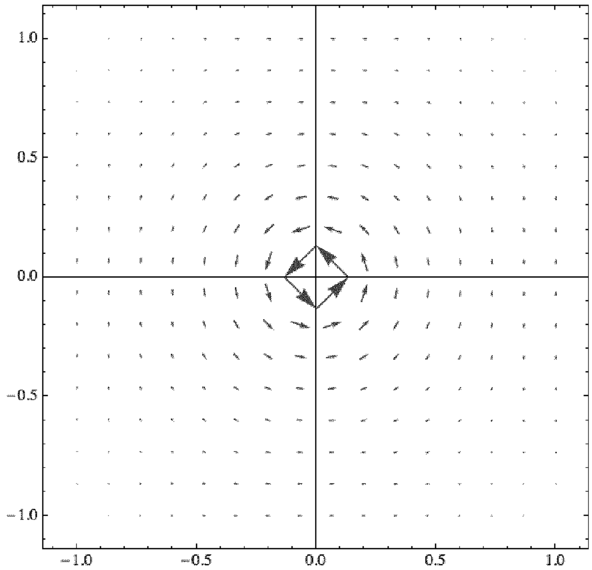


Fig. 55 Velocity Distribution by Eigenfunction Method for

Source.

Fig. 55 is similar to the state determined by the analytical solution (FIG. 41), expressing fluid circulating around the origin as the center. This, however, shows only the particular solution part, and it is necessary to check how different it is from the analytical solution. The state obtained by subtracting the eigenfunction solution from the analytical solutions of eq. (1603) is shown in Fig. 56.

[Formula 707]

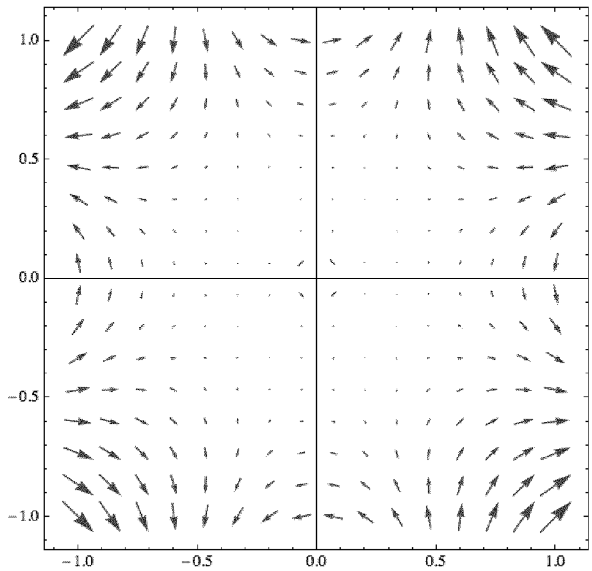


Fig. 56 Velocity Distribution of Difference between Analytical Solution and Eigenfunction Method for Source.

From Fig. 56, we can see that the difference is great in the vicinities of the boundary. This is called "residual flow". The residual flow is represented by $u_{Bj}$ of the homogeneous solution part. The particular solution part is represented by the eigenfunction $F^{1}_{11AA}$ of eq. (1703) alone, and the eigenvalue is given as:

$$\alpha = \frac{2m-1}{2a}\pi, \beta = \frac{2n-1}{2b}\pi \quad (1715)$$

Using this, as well as the homogeneous solution of the mode AA, $H_{AA1}$ of eq. (1688), and $H_{AA2}$ of eq. (1692), we express $u_{Bj}$ as follows:

$$u_{Bj} \equiv \sum_m c_{1m} H_{AA1}(v_m) + \sum_n c_{2n} H_{AA2}(v_n) \quad (1716)$$

where $c_{1m}$,$c_{2n}$ represent coefficients and $v_m$,$v_n$ represent value of $v$ in the mode $m,n$. More specifically, the value of $v$ of the homogeneous solution $H_{AA1}$ is given in accordance with $\alpha$ as follows:

$$v_m \equiv \frac{2m-1}{2a}\pi \quad (1717)$$

The value of $v$ of the homogeneous solution $H_{AA2}$ is given in accordance with $\beta$ as follows:

$$v_n = \frac{2n-1}{2b}\pi \quad (1718)$$

[Formula 708]

Since $H_{AA1}$,$H_{AA2}$ are orthogonal to $F^1_{1LAA}$ , the coefficients $c_{1m}$,$c_{2n}$ can be determined by the least squares method in which $u_{Bj}$ is replaced with the velocity of eq. (1603). Results of calculation performed with the mode number m×n of the homogeneous solution being set to at most 30×30 are shown in Fig. 57.

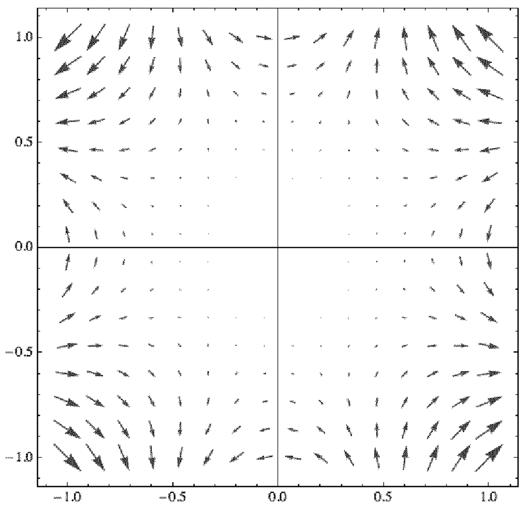


Fig. 57 Velocity Distribution of Residual Flow for-Source.

Fig. 57 is similar to Fig. 56, from which we can see that the residual flow can be expressed. In other words, this shows that the homogeneous solution part $u_{Bj}$ is determined appropriately.

A sum of the particular solution part $u_{Hj}$ (Fig. 55) and the homogeneous solution part $u_{Bj}$ (Fig. 57) is shown in Fig. 58. This is the final result obtained by reproducing the analytical solution of the vortex by the eigenfunction method.

[Formula 709]

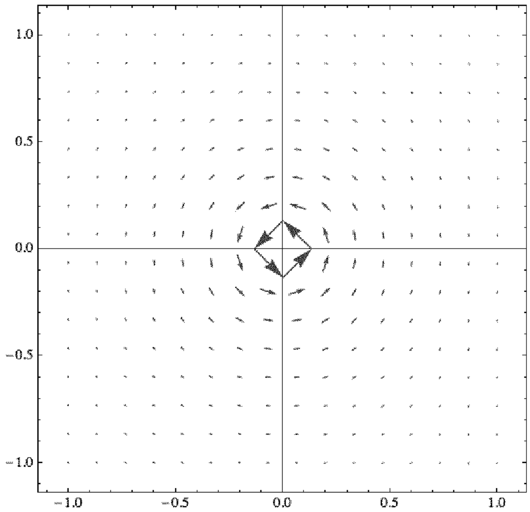


Fig. 58 Velocity Distribution of ($u_{Bj}$ + $u_{Hj}$) for-Source.

From Fig. 58, we can see that the flow distribution by vortex is reproduced substantially completely. In order to know final error distribution, a state obtained by subtracting ($u_{Bj}$ + $u_{Hj}$) (Fig. 58) from the analytical solution (FIG. 41) is shown in Fig. 59.

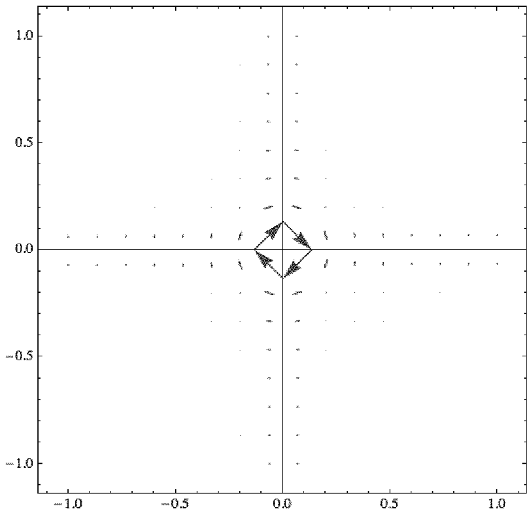


Fig. 59 Velocity Distribution of Errorfor-Source.

From Fig. 59, we can see that errors remain at the origin and along the coordinate axes. These errors decrease as the mode number $m \times n$ of the eigenfunction is increased.

[Formula 710]

11. 6 Bottom wall / uniform flow at top (uniform jet flow)

This section should better be included in Section 10.

11. 6. 1 Problem setting and boundary condition

In a two-dimensional irrotational flow, the origin is placed at the center of a rectangular region ($2a \times 2b$), and the periphery of the rectangle is the boundary. In this problem, the purpose is to know how the jet flow should be realized at right and left side edges ($x = \pm a$) in such boundary condition as the bottom wall ($y$ =-$b$) is a rigid body and as the upward stream is uniform at the top side end ($y$ = $b$). The bottom edge is a wall face, and we would like to know what flow should be caused to occur at the right and left edges in order that uniform flow occurs at the top edge.

According to the equation of continuity (18) and the vortex-free condition (19), the external force term $f_i$ of eq.

(23) is zero. This can be written regarding each component as follows:

$$f_x \equiv f_1 \equiv 0$$
$$f_y \equiv f_2 \equiv 0 \qquad (1719)$$

Let the velocity of uniform flow be $V$, and the boundary condition is given as:

$$u_x = 0, u_y = V \quad : on\ y = +b$$
$$u_y = 0 \quad : on\ y = -b \qquad (1720)$$

According to the boundary integration term of eq. (1648), the following condition is imposed on the eigenfunction:

$$0 = \int_C \left(n_x\phi_1 + n_y\phi_2\right)\cdot\phi_1^* dc + \int_C \left(n_x\phi_2 - n_y\phi_1\right)\cdot\phi_2^* dc \qquad (1721)$$

[Formula 711]

Transforming this equation gives:

$$0 = \int_C \left\{n_x\left(\phi_1\cdot\phi_1^* + \phi_2\cdot\phi_2^*\right) + n_y\left(\phi_2\cdot\phi_1^* - \phi_1\cdot\phi_2^*\right)\right\}dc \qquad (1722)$$

Let the top edge ($y = b$) be named a "boundary$C_T$", let the bottom edge ($y =-b$) be named a "boundary $C_B$ ", let the left edge ($x =-a$) be named a "boundary $C_L$", and let the right edge ($x = a$) be named a "boundary $C_R$". Then, the outward unit normal vector is given as:

$$\begin{cases} n_x = 0 \\ n_y = 1 \end{cases} on\ C_T, \qquad \begin{cases} n_x = 0 \\ n_y = -1 \end{cases} on\ C_B$$
$$\begin{cases} n_x = -1 \\ n_y = 0 \end{cases} on\ C_L, \qquad \begin{cases} n_x = 1 \\ n_y = 0 \end{cases} on\ C_R \qquad (1723)$$

Substituting this equation into eq. (1722) gives:

$$0 = \int_{C_T}\left(\phi_2\cdot\phi_1^* - \phi_1\cdot\phi_2^*\right)dc - \int_{C_B}\left(\phi_2\cdot\phi_1^* - \phi_1\cdot\phi_2^*\right)dc$$
$$-\int_{C_L}\left(\phi_1\cdot\phi_1^* + \phi_2\cdot\phi_2^*\right)dc + \int_{C_R}\left(\phi_1\cdot\phi_1^* + \phi_2\cdot\phi_2^*\right)dc \qquad (1724)$$

In order to cause the homogeneous boundary condition of eq. (1720) to be reflected on this equation, the sign of zero is described under the three primal eigenfunctions. Then, we obtain:

$$0 = \int_{C_T}\left(\underset{0}{\phi_2}\cdot\phi_1^* - \underset{0}{\phi_1}\cdot\phi_2^*\right)dc - \int_{C_B}\left(\underset{0}{\phi_2}\cdot\phi_1^* - \phi_1\cdot\phi_2^*\right)dc$$
$$-\int_{C_L}\left(\phi_1\cdot\phi_1^* + \phi_2\cdot\phi_2^*\right)dc + \int_{C_R}\left(\phi_1\cdot\phi_1^* + \phi_2\cdot\phi_2^*\right)dc \qquad (1725)$$

As to the term in which the primal eigenfunction does not have the sign of zero, no boundary condition is designated, and the value on the boundary is unknown. An adjoint boundary condition is decided so that integration value of each of the boundaries $C_T, C_B, C_L, C_R$ is zero, and we obtain:

$$0=\int_{C_T}\left(\underset{0}{\phi_2}\cdot\phi_1^{*}-\underset{0}{\phi_1}\cdot\phi_2^{*}\right)dc-\int_{C_B}\left(\underset{0}{\phi_2}\cdot\phi_1^{*}-\phi_1\cdot\underset{0}{\phi_2^{*}}\right)dc$$
$$-\int_{C_L}\left(\phi_1\cdot\underset{0}{\phi_1^{*}}+\phi_2\cdot\underset{0}{\phi_2^{*}}\right)dc+\int_{C_R}\left(\phi_1\cdot\underset{0}{\phi_1^{*}}+\phi_2\cdot\underset{0}{\phi_2^{*}}\right)dc \quad (1726)$$

Thus, we obtain the following boundary condition imposed on the eigenfunction:
[Formula 712]

$$(*)\quad \begin{cases}\phi_1=0\\ \phi_2=0\end{cases} on\ C_T,\quad \begin{cases}\phi_2=0\\ \phi_2^{*}=0\end{cases} on\ C_B \quad \begin{cases}\phi_1^{*}=0\\ \phi_2^{*}=0\end{cases} on\ C_L,\quad \begin{cases}\phi_1^{*}=0\\ \phi_2^{*}=0\end{cases} on\ C_R \quad (1727)$$

If the solution functions $F_{SS1}$,$F_{AA1}$,$F_{SA1}$,$F_{AS1}$ and $F_{SS2}$,$F_{AA2}$,$F_{SA2}$,$F_{AS2}$ described in Section 11. 5. 11 are combined and a solution satisfying the condition of eq. (1727) is obtained, it is the eigenfunction. However, unfortunately, an eigenfunction cannot be obtained in this function system. However, by changing the conditions at the boundaries $C_L$,$C_R$ slightly, we can obtain an eigenfunction of the following boundary condition:

$$(2)\quad \begin{cases}\phi_1=0\\ \phi_2=0\end{cases} on\ C_T,\quad \begin{cases}\phi_2=0\\ \phi_2^{*}=0\end{cases} on\ C_B \quad \begin{cases}\phi_1^{*}=0\\ \phi_2=0\end{cases} on\ C_L,\quad \begin{cases}\phi_1^{*}=0\\ \phi_2=0\end{cases} on\ C_R \quad (1728)$$

Similarly, we can obtain an eigenfunction of the following boundary condition:

$$(3)\quad \begin{cases}\phi_1=0\\ \phi_2=0\end{cases} on\ C_T,\quad \begin{cases}\phi_2=0\\ \phi_2^{*}=0\end{cases} on\ C_B \quad \begin{cases}\phi_1=0\\ \phi_2^{*}=0\end{cases} on\ C_L,\quad \begin{cases}\phi_1=0\\ \phi_2^{*}=0\end{cases} on\ C_R \quad (1729)$$

Further, we can obtain an eigenfunction of the following boundary condition:

$$(4)\quad \begin{cases}\phi_1=0\\ \phi_2=0\end{cases} on\ C_T,\quad \begin{cases}\phi_2=0\\ \phi_2^{*}=0\end{cases} on\ C_B \quad \begin{cases}\phi_1=0\\ \phi_2=0\end{cases} on\ C_L,\quad \begin{cases}\phi_1=0\\ \phi_2=0\end{cases} on\ C_R \quad (1730)$$

Only regarding (*), which is essential, an eigenfunction cannot be obtained. This is very interesting and suggestive. When only the integration term forms in the boundaries $C_L$,$C_R$ are extracted from eq. (1725), it is ideal that they satisfy:
[Formula 713]

$$(*)\quad 0=-\int_{C_L}\left(\phi_1\cdot\underset{0}{\phi_1^{*}}+\phi_2\cdot\underset{0}{\phi_2^{*}}\right)dc+\int_{C_R}\left(\phi_1\cdot\underset{0}{\phi_1^{*}}+\phi_2\cdot\underset{0}{\phi_2^{*}}\right)dc \quad (1731)$$

However, an eigenfunction that satisfy this equation is not obtained, and eigenfunctions satisfying the following are obtained:

$$(2)\qquad 0=-\int_{C_L}\left(\phi_1\cdot\underset{0}{\phi_1^*}+\underset{0}{\phi_2}\cdot\phi_2^*\right)dc+\int_{C_R}\left(\phi_1\cdot\underset{0}{\phi_1^*}+\underset{0}{\phi_2}\cdot\phi_2^*\right)dc \quad (1732)$$

$$(3)\qquad 0=-\int_{C_L}\left(\underset{0}{\phi_1}\cdot\phi_1^*+\phi_2\cdot\underset{0}{\phi_2^*}\right)dc+\int_{C_R}\left(\underset{0}{\phi_1}\cdot\phi_1^*+\phi_2\cdot\underset{0}{\phi_2^*}\right)dc \quad (1733)$$

$$(4)\qquad 0=-\int_{C_L}\left(\underset{0}{\phi_1}\cdot\phi_1^*+\underset{0}{\phi_2}\cdot\phi_2^*\right)dc+\int_{C_R}\left(\underset{0}{\phi_1}\cdot\phi_1^*+\underset{0}{\phi_2}\cdot\phi_2^*\right)dc \quad (1734)$$

It is considered that since $\underset{0}{\phi_2}\cdot\phi_2^*$ are included in (2) and (4), and $\underset{0}{\phi_1}\cdot\phi_1^*$ are included in (3) and (4), these are canceled successfully as the number of applied modes increases, and the effect of (*) is exhibited by the $\phi_1\cdot\underset{0}{\phi_1^*}$ and $\underset{0}{\phi_2}\cdot\phi_2^*$ of the remaining parts.

Next, intending to obtain horizontally symmetric flow, we give the boundary condition of this problem as:

$$\begin{aligned} &u_x=0,u_y=V &&:on\ y=+b\\ &u_y=0 &&:on\ y=-b\\ &u_x=0 &&:on\ x=0 \end{aligned} \qquad (1735)$$

The center line ($x$ = 0) is named a "boundary $C_C$", and the boundary term of the region enclosed by $C_T$,$C_B$,$C_C$,$C_R$ is given as follows, with reference to eq. (1724):

$$\begin{aligned} 0=&\int_{C_T}\left(\phi_2\cdot\phi_1^*-\phi_1\cdot\phi_2^*\right)dc-\int_{C_B}\left(\phi_2\cdot\phi_1^*-\phi_1\cdot\phi_2^*\right)dc\\ &-\int_{C_C}\left(\phi_1\cdot\phi_1^*+\phi_2\cdot\phi_2^*\right)dc+\int_{C_R}\left(\phi_1\cdot\phi_1^*+\phi_2\cdot\phi_2^*\right)dc \end{aligned} \qquad (1736)$$

[Formula 714]

In order to cause the homogeneous boundary condition of eq. (1735) to be reflected on this equation, the sign of zero is described under the four primal eigenfunctions. Then, we obtain:

$$\begin{aligned} 0=&\int_{C_T}\left(\underset{0}{\phi_2}\cdot\phi_1^*-\underset{0}{\phi_1}\cdot\phi_2^*\right)dc-\int_{C_B}\left(\underset{0}{\phi_2}\cdot\phi_1^*-\phi_1\cdot\phi_2^*\right)dc\\ &-\int_{C_C}\left(\underset{0}{\phi_1}\cdot\phi_1^*+\phi_2\cdot\phi_2^*\right)dc+\int_{C_R}\left(\phi_1\cdot\phi_1^*+\phi_2\cdot\phi_2^*\right)dc \end{aligned} \qquad (1737)$$

As to the term in which the primal eigenfunction does not have the sign of zero, no boundary condition is designated, and the value on the boundary is unknown. An adjoint boundary condition is decided so that integration value of each of the boundaries $C_T$,$C_B$,$C_C$,$C_R$ is zero, and we obtain:

$$\begin{aligned} 0=&\int_{C_T}\left(\underset{0}{\phi_2}\cdot\phi_1^*-\underset{0}{\phi_1}\cdot\phi_2^*\right)dc-\int_{C_B}\left(\underset{0}{\phi_2}\cdot\phi_1^*-\phi_1\cdot\underset{0}{\phi_2^*}\right)dc\\ &-\int_{C_C}\left(\underset{0}{\phi_1}\cdot\phi_1^*+\phi_2\cdot\underset{0}{\phi_2^*}\right)dc+\int_{C_R}\left(\phi_1\cdot\underset{0}{\phi_1^*}+\phi_2\cdot\underset{0}{\phi_2^*}\right)dc \end{aligned} \qquad (1738)$$

Thus, we obtain the following boundary condition imposed on the eigenfunction:

$$\begin{cases}\phi_1 = 0 \\ \phi_2 = 0\end{cases} on\ C_T, \quad \begin{cases}\phi_2 = 0 \\ \phi_2^* = 0\end{cases} on\ C_B$$
$$\begin{cases}\phi_1 = 0 \\ \phi_2^* = 0\end{cases} on\ C_C, \quad \begin{cases}\phi_1^* = 0 \\ \phi_2^* = 0\end{cases} on\ C_R \qquad (1739)$$

If the solution functions $F_{SS1}$,$F_{AA1}$,$F_{SA1}$,$F_{AS1}$ and $F_{SS2}$,$F_{AA2}$,$F_{SA2}$,$F_{AS2}$ described in Section 11. 5. 11 are combined and a solution satisfying the condition of eq. (1739) is obtained, it is the eigenfunction. However, unfortunately, an eigenfunction cannot be obtained, either, in this case. An obstacle in obtaining an eigenfunction is the following in the condition of eq. (1739):

$$\begin{cases}\phi_1^* = 0 \\ \phi_2^* = 0\end{cases} on\ C_R \qquad (1740)$$

Therefore, as to the integration on the $C_R$ of eq. (1737), the condition is relaxed in place of a strong condition as that of this equation, so as to satisfy the following in the state of integration:
[Formula 715]

$$0 = \int_{C_R} \left(\phi_1 \cdot \phi_1^* + \phi_2 \cdot \phi_2^*\right) dc \qquad (1741)$$

In Section 11. 6. 6, satisfying the following equation is not intended:

$$(*) \qquad 0 = \int_{C_R} \left(\phi_1 \cdot \underset{0}{\phi_1^*} + \phi_2 \cdot \underset{0}{\phi_2^*}\right) dc \qquad (1742)$$

An eigenfunction is obtained under the relaxed condition of eq. (1741), and the result is found to coincide with an eigenfunction obtained by extracting a part of eigenfunctions satisfying the following conditions and mixing the same:

$$(2) \qquad 0 = \int_{C_R} \left(\phi_1 \cdot \underset{0}{\phi_1^*} + \underset{0}{\phi_2} \cdot \phi_2^*\right) dc \qquad (1743)$$

$$(3) \qquad 0 = \int_{C_R} \left(\underset{0}{\phi_1} \cdot \phi_1^* + \phi_2 \cdot \underset{0}{\phi_2^*}\right) dc \qquad (1744)$$

$$(4) \qquad 0 = \int_{C_R} \left(\underset{0}{\phi_1} \cdot \phi_1^* + \underset{0}{\phi_2} \cdot \phi_2^*\right) dc \qquad (1745)$$

It is considered that since $\underset{0}{\phi_2} \cdot \phi_2^*$ are included in (2) and (4) and $\underset{0}{\phi_1} \cdot \phi_1^*$ are included in (3) and (4), these are canceled successfully as the number of applied modes increases, and the effect of (*) is exhibited by the $\phi_1 \cdot \underset{0}{\phi_1^*}$ and $\phi_2 \cdot \underset{0}{\phi_2^*}$ of the remaining parts.

Eigenfunctions present in the foregoing (2), (3), (4) are extracted, mixed, and used, whereby the effect achieved as if an eigenfunction of (*) is used is achieved. Therefore, this solution method is called "mixed-type eigenfunction method".

As a result of that the condition on $C_R$ of eq. (1739) is relaxed by eq. (1741), the boundary condition imposed on the eigenfunction is finally given as:

$$(5)\quad \begin{cases}\phi_1 = 0\\ \phi_2 = 0\end{cases} on\ C_T,\quad \begin{cases}\phi_2 = 0\\ \phi_2^* = 0\end{cases} on\ C_B \quad \begin{cases}\phi_1 = 0\\ \phi_2^* = 0\end{cases} on\ C_C,\quad 0 = \int_{C_R}\left(\phi_1\cdot\phi_1^* + \phi_2\cdot\phi_2^*\right)dc \qquad (1746)$$

[Formula 716]

11. 6. 2 Rules for eigenfunction names

In the eigenfunction shown in the subsequent section, the eigenvalues $\alpha,\beta$ are formed with the combinations given as:

$$\alpha = \left\{\frac{2m-1}{2a}\pi, \frac{2m}{2a}\pi\right\} \qquad \beta = \left\{\frac{2n-1}{2b}\pi, \frac{2n}{2b}\pi, \frac{4n-3}{4b}\pi, \frac{4n-1}{4b}\pi\right\} \qquad (1747)$$

where $m,n$ are integers. There are two kinds of the eigenvalue $\alpha$, and four kinds of the eigenvalue $\beta$. For example, a function F formed with the eigenvalues of

$$\alpha = \frac{2m-1}{2a}\pi \quad \Leftarrow (1) \qquad \beta = \frac{4n-3}{4b}\pi \quad \Leftarrow (3) \qquad (1748)$$

is represented by $F_{13}$ which means that $\alpha$ of the type (1) and $\beta$ of the type (3) are used. Here, the first index is the number indicative of the type of $\alpha$, and the second index is the number indicative of the type of $\beta$.

Further, this is followed by an alphabet indicating the mode form (Section 11. 4. 20) exhibited by the dual eigenfunction. For example, if the function $F$ is formed with the eigenvalue $\alpha$ of the type (1) and the eigenvalue $\beta$ of the type (3), and is in the mode SS, the function is represented by $F_{13SS}$. The mode ZA means superimposition of SA and AA, and the mode ZS means superimposition of SS and AS.

The boundary conditions that the eigenfunction satisfies are distinguished with numbers provided at upper right. The number at upper right is the number indicative of the boundary condition. In order to clearly show that the mode form indicated by an alphabet is not that of a primal eigenfunction but that of a dual eigenfunction, (*) is added before the number at upper right, for example, $F_{13SS}^{*2}$.

[Formula 717]

11. 6. 3 Primal eigenfunction and dual eigenfunction of (2)

The solution functions $F_{SS1},F_{AA1},F_{SA1},F_{AS1}$ and $F_{SS2},F_{AA2},F_{SA2},F_{AS2}$ mentioned in Section 11. 5. 11 maybe combined to obtain solutions that satisfy the following condition equations (1728):

$$(2)\quad \begin{cases}\phi_1 = 0\\ \phi_2 = 0\end{cases} on\ C_T,\quad \begin{cases}\phi_2 = 0\\ \phi_2^* = 0\end{cases} on\ C_B \quad \begin{cases}\phi_1^* = 0\\ \phi_2 = 0\end{cases} on\ C_L,\quad \begin{cases}\phi_1^* = 0\\ \phi_2 = 0\end{cases} on\ C_R \qquad (1728)\ \text{(Aforementioned)}$$

This solutions are eigenfunctions, and the following eight eigenfunctions are obtained.

Here, the functions are named according to the rules described in Section 11. 6. 2, and the boundary condition number is (2). $\lambda$ is an eigenvalue in the primal simultaneous differential equations (1662), (1663) and the dual simultaneous differential equations (1664), (1665).

(1)
$$F_{11AA}^{*2} \equiv \begin{cases} \alpha = \dfrac{2m-1}{2a}\pi, \beta = \dfrac{2n-1}{2b}\pi, \lambda = R\sqrt{\alpha^2+\beta^2} \\ \phi_x = 0, \qquad \phi_y = -\cos\alpha x \cos\beta y \\ \phi_x^* = \dfrac{\beta}{\sqrt{\alpha^2+\beta^2}}\cos\alpha x \sin\beta y \\ \phi_y^* = \dfrac{\alpha}{\sqrt{\alpha^2+\beta^2}}\sin\alpha x \cos\beta y \end{cases} \quad (1749)$$

(2)
$$F_{21AS}^{*2} \equiv \begin{cases} \alpha = \dfrac{2m}{2a}\pi, \beta = \dfrac{2n-1}{2b}\pi, \lambda = R\sqrt{\alpha^2+\beta^2} \\ \phi_x = 0, \qquad \phi_y = \sin\alpha x \cos\beta y \\ \phi_x^* = -\dfrac{\beta}{\sqrt{\alpha^2+\beta^2}}\sin\alpha x \sin\beta y \\ \phi_y^* = \dfrac{\alpha}{\sqrt{\alpha^2+\beta^2}}\cos\alpha x \cos\beta y \end{cases} \quad (1750)$$

(3)
$$F_{12SA}^{*2} \equiv \begin{cases} \alpha = \dfrac{2m-1}{2a}\pi, \beta = \dfrac{2n}{2b}\pi, \lambda = R\sqrt{\alpha^2+\beta^2} \\ \phi_x = 0, \qquad \phi_y = \cos\alpha x \sin\beta y \\ \phi_x^* = \dfrac{\beta}{\sqrt{\alpha^2+\beta^2}}\cos\alpha x \cos\beta y \\ \phi_y^* = -\dfrac{\alpha}{\sqrt{\alpha^2+\beta^2}}\sin\alpha x \sin\beta y \end{cases} \quad (1751)$$

[Formula 718]

(4)
$$F_{22SS}^{*2} \equiv \begin{cases} \alpha = \dfrac{2m}{2a}\pi, \beta = \dfrac{2n}{2b}\pi, \lambda = R\sqrt{\alpha^2+\beta^2} \\ \phi_x = 0, \qquad \phi_y = \sin\alpha x \sin\beta y \\ \phi_x^* = \dfrac{\beta}{\sqrt{\alpha^2+\beta^2}}\sin\alpha x \cos\beta y \\ \phi_y^* = \dfrac{\alpha}{\sqrt{\alpha^2+\beta^2}}\cos\alpha x \sin\beta y \end{cases} \quad (1752)$$

(5)
$$F_{13ZA}^{*2} \equiv \begin{cases} \alpha = \dfrac{2m-1}{2a}\pi, \beta = \dfrac{4n-3}{4b}\pi, \lambda = R\sqrt{\alpha^2+\beta^2} \\ \phi_x = \sin\alpha x\left(\cos\beta y - \sin\beta y\right), \qquad \phi_y = 0 \\ \phi_x^* = \dfrac{\alpha}{\sqrt{\alpha^2+\beta^2}}\cos\alpha x\left(\cos\beta y - \sin\beta y\right) \\ \phi_y^* = \dfrac{\beta}{\sqrt{\alpha^2+\beta^2}}\sin\alpha x\left(\cos\beta y + \sin\beta y\right) \end{cases} \quad (1753)$$

$$(6)\quad F^{*2}_{23ZS} \equiv \begin{cases} \alpha = \dfrac{2m}{2a}\pi, \beta = \dfrac{4n-3}{4b}\pi, \lambda = R\sqrt{\alpha^2+\beta^2} \\ \phi_x = \cos\alpha x\left(\cos\beta y - \sin\beta y\right), \quad \phi_y = 0 \\ \phi_x^* = -\dfrac{\alpha}{\sqrt{\alpha^2+\beta^2}}\sin\alpha x\left(\cos\beta y - \sin\beta y\right) \\ \phi_y^* = \dfrac{\beta}{\sqrt{\alpha^2+\beta^2}}\cos\alpha x\left(\cos\beta y + \sin\beta y\right) \end{cases} \quad (1754)$$

[Formula 719]

$$(7)\quad F^{*2}_{14ZA} \equiv \begin{cases} \alpha = \dfrac{2m-1}{2a}\pi, \beta = \dfrac{4n-1}{4b}\pi, \lambda = R\sqrt{\alpha^2+\beta^2} \\ \phi_x = \sin\alpha x\left(\cos\beta y + \sin\beta y\right), \quad \phi_y = 0 \\ \phi_x^* = \dfrac{\alpha}{\sqrt{\alpha^2+\beta^2}}\cos\alpha x\left(\cos\beta y + \sin\beta y\right) \\ \phi_y^* = -\dfrac{\beta}{\sqrt{\alpha^2+\beta^2}}\sin\alpha x\left(\cos\beta y - \sin\beta y\right) \end{cases} \quad (1755)$$

$$(8)\quad F^{*2}_{24ZS} \equiv \begin{cases} \alpha = \dfrac{2m}{2a}\pi, \beta = \dfrac{4n-1}{4b}\pi, \lambda = R\sqrt{\alpha^2+\beta^2} \\ \phi_x = -\cos\alpha x\left(\cos\beta y + \sin\beta y\right), \quad \phi_y = 0 \\ \phi_x^* = \dfrac{\alpha}{\sqrt{\alpha^2+\beta^2}}\sin\alpha x\left(\cos\beta y + \sin\beta y\right) \\ \phi_y^* = \dfrac{\beta}{\sqrt{\alpha^2+\beta^2}}\cos\alpha x\left(\cos\beta y - \sin\beta y\right) \end{cases} \quad (1756)$$

These eigenfunctions have orthogonality.

11. 6. 4 Primal eigenfunction and dual eigenfunction of (3)

The solution functions $F_{SS1}$,$F_{AA1}$,$F_{SA1}$,$F_{AS1}$ and $F_{SS2}$,$F_{AA2}$,$F_{SA2}$,$F_{AS2}$ mentioned in Section 11. 5. 11 may be combined to obtain solutions that satisfy the following condition equation (1729):

$$(3)\quad \begin{cases} \phi_1 = 0 \\ \phi_2 = 0 \end{cases} on\, C_T, \quad \begin{cases} \phi_2 = 0 \\ \phi_2^* = 0 \end{cases} on\, C_B \quad \begin{cases} \phi_1 = 0 \\ \phi_2^* = 0 \end{cases} on\, C_L, \quad \begin{cases} \phi_1 = 0 \\ \phi_2^* = 0 \end{cases} on\, C_R \quad (1729)\ \text{(Aforementioned)}$$

Thes solutions are eigenfunctions, and the following eight eigenfunctions are obtained.
Here, the functions are named according to the rules described in Section 11. 6. 2, and the boundary condition number is (3). λ is an eigenvalue in the primal simultaneous differential equations (1662), (1663) and the dual simultaneous differential equations (1664), (1665).
[Formula 720]

(1) $$F_{11AS}^{*3} \equiv \begin{cases} \alpha = \dfrac{2m-1}{2a}\pi, \beta = \dfrac{2n-1}{2b}\pi, \lambda = R\sqrt{\alpha^2+\beta^2} \\ \phi_x = 0, \qquad \phi_y = \sin\alpha x \cos\beta y \\ \phi_x^* = -\dfrac{\beta}{\sqrt{\alpha^2+\beta^2}}\sin\alpha x \sin\beta y \\ \phi_y^* = \dfrac{\alpha}{\sqrt{\alpha^2+\beta^2}}\cos\alpha x \cos\beta y \end{cases} \quad (1757)$$

(2) $$F_{21AA}^{*3} \equiv \begin{cases} \alpha = \dfrac{2m}{2a}\pi, \beta = \dfrac{2n-1}{2b}\pi, \lambda = R\sqrt{\alpha^2+\beta^2} \\ \phi_x = 0, \qquad \phi_y = -\cos\alpha x \cos\beta y \\ \phi_x^* = \dfrac{\beta}{\sqrt{\alpha^2+\beta^2}}\cos\alpha x \sin\beta y \\ \phi_y^* = \dfrac{\alpha}{\sqrt{\alpha^2+\beta^2}}\sin\alpha x \cos\beta y \end{cases} \quad (1758)$$

(3) $$F_{12SS}^{*3} \equiv \begin{cases} \alpha = \dfrac{2m-1}{2a}\pi, \beta = \dfrac{2n}{2b}\pi, \lambda = R\sqrt{\alpha^2+\beta^2} \\ \phi_x = 0, \qquad \phi_y = \sin\alpha x \sin\beta y \\ \phi_x^* = \dfrac{\beta}{\sqrt{\alpha^2+\beta^2}}\sin\alpha x \cos\beta y \\ \phi_y^* = \dfrac{\alpha}{\sqrt{\alpha^2+\beta^2}}\cos\alpha x \sin\beta y \end{cases} \quad (1759)$$

(4) $$F_{22SA}^{*3} \equiv \begin{cases} \alpha = \dfrac{2m}{2a}\pi, \beta = \dfrac{2n}{2b}\pi, \lambda = R\sqrt{\alpha^2+\beta^2} \\ \phi_x = 0, \qquad \phi_y = \cos\alpha x \sin\beta y \\ \phi_x^* = \dfrac{\beta}{\sqrt{\alpha^2+\beta^2}}\cos\alpha x \cos\beta y \\ \phi_y^* = -\dfrac{\alpha}{\sqrt{\alpha^2+\beta^2}}\sin\alpha x \sin\beta y \end{cases} \quad (1760)$$

[Formula 721]

(5) $$F_{13ZS}^{*3} \equiv \begin{cases} \alpha = \dfrac{2m-1}{2a}\pi, \beta = \dfrac{4n-3}{4b}\pi, \lambda = R\sqrt{\alpha^2+\beta^2} \\ \phi_x = \cos\alpha x\left(\cos\beta y - \sin\beta y\right), \qquad \phi_y = 0 \\ \phi_x^* = -\dfrac{\alpha}{\sqrt{\alpha^2+\beta^2}}\sin\alpha x\left(\cos\beta y - \sin\beta y\right) \\ \phi_y^* = \dfrac{\beta}{\sqrt{\alpha^2+\beta^2}}\cos\alpha x\left(\cos\beta y + \sin\beta y\right) \end{cases} \quad (1761)$$

(6) $$F^{*3}_{23ZA} \equiv \begin{cases} \alpha = \frac{2m}{2a}\pi, \beta = \frac{4n-3}{4b}\pi, \lambda = R\sqrt{\alpha^2+\beta^2} \\ \phi_x = \sin\alpha x\left(\cos\beta y - \sin\beta y\right), \quad \phi_y = 0 \\ \phi_x^* = \frac{\alpha}{\sqrt{\alpha^2+\beta^2}}\cos\alpha x\left(\cos\beta y - \sin\beta y\right) \\ \phi_y^* = \frac{\beta}{\sqrt{\alpha^2+\beta^2}}\sin\alpha x\left(\cos\beta y + \sin\beta y\right) \end{cases} \quad (1762)$$

(7) $$F^{*3}_{14ZS} \equiv \begin{cases} \alpha = \frac{2m-1}{2a}\pi, \beta = \frac{4n-1}{4b}\pi, \lambda = R\sqrt{\alpha^2+\beta^2} \\ \phi_x = -\cos\alpha x\left(\cos\beta y + \sin\beta y\right), \quad \phi_y = 0 \\ \phi_x^* = \frac{\alpha}{\sqrt{\alpha^2+\beta^2}}\sin\alpha x\left(\cos\beta y + \sin\beta y\right) \\ \phi_y^* = \frac{\beta}{\sqrt{\alpha^2+\beta^2}}\cos\alpha x\left(\cos\beta y - \sin\beta y\right) \end{cases} \quad (1763)$$

(8) $$F^{*3}_{24ZA} \equiv \begin{cases} \alpha = \frac{2m}{2a}\pi, \beta = \frac{4n-1}{4b}\pi, \lambda = R\sqrt{\alpha^2+\beta^2} \\ \phi_x = \sin\alpha x\left(\cos\beta y + \sin\beta y\right), \quad \phi_y = 0 \\ \phi_x^* = \frac{\alpha}{\sqrt{\alpha^2+\beta^2}}\cos\alpha x\left(\cos\beta y + \sin\beta y\right) \\ \phi_y^* = -\frac{\beta}{\sqrt{\alpha^2+\beta^2}}\sin\alpha x\left(\cos\beta y - \sin\beta y\right) \end{cases} \quad (1764)$$

These eigenfunctions have orthogonality.

11. 6. 5 Primal eigenfunction and dual eigenfunction of (4)

[Formula 722]

The solution functions $F_{SS1}$,$F_{AA1}$,$F_{SA1}$,$F_{AS1}$ and $F_{SS2}$,$F_{AA2}$,$F_{SA2}$,$F_{AS2}$ mentioned in Section 11. 5. 11 may be combined to obtain solutions that satisfy the following condition equations (1730):

(4) $$\begin{cases} \phi_1 = 0 \\ \phi_2 = 0 \end{cases} on\ C_T, \quad \begin{cases} \phi_2 = 0 \\ \phi_2^* = 0 \end{cases} on\ C_B$$
$$\begin{cases} \phi_1 = 0 \\ \phi_2 = 0 \end{cases} on\ C_L, \quad \begin{cases} \phi_1 = 0 \\ \phi_2 = 0 \end{cases} on\ C_R$$ (1730) (Aforementioned)

Thes solutions are eigenfunctions, and the following eight eigenfunctions are obtained.

Here, the functions are named according to the rules described in Section 11. 6. 2, and the boundary condition number is (4). λ is an eigenvalue in the primal simultaneous differential equations (1662), (1663) and the dual simultaneous differential equations (1664), (1665)..

Four of the same coincide with the eigenfunctions of the second boundary condition, and four of the same coincide with the eigenfunctions of the third boundary condition. Details are shown in Table 1 in Section 11.6.6.

(1)
$$F_{11AA}^{*2} \;\Pi\; F_{11AA}^{*4} \equiv \begin{cases} \alpha = \dfrac{2m-1}{2a}\pi, \beta = \dfrac{2n-1}{2b}\pi, \lambda = R\sqrt{\alpha^2+\beta^2} \\ \phi_x = 0, \qquad \phi_y = -\cos\alpha x \cos\beta y \\ \phi_x^* = \dfrac{\beta}{\sqrt{\alpha^2+\beta^2}}\cos\alpha x \sin\beta y \\ \phi_y^* = \dfrac{\alpha}{\sqrt{\alpha^2+\beta^2}}\sin\alpha x \cos\beta y \end{cases} \quad (1765)$$

(2)
$$F_{21AS}^{*2} \;\Pi\; F_{21AS}^{*4} \equiv \begin{cases} \alpha = \dfrac{2m}{2a}\pi, \beta = \dfrac{2n-1}{2b}\pi, \lambda = R\sqrt{\alpha^2+\beta^2} \\ \phi_x = 0, \qquad \phi_y = \sin\alpha x \cos\beta y \\ \phi_x^* = -\dfrac{\beta}{\sqrt{\alpha^2+\beta^2}}\sin\alpha x \sin\beta y \\ \phi_y^* = \dfrac{\alpha}{\sqrt{\alpha^2+\beta^2}}\cos\alpha x \cos\beta y \end{cases} \quad (1766)$$

[Formula 723]

(3)
$$F_{12SA}^{*2} \;\Pi\; F_{12SA}^{*4} \equiv \begin{cases} \alpha = \dfrac{2m-1}{2a}\pi, \beta = \dfrac{2n}{2b}\pi, \lambda = R\sqrt{\alpha^2+\beta^2} \\ \phi_x = 0, \qquad \phi_y = \cos\alpha x \sin\beta y \\ \phi_x^* = \dfrac{\beta}{\sqrt{\alpha^2+\beta^2}}\cos\alpha x \cos\beta y \\ \phi_y^* = -\dfrac{\alpha}{\sqrt{\alpha^2+\beta^2}}\sin\alpha x \sin\beta y \end{cases} \quad (1767)$$

(4)
$$F_{22SS}^{*2} \;\Pi\; F_{22SS}^{*4} \equiv \begin{cases} \alpha = \dfrac{2m}{2a}\pi, \beta = \dfrac{2n}{2b}\pi, \lambda = R\sqrt{\alpha^2+\beta^2} \\ \phi_x = 0, \qquad \phi_y = \sin\alpha x \sin\beta y \\ \phi_x^* = \dfrac{\beta}{\sqrt{\alpha^2+\beta^2}}\sin\alpha x \cos\beta y \\ \phi_y^* = \dfrac{\alpha}{\sqrt{\alpha^2+\beta^2}}\cos\alpha x \sin\beta y \end{cases} \quad (1768)$$

(5)
$$F_{13ZS}^{*3} \;\Pi\; F_{13ZS}^{*4} \equiv \begin{cases} \alpha = \dfrac{2m-1}{2a}\pi, \beta = \dfrac{4n-3}{4b}\pi, \lambda = R\sqrt{\alpha^2+\beta^2} \\ \phi_x = \cos\alpha x\left(\cos\beta y - \sin\beta y\right), \qquad \phi_y = 0 \\ \phi_x^* = -\dfrac{\alpha}{\sqrt{\alpha^2+\beta^2}}\sin\alpha x\left(\cos\beta y - \sin\beta y\right) \\ \phi_y^* = \dfrac{\beta}{\sqrt{\alpha^2+\beta^2}}\cos\alpha x\left(\cos\beta y + \sin\beta y\right) \end{cases} \quad (1769)$$

$$(6)\quad \begin{matrix} F^{*3}_{23ZA} \\ \Pi \\ F^{*4}_{23ZA} \end{matrix} \equiv \begin{cases} \alpha = \dfrac{2m}{2a}\pi, \beta = \dfrac{4n-3}{4b}\pi, \lambda = R\sqrt{\alpha^2+\beta^2} \\ \phi_x = \sin\alpha x\left(\cos\beta y - \sin\beta y\right), \quad \phi_y = 0 \\ \phi^*_x = \dfrac{\alpha}{\sqrt{\alpha^2+\beta^2}}\cos\alpha x\left(\cos\beta y - \sin\beta y\right) \\ \phi^*_y = \dfrac{\beta}{\sqrt{\alpha^2+\beta^2}}\sin\alpha x\left(\cos\beta y + \sin\beta y\right) \end{cases} \quad (1770)$$

[Formula 724]

$$(7)\quad \begin{matrix} F^{*3}_{14ZS} \\ \Pi \\ F^{*4}_{14ZS} \end{matrix} \equiv \begin{cases} \alpha = \dfrac{2m-1}{2a}\pi, \beta = \dfrac{4n-1}{4b}\pi, \lambda = R\sqrt{\alpha^2+\beta^2} \\ \phi_x = -\cos\alpha x\left(\cos\beta y + \sin\beta y\right), \quad \phi_y = 0 \\ \phi^*_x = \dfrac{\alpha}{\sqrt{\alpha^2+\beta^2}}\sin\alpha x\left(\cos\beta y + \sin\beta y\right) \\ \phi^*_y = \dfrac{\beta}{\sqrt{\alpha^2+\beta^2}}\cos\alpha x\left(\cos\beta y - \sin\beta y\right) \end{cases} \quad (1771)$$

$$(8)\quad \begin{matrix} F^{*3}_{24ZA} \\ \Pi \\ F^{*4}_{24ZA} \end{matrix} \equiv \begin{cases} \alpha = \dfrac{2m}{2a}\pi, \beta = \dfrac{4n-1}{4b}\pi, \lambda = R\sqrt{\alpha^2+\beta^2} \\ \phi_x = \sin\alpha x\left(\cos\beta y + \sin\beta y\right), \quad \phi_y = 0 \\ \phi^*_x = \dfrac{\alpha}{\sqrt{\alpha^2+\beta^2}}\cos\alpha x\left(\cos\beta y + \sin\beta y\right) \\ \phi^*_y = -\dfrac{\beta}{\sqrt{\alpha^2+\beta^2}}\sin\alpha x\left(\cos\beta y - \sin\beta y\right) \end{cases} \quad (1772)$$

These eigenfunctions have orthogonality.

11. 6. 6 Primal eigenfunction and dual eigenfunction of (5)

The solution functions $F_{SS1}$,$F_{AA1}$,$F_{SA1}$,$F_{AS1}$ and $F_{SS2}$,$F_{AA2}$,$F_{SA2}$,$F_{AS2}$ mentioned in Section 11. 5. 11 may be combined to obtain a solution that satisfies the following condition equation (1746):

$$(5)\quad \begin{cases} \phi_1 = 0 \\ \phi_2 = 0 \end{cases} on\ C_T, \quad \begin{cases} \phi_2 = 0 \\ \phi^*_2 = 0 \end{cases} on\ C_B \quad \begin{cases} \phi_1 = 0 \\ \phi^*_2 = 0 \end{cases} on\ C_C, \quad 0 = \int_{C_R}\left(\phi_1\cdot\phi^*_1 + \phi_2\cdot\phi^*_2\right)dc \quad (1746)\ \text{(Aforementioned)}$$

These solutions are mixed-type eigenfunctions, and the following eight eigenfunctions are obtained.

Here, the functions are named according to the rules described in Section 11. 6. 2, and the boundary condition number is (5). $\lambda$ is an eigenvalue in the primal simultaneous differential equations (1662), (1663) and the dual simultaneous differential equations (1664), (1665).

[Formula 725]

(1)
$$F_{11AA}^{*2} \;\Pi\; F_{11AA}^{*5} \;\Pi\; F_{11AA}^{*4} \equiv \begin{cases} \alpha = \dfrac{2m-1}{2a}\pi, \beta = \dfrac{2n-1}{2b}\pi, \lambda = R\sqrt{\alpha^2+\beta^2} \\ \phi_x = 0, \qquad \phi_y = -\cos\alpha x \cos\beta y \\ \phi_x^* = \dfrac{\beta}{\sqrt{\alpha^2+\beta^2}}\cos\alpha x \sin\beta y \\ \phi_y^* = \dfrac{\alpha}{\sqrt{\alpha^2+\beta^2}}\sin\alpha x \cos\beta y \end{cases} \tag{1773}$$

(2)
$$F_{21AA}^{*3} \;\Pi\; F_{21AA}^{*5} \equiv \begin{cases} \alpha = \dfrac{2m}{2a}\pi, \beta = \dfrac{2n-1}{2b}\pi, \lambda = R\sqrt{\alpha^2+\beta^2} \\ \phi_x = 0, \qquad \phi_y = -\cos\alpha x \cos\beta y \\ \phi_x^* = \dfrac{\beta}{\sqrt{\alpha^2+\beta^2}}\cos\alpha x \sin\beta y \\ \phi_y^* = \dfrac{\alpha}{\sqrt{\alpha^2+\beta^2}}\sin\alpha x \cos\beta y \end{cases} \tag{1774}$$

(3)
$$F_{12SA}^{*2} \;\Pi\; F_{12SA}^{*5} \;\Pi\; F_{12SA}^{*4} \equiv \begin{cases} \alpha = \dfrac{2m-1}{2a}\pi, \beta = \dfrac{2n}{2b}\pi, \lambda = R\sqrt{\alpha^2+\beta^2} \\ \phi_x = 0, \qquad \phi_y = \cos\alpha x \sin\beta y \\ \phi_x^* = \dfrac{\beta}{\sqrt{\alpha^2+\beta^2}}\cos\alpha x \cos\beta y \\ \phi_y^* = -\dfrac{\alpha}{\sqrt{\alpha^2+\beta^2}}\sin\alpha x \sin\beta y \end{cases} \tag{1775}$$

(4)
$$F_{22SA}^{*3} \;\Pi\; F_{22SA}^{*5} \equiv \begin{cases} \alpha = \dfrac{2m}{2a}\pi, \beta = \dfrac{2n}{2b}\pi, \lambda = R\sqrt{\alpha^2+\beta^2} \\ \phi_x = 0, \qquad \phi_y = \cos\alpha x \sin\beta y \\ \phi_x^* = \dfrac{\beta}{\sqrt{\alpha^2+\beta^2}}\cos\alpha x \cos\beta y \\ \phi_y^* = -\dfrac{\alpha}{\sqrt{\alpha^2+\beta^2}}\sin\alpha x \sin\beta y \end{cases} \tag{1776}$$

[Formula 726]

(5)
$$F_{13ZA}^{*2} \;\Pi\; F_{13ZA}^{*5} \equiv \begin{cases} \alpha = \dfrac{2m-1}{2a}\pi, \beta = \dfrac{4n-3}{4b}\pi, \lambda = R\sqrt{\alpha^2+\beta^2} \\ \phi_x = \sin\alpha x\left(\cos\beta y - \sin\beta y\right), \qquad \phi_y = 0 \\ \phi_x^* = \dfrac{\alpha}{\sqrt{\alpha^2+\beta^2}}\cos\alpha x\left(\cos\beta y - \sin\beta y\right) \\ \phi_y^* = \dfrac{\beta}{\sqrt{\alpha^2+\beta^2}}\sin\alpha x\left(\cos\beta y + \sin\beta y\right) \end{cases} \tag{1777}$$

(6)
$$F^{*3}_{23ZA} \ \Pi \ F^{*5}_{23ZA} \ \Pi \ F^{*4}_{23ZA} \equiv \begin{cases} \alpha = \frac{2m}{2a}\pi, \beta = \frac{4n-3}{4b}\pi, \lambda = R\sqrt{\alpha^2+\beta^2} \\ \phi_x = \sin\alpha x\left(\cos\beta y - \sin\beta y\right), \quad \phi_y = 0 \\ \phi_x^* = \frac{\alpha}{\sqrt{\alpha^2+\beta^2}}\cos\alpha x\left(\cos\beta y - \sin\beta y\right) \\ \phi_y^* = \frac{\beta}{\sqrt{\alpha^2+\beta^2}}\sin\alpha x\left(\cos\beta y + \sin\beta y\right) \end{cases} \quad (1778)$$

(7)
$$F^{*2}_{14ZA} \ \Pi \ F^{*5}_{14ZA} \equiv \begin{cases} \alpha = \frac{2m-1}{2a}\pi, \beta = \frac{4n-1}{4b}\pi, \lambda = R\sqrt{\alpha^2+\beta^2} \\ \phi_x = \sin\alpha x\left(\cos\beta y + \sin\beta y\right), \quad \phi_y = 0 \\ \phi_x^* = \frac{\alpha}{\sqrt{\alpha^2+\beta^2}}\cos\alpha x\left(\cos\beta y + \sin\beta y\right) \\ \phi_y^* = -\frac{\beta}{\sqrt{\alpha^2+\beta^2}}\sin\alpha x\left(\cos\beta y - \sin\beta y\right) \end{cases} \quad (1779)$$

(8)
$$F^{*3}_{24ZA} \ \Pi \ F^{*5}_{24ZA} \ \Pi \ F^{*4}_{24ZA} \equiv \begin{cases} \alpha = \frac{2m}{2a}\pi, \beta = \frac{4n-1}{4b}\pi, \lambda = R\sqrt{\alpha^2+\beta^2} \\ \phi_x = \sin\alpha x\left(\cos\beta y + \sin\beta y\right), \quad \phi_y = 0 \\ \phi_x^* = \frac{\alpha}{\sqrt{\alpha^2+\beta^2}}\cos\alpha x\left(\cos\beta y + \sin\beta y\right) \\ \phi_y^* = -\frac{\beta}{\sqrt{\alpha^2+\beta^2}}\sin\alpha x\left(\cos\beta y - \sin\beta y\right) \end{cases} \quad (1780)$$

[Formula 727]

A list of the respective equation numbers of the eigenfunction of the boundary conditions is shown in Table 1. The eigenfunctions of the second boundary condition and those of the third boundary conditions do not overlap, and the union of the two represents all of the eigenfunctions. The eigenfunctions of the fourth boundary condition and those of the fifth boundary condition can be considered to be mixtures of some extracted from the eigenfunctions of the second and third boundary conditions. The eigenfunctions of the fifth boundary condition include elements of all of the modes AA, SA, and ZA. This function group is referred to as mixed-type eigenfunctions. This function group is considered a complete system, and its orthogonality is complicated. Since $F^{*5}_{11AA}, F^{*5}_{12SA}, F^{*5}_{13ZA}, F^{*5}_{14ZA}$ as the first group are included in the eigenfunctions of the second boundary condition, mutual orthogonality is provided. Since $F^{*5}_{21AA}, F^{*5}_{22SA}, F^{*5}_{23ZA}$, $F^{*5}_{24ZA}$ as the second group are included in the eigenfunctions of the third boundary condition, mutual orthogonality is provided. As $F^{*5}_{11AA}, F^{*5}_{12SA}, F^{*5}_{23ZA}, F^{*5}_{24ZA}$ are included in the eigenfunctions of the fourth boundary condition, mutual orthogonality is provided. In an inner product of the first group and the second group, the functions of the mode AA and the functions of the mode SA are orthogonal to each other. As a special example, $F^{*5}_{13ZA}$ and $F^{*5}_{24ZA}$ are orthogonal, and $F^{*5}_{14ZA}$ and $F^{*5}_{23ZA}$ are orthogonal as well.

Table. 1 Equation Number of Eigenfunction

| Name α,β | Mode | Boundary Condition Number 2 | 3 | 4 | 5 |
|---|---|---|---|---|---|
| 11 | AA | (1749) | | (1765) | (1773) |
| | AS | | (1757) | | |

(continued)

| Name α,β | Mode | Boundary Condition Number 2 | 3 | 4 | 5 |
|---|---|---|---|---|---|
| 21 | AA | | (1758) | | (1774) |
| | AS | (1750) | | (1766) | |
| 12 | SA | (1751) | | (1767) | (1775) |
| | SS | | (1759) | | |
| 22 | SA | | (1760) | | (1776) |
| | SS | (1752) | | (1768) | |
| 13 | ZA | (1753) | | | (1777) |
| | ZS | | (1761) | (1769) | |
| 23 | ZA | | (1762) | (1770) | (1778) |
| | ZS | (1754) | | | |
| 14 | ZA | (1755) | | | (1779) |
| | ZS | | (1763) | (1771) | |
| 24 | ZA | | (1764) | (1772) | (1780) |
| | ZS | (1756) | | | |

[Formula 728]

States of No. 1 mode of the primal eigenfunctions and dual eigenfunctions in the cases of (1) to (8) under the fifth boundary condition are shown in Figs. 60 to 67.

Primal Eigenfunction Dual Eigenfunction

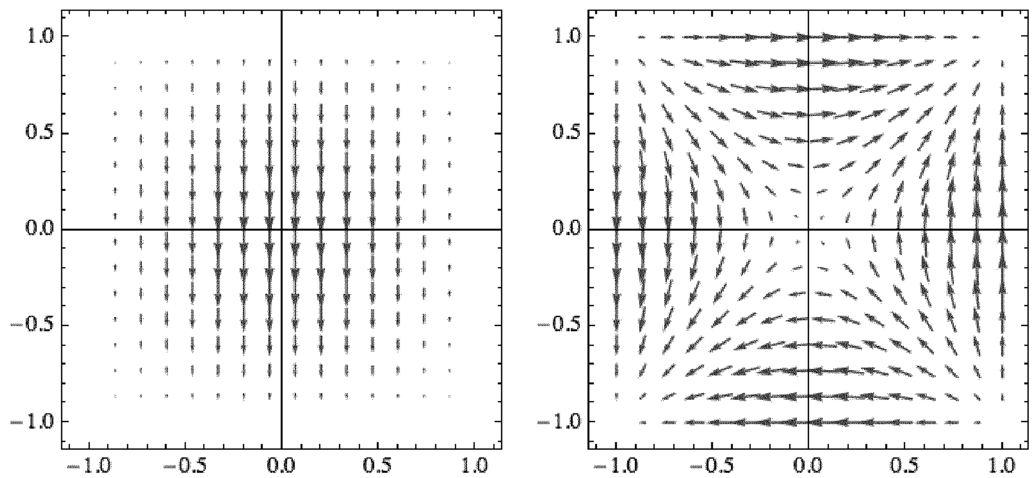

Fig. 60 No.1 Mode (m=1,n=1) of the Function (1) $F^{*5}_{11AA}$.

[Formula 729]

Primal Eigenfunction Dual Eigenfunction

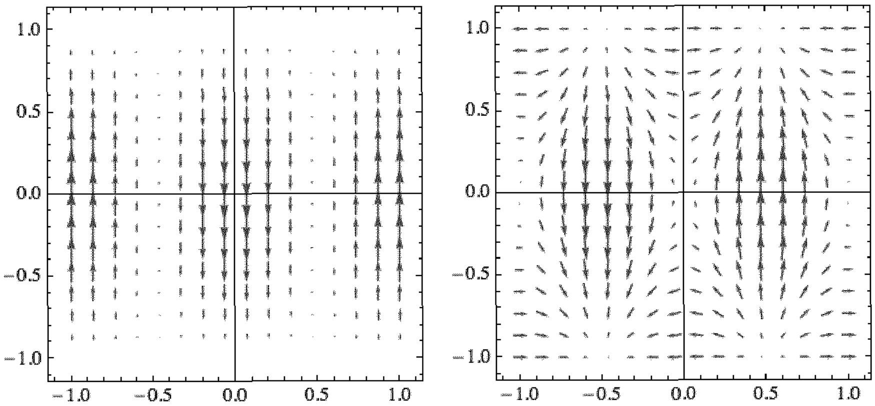


Fig. 61 No.1 Mode (m=1,n=1) of the Function (2) $F^{*5}_{21AA}$.

Primal Eigenfunction | Dual Eigenfunction

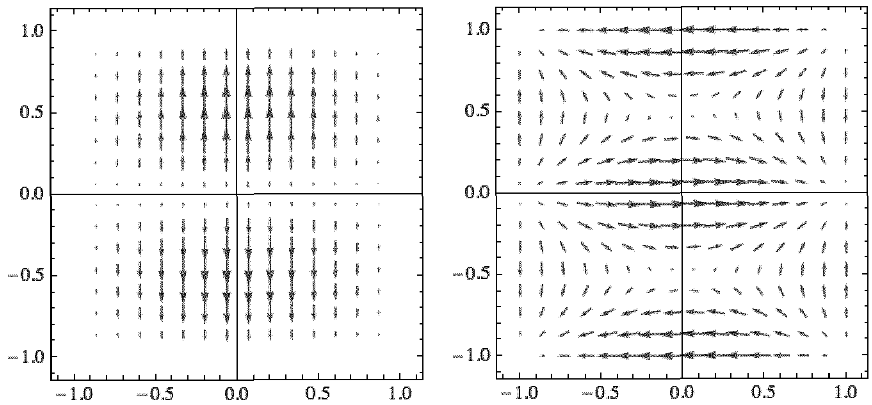


Fig. 62 No.1 Mode (m=1,n=1) of the Function (3) $F^{*5}_{12SA}$.

[Formula 730]

Primal Eigenfunction | Dual Eigenfunction

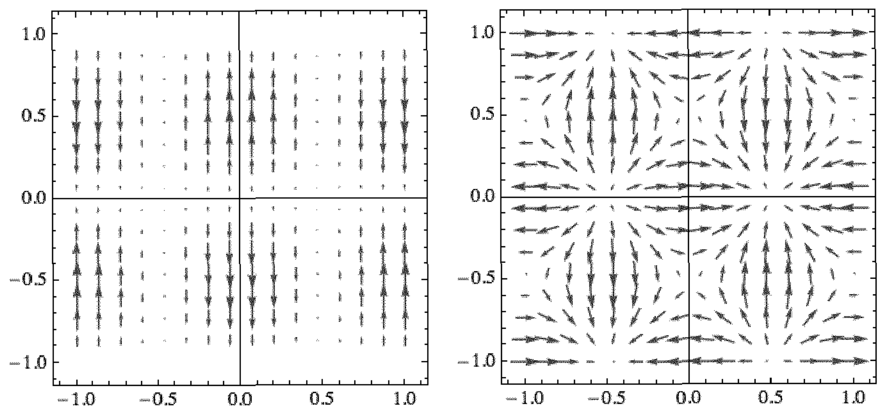


Fig. 63 No.1 Mode (m=1,n=1) of the Function (4) $F^{*5}_{22SA}$.

Primal Eigenfunction | Dual Eigenfunction

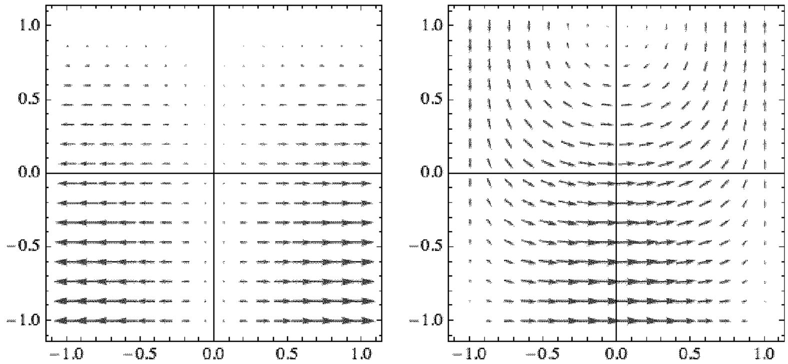

Fig. 64 No.1 Mode (m=1,n=1) of the Function (5) $F^{*5}_{13ZA}$.

[Formula 731]

Primal Eigenfunction Dual Eigenfunction

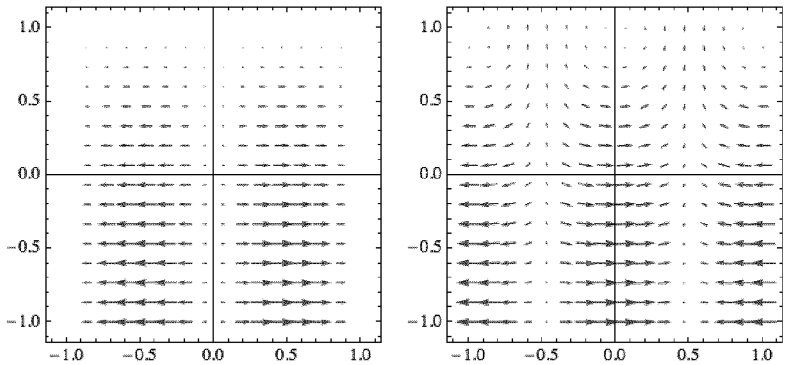

Fig. 65 No.1 Mode (m=1,n=1) of the Function (6) $F^{*5}_{23ZA}$.

Primal Eigenfunction Dual Eigenfunction

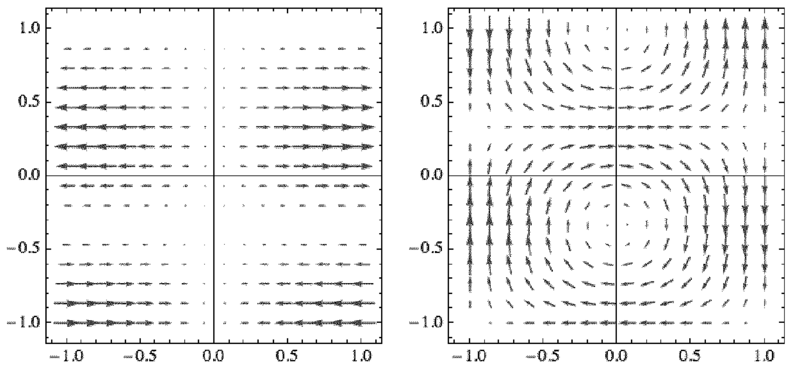

Fig. 66 No.1 Mode (m=1,n=1) of the Function (7) $F^{*5}_{14ZA}$.

Primal Eigenfunction Dual Eigenfunction

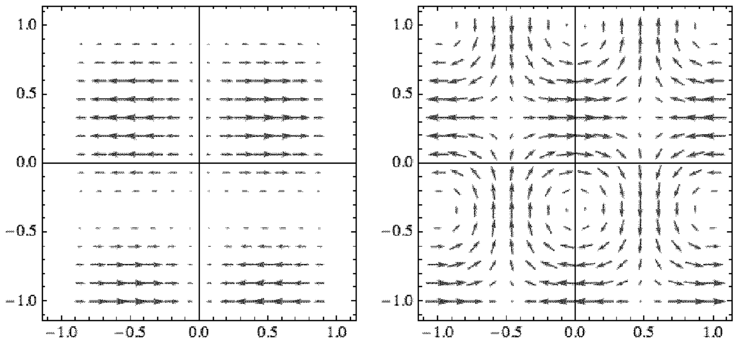


Fig. 67 No.1 Mode (m=1,n=1) of the Function (8) $F^{*5}_{24ZA}$.
[Formula 732]

11. 6. 7 Mixed-type eigenfunction method

There are eight mixed-type eigenfunctions of the fifth boundary condition with respect to combinations of integers *m*,*n*. These are provided with serial numbers, and let the serial number be *k*. Let the *k*-th eigenvalue be $\lambda_k$, let the k-th primal eigenfunction be $\phi_{jk}$, and let the k-th dual eigenfunction be $\phi^*_{jk}$. Similarly to Section 11. 5. 12, the simultaneous partial differential equations (1548), (1549) are in the form of eq. (23) as follows:

$$\sum_j L_{ij} u_j = f_i \qquad (23) \text{ (Aforementioned)}$$

An index B is added to a term that satisfies an inhomogeneous boundary condition so as to let the term be $u_{Bj}$, and an index H is added to a term that satisfies a homogeneous boundary condition so as to let the term be $u_{Hj}$. A primal velocity is expressed by a sum of these, which is given as:

$$u_j \equiv u_{Bj} + u_{Hj} \qquad (24) \text{ (Aforementioned)}$$

Substituting this equation (24) into eq. (23), we obtain the following simultaneous partial differential equation (40) represented by a homogeneous boundary condition:

$$\sum_j L_{ij} u_{Hj} = f_{Hi} \qquad (40) \text{ (Aforementioned)}$$

where the external force term $f_{Hi}$ satisfies:

$$f_{Hi} \equiv f_i - \sum_j L_{ij} u_{Bj} \qquad (41) \text{ (Aforementioned)}$$

Here, the boundary function differential term $f_{Bi}$ is defined as:
[Formula 733]

$$f_{Bi} \equiv \sum_j L_{ij} u_{Bj} \qquad (1696) \text{ (Aforementioned)}$$

Then, we obtain:

$$f_{Hi} \equiv f_i - f_{Bi} \qquad (1697) \text{ (Aforementioned)}$$

The solution function $u_{Hj}$ is expressed by a sum of mixed-type eigenfunctions as follows:

$$u_{Hj} \equiv \sum_k c_k \phi_{jk} \qquad (69) \text{ (Aforementioned)}$$

Substituting eq. (69) into the differential equation (40) gives:

$$\sum_k c_k \lambda_k w_i \phi_{ik}^* = f_{Hi} \qquad (109) \text{ (Aforementioned)}$$

Let the number of applied modes be *K,* and we obtain an inner product of this equation with the *p*-th dual eigenfunction $\phi_{ip}^*$, which is as follows:

$$\sum_k^K c_k \lambda_k \sum_i \int_S w_i \phi_{ik}^* \cdot \phi_{ip}^* ds = \sum_i \int_S f_{Hi} \cdot \phi_{ip}^* ds \qquad (1781)$$

The mixed-type eigenfunctions, which have complicated orthogonality, do not have such convenience that the summing sign of *k* can be removed and the coefficient $c_k$ is determined immediately as is the case with eq. (110). When *p* is varied from 1 to *K* in eq.(1781), a matrix format is obtained. Let the inner products be given as:

$$s_{pk} \equiv \lambda_k \sum_i \int_S w_i \phi_{ik}^* \cdot \phi_{ip}^* ds \qquad (1782)$$

$$r_p \equiv \sum_i \int_S f_{Hi} \cdot \phi_{ip}^* ds \qquad (1783)$$

Then, we obtain:

$$\begin{bmatrix} s_{11} & s_{12} & \Lambda & s_{1K} \\ s_{21} & s_{22} & \Lambda & s_{2K} \\ M & M & O & M \\ s_{K1} & s_{K2} & \Lambda & s_{KK} \end{bmatrix} \begin{Bmatrix} c_1 \\ c_2 \\ M \\ c_K \end{Bmatrix} = \begin{Bmatrix} r_1 \\ r_2 \\ M \\ r_K \end{Bmatrix} \qquad (1784)$$

By solving this simultaneous linear equation, the coefficient $c_k$ is settled. This method is referred to as a "mixed-type eigenfunction method". The $c_k$ thus settled is returned to eq. (69), and the solution function $u_{Hj}$ is obtained. When $u_{Hj}$ is returned to eq. (24), the velocity $u_j$ is obtained. On the other hand, when it is returned to eq. (109), the external force term $f_{Hi}$ is reconstructed, which is useful for verification. In other words, the solution method (1784) is an eigenfunction method in the Hilbert space in which the velocity $u_{Hj}$ is expressed with the primal eigenfunction $\phi_j$, and the external force term $f_{Hi}$ is expressed with the dual eigenfunction $\phi_i^*$.
[Formula 734]

The following description shows that the procedure of taking an inner product with the dual eigenfunction $\phi_{ip}^*$ of eq. (1781), that is, the mixed-type eigenfunction method, is also equivalent to the least-squares method.

Similarly to Section 5.2, the primal variation $\delta u_i$ and the dual variation $\delta u_i^*$ are given as:

$$\delta u_i = \delta u_{Hi} \equiv \sum_k \delta c_k \phi_{ik} \quad (120) \text{ (Aforementioned)}$$

$$\delta u_i^* = \delta u_{Hi}^* \equiv \sum_k \delta c_k^* \phi_{ik}^* \quad (121) \text{ (Aforementioned)}$$

Therefore, combining a plurality of procedures for taking an inner product with the function $\phi_i^*$, which is a technique used in the process of obtaining eq. (1781), is equivalent to taking an inner product with the dual variation $\delta u_i^*$ of eq. (121). The inner product of eq. (1781) is basically an inner product of eq. (40) and the function $\phi_i^*$. Transforming eq. (40) gives:

$$\sum_j L_{ij} u_{Hj} - f_{Hi} = 0 \quad (1785)$$

Taking an inner product thereof with the dual variation $\delta u_i^*$ gives:

$$\sum_i \int_S \left( \sum_j L_{ij} u_{Hj} - f_{Hi} \right) \cdot \delta u_i^* ds = 0 \quad (1786)$$

Substituting the external force term $f_{Hi}$ of eq. (41) into this equation gives:

$$\sum_i \int_S \left\{ \sum_j L_{ij} \left( u_{Bj} + u_{Hj} \right) - f_i \right\} \cdot \delta u_i^* ds = 0 \quad (1787)$$

Expressing the velocity of this equation with the primal velocity $u_j$ of eq. (24) gives:

$$\sum_i \int_S \left( \sum_j L_{ij} u_j - f_i \right) \cdot \delta u_i^* ds = 0 \quad (122) \text{ (Aforementioned)}$$

On the other hand, according to eqs. (105), (120), we obtain the following, regarding a sum of differential coefficients of the primal variation $\delta u_j$:
[Formula 735]

$$\sum_j L_{ij} \delta u_j = \sum_k \delta c_k \sum_j L_{ij} \phi_{jk} = \sum_k \delta c_k \lambda_k w_i \phi_{ik}^* \quad (124) \text{ (Aforementioned)}$$

In the primal and dual eigenfunctions in which the same weight $w$ is used for every component, the following is defined:

$$\delta c_k^* \equiv \delta c_k \lambda_k w_i, \quad w_i = w \quad (125) \text{ (Aforementioned)}$$

Therefore, according to eqs. (121), (124), (125), we can recognize the dual variation $\delta u_i^*$ as:

$$\delta u_i^* = \sum_j L_{ij}\delta u_j = \delta\sum_j L_{ij}u_j \quad (126)\ \text{(Aforementioned)}$$

Substituting this equation to eq. (122) gives:

$$\sum_i \int_S \left(\sum_j L_{ij}u_j - f_i\right)\cdot\delta\sum_j L_{ij}u_j ds = 0 \quad (127)\ \text{(Aforementioned)}$$

This equation is equivalent to a case where the functional $\Pi$ is given as

$$\Pi \equiv \sum_i \int_S \left(\sum_j L_{ij}u_j - f_i\right)^2 ds \quad (128)\ \text{(Aforementioned)}$$

and its variation is zero. In other words, the least-squares method is applied as the variational principle.

11. 6. 8 Boundary function

As the boundary function $u_{Bj}$ satisfying the following boundary condition of present problem

$$\begin{array}{ll} u_x = 0, u_y = V & :on\ y = +b \\ u_y = 0 & :on\ y = -b \end{array}, \quad (1720)\ \text{(Aforementioned)}$$

the following three types of the boundary functions are defined:

$$(1) \quad \begin{cases} u_{B1} \equiv u_{Bx} \equiv 0 \\ u_{B2} \equiv u_{By} = V\dfrac{y+b}{2b} \end{cases} \quad (1788)$$

$$(2) \quad \begin{cases} u_{B1} \equiv u_{Bx} \equiv -V\dfrac{x}{a}\left(\dfrac{y-b}{2b}\right)^2 \\ u_{B2} \equiv u_{By} \equiv V\dfrac{y+b}{2b} \end{cases} \quad (1789)$$

$$(3) \quad \begin{cases} u_{B1} \equiv u_{Bx} \equiv V\sin\dfrac{x}{a}\pi\sin\dfrac{y-b}{4b}\pi \\ u_{B2} \equiv u_{By} \equiv V\sin\dfrac{y+b}{4b}\pi \end{cases} \quad (1790)$$

[Formula 736]

We can see that all of the same have a velocity *V* at the top edge as a coefficient and satisfy the boundary condition of eq. (1720).

With use of the boundary function differential term $f_{Bi}$

$$f_{Bi} \equiv \sum_j L_{ij}u_{Bj} \quad , \quad (1696)\ \text{(Aforementioned)}$$

the external force term $f_{Hi}$ is given as:

$$f_{Hi} \equiv f_i - f_{Bi} \qquad (1697) \text{ (Aforementioned)}$$

According to the equation of continuity and the vortex-free condition, the external force term $f_i$ is zero, as is the case with eq. (1719). Therefore, the external force term $f_{Hi}$ is given as

$$f_{Hi} = -f_{Bi} \qquad (1791)$$

This indicates that the external force term is expressed only with the boundary function differential term $f_{Bi}$. Respective $f_{Bi}$ is calculated as follows:

$$(1) \quad \begin{cases} f_{B1} \equiv f_{Bx} \equiv V \dfrac{1}{2b} \\ f_{B2} \equiv f_{By} = 0 \end{cases} \qquad (1792)$$

$$(2) \quad \begin{cases} f_{B1} \equiv f_{Bx} \equiv V \dfrac{2ab - (y-b)^2}{4ab^2} \\ f_{B2} \equiv f_{By} \equiv V \dfrac{x(y-b)}{2ab^2} \end{cases} \qquad (1793)$$

$$(3) \quad \begin{cases} f_{B1} \equiv f_{Bx} = \pi V \left( \dfrac{1}{4b} \cos \dfrac{y+b}{4b} \pi + \dfrac{1}{a} \cos \dfrac{x}{a} \pi \sin \dfrac{y-b}{4b} \pi \right) \\ f_{B2} \equiv f_{By} = -\pi V \dfrac{1}{4b} \sin \dfrac{x}{a} \pi \cos \dfrac{y-b}{4b} \pi \end{cases} \qquad (1794)$$

Focusing on the term $f_{By}$ of (1), (3), $f_{By} = 0$ at the bottom edge ($y = -b$) on the wall surface, whereas in the case of (2), $f_{By} \neq 0$.
[Formula 737]

On the other hand, all of the dual components of the mixed-type eigenfunctions satisfy $\phi_2^* \equiv \phi_y^* = 0$ at the bottom edge. Therefore, in the case of (2), errors remain necessarily in the vortex distribution at the bottom edge. Actually, $u_{Bj}$ is given to the three types of boundary functions and calculation is performed by the mixed-type eigenfunction method. As a result, while (1), (3) give excellent results, only (2) still has errors.

To execute an analysis that does not leave errors on the boundary, it is necessary to give a boundary function $u_{Bj}$ suitable for a boundary value of a dual eigenfunction.

11. 6. 9 Calculation example

Shown below are results obtained by using the boundary function of eq. (1788) in Section 11. 6. 8 (1), using the mixed-type eigenfunctions satisfying the fifth boundary condition in Section 11. 6. 6, and applying the mixed-type eigenfunction method in Section 11. 6. 7. Here, the velocity is made dimensionless by the velocity of flow $V$.

A state of the dimensionless velocity in a square region, with the mode number $m \times n$ of the eigenfunction being set to at most $3 \times 3$, is shown in Fig. 68.

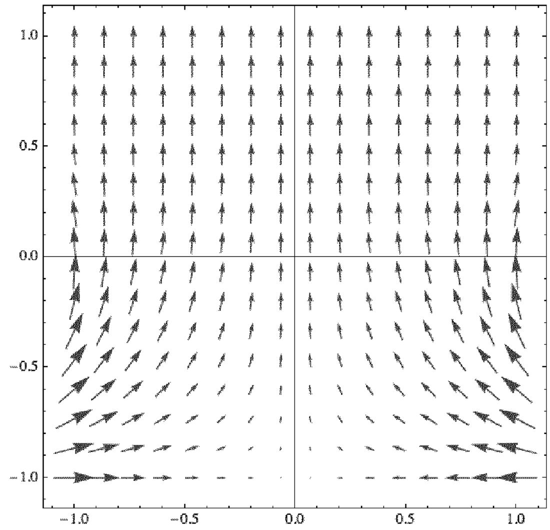


Fig. 68 Velocity Distribution using 3×3 Modes by

Mixed-Type Eigenfunction Method.

[Formula 738]

In Fig. 68, we can see a state in which streams of fluid flowing from the left and right edges collide each other on the center line, turn upward and join, thereby becoming uniform flow at the top edge.

A state of the dimensionless velocity, with the mode number $m \times n$ of the eigenfunction being set to at most $4 \times 4$, is shown in Fig. 69.

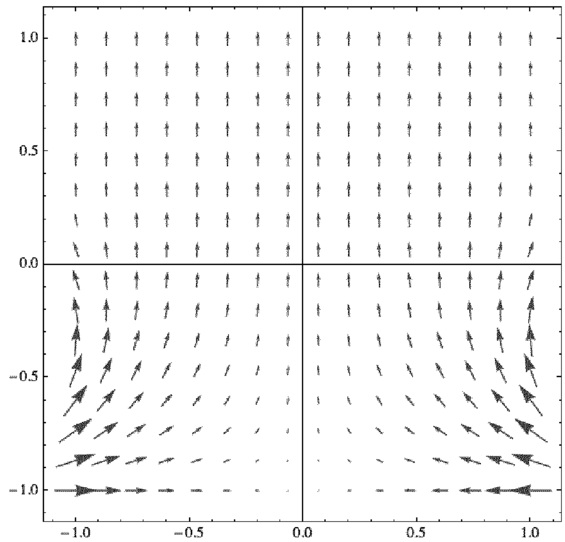


Fig. 69 Velocity Distribution using 4×4 Modes by

Mixed-Type Eigenfunction Method.

In Fig. 69, countercurrents occur at the left and right edges. More specifically, while the fluid flows into the region in the vicinities of the bottom edge, the fluid flows out in the vicinities of the middle area. We can see that this results in that the uniform flow at the top edge is stabilized.

[Formula 739]

On the other hand, we can also see that as compared with the velocity at the upper end, the velocity of flow at the lower end increases.

A state of the dimensionless velocity, with the mode number $m \times n$ of the eigenfunction being set to at most $6 \times 6$, is shown in Fig. 70.

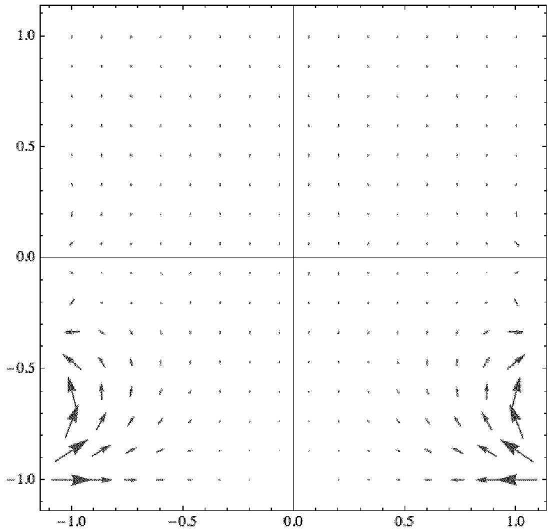


Fig. 70 Velocity Distribution using 6x6 Modes by

Mixed-Type Eigenfunction Method.

In Fig. 70, the countercurrents at the left and right edges are stronger. More specifically, we can see that as compared with the velocity of flow at the top edge, the inlet velocity of flow at the bottom edge and the outlet velocity of flow in the middle area increase. We can see that this results in that the uniform flow at the top edge is stabilized.

[Formula 740]

11. 6. 10 Comparison with analytical solution

In problems of hydrodynamics, the boundary element method is used often. As in the example of Section 11. 6. 9, a problem such that two velocity components as boundary conditions are given to one boundary (condition for the top edge) or two velocity components are unknown (condition for the left and right edges) cannot be solved by the contemporary boundary element method.

However, it is possible to perform equivalent calculation by superimposing analytical solutions, and to verify the calculation result of Section 11. 6. 9.

The combinations of the solutions of harmonic equations that the velocity potential $\phi$ should satisfy are given as:

$$\phi(x,y) \equiv X(x)\cdot Y(y) = \begin{pmatrix} \sinh vx \\ \cosh vx \end{pmatrix} \times \begin{pmatrix} \sin vy \\ \cos vy \end{pmatrix} \qquad (1571) \text{ (Aforementioned)}$$

From these combinations, two functions that satisfy the following boundary conditions are obtained:

$$u_x \equiv \frac{\partial \phi}{\partial x} = 0 \quad : on\ y = +b$$
$$u_y \equiv \frac{\partial \phi}{\partial y} = 0 \quad : on\ y = -b \qquad (1795)$$

Let *n* be an integer, and define the value of *v* as:

$$v_n = \frac{2n-1}{4b}\pi \qquad (1796)$$

Then, we obtain the foregoing two functions as follows:

$$\phi = \cosh \nu_n x \cos \nu_n \left(y + b\right) \tag{1797}$$

$$\phi = \sinh \nu_n x \cos \nu_n \left(y + b\right) \tag{1798}$$

Among these two equations, eq. (1797), which represents horizontally symmetric flow, is used.

Superimposing the equations (1797) with respect to various integers *n* gives the velocity potential Φ for the whole as follows:

$$\Phi \equiv \sum_n A_n \cosh \nu_n x \cos \nu_n \left(y + b\right) \tag{1799}$$

Here, $A_n$ represents a coefficient. The velocity in the y direction indicated by the velocity potential Φ of this equation is given as:

$$u_y \equiv \frac{\partial \Phi}{\partial y} = -\sum_n A_n \nu_n \cosh \nu_n x \sin \nu_n \left(y + b\right) \tag{1800}$$

[Formula 741]

In order to satisfy the boundary condition in which the velocity is *V* at the top edge, *y* = *b* is given to this equation, and the equation is transformed to:

$$V = -\sum_n A_n \nu_n \cosh \nu_n x \sin 2\nu_n b \tag{1801}$$

According to eq. (1796), this equation is further transformed to:

$$V = \sum_n A_n \frac{2n-1}{4b} \pi \left(-1\right)^n \cosh \nu_n x \tag{1802}$$

Let the coefficient $A_n$ satisfy:

$$A_n \equiv c_n bV \tag{1803}$$

Then, making the equation (1802) dimensionless gives:

$$1 = \sum_n c_n \frac{2n-1}{4} \pi \left(-1\right)^n \cosh \nu_n x \tag{1804}$$

It is possible to multiply this equation by cosh $\nu_n x$ with respect to various integers *n*, and integrating the same so as to create a simultaneous linear equation, thereby deciding the coefficient $c_n$. This is a technique generally called "the method of weighted residual". Further, this is also the least-squares method having cosh $\nu_n x$ as a basis function.

With use of the coefficient $c_n$ decided in this way, the whole velocity potential Φ is given as:

$$\Phi \equiv \sum_n c_n bV \cosh \nu_n x \cos \nu_n \left(y + b\right) \tag{1805}$$

Velocity components are determined from this equation, and are divided by the velocity *V*, thereby being made dimensionless. The results are shown below.

A state of the dimensionless velocity in a region that is square, with the mode number *n* being set to at most 3, is shown in Fig. 71.

[Formula 742]

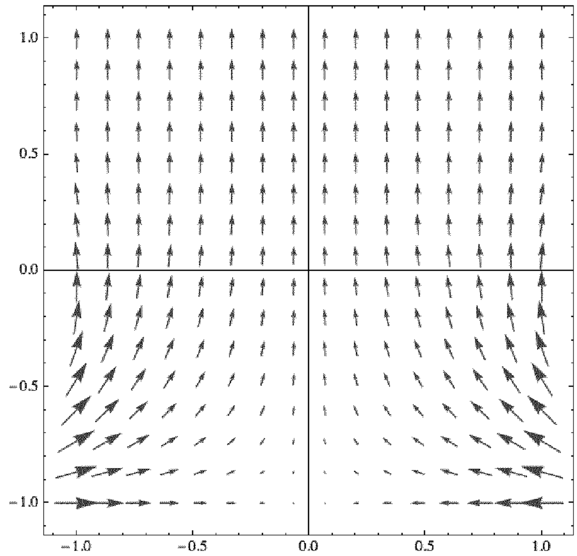

Fig. 71 Velocity Distribution using 3 Modes by Analytical

Solution.

Fig. 68 is very similar to Fig. 71. We can see a state in which streams of fluid flowing from the left and right edges collide each other on the center line, turn upward and join, thereby becoming uniform flow at the top edge.
A state of the dimensionless velocity, with the mode number *n* being set to at most 4, is shown in Fig. 72

[Formula 743]

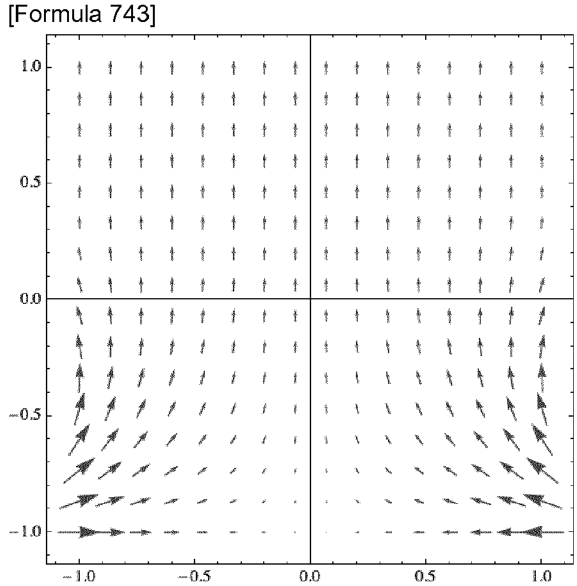

Fig. 72 Velocity Distribution using 4 Modes by Analytical

Solution.

Fig. 69 is very similar to Fig. 72. Countercurrents occur at the left and right edges. More specifically, while the

fluid flows into the region in the vicinities of the bottom edge, the fluid flows out in the vicinities of the middle area. We can see that this results in that the uniform flow at the top edge is stabilized. On the other hand, we can also see that as compared with the velocity of low at the top edge, the inlet velocity of flow at the bottom edge is greater.

A state of the dimensionless velocity, with the mode number *n* being set to at most 8, is shown in Fig. 73.

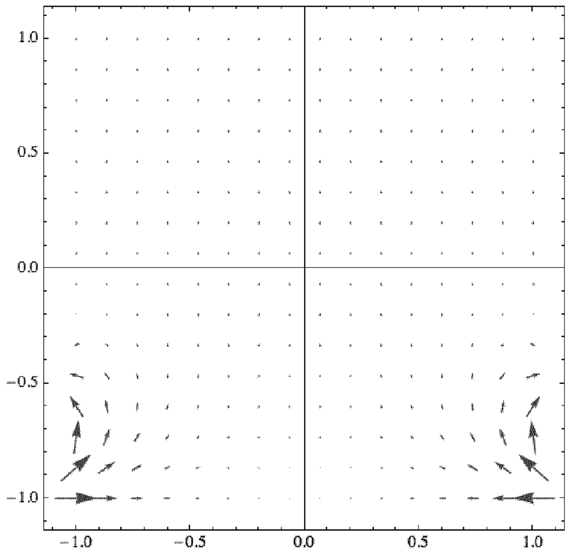


Fig. 73 Velocity Distribution using 8 Modes by Analytical

Solution.

[Formula 744]

Fig. 70 is very similar to Fig. 73. The countercurrents at the left and right edges are stronger. More specifically, we can see that as compared with the velocity of flow at the top edge, the inlet velocity of flow at the bottom edge and the outlet velocity of flow in the middle area increase. We can see that this results in that the uniform flow at the top edge is stabilized.

Comparing Figs. 70 to 73, the state of flow significantly varies with the number of modes used. Every solution is obtained by superimposing the velocity potentials satisfying the boundary condition equation (1795), thereby providing a physically feasible flow field, but differences exist in the uniformity at the top edge. How different the flow fields are regarding the uniformity of velocity distribution at the top edge is studied. Let the y-direction velocity at the upper end obtained from the velocity potential of eq. (1805) using *N* modes be $V_N$, and an error with respect to the velocity of flow *V* is defined as:

$$err \equiv \frac{V - V_N}{V} \times 100 \quad [\%] \qquad (1806)$$

Regarding every flow field, error distribution at the top edge thus determined is shown.

[Formula 745]

Fig. 71 shows the flow field when *N* = 3. The error distribution *err* at the top edge is shown in Fig. 74.

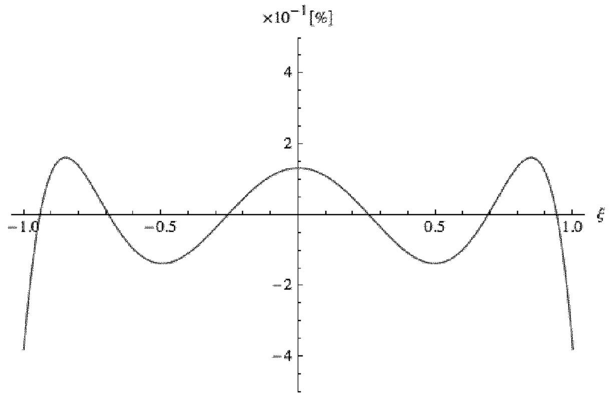


Fig. 74 Error Distribution at Top Edge by using 3 Modes.

Fig. 72 shows the flow field when *N* = 4. The error distribution *err* at the top edge is shown in Fig. 75.

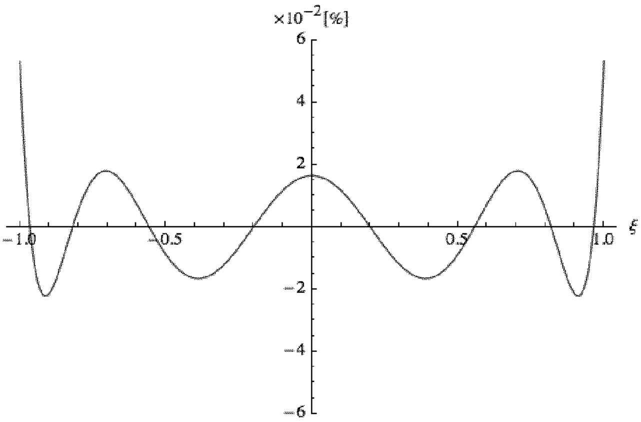


Fig. 75 Error Distribution at Top Edge by using 4 Modes.

[Formula 746]

Fig. 73 shows a flow field when *N* = 8. The error distribution *err* at the top edges is shown in Fig. 76.

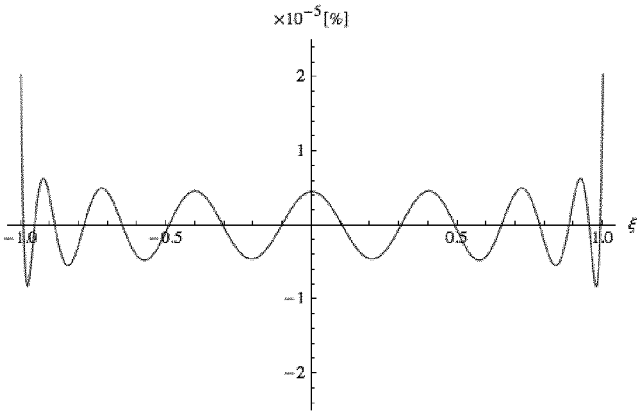


Fig. 76 Error Distribution at Top Edge by using 8 Modes.

Comparing Figs. 74 to 76, we can see that as more modes are used, the velocity distribution at the top edge is closer to strictly uniform flow. The error when 3 modes are used (Fig. 74) is on the order of $10^{-1}$ [%], and the error when 8 modes are used (Fig. 76) is on the order of $10^{-5}$[%]. The analytical solutions indicate that the state of the flow field varies significantly as an originally slight error is made further smaller with use of a high-order mode. Conversely speaking, the state of flow-in and flow-out to and from the left and right edges is significantly different depending on whether roughly uniform flow is to be achieved or strictly uniform flow is to be achieved.

Further, the results determined by the mixed-type eigenfunction method (Figs. 68 to 70) also indicated that as the number of used modes increases, changes similar to those described in the present section occur.
These can be considered to prove the calculation results shown in Section 11. 6. 9 is reasonable, which shows the effectiveness of the mixed-type eigenfunction method.
[Formula 747]

11. 7 Boundary condition of finite element method

This section should better be included in Section 11. 3.

11. 7. 1 User input of boundary condition

In Sections 8. 11, 9. 2, and 11. 3. 11, it is described that the nodal displacement and the nodal forces are divided into a known part and an unknown part.
The following description provides supplementary explanation about what the user should input into a program and how the user should deal with a self-adjoint problem and a non-self-adjoint problem.
In usual processing used in the currently-practiced finite element method program, what a user inputs is only information of the known part of the nodal displacement and the known part of the nodal external force .
This is because the object is limited to a self-adjoint problem.
In contrast, with respect to a non-self-adjoint problem, there are two processing methods.

(1) Degrees of freedom that a user does not input in accordance with the currently-practiced finite element method program are all recognized as known parts of the nodal external force, and the value of zero is given internally. Therefore, the user has to separately input degrees of freedom to be set for the unknown part of the nodal displacement and the unknown part of the nodal external force.
(2) All of degrees of freedom that the user does not input are treated as unknown parts. Therefore, the user should not omit inputting the value of zero, in the case where the value of zero is to be given to the nodal external force.

In order to make the sense of use closer to the sense of use of the currently-practiced finite element method , the method (1) is preferable.
[Formula 748]
The following describes the background of the forgoing description. The both sides of the following equation (250) showing the boundary term *R* is divided by G, and the order of F and U is inverted:

$$R \equiv \left\{ \underset{1\times n}{\{F/G\}^T} \quad \underset{1\times n}{\{-U\}^T} \right\} \left\{ \begin{array}{c} \underset{n\times 1}{\{U^*\}} \\ \underset{n\times 1}{\{F^*/G\}} \end{array} \right\} \quad (250) \text{ (Aforementioned)}$$

Then, we obtain:

$$G \cdot R \equiv \left\{ \underset{1\times n}{\{U\}^T} \quad \underset{1\times n}{\{F\}^T} \right\} \left\{ \begin{array}{c} \underset{n\times 1}{\{-F^*\}} \\ \underset{n\times 1}{\{U^*\}} \end{array} \right\} \quad (1807)$$

Dividing the nodal displacement *U* into a known part $U_b$ and an unknown part $U_v$ and rearranging the same gives:

$$\underset{n\times 1}{\{U\}} \equiv \begin{Bmatrix} \underset{n_{U_b}\times 1}{\{U_b\}} \\ \underset{n_{U_v}\times 1}{\{U_v\}} \end{Bmatrix} \tag{1808}$$

The dual nodal external force $F^*$ has to be rearranged in accordance with this. The dual nodal external force corresponding to the known part $U_b$ is an unknown part, and let the same be $F_v^*$. The dual nodal external force corresponding to the unknown part $U_v$ is a known part, and let the same be $F_b^*$. As a result, we obtain:

$$\underset{n\times 1}{\{F^*\}} \equiv \begin{Bmatrix} \underset{n_{F_v^*}\times 1}{\{F_v^*\}} \\ \underset{n_{F_b^*}\times 1}{\{F_b^*\}} \end{Bmatrix} \tag{1809}$$

Respective numbers are as follows, as is the case with eq. (252):

$$\begin{aligned} n_{F_v^*} &= n_{U_b} \\ n_{F_b^*} &= n_{U_v} \end{aligned} \tag{1810}$$

Similarly, Dividing the nodal external force F into a known part $F_b$ and an unknown part $F_v$ and rearranging the same gives:
[Formula 749]

$$\underset{n\times 1}{\{F\}} \equiv \begin{Bmatrix} \underset{n_{F_b}\times 1}{\{F_b\}} \\ \underset{n_{F_v}\times 1}{\{F_v\}} \end{Bmatrix} \tag{1811}$$

The dual nodal displacement $U^*$ has to be rearranged in accordance with this. The dual nodal displacement corresponding to the known part $F_b$ is an unknown part, and let the same be $U_v^*$. The dual nodal displacement corresponding to the unknown part $F_v$ is a known part, and let the same be $U_b^*$. As a result, we obtain:

$$\underset{n\times 1}{\left\{U^*\right\}} \equiv \left\{\begin{matrix} \underset{n_{U_v^*}\times 1}{\left\{U_v^*\right\}} \\ \underset{n_{U_b^*}\times 1}{\left\{U_b^*\right\}} \end{matrix}\right\} \tag{1812}$$

Respective numbers are as follows, as is the case with eq. (252):

$$\begin{aligned} n_{U_v^*} &= n_{F_b} \\ n_{U_b^*} &= n_{F_v} \end{aligned} \tag{1813}$$

Substituting eqs. (1808), (1809), (1811), and (1812) into eq. (1807) gives:

$$G \cdot R \equiv \left\{ \underset{1\times n_{U_b}}{\left\{U_b\right\}^T} \quad \underset{1\times n_{U_v}}{\left\{U_v\right\}^T} \quad \underset{1\times n_{F_b}}{\left\{F_b\right\}^T} \quad \underset{1\times n_{F_v}}{\left\{F_v\right\}^T} \right\} \left\{\begin{matrix} \underset{n_{F_v^*}\times 1}{\left\{-F_v^*\right\}} \\ \underset{n_{F_b^*}\times 1}{\left\{-F_b^*\right\}} \\ \underset{n_{U_v^*}\times 1}{\left\{U_v^*\right\}} \\ \underset{n_{U_b^*}\times 1}{\left\{U_b^*\right\}} \end{matrix}\right\} \tag{1814}$$

This is equivalent to eq. (251) as follows:
[Formula 750]

$$R \equiv \left\{ \begin{bmatrix} \underset{1\times n_{F_b}}{\{F_b/G\}^T} & \underset{1\times n_{F_v}}{\{F_v/G\}^T} & \underset{1\times n_{U_b}}{\{-U_b\}^T} & \underset{1\times n_{U_v}}{\{-U_v\}^T} \end{bmatrix} \begin{bmatrix} \underset{n_{U_v^*}\times 1}{\{U_v^*\}} \\ \underset{n_{U_b^*}\times 1}{\{U_b^*\}} \\ \underset{n_{F_v^*}\times 1}{\{F_v^*/G\}} \\ \underset{n_{F_b^*}\times 1}{\{F_b^*/G\}} \end{bmatrix} \right\} \quad (251) \text{ (Aforementioned)}$$

If the known parts $F_b$,$U_b$ are replaced with zero, this means that a homogeneous boundary condition is given. Here, by a condition such that the boundary term $R$ is zero, a homogeneous adjoint boundary condition is obtained, and $F_b^*$,$U_b^*$ become zero. In the case where the combinations of the known parts $F_b$, $F_b^*$ and the known parts $U_b$, $U_b^*$ coincide, this is a self-adjoint boundary condition. In the case where they do not coincide, this is a non-self-adjoint boundary condition.

In order to clearly show the equation (1814) when the self-adjoint boundary condition is obtained, let the number of the known parts $U_b$ be $n_1$, and let the number of known part $F_b$ be $n_2$, and then, according to eqs. (1810) and (1813), we obtain:

$$\begin{aligned} n_1 &= n_{U_b} = n_{F_v^*} = n_{F_v} = n_{U_b^*} \\ n_2 &= n_{F_b} = n_{U_v^*} = n_{U_v} = n_{F_b^*} \end{aligned} \quad (1815)$$

Reflecting this on eq. (1814) gives:

$$G \cdot R \equiv \left\{ \begin{bmatrix} \underset{1\times n_1}{\{U_b\}^T} & \underset{1\times n_2}{\{U_v\}^T} & \underset{1\times n_2}{\{F_b\}^T} & \underset{1\times n_1}{\{F_v\}^T} \end{bmatrix} \begin{bmatrix} \underset{n_1\times 1}{\{-F_v^*\}} \\ \underset{n_2\times 1}{\{-F_b^*\}} \\ \underset{n_2\times 1}{\{U_v^*\}} \\ \underset{n_1\times 1}{\{U_b^*\}} \end{bmatrix} \right\} \quad (1816)$$

[Formula 751]

This equation shows that when, regarding each node, only either one of the displacement and the external force is given, the boundary term $R$ becomes zero. This therefore makes it clear that the format of the currently-practiced finite element method is constructed on the premise of the self-adjoint boundary condition. When a user inputs a known part of a nodal displacement, this is considered to mean that the designation is completed regarding the nodal displacement, the degree of freedom of the known part $U_b$ is fixed and the number $n_1$ is settled. At the same time, regarding the nodal external force, the degree of freedom of the unknown part $F_v$ is settled. According to the other degrees of freedom, the degrees of freedom of the known part $F_b$ of the nodal external force and that of the unknown part $U_v$ of the nodal displacement are settled, and the number of the same is given as $n_2$=$n$-$n_1$. The value of $F_b$ is set to zero, so that no

external force is assumed to act. If there is a known part of a nodal external force input by a user, the part assumed to be zero is changed to the value thus input by the user. Through the foregoing process, information necessary for calculation is prepared.

In the case of a non-self-adjoint problem, two handling methods are applicable.

The above-described method (1) reflects an unknown part designated by a user, in addition to the above-described process of the currently-practiced finite element method. The currently-practiced finite element method does not have a function of designating an unknown part.

The above-described method (2) is configured such that all the designation of known parts is performed by a user, and an unknown part is determined as a remaining degree of freedom.

[Formula 752]

11. 7. 2 Determination of self-adjointness of boundary condition

In the finite element method using conventional elements, the equation of motion (434) for the whole system is recognized, with use of a unit matrix [*I*], as:

$$\underset{n\times n}{\left[K\right]}\underset{n\times 1}{\left\{U\right\}}=\underset{n\times n}{\left[I\right]}\underset{n\times 1}{\left\{F\right\}} \qquad (441) \text{ (Aforementioned)}$$

Then, we obtain:

$$\left[\underset{n\times n}{\left[K\right]}\ \underset{n\times n}{\left[-I\right]}\right]\left\{\begin{matrix}\underset{n\times 1}{\left\{U\right\}}\\ \underset{n\times 1}{\left\{F\right\}}\end{matrix}\right\}=\underset{n\times 1}{\left\{0\right\}} \qquad (442) \text{ (Aforementioned)}$$

Combining the known part $U_b$ of the nodal displacement U and the known part $F_b$ of the nodal external force F, we define the nodal known part $s_b$ as:

$$\underset{n_b\times 1}{\left\{s_b\right\}}\equiv\left\{\begin{matrix}\underset{n_{U_b}\times 1}{\left\{U_b\right\}}\\ \underset{n_{F_b}\times 1}{\left\{F_b\right\}}\end{matrix}\right\} \qquad (443) \text{ (Aforementioned)}$$

Combining the unknown part $U_v$ of the nodal displacement U, and the unknown part $F_v$ of the nodal external force F, we define the nodal unknown part $s_v$ as:

$$\underset{n_v\times 1}{\left\{s_v\right\}}\equiv\left\{\begin{matrix}\underset{n_{U_v}\times 1}{\left\{U_v\right\}}\\ \underset{n_{F_v}\times 1}{\left\{F_v\right\}}\end{matrix}\right\} \qquad (444) \text{ (Aforementioned)}$$

From the knowledge of eq. (1816), in the case where degrees of freedom of $U_b$ and $F_v$ coincide and degrees of freedom of $F_b$ and $U_v$ coincide, this is a self-adjoint boundary condition. In this case, if analysis is performed by eq. (436), calculation time is shorter. Therefore, branching the calculation routine via a self-adjoint determination routine enables more efficient calculation. It should be noted that Section 9.4 shows that a plurality of solutions are obtained in the case of a non-self-adjoint boundary condition, but in the case where a unique solution is obtained, there is no necessity to apply the least-squares method.

12. End
12. 1 End
12. 1. 1 End
End

## Claims

1. An information processing device comprising:

   an initial equation decision unit that reads data indicating a structure of a system as an object of processing and properties of a constituent element of the system, and decides n initial equations based on the read data, the initial equations representing the system and including a variable that represents a physical quantity to be determined;
   a boundary condition decision unit that reads a value that represents the physical quantity as data indicating a boundary condition, and decides a boundary condition; and
   a calculation unit that transforms the n initial equations into equations having 2n variables or equation including 2n equations; decides a known part that includes variables that are made known by the boundary condition and an unknown part that includes unknown variables, in the transformed equations having the 2n variables or the transformed equation including the 2n equations; and calculates a solution of the equations with regard to the unknown part.

2. The information processing device according to claim 1,
   wherein the initial equation decision unit decides n differential equations having the variable that represents the physical quantity, and
   the calculation unit generates data indicating the 2n equations, using differential operators of the differential equations decided by the initial equation decision unit and adjoint differential operators decided according to the differential operators, and calculates solutions of the 2n equations, thereby outputting the physical quantity, the physical quantity being at least one.

3. The information processing device according to claim 1,
   wherein the initial equation decision unit decides n equations as the initial equations, the n-equations including two n-dimensional variable vectors that indicate physical quantities at nodes of the constituent element of the system, and an n-row matrix,
   the boundary condition decision unit is able to decide a boundary condition in which, regarding the variable vector, the number of degrees of freedom of variables whose values are known, and the number of degrees of freedom of variables whose values are unknown, are different, and
   the calculation unit generates a 2n-dimensional vector based on the two variable vectors; transforms the n-row matrix into a 2n-column matrix based on variables of the 2n-dimensional vector; decides a known part and an unknown part among the variables of the 2n-dimensional vector, the known part including variables that are made known by the boundary condition, the unknown part containing unknown variables, degrees of freedom of the known part and the unknown part being not necessarily identical to each other; transforms the 2n-column matrix and the 2n-dimensional vector into a form such that the variables of the unknown part are expressed by the variables of the known part; and calculates the variables of the unknown part by using the transformed matrix.

4. An information processing device that, in the case where there are a plurality of solutions calculated by the information processing device according to any one of claims 1 to 3, decides a mode coefficient with respect to homogeneous solutions by using a functional $\Pi$ of the following equation so that variation of the functional $\Pi$ is zero, and determines a solution by using the decided mode coefficient:

   [Formula 753]

$$\Pi \equiv \sum_i \int_S \left( \sum_j L_{ij} u_j - f_i \right)^2 ds$$

   where S represents an internal region of the system, $L_{ij}$ represents a differential operator of a differential equation

that the system should satisfy, and $f_i$ and $u_i$ represent variables representing physical quantities.

**5.** The information processing device according to claim 4 that receives input of a value in the vicinities of the decided mode coefficient from a user, calculates a solution using the mode coefficient having the input value, and outputs the solution or information obtained from the solution.

**6.** An information processing device comprising:

an initial equation decision unit that reads data indicating a structure of a system as an object of processing and properties of a constituent element of the system, and decides differential equations as initial equations based on the read data, the differential equations representing the system and including a variable that represents a physical quantity to be determined;
a boundary condition decision unit that reads a value that represents the physical quantity as data indicating a boundary condition, and decides a boundary condition; and
an adjoint boundary condition decision unit that, in the case where dual variables the number of which is the same as that of the variables of the differential equations and dual differential equations are defined, calculates a boundary term obtained by partial integration of a sum of integration, that is, an inner product, of a result of the differential operators of the differential equations acting on the variables with the dual variables, and decides an adjoint boundary condition that is a condition of dual variables that makes the boundary term zero under the boundary condition; and
a determination unit that outputs a result of comparison between the adjoint boundary condition and the boundary condition,
wherein the inner product of the result of the differential operators of the differential equations acting on the variables with the dual variables is equal to an inner product of the variables with a result of the differential operators of the dual differential equations acting on the dual variables.

**7.** The information processing device according to claim 6,
wherein whether the boundary condition and the adjoint boundary condition coincide or not is determined by using the following equation, according to whether combinations of respective known parts Fb and Ub of a node force F and a node displacement U, and combinations of respective known parts Fb* and Ub* of a dual node force F* and a dual node displacement U* coincide with each other:

[Formula 754]

$$\frac{R}{G} = \left\{ \underset{1\times n_{U_b}}{\{U_b\}^T} \quad \underset{1\times n_{U_v}}{\{U_v\}^T} \quad \underset{1\times n_{F_b}}{\{F_b\}^T} \quad \underset{1\times n_{F_v}}{\{F_v\}^T} \right\} \left\{ \begin{array}{c} \underset{n_{U_v^*}\times 1}{\{-F_v^*\}} \\ \underset{n_{U_b^*}\times 1}{\{-F_b^*\}} \\ \underset{n_{U_v^*}\times 1}{\{U_v^*\}} \\ \underset{n_{U_b^*}\times 1}{\{U_b^*\}} \end{array} \right\} \qquad (1814)$$

**8.** An information processing device comprising:

a setting unit that decides n initial equations expressed by an n-row matrix and two n-dimensional variables that represent physical quantities in a plurality of elements of a system as an object of processing ;
a boundary condition decision unit that reads a value that represents the physical quantity as data indicating a boundary condition, and decides a boundary condition; and
a determination unit that decides a known part and an unknown part, the known part including a variable that is made known by the boundary condition among the two n-dimensional variables, an unknown part including an unknown variable among the same; and in the case where a degree of freedom of the unknown part of one variable is not equal to a degree of freedom of the known part of the other variable, outputs information notifying that the boundary condition is non-self-adjoint.

**9.** An information processing device comprising:

a setting unit that sets an original differential operator of an analysis object and a boundary condition of variables;
an adjoint boundary condition calculation unit that calculates an adjoint boundary condition from the boundary condition; and
a non-self-adjoint calculation unit that calculates a primal differential operator and a dual differential operator from the original differential operator, and determines a primal eigenfunction and a dual eigenfunction by using primal simultaneous differential equations and dual simultaneous differential equations, as well as the boundary condition and the adjoint boundary condition, thereby calculating a solution of simultaneous differential equations.

**10.** The information processing device according to claim 9, further comprising:

a self-adjoint determination unit that determines whether the boundary condition and the adjoint boundary condition coincide with each other; and
a self-adjoint calculation unit that, in the case where it is determined that the boundary condition and the adjoint boundary condition coincide with each other, calculates a solution of a self-adjoint problem by determining a self-adjoint eigenfunction of the self-adjoint problem from an original differential operator,
wherein in the case where it is determined that the boundary condition and the adjoint boundary condition do not coincide with each other, the non-self-adjoint calculation unit determines a primal eigenfunction and a dual eigenfunction by using the primal simultaneous differential equations and the dual simultaneous differential equations, as well as the boundary condition and the adjoint boundary condition, thereby calculating a solution of simultaneous differential equations.

**11.** The information processing device according to claim 9 or 10,
wherein the solution uj of the analysis object is expressed by a sum ($u_{Bj}+u_{Hj}$) of a term $u_{Bj}$ that satisfies a inhomogeneous boundary condition and a term $u_{Hj}$ that satisfies a homogeneous boundary condition, and
in the case where the primal eigenfunction is given as $\varphi_j$, and the dual eigenfunction is given as $\varphi_j$*, the primal variable , the dual variable, the self-adjoint differential equation , the primal simultaneous differential equations, and the dual simultaneous differential equations are expressed by the following equations:
[Formula 4]

Primal displacement:

$$u_{Hj} \equiv \sum_k c_k \phi_{jk}$$

Dual displacement:

$$u^*_{Hj} \equiv \sum_k c^*_k \phi^*_{jk}$$

Self-adjoint differential equation:

$$\sum_j L_{ij} \phi_j = \lambda w_i \phi_i$$

Primal simultaneous differential equations:

$$\sum_j L_{ij} \phi_j = \lambda w_i \phi^*_i$$

$$\sum_j L_{ij} \phi_j = \lambda w_i \phi^*_i$$

Dual simultaneous differential equations:

$$\sum_j L_{ji}^* \phi_j^* = \lambda w_i \phi_i$$

**12.** The information processing device according to any one of claims 1 to 3 and 6 to 10, wherein the boundary condition decision unit or the setting unit receives input of information indicating a part whose value is unknown of a variable that represents the physical quantity, from a user, and decides a boundary condition using this information.

**13.** An information processing method comprising:

an initial equation deciding step wherein a computer reads data indicating a structure of a system as an object of processing and properties of a constituent element of the system, and decides n initial equations based on the read data, the initial equations representing the system and including a variable that represents a physical quantity to be determined;
a boundary condition deciding step wherein a computer reads a value that represents the physical quantity as data indicating a boundary condition, and decides a boundary condition; and
a calculating step wherein a computer transforms the n initial equations into equations having 2n variables or equation including 2n equations; decides a known part that includes variables that are made known by the boundary condition and an unknown part that includes unknown variables, in the transformed equations having the 2n variables or the transformed equation including the 2n equations; and calculates a solution of the equations with regard to the unknown part.

**14.** An information processing program that causes a computer to execute:

initial equation deciding processing of reading data indicating a structure of a system as an object of processing and properties of a constituent element of the system, and deciding n initial equations based on the read data, the initial equations representing the system and including a variable that represents a physical quantity to be determined;
boundary condition deciding processing of reading a value that represents the physical quantity as data indicating a boundary condition, and deciding a boundary condition; and
calculating processing of transforming the n equations into equations having 2n variables or equation including 2n equations; deciding a known part that includes variables that are made known by the boundary condition and an unknown part that includes unknown variables, in the transformed equations having the 2n variables or the transformed equation including the 2n equations; and calculating a solution of the equations with regard to the unknown part.

**15.** An information processing method comprising:

an initial equation deciding step wherein a computer reads data indicating a structure of a system as an object of processing and properties of a constituent element of the system, and decides n differential equations as initial equations based on the read data, the differential equations representing the system and including a variable that represents a physical quantity to be determined;
a boundary condition deciding step wherein a computer reads a value that represents the physical quantity as data indicating a boundary condition, and decides a boundary condition; and
an adjoint boundary condition deciding step wherein, in the case where dual variables the number of which is the same as that of the variables of the differential equations and dual differential equations are defined, a computer calculates a boundary term obtained by partial integration of a sum of integration, that is, an inner product, of a result of the differential operators of the differential equations acting on the variables with the dual variables, and decides an adjoint boundary condition that is a condition of dual variables that makes the boundary term zero under the boundary condition,; and
an output step wherein a computer outputs a result of comparison between the adjoint boundary condition and the boundary condition,
wherein the inner product of the result of the differential operators of the differential equations acting on the variables with the dual variables is equal to an inner product of the variables with a result of the differential operators of the dual differential equations acting on the dual variables.

**16.** An information processing program that causes a computer to execute:

initial equation deciding processing of reading data indicating a structure of a system as an object of processing and properties of a constituent element of the system, and deciding n differential equations as initial equations based on the read data, the differential equations representing the system and including a variable that represents a physical quantity to be determined;

boundary condition deciding processing of reading a value that represents the physical quantity as data indicating a boundary condition, and deciding a boundary condition; and

adjoint boundary condition deciding processing of, in the case where dual variables the number of which is the same as that of the variables of the differential equations and the dual simultaneous differential equations are defined, calculating a boundary term obtained by partial integration of a sum of integration, that is, an inner product, of a result of the differential operators of the differential equations acting on the variables with the dual variables, and deciding an adjoint boundary condition that is a condition of dual variables that makes the boundary term zero under the boundary condition; and

output processing of outputting a result of comparison between the adjoint boundary condition and the boundary condition,

wherein the inner product of the the result of the differential operators of the differential equations acting on the variables with the dual variables is equal to an inner product of the variables with a result of the differential operators of the dual differential equations acting on the dual variables.

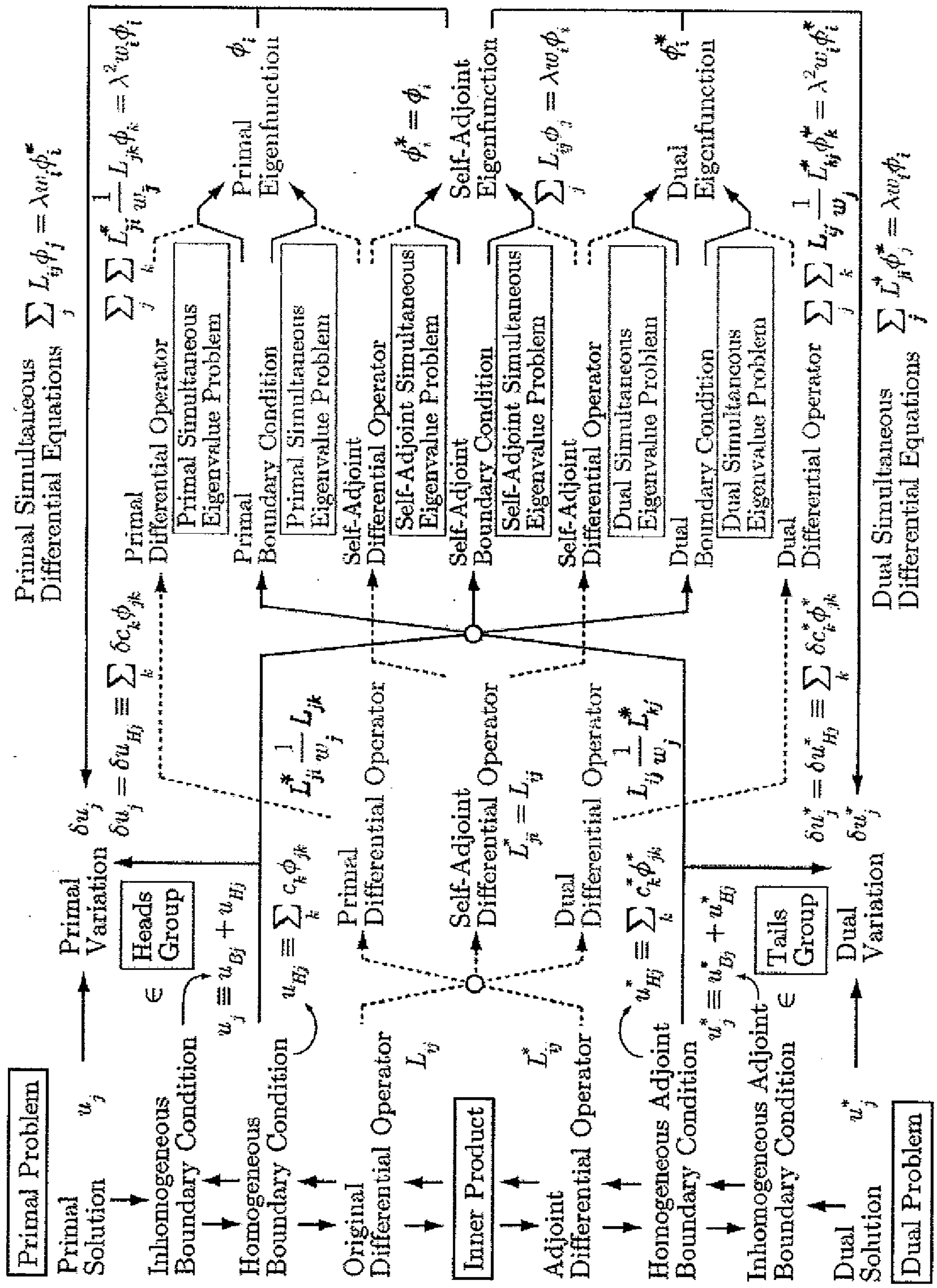

Primal Problem
Primal Solution
Inhomogeneous Boundary Condition
Homogeneous Boundary Condition
Original Differential Operator
Inner Product
Adjoint Differential Operator
Homogeneous Adjoint Boundary Condition
Inhomogeneous Adjoint Boundary Condition
Dual Solution
Dual Problem
Primal Variation
Heads Group
Tails Group
Dual Variation
Primal Differential Operator
Self-Adjoint Differential Operator
Dual Differential Operator
Primal Simultaneous Differential Equations
Dual Simultaneous Differential Equations
Primal Boundary Condition
Self-Adjoint Boundary Condition
Dual Boundary Condition
Primal Simultaneous Eigenvalue Problem
Self-Adjoint Simultaneous Eigenvalue Problem
Dual Simultaneous Eigenvalue Problem
Primal Eigenfunction
Self-Adjoint Eigenfunction
Dual Eigenfunction


FIG. 1

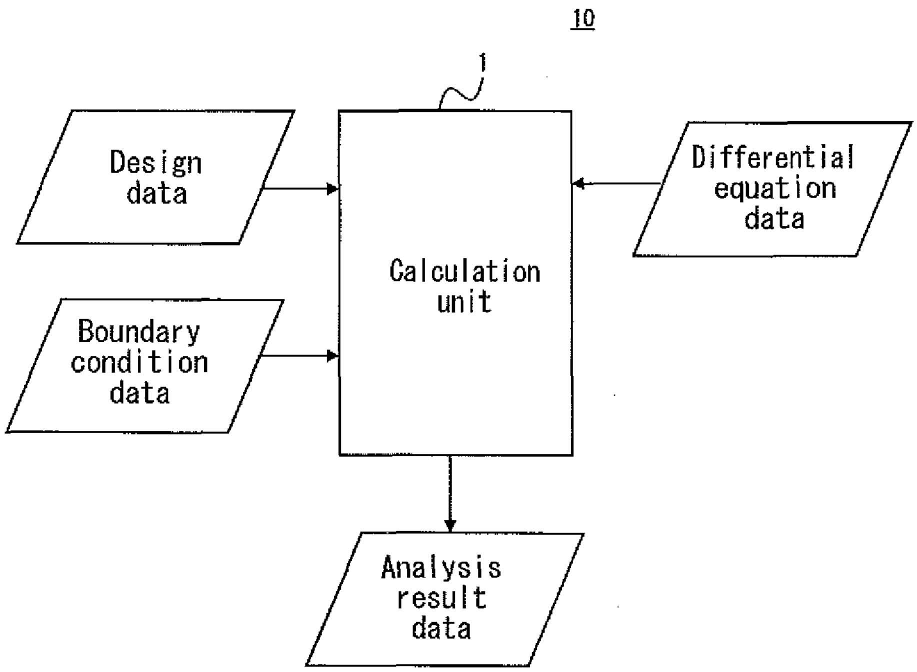
10
1
Design data
Boundary condition data
Calculation unit
Differential equation data
Analysis result data

FIG. 2

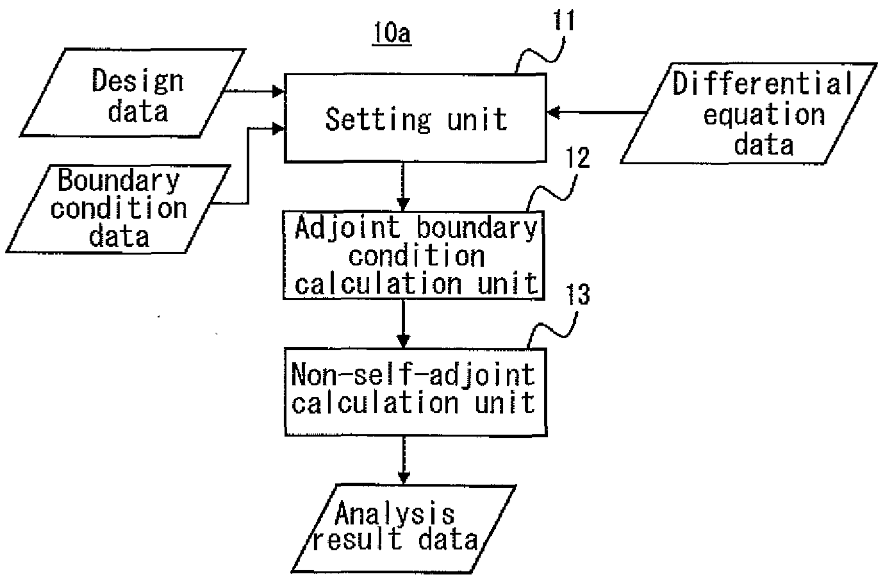
10a
11
Design data
Boundary condition data
Setting unit
Differential equation data
12
Adjoint boundary condition calculation unit
13
Non-self-adjoint calculation unit
Analysis result data

FIG. 3

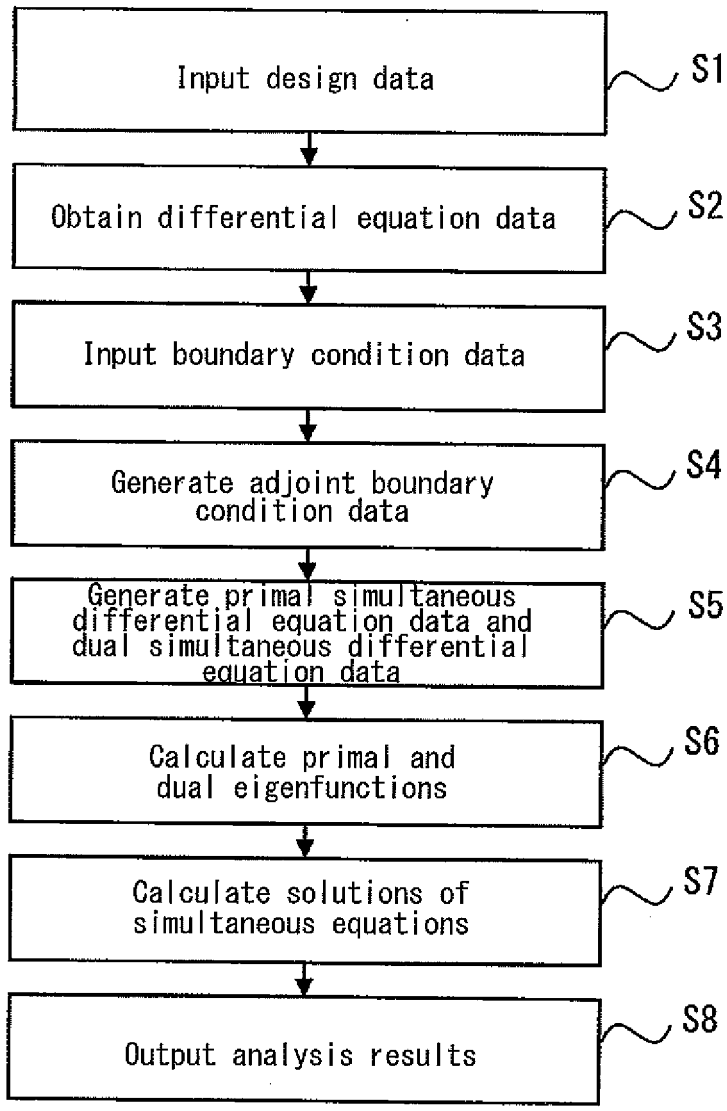
Input design data
S1
Obtain differential equation data
S2
Input boundary condition data
S3
Generate adjoint boundary condition data
S4
Generate primal simultaneous differential equation data and dual simultaneous differential equation data
S5
Calculate primal and dual eigenfunctions
S6
Calculate solutions of simultaneous equations
S7
Output analysis results
S8

FIG. 4

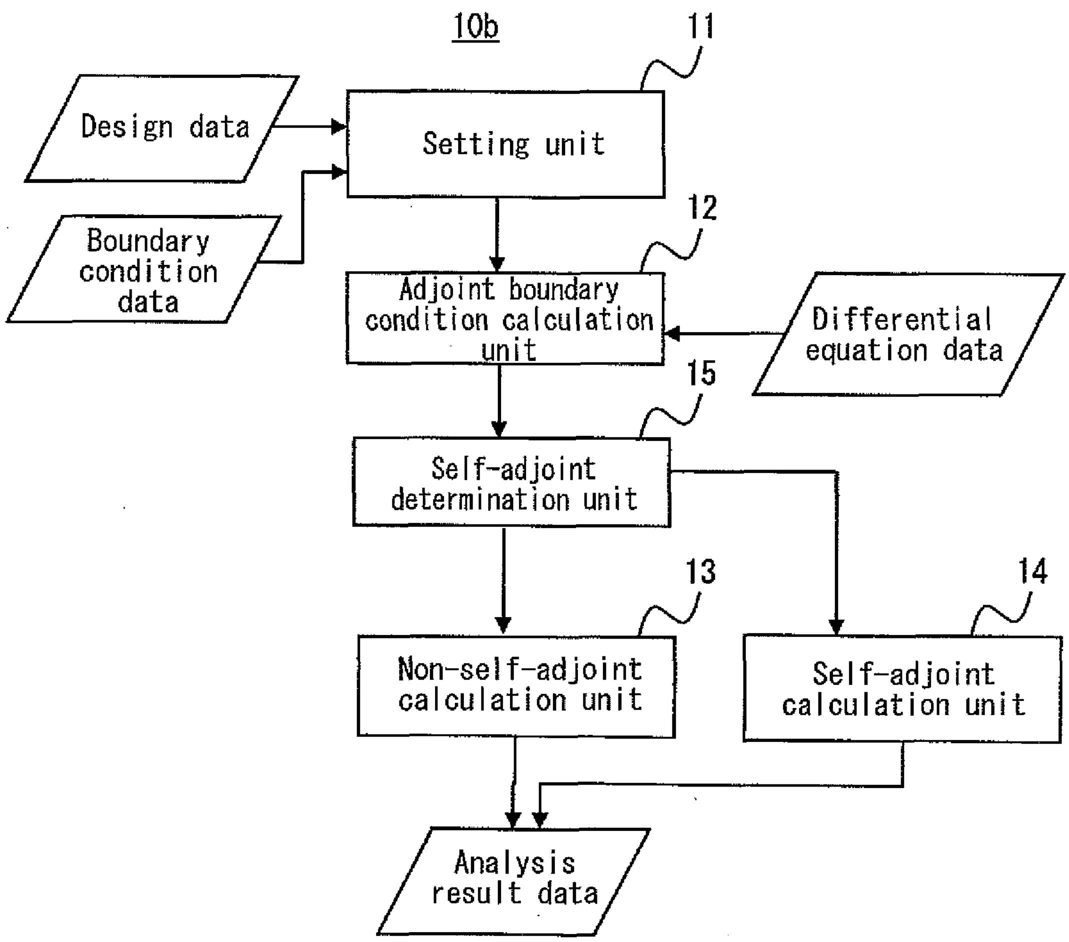
10b
11
Design data
Setting unit
Boundary condition data
12
Adjoint boundary condition calculation unit
Differential equation data
15
Self-adjoint determination unit
13
14
Non-self-adjoint calculation unit
Self-adjoint calculation unit
Analysis result data

FIG. 5

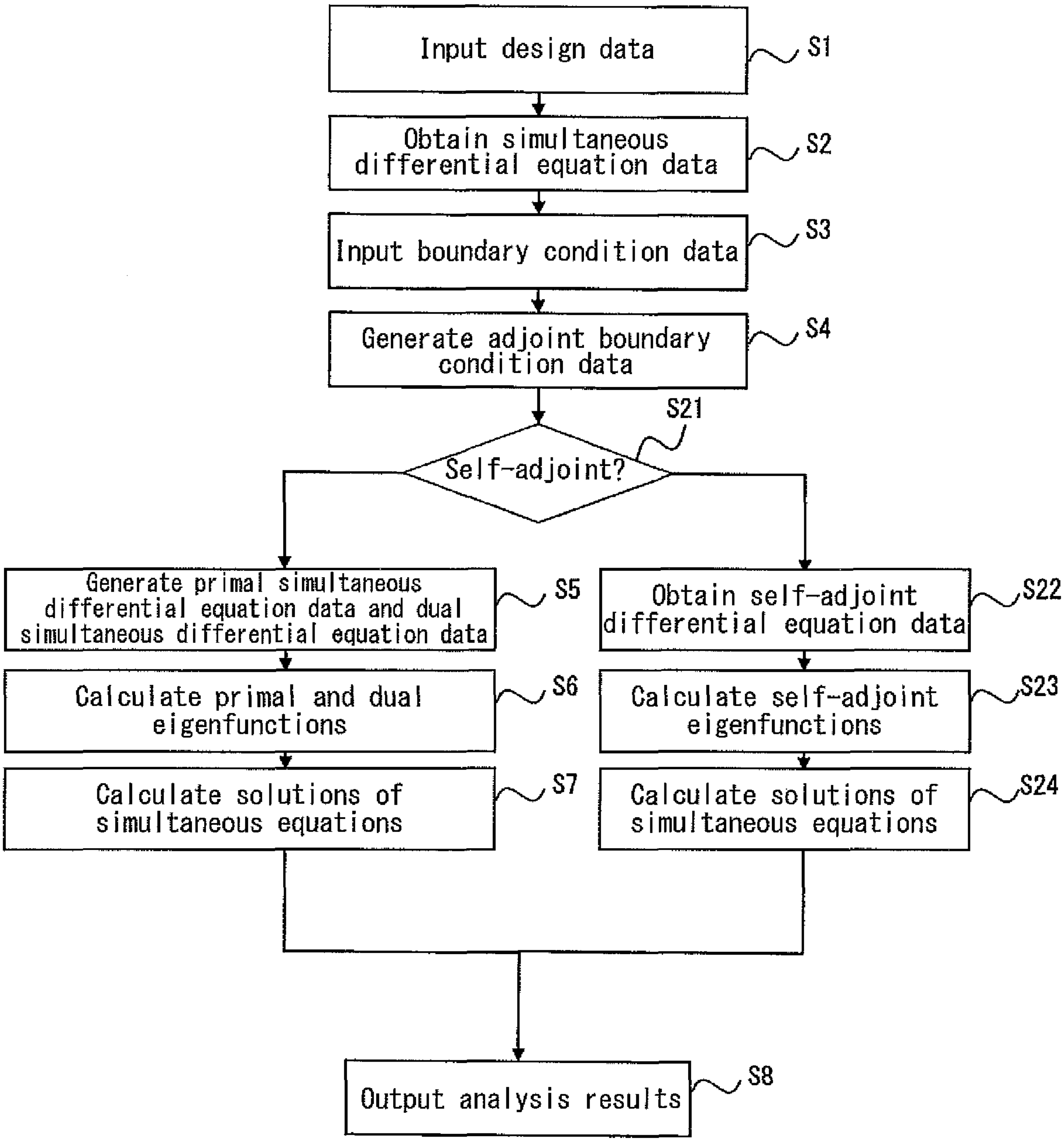
Input design data
S1
Obtain simultaneous differential equation data
S2
Input boundary condition data
S3
Generate adjoint boundary condition data
S4
S21
Self-adjoint?
Generate primal simultaneous differential equation data and dual simultaneous differential equation data
S5
Calculate primal and dual eigenfunctions
S6
Calculate solutions of simultaneous equations
S7
Obtain self-adjoint differential equation data
S22
Calculate self-adjoint eigenfunctions
S23
Calculate solutions of simultaneous equations
S24
Output analysis results
S8

FIG. 6

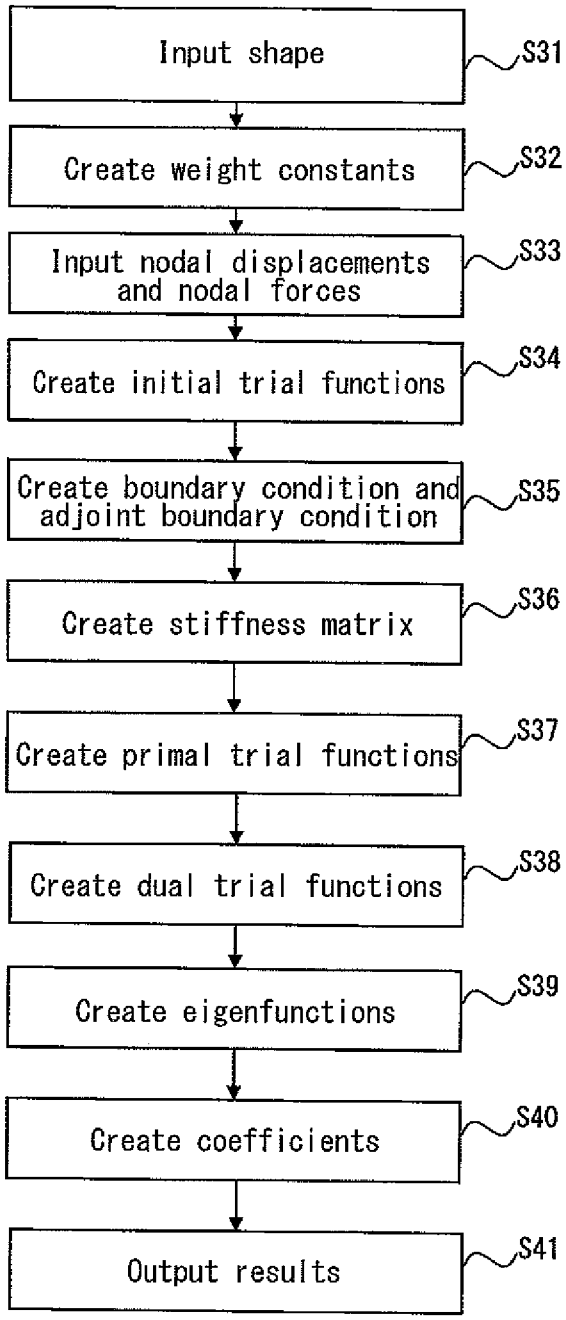
Input shape
S31
Create weight constants
S32
Input nodal displacements and nodal forces
S33
Create initial trial functions
S34
Create boundary condition and adjoint boundary condition
S35
Create stiffness matrix
S36
Create primal trial functions
S37
Create dual trial functions
S38
Create eigenfunctions
S39
Create coefficients
S40
Output results
S41

FIG. 7

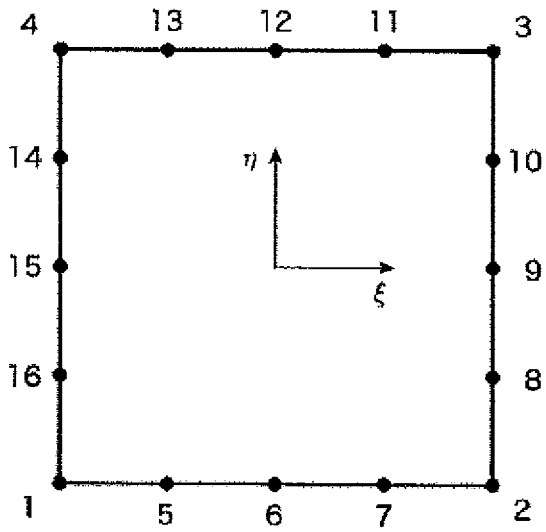


Node Number for 16-Nodes Shape Function

FIG. 8

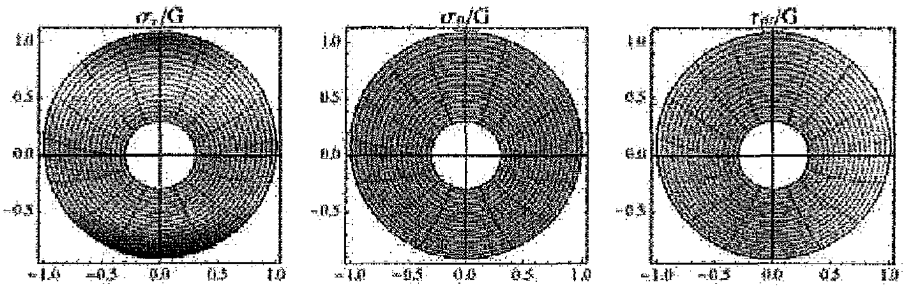


FIG. 9

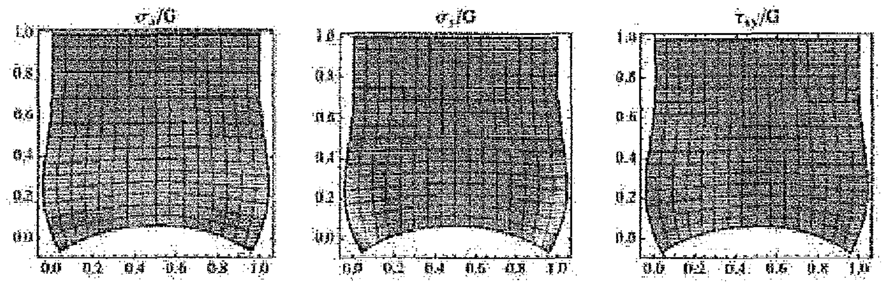


FIG. 10

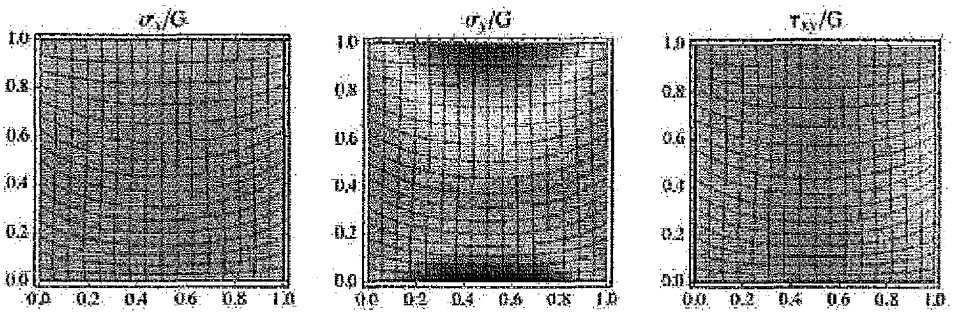


FIG. 11

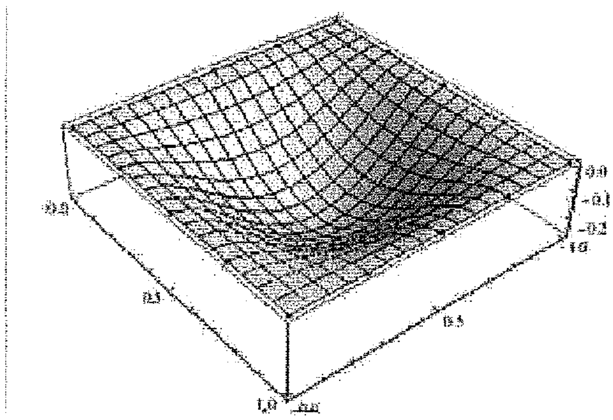

FIG. 12

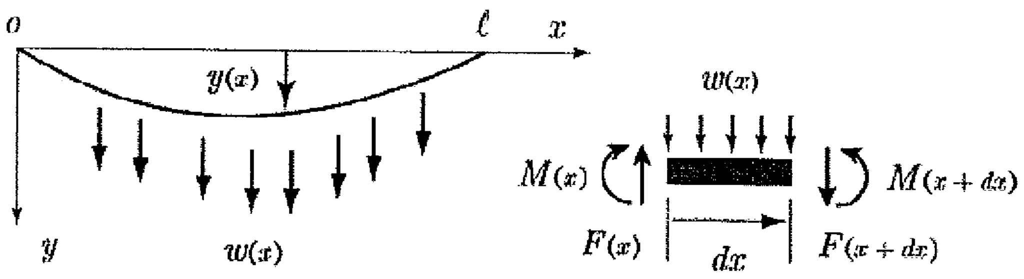


FIG. 13A

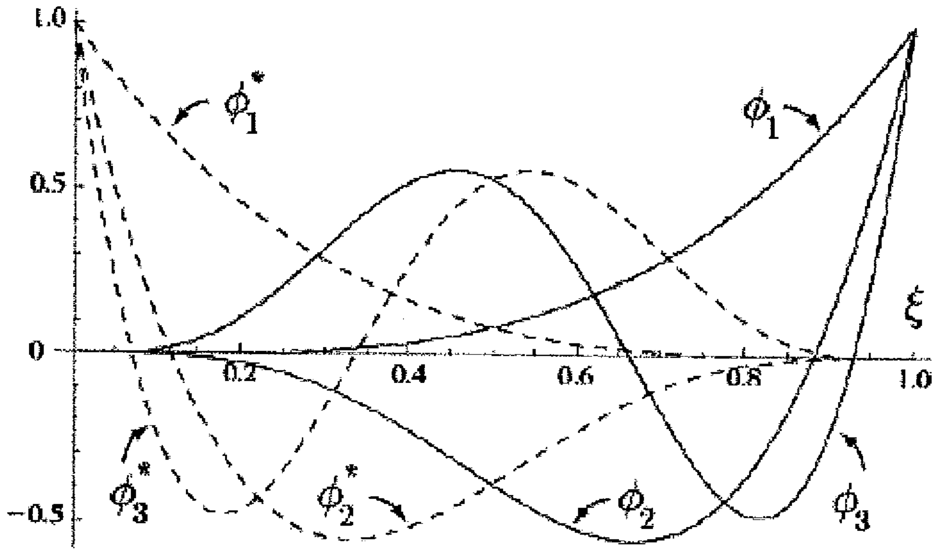


FIG. 13B

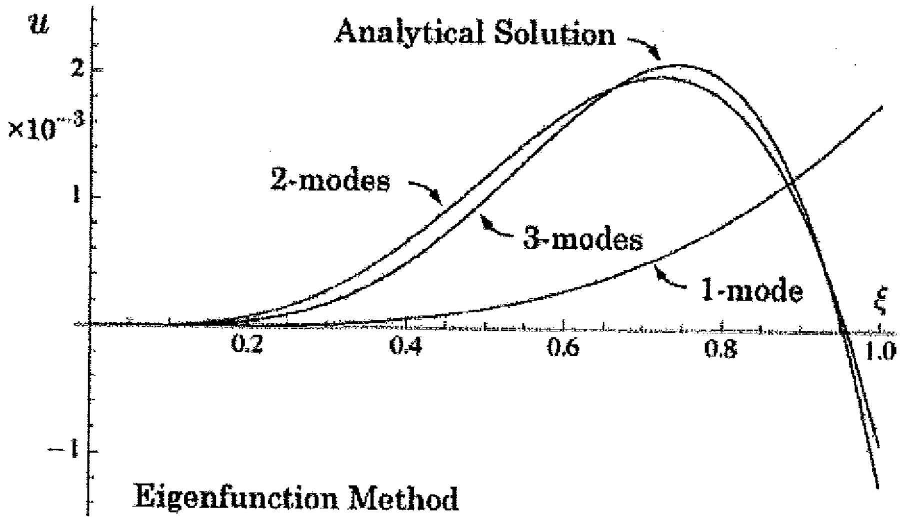


FIG. 13C

$$\frac{\partial u}{\partial x}+\frac{\partial v}{\partial y}=\delta(x-x_0,y-y_0)$$

$$\frac{\partial v}{\partial x}-\frac{\partial u}{\partial y}=0$$

$$\phi=\frac{1}{2\pi}\log\sqrt{(x-x_0)^2+(y-y_0)^2}$$

$$u=\frac{\partial \phi}{\partial x},\quad v=\frac{\partial \phi}{\partial y}$$

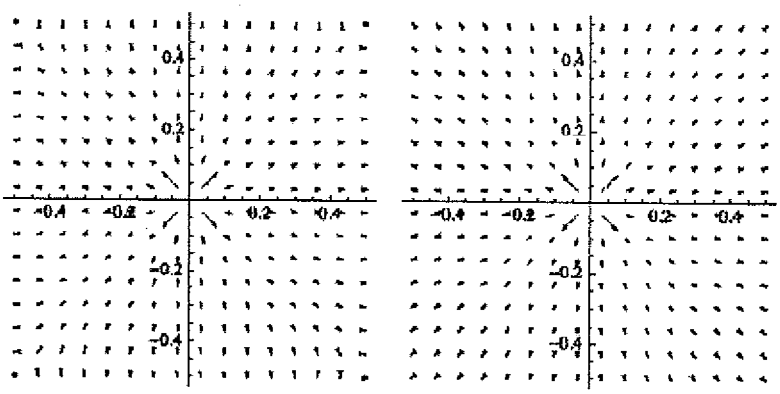


Eigenfunction Correct solution

FIG. 14

$$\frac{\partial u}{\partial x}+\frac{\partial v}{\partial y}=0$$

$$\frac{\partial v}{\partial x}-\frac{\partial u}{\partial y}=\delta(x-x_0,y-y_0)$$

$$\phi=\frac{1}{2\pi}\arctan\frac{y-y_0}{x-x_0}$$

$$u=\frac{\partial \phi}{\partial x},\quad v=\frac{\partial \phi}{\partial y}$$

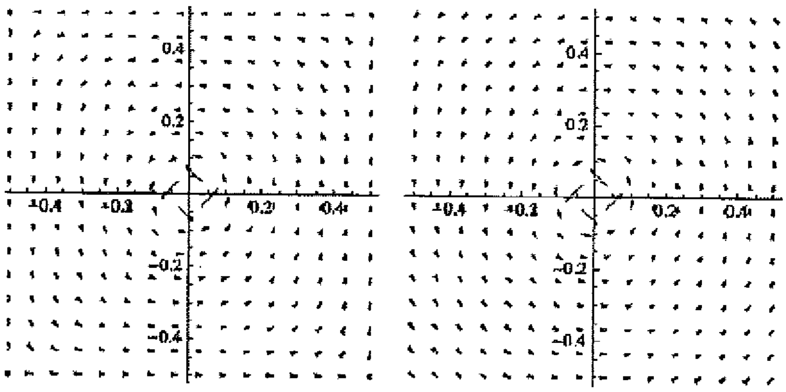


Eigenfunction Correct solution

FIG. 15

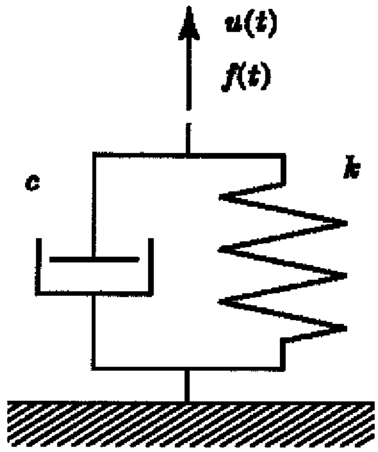
u(t)
f(t)
c
k

FIG. 16

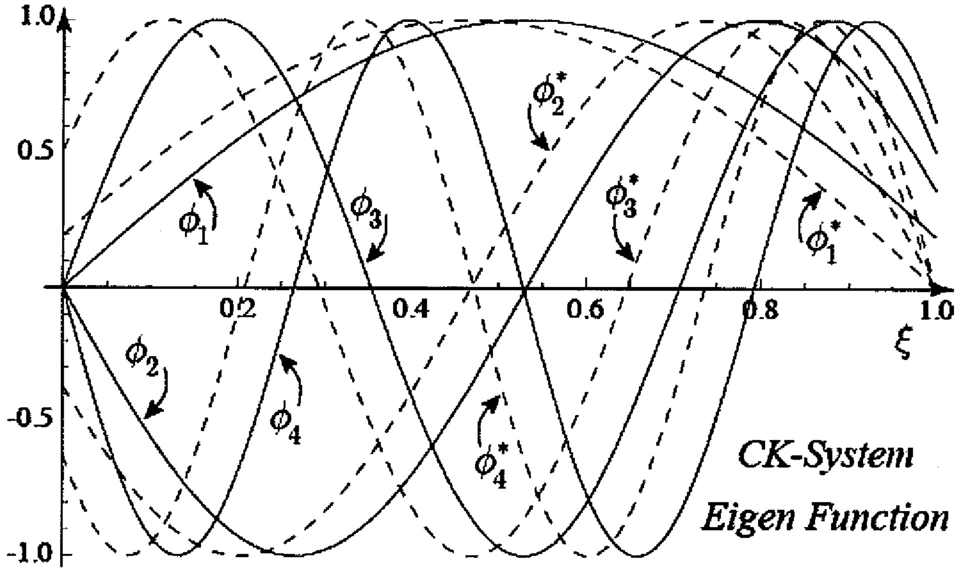
1.0
0.5
-0.5
-1.0
0.2
0.4
0.6
0.8
1.0
ξ
φ1
φ2
φ3
φ4
φ1*
φ2*
φ3*
φ4*
CK-System
Eigen Function

FIG. 17

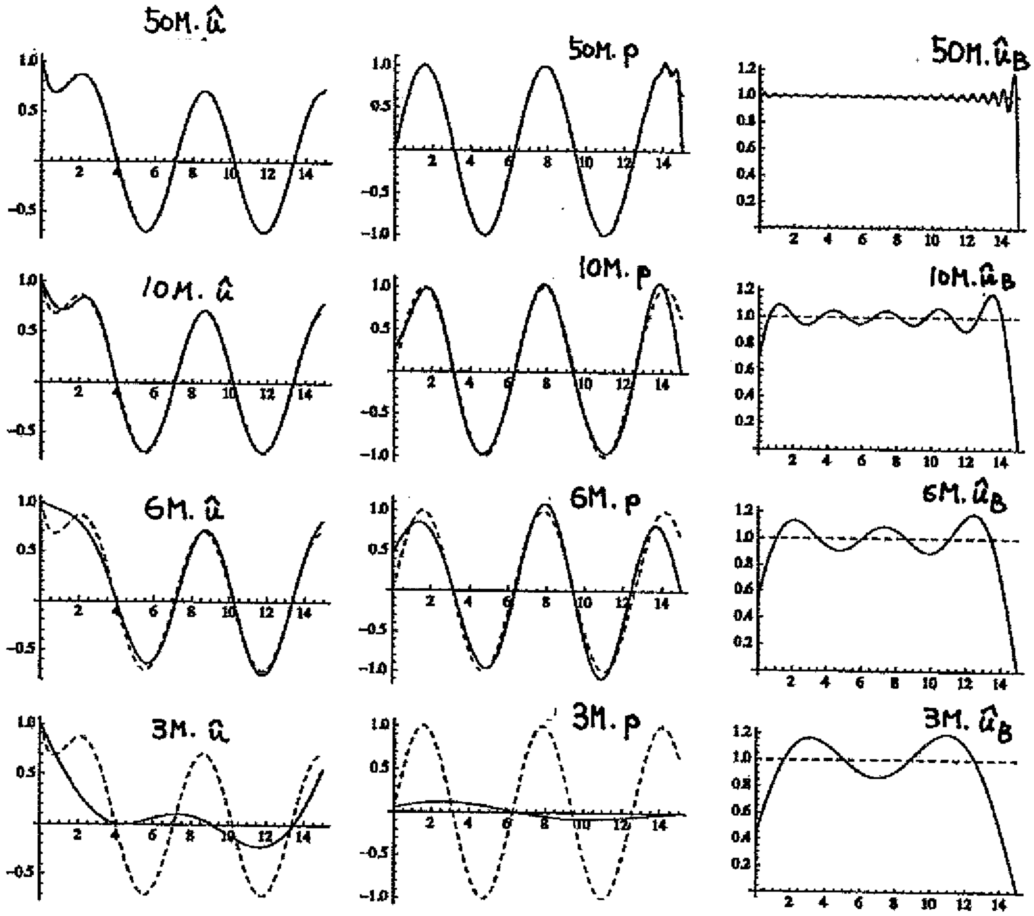


Response for $p(t) \equiv \sin \gamma t$.

FIG. 18

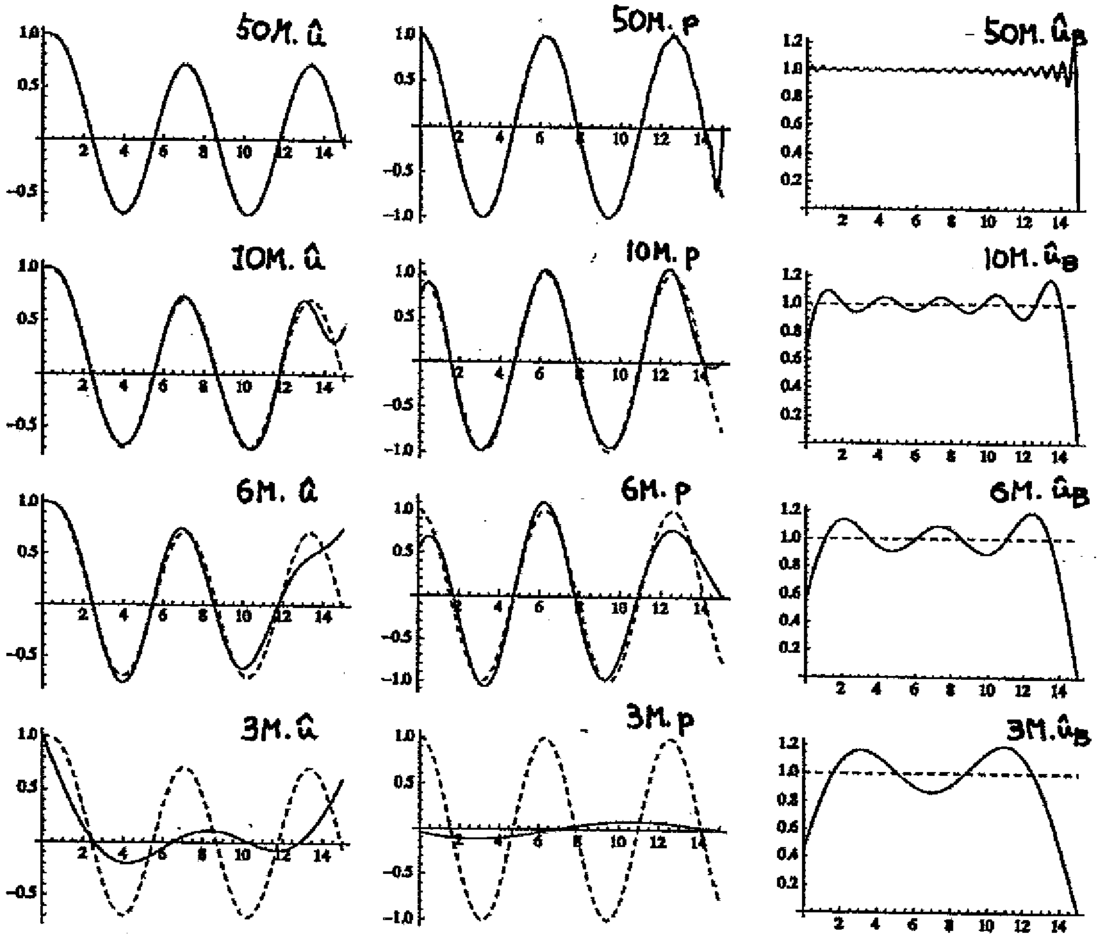


Response for $p(t) \equiv \cos \gamma t$ .

FIG. 19

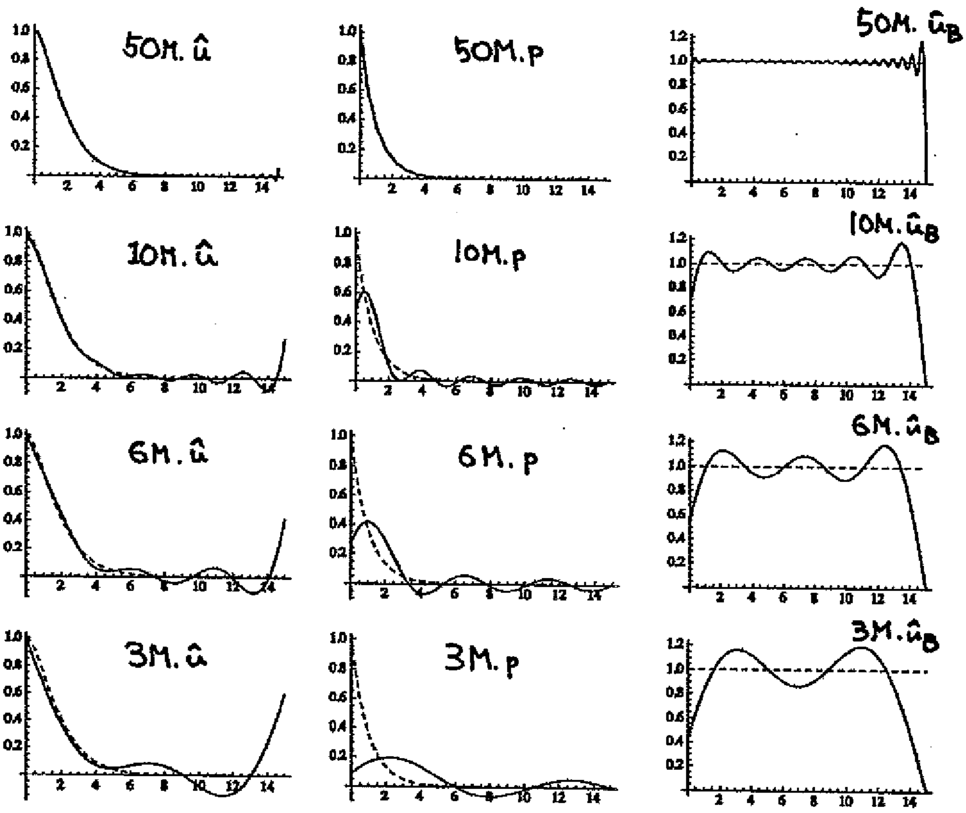


Response for $p(t) \equiv e^{-\gamma t}$.

FIG. 20

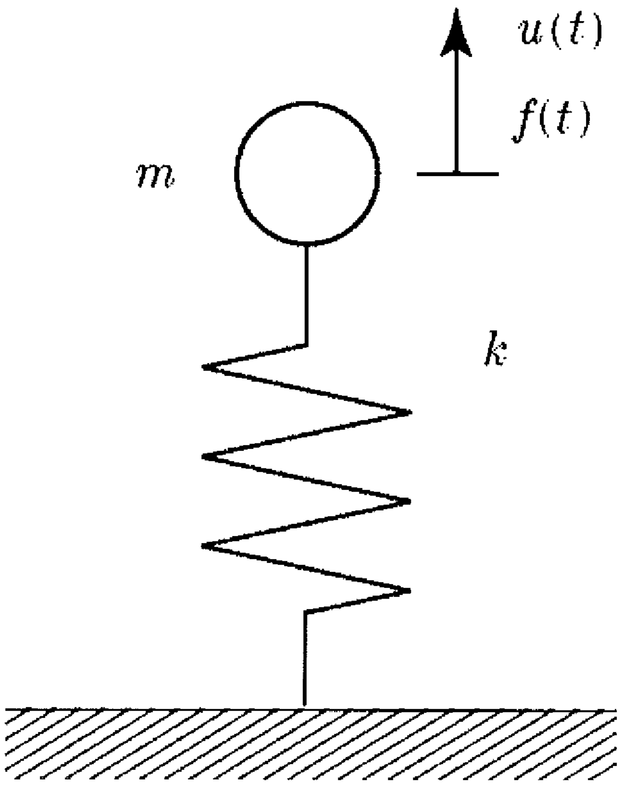


FIG. 21

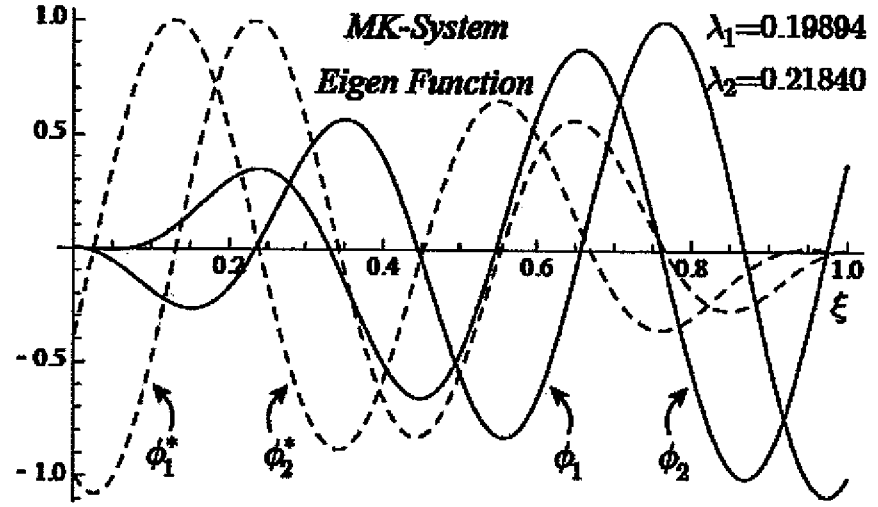


Eigen Function $0<\lambda<1$.

FIG. 22

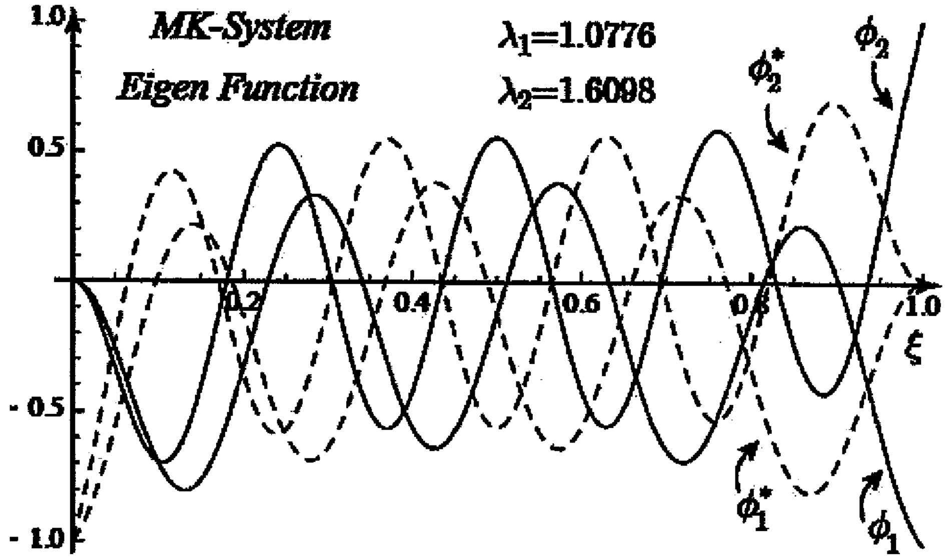


Eigen Function $1<\lambda$.

FIG. 23

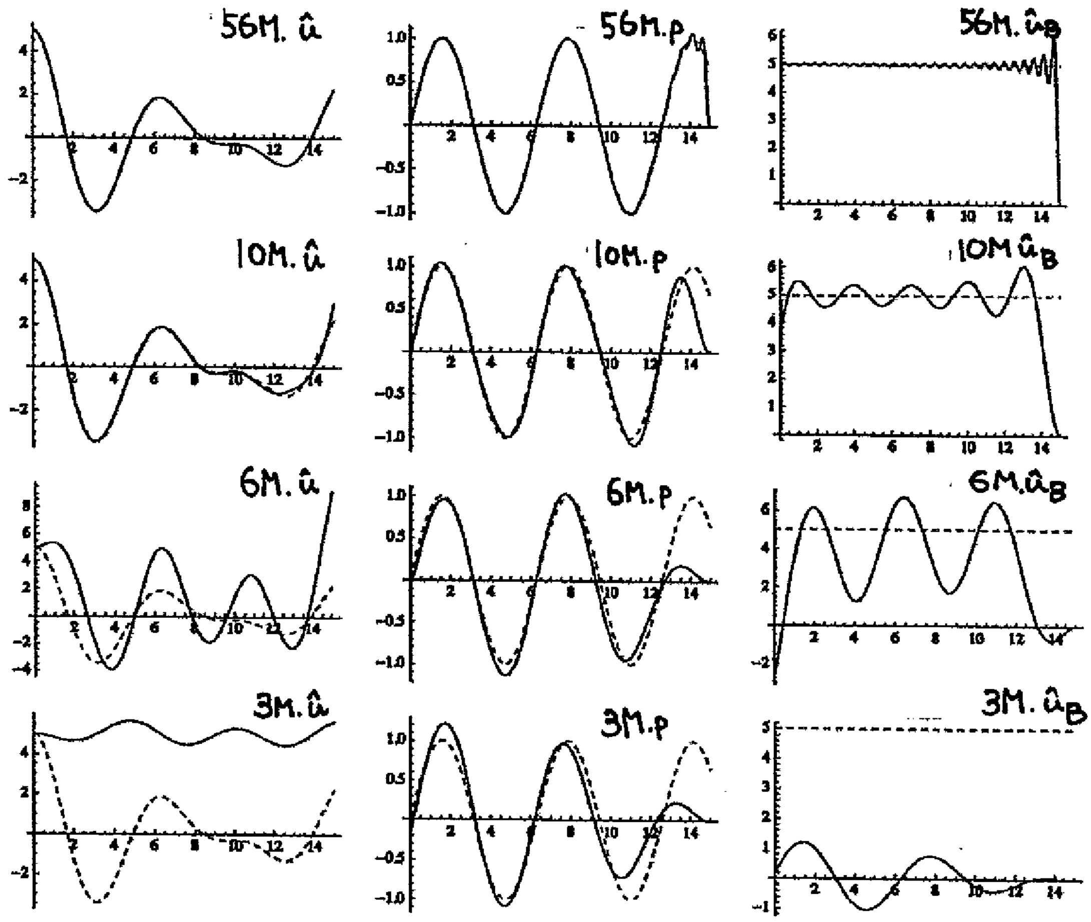


Response for $p(t) \equiv \sin \omega_o t$ .

FIG. 24

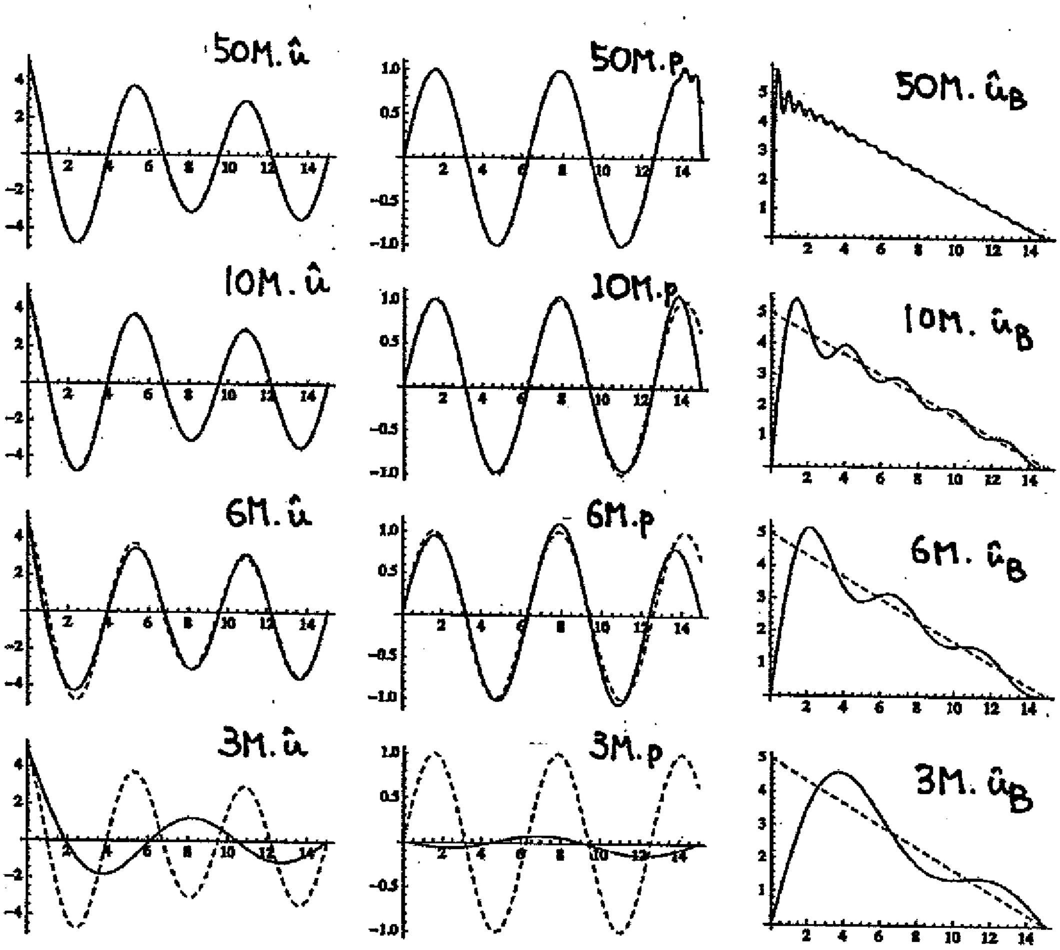


Response for $p(t) \equiv \sin \omega_0 t$.

FIG. 25

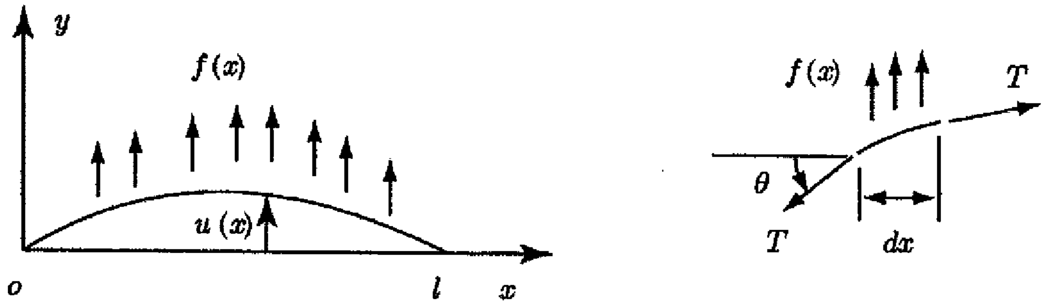


String-System.

FIG. 26

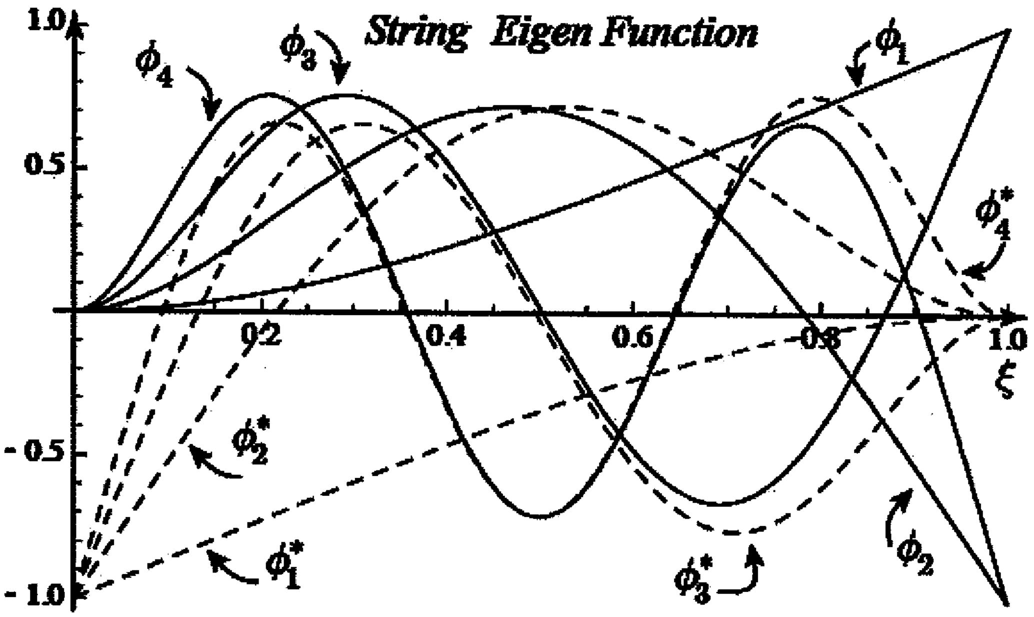


Eigen Function.

FIG. 27

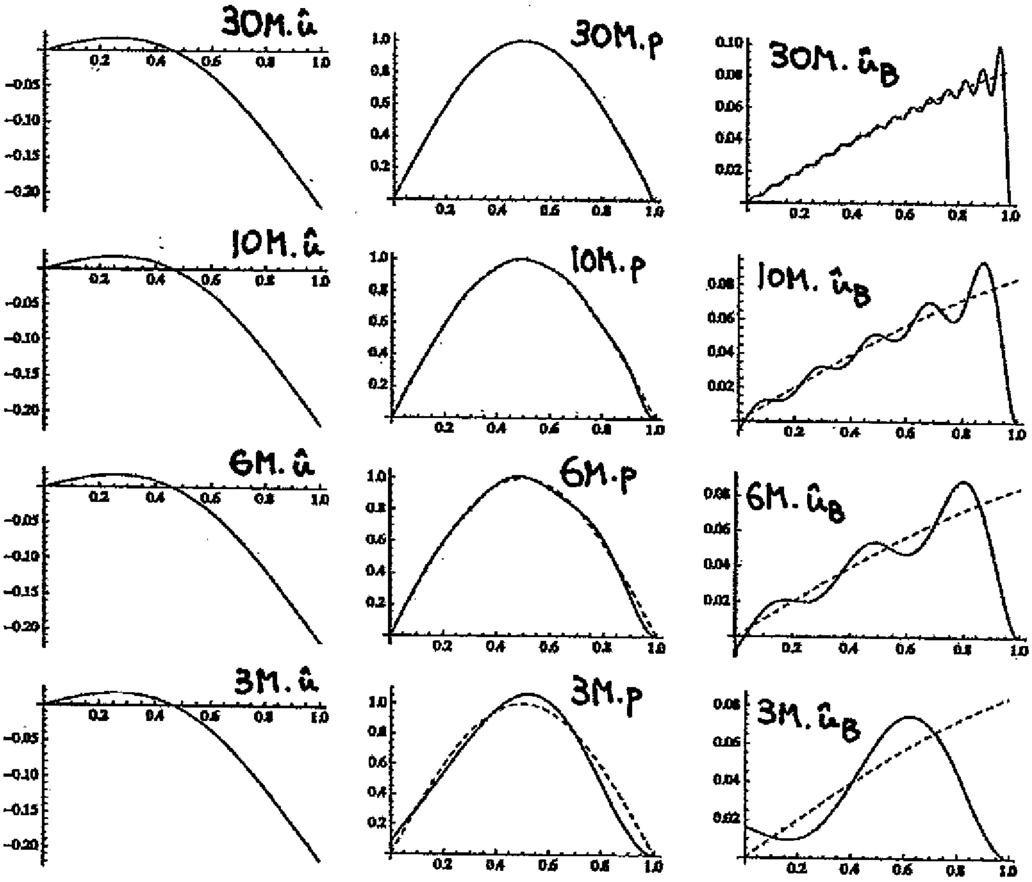


Response for $p(x) \equiv \sin\frac{\pi}{\ell}x$.

FIG. 28

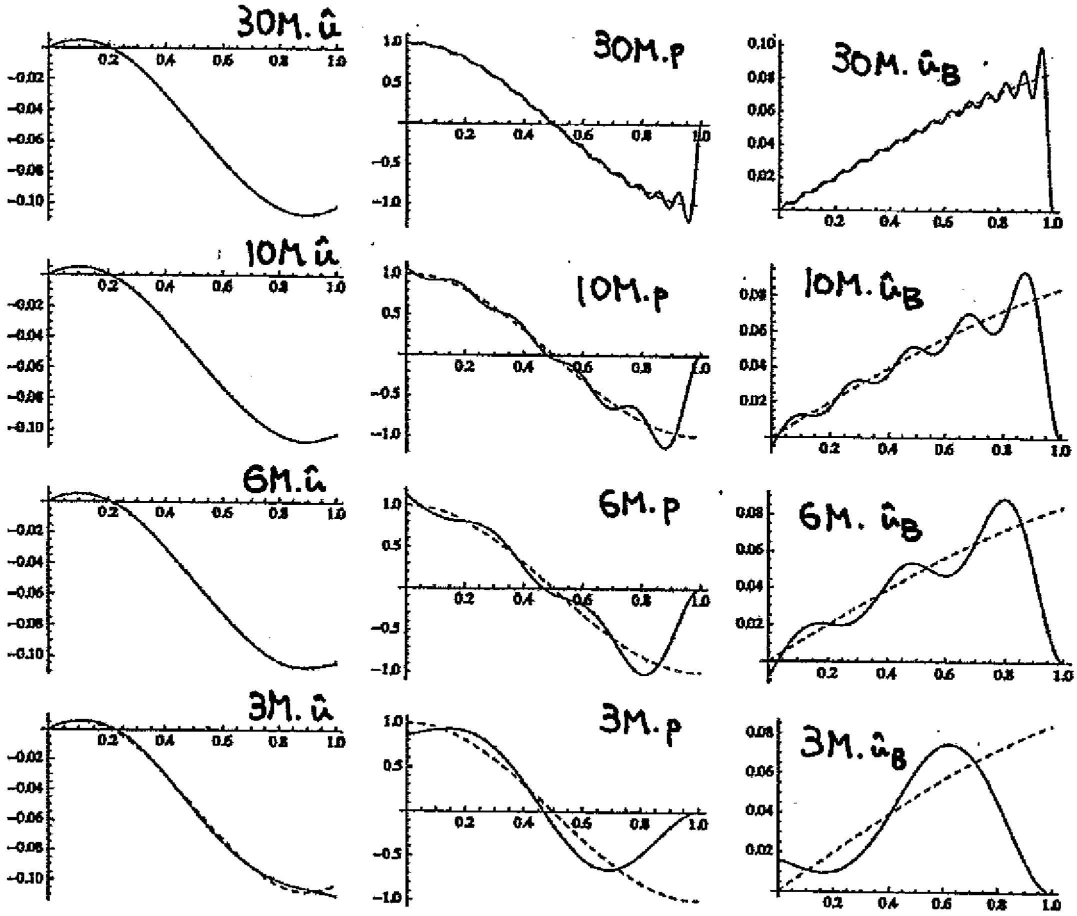


Response for $p(x) \equiv \cos\frac{\pi}{\ell}x$.

FIG. 29

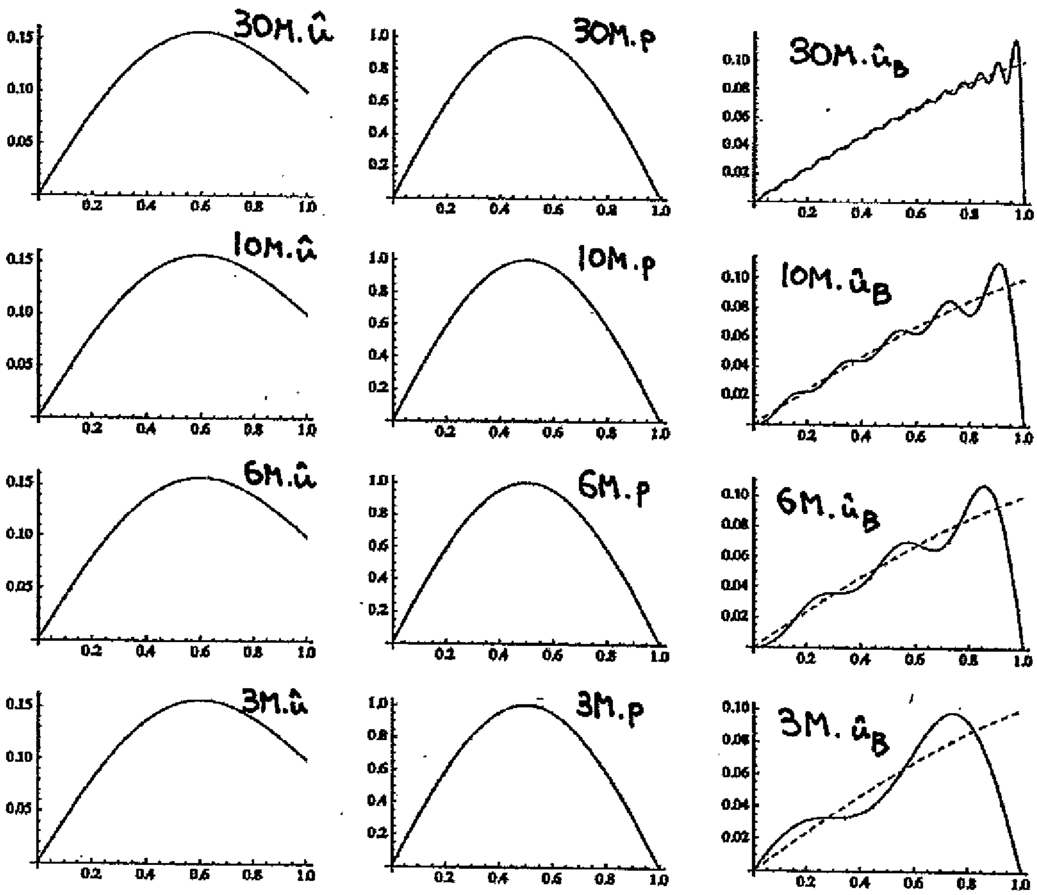


Response for $p(x) \equiv \sin\frac{\pi}{\ell}x$.

FIG. 30

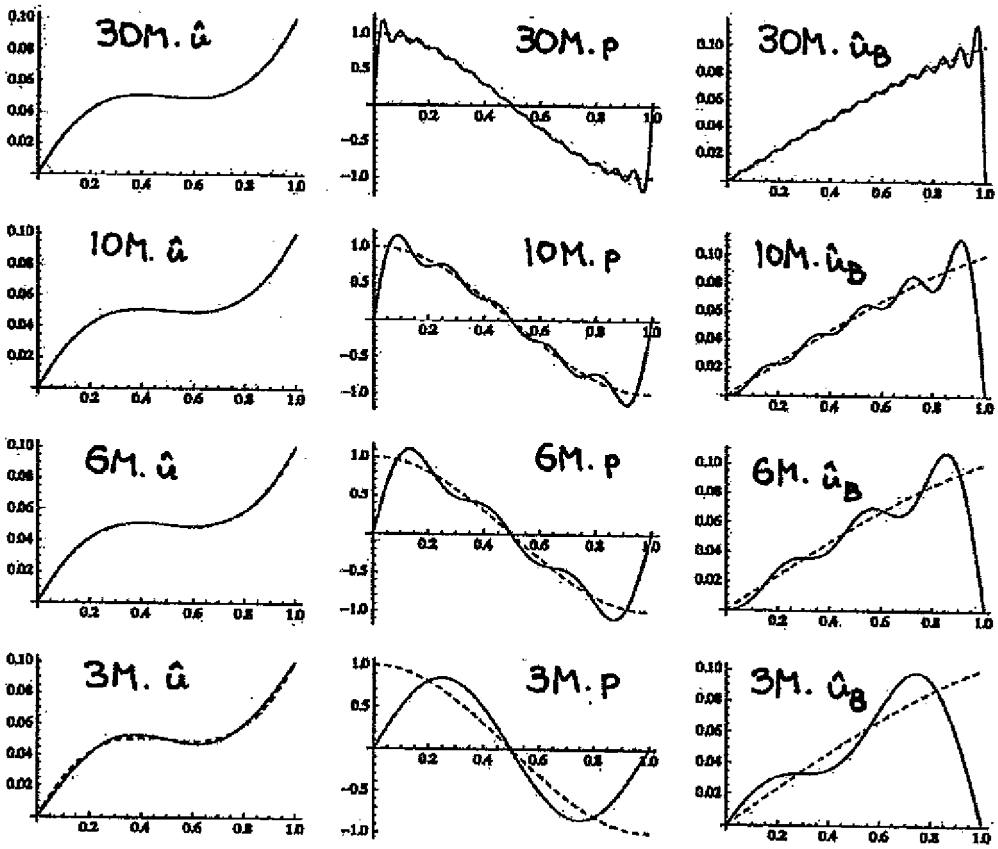


Response for $p(x) \equiv \cos\frac{\pi}{\ell}x$.

FIG. 31

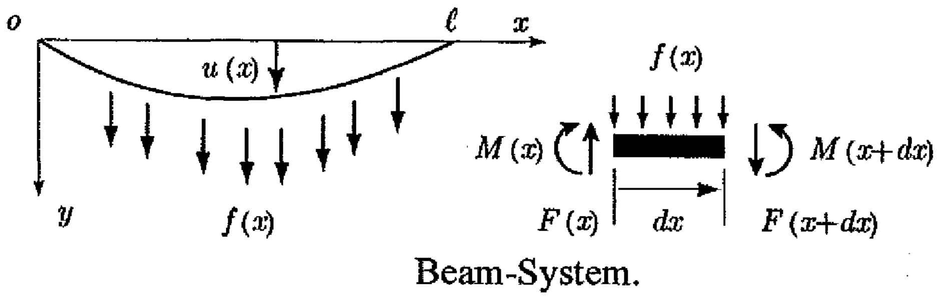


FIG. 32

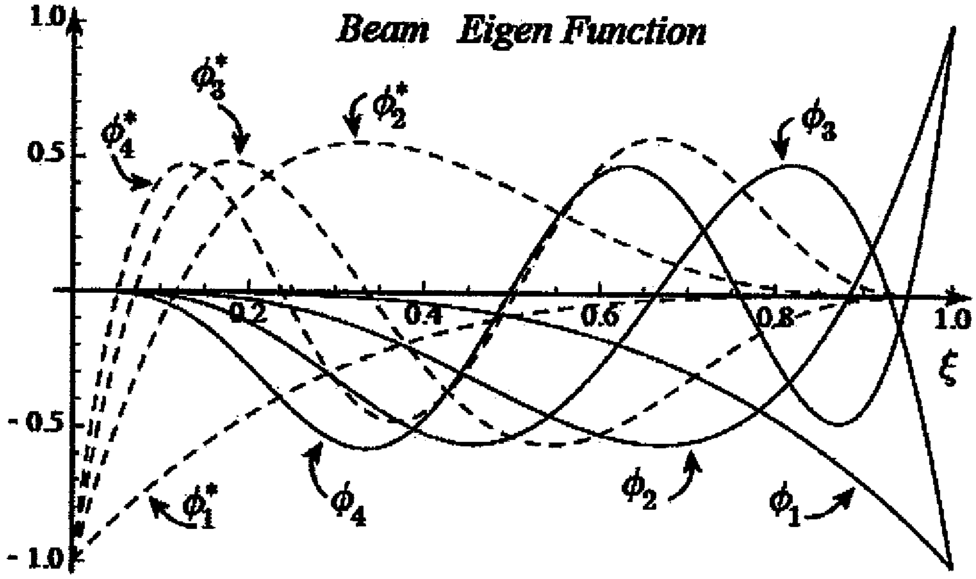


Eigen Function.

FIG. 33

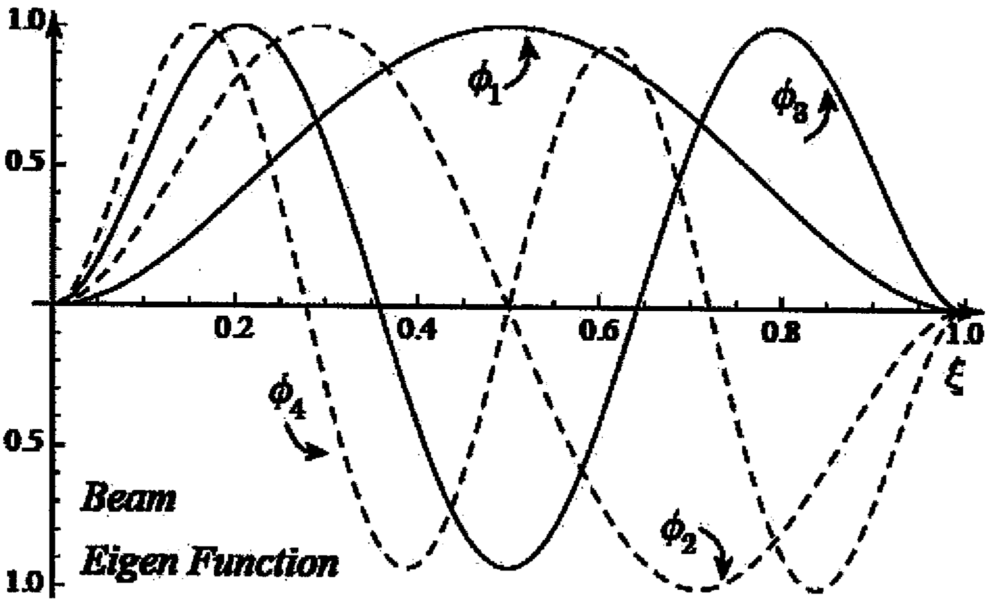


Eigen Function.

FIG. 34

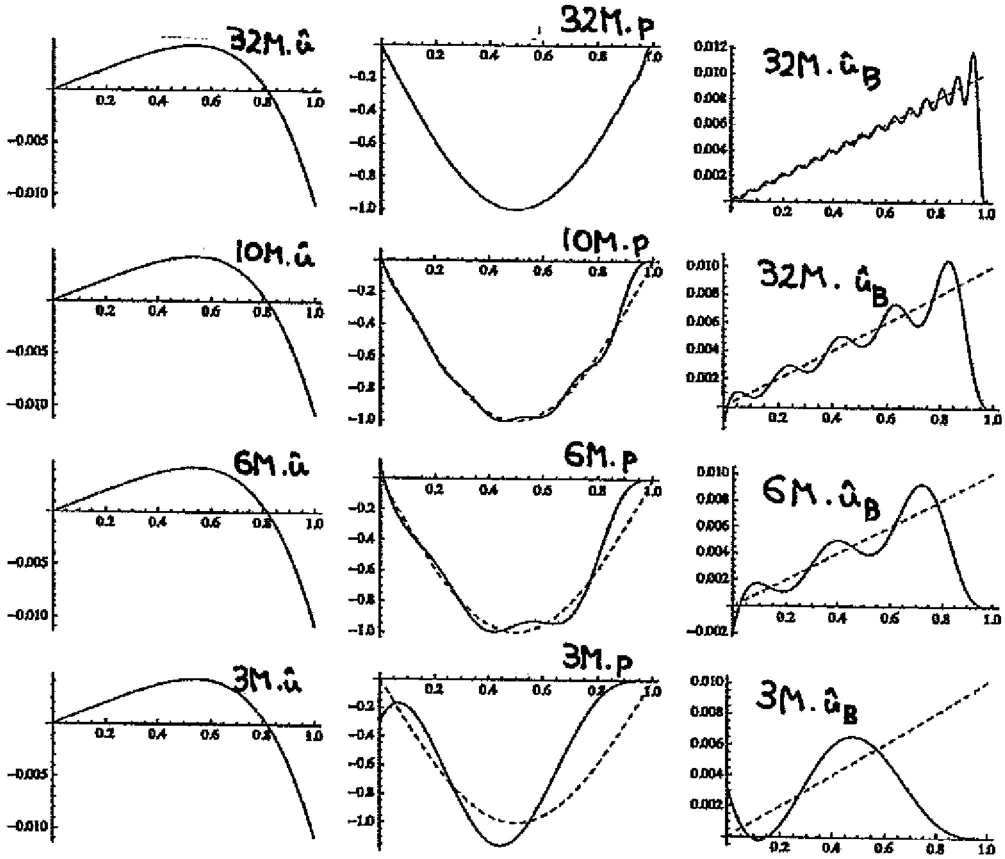


Response for $p(x) \equiv \sin \frac{\pi}{\ell} x$.

FIG. 35

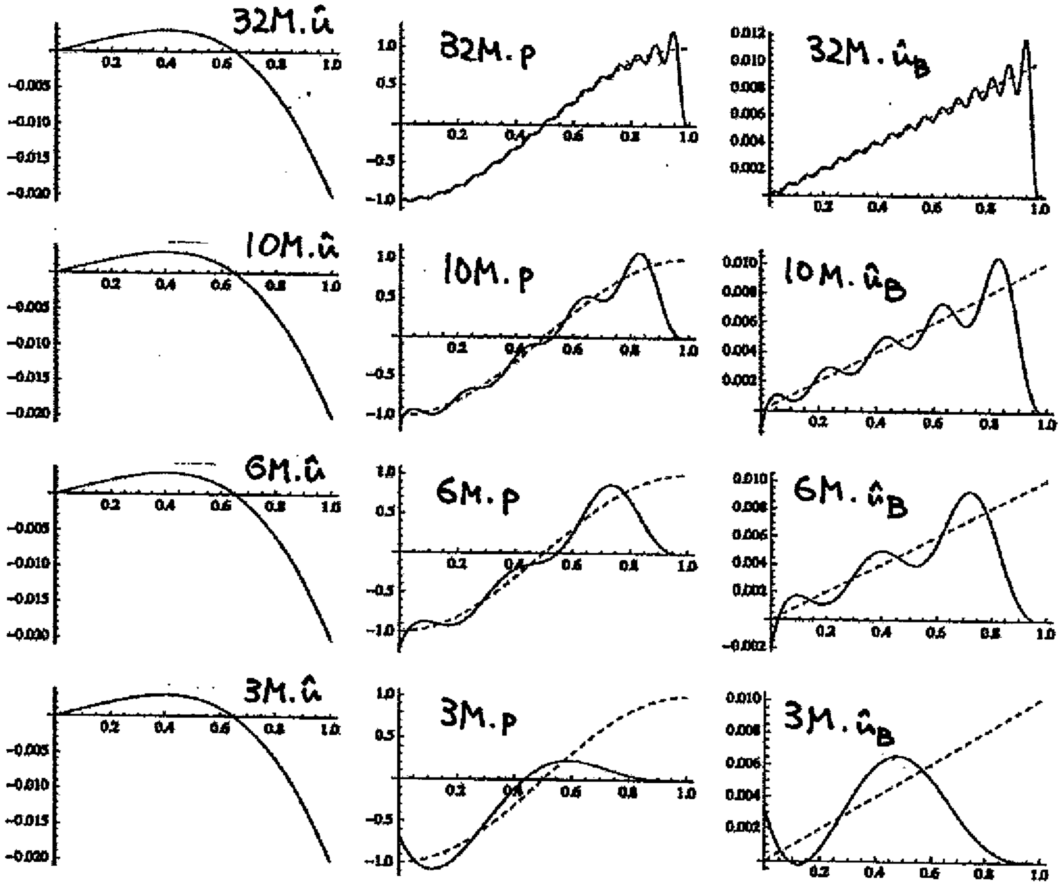


Response for $p(x) \equiv \cos \frac{\pi}{\ell} x$.

FIG. 36

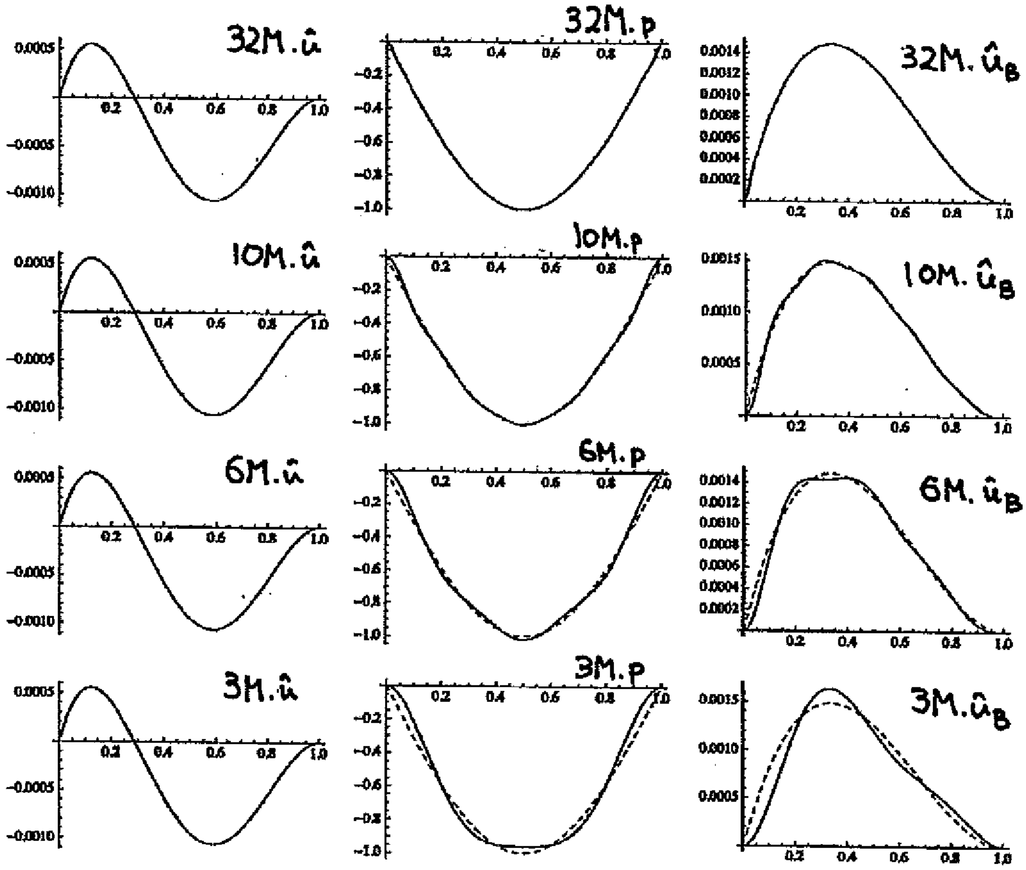


Response for $p(x) \equiv \sin \frac{\pi}{\ell} x$.

FIG. 37

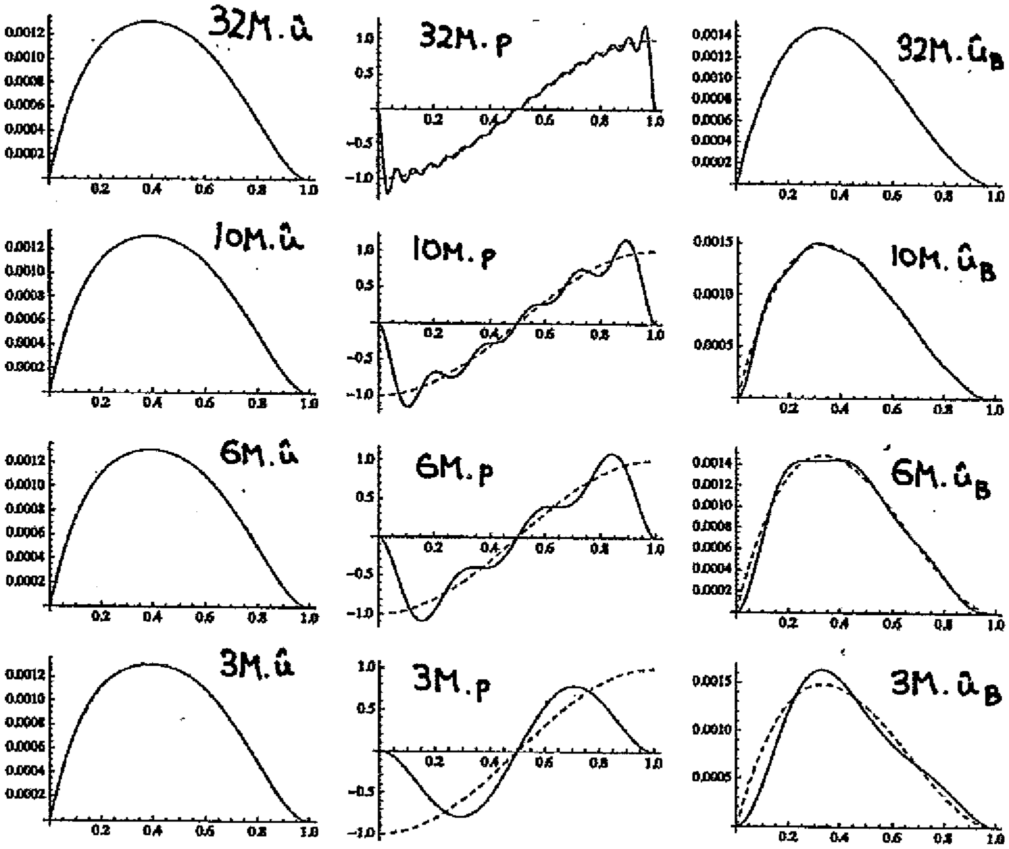


Response for $p(x) \equiv \cos\frac{\pi}{\ell}x$.

FIG. 38

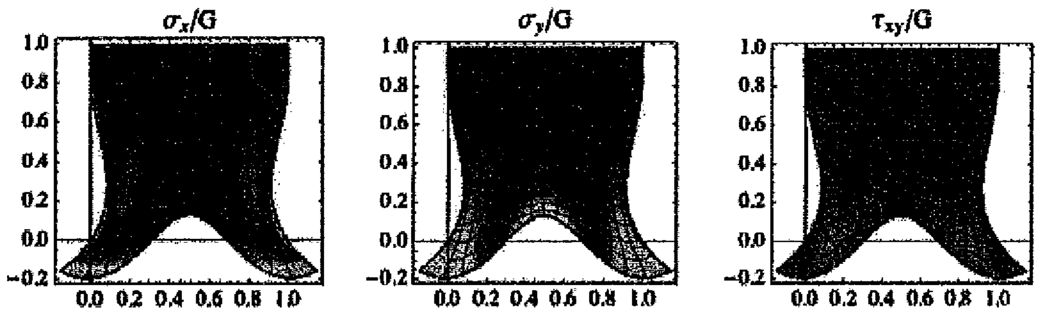


FIG. 39

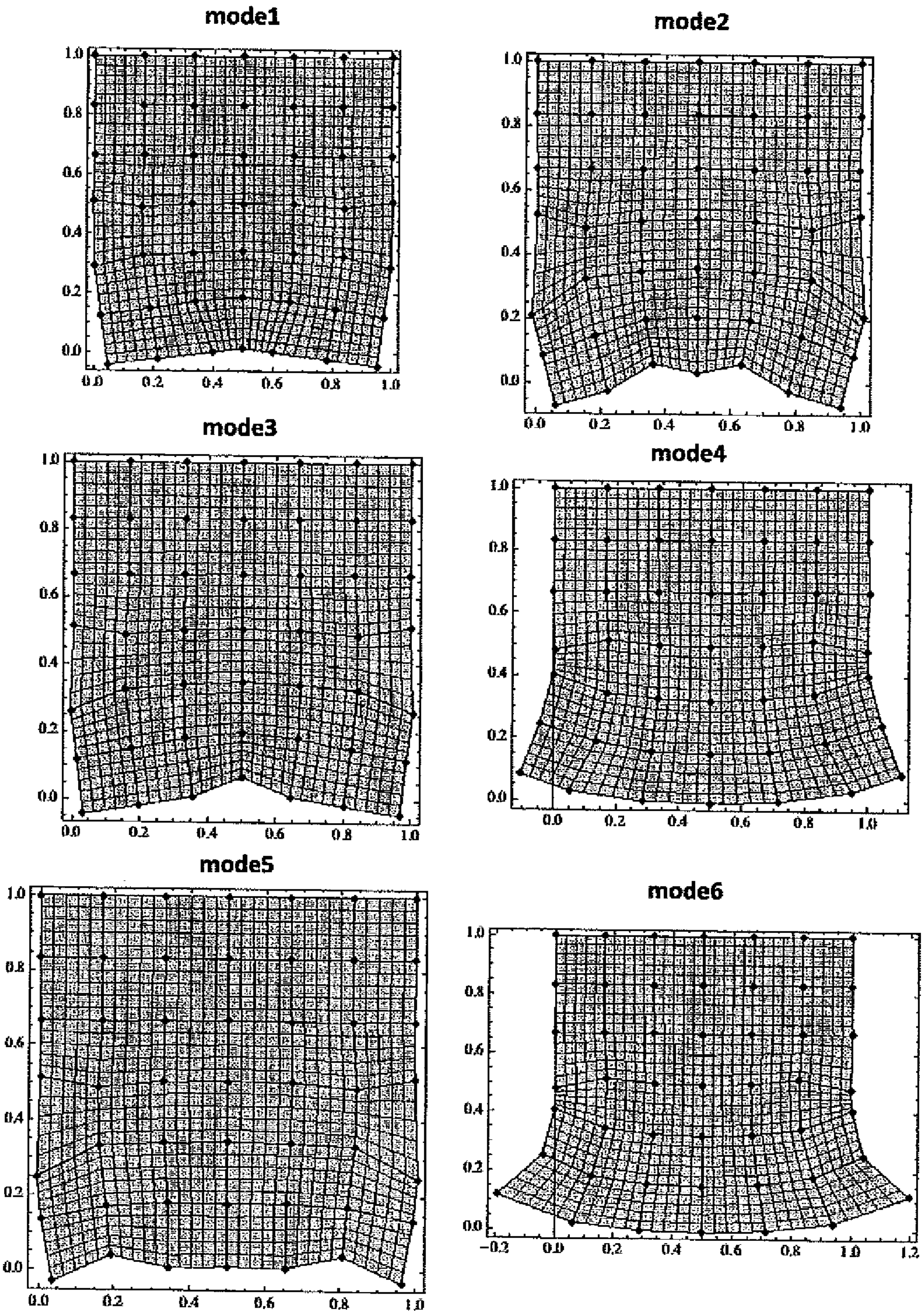


FIG. 40A

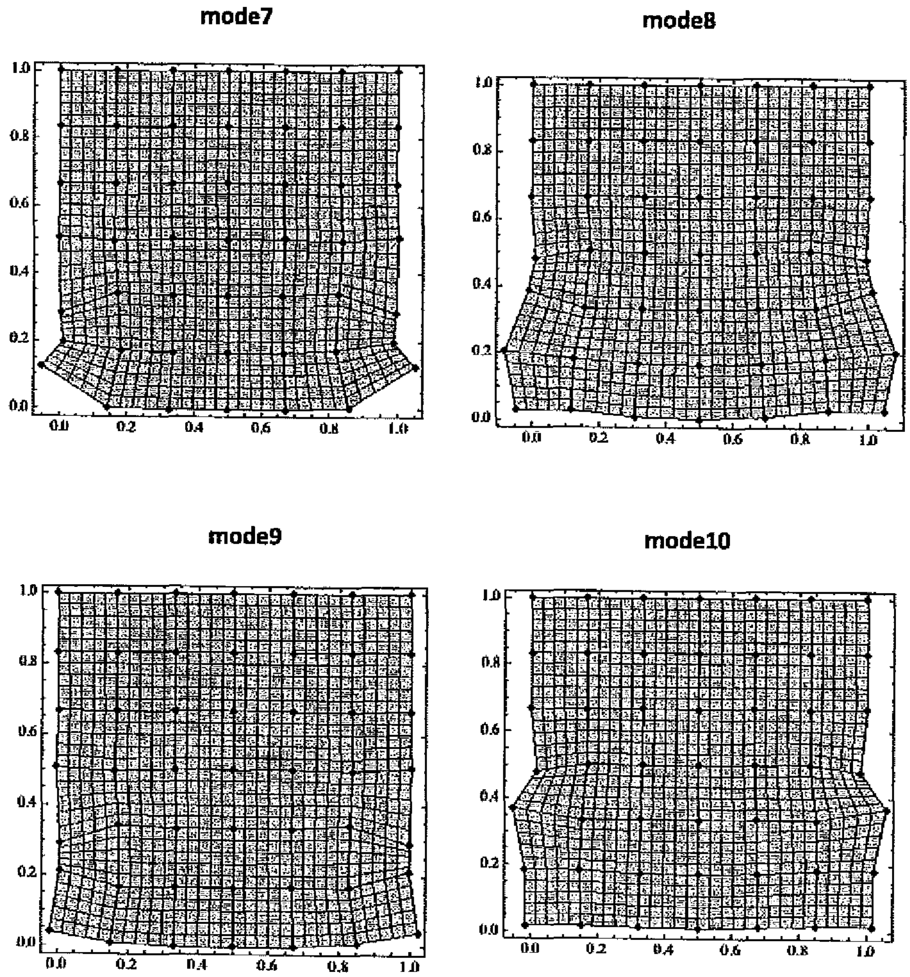


FIG. 40B

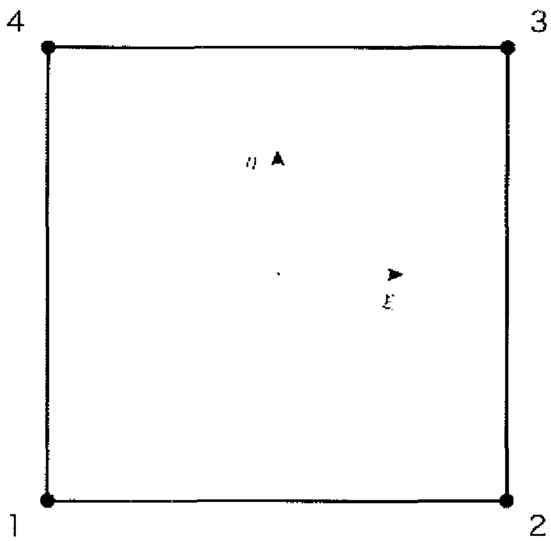


Node Number for 4-Nodes Shape Function.

FIG. 41

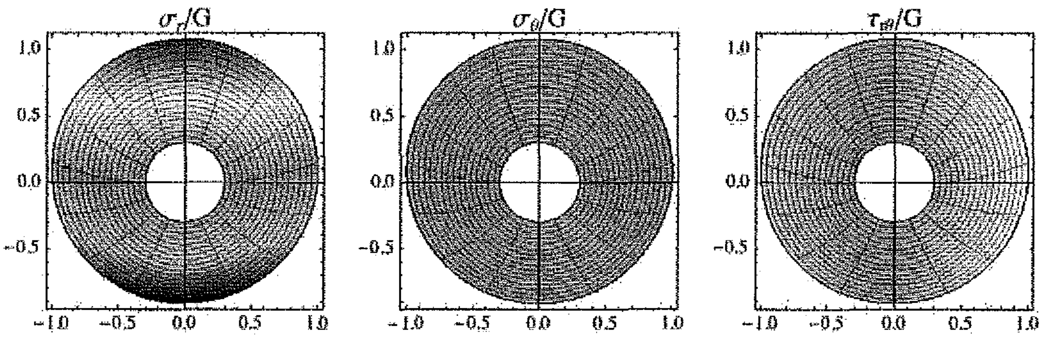


Deformatin and Stress of the Ring By Analytical Solution.

FIG. 42

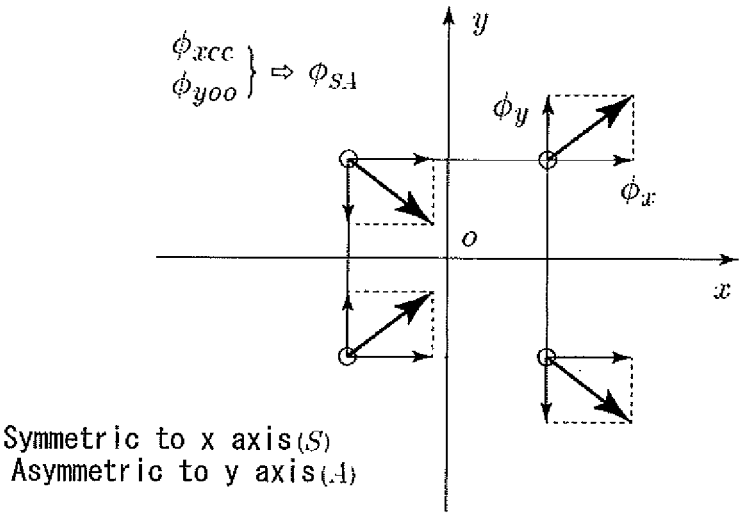


Deformation of Mode SA.

FIG. 43

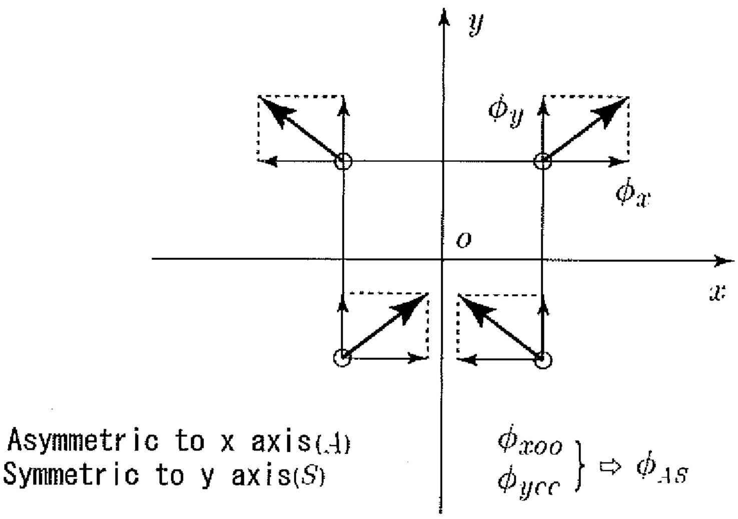


Deformation of Mode AS.

FIG. 44

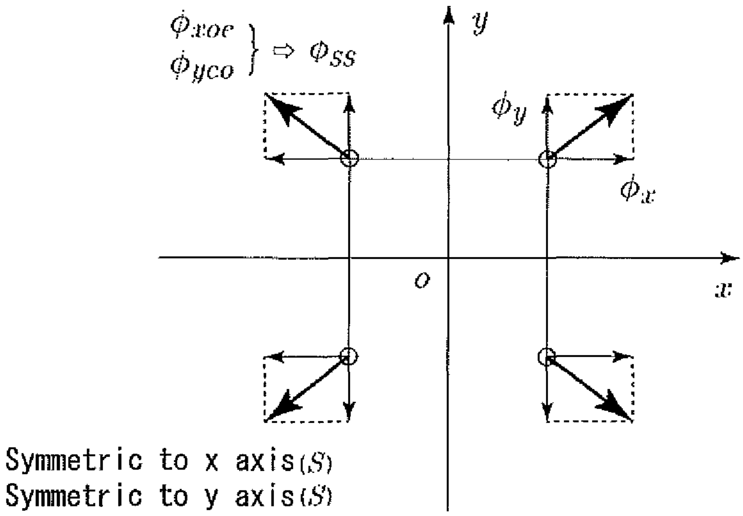


Deformation of Mode SS.

FIG. 45

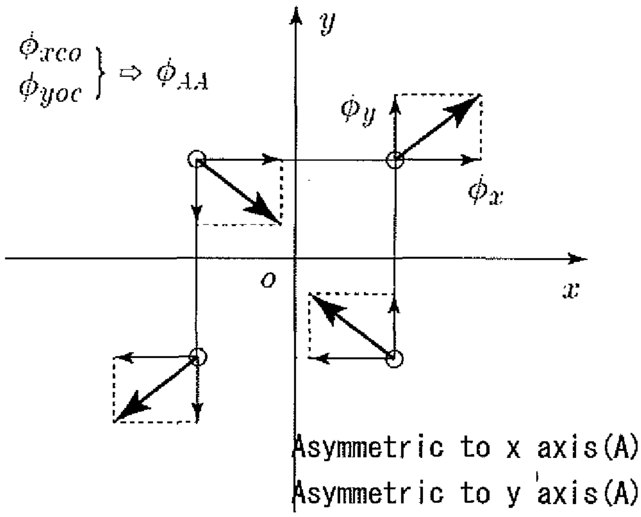


Deformation of Mode AA.

FIG. 46

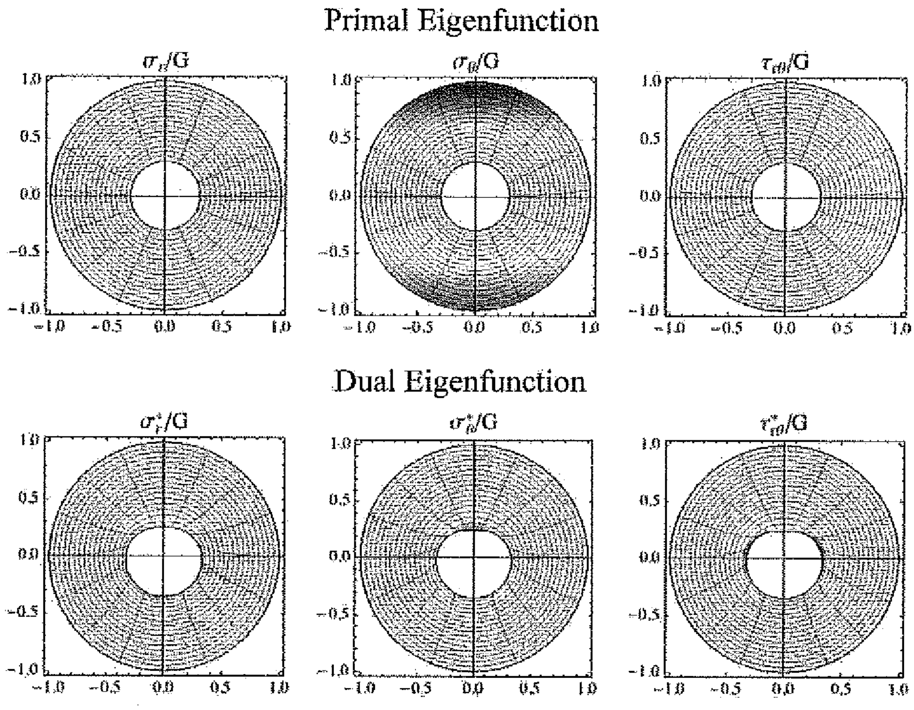


No.1 Mode of the Ring.

FIG. 47

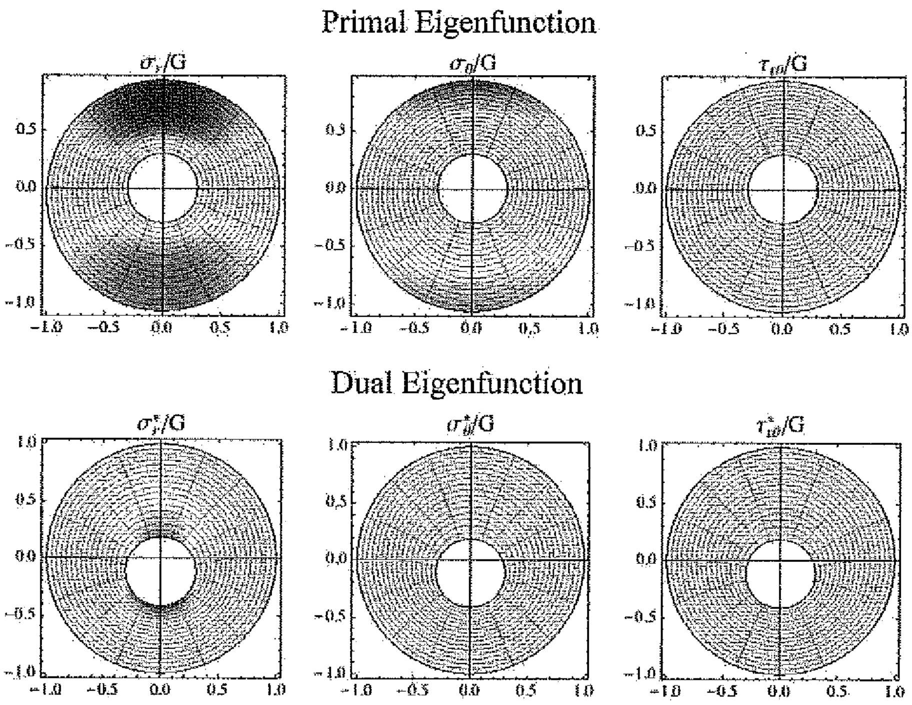


No.2 Mode of the Ring.

FIG. 48

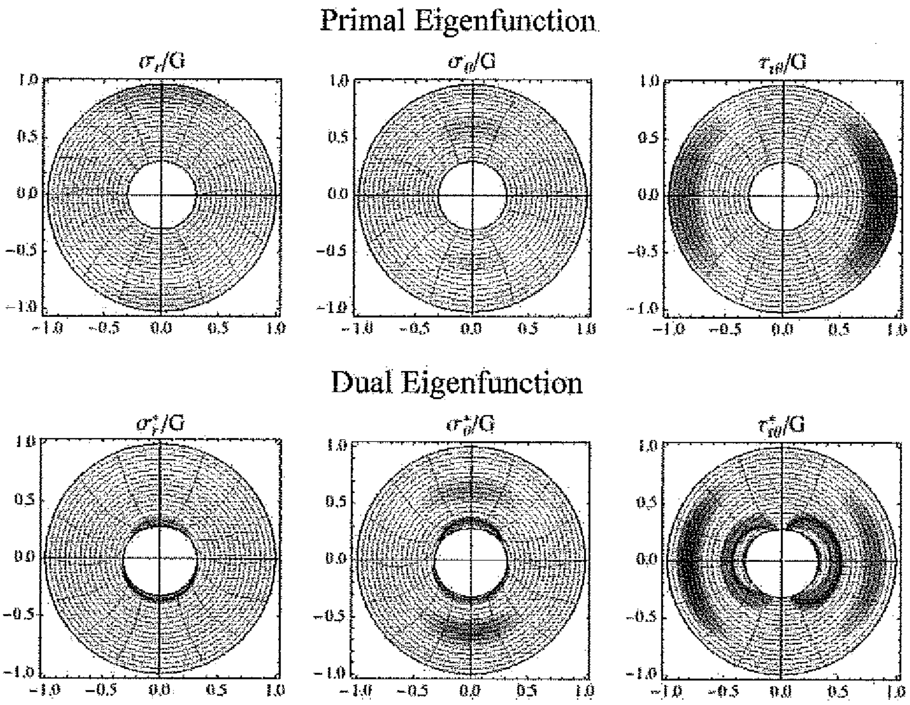


No.3 Mode of the Ring.

FIG. 49

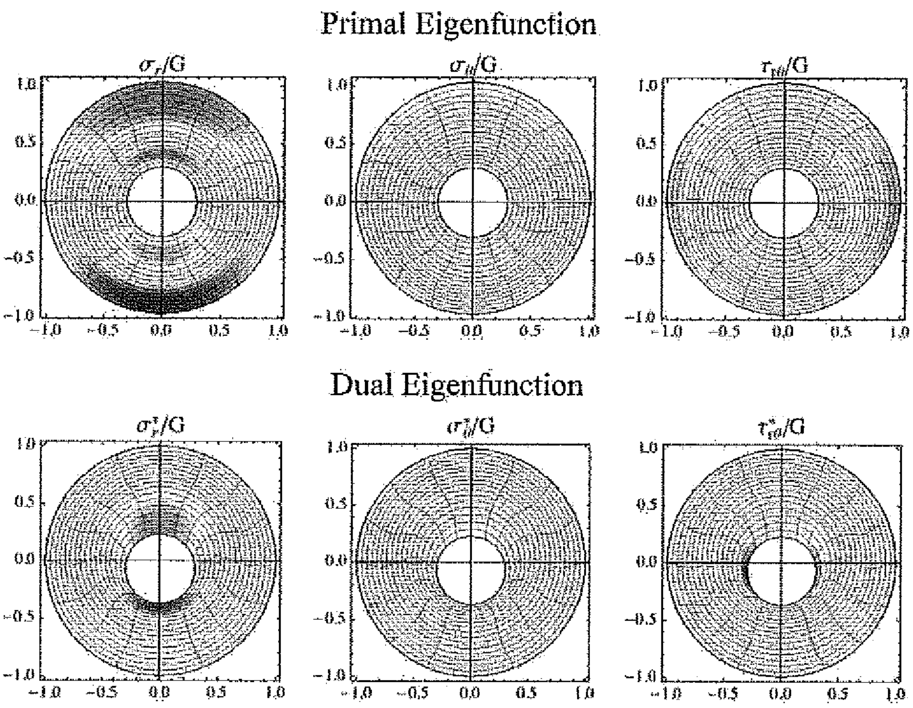


Fig. 35 No.4 Mode of the Ring.

FIG. 50

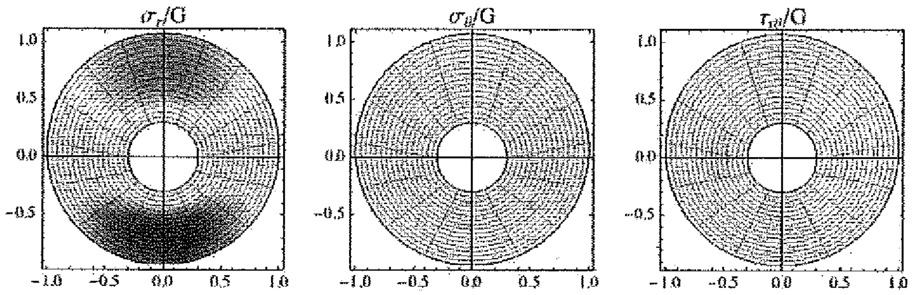


Deformatin and Stress Distribution by using 2 Modes.

FIG. 51

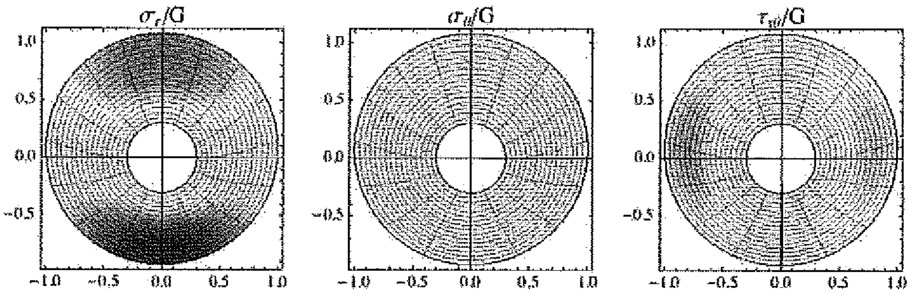


Deformatin and Stress Distribution by using 3 Modes.

FIG. 52

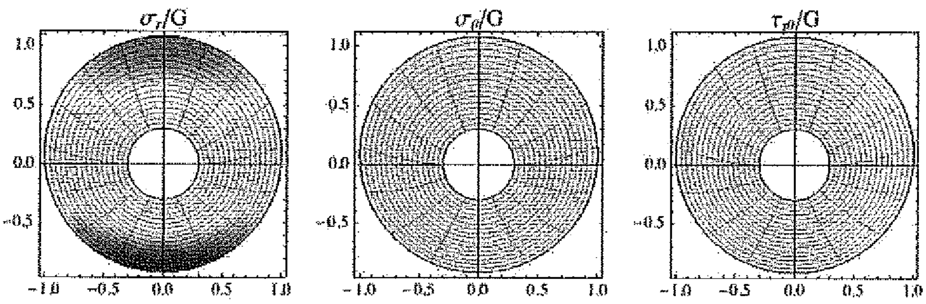


Deformatin and Stress Distribution by using 10 Modes.

FIG. 53

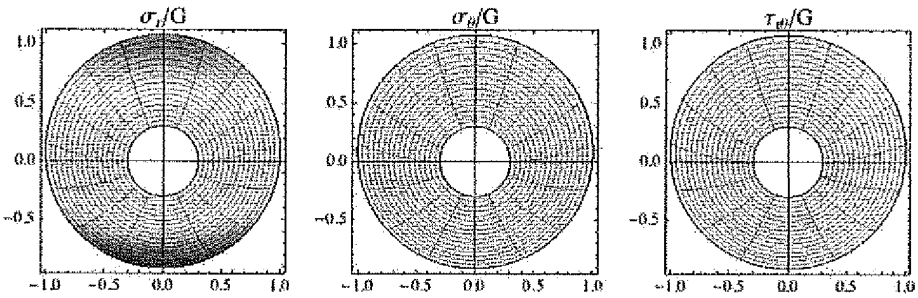


Deformatin and Stress Distribution by using 30 Modes.

FIG. 54

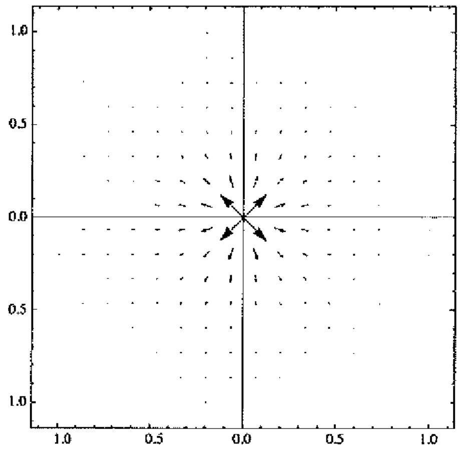


Velocity Distribution by Source.

FIG. 55

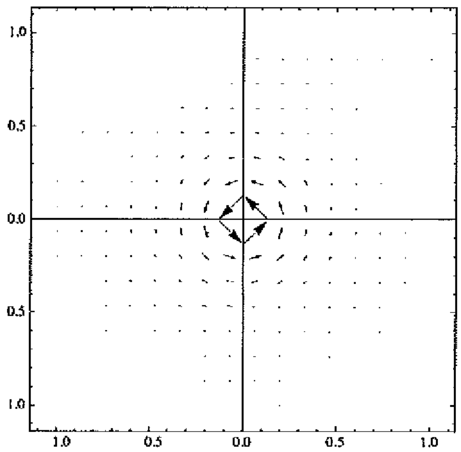


Fig. 41 Velocity Distribution by Vortex.

FIG. 56

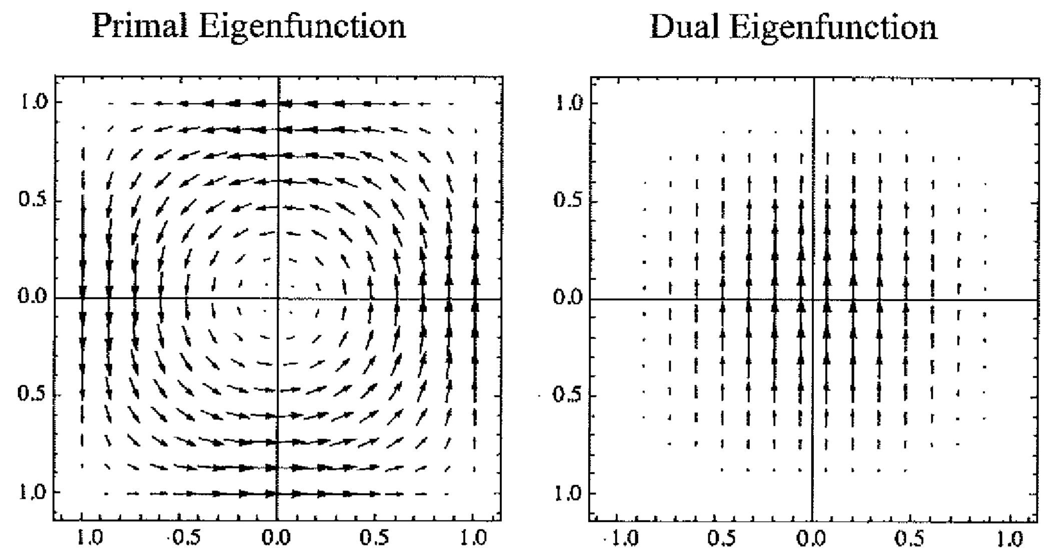


No.1 Mode (m=1,n=1) of the Function (1) $F^{1}_{11AA}$.

FIG. 57

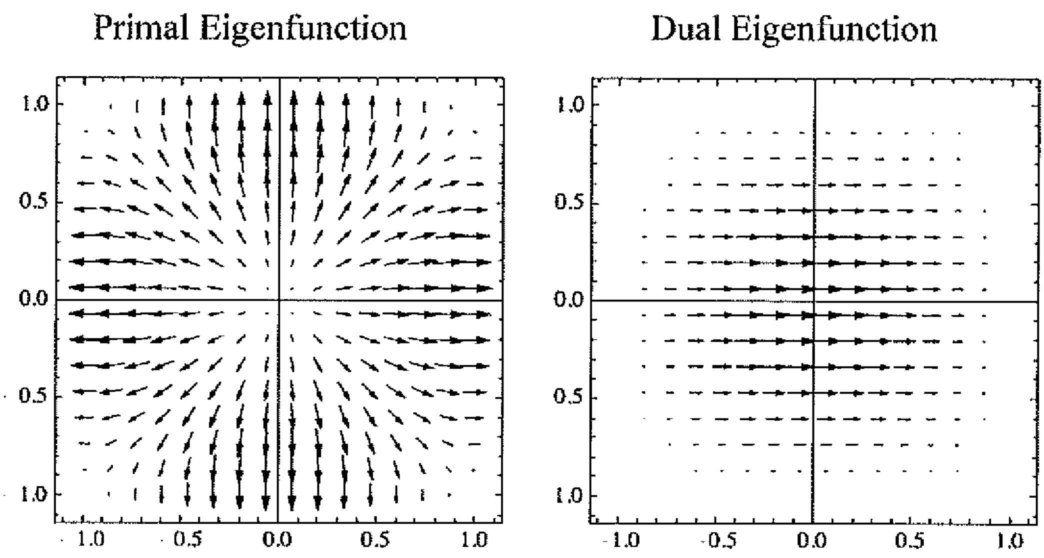


No.1 Mode (m=1,n=1) of the Function (2) $F^{1}_{11SS}$.

FIG. 58

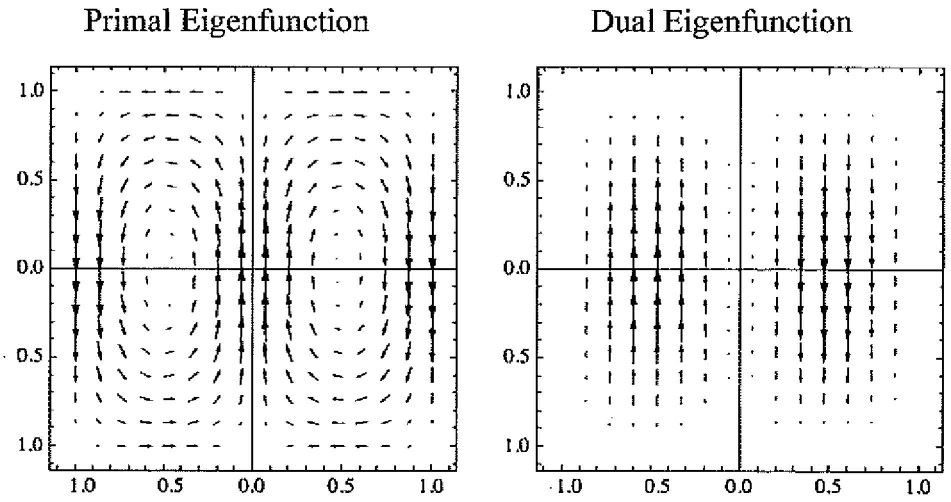


No.1 Mode (m=1,n=1) of the Function (3) $F^{1}_{21AS}$.

FIG. 59

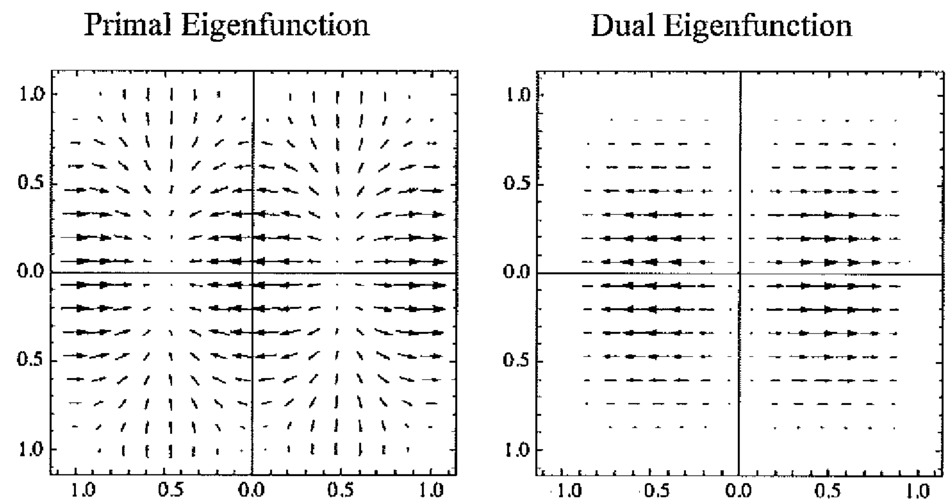


No.1 Mode (m=1,n=1) of the Function (4) $F^{1}_{21SA}$.

FIG. 60

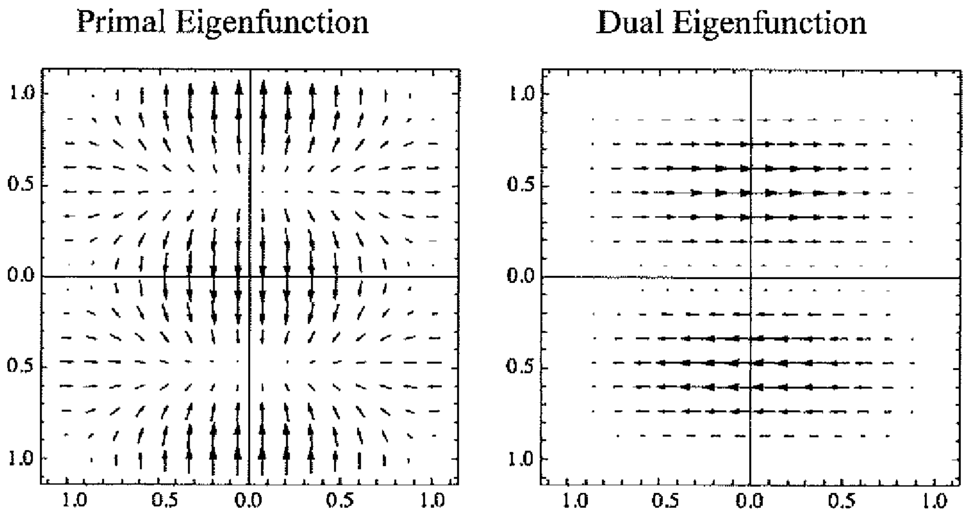


No.1 Mode (m=1,n=1) of the Function (5) $F^{1}_{12AS}$.

FIG. 61

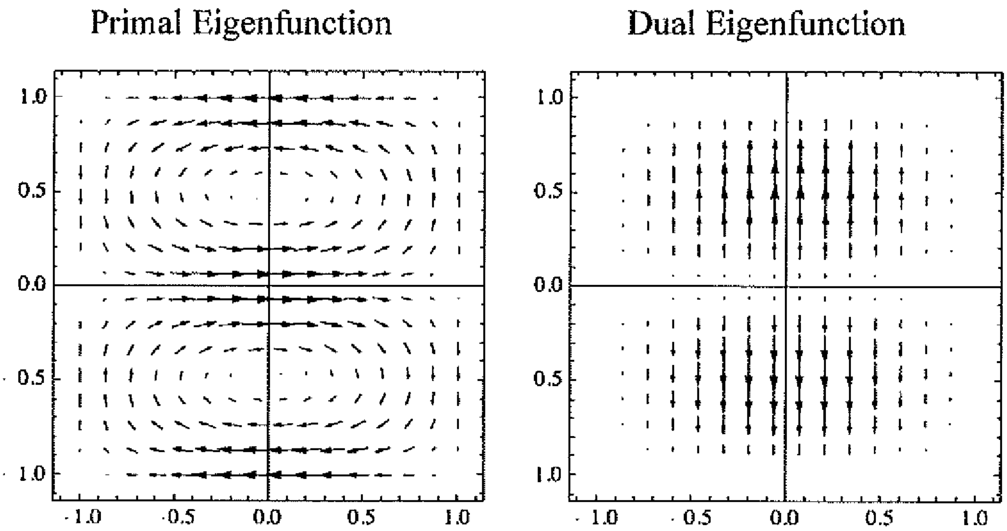


No.1 Mode (m=1,n=1) of the Function (6) $F^{1}_{12SA}$.

FIG. 62

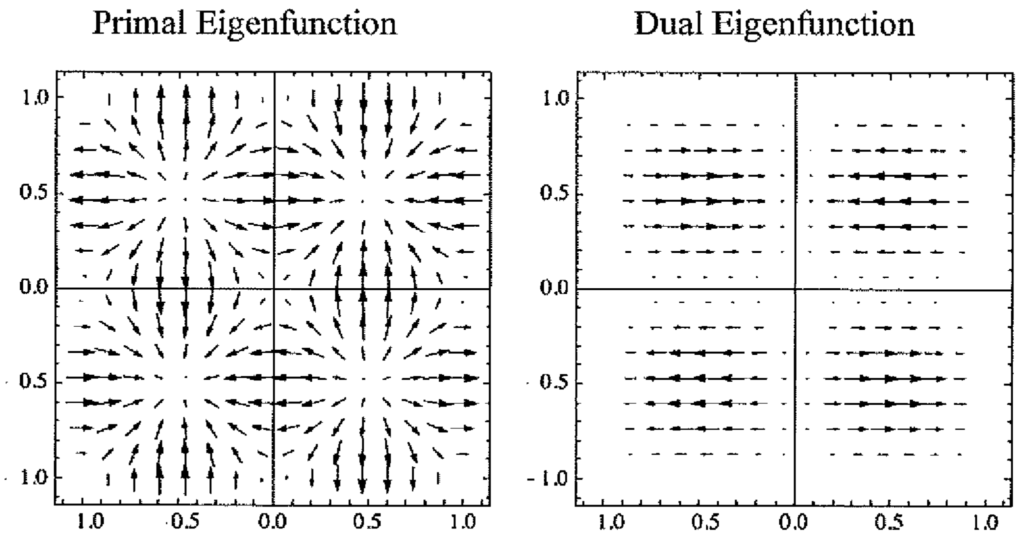


No.1 Mode (m=1,n=1) of the Function (7) $F^{1}_{22AA}$.

FIG. 63

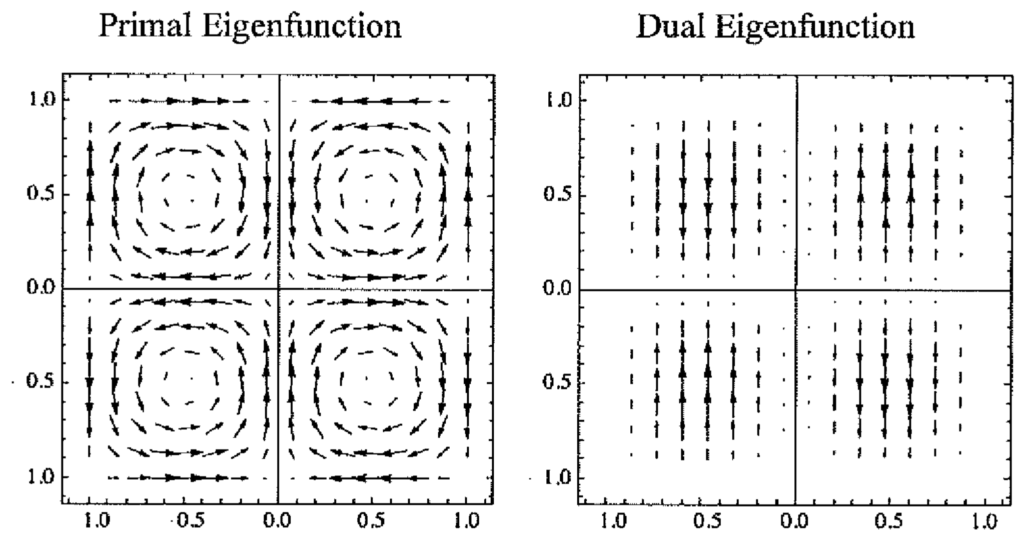


No.1 Mode (m=1,n=1) of the Function (8) $F^{1}_{22SS}$.

FIG. 64

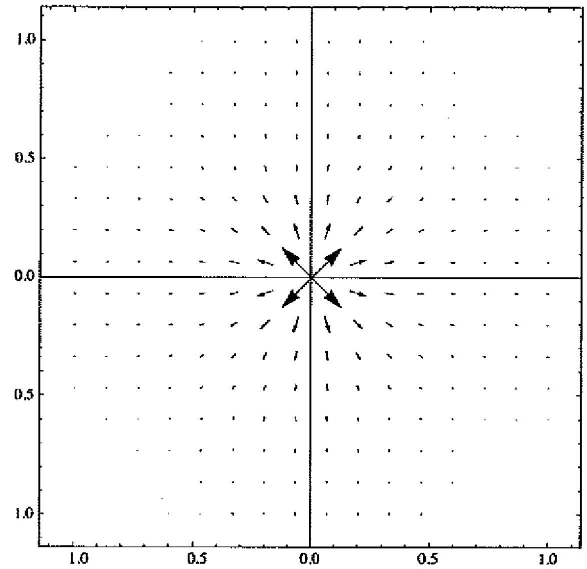


Fig. 50 Velocity Distribution by Eigenfunction Method for Source.

FIG. 65

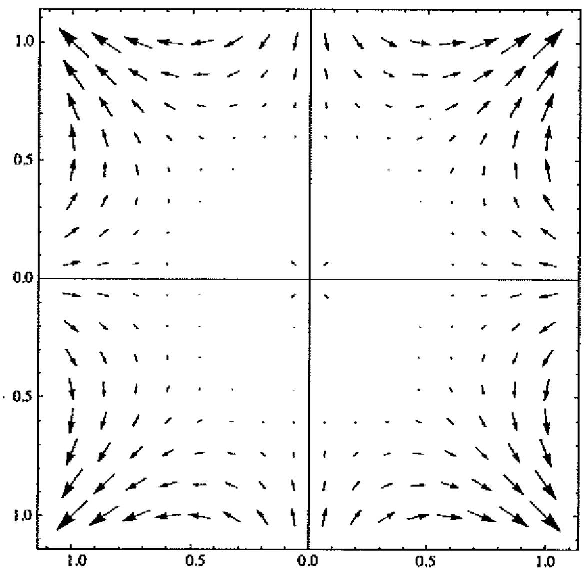


Velocity Distribution of Difference between Analytical Solution and Eigenfunction Method for Source.

FIG. 66

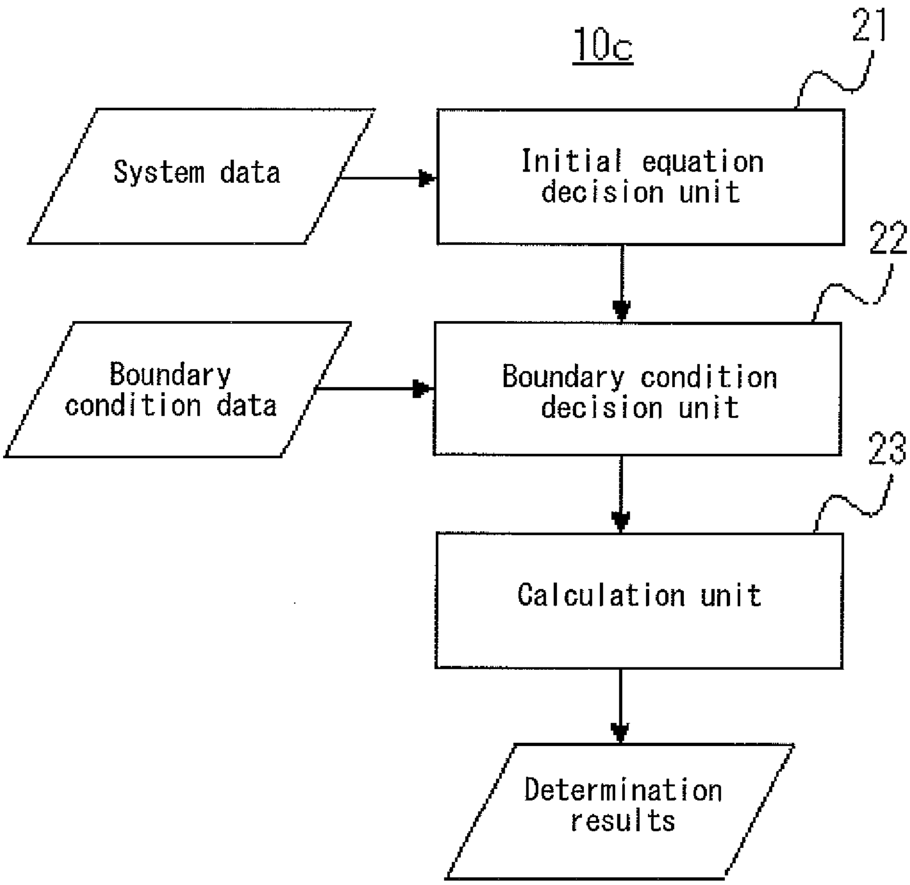
10c
21
22
23
System data
Initial equation decision unit
Boundary condition data
Boundary condition decision unit
Calculation unit
Determination results

FIG. 67

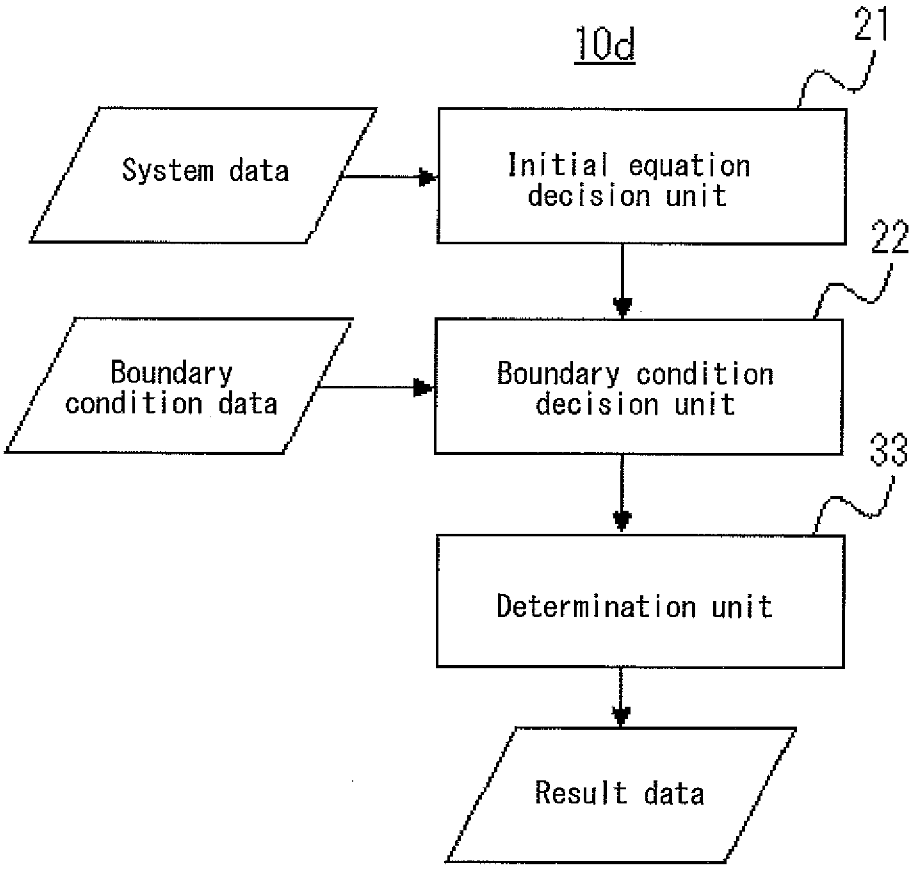
10d
21
22
33
System data
Initial equation decision unit
Boundary condition data
Boundary condition decision unit
Determination unit
Result data

FIG. 68

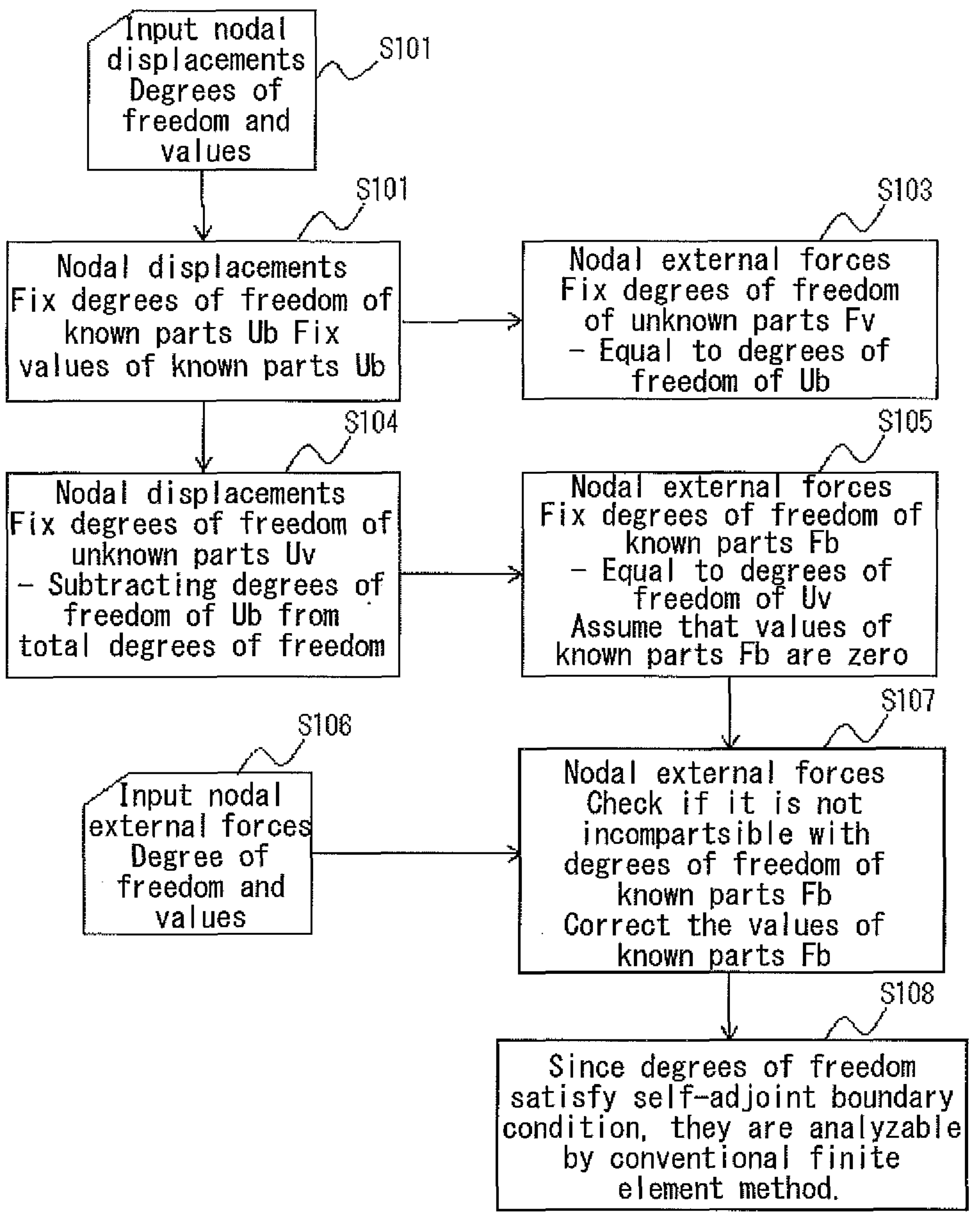
Input nodal displacements Degrees of freedom and values
S101
S101
Nodal displacements Fix degrees of freedom of known parts Ub Fix values of known parts Ub
S103
Nodal external forces Fix degrees of freedom of unknown parts Fv - Equal to degrees of freedom of Ub
S104
Nodal displacements Fix degrees of freedom of unknown parts Uv - Subtracting degrees of freedom of Ub from total degrees of freedom
S105
Nodal external forces Fix degrees of freedom of known parts Fb - Equal to degrees of freedom of Uv Assume that values of known parts Fb are zero
S106
Input nodal external forces Degree of freedom and values
S107
Nodal external forces Check if it is not incompartsible with degrees of freedom of known parts Fb Correct the values of known parts Fb
S108
Since degrees of freedom satisfy self-adjoint boundary condition, they are analyzable by conventional finite element method.

FIG. 69

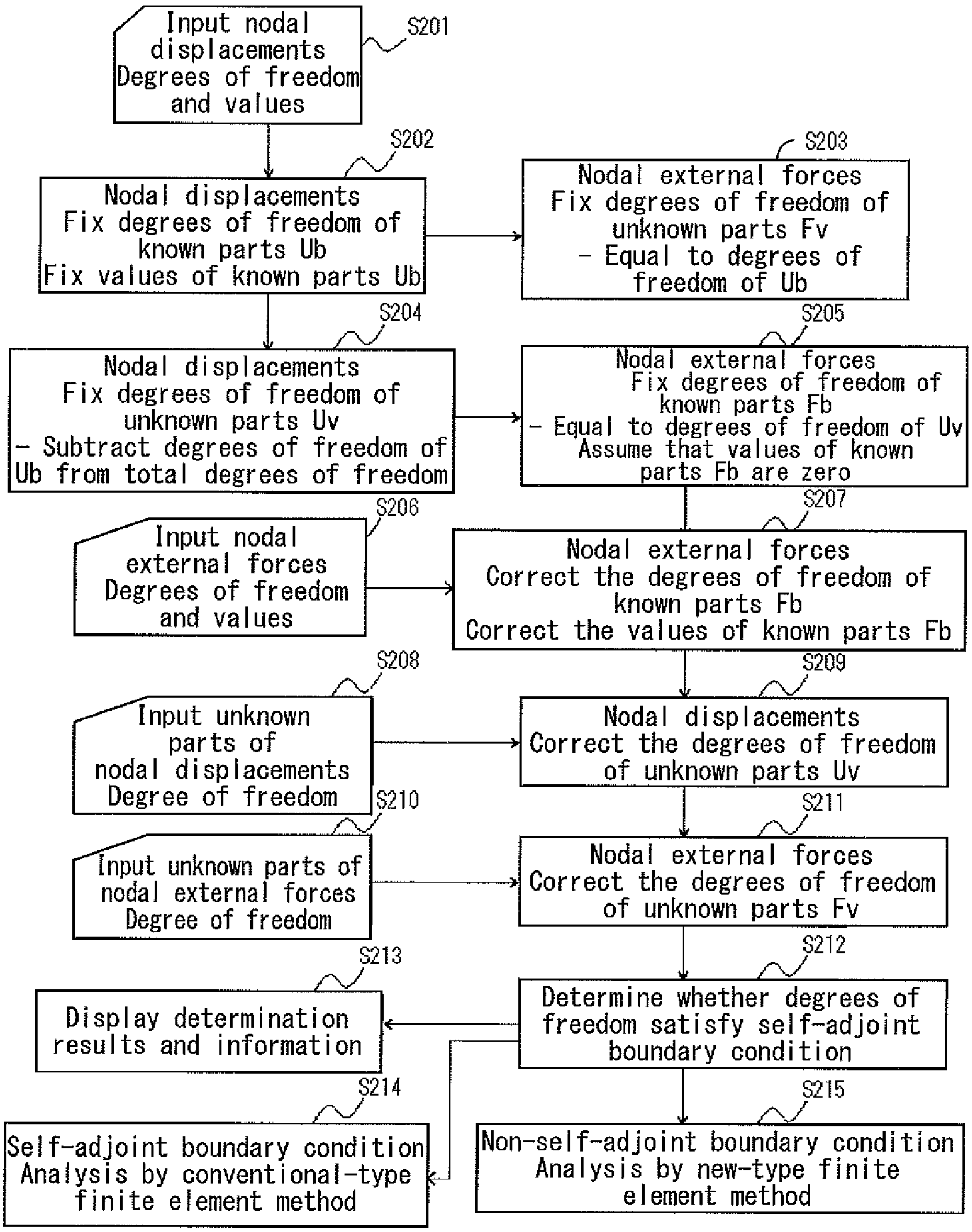
Input nodal displacements Degrees of freedom and values
S201
Nodal displacements Fix degrees of freedom of known parts Ub Fix values of known parts Ub
S202
Nodal external forces Fix degrees of freedom of unknown parts Fv - Equal to degrees of freedom of Ub
S203
Nodal displacements Fix degrees of freedom of unknown parts Uv - Subtract degrees of freedom of Ub from total degrees of freedom
S204
Nodal external forces Fix degrees of freedom of known parts Fb - Equal to degrees of freedom of Uv Assume that values of known parts Fb are zero
S205
Input nodal external forces Degrees of freedom and values
S206
Nodal external forces Correct the degrees of freedom of known parts Fb Correct the values of known parts Fb
S207
Input unknown parts of nodal displacements Degree of freedom
S208
Nodal displacements Correct the degrees of freedom of unknown parts Uv
S209
Input unknown parts of nodal external forces Degree of freedom
S210
Nodal external forces Correct the degrees of freedom of unknown parts Fv
S211
Determine whether degrees of freedom satisfy self-adjoint boundary condition
S212
Display determination results and information
S213
Self-adjoint boundary condition Analysis by conventional-type finite element method
S214
Non-self-adjoint boundary condition Analysis by new-type finite element method
S215

FIG. 70

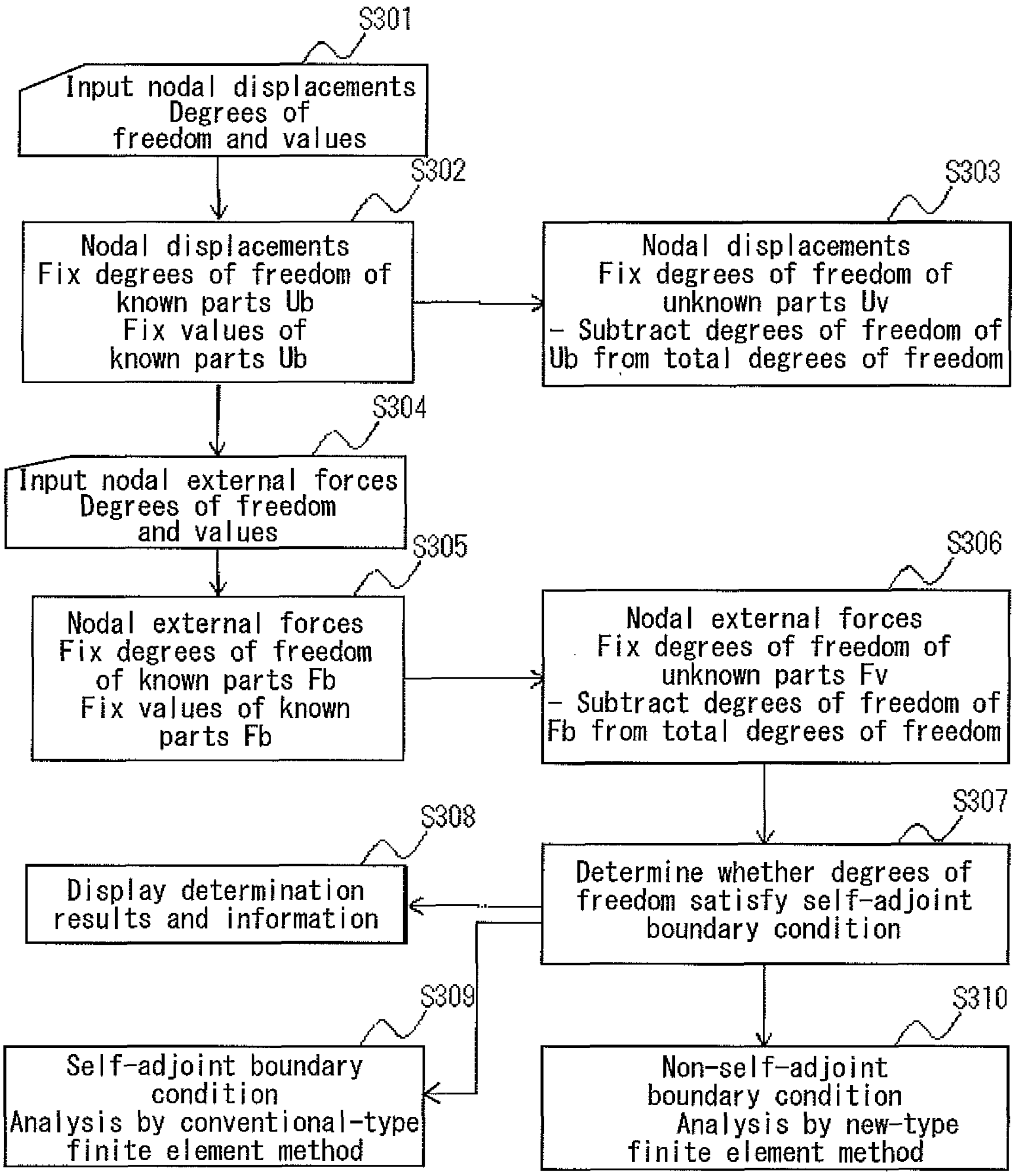
S301
Input nodal displacements Degrees of freedom and values
S302
Nodal displacements Fix degrees of freedom of known parts Ub Fix values of known parts Ub
S303
Nodal displacements Fix degrees of freedom of unknown parts Uv
- Subtract degrees of freedom of Ub from total degrees of freedom
S304
Input nodal external forces Degrees of freedom and values
S305
Nodal external forces Fix degrees of freedom of known parts Fb Fix values of known parts Fb
S306
Nodal external forces Fix degrees of freedom of unknown parts Fv
- Subtract degrees of freedom of Fb from total degrees of freedom
S307
Determine whether degrees of freedom satisfy self-adjoint boundary condition
S308
Display determination results and information
S309
Self-adjoint boundary condition Analysis by conventional-type finite element method
S310
Non-self-adjoint boundary condition Analysis by new-type finite element method

FIG. 71

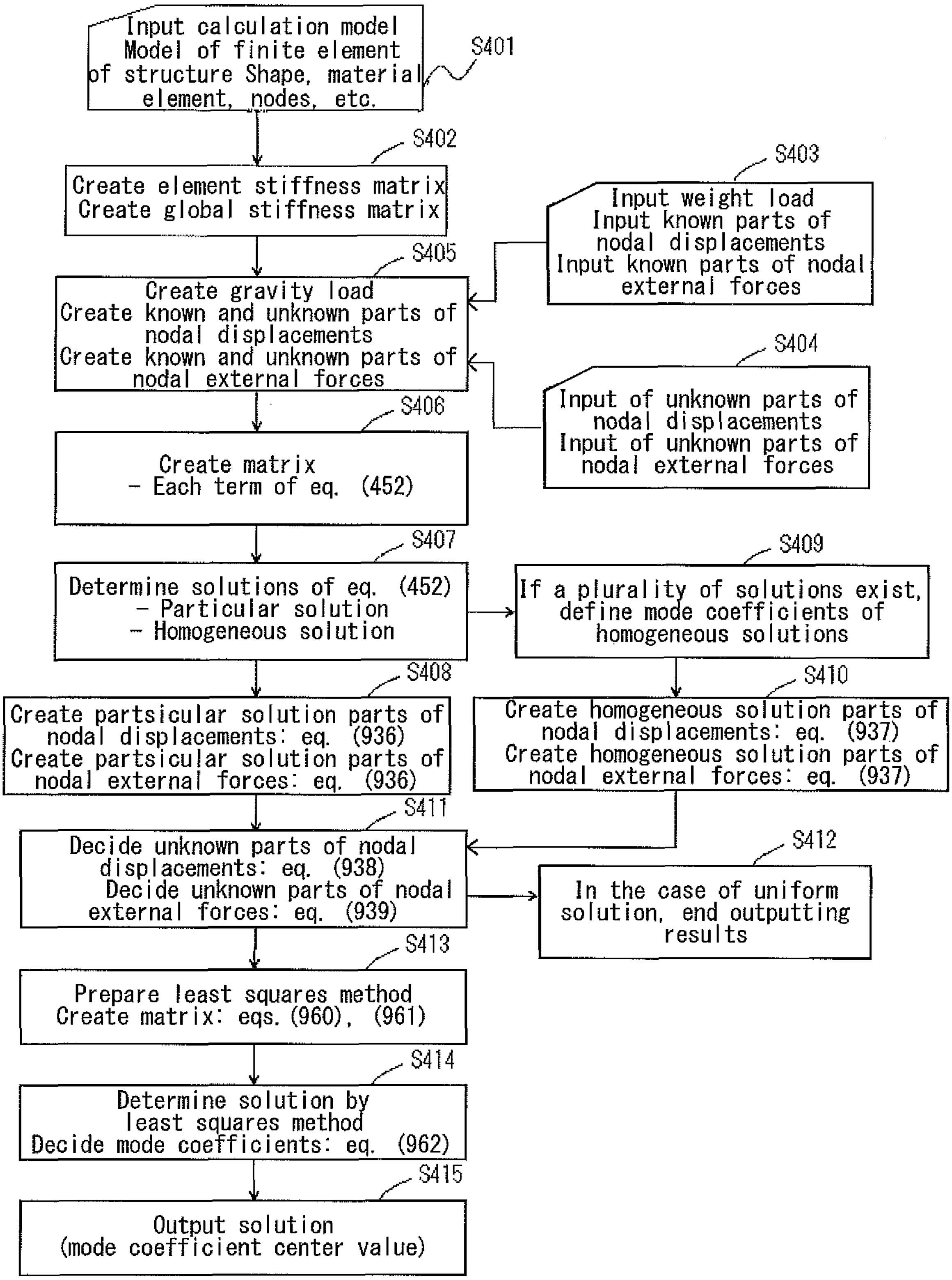
Input calculation model
Model of finite element of structure Shape, material, element, nodes, etc.
S401
Create element stiffness matrix
Create global stiffness matrix
S402
Input weight load
Input known parts of nodal displacements
Input known parts of nodal external forces
S403
Create gravity load
Create known and unknown parts of nodal displacements
Create known and unknown parts of nodal external forces
S405
Input of unknown parts of nodal displacements
Input of unknown parts of nodal external forces
S404
Create matrix
- Each term of eq. (452)
S406
Determine solutions of eq. (452)
- Particular solution
- Homogeneous solution
S407
If a plurality of solutions exist, define mode coefficients of homogeneous solutions
S409
Create partsicular solution parts of nodal displacements: eq. (936)
Create partsicular solution parts of nodal external forces: eq. (936)
S408
Create homogeneous solution parts of nodal displacements: eq. (937)
Create homogeneous solution parts of nodal external forces: eq. (937)
S410
Decide unknown parts of nodal displacements: eq. (938)
Decide unknown parts of nodal external forces: eq. (939)
S411
In the case of uniform solution, end outputting results
S412
Prepare least squares method
Create matrix: eqs. (960), (961)
S413
Determine solution by least squares method
Decide mode coefficients: eq. (962)
S414
Output solution
(mode coefficient center value)
S415

FIG. 72

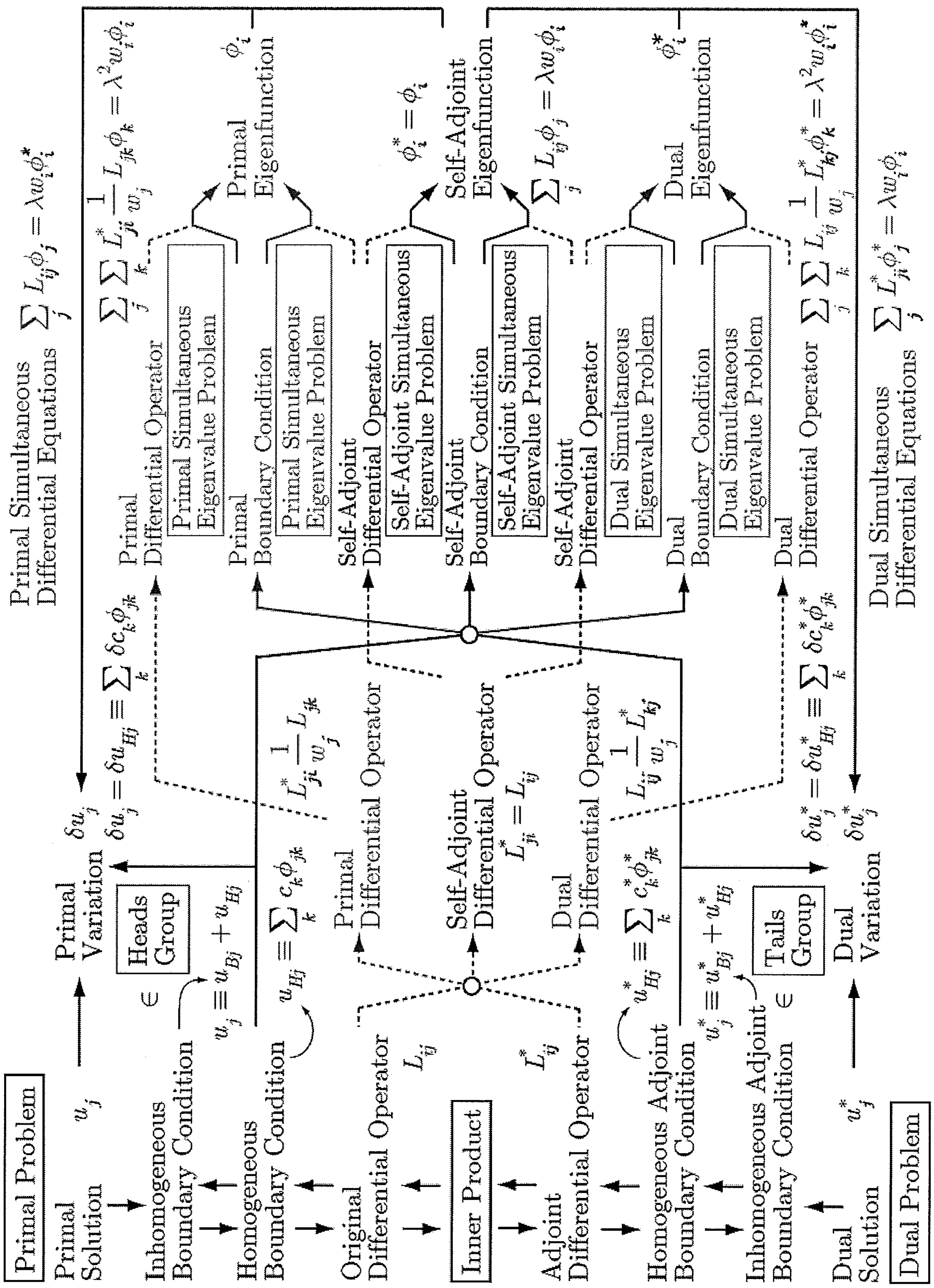

Primal Problem
Primal Solution
Inhomogeneous Boundary Condition
Homogeneous Boundary Condition
Original Differential Operator
Inner Product
Adjoint Differential Operator
Homogeneous Adjoint Boundary Condition
Inhomogeneous Adjoint Boundary Condition
Dual Solution
Dual Problem
Heads Group
Tails Group
Primal Variation
Dual Variation
Primal Differential Operator
Self-Adjoint Differential Operator
Dual Differential Operator
Primal Simultaneous Differential Equations
Dual Simultaneous Differential Equations
Primal Simultaneous Eigenvalue Problem
Self-Adjoint Simultaneous Eigenvalue Problem
Dual Simultaneous Eigenvalue Problem
Primal Boundary Condition
Self-Adjoint Boundary Condition
Dual Boundary Condition
Primal Eigenfunction
Self-Adjoint Eigenfunction
Dual Eigenfunction


FIG.1

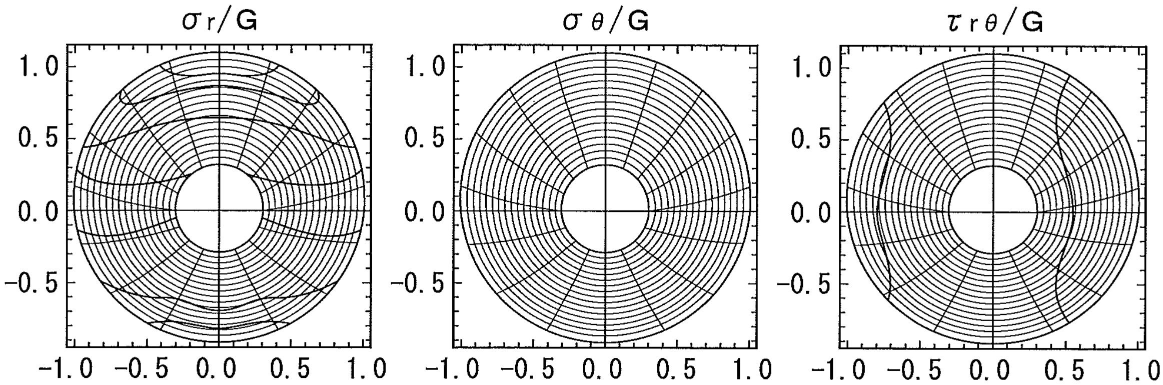
σr/G
σθ/G
τrθ/G
1.0
0.5
0.0
-0.5
-1.0 -0.5 0.0 0.5 1.0

FIG. 9

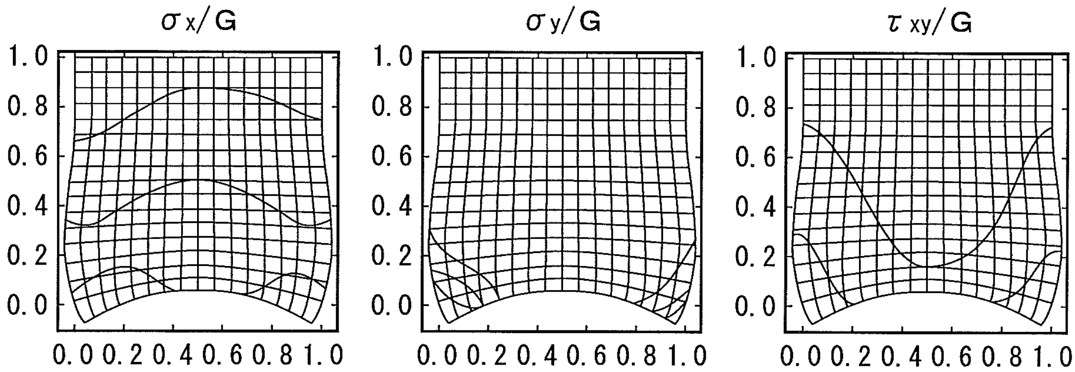
σx/G
σy/G
τxy/G
1.0
0.8
0.6
0.4
0.2
0.0
0.0 0.2 0.4 0.6 0.8 1.0

FIG. 10

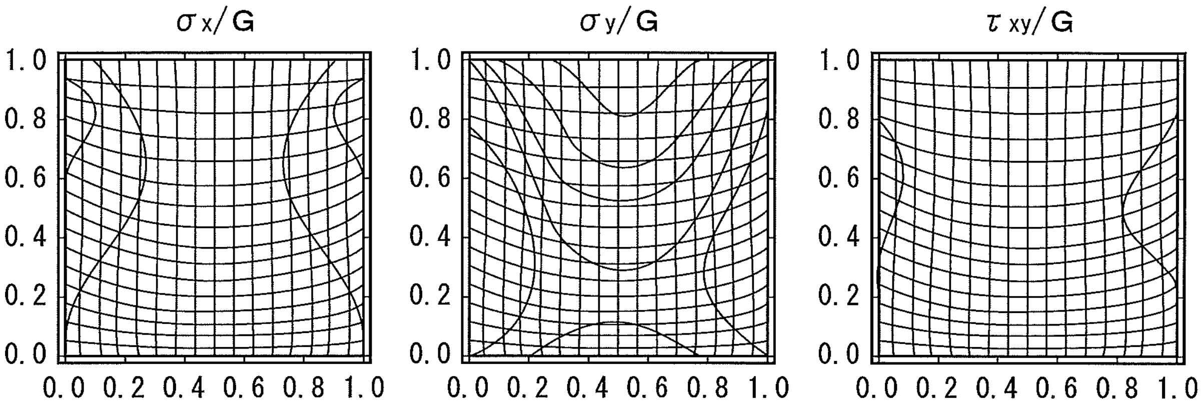
σx/G
σy/G
τxy/G
1.0
0.8
0.6
0.4
0.2
0.0
0.0 0.2 0.4 0.6 0.8 1.0

FIG. 11

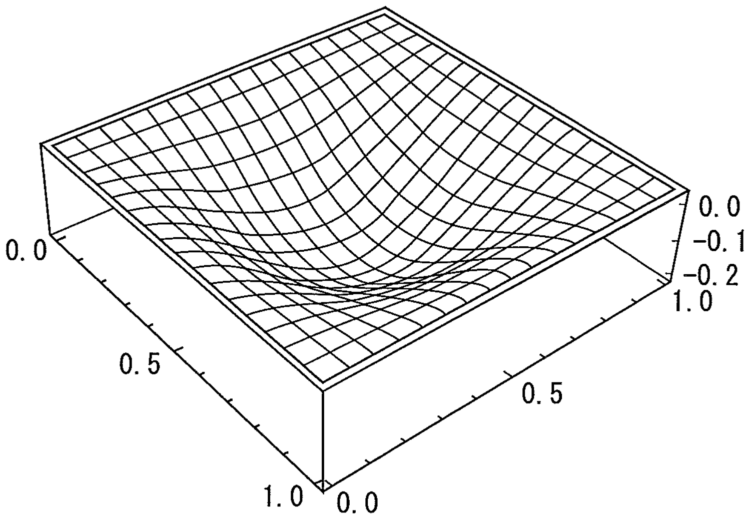
0.0
0.5
1.0
0.0
0.5
1.0
0.0
-0.1
-0.2

FIG. 12

$$\frac{\partial u}{\partial x}+\frac{\partial v}{\partial y}=\delta(x-x_0,y-y_0)$$
$$\frac{\partial v}{\partial x}-\frac{\partial u}{\partial y}=0$$

$$\phi=\frac{1}{2\pi}\log\sqrt{(x-x_0)^2+(y-y_0)^2}$$
$$u=\frac{\partial\phi}{\partial x},\quad v=\frac{\partial\phi}{\partial y}$$

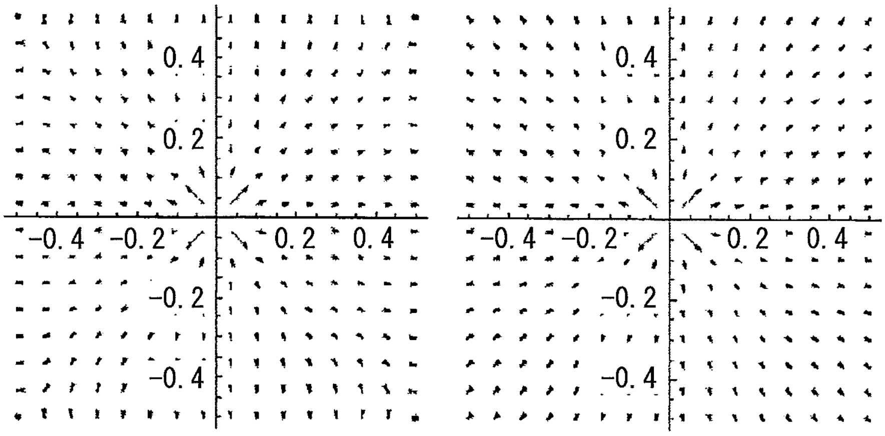


Eigenfunction

Correct solution

FIG. 14

$$\frac{\partial u}{\partial x}+\frac{\partial v}{\partial y}=0$$
$$\frac{\partial v}{\partial x}-\frac{\partial u}{\partial y}=\delta(x-x_0,y-y_0)$$

$$\phi=\frac{1}{2\pi}\arctan\frac{y-y_0}{x-x_0}$$
$$u=\frac{\partial\phi}{\partial x},\quad v=\frac{\partial\phi}{\partial y}$$

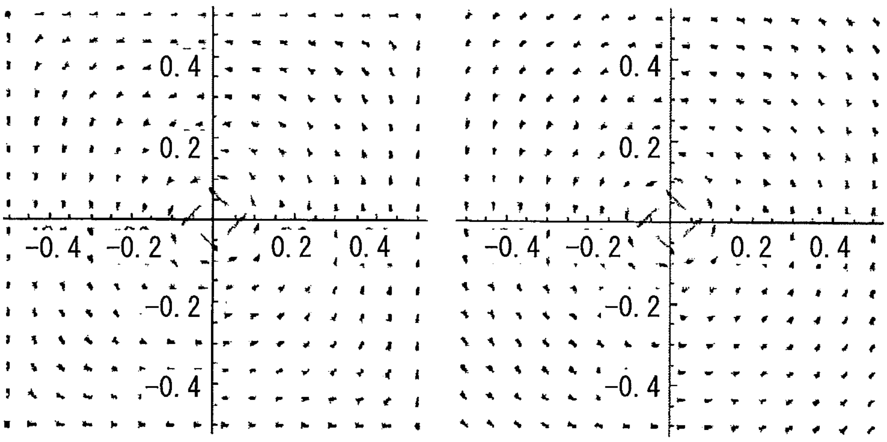


Eigenfunction

Correct solution

FIG. 15

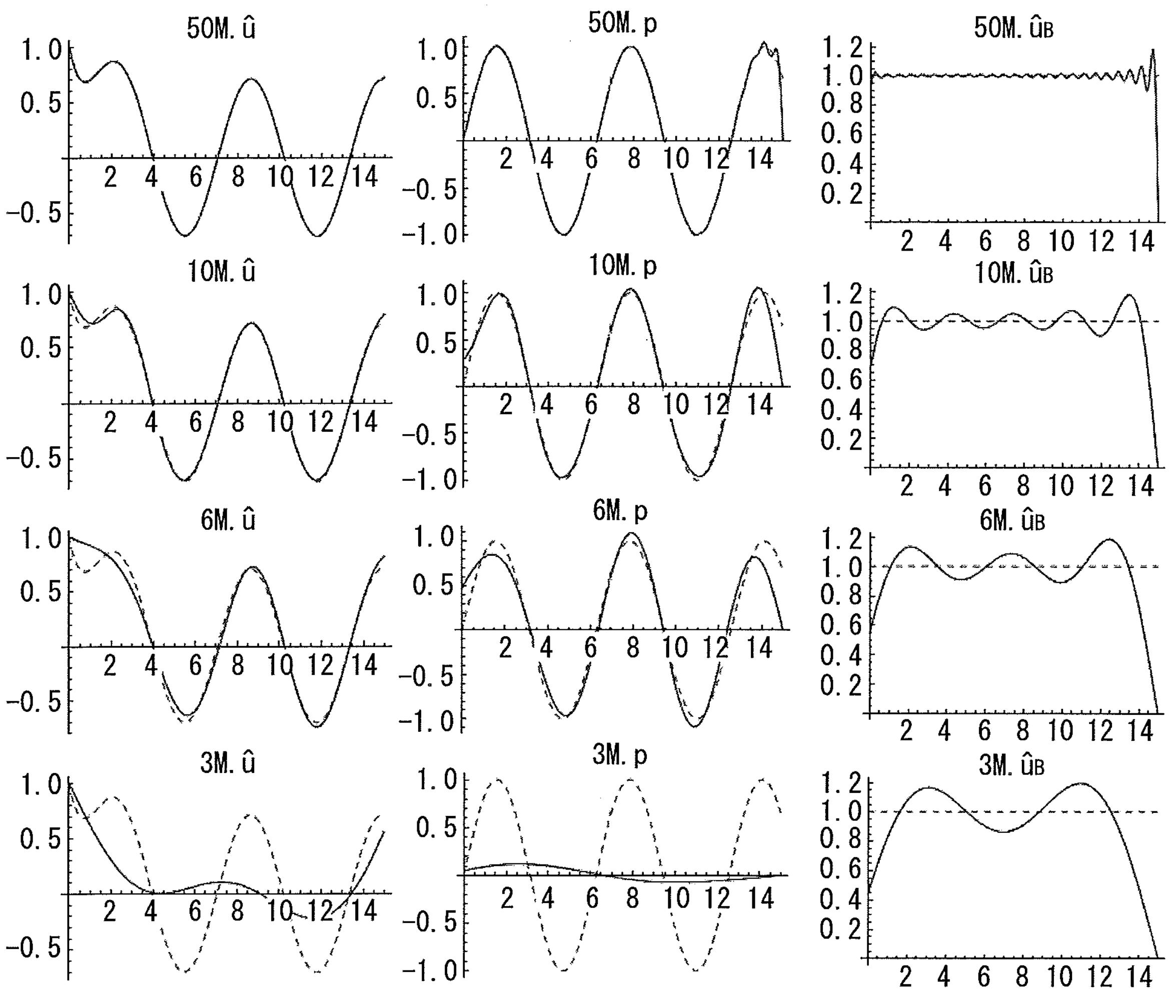


Response for p(t)≡sin γ t.

FIG. 18

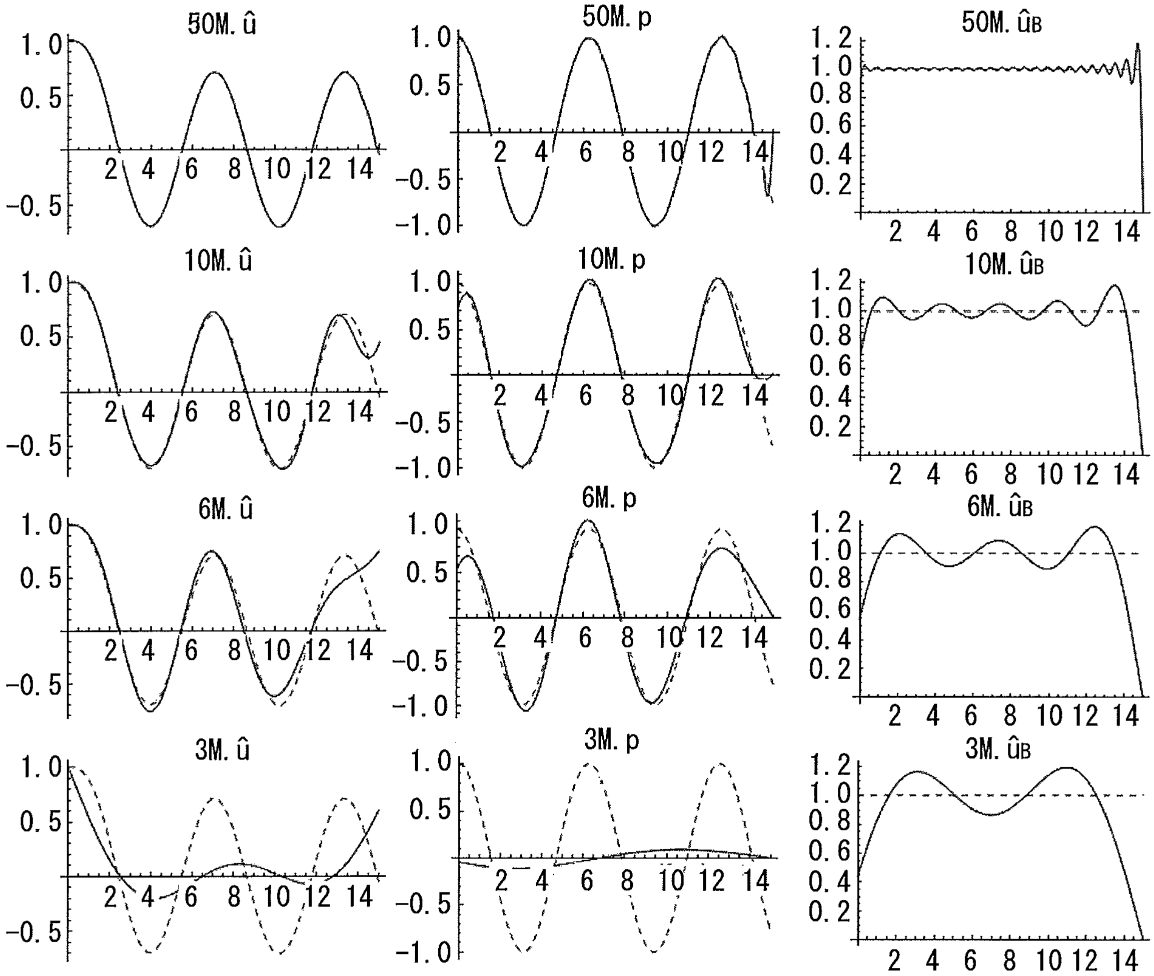


Response for p(t)≡cos γ t.

FIG. 19

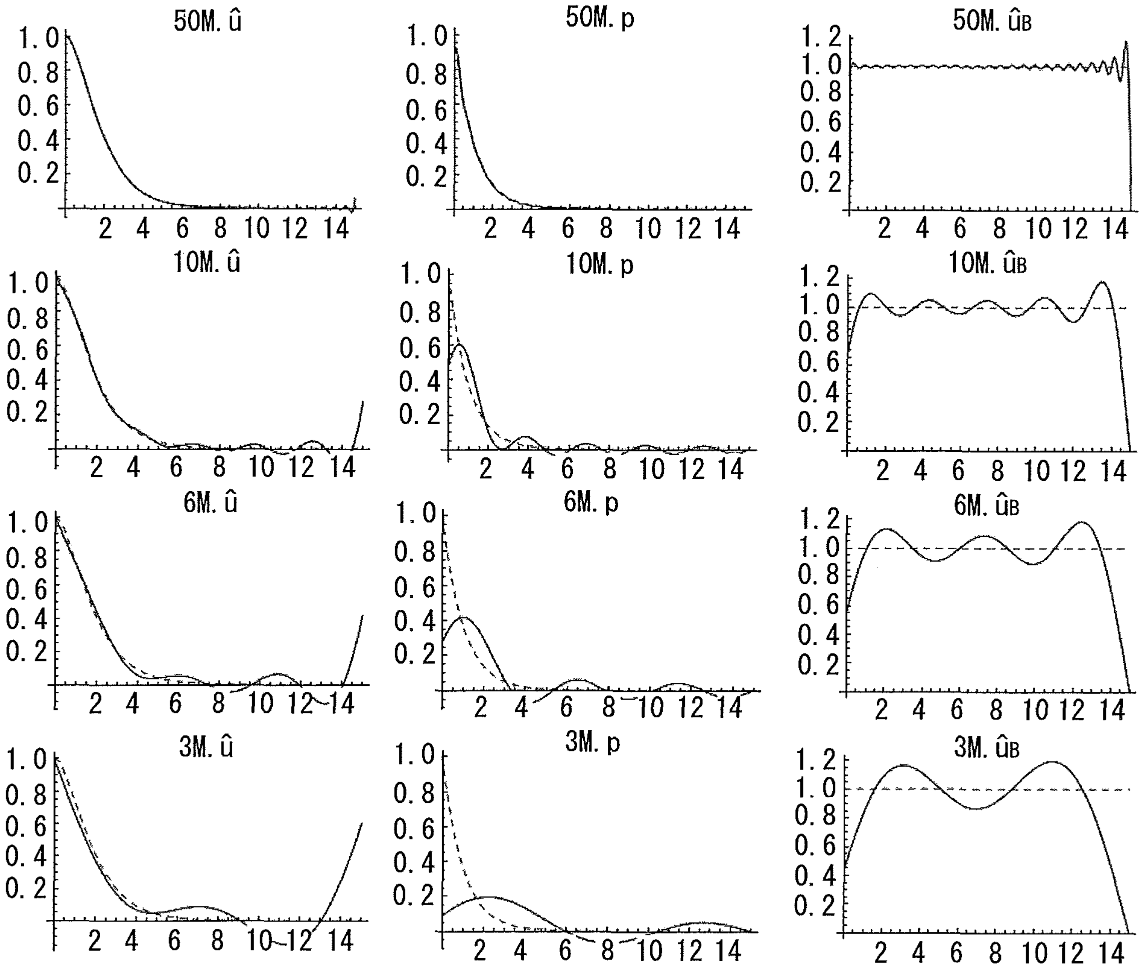


Response for p(t)≡$e^{-\gamma t}$

FIG. 20

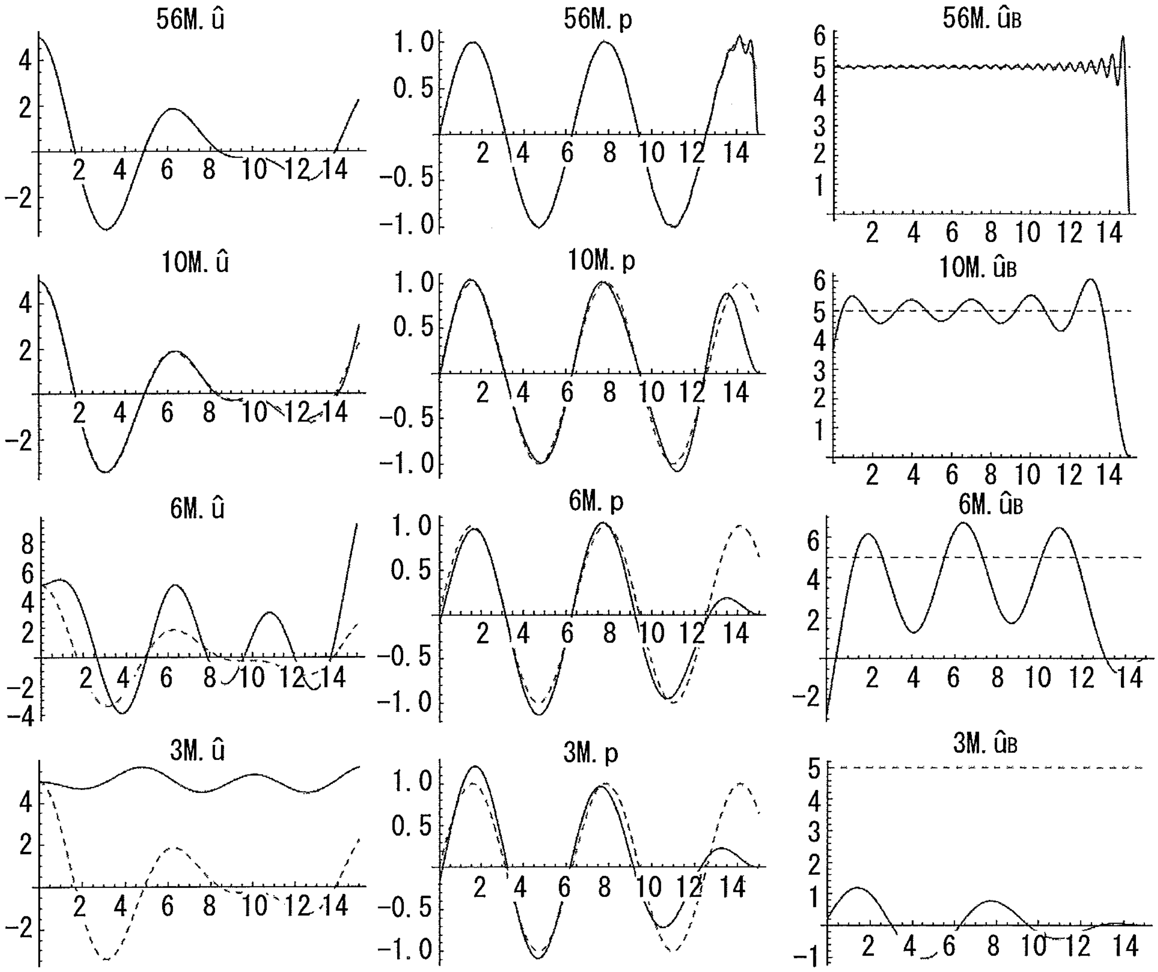


Response for $p(t) \equiv \sin \omega_0 t$.

FIG. 24

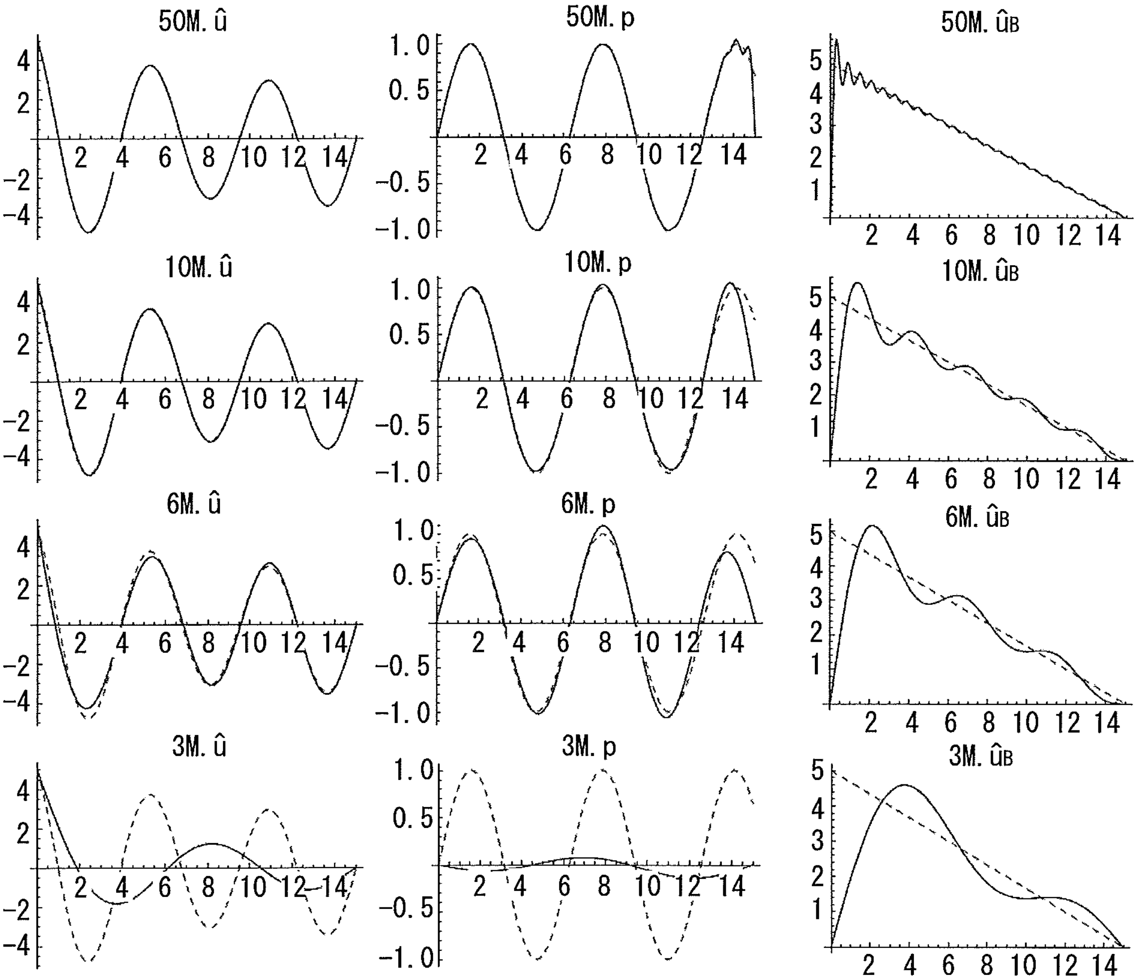


Response for p(t)≡sin$\omega_0$t.

FIG. 25

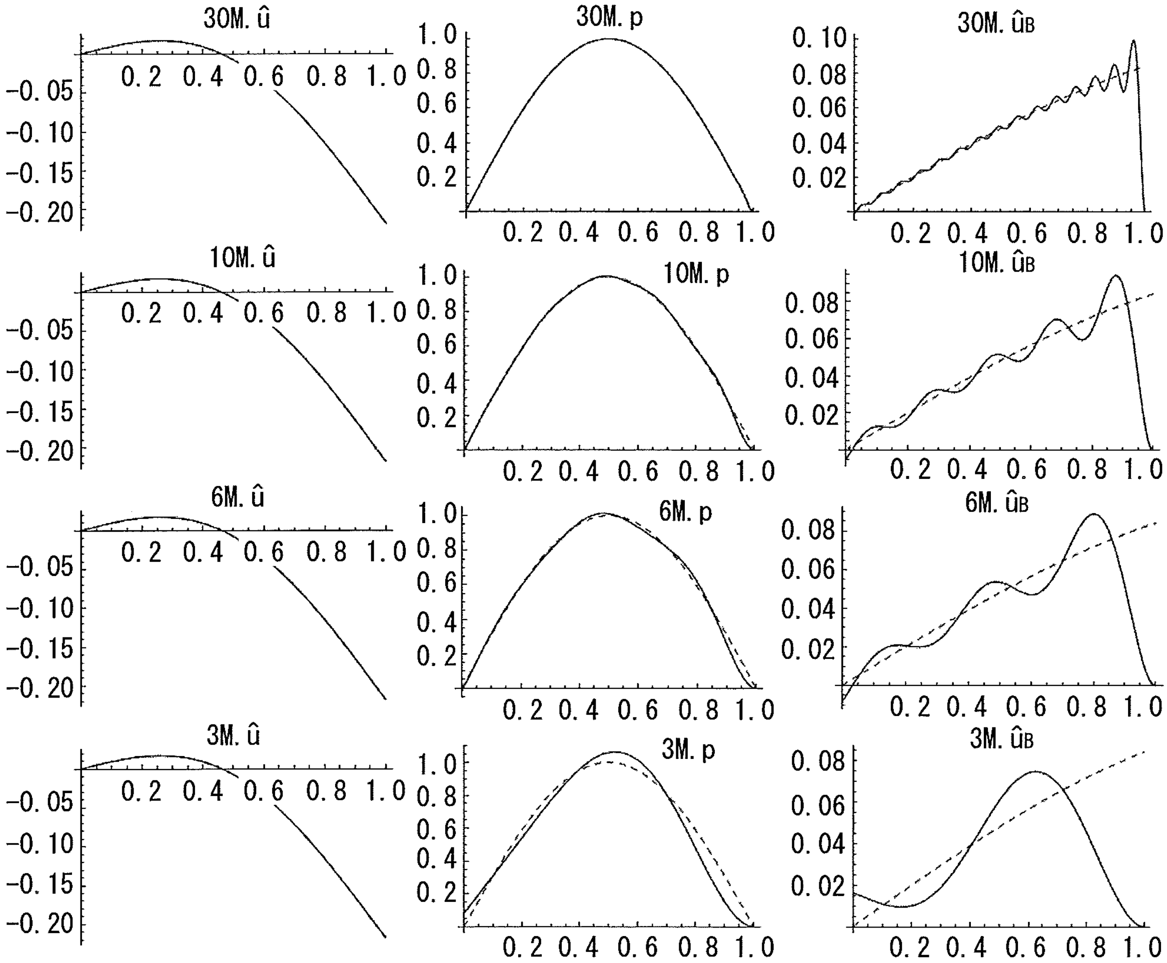


Response for $p(x) \equiv \sin\frac{\pi}{l} x$.

FIG. 28

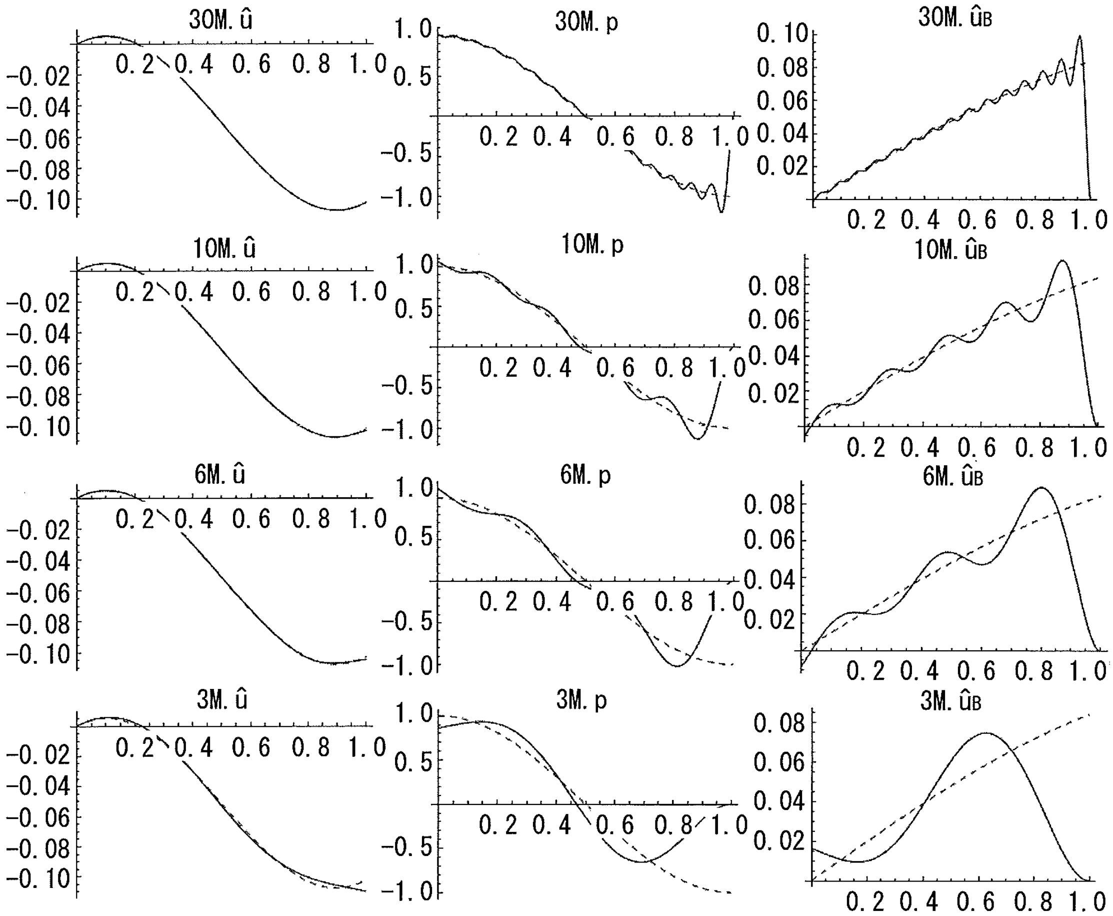


Response for $p(x) \equiv \cos \frac{\pi}{l} x$.

FIG. 29

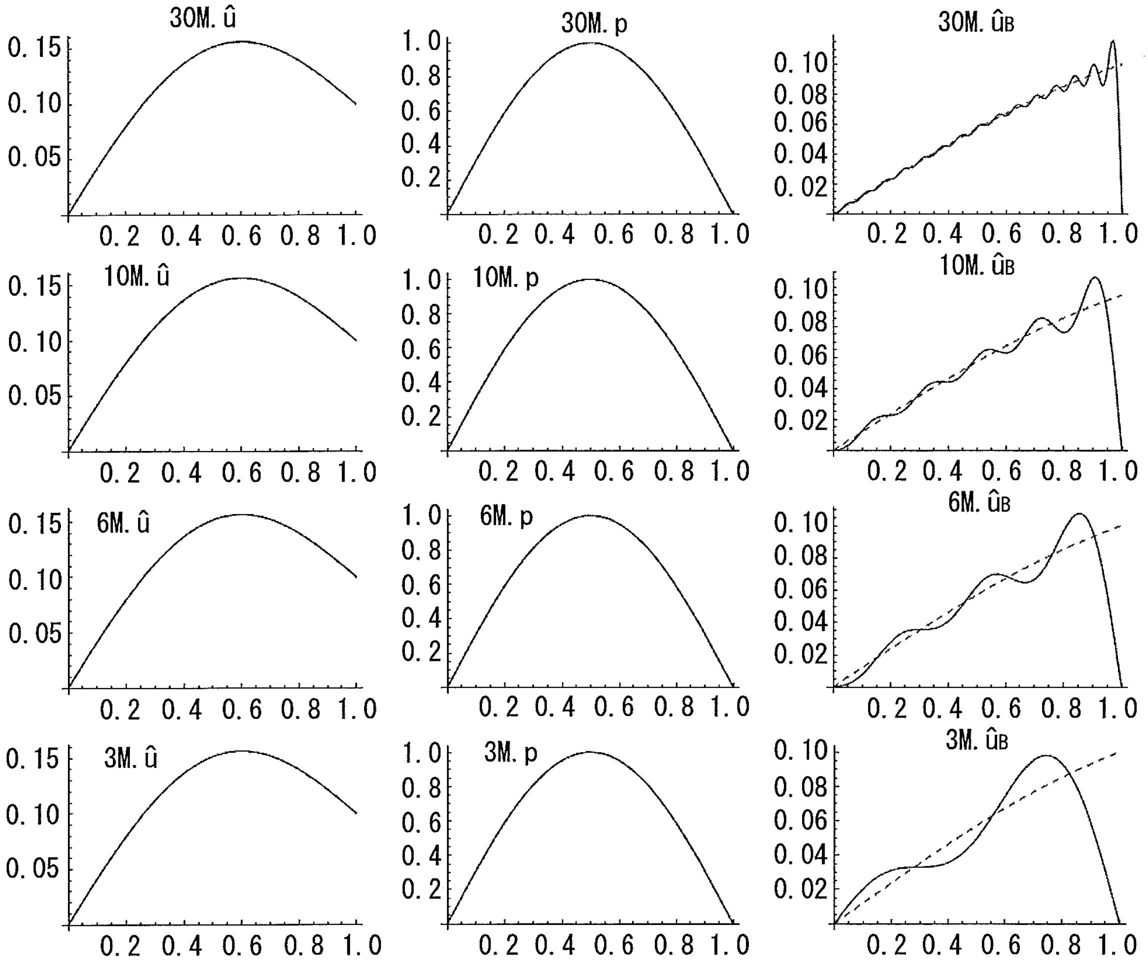


Response for $p(x) \equiv \sin\frac{\pi}{l} x$.

FIG. 30

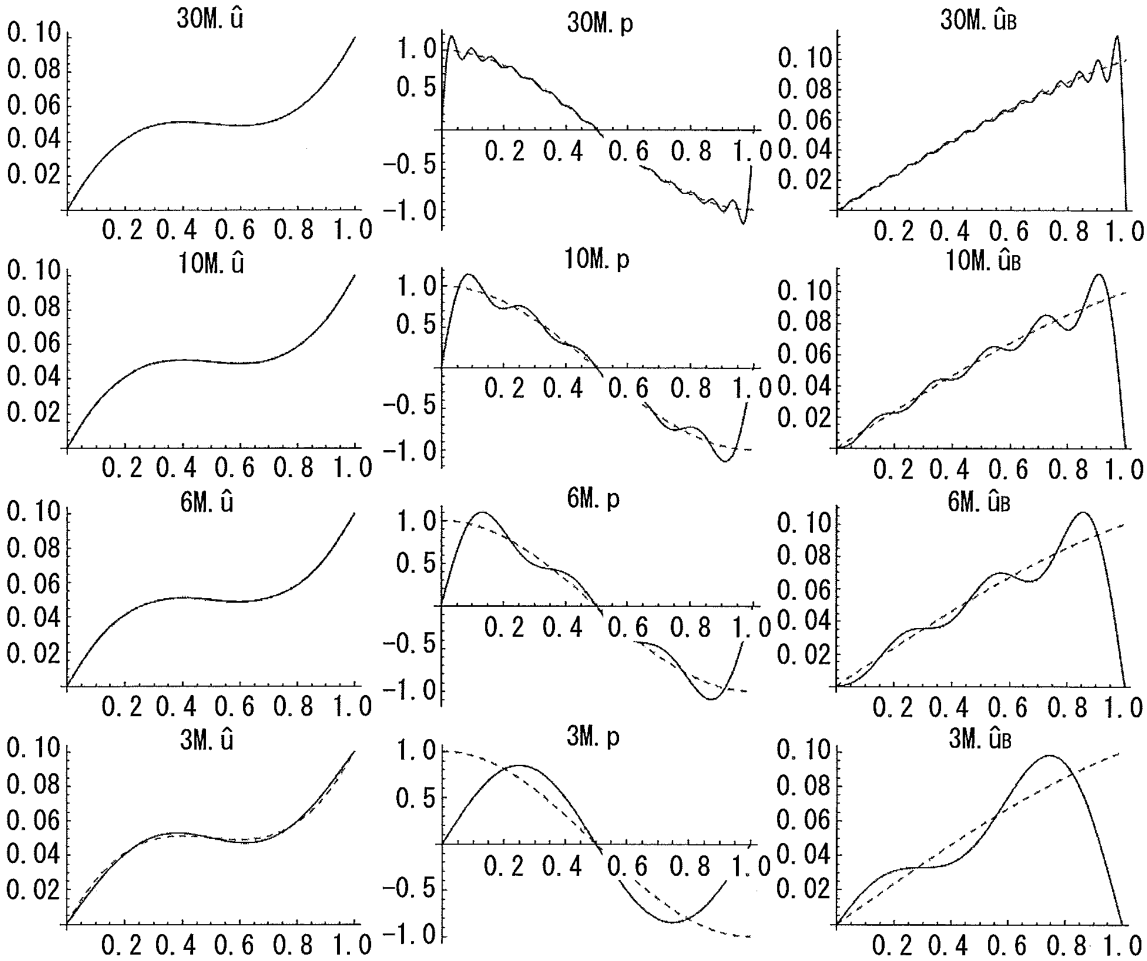


Response for $p(x) \equiv \cos \frac{\pi}{l} x$.

FIG. 31

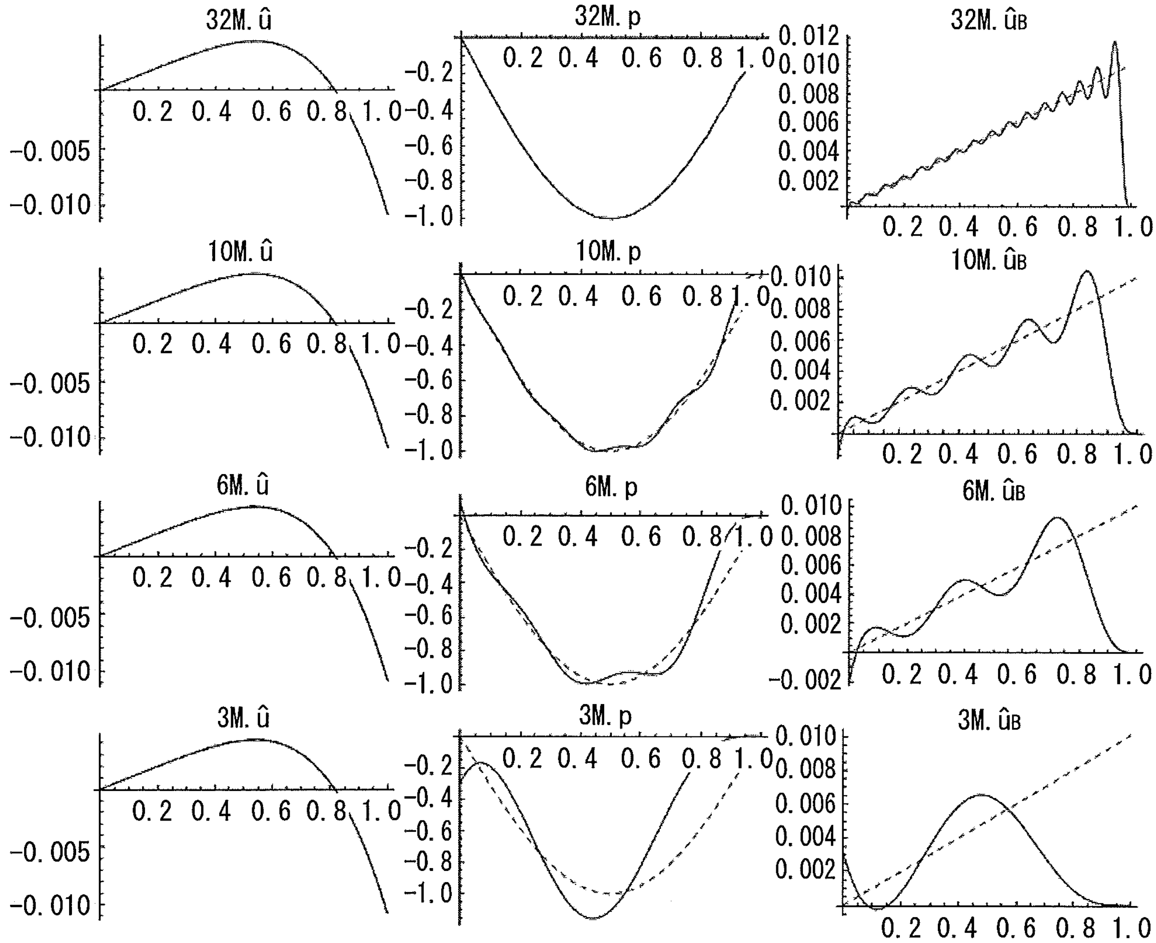


Response for $p(x) \equiv \sin \frac{\pi}{l} x$.

FIG. 35

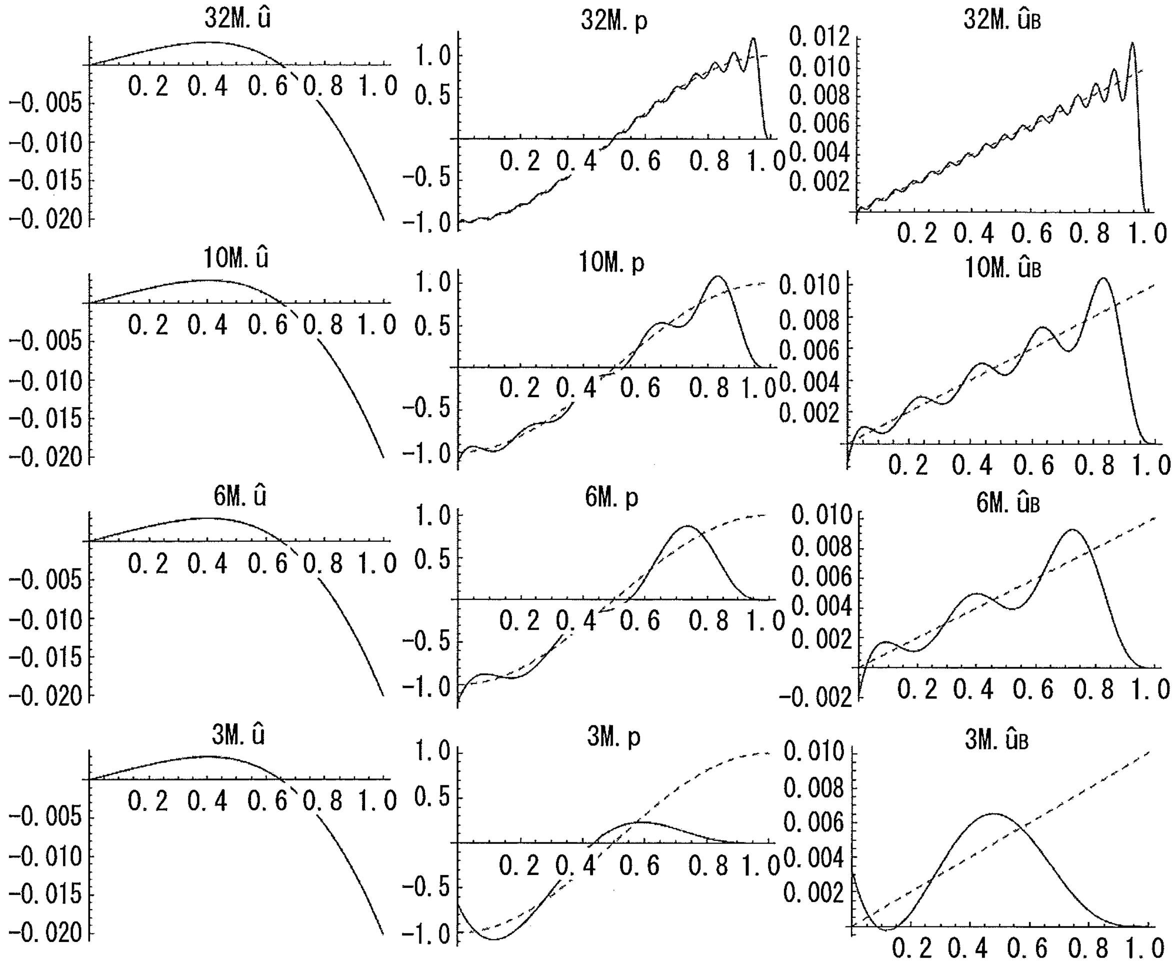


Response for $p(x) \equiv \cos \frac{\pi}{l} x$.

FIG. 36

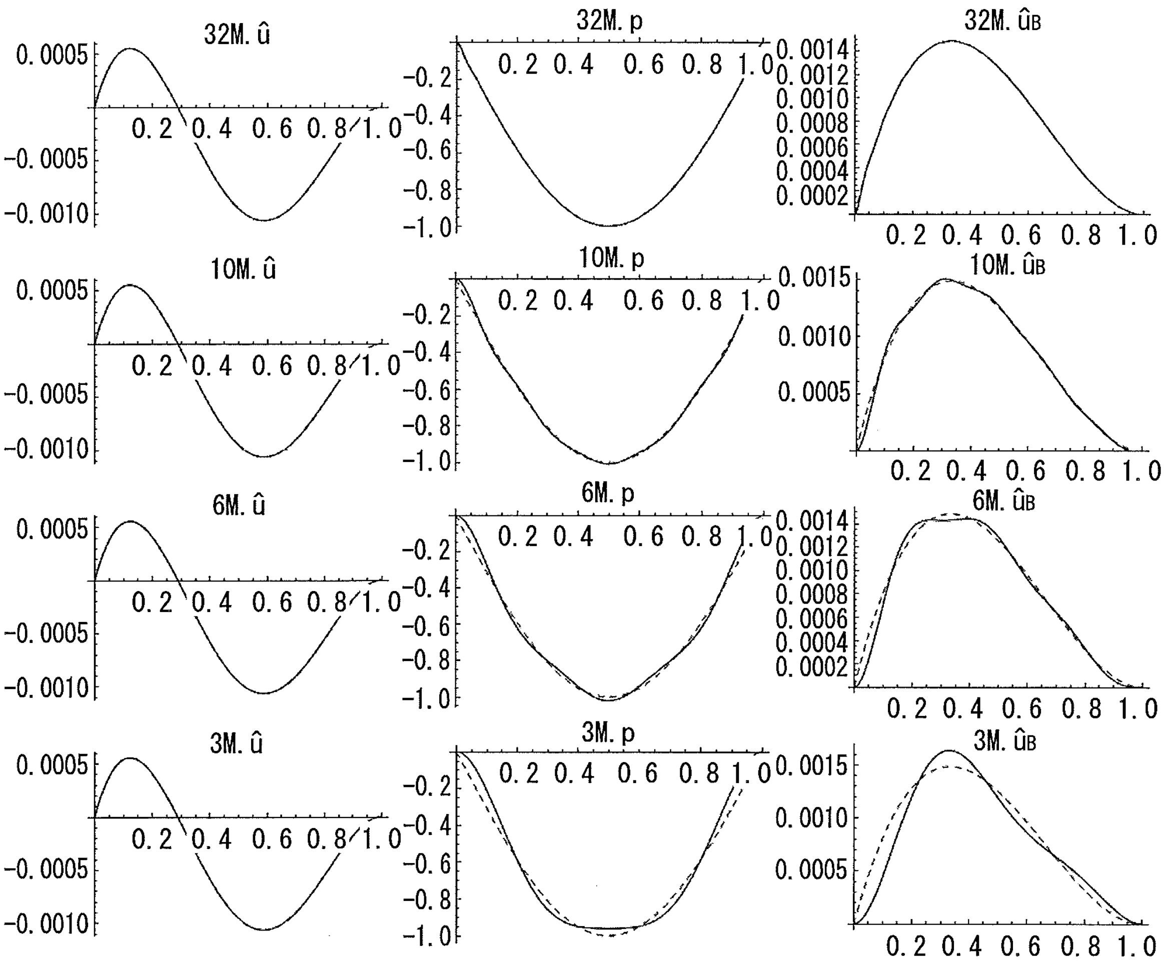


Response for $p(x) \equiv \sin \frac{\pi}{l} x$.

FIG. 37

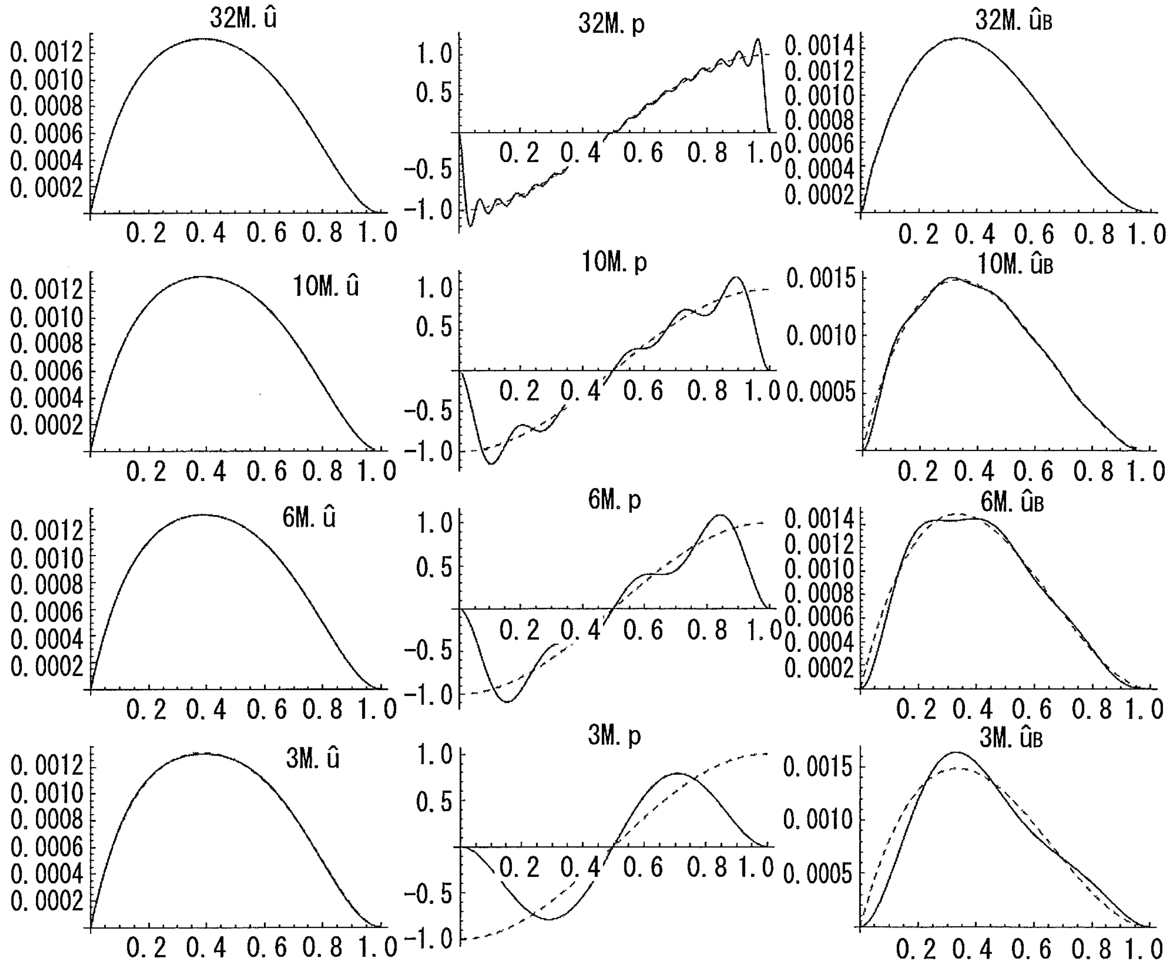


Response for $p(x) \equiv \cos \frac{\pi}{l} x$.

FIG. 38

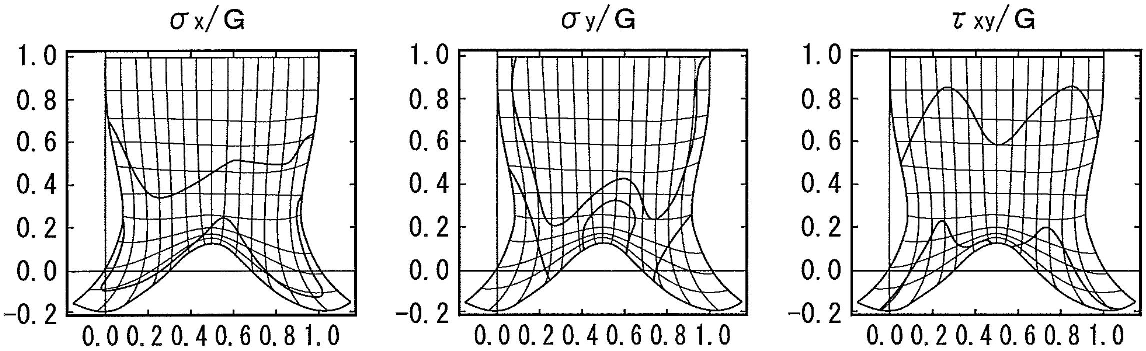


FIG. 39

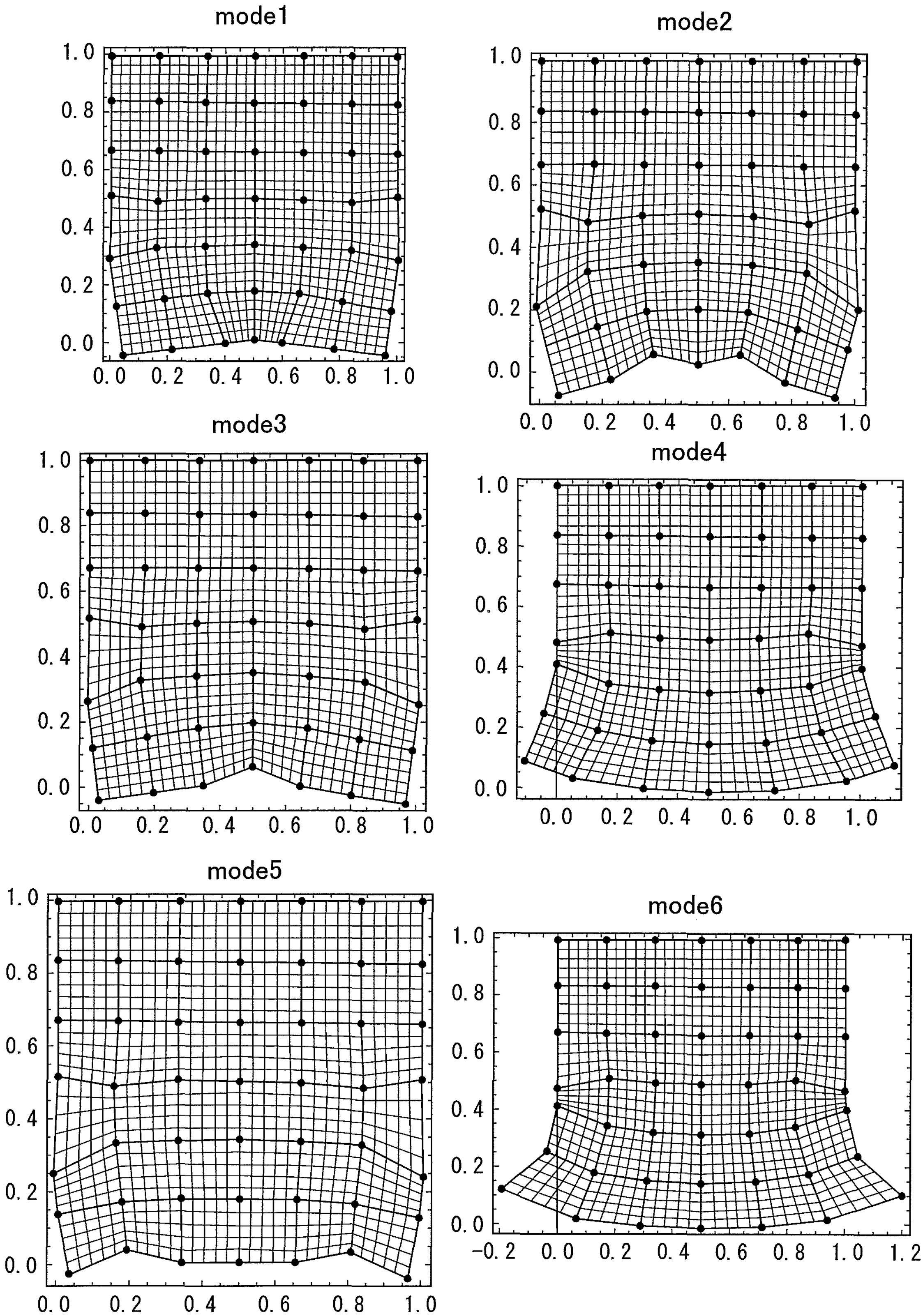


FIG. 40A

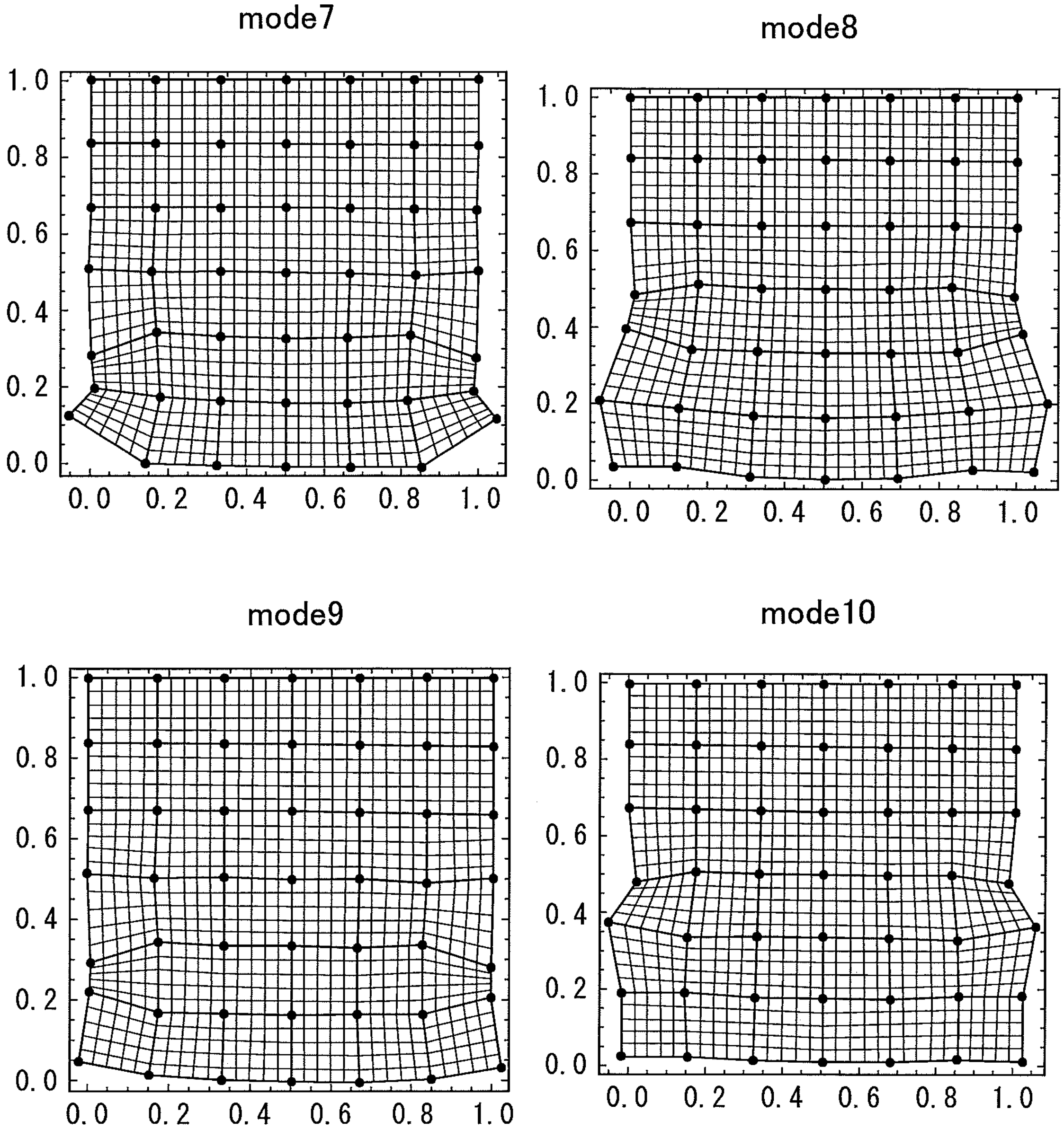
mode7
1.0
0.8
0.6
0.4
0.2
0.0
0.0 0.2 0.4 0.6 0.8 1.0
mode8
1.0
0.8
0.6
0.4
0.2
0.0
0.0 0.2 0.4 0.6 0.8 1.0
mode9
1.0
0.8
0.6
0.4
0.2
0.0
0.0 0.2 0.4 0.6 0.8 1.0
mode10
1.0
0.8
0.6
0.4
0.2
0.0
0.0 0.2 0.4 0.6 0.8 1.0

FIG. 40B

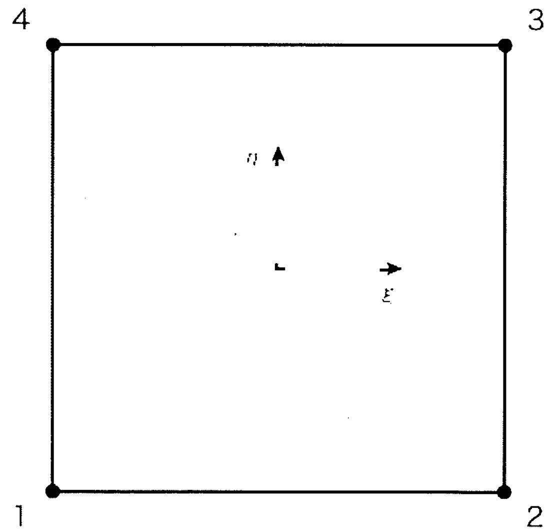


Node Number for 4-Nodes Shape Function.

FIG. 41

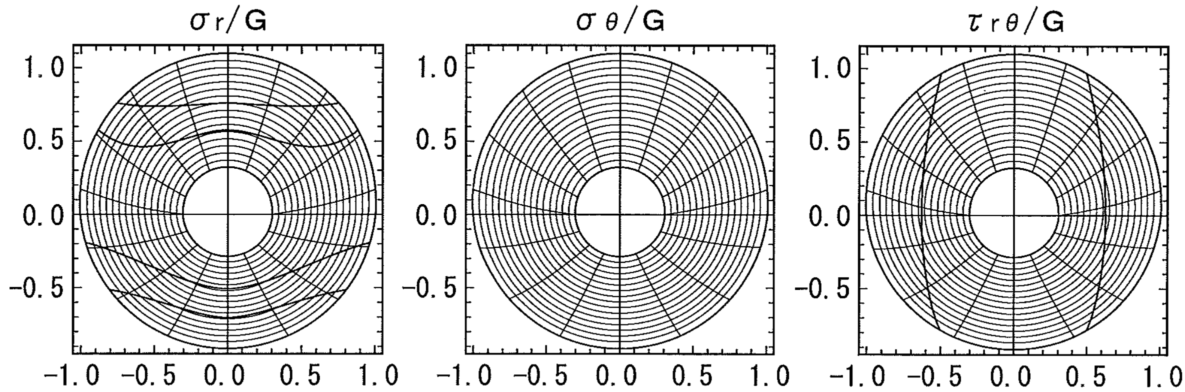


Deformatin and Stress of the Ring By Analytical Solution.

FIG. 42

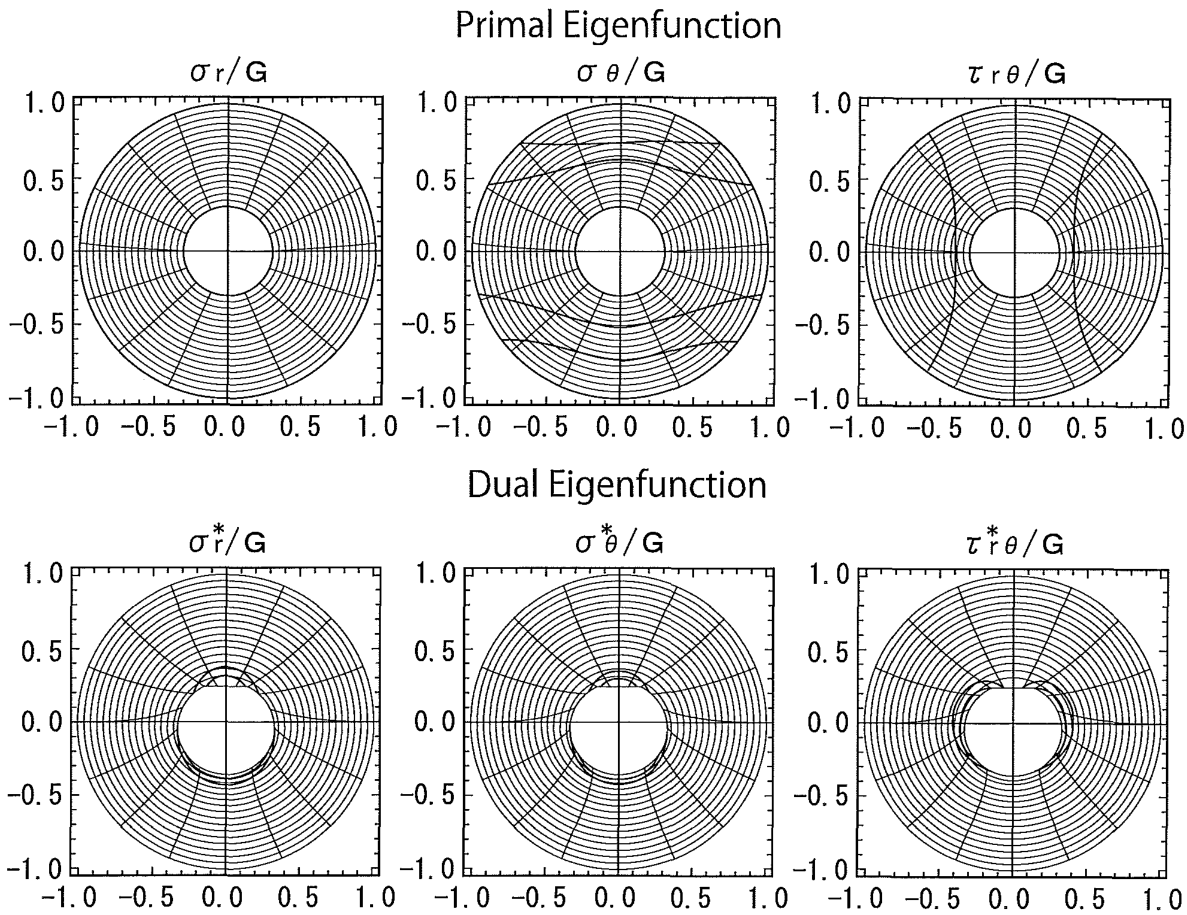


No.1 Mode of the Ring.

FIG. 47

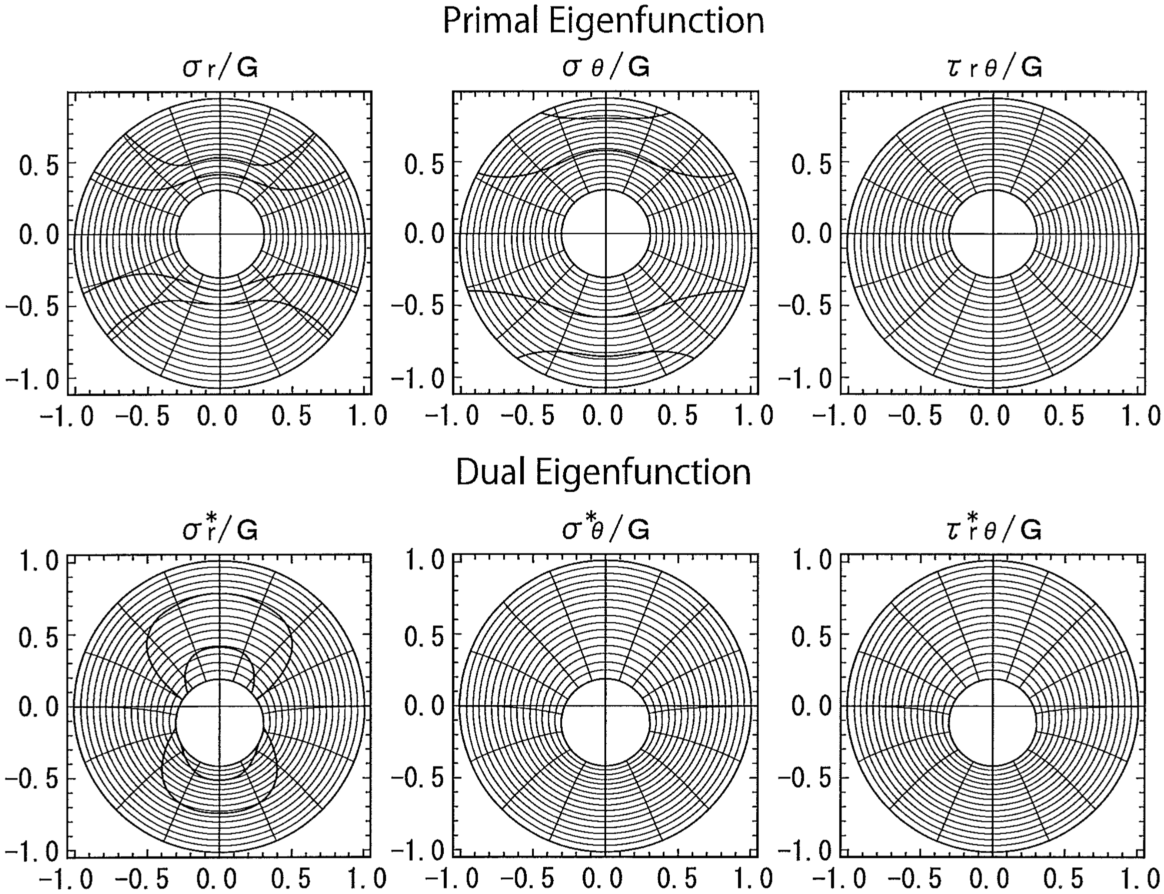


No.2 Mode of the Ring.

FIG. 48

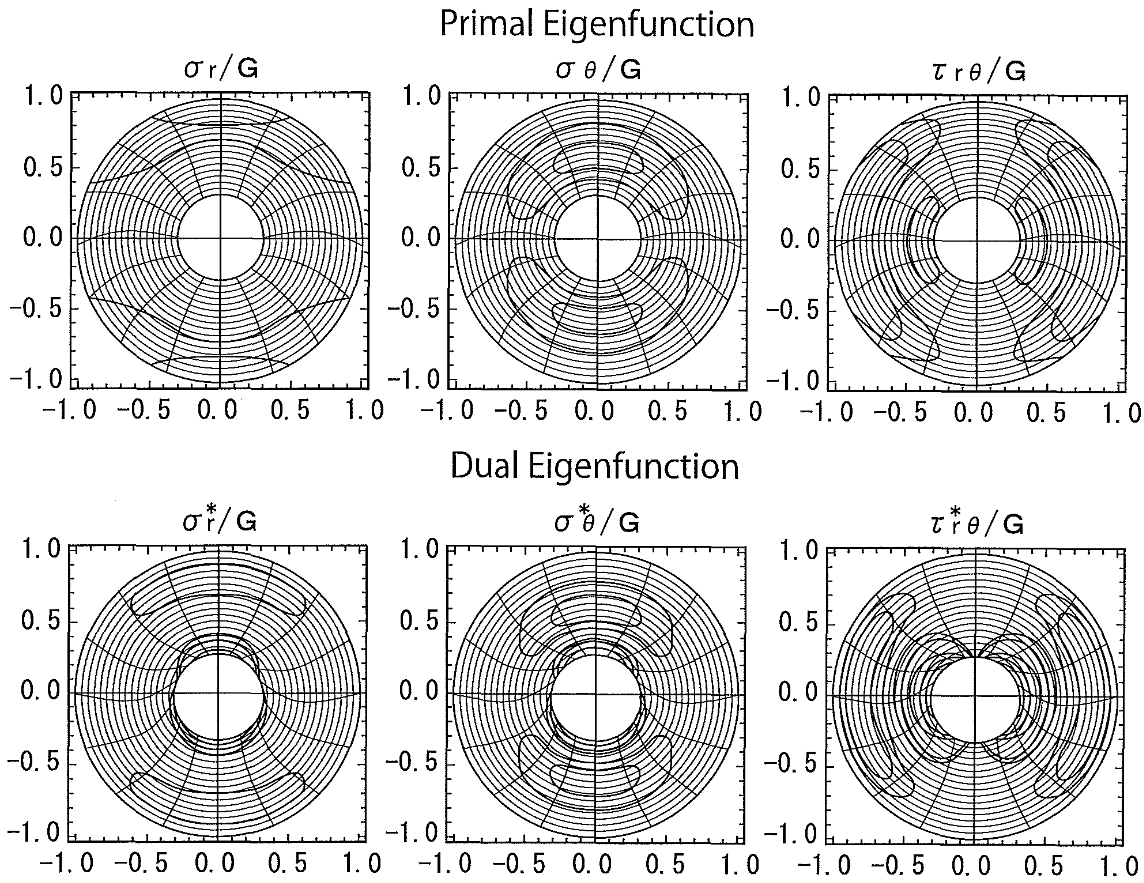


No.3 Mode of the Ring.

FIG. 49

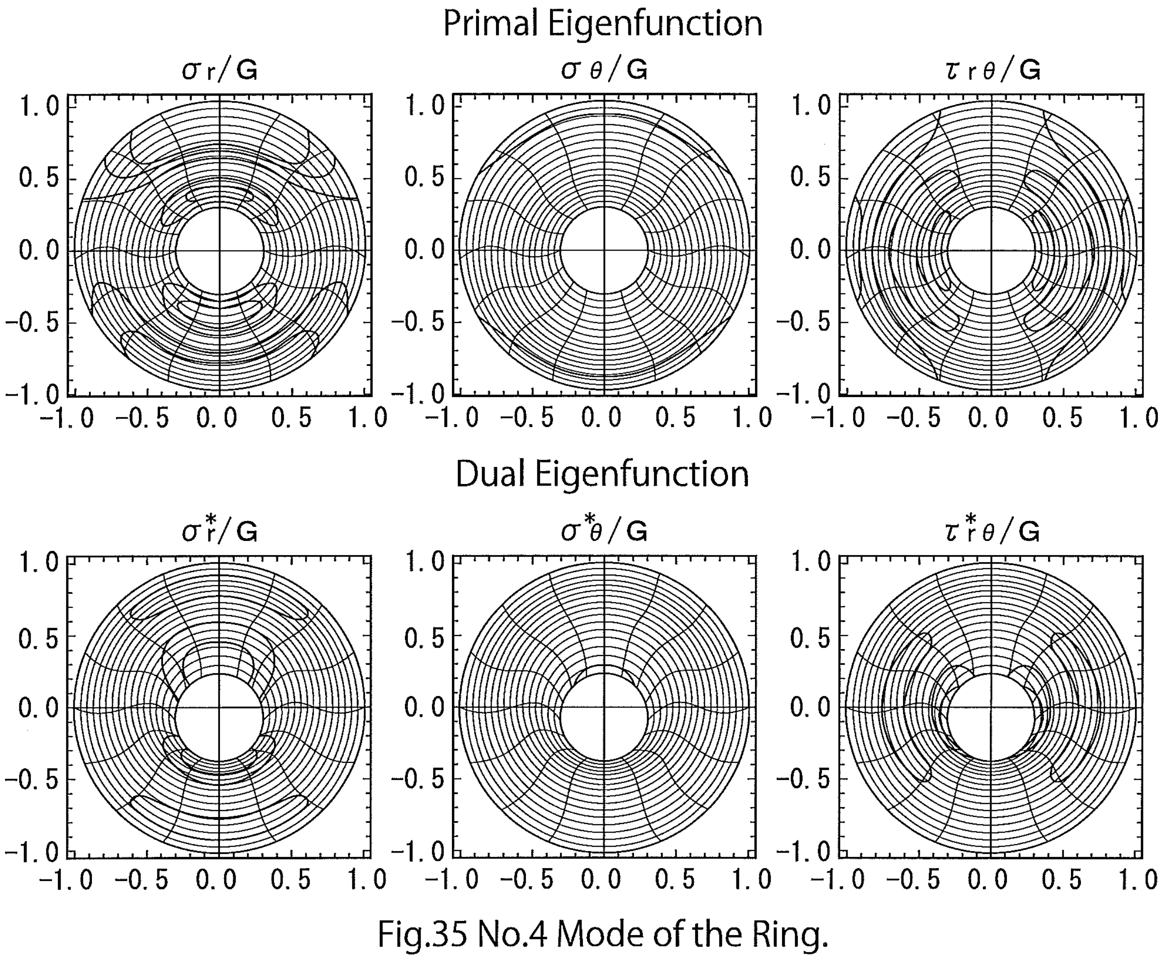


Fig.35 No.4 Mode of the Ring.

FIG. 50

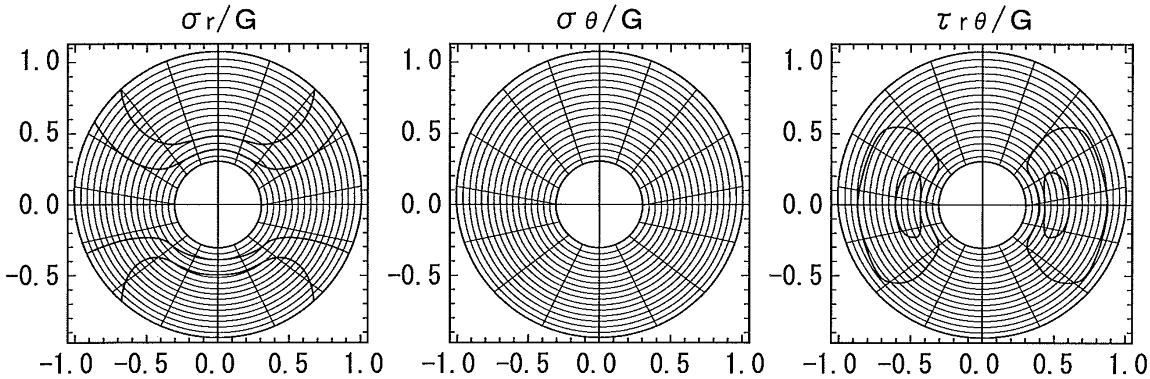


Deformatin and Stress Distribution by using 2 Modes.

FIG. 51

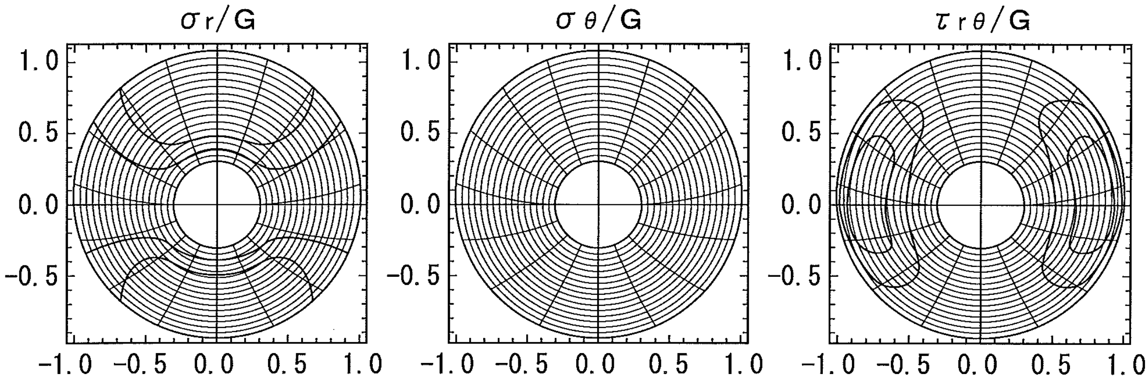


Deformatin and Stress Distribution by using 3 Modes.

FIG. 52

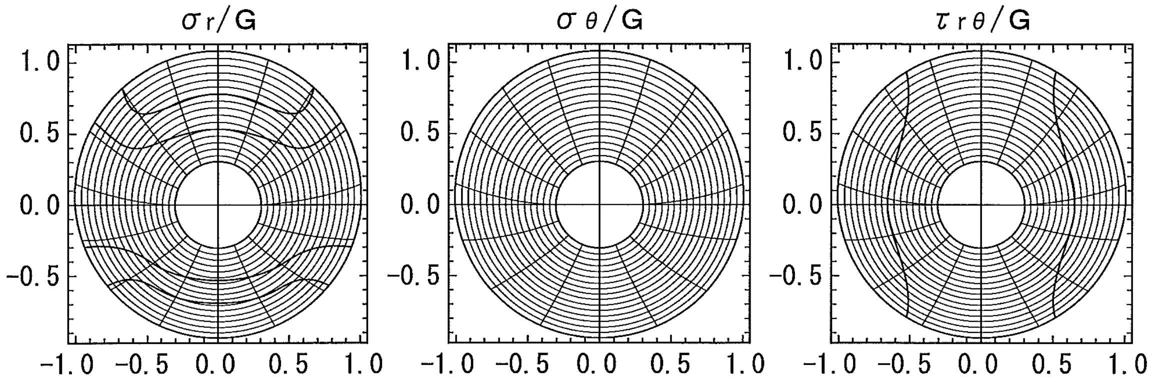


Deformatin and Stress Distribution by using 10 Modes.

FIG. 53

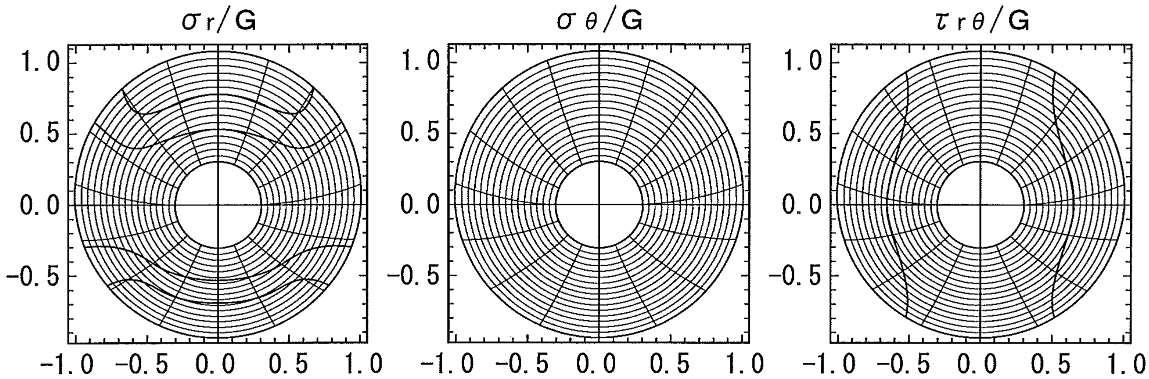


Deformatin and Stress Distribution by using 30 Modes.

FIG. 54

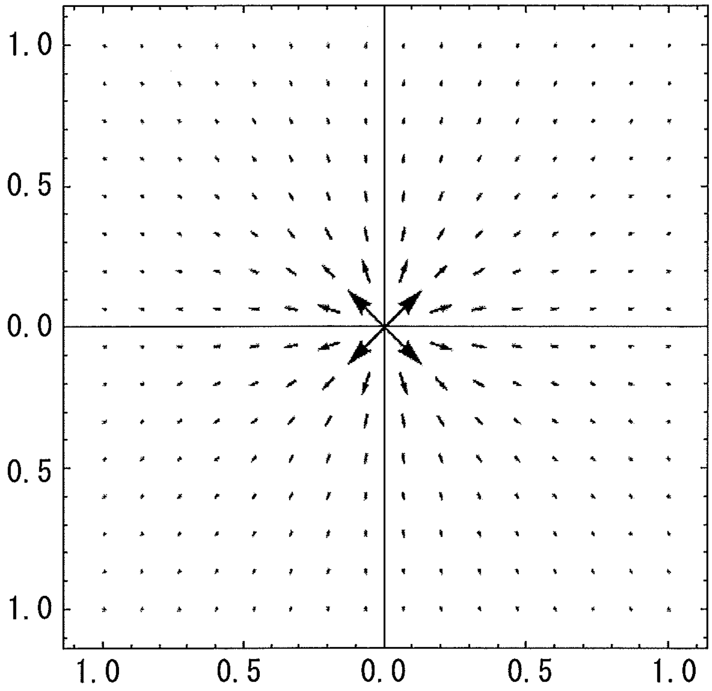

Velocity Distribution by Source.

FIG. 55

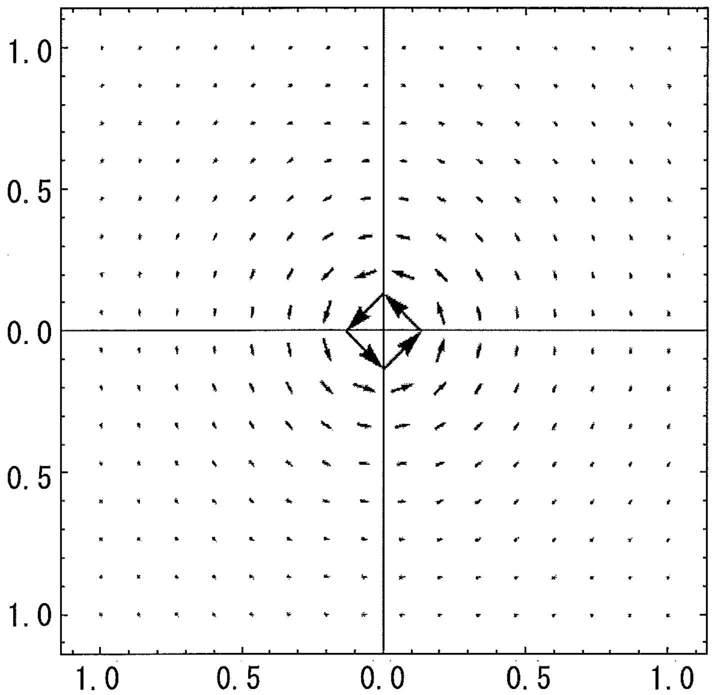

Fig.41 Velocity Distribution by Vortex.

FIG. 56

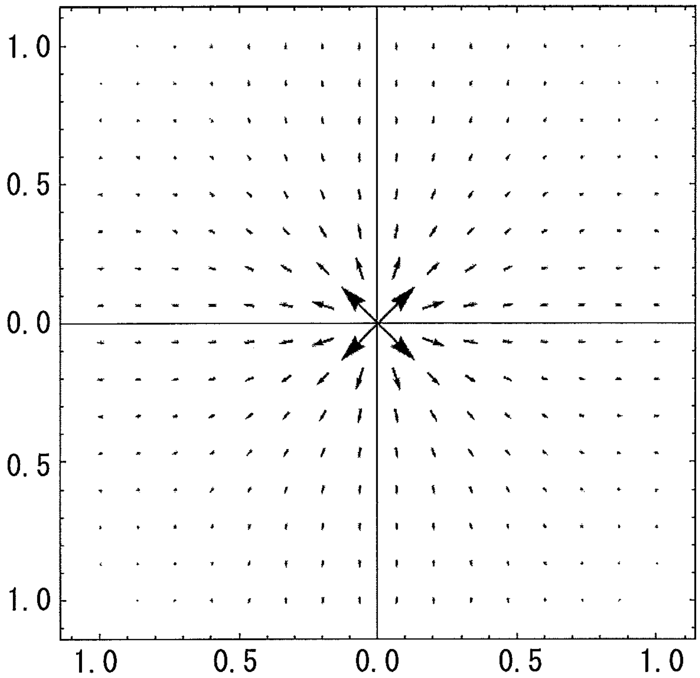


Fig.50 Velocity Distribution by Eigenfunction Method for Source.

FIG. 65

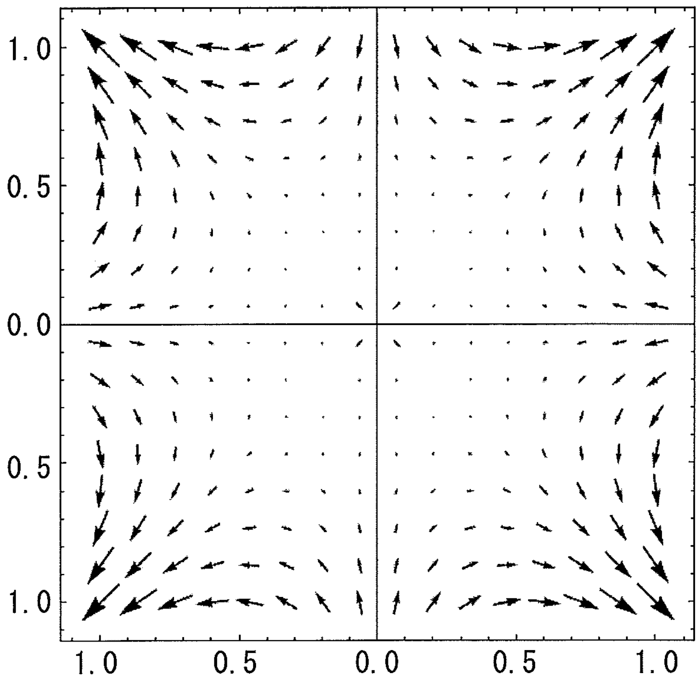


Velocity Distribution of Difference between Analytical Solution and Eigenfunction Method for Source.

FIG. 66

## INTERNATIONAL SEARCH REPORT

International application No.
PCT/JP2012/078262

**A. CLASSIFICATION OF SUBJECT MATTER**
*G06F17/50*(2006.01)i

According to International Patent Classification (IPC) or to both national classification and IPC

**B. FIELDS SEARCHED**

Minimum documentation searched (classification system followed by classification symbols)
G06F17/50, G06F17/11-17/13

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
IEEE Xplore, CiNii

**C. DOCUMENTS CONSIDERED TO BE RELEVANT**

| Category* | Citation of document, with indication, where appropriate, of the relevant passages | Relevant to claim No. |
|---|---|---|
| A | Kiyoshige MATSUMURA et al., "2 Jigen Mitei Shinsuicho Mondai no Jiko Zuihan Henbun Genri ni Tsuite", 2004 Nendo Shuki Zosen Sangakkai Rengo Taikai, The Kansai Society of Naval Architects, Japan Koen Gaiyoshu, 2004.11, no.23, pages 95 to 98 | 1-16 |
| A | Fujikazu SAKAI, "Yugen Yosoho to Sabunho no Tokasei Oyobi Aru Risanka Shuho", Japan Society of Civil Engineers Ronbun Hokokushu, [online], 1973.12, no.220, pages 39 to 52, [retrieval date 16 November 2012 (16.11.2012)], internet <URL:http://library.jsce.or.jp/jsce/open/00037/220/220-126063.pdf> | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 November, 2012 (19.11.12) | 27 November, 2012 (27.11.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2012/078262

C (Continuation). DOCUMENTS CONSIDERED TO BE RELEVANT

| Category* | Citation of document, with indication, where appropriate, of the relevant passages | Relevant to claim No. |
|---|---|---|
| A | CHEN, Chun Hsiung et al., The Variational Principle for Non-Self-Adjoint Electromagnetic Problems, IEEE Transactions on Microwave Theory and Techniques, 1980.08, Vol. MTT-28, No. 8, Pages 878-886 | 1-16 |

Form PCT/ISA/210 (continuation of second sheet) (July 2009)

**INTERNATIONAL SEARCH REPORT**

International application No.
PCT/JP2012/078262

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
(See extra sheet)

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.
PCT/JP2012/078262

Continuation of Box No.III of continuation of first sheet(2)

The special technical feature of the inventions set forth in claims 1, 13, and 14 is to read data indicative of the structure of a system to be processed and a property of a component of the system, and on the basis of the read data, determine n initial equations which are representative of the system and which include a variable representative of a physical quantity to be found; and to rewrite the n initial equations to an equation with 2n variables or an equation which includes 2n equations, and determine a known part which includes a variable to be known from a boundary condition and an unknown part which includes an unknown variable in the rewritten equation with 2n variables or the equation which includes 2n equations, so as to calculate a solution of the equation for the unknown part.

The special technical feature of the inventions set forth in claims 6, 15, and 16 is to read data indicative of the structure of a system to be processed and a property of a component of the system, and on the basis of the read data, determine, as an initial equation, a differential equation which is representative of the system and includes a variable representative of a physical quantity to be found; to calculate a dual variable being the same in number as the variable of the differential equation, and when a dual differential equation is defined, an integral sum of an operation of a differential operator of the differential equation on the variable and the dual variable, that is, a boundary term obtained by integrating by parts an inner product therebetween, and determine, as an adjoint boundary condition, a condition of the dual variable which reduces the boundary term to zero under a boundary condition; and to output the result of a comparison between the adjoint boundary condition and the boundary condition.

The special technical feature of the invention set forth in claim 8 is to determine two n-dimensional variables representative of a physical quantity of a plurality of elements in a system to be processed and n initial equations represented by a n-row matrix; and to determine, of the two n-dimensional variables, a known part which includes a variable to be known from a boundary condition and an unknown part which includes an unknown variable, and output information that the boundary condition is non-self-adjoint, when the degree of freedom of the unknown part of one variable is not equal to the degree of freedom of the known part of the other variable.

The special technical feature of the invention set forth in claim 9 is to calculate a solution for simultaneous differential equations by setting an original differential operator for an object to be analyzed and a boundary condition for a variable; calculating an adjoint boundary condition from the boundary condition; calculating a primal differential operator and a dual differential operator from the original differential operator; and determining a primal eigenfunction and a dual eigenfunction using primal simultaneous differential equations and dual simultaneous differential equations as well as the boundary condition and the adjoint boundary condition.

These inventions have no technical relationship involving one or more of the same or corresponding special technical features, and therefore cannot be considered to be so linked as to form a single general inventive concept.

Accordingly, the following four inventions groups are involved in claims.

(Invention 1) the inventions of claims 1-5 and 12-14

(Continued to next extra sheet)

**INTERNATIONAL SEARCH REPORT**

International application No. PCT/JP2012/078262

An information processor, a method, or a program allowing a computer to execute the method, which are adapted to read data indicative of the structure of a system to be processed and a property of a component of the system, and on the basis of the read data, determine n initial equations which are representative of the system and which include a variable representative of a physical quantity to be found; and to rewrite the n initial equations to an equation with 2n variables or an equation which includes 2n equations, and determine a known part which includes a variable to be known from a boundary condition and an unknown part which includes an unknown variable in the rewritten equation with 2n variables or the equation which includes 2n equations, so as to calculate a solution of the equation for the unknown part.

(Invention 2) the inventions of claims 6, 7, 15 and 16

An information processor, a method, or a program allowing a computer to execute the method, which are adapted to read data indicative of the structure of a system to be processed and a property of a component of the system, and on the basis of the read data, determine, as an initial equation, a differential equation which is representative of the system and includes a variable representative of a physical quantity to be found; to calculate a dual variable being the same in number as the variable of the differential equation, and when a dual differential equation is defined, an integral sum of an operation of a differential operator of the differential equation on the variable and the dual variable, that is, a boundary term obtained by integrating by parts an inner product therebetween, and determine, as an adjoint boundary condition, a condition of the dual variable which reduces the boundary term to zero under a boundary condition; and to output the result of a comparison between the adjoint boundary condition and the boundary condition.

(Invention 3) the invention of claim 8

An information processor which is adapted to determine two n-dimensional variables representative of a physical quantity of a plurality of elements in a system to be processed and n initial equations represented by a n-row matrix; and to determine, of the two n-dimensional variables, a known part which includes a variable to be known from a boundary condition and an unknown part which includes an unknown variable, and output information that the boundary condition is non-self-adjoint, when the degree of freedom of the unknown part of one variable is not equal to the degree of freedom of the known part of the other variable.

(Invention 4) the inventions of claims 9-11

An information processor which is adapted to calculate a solution for simultaneous differential equations by setting an original differential operator for an object to be analyzed and a boundary condition for a variable; calculating an adjoint boundary condition from the boundary condition; calculating a primal differential operator and a dual differential operator from the original differential operator; and determining a primal eigenfunction and a dual eigenfunction using primal simultaneous differential equations and dual simultaneous differential equations as well as the boundary condition and the adjoint boundary condition.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **RICHARD COURANT ; DAVID HILBERT.** Methods of Mathematical Physics. TokyoTosho Co., Ltd, 1959, vol. 1
- Erhard Schmidt: Zur Theorie der linearen und nichtlinearen Integralgleichungen. I. *Math. Ann.,* 1907, vol. 63, 433-476
- **BRUCE A. FINLAYSON.** The Method of Weighted Residuals and Variational Principles. BAIFUKAN Co., Ltd, 1974
- **S. G. MIKHLIN.** Variational Methods in Mathematical Physics. Pergamon Press, 1964